# EUROPEAN PATENT APPLICATION

(11) **EP 4 101 756 A1**
(43) Date of publication of application: **14.12.2022**
(21) Application number: 20917999.3
(22) Date of filing: 30.11.2020
(51) Int. Cl.: B64C 27/08, B64C 39/02, B64D 1/12, B64F 3/00, B66C 11/06, B66C 13/08

(54) **CREWLESS AIRCRAFT, SYSTEM, AND CONTROL METHOD**

(30) Priority: 07.02.2020 US 202062971549 P; 07.02.2020 JP 2020019904; 03.04.2020 JP 2020067858; 29.07.2020 JP 2020128685
(71) Applicant: Panasonic Intellectual Property Corporation of America, Torrance, CA 90504 (US)
(72) Inventor: OSHIMA, Mitsuaki, Kadoma-shi, Osaka 571-8501 (JP); TAKAHAMA, Takuya, Kadoma-shi, Osaka 571-8501 (JP); AOYAMA, Hideki, Kadoma-shi, Osaka 571-8501 (JP); MURAMATSU, Fumio, Kadoma-shi, Osaka 571-8501 (JP); KITAZAWA, Kazuma, Kadoma-shi, Osaka 571-8501 (JP); HAYASHI, Nobuaki, Kadoma-shi, Osaka 571-8501 (JP); SASAKI, Gaku, Kadoma-shi, Osaka 571-8501 (JP); AMAGAI, Ryosuke, Kadoma-shi, Osaka 571-8501 (JP); KATO, Tatsuya, Kadoma-shi, Osaka 571-8501 (JP); TANIUCHI, Naoyuki, Kadoma-shi, Osaka 571-8501 (JP)
(74) Representative: Eisenführ Speiser
(86) International application number: PCT/JP2020/044569
(87) International publication number: WO 2021/157167

(57) **Abstract**

An unmanned aerial vehicle (10m) includes: a vehicle main body (1912) having a first length (N1) in a first direction longer than a second length (N2) in a second direction orthogonal to the first direction; propellers (22) that rotate in a virtual plane parallel to the first and second directions; first propeller actuation motors (23) that are provided on the vehicle main body (1912) and respectively rotate the propellers (22); at least one connector (1720) that is hangable from at least one rail (7) spaced apart from the ground surface; at least one side propeller (22a1) that provides propulsion force for propelling the vehicle main body (1912) in the first direction; at least one third propeller actuation motor (22a3) that is provided on the vehicle main body (1912) and rotates the at least one side propeller (22a1); and a control processor (11) that controls the first propeller actuation motors (23) and the at least one third propeller actuation motor (22a3).

## Description

### TECHNICAL FIELD

The present disclosure relates to an unmanned aerial vehicle, a system, and a control method.

### BACKGROUND ART

There is proposed a control method for providing improved safety while flying a drone, or an unmanned aerial vehicle (see, for example, Patent Literature 1).

Patent Literature 1 discloses a technique for detecting any anomaly in a flying drone with the use of various means and for retrieving the drone identified to be flying anomalously with the use of retrieving means provided on power lines, utility poles, or the like.

### Citation List

### Patent Literature

PTL 1: Japanese Unexamined Patent Application Publication No. 2018-12477

### SUMMARY OF THE INVENTION

### TECHNICAL PROBLEM

The system including the unmanned aerial vehicle disclosed in Patent Literature 1 above can be improved upon.

Accordingly, the present disclosure provides an unmanned aerial vehicle, a system, and a control method improved upon the existing technique.

### SOLUTION TO PROBLEM

An unmanned aerial vehicle according to one aspect of the present disclosure includes: a main body having a first length in a first direction and a second length in a second direction orthogonal to the first direction, the first length being longer than the second length; a plurality of main rotary wings that rotate in a virtual plane parallel to the first direction and the second direction; a plurality of main motors that are provided on the main body and respectively rotate the plurality of main rotary wings; at least one connecting device that is provided on the main body and is hangable from at least one rail spaced apart from a ground surface; at least one auxiliary rotary wing that provides propulsion force for propelling the main body in the first direction; at least one auxiliary motor that is provided on the main body and rotates the at least one auxiliary rotary wing; and a control circuit that controls the plurality of main motors and the at least one auxiliary motor.

These general or specific aspects may be implemented as an unmanned aerial vehicle, a storage device, one or more thruster devices, a system, a control method, an integrated circuit, a computer program, or a computer-readable recording medium such as a CD-ROM, or any combination thereof.

### ADVANTAGEOUS EFFECT OF INVENTION

The unmanned aerial vehicle, system, and control method according to the present disclosure achieve further improvement.

### BRIEF DESCRIPTION OF DRAWINGS

FIG. 1 is a block diagram illustrating an example of a flying system according to Embodiment 1.
FIG. 2 is a block diagram illustrating an example of a management server according to Embodiment 1.
FIG. 3 is a block diagram illustrating an example of a lifting system according to Embodiment 1.
FIG. 4 is a perspective view of an example of an unmanned aerial vehicle according to Embodiment 1.
FIG. 5 is a schematic diagram illustrating an example of an arm of the unmanned aerial vehicle according to Embodiment 1.
FIG. 6 is a perspective view of an example of a first thruster device and a package attached to the first thruster device of the flying system according to Embodiment 1.
FIG. 7 is a schematic diagram illustrating an example of the first thruster device of the flying system according to Embodiment 1.
FIG. 8 is a flowchart illustrating an example of processes performed by the management server and the lifting system according to Embodiment 1.
FIG. 9 is a flowchart illustrating an example of processes performed by the lifting system according to Embodiment 1.
FIG. 10 is a flowchart illustrating an example of operations performed by the first thruster device to store a package in a delivery box according to Embodiment 1.
FIG. 11 is a top view of an example of the first thruster device of the flying system and the delivery box according to Embodiment 1.
FIG. 12 is a schematic diagram illustrating an example of the first thruster device of the unmanned aerial vehicle of the flying system according to Embodiment 1 delivering a package to a housing complex facility.
FIG. 13 is a schematic diagram illustrating an example of a first thruster device according to Variation 1 of Embodiment 1.
FIG. 14 is a schematic diagram illustrating an example of the sliding of the vertical crosspiece and the horizontal crosspiece included in the first thruster device according to Variation 1 of Embodiment 1.
FIG. 15 is a schematic diagram illustrating an example of the directions of rotation of propellers in a plurality of second propeller actuation motors included in a first thruster device according to Variation 2 of Embodiment 1.
FIG. 16 is a schematic diagram illustrating an example of a first thruster device of a flying system according to Variation 3 of Embodiment 1 storing a package in a delivery box.
FIG. 17 is a schematic diagram illustrating an example of a first thruster device according to Variation 4 of Embodiment 1 storing a package in a delivery box.
FIG. 18 is a flowchart illustrating an example of operations performed by the first thruster device to store a package in the delivery box according to Variation 4 of Embodiment 1.
FIG. 19 is a schematic diagram illustrating an example of the first thruster device according to Variation 4 of Embodiment 1 storing a package in the delivery box in another manner.
FIG. 20 is a schematic diagram illustrating an example of a first thruster device according to Variation 5 of Embodiment 1.
FIG. 21 illustrates an example of a first thruster device of a lifting system according to Embodiment 2 unloading a package.
FIG. 22 illustrates an example of a scene after the first thruster device of the lifting system according to Embodiment 2 has unloaded the package.
FIG. 23 is a block diagram illustrating an example of the lifting system according to Embodiment 2.
FIG. 24 illustrates an example of a thruster device of a lifting system according to Variation 1 of Embodiment 2 unloading a package.
FIG. 25 illustrates an example of a scene after the thruster device of the lifting system according to Variation 1 of Embodiment 2 has unloaded the package.
FIG. 26 is a schematic diagram illustrating an example of a first thruster device and a second thruster device of a lifting system according to Variation 2 of Embodiment 2 delivering a package to a housing complex facility.
FIG. 27 is a schematic diagram illustrating an example of a lifting system according to Variation 3 of Embodiment 2.
FIG. 28 is a schematic diagram illustrating an example of a first thruster device of a lifting system according to Variation 4 of Embodiment 2.
FIG. 29 illustrates an example of how a lifting system of a flying system delivers a package from a sender to a receiver according to Embodiment 3.
FIG. 30 illustrates a front view and a side view of an unmanned aerial vehicle of the lifting system according to Embodiment 3.
FIG. 31 is a flowchart illustrating an example of an operation of the lifting system according to Embodiment 3.
FIG. 32 is a schematic diagram illustrating an example of how the position of a package relative to the opening of the delivery box is corrected when the package has been pushed in the direction of the arrow by the wind.
FIG. 33 is a schematic diagram illustrating another example of how the position of a package relative to the opening of the delivery box is corrected when the package has been pushed in the direction of the arrow by the wind.
FIG. 34 is an image diagram illustrating an example of how the unmanned aerial vehicle of the flying system delivers a package from a sender to a relay point of a receiver according to Embodiment 3.
FIG. 35A is a schematic diagram illustrating some examples of heights from the ground surface at which the unmanned aerial vehicle of the flying system moves according to Embodiment 3.
FIG. 35B is a schematic diagram illustrating an example of a position of a drone highway in the flying system according to Embodiment 3.
FIG. 36 is a schematic diagram illustrating an example of how the unmanned aerial vehicle of the flying system stores a package into the delivery box via a lead-in support pillar and a lead-in wire according to Embodiment 3.
FIG. 37 is a perspective view illustrating an example of how the unmanned aerial vehicle of the flying system stores a package into the delivery box via the lead-in support pillar and the lead-in wire according to Embodiment 3.
FIG. 38 is a schematic diagram illustrating an example of how the unmanned aerial vehicle of the flying system stores a package into the delivery box via a lead-in support pillar and a lead-in wire according to Embodiment 3 while the vehicle main body of the unmanned aerial vehicle has an attitude substantially parallel to the vertical direction.
FIG. 39 is a schematic diagram illustrating an example in which the unmanned aerial vehicle of the flying system flies in a location where no rail is provided according to Embodiment 3.
FIG. 40 is a schematic diagram illustrating an example in which a lead-in support pillar, a first lead-in wire, and a second lead-in wire of a flying system are installed on an apartment building according to Variation 1 of Embodiment 3.
FIG. 41 is a schematic diagram illustrating an example of how an unmanned aerial vehicle delivers a package to the apartment building according to Variation 1 of Embodiment 3.
FIG. 42 is a schematic diagram illustrating an example in which a support pillar of a flying system is a streetlight according to Variation 2 of Embodiment 3.
FIG. 43 is a schematic diagram illustrating an example of where a drone highway is located in a case where the support pillar of the flying system is a streetlight according to Variation 2 of Embodiment 3.
FIG. 44 is a perspective view illustrating an example of an unmanned aerial vehicle of a flying system according to Variation 3 of Embodiment 3.
FIG. 45 is a perspective view illustrating an example of changing the attitude of a vehicle main body of the unmanned aerial vehicle of the flying system according to Variation 3 of Embodiment 3.
FIG. 46 is a block diagram illustrating an example of an unmanned aerial vehicle according to Embodiment 4.
FIG. 47 is a front view of an example of the unmanned aerial vehicle according to Embodiment 4.
FIG. 48 is a top view illustrating an example of how the connection of a connector is switched from a first rail to a second rail, as the unmanned aerial vehicle and a rail of a flying system according to Embodiment 4 are viewed from above.
FIG. 49 is a flowchart illustrating an example of an operation in which the connection of the connector of the unmanned aerial vehicle of the flying system is switched from the first rail to the second rail according to Embodiment 4.
FIG. 50 is a rear view illustrating an example of how the connection of the connector is switched from the first rail to the second rail, as the unmanned aerial vehicle and the rail of the flying system according to Embodiment 4 are viewed from the front.
FIG. 51 is a flowchart illustrating in detail an example of an operation in which the connection of the connector of the unmanned aerial vehicle of the flying system is switched from the first rail to the second rail according to Embodiment 4.
FIG. 52 illustrates a side view, a top view, and a front view of rails and a first hook of the unmanned aerial vehicle of the flying system according to Embodiment 4.
FIG. 53 illustrates an example of a propeller of a thruster device according to Embodiment 5.
FIG. 54 is a schematic diagram illustrating an example of a delivery box according to Embodiment 6.
FIG. 55 is a top view of a delivery box included in a system according to Embodiment 7.
FIG. 56 is a schematic diagram illustrating an example of a lifting device included in the system according to Embodiment 7 unloading a package.
FIG. 57 is a schematic diagram illustrating an example of an unmanned aerial vehicle according to Embodiment 8.
FIG. 58 is a flowchart illustrating an example of operations for changing a first arm of the unmanned aerial vehicle according to Embodiment 8 from a closed state to an open state.
FIG. 59 is a flowchart illustrating an example of other operations for changing a first arm of the unmanned aerial vehicle according to Embodiment 8 from a closed state to an open state.
FIG. 60 is a schematic diagram illustrating an example of an unmanned aerial vehicle according to Variation 1 of Embodiment 8.
FIG. 61 is a schematic diagram illustrating an example of a system of an unmanned aerial vehicle and a rail according to Variation 2 of Embodiment 8.
FIG. 62 is a schematic diagram illustrating an example of an unmanned aerial vehicle according to Embodiment 9.
FIG. 63 is a schematic diagram illustrating an example of the unmanned aerial vehicle according to Embodiment 9 moving along a rail.
FIG. 64 is a schematic diagram illustrating an example of how the unmanned aerial vehicle according to Embodiment 9 moves forward and in reverse, and how the unmanned aerial vehicle according to Variations 1 and 2 of Embodiment 9 moves in reverse.
FIG. 65 is a schematic diagram illustrating an example of a connector of the unmanned aerial vehicle according to Variation 1 of Embodiment 9.
FIG. 66 is a schematic diagram illustrating an example of a connector of the unmanned aerial vehicle according to Variation 2 of Embodiment 9.
FIG. 67 is a schematic diagram illustrating an example of the directions of rotation of the propellers when the unmanned aerial vehicle according to Variation 2 of Embodiment 9 is moving forward and braking.
FIG. 68 is a schematic diagram illustrating an example of an unmanned aerial vehicle and a delivery box according to Embodiment 10.
FIG. 69 is a schematic diagram illustrating an example of an unmanned aerial vehicle and a delivery box according to Embodiment 11.
FIG. 70 is a perspective view of an example of the unmanned aerial vehicle and the delivery box according to Embodiment 11.
FIG. 71 is a side view of an example of the movement of the delivery box when the unmanned aerial vehicle according to Embodiment 11 is hanging from a rail.
FIG. 72 is a flowchart illustrating an example of processes from start to finish of the delivery of a package to a delivery box by the unmanned aerial vehicle according to Embodiment 11.
FIG. 73 is a schematic diagram illustrating an example of processes from the start of storing of a package in the delivery box by the unmanned aerial vehicle according to Embodiment 11 to the disconnecting of the package by a second arm.
FIG. 74 is a schematic diagram illustrating an example of the unmanned aerial vehicle according to Embodiment 11 from the time a camera captures an image of the package stored in the delivery box to the time the unmanned aerial vehicle leaves the rail.
FIG. 75 is a perspective view illustrating an example of a lifting system and packages according to Embodiment 12.
FIG. 76 is a schematic diagram illustrating an example of a first thruster device holding two packages.
FIG. 77 is a schematic diagram illustrating an example of the storing of two packages into the delivery box by the first thruster device.
FIG. 78 is a schematic diagram illustrating an example of the storing of four packages into the delivery box by the first thruster device.
FIG. 79 is a schematic diagram illustrating an example of the storing of eight packages into the delivery box by the first thruster device.
FIG. 80 is a perspective view illustrating an example of a lifting system and packages according to Variation 1 of Embodiment 12.
FIG. 81 is a perspective view illustrating an example of a lifting system and packages according to Variation 2 of Embodiment 12.
FIG. 82 is a perspective view illustrating an example of a lifting system according to Variation 3 of Embodiment 12.
FIG. 83 is a perspective view illustrating an example of a lifting system according to Embodiment 13.
FIG. 84 is an enlarged perspective view illustrating an example of a connector according to Embodiment 13.
FIG. 85 is an enlarged perspective view illustrating an example of a plurality of connectors connected to a plurality of rails according to Embodiment 13.
FIG. 86 is an enlarged perspective view illustrating an example of a connector according to Variation 1 of Embodiment 13.
FIG. 87 is an enlarged perspective view illustrating an example of a connector according to Variation 2 of Embodiment 13.
FIG. 88 is a schematic diagram illustrating an example of a lifting system retrieving a package for delivery according to Embodiment 14.
FIG. 89 is a schematic diagram illustrating an example of a package being loaded onto the lifting system according to Embodiment 14.
FIG. 90 is a schematic diagram illustrating an example of an unmanned aerial vehicle flying away after a package is loaded onto the lifting system according to Embodiment 14.
FIG. 91 is a schematic diagram illustrating an example of the lifting system retrieving a package through a delivery box provided in a public facility according to Embodiment 14.
FIG. 92 is a schematic diagram illustrating an example of a first thruster device of a lifting system retrieving a package according to Embodiment 15.
FIG. 93 is a schematic diagram illustrating an example of the first thruster device of the lifting system storing the retrieved package in a delivery box according to Embodiment 15.
FIG. 94 is a schematic diagram illustrating an example of the first thruster device of the lifting system separating from the delivery box after storing the package in the delivery box according to Embodiment 15.
FIG. 95 is a schematic diagram illustrating an example of the unmanned aerial vehicle of the lifting system being attached to the first thruster device according to Embodiment 15.
FIG. 96 is a schematic diagram illustrating an example of the first thruster device of the lifting system inclined with respect to a horizontal plane according to Embodiment 15.
FIG. 97 is a schematic diagram illustrating an example of a comprehensive overview of a logistics system according to Embodiment 16.
FIG. 98 is another schematic diagram illustrating an example of a comprehensive overview of the logistics system according to Embodiment 16.
FIG. 99 is a schematic diagram illustrating an example of a support pillar and rails in the logistics system according to Embodiment 16.
FIG. 100 is a perspective view of an example of an unmanned aerial vehicle according to Embodiment 16.
FIG. 101 is a schematic diagram illustrating an example of a side view of the unmanned aerial vehicle moving along rails according to Embodiment 16.
FIG. 102 is a schematic diagram illustrating an example according to Embodiment 16 of a side view of the unmanned aerial vehicle in a state in which a first connector is disconnected from rails and a second connector is connected to the rails.
FIG. 103 is a schematic diagram illustrating an example according to Embodiment 16 of a side view of the unmanned aerial vehicle in a state in which the first connector is connected from rails and the second connector is disconnected to the rails.
FIG. 104 is a schematic diagram illustrating an example of a side view of an unmanned aerial vehicle according to a variation of Embodiment 16.
FIG. 105 is a schematic diagram illustrating an example according to a variation of Embodiment 16 of a side view of an unmanned aerial vehicle in a state in which a first connector is disconnected from rails and a second connector is connected to the rails.
FIG. 106 is a schematic diagram illustrating an example according to a variation of Embodiment 16 of a side view of the unmanned aerial vehicle in a state in which the first connector is connected from rails and the second connector is disconnected to the rails.
FIG. 107 is a schematic diagram illustrating an example of the unmanned aerial vehicle according to Embodiment 16 passing a rail support supporting a first rail while traveling along the first rail.
FIG. 108 is a schematic diagram illustrating an example of the unmanned aerial vehicle according to Embodiment 16 traveling on the first rail toward an intersection of the first rail and a second rail.
FIG. 109 is a schematic diagram illustrating an example of a first connector of the unmanned aerial vehicle disconnecting from the first rail according to Embodiment 16.
FIG. 110 is a schematic diagram illustrating an example of a second connector of the unmanned aerial vehicle disconnecting from the first rail according to Embodiment 16.
FIG. 111 is a schematic diagram illustrating an example of a second connector of the unmanned aerial vehicle connecting to the second rail according to Embodiment 16.
FIG. 112 is a schematic diagram illustrating an example of the unmanned aerial vehicle according to Embodiment 16 passing the first rail.
FIG. 113 is a schematic diagram illustrating an example of the first connector of the unmanned aerial vehicle according to Embodiment 16 passing a rail support supporting a second rail while traveling along the second rail.
FIG. 114 is a schematic diagram illustrating an example of the second connector of the unmanned aerial vehicle according to Embodiment 16 passing a rail support supporting a second rail while traveling along the second rail.
FIG. 115 is a perspective view illustrating an example of an unmanned aerial vehicle according to a variation of Embodiment 16.
FIG. 116 is a schematic diagram illustrating an example of the unmanned aerial vehicle according to a variation of Embodiment 16 passing one of rail supports supporting a first rail while traveling along the first rail.
FIG. 117 is a schematic diagram illustrating an example of the first connector and the second connector of the unmanned aerial vehicle disconnecting from the first rail according to Embodiment 16.
FIG. 118 is a schematic diagram illustrating an example of the first connector and the second connector of the unmanned aerial vehicle connecting to the second rail according to a variation of Embodiment 16.
FIG. 119 is a schematic diagram illustrating an example of a third connector of the unmanned aerial vehicle connecting to the second rail according to a variation of Embodiment 16.
FIG. 120 is a schematic diagram illustrating an example of the first connector and the third connector of the unmanned aerial vehicle according to a variation of Embodiment 16 passing a rail support.
FIG. 121 is a schematic diagram illustrating an example of the second connector of the unmanned aerial vehicle according to a variation of Embodiment 16 passing a rail support.
FIG. 122 is a perspective view illustrating an example of a first connector, a second connector, and a third connector and the like of an unmanned aerial vehicle according to Embodiment 17.
FIG. 123 is a perspective view illustrating an example of the second connector of the unmanned aerial vehicle according to Embodiment 17 being moved in the vertical direction.
FIG. 124 is a perspective view illustrating an example of how the first connector of the unmanned aerial vehicle according to Embodiment 17 passes across a second rail.
FIG. 125 is a perspective view illustrating an example of how the third connector of the unmanned aerial vehicle according to Embodiment 17 passes across the second rail.
FIG. 126 is a perspective view illustrating an example of how the second connector of the unmanned aerial vehicle according to Embodiment 17 passes across the second rail.
FIG. 127 is a schematic diagram illustrating an example of the unmanned aerial vehicle according to Embodiment 17 coupling to the second rail from the first rail.
FIG. 128 is a schematic diagram illustrating an example of the third connector of the unmanned aerial vehicle disconnecting from the first rail according to Embodiment 17.
FIG. 129 is a schematic diagram illustrating an example of how the unmanned aerial vehicle according to Embodiment 17 passes through the connection point between the first rail and the second rail after connecting the third connector of the unmanned aerial vehicle to the second rail.
FIG. 130 is a perspective view illustrating an example of a connector of an unmanned aerial vehicle according to a variation of Embodiment 17.
FIG. 131 is a front view illustrating an example of the connector of the unmanned aerial vehicle according to a variation of Embodiment 17 when viewed from the front.
FIG. 132 is a front view illustrating an example of a first hook connecting to a rail when the connector of the unmanned aerial vehicle according to a variation of Embodiment 17 when viewed from the front.
FIG. 133 includes a front view of the second connector of the unmanned aerial vehicle according to a variation according to Embodiment 17, illustrating an example of how the connection between the connector and the first rail is released, and a schematic diagram illustrating an example of the unmanned aerial vehicle as viewed from above.
FIG. 134 includes a front view of the connector of the unmanned aerial vehicle according to a variation according to Embodiment 17, illustrating an example of the switching of the connection of the connector from the first rail to a second rail, and a schematic diagram illustrating an example of the unmanned aerial vehicle when viewed from above.
FIG. 135 is a front view of the connector of the unmanned aerial vehicle according to a variation of Embodiment 17 when viewed from the front, illustrating an example of connecting the connector to the second rail.
FIG. 136 is a perspective view of an example of a platform included in a system according to Embodiment 18.
FIG. 137 is a perspective view illustrating an example of how a first thruster device of a lifting system according to Embodiment 18 retrieves a package placed on the platform.
FIG. 138 includes a side view illustrating an example of the first thruster device of the lifting system according to Embodiment 18 retrieving a package placed on the platform.
FIG. 139 includes a perspective view of an example of a platform included in a system according to a variation of Embodiment 18, and a plan view of the platform.
FIG. 140 is a perspective view of an example of the platform included in the system according to Variation 1 of Embodiment 18 changing shape.
FIG. 141 is a perspective view illustrating an example of how a first thruster device of a lifting system according to Variation 1 of Embodiment 18 retrieves a package placed on the platform.
FIG. 142 is a perspective view illustrating an example of how the first thruster device of the lifting system according to Variation 1 of Embodiment 18 retrieved a package placed on the platform.
FIG. 143 is a perspective view illustrating the movement of a second guide portion of the first thruster device of the lifting system according to Variation 1 of Embodiment 18.
FIG. 144 is a perspective view illustrating the movement of a second guide portion of a first thruster device of a lifting system according to Variation 2 of Embodiment 18.
FIG. 145 is a perspective view illustrating an example of how the first thruster device of the lifting system according to Variation 2 of Embodiment 18 retrieves a package placed on a platform.
FIG. 146 is a perspective view illustrating an example of how the first thruster device of the lifting system according to Variation 2 of Embodiment 18 retrieved a package placed on the platform.
FIG. 147A is a schematic diagram illustrating an example of an unmanned aerial vehicle according to Embodiment 19.
FIG. 147B is a schematic diagram illustrating an example of a first projected surface and a second projected surface and the like of the unmanned aerial vehicle according to Embodiment 19.
FIG. 148 includes a schematic diagram illustrating an example of a connector support portion and a ratchet of the unmanned aerial vehicle according to Embodiment 19, and a cross-sectional view of a cross section of the connector support portion and the ratchet.
FIG. 149 is a flowchart illustrating an example of operations performed when a first connector of the unmanned aerial vehicle according to Embodiment 19 passes a second rail.
FIG. 150 is a schematic diagram illustrating an example of the operations illustrated in FIG. 149 that are performed by the unmanned aerial vehicle.
FIG. 151 is a flowchart illustrating an example of operations performed when a vehicle main body of the unmanned aerial vehicle according to Embodiment 19 rotates.
FIG. 152 is a schematic diagram illustrating an example of the operations illustrated in FIG. 151 that are performed by the unmanned aerial vehicle.
FIG. 153 is a flowchart illustrating an example of the operations performed by the unmanned aerial vehicle according to Embodiment 19 when a first connector and a second connector are connected to the second rail and subsequently a third connector is disconnected from the first rail.
FIG. 154 is a schematic diagram illustrating an example of the operations illustrated in FIG. 153 that are performed by the unmanned aerial vehicle.
FIG. 155 is a flowchart illustrating an example of operations performed when connecting the third connector of the unmanned aerial vehicle according to Embodiment 19 to the second rail.
FIG. 156 is a schematic diagram illustrating an example of the operations illustrated in FIG. 155 that are performed by the unmanned aerial vehicle.
FIG. 157 is a flowchart illustrating an example of operations performed when the second connector of the unmanned aerial vehicle according to Embodiment 19 passes the first rail.
FIG. 158 is a schematic diagram illustrating an example of the operations illustrated in FIG. 157 that are performed by the unmanned aerial vehicle.
FIG. 159 is a flowchart illustrating an example of operations performed when the vehicle main body of the unmanned aerial vehicle further rotates when the unmanned aerial vehicle turns back at the intersection of the first rail and the second rail.
FIG. 160 is a schematic diagram illustrating an example of the operations illustrated in FIG. 159 that are performed by the unmanned aerial vehicle.
FIG. 161 is a flowchart illustrating an example of operations performed when connecting the first connector and the second connector to the first rail after the vehicle main body of the unmanned aerial vehicle has rotated when the unmanned aerial vehicle turns back at the intersection of the first rail and the second rail.
FIG. 162 is a schematic diagram illustrating an example of the operations illustrated in FIG. 161 that are performed by the unmanned aerial vehicle.
FIG. 163 is a flowchart illustrating an example of operations performed when disconnecting the third connector of the unmanned aerial vehicle from the second rail and causing the third connector to be eccentric, when the unmanned aerial vehicle turns back at the intersection of the first rail and the second rail.
FIG. 164 is a schematic diagram illustrating an example of the operations illustrated in FIG. 163 that are performed by the unmanned aerial vehicle.
FIG. 165 is a flowchart illustrating an example of operations performed when, after the third connector of the unmanned aerial vehicle is connected to the first rail, the second connector is disconnected from the first rail and the second connector, which has passed the first rail, connects to the first rail, when the unmanned aerial vehicle turns back at the intersection of the first rail and the second rail.
FIG. 166 is a schematic diagram illustrating an example of the operations illustrated in FIG. 165 that are performed by the unmanned aerial vehicle.
FIG. 167 is a schematic diagram illustrating an example of the operations illustrated in FIG. 165 that are performed by the unmanned aerial vehicle.
FIG. 168 includes a schematic diagram illustrating an example of the connector support portion and the ratchet when the unmanned aerial vehicle has rotated, and a cross-sectional view of a cross section of the connector support portion and the ratchet.
FIG. 169 is schematic diagram illustrating an example of tension springs and of the connector support portion when the unmanned aerial vehicle rotates.
FIG. 170 includes a schematic diagram illustrating an example of the third connector when the unmanned aerial vehicle has rotated, and a cross-sectional view illustrating example of a cross section of the connector support portion and the ratchet.
FIG. 171 is a schematic diagram illustrating an example of the third connector of the unmanned aerial vehicle passing the first rail, and a cross-sectional view illustrating an example of a cross section of the connector support portion and the ratchet.
FIG. 172 is a schematic diagram illustrating an example of the second connector of the unmanned aerial vehicle passing the first rail, and a cross-sectional view illustrating an example of a cross section of the connector support portion and the ratchet.
FIG. 173 is a schematic diagram illustrating an example of how the unmanned aerial vehicle bypasses a utility pole.
FIG. 174 is a schematic diagram illustrating an example of how an unmanned aerial vehicle according to Variation 1 of Embodiment 19 disconnects a first connector from a horizontal rail.
FIG. 175 is a schematic diagram illustrating an example of the relationship between the second connector and the horizontal rail when the second connector is closed and the relationship between the second connector and the horizontal rail when the second connector is half open.
FIG. 176 is a schematic diagram illustrating an example of the connecting of the first connector to an inclined rail by moving rearward the center of gravity of the vehicle main body of the unmanned aerial vehicle according to Variation 1 of Embodiment 19.
FIG. 177 is a schematic diagram illustrating an example of how the unmanned aerial vehicle according to Variation 1 of Embodiment 19 disconnects a third connector from the horizontal rail and the third connector passes vertically below a coupler.
FIG. 178 is a schematic diagram illustrating an example of how the unmanned aerial vehicle according to Variation 1 of Embodiment 19 disconnects a second connector from the horizontal rail and the second connector passes vertically below the coupler.
FIG. 179 is a schematic diagram illustrating an example of the unmanned aerial vehicle according to Variation 1 of Embodiment 19 connecting the second connector to the inclined rail.
FIG. 180 is a schematic diagram illustrating an example of how an unmanned aerial vehicle according to Variation 2 of Embodiment 19 disconnects a first connector from a horizontal rail.
FIG. 181 is a schematic diagram illustrating an example of the connecting of the first connector and a fourth connector to an inclined rail by moving rearward the center of gravity of the vehicle main body of the unmanned aerial vehicle according to Variation 2 of Embodiment 19.
FIG. 182 is a schematic diagram illustrating an example of the connecting of the second connector and the third connector to the inclined rail and the disconnecting of the fourth connector from the inclined rail by moving rearward the center of gravity of the vehicle main body of the unmanned aerial vehicle according to Variation 2 of Embodiment 19.
FIG. 183 is a schematic diagram illustrating an example of an unmanned aerial vehicle according to Embodiment 20.
FIG. 184 is a schematic diagram illustrating an example of a first connector and a third connector of the unmanned aerial vehicle according to Embodiment 20 as viewed from the side.
FIG. 185 includes a plan view illustrating an example of the unmanned aerial vehicle in Embodiment 20 and an enlarged partial view of the third connector and a turntable, and a schematic diagram illustrating an example of the third connector and the turntable rotating around a central point.
FIG. 186 is a schematic diagram illustrating an example of the first connector of the unmanned aerial vehicle according to Embodiment 20 opening.
FIG. 187 is a schematic diagram illustrating an example of the first connector of the unmanned aerial vehicle according to Embodiment 20 becoming eccentric relative to the axial center of a rotary shaft.
FIG. 188 is a schematic diagram illustrating an example of the first connector of the unmanned aerial vehicle according to Embodiment 20 closing and the third connector of the unmanned aerial vehicle according to Embodiment 20 opening.
FIG. 189 is a schematic diagram illustrating an example of how the third connector of the unmanned aerial vehicle according to Embodiment 20 is eccentric with respect to the center point of the turntable and the third connector closing.
FIG. 190 is a schematic diagram illustrating an example of the second connector of the unmanned aerial vehicle according to Embodiment 20 opening and the vehicle main body rotating.
FIG. 191 is a schematic diagram illustrating an example of the second connector of the unmanned aerial vehicle according to Embodiment 20 closing.
FIG. 192 is a schematic diagram illustrating an example of an unmanned aerial vehicle according to Embodiment 21 and how the unmanned aerial vehicle stores a package in a delivery box.
FIG. 193 is a schematic diagram illustrating an example of the unmanned aerial vehicle according to Embodiment 21 storing a package in the delivery box in the rain.
FIG. 194 is a schematic diagram illustrating an example of the unmanned aerial vehicle according to Embodiment 21 storing a package in the delivery box in the rain and then flying away.
FIG. 195 is a schematic diagram illustrating an example of how a product ordered by a user is delivered using a delivery system according to Embodiment 22.
FIG. 196 is a block diagram illustrating an example of the delivery system according to Embodiment 22.
FIG. 197 is a schematic diagram illustrating an example of how the unmanned aerial vehicle of the delivery system according to Embodiment 22 recognizes a delivery box and delivers a package, and a perspective view of the delivery box.
FIG. 198 illustrates an example of the method used to ensure temperature retention of a package platform of the unmanned aerial vehicle of the delivery system and the delivery box of the delivery system according to Embodiment 22.
FIG. 199 is a flowchart illustrating an example of operations performed when the unmanned aerial vehicle of the delivery system according to Operation Example 1 of Embodiment 22 checks whether the delivery box is full or empty.
FIG. 200 is a flowchart illustrating an example of other operations performed when the unmanned aerial vehicle of the delivery system according to Operation Example 2 of Embodiment 22 checks whether the delivery box is full or empty.
FIG. 201 is a flowchart illustrating an example of operations performed when the delivery box of the delivery system according to Operation Example 3 of Embodiment 22 checks whether itself is full or empty.
FIG. 202 is a flowchart illustrating an example of operations performed when a product is ordered using the delivery system according to Operation Example 4 of Embodiment 22.
FIG. 203 is a flowchart illustrating an example of other operations performed when a product is ordered using the delivery system according to Operation Example 5 of Embodiment 22.
FIG. 204 is a flowchart illustrating an example of operations performed when products spread across a plurality of store systems are ordered using the delivery system according to Operation Example 6 of Embodiment 22.
FIG. 205 is a flowchart illustrating an example of operations performed when the user application instructs the user to empty the inside of the delivery box when ordering a product using the delivery system in Operation Example 7 according to Embodiment 22.
FIG. 206 is a flowchart illustrating an example of operations performed when the delivery box instructs the user to empty the inside of the delivery box when ordering a product using the delivery system in Operation Example 8 according to Embodiment 22.
FIG. 207 illustrates an example of when the delivery system of Operation Example 9 according to Embodiment 22 swaps the order of delivery of order A and order B when order A and order B are received.
FIG. 208 is a flowchart of an example of operations performed when the delivery system of Operation Example 9 according to Embodiment 22 swaps the order of delivery of order A and order B when order A and order B are received.
FIG. 209 is a flowchart illustrating an example of operations performed when the unmanned aerial vehicle of the delivery system of Operation Example 10 according to Embodiment 22 delivers a package to a user within a predetermined transport temperature range.
FIG. 210 illustrates an example of the time to reach the permissible upper temperature limit based on the relationship between time and the atmospheric temperature, in the delivery system of Operation Example 11 according to Embodiment 22.
FIG. 211 is a flowchart illustrating another example of operations performed when the unmanned aerial vehicle of the delivery system of Operation Example 12 according to Embodiment 22 cannot deliver a package to a user within the predetermined transport temperature range.
FIG. 212 illustrates an example of the time to reach the minimum permissible value based on the relationship between time and the value of the package in the delivery system of Operation Example 13 according to Embodiment 22.
FIG. 213 illustrates an example of the dynamic setting of delivery fees when using the delivery system according to Embodiment 22.

### DESCRIPTION OF EXEMPLARY EMBODIMENTS

An unmanned aerial vehicle according to one aspect of the present disclosure includes: a main body having a first length in a first direction and a second length in a second direction orthogonal to the first direction, the first length being longer than the second length; a plurality of main rotary wings that rotate in a virtual plane parallel to the first direction and the second direction; a plurality of main motors that are provided on the main body and respectively rotate the plurality of main rotary wings; at least one connecting device that is provided on the main body and is hangable from at least one rail spaced apart from a ground surface; at least one auxiliary rotary wing that provides propulsion force for propelling the main body in the first direction; at least one auxiliary motor that is provided on the main body and rotates the at least one auxiliary rotary wing; and a control circuit that controls the plurality of main motors and the at least one auxiliary motor.

With this, the main body can be connected to and hanging from the rail via the connecting device, thus preventing the unmanned aerial vehicle from falling even if the main rotary wings do not rotate.

Moreover, by the rotating auxiliary rotary wing while the connecting device is connected to and hanging from the rail, the unmanned aerial vehicle can move along the rail, and thus can move to the destination point. In this case, instead of actuating the main motor, the auxiliary motor can be actuated to move the unmanned aerial vehicle, thus reducing power consumption in the unmanned aerial vehicle.

In the unmanned aerial vehicle according to another aspect of the present disclosure, the at least one connecting device includes a first connecting device, a second connecting device, and a third connecting device. The first connecting device is positioned offset in the first direction from a center of the main body. The second connecting device is positioned offset in a direction opposite the first direction from the center of the main body. The third connecting device is positioned between the first connecting device and the second connecting device, near the center of the main body.

This enables the unmanned aerial vehicle to more safely transfer from one rail on which it is traveling to another by using three connecting devices.

Using three connecting devices also enables the unmanned aerial vehicle to more stably connect to the rails. Therefore, with the unmanned aerial vehicle, safety can be ensured.

The unmanned aerial vehicle according to another aspect of the present disclosure further includes a turntable disposed between the third connecting device and the main body, and a ratchet including an engagement receiving portion that engages with an engagement portion of the turntable by being biased by the turntable.

With this configuration, the orientation of the unmanned aerial vehicle can be rotated by rotating the turntable. When rotated by a predetermined angle, the engagement portion of the turntable and the engagement receiving portion of the ratchet engage to control the rotation of the turntable. Since this allows the main body to be oriented as desired, the unmanned aerial vehicle can safely transfer from one rail on which it is traveling to another.

In the control method according to another aspect of the present disclosure, the unmanned aerial vehicle includes a turntable disposed between the third connecting device and the main body of the unmanned aerial vehicle, and an orientation of the unmanned aerial vehicle is changed by rotating the main body relative to the turntable.

Since this configuration allows the main body to be oriented as desired, the unmanned aerial vehicle can safely transfer from one rail on which it is traveling to another.

In the unmanned aerial vehicle according to another aspect of the present disclosure, a first surface area of a first minimum rectangle that circumscribes a first projected surface formed by projecting the unmanned aerial vehicle onto a first plane whose normal vector extends in the first direction is smaller than a second surface area of a second minimum rectangle that circumscribes a second projected surface formed by projecting the unmanned aerial vehicle onto a second plane whose normal vector extends in the second direction.

With this configuration, the main body is elongated in the lengthwise direction of the rail, so the unmanned aerial vehicle can stably travel along the rail.

In the unmanned aerial vehicle according to another aspect of the present disclosure, the plurality of main rotary wings include: a first main rotary wing; a second main rotary wing adjacent to the first main rotary wing in the second direction; a third main rotary wing adjacent to the first main rotary wing in the first direction; and a fourth main rotary wing adjacent to the second main rotary wing in the first direction and adjacent to the third main rotary wing in the second direction. A first distance between the first main rotary wing and the second main rotary wing is shorter than a second distance between the first main rotary wing and the third main rotary wing.

This configuration enables the first main rotary wing and the second main rotary wing to be arranged along the lengthwise direction of the rail and the third main rotary wing and the fourth main rotary wing to be arranged along the lengthwise direction of the rail. Accordingly, the attitude of the main body can be further stabilized when the unmanned aerial vehicle travels along the rail.

In the unmanned aerial vehicle according to another aspect of the present disclosure, a rotary shaft of the at least one auxiliary motor extends in the first direction.

This configuration enables the unmanned aerial vehicle to easily impart a propulsion force for causing the unmanned aerial vehicle to travel along the rail.

In the unmanned aerial vehicle according to another aspect of the present disclosure, the at least one auxiliary rotary wing is positioned lower than the virtual plane.

This configuration can keep the main rotary wing from making contact with the auxiliary rotary wing, and thus the safety of the unmanned aerial vehicle can be increased.

In the unmanned aerial vehicle according to another aspect of the present disclosure, a rotary shaft of the at least one auxiliary motor has an angle of inclination relative to the first direction that is variable in a plane whose normal vector extends in the second direction.

With this configuration, since the rotary shaft of the auxiliary motor is variable, the unmanned aerial vehicle can be rotated in the yaw direction (horizontal direction). This makes it possible to change the orientation of the unmanned aerial vehicle.

In the unmanned aerial vehicle according to another aspect of the present disclosure, each of the at least one connecting device includes: a fixed portion; a first arm including one end connected to the fixed portion and an other end that opens and closes relative to the fixed portion; a second arm including one end connected to the fixed portion and an other end that opens and closes relative to the fixed portion; a first actuator that opens and closes the first arm; and a second actuator that opens and closes the second arm. The control circuit controls the first actuator and the second actuator. The first arm is positioned in front of the second arm in the first direction.

With this, when the first arm of the unmanned aerial vehicle is connected to the first rail, the first arm can be disconnected from the first rail after the second arm is connected to a second rail, which is a different rail. This allows the unmanned aerial vehicle to switch connections (transfer) from the first rail to the second rail and continue moving.

In the unmanned aerial vehicle according to another aspect of the present disclosure, a first region enclosed by the first arm in a closed state and the fixed portion is separated from a second region enclosed by the second arm in a closed state and the fixed portion.

With this, a single connector can be used to simultaneously connect to two rails. This makes it possible to stabilize the attitude of the unmanned aerial vehicle.

In the unmanned aerial vehicle according to another aspect of the present disclosure, each of the at least one connecting device includes: an arm that is hangable from the at least one rail; and a roller that is provided on an inner peripheral surface of the arm and rotatably contacts the at least one rail.

Accordingly, when the connector of the unmanned aerial vehicle is connected to the rail, the roller contacts and rolls on the rail, allowing the unmanned aerial vehicle to move along the rail. In other words, the unmanned aerial vehicle is able to move along the rail using only its own propulsion in the traveling direction. Accordingly, since the unmanned aerial vehicle does not have to expend energy on lift force to lift itself, the unmanned aerial vehicle can save energy.

A system according to another aspect of the present disclosure includes: the unmanned aerial vehicle; a device including at least one first adapter connectable to at least one package to be delivered by the unmanned aerial vehicle and at least one second adapter attachable to and detachable from the unmanned aerial vehicle; and a wire that connects the unmanned aerial vehicle and the device. The unmanned aerial vehicle includes a reel to which one end of the wire is connected and a lift motor that reels out the wire.

With this, even if there is an obstacle in the vicinity of the predetermined position, the first device and the second device can be moved to avoid the obstacle. It is therefore possible to deliver the package to the predetermined position with certainty since the second device can be moved to a position vertically above the predetermined position.

In the system according to another aspect of the present disclosure, the device includes: a support member provided with the at least one first adapter; a plurality of motors disposed on a plurality of side surfaces of the support member; and a plurality of propellers actuated by the plurality of motors. An angle of each of rotary shafts of the plurality of motors relative to a virtual surface passing through a center of each of the plurality of propellers is at least -45 degrees and at most +45 degrees.

According to this, by controlling the angle of the rotary shafts of the plurality of motors relative to the virtual surface, when the package is to be placed at a predetermined position, the package can be positioned relative to the predetermined position.

In the system according to another aspect of the present disclosure, the plurality of side surfaces include a first side surface and a second side surface that oppose each other in the first direction in an attached state in which the device is attached to the unmanned aerial vehicle, and a third side surface and a fourth side surface that oppose each other in the second direction in the attached state. The plurality of motors include a first motor disposed on the first side surface, a second motor disposed on the second side surface, a third motor disposed on the third side surface, and a fourth motor disposed on the fourth side surface. The plurality of propellers include a first propeller rotated by the first motor, a second propeller rotated by the second motor, a third propeller rotated by the third motor, and a fourth propeller rotated by the fourth motor.

With this, the device can be made to travel in a desired direction by actuating the first motor, the second motor, the third motor, and the fourth motor. This allows the device to finely adjust its position relative to a predetermined position accurately.

A control method according to one aspect of the present disclosure is a control method of controlling an unmanned aerial vehicle, the unmanned aerial vehicle including: a main body having a first length in a first direction and a second length in a second direction orthogonal to the first direction, the first length being longer than the second length; a plurality of main rotary wings that rotate in a virtual plane parallel to the first direction and the second direction; a plurality of main motors that are provided on the main body and respectively rotate the plurality of main rotary wings; at least three connecting devices that are provided on the main body and are hangable from at least one rail spaced apart from a ground surface; at least one auxiliary rotary wing that provides propulsion force for propelling the main body in the first direction; at least one auxiliary motor that is provided on the main body and rotates the at least one auxiliary rotary wing; and a control circuit that controls the plurality of main motors and the at least one auxiliary motor. A first connecting device is positioned offset in the first direction from a center of the main body, a second connecting device is positioned offset in a direction opposite the first direction from the center of the main body, and a third connecting device is positioned between the first connecting device and the second connecting device, near the center of the main body. The control method includes: when the unmanned aerial vehicle switches connection from a first rail to a second rail at an intersection of the first rail and the second rail: determining whether the first connecting device has approached the second rail; when it is determined that the first connecting device has approached the second rail, detaching the first connecting device from the first rail and propelling the unmanned aerial vehicle in the first direction by rotating the at least one auxiliary rotary wing; determining whether the first connecting device has passed the second rail; and when it is determined that the first connecting device has passed the second rail, detaching the second connecting device from the first rail, rotating the unmanned aerial vehicle until the first direction of the unmanned aerial vehicle is parallel to a direction of extension of the second rail, and after rotation of the unmanned aerial vehicle, connecting the first connecting device and the second connecting device to the second rail.

This configuration allows the unmanned aerial vehicle to reliably switch connections (transfer) from the first rail to the second rail.

In the control method according to another aspect of the present disclosure, when it is determined that the first connecting device has passed the second rail, the first connecting device is connected to the first rail and whether a center of gravity of the unmanned aerial vehicle is balanced is determined; and when it is determined that the center of gravity of the unmanned aerial vehicle is balanced, the first connecting device and the second connecting device are detached from the first rail, the unmanned aerial vehicle is rotated until the first direction of the unmanned aerial vehicle is parallel to a direction of extension of the second rail, and after rotation of the unmanned aerial vehicle, the first connecting device and the second connecting device are connected to the second rail.

With this, even if the second rail is inclined with respect to the first rail, for example, the unmanned aerial vehicle can reliably switch connections (transfer) from the first rail to the second rail by changing the balance of the center of gravity of the unmanned aerial vehicle.

In the control method according to another aspect of the present disclosure, after the first connecting device and the second connecting device are connected to the second rail after rotation of the unmanned aerial vehicle, an attitude of the third connecting device is matched to an attitude of each of the first connecting device and the second connecting device by detaching the third connecting device from the first rail and rotating the turntable.

With this configuration, when the third connecting device is detached from the first rail, the attitude of the third connecting device can be matched to the respective attitudes of the first connecting device and the second connecting device. This enables the third connecting device to be connected to the second rail together with the first connecting device and the second connecting device.

In the control method according to another aspect of the present disclosure, the unmanned aerial vehicle includes a rotary wing for rotation that is disposed in a position corresponding to the at least one auxiliary rotary wing in the first direction, and an orientation of the unmanned aerial vehicle is changed using a propulsion force of the rotary wing for rotation.

With this configuration, the traveling direction of the unmanned aerial vehicle can be easily changed by rotating the rotary wing.

A lifting system according to another aspect of the present disclosure may include: an unmanned aerial vehicle; a first device attachable to and detachable from the unmanned aerial vehicle; a first wire that connects the first device and the unmanned aerial vehicle; a first reel capable of reeling in the first wire; a second device attachable to and detachable from a package and attachable to and detachable from the first device; a second wire that connects the first device and the second device; a second reel capable of reeling in the second wire; and a controller. When the unmanned aerial vehicle is in a position separated from the ground, the controller may: detach the first device and the second device from the unmanned aerial vehicle; cause the first reel to reel out the first wire; detach the second device from the first device; and cause the second reel to reel out the second wire.

With this, even when it is difficult to carry the package to a predetermined position, such as when there is an obstacle vertically above the predetermined position, it is possible to move the first device and the second device so as to avoid the obstacle. It is therefore possible to deliver the package to the predetermined position with certainty since the second device can be moved to a position vertically above the predetermined position.

In the lifting system according to another aspect of the present disclosure, the first device may include: a first support member attachable to and detachable from the unmanned aerial vehicle; a plurality of first motors disposed on a plurality of side portions of the first support member; and a plurality of first propellers actuated by the plurality of first motors. The second device may include: a second support member attachable to and detachable from the first device; a plurality of second motors disposed on a plurality of side portions of the second support member; and a plurality of second propellers actuated by the plurality of second motors.

With this, the position of the first device relative to the unmanned aerial vehicle can be adjusted, and the position of the second device relative to the first device can be adjusted. This makes it possible to move the first device and the second device so as to avoid an obstacle. As a result, the package can be reliably delivered to the predetermined position.

In the lifting system according to another aspect of the present disclosure, the controller may: actuate at least one of the plurality of first motors or the plurality of second motors after detaching the first device and the second device from the unmanned aerial vehicle, and actuate the plurality of first motors and the plurality of second motors after detaching the second device from the first device.

This makes it possible to move the first device and the second device as a single unit to a target position for avoiding the obstacle. Therefore, the controller can inhibit an increase in the processing burden of actuating and controlling the plurality of first motors and the plurality of second motors.

In the lifting system according to another aspect of the present disclosure, after detaching the second device from the first device, the controller may control the plurality of first motors and control the plurality of second motors differently than the plurality of first motors to make a first hanging direction and a second hanging direction mutually different, the first hanging direction being a direction in which the first wire extends between the unmanned aerial vehicle and the first device, and the second hanging direction being a direction in which the second wire extends between the first device and the second device.

With this, even if there is an obstacle vertically above the predetermined position, the first device and the second device can be positioned so as to reliably bypass the obstacle. As a result, with this lifting system, the package can be reliably delivered to the predetermined position.

In the lifting system according to another aspect of the present disclosure, after detaching the second device from the first device, the controller may control the plurality of first motors and control the plurality of second motors differently than the plurality of first motors to reduce or eliminate an amount of overlap between the first device and the second device in terms of area size in a view perpendicular to a ground surface.

With this, the relative positions of the first device and the second device can be changed so that the first device is not disposed vertically above the second device. Accordingly, even if there is an obstacle vertically above the predetermined position, the first device and the second device can be positioned so as to reliably bypass the obstacle. As a result, the package can be reliably delivered to the predetermined position.

In the lifting system according to another aspect of the present disclosure, after detaching the package from the second device, the controller may: reel in the second wire using the second reel; attach the second device to the first device; reel in the first wire using the first reel; and attach the first device and the second device to the unmanned aerial vehicle.

With this, after delivering the package to the predetermined position, the second device can be attached to the first device while reeling in the second wire, and the first device and the second device can be attached to the unmanned aerial vehicle while reeling in the first wire. As a result, it is possible to prevent the first wire and the second wire from being damaged or entangled due to contact with an obstacle or the like. This makes it possible to inhibit a decrease in the operating efficiency of the lifting system.

In the lifting system according to another aspect of the present disclosure, the unmanned aerial vehicle may include an arm capable of engaging a rail, and when the unmanned aerial vehicle is in a position separated from the ground and the arm is engaged with the rail, the controller may detach the first device and the second device from the unmanned aerial vehicle.

This makes it possible to hold the unmanned aerial vehicle onto the rail via the arm. As a result, even if the first device and the second device are detached from the unmanned aerial vehicle, the first device and the second device can be held via the first wire and the second wire. This makes it possible to inhibit the first device and the second device from falling.

Since the unmanned aerial vehicle can be held onto the rail without flying, energy consumption by the unmanned aerial vehicle can be reduced.

In the lifting system according to another aspect of the present disclosure, the lifting system may include: a third device attachable between and detachable from between the first device and the second device; a third wire that connects the first device and the third device; a third reel capable of reeling in the third wire; a fourth wire that connects the third device and the second device; and a fourth reel capable of reeling in the fourth wire.

With this, after delivering the package to the predetermined position, the second device can be attached to the third device while reeling in the fourth wire, the second device and the third device can be attached to the first device while reeling in the third wire, and the second device, the third device, and the first device can be attached to the unmanned aerial vehicle while reeling in the first wire. As a result, it is possible to prevent the first wire, the third wire, and the fourth wire from being damaged or entangled due to contact with an obstacle or the like. This makes it possible to inhibit a decrease in the operating efficiency of the lifting system.

In the lifting system according to another aspect of the present disclosure, an angle of each of rotary shafts of the plurality of first motors relative to a virtual surface passing through a center of each of the plurality of first propellers is at least -45 degrees and at most +45 degrees.

According to this, by controlling the angle of the rotary shafts of the plurality of motors relative to the virtual surface, when the package is to be placed at a predetermined position, the package can be positioned relative to the predetermined position. It is possible to finely adjust the positions of the first device and the second device relative to the predetermined position by causing the first device and the second device to travel in the desired direction.

When the first device and the second device descend while the support member is hanging from the object via the wire, it is possible to finely adjust the positions of the first device and the second device so that the package aligns with the predetermined position when viewed from the vertical direction.

Accordingly, with the first device and the second device, the package can be placed in the predetermined position. In particular, when the first device and the second device are used outdoors, even if the first device and the second device are misaligned with the predetermined position due to wind or the like, the first device and the second device can move toward the predetermined position to compensate for the misalignment so that package can be placed at the predetermined position.

The lifting system according to another aspect of the present disclosure further includes one or more actuators that adjust the angle of each of the rotary shafts of the plurality of first motors relative to the virtual surface.

This makes it possible to adjust the attitudes of the plurality of first motors relative to the support member. Accordingly, this allows the first device and the second device to move horizontally and vertically. This allows for more accurate positioning of the package to align with the predetermined position.

In the lifting system according to another aspect of the present disclosure, the one or more actuators incline each of the rotary shafts so that the angle is 0 degrees in a first mode, and incline each of the rotary shafts so that the angle is an elevation angle in a second mode.

This makes it possible to individually control the attitude of each rotary shaft of one or more motors among the plurality of rotary shafts of the plurality of motors. Therefore, the positions of the first device and the second device can be fine-tuned more precisely because the attitude, traveling direction, etc., of the first device and the second device can be finely controlled to move the first device and the second device to a predetermined position.

In the lifting system according to another aspect of the present disclosure, the first wire is directly connected to at least one connection point of the first support member.

This makes it possible to hang the first support member via the first wire with only one connection point on the first support member. Accordingly, the configuration of the first wire can be simplified.

In the lifting system according to another aspect of the present disclosure, the first wire includes a first main wire and a plurality of first sub-wires. One ends of the plurality of first sub-wires are respectively directly connected to a plurality of connection points of the first support member, and other ends of the plurality of first sub-wires are connected to one end of the first main wire at a single common connection point. The first main wire hangs and supports the first support member from the unmanned aerial vehicle via the plurality of first sub-wires.

This makes it possible to connect the plurality of first sub-wires to the first support member in one-to-one correspondence via the plurality of connection points. Therefore, the attitude of the first support member while it is hanging by the first main wire and the first sub-wires can be stabilized.

In the lifting system according to another aspect of the present disclosure, the first support member includes a first frame that is polygonal, and the plurality of connection points are arranged at a plurality of portions of the first frame corresponding to a plurality of vertices.

With this, the attitude of the first support member while it is hanging by the first wire can be more reliably stabilized.

In the lifting system according to another aspect of the present disclosure, the first support member includes a first frame that is polygonal, and the at least one connection point is movable in a plane that is within the first frame and parallel to a virtual surface.

This makes it possible to change the position of the one connection point relative to the first support member. Accordingly, for example, even if the center of gravity of the first support member that is holding a package is displaced from the center, the position of the connection point can be changed so as to align the position of the connection point with the center of gravity. Therefore, the attitude of the first support member hanging from the first wire can be corrected to a desired attitude.

In the lifting system according to another aspect of the present disclosure, the plurality of side portions of the first support member includes a first side portion and a second side portion on opposite sides of at least one of the first support member or the package. The plurality of first motors include a first first motor provided on the first side portion and including a first rotary shaft, and a second first motor provided on the second side portion and including a second rotary shaft. The controller executes a third mode that rotates the first rotary shaft in a first direction of rotation and rotates the second rotary shaft in a second direction of rotation opposite the first direction of rotation, and a fourth mode that rotates the first rotary shaft and the second rotary shaft in the second direction of rotation.

With this, by making the direction of rotation of the first rotary shaft of the first motor and the direction of rotation of the second rotary shaft of the second motor opposite directions, the first device and the second device can produce a thrust that causes it to travel in a desired direction. This allows the first device and the second device to finely adjust its position relative to a predetermined position accurately.

In the lifting system according to another aspect of the present disclosure, the plurality of first motors further include a third first motor that is provided on the first side portion in a position adjacent to the first first motor in a virtual surface and includes a third rotary shaft, and a fourth first motor that is provided on the second side portion in a position adjacent to the second first motor in the virtual surface and includes a fourth rotary shaft. The controller rotates the third rotary shaft in the second direction of rotation and rotates the fourth rotary shaft in the first direction of rotation in the third mode, and rotates the third rotary shaft and the fourth rotary shaft in the first direction of rotation in the fourth mode.

With this, by making the direction of rotation of the third rotary shaft of the third motor and the direction of rotation of the fourth rotary shaft of the fourth motor opposite directions, the device can produce a thrust that causes it to travel in a desired direction. Since the directions of rotation of the first rotary shaft of the first motor and the second rotary shaft of the second motor can be controlled, the device can finely adjust its position relative to a predetermined position accurately.

In the lifting system according to another aspect of the present disclosure, the second device further includes a sensor that detects a position of a storage device for housing the package.

This enables the position of the device relative to the storage device to be accurately detected, allowing for more accurate and finer adjustment of the position of the device relative to the storage device.

An unmanned aerial vehicle according to another aspect of the present disclosure includes: a main body having a first length in a first direction and a second length in a second direction orthogonal to the first direction, the first length being longer than the second length; a plurality of main rotary wings that rotate in a virtual plane parallel to the first direction and the second direction; a plurality of main motors that are provided on the main body and respectively rotate the plurality of main rotary wings; at least one connecting device (connector) that is provided on the main body, extends from the main body in a third direction intersecting the virtual plane, and is hangable from at least one rail spaced apart from a ground surface; at least one auxiliary rotary wing that provides propulsion force for propelling the main body in the first direction; at least one auxiliary motor that is provided on the main body and rotates the at least one auxiliary rotary wing; and a control circuit that controls the plurality of main motors and the at least one auxiliary motor.

In the unmanned aerial vehicle according to another aspect of the present disclosure, the plurality of main rotary wings include a fifth main rotary wing that rotates in coaxial inversion relative to the first main rotary wing, a sixth main rotary wing that rotates in coaxial inversion relative to the second main rotary wing, a seventh main rotary wing that rotates in coaxial inversion relative to the third main rotary wing, and an eighth main rotary wing that rotates in coaxial inversion relative to the fourth main rotary wing.

In the unmanned aerial vehicle according to another aspect of the present disclosure, the at least one auxiliary rotary wing and the at least one auxiliary motor are arranged at one end of the main body in the first direction.

In the unmanned aerial vehicle according to another aspect of the present disclosure, each of the at least one auxiliary rotary wing includes a plurality of blades each having a variable pitch angle, and the control circuit controls the pitch angle.

In the unmanned aerial vehicle according to another aspect of the present disclosure, each of the at least one auxiliary rotary wing includes a plurality of blades, and a distance between a rotary shaft of the at least one auxiliary motor and the virtual plane is longer than a length of each of the plurality of blades.

In the unmanned aerial vehicle according to another aspect of the present disclosure, each of the at least one auxiliary rotary wing is attached to the main body so as to be slidable in the third direction.

In the unmanned aerial vehicle according to another aspect of the present disclosure, the plurality of main rotary wings include two blades, and the control circuit stops the two blades in a position parallel to the first direction when stopping the plurality of main motors and operating the at least one auxiliary motor.

In the unmanned aerial vehicle according to another aspect of the present disclosure, the at least one connecting device includes a first connecting device and a second connecting device adjacent to the first connecting device in the first direction.

In the unmanned aerial vehicle according to another aspect of the present disclosure, the at least one rail includes a first rail and a second rail that extend parallel to each other, and the at least one connecting device includes a first arm hangable from the first rail and a second arm hangable from the second rail.

In the unmanned aerial vehicle according to another aspect of the present disclosure, each of the at least one connecting device includes: a fixed portion; a first arm including one end connected to the fixed portion and another end that opens and closes with respect to the fixed portion; a second arm including one end connected to the fixed portion and another end that opens and closes with respect to the fixed portion; a first actuator that opens and closes the first arm; and a second actuator that opens and closes the second arm. The control circuit controls the first actuator and the second actuator. A first region enclosed by the first arm in the closed state and the fixed portion are separated from a second region enclosed by the second arm in the closed state and the fixed portion.

In the unmanned aerial vehicle according to another aspect of the present disclosure, the fixed portion includes a partition portion that extends in the third direction and separates a first region and a second region.

A system according to another aspect of the present disclosure includes an unmanned aerial vehicle and a device including at least one first adapter connectable to at least one package to be delivered by the unmanned aerial vehicle and at least one second adapter attachable to and detachable from the unmanned aerial vehicle.

The system according to another aspect of the present disclosure further includes a wire that connects the unmanned aerial vehicle and the device, and the unmanned aerial vehicle further includes a reel to which one end of the wire is connected and a lift motor that reels out the wire.

In the system according to another aspect of the present disclosure, the control circuit detaches, from the unmanned aerial vehicle, the device to which the at least one package is attached, and causes the lift motor to reel out the wire.

In the system according to another aspect of the present disclosure, the control circuit disconnects the at least one package from the device, and causes the lift motor to reel in the wire.

In the system according to another aspect of the present disclosure, the at least one package includes a plurality of packages, and the at least one first adapter includes a plurality of first adapters individually attachable to and detachable from the plurality of packages.

An unmanned aerial vehicle according to another aspect of the present disclosure includes: a main body; a first movable body movably connected to the main body on a first side of the main body; a second movable body movably connected to the main body on a second side of the main body, the second side being opposite to the first side; a plurality of first motors arranged on the first movable body; a plurality of second motors arranged on the second movable body; a plurality of first rotary wings respectively rotated by the plurality of first motors; a plurality of second rotary wings respectively rotated by the plurality of second motors; and at least one connecting device that extends upward from the main body and is hangable from at least one rail spaced apart from a ground surface.

The unmanned aerial vehicle according to another aspect of the present disclosure further includes: a first actuator capable of changing a first angle of the first movable body relative to the main body; a second actuator capable of changing a second angle of the second movable body relative to the main body; and a control circuit that controls the plurality of first motors, the plurality of second motors, the first actuator, and the second actuator.

In the unmanned aerial vehicle according to another aspect of the present disclosure, the control circuit switches between the following modes (a) through (c) via the first actuator and the second actuator: (a) a first mode that places first rotary shafts of the plurality of first motors and second rotary shafts of the plurality of second motors in a vertical orientation; (b) a second mode that places the first rotary shafts in a first horizontal direction orientation and places the second rotary shafts in the vertical orientation; and (c) a third mode places the first rotary shafts in the first horizontal direction orientation and places the second rotary shafts in a second horizontal direction orientation opposite the first horizontal direction orientation.

In the unmanned aerial vehicle according to another aspect of the present disclosure, the first horizontal direction and the second horizontal direction each point outward from the main body.

A control method according to one aspect of the present disclosure is a control method of an unmanned aerial vehicle. The unmanned aerial vehicle holds a transported item requiring cold or heat retention. The control method includes: a first obtainment step of obtaining a destination position of the unmanned aerial vehicle; a second obtainment step that obtains a current position of the unmanned aerial vehicle; and a third obtainment step of obtaining an expected time at which the transported item is expected to reach a permissible upper temperature limit. When a time at which the unmanned aerial vehicle will reach the destination position from the current position is later than the expected time, the unmanned aerial vehicle is caused to move to the departure position, and when a time at which the unmanned aerial vehicle will reach the destination position from the current position is at or earlier than the expected time, the unmanned aerial vehicle is caused to move to the destination position.

With this, the unmanned aerial vehicle can deliver the transported item to the destination position or cancel transportation of the transported item and return to the departure position according to the expected time. Accordingly, the quality of the transported item can be protected and the availability of the unmanned aerial vehicle can be inhibited from reducing.

A control method according to one aspect of the present disclosure is a control method of an unmanned aerial vehicle. The unmanned aerial vehicle holds a transported item requiring cold or heat retention. The control method includes: a fourth obtainment step of obtaining a departure position of the unmanned aerial vehicle; a fifth obtainment step of obtaining a destination position of the unmanned aerial vehicle; and a sixth obtainment step of obtaining a current position of the unmanned aerial vehicle; a seventh obtainment step of obtaining a permissible upper temperature limit of the transported item. When a distance from the current position to the destination position is greater than a predetermined value, the unmanned aerial vehicle is caused to move to the departure position, and when the distance from the current position to the destination position is less than or equal to the predetermined value, the unmanned aerial vehicle is caused to move to the destination position. The predetermined value is a value at which a temperature of the transported item will reach the permissible upper temperature limit when the unmanned aerial vehicle is caused to move at a predetermined speed.

With this, the unmanned aerial vehicle can deliver the transported item to the destination position or cancel transportation of the transported item and return to the departure position according to the current position. Accordingly, the quality of the transported item can be protected and the availability of the unmanned aerial vehicle can be inhibited from reducing.

In the control method according to another aspect of the present disclosure, the predetermined value is calculated as V × (tz - tc), where V is the predetermined speed, tz is a time at which the temperature of the transported item will reach the permissible upper temperature limit, and tc is a time at the current position.

This enables monitoring of the temperature of the transported item to ensure that the transported item is delivered to the user at the appropriate temperature. This inhibits the delivery of a transported item to the user that deviates from the permissible upper temperature limit.

A control method according to another aspect of the present disclosure is a control method of a delivery box, and includes a measurement step of measuring an amount of power held by the delivery box, and a transmission step of, when the amount of power is greater than a predetermined value, measuring a weight of a package inside the delivery box, which is a transported item stored in the delivery box, and transmitting information indicating the weight of the package to a server.

With this configuration, the weight of the inside of the delivery box can be measured to determine whether or not a package is stored inside the delivery box.

In the control method according to another aspect of the present disclosure, the delivery box includes a door, and the control method further includes a power generation step of generating power by the opening and closing of the door, and storing the power.

With this configuration, power can be automatically generated by the action of the opening and closing of the door of the delivery box, whereby the delivery box can save energy.

The control method according to another aspect of the present disclosure further includes a transmission step of transmitting information pertaining to the opening and closing of the door to the server when the amount of power is greater than a predetermined value.

With this configuration, information pertaining to the opening and closing of door can be transmitted using power stored by power generation. With this, the delivery box can save energy.

These general and specific aspects may be implemented using a system, a method, an integrated circuit, a computer program, or a computer-readable recording medium such as a CD-ROM, or any combination of systems, methods, integrated circuits, computer programs, or computer-readable recording media.

The embodiments described below illustrate general or specific examples. The numerical values, shapes, materials, elements, the arrangement and connectivity of the elements, steps, the order of the steps, and so on given in the following embodiments are examples and are not intended to limit the present invention. Among elements described in the following embodiments, those not described in any of the independent claims are presented as optional elements.

Hereinafter, embodiments are specifically described with reference to the drawings.

### EMBODIMENT 1

### [Configuration: Flying System 1]

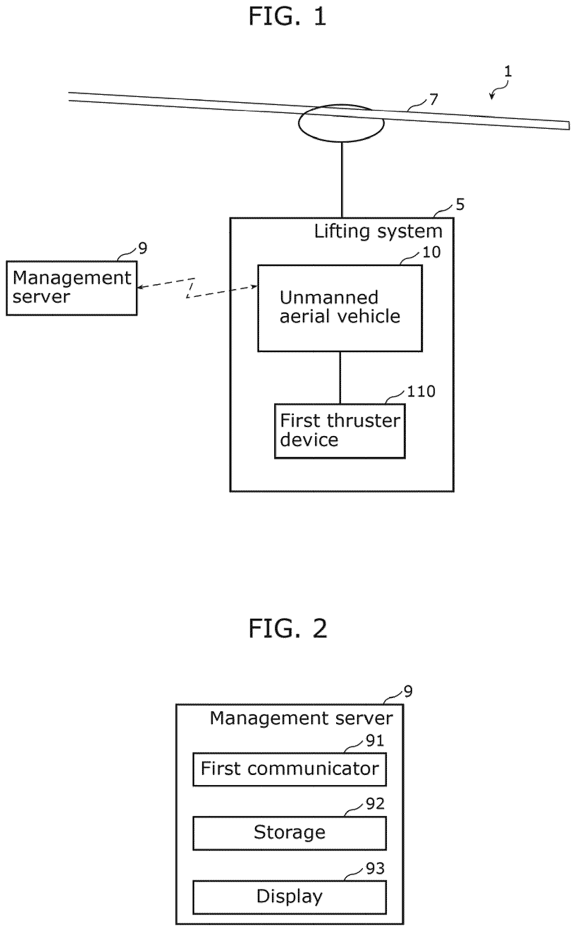

FIG. 1 is a block diagram illustrating an example of flying system 1 according to Embodiment 1.

As illustrated in FIG. 1, flying system 1 is a system capable of delivering a package (an article) from a sender to a receiver using lifting system 5. For example, flying system 1 delivers the package by lifting system 5, which carries the package, flying. The sender is the party that sends the package, and the receiver is the party that receives the package. In the present embodiment, the sender is a distribution center, such as a facility of a courier company or a convenience store that serves as a relay point, etc. In the present embodiment, the receiver is the party receiving the package, i.e., the destination, such as a home, a convenience store that serves as a relay point, or a delivery box provided at a home or a convenience store or the like. Although the relay point is exemplified as a convenience store or a facility established in conjunction with a convenience store, the relay point is not limited to this example.

The size of lifting system 5 may be changed depending on the size of the package to be delivered. The delivery range of flying system 1 of the present Embodiment is, for example, a distance of several hundred meters or several kilometers from the sender to the receiver. Flying system 1 according to the present embodiment moves within an area having a radius of several hundred meters or several kilometers around the sender.

Flying system 1 includes management server 9 and lifting system 5.

### <Management Server 9>

FIG. 2 is a block diagram illustrating an example of management server 9 according to Embodiment 1.

As illustrated in FIG. 2, management server 9 is wirelessly communicably connected to lifting system 5. Management server 9 sets a travel route for lifting system 5 based on position information of the receiver and position information of the sender. Management server 9 obtains position information of lifting system 5 and changes the travel route according to the status of the set travel route for lifting system 5. Management server 9 sets the travel route for lifting system 5 according to other lifting systems 5 that are moving or scheduled to move. Management server 9 sends a departure instruction to lifting system 5 based on the set travel route. Management server 9 also manages the flying state of lifting system 5. Management server 9 is implemented as a computer, a cloud server, or the like. The travel route is a flying route for lifting system 5 to travel through areas where rails 7 are present and areas where rails 7 are not present, and is shown in map data.

Rail 7 is, for example, located at a height of several meters to several tens of meters above the ground surface and is fixed in place by a support pillar implanted in the ground or a facility or the like. Rails 7 may be provided across the entire area of above the ground or just around at least the receiver. Rails 7 are provided along the road, for example.

Rails 7 include a connection point. The connection point is a portion where one rail 7 connects to another rail 7. A sheet-, net-, or plate-shaped structure is arranged directly below the connection point.

Management server 9 includes first communicator 91, storage 92, and display 93.

First communicator 91 is a wireless module capable of wirelessly communicating with lifting system 5. In first communicator 91, for example, the receiving unit of first communicator 91 receives position information from lifting system 5, and the transmitting unit of first communicator 91 transmits a departure instruction and information indicating a travel route to lifting system 5.

Storage 92 is a recording medium on which map information indicating a flying route for lifting system 5 to travel is stored. Storage 92 is, for example, a hard disk drive (HDD) or semiconductor memory.

Display 93 displays the current position of lifting system 5 and the travel route that lifting system 5 is scheduled to travel. Display 93 can also show the status of lifting system 5. The status of lifting system 5 includes the altitude, the power, the travel speed, the angle of inclination relative to the horizontal plane, and the fault status.

### < Lifting System 5>

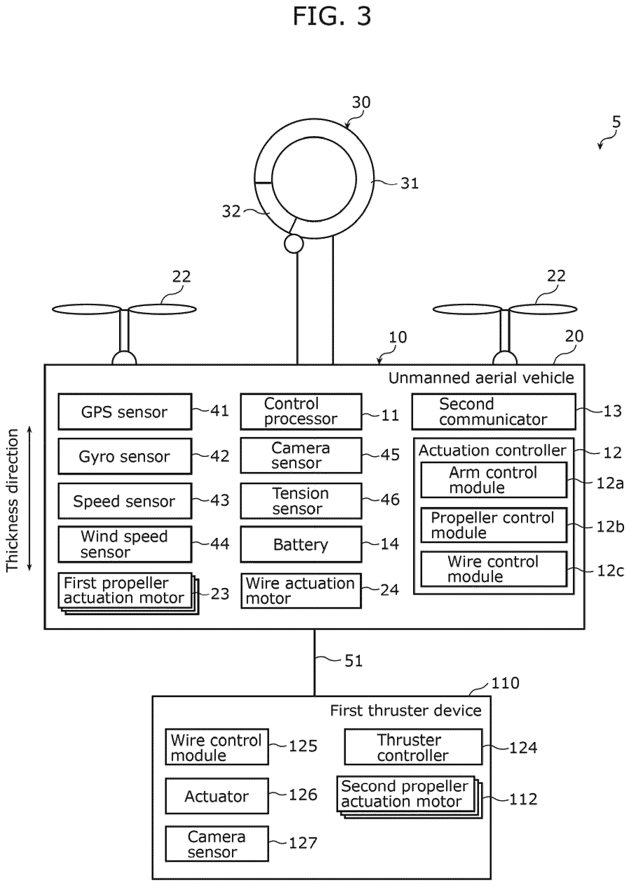

FIG. 3 is a block diagram illustrating an example of lifting system 5 according to Embodiment 1.

As illustrated in FIG. 3, when lifting system 5 receives information indicating a travel route set by management server 9, lifting system 5 moves according to the travel route indicated in the information. Lifting system 5 moves from the sender to the receiver by flying or moving along rails 7, and then delivers the package to the receiver.

Lifting system 5 includes unmanned aerial vehicle 10 and first thruster device 110.

### <Unmanned Aerial Vehicle 10>

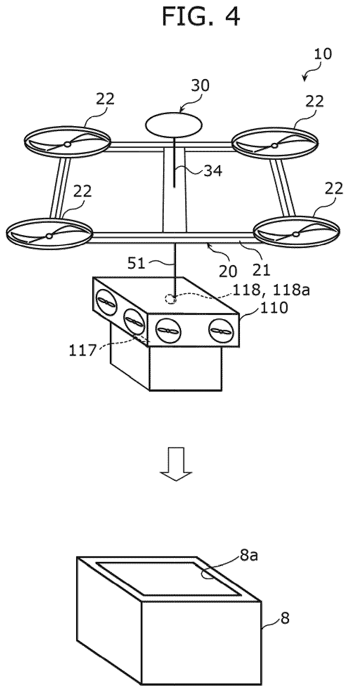

FIG. 4 is a perspective view of an example of unmanned aerial vehicle 10 according to Embodiment 1.

As illustrated in FIG. 3 and FIG. 4, unmanned aerial vehicle 10 is, for example, a flying body such as a drone. Unmanned aerial vehicle 10 not only flies in the air, but also moves along rails 7 provided above the ground. Unmanned aerial vehicle 10 flies along rails 7 with while first thruster device 110 is coupled via wire 51. In the present embodiment, flying system 1 may include rail 7 as a component.

More specifically, unmanned aerial vehicle 10 moves from a sender to a receiver along rails 7 while arm 30, which includes a ring, is connected to rails 7. More specifically, unmanned aerial vehicle 10 flies from a sender to a receiver while the ring of arm 30 is coupled to rails 7 (hereinafter also phrased as while "arm 30 is coupled to rails 7"). Here, moving along rails 7 does not necessarily mean that arm 30 of unmanned aerial vehicle 10 slides directly on rails 7. Unmanned aerial vehicle 10 may fly while rails 7 and arm 30 of unmanned aerial vehicle 10 are not in contact, since arm 30 and rails 7 may wear out if arm 30 slides directly over rails 7.

Although there is only one unmanned aerial vehicle 10 in the example in the present embodiment, a plurality of unmanned aerial vehicles 10, for example, a first unmanned aerial vehicle and a second unmanned aerial vehicle, may be coupled and connected by wire 51 or the like and fly.

Unmanned aerial vehicle 10 includes vehicle main body 20, a plurality of sensors, control processor 11, actuation controller 12, second communicator 13, and battery 14.

Vehicle main body 20 is equipped with a plurality of propellers 22, a plurality of first propeller actuation motors 23, a plurality of sensors, control processor 11, actuation controller 12, second communicator 13, and battery 14.

Vehicle main body 20 includes main body 21, arm 30, the plurality of propellers 22, and the plurality of first propeller actuation motors 23. Vehicle main body 20 may be an example of an unmanned aerial vehicle.

As illustrated in FIG. 4, main body 21 is configured as a rectangular frame-shaped body. Main body 21 supports the plurality of first propeller actuation motors 23 at a predetermined attitude. Main body 21 may have an opening that allows first thruster device 110 to be arranged inside main body 21. Stated differently, when first thruster device 110 is mounted on vehicle main body 20, main body 21 may be arranged to surround first thruster device 110 and support first thruster device 110 at a predetermined attitude.

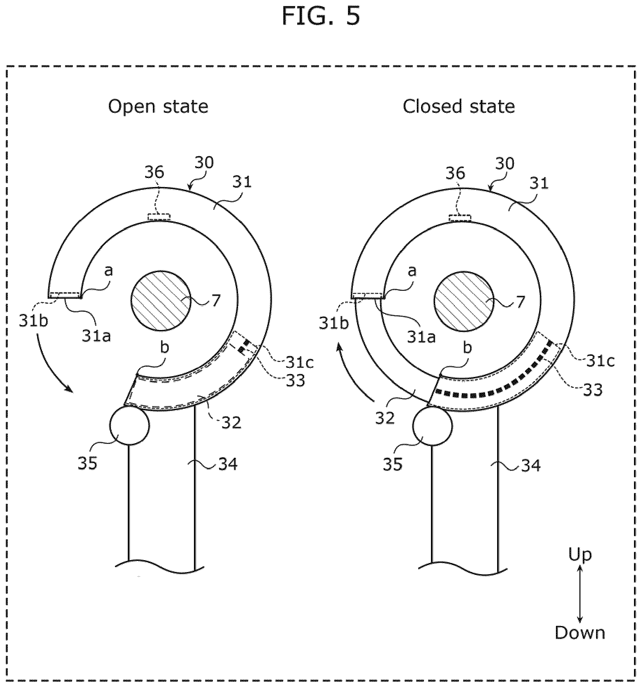

FIG. 5 is a schematic diagram illustrating an example of arm 30 of unmanned aerial vehicle 10 according to Embodiment 1.

As illustrated in FIG. 5, arm 30 includes first arm 31 and second arm 32, and first arm 31 and second arm 32 couple to form a ring shape and couple to rail 7. When arm 30 is open, the distance between the end of first arm 31 and the end of second arm 32 is greater than the diameter of rail 7. When arm 30 is closed, the distance between the end of first arm 31 and the end of second arm 32 is less than the diameter of rail 7. Thus, arm 30 can be coupled to rail 7 without becoming separated from rail 7, and can be uncoupled from rail 7.

In addition to first arm 31 and second arm 32, arm 30 also includes spring 33, support portion 34 for support, electric motor 35, and distance sensor 36.

First arm 31 is integral with support portion 34. First arm 31 is a C-shaped hook shape with a part of the ring shape missing when viewed from the traveling direction of unmanned aerial vehicle 10. First arm 31 may be U-shaped; the shape of the ring portion of arm 30 is not limited to the above examples. First arm 31 includes opening 31a through which rail 7 can enter. The portion cut out from the outer shell portion of first arm 31 constitutes opening 31a.

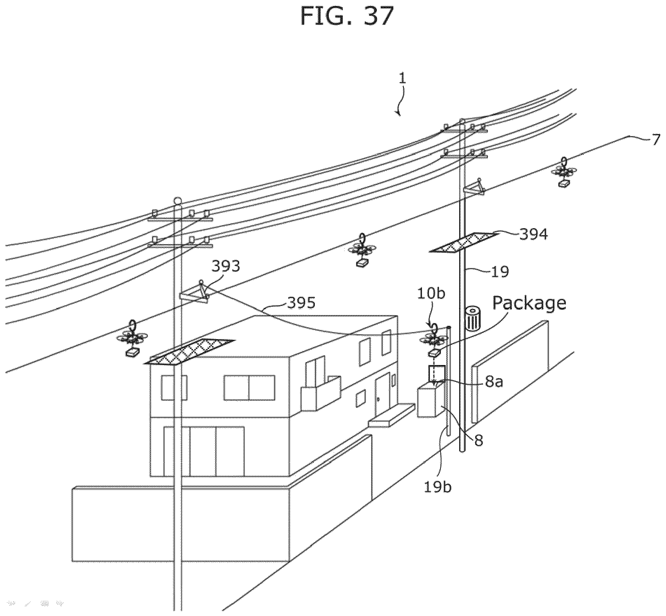

The length of opening 31a of first arm 31 (i.e., the distance from one end "a" of first arm 31 to the other end "b" of first arm 31 illustrated in FIG. 37) is greater than the diameter of rail 7 so that rail 7 can enter. The one end of first arm 31 abuts second arm 32, and the other end of first arm 31 includes housing 31c that houses second arm 32. Housing 31c has a circular arc shape that follows the shape of first arm 31.

Recess 31b is formed in the one end of first arm 31. One end of second arm 32 inserts into recess 31b. Since second arm 32 fits into recess 31b, even if a force is applied to second arm 32 from the rail 7 side, this reduces the chance that second arm 32 will separate from first arm 31 when opening 31a of first arm 31 is closed by second arm 32.

Second arm 32 can be slid and housed into housing 31c. Housing 31c may house all or part of second arm 32. Spring 33 is provided inside housing 31c. Spring 33 applies a biasing force against second arm 32 so as to cause second arm 32 to close opening 31a of first arm 31. One end of spring 33 is connected to the other end of second arm 32, and the other end of spring 33 is connected to an inner bottom of housing 31c. For example, spring 33 is an elastic member such as a coil spring or rubber.

First arm 31 and second arm 32 appear to form a circle when viewed from the traveling direction of unmanned aerial vehicle 10. When arm 30 is upright, opening 31a of first arm 31 is located below a horizontal line passing through the center axis of the circle formed by first arm 31 and second arm 32. Therefore, even when opening 31a of first arm 31 is open, first arm 31 functions as a hook, which reduces the possibility that first arm 31 coupled to rail 7 will separate from rail 7.

Second arm 32 is slid and moved by electric motor 35 so as to open or close opening 31a of first arm 31. When opening 31a is closed by second arm 32, first arm 31 and second arm 32 are ring-shaped, and when opening 31a is opened by second arm 32, arm 30 is C-shaped (circular arc shaped). Second arm 32 has a circular arc shape that corresponds to the shape of housing 31c.

As illustrated in FIG. 4 and FIG. 5, support portion 34 is a support pillar that supports first arm 31 and second arm 32 on vehicle main body 20. First arm 31 is connected to one end of support portion 34, and vehicle main body 20 is connected to the other end of support portion 34. Electric motor 35 is attached near the portion where the one end of support portion 34 and first arm 31 are connected. Support portion 34 is provided so as to rise from a central portion of vehicle main body 20 when vehicle main body 20 is viewed from above.

Electric motor 35 is a motor that is actuated and controlled by control processor 11. Electric motor 35 slides and moves second arm 32 so as to house it in housing 31c. More specifically, a gear or the like provided on the rotary shaft of electric motor 35 engages with teeth on the outer peripheral surface of second arm 32 causing second arm 32 to slide and move. The actuation force of first electric motor 35 is of course stronger than the spring force of spring 33.

Electric motor 35 is installed at a position where second arm 32 can be slid and moved, that is, at the connection portion where support portion 34 and first arm 31 are connected to each other. The connection portion is in the vicinity of opening 31a of first arm 31 and on the outer periphery side of housing 31c.

Distance sensor 36 measures a first distance between rail 7 and arm 30. Distance sensor 36 is installed on at least the upper or lower portion of the ring of arm 30. In the present embodiment, distance sensor 36 is exemplified as being provided on the upper portion of arm 30. Distance sensor 36 outputs first distance information indicating the measured first distance to control processor 11.

As illustrated in FIG. 3 and FIG. 4, the plurality of propellers 22 are provided on the upper surface of vehicle main body 20. More specifically, the plurality of propellers 22 are provided on vehicle main body 20 so that the planes of rotation thereof are approximately parallel to a plane orthogonal to the thickness direction of vehicle main body 20. The plurality of propellers 22 correspond one-to-one with the plurality of first propeller actuation motors 23, and the rotational actuation of each first propeller actuation motor 23 causes the plurality of propellers 22 to rotate around the axis of rotation of the plurality of first propeller actuation motors 23 to provide thrust to unmanned aerial vehicle 10. Each of propellers 22 is provided at a corner of vehicle main body 20, and in the present embodiment, four propellers 22 are arranged on vehicle main body 20. Note that the number of propellers 22 provided may be three or less, and may be five or more.

The plurality of first propeller actuation motors 23 are electric motors that respectively rotate the plurality of propellers 22. Each first propeller actuation motor 23 is a motor that is actuated and controlled by control processor 11. Each first propeller actuation motor 23 is fixed to a corner of main body 21 of vehicle main body 20. In the present embodiment, four first propeller actuation motors 23 are arranged on vehicle main body 20. First propeller actuation motor 23 does not need to be fixed to a corner of main body 21, and may be fixed at some other location. Note that the number of first propeller actuation motors 23 provided may be three or less, and may be five or more.

The plurality of sensors include, for example, global positioning system (GPS) sensor 41, gyro sensor 42, speed sensor 43, wind speed sensor 44, camera sensor 45, and tension sensor 46.

GPS sensor 41 detects position information indicating geographic space, such as latitude and longitude, indicating the position of unmanned aerial vehicle 10. GPS sensor 41 outputs position information indicating the current position of unmanned aerial vehicle 10 to control processor 11. GPS sensor 41 is one example of a sensor.

Gyro sensor 42 detects the angular speed and acceleration of vehicle main body 20 of unmanned aerial vehicle 10 in flight. Gyro sensor 42 outputs angular speed information and acceleration information indicating the angular speed and the acceleration of vehicle main body 20 of unmanned aerial vehicle 10 to control processor 11.

Speed sensor 43 is a sensor that detects the travel speed of unmanned aerial vehicle 10, for example, the speed of unmanned aerial vehicle 10 in flight and in a hovering state. Speed sensor 43 outputs speed information which is information indicating the travel speed of unmanned aerial vehicle 10 to control processor 11.

Wind speed sensor 44 is a sensor that detects the wind speed around unmanned aerial vehicle 10, for example, the wind speed around unmanned aerial vehicle 10 in a hovering state. When first thruster device 110 detaches from unmanned aerial vehicle 10 and descends, wind speed sensor 44 detects a wind speed around unmanned aerial vehicle 10. Wind speed sensor 44 outputs wind speed information which is information indicating the wind speed around unmanned aerial vehicle 10 to control processor 11.

Camera sensor 45 is provided on vehicle main body 20 and is an imaging device capable of capturing images of the package and the delivery box from above. Camera sensor 45 captures an image of the package and the delivery box and outputs image information, which is the captured image, to control processor 11. For example, the image information includes information indicating the relative position (distance) between the package and the delivery box, the distance from vehicle main body 20 to the package, the distance from vehicle main body 20 to the delivery box, and the height from the ground surface to the opening of the delivery box. Camera sensor 45 may be, for example, a time-of-flight (TOF) camera or a range finding sensor or the like.

Tension sensor 46 is a sensor that detects the tension of wire 51 that couples unmanned aerial vehicle 10 and first thruster device 110. Tension sensor 46 outputs, to control processor 11, tension information indicating the tension of wire 51 that couples unmanned aerial vehicle 10 and the first thruster device.

Control processor 11 controls the flying state of unmanned aerial vehicle 10 and controls the reeling in and out of wire 51. Flying states of unmanned aerial vehicle 10 include forward, backward, rotate right, rotate left, hovering, etc.

Control processor 11 controls, for example, the travel speed and acceleration of unmanned aerial vehicle 10 by obtaining position information, angular speed information, acceleration information, and speed information. More specifically, control processor 11 controls the inclination of vehicle main body 20 of the aircraft relative to the horizontal direction and controls the rotation rates of propellers 22 of unmanned aerial vehicle 10 based on the position information, the angular speed information, the acceleration information, and the speed information.

Control processor 11 also detects the amount of movement of unmanned aerial vehicle 10 during while unmanned aerial vehicle 10 is hovering by obtaining wind speed information or the like. More specifically, since vehicle main body 20 is moved by the wind, control processor 11 correct the misalignment of unmanned aerial vehicle 10 caused by the wind by controlling the tilt of vehicle main body 20 relative to the horizontal direction and controlling the rotation rates of propellers 22 of unmanned aerial vehicle 10. Note that control processor 11 may correct misalignment of unmanned aerial vehicle 10 caused by wind based on the position information, the angular speed information, and the speed information.

By obtaining the image information, control processor 11 corrects the position of lifting system 5 so as to position the package in the airspace above the destination point of the receiver.

When unmanned aerial vehicle 10 arrives at the receiver, control processor 11 controls arm control module 12a of actuation controller 12 to cause arm 30 to hold rail 7 and to couple arm 30 to rail 7. Unmanned aerial vehicle 10 is thus fixed to rail 7 at a predetermined position. Note that if, arm 30 includes, for example, an electromagnet, arm 30 may be fixed to rail 7 by control processor 11 controlling arm control module 12a of actuation controller 12 to cause a current to flow through a coil of the electromagnet included in arm 30. Thus, when unmanned aerial vehicle 10 arrives in the airspace above the receiver, since arm 30 is fixed to rail 7, misalignment due to the ground effect can be inhibited. In the present embodiment, the airspace above the receiver is the airspace above delivery box 470.

It is only when opening 31a of first arm 31 is to be opened that control processor 11 outputs an opening instruction to arm control module 12a to actuate electric motor 35 so as to slide and move second arm 32 to house it in housing 31c. When closing opening 31a of first arm 31, control processor 11 outputs a closing instruction to arm control module 12a and does not actuate electric motor 35, that is to say, stops actuating electric motor 35. In this case, the force of spring 33 causes second arm 32 to close opening 31a of first arm 31. In the present embodiment, spring 33 need not be used. Instead, opening 31a of first arm 31 may be opened and closed by sliding and moving second arm 32 via electric motor 35.

Actuation controller 12 includes arm control module 12a, propeller control module 12b, and wire control module 12c. As is the case in the present embodiment, actuation controller 12 may include wire control module 12c.

Arm control module 12a controls the actuation of electric motor 35 for coupling arm 30 to rail 7 based on instructions from control processor 11. Stated differently, when arm control module 12a obtains the opening instruction for opening 31a of first arm 31 from control processor 11, it actuates electric motor 35 to slide and move second arm 32 to open opening 31a of first arm 31. This allows rail 7 to enter through opening 31a of first arm 31. When arm control module 12a obtains the closing instruction for opening 31a of first arm 31 from control processor 11, arm control module 12a stops the actuation of electric motor 35 to cause second arm 32 to close opening 31a of first arm 31 by the force of spring 33.

Propeller control module 12b controls the actuation of the plurality of first propeller actuation motors 23 based on instructions from control processor 11. In other words, when propeller control module 12b obtains an actuation instruction from control processor 11, propeller control module 12b controls, for example, the rotation rate and the direction of rotation (clockwise or counterclockwise) of the plurality of propellers 22. Propeller control module 12b controls the actuation and stopping of and the rotation rate and the direction of rotation of one or more of the propellers 22 corresponding to one or more of the plurality of first propeller actuation motors 23.

Wire control module 12c may control the reeling in and out of wire 51 based on instructions from control processor 11. That is, when wire control module 12c obtains a reel-out instruction for wire 51 from control processor 11, wire control module 12c may actuate wire actuation motor 24 so as to reel out wire 51 to separate first thruster device 110 from unmanned aerial vehicle 10. When wire control module 12c obtains a reel-in instruction for wire 51 from control processor 11, wire control module 12c may actuate wire actuation motor 24 so as to reel in wire 51 to retrieve first thruster device 110.

Unmanned aerial vehicle 10 may include wire actuation motor 24. Stated differently, main body 21 of vehicle main body 20 may be equipped with wire actuation motor 24. Wire actuation motor 24 may be an electric motor that rotates a reel that reels wire 51 in and out. Each wire actuation motor 24 may be actuated and controlled by wire control module 12c via control processor 11.

Second communicator 13 is a wireless module capable of wirelessly communicating with management server 9. When second communicator 13 receives, for example, a departure instruction and information indicating a travel route from management server 9, the receiving unit outputs the received departure instruction to control processor 11, and transmits position information and the like detected by GPS sensor 41 to management server 9.

Battery 14 is a battery that provides electric power to first propeller actuation motors 23 and the like for unmanned aerial vehicle 10 to fly, and is realized as a lithium battery or the like. Battery 14 supplies power to, for example, control processor 11 and the plurality of first propeller actuation motors 23.

### <First Thruster Device 110>

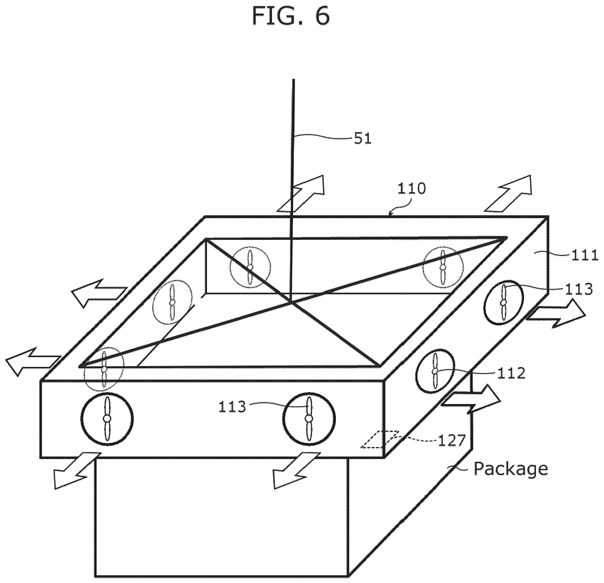

FIG. 6 is a perspective view of an example of first thruster device 110 and a package attached to first thruster device 110 of flying system 1 according to Embodiment 1.

First thruster device 110 is a device capable of correcting the position of a package relative to a delivery box. First thruster device 110 can communicate with vehicle main body 20 of unmanned aerial vehicle 10 via wire 51, but may also communicate wirelessly using a communication module or the like. First thruster device 110 may be unmanned aerial vehicle 10, one example of which is a drone. First thruster device 110 is one example of a first adapter.

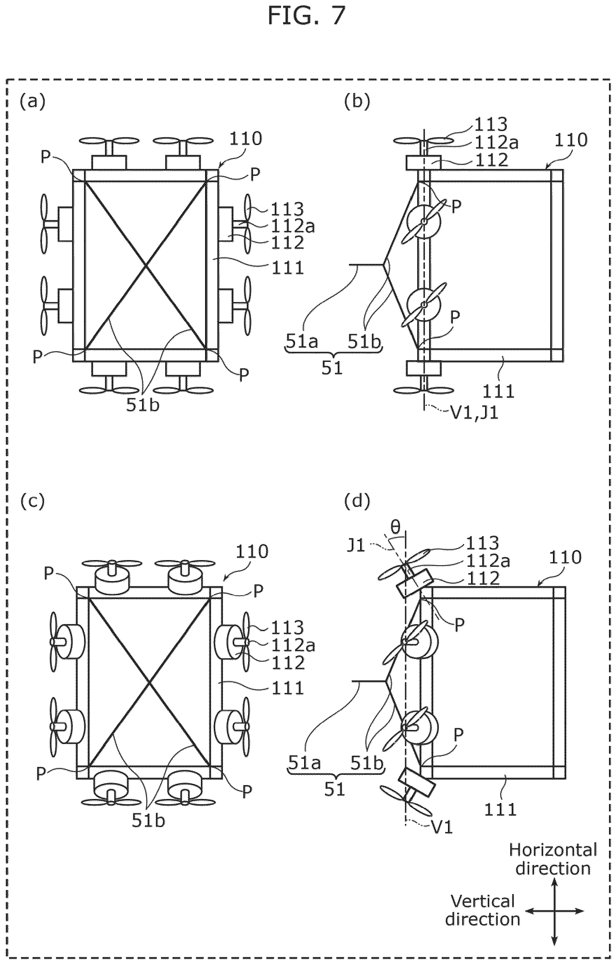

FIG. 7 is a schematic diagram illustrating an example of first thruster device 110 of flying system 1 according to Embodiment 1. In FIG. 7, (a) is a plan view of first thruster device 110 when viewed from vertically above and when the rotary shafts of the motors are parallel to virtual surface V1, and (b) is a side view of first thruster device 110 when the rotary shafts of the motors are parallel to virtual surface V1. In FIG. 7, (c) is a plan view of first thruster device 110 when viewed from vertically above and when the rotary shafts of the motors are inclined relative to virtual surface V1, and (d) is a side view of first thruster device 110 when the rotary shafts of the motors are inclined relative to virtual surface V1. First thruster device 110 is one example of a first device. The arrows indicating the horizontal and vertical directions in FIG. 7 correspond to (b) and (d) in FIG. 7.

First thruster device 110 is a first child vehicle of unmanned aerial vehicle 10 and is attachable to and detachable from unmanned aerial vehicle 10.

As illustrated in FIG. 3, FIG. 6, and FIG. 7, first thruster device 110 includes support member 111, wire 51, a plurality of second propeller actuation motors 112, a plurality of propellers 113, thruster controller 124, wire control module 125, one or more actuators 126, and camera sensor 127. Support member 111 is one example of a first support member.

As illustrated in FIG. 6 and FIG. 7, support member 111 is a support member capable of holding the package at a predetermined attitude by engaging with the upper portion of the package. Support member 111 attachably and detachably holds a package. Support member 111 has a polygonal frame that surrounds the package. Support member 111 can hold the package at a predetermined attitude by housing the package inside an opening formed in the central region of support member 111 and gripping the package around the top edge of the package to clamp the package, or by connecting to the package. Support member 111 is one example of a first adapter.

Support member 111 is attachable to and detachable from unmanned aerial vehicle 10. The lower end of wire 51 (the sub-wire to be described below) is coupled to support member 111. Support member 111 has a plan view shape that corresponds to the shape of the package. In the present embodiment, support member 111 has a rectangular shape, which is one example of a polygonal shape.

Support member 111 supports the plurality of second propeller actuation motors 112. The plurality of second propeller actuation motors 112 and the plurality of propellers 113 are provided on the outer peripheral side portions of support member 111. In the present embodiment, two propellers 113 and two second propeller actuation motors 112 are provided on each side of support member 111. In the present embodiment, support member 111 includes an opening into which the package is inserted. When the attitude of virtual surface V1 (to be described later) is parallel to the horizontal plane, the opening is formed vertically (a direction parallel to the lengthwise direction of wire 51 to be described later) downward of support member 111.

Wire 51 connects first thruster device 110 and unmanned aerial vehicle 10. One end of wire 51 is coupled to unmanned aerial vehicle 10 and the other end is coupled to first thruster device 110.

As illustrated in FIG. 3 and FIG. 7, wire 51 is capable of hanging support member 111, and is directly connected to at least one connection point P of support member 111. Wire 51 hangs support member 111 by one end of wire 51 being connected to support member 111 and the other end being connected to an object positioned spaced apart from the ground surface. The object is, for example, rail 7 or unmanned aerial vehicle 10 such as a drone described above. In the present embodiment, when virtual surface V1 is parallel to the horizontal plane, wire 51 is connected to the vertical upper side of support member 111. When first thruster device 110 is hung from an object, wire 51 holds first thruster device 110 at a horizontal attitude.

Wire 51 may include a communication line that communicatively connects unmanned aerial vehicle 10 and first thruster device 110, and may include a power line that supplies power to unmanned aerial vehicle 10. In configurations in which wire 51 does not include the communication line and or the power line, wire 51 may be mere metal or resin wire 51. In such cases, unmanned aerial vehicle 10 and first thruster device 110 may be communicably connected by wireless communication. First thruster device 110 may include battery 14 in such cases.

Wire 51 includes main wire 51a and a plurality of sub-wires 51b.

One end of main wire 51a is connected to the plurality of sub-wires 51b, and the other end of main wire 51a is connected to the object. Main wire 51a hangs and supports support member 111 from an object via the plurality of sub-wires 51b. When first thruster device 110 is hung from an object, main wire 51a is pulled along the vertical direction by support member 111.

One ends of the plurality of sub-wires 51b are directly connected to and fixed at a plurality of connection points P of support member 111. More specifically, one ends of the plurality of sub-wires 51b are connected in a one-to-one relationship with a plurality of corners of support member 111, which has a polygonal plan view shape. Other ends of plurality of sub-wires 51b are connected to one end of main wire 51a at a single common connection point P. The plurality of connection points P are arranged at corners of the frame (which are portions of the frame) corresponding to vertices in a plan view. Since support member 111 has a rectangular plan view shape in the present embodiment, the plurality of sub-wires 51b are connected in one-to-one relationship with the four corners corresponding to the four vertices of the rectangle.

Note that some of the plurality of connection points P arranged on support member 111 may move on support member 111.

The plurality of second propeller actuation motors 112 are electric motors that respectively rotate the plurality of propellers 113 by the main bodies of the motors rotating rotary shafts 112a. Each of the plurality of second propeller actuation motors 112 is individually controlled to be actuated and stopped by thruster controller 124. Second propeller actuate motors 112 may, for example, be supplied with power from battery 14 of vehicle main body 20 of unmanned aerial vehicle 10 via wire 51. Support member 111 may be provided with a battery, and each of the plurality of second propeller actuation motors 112 may be supplied with power from the battery.

The plurality of second propeller actuation motors 112 are arranged on the side portion forming the outer periphery of support member 111. The plurality of second propeller actuation motors 112 are dispersedly arranged so as to surround support member 111 and are supported by support member 111. The plurality of second propeller actuation motors 112 are pivotably supported by actuators 126 relative to the frame. In the present embodiment, the plurality of second propeller actuation motors 112 are arranged on the vertically upper side of support member 111 when the attitude of virtual surface V1 is parallel to the horizontal plane.

Each of the plurality of propellers 113 is disposed on an outer peripheral side portion of support member 111 so as to generate a horizontal thrust. Each of the plurality of propellers 113 is provided on support member 111 in an attitude in which the planes of rotation of the plurality of propellers 113 and the vertical direction are roughly parallel, and air is carried out to the outside of support member 111. The plane of rotation is a plane in which the blades of propeller 113 rotate and is orthogonal to the axis of rotation of propeller 113 (axis of rotation of second propeller actuation motor 112).

The plurality of propellers 113 include one or more first propellers disposed on a pair of first side portions included in the outer peripheral side portions of support member 111, and one or more second propellers disposed on a pair of second side portions different than the pair of first side portions of support member 111 and included in the outer peripheral side portions of support member 111. In the present embodiment, the one or more first propellers are provided on the front first side portion and the rear first side portion of the pair of first side portions, and the one or more second propellers are provided on the right second side portion and the left second side portion of the pair of second side portions. Here, "front" refers to the front side of first thruster device 110 in the drawing, the "rear" refers the rear side of first thruster device 110 in the drawing, "right" refers to right side of first thruster device 110 in the drawing, and "left" refers to the left side of first thruster device 110 in the drawing.

The plurality of propellers 113 correspond one-to-one with rotary shafts 112a of the plurality of second propeller actuation motors 112 and are fixed one-to-one with rotary shafts 112a of the plurality of second propeller actuation motors 112. The plurality of propellers 113 are respectively actuated by the plurality of second propeller actuation motors 112, and generate thrust along the lengthwise direction of rotary shafts 112a. The planes of rotation of the plurality of propellers 113 incline relative to virtual surface V1 in synchronization with the pivoting of the plurality of second propeller actuation motors 112. When the attitudes of the plurality of second propeller actuation motors 112 relative to support member 111 are the same, virtual surface V1 is a plane including the centers of the plurality of propellers 113. Virtual surface V1 is preferably a virtual plane. The center of propeller 113 is the point where axis J1 of rotary shaft 112a of second propeller actuation motor 112 intersects with the plane of rotation of propeller 113.

An angle θ of rotary shaft 112a (i.e., axis Jl) of each of the plurality of second propeller actuation motors 112 relative to virtual surface V1 is at least -45 degrees and at most +45 degrees. The angle θ is the range over which rotary shaft 112a of each of the plurality of second propeller actuation motors 112 can pivot relative to virtual surface V1, and the angle θ of axis J1 of rotary shaft 112a relative to virtual surface V1 ranges from -45 degrees to +45 degrees with reference to virtual surface V1. In particular, the angle θ is preferably at least -30 degrees and at most +30 degrees.

As illustrated in FIG. 3 and FIG. 4, camera sensor 127 is provided on the package side of support member 111, that is, on the vertically downward side, and outputs image information obtained by capturing an image of delivery box 8 to thruster controller 124. A plurality of camera sensors 127 may be provided. Moreover, camera sensor 127 is not an essential element of first thruster device 110. Accordingly, first thruster device 110 need not include camera sensor 127.

Thruster controller 124 controls the plurality of second propeller actuation motors 112 of first thruster device 110 to actuate at least one of the plurality of second propeller actuation motors 112 during at least part of a period of time during which wire 51 reeled out.

More specifically, thruster controller 124 calculates the positions of delivery box 8 and the package based on image information obtained from camera sensor 127 of first thruster device 110 and image information obtained from camera sensor 45 of unmanned aerial vehicle 10. Thruster controller 124 controls the plurality of second propeller actuation motors 112 of first thruster device 110 so as to position the package vertically above opening 8a of delivery box 8, to move first thruster device 110 and the package so that the package fits inside opening 8a of delivery box 8 as viewed from above. More specifically, thruster controller 124 calculates an error (misalignment) between opening 8a of delivery box 8 and the package, and corrects the position of the package relative to opening 8a of delivery box 8 so as to correct the calculated error.

Thruster controller 124 adjusts the angle θ formed by rotary shafts 112a of the plurality of second propeller actuation motors 112 relative to virtual surface V1 by controlling the one or more actuators 126. Thruster controller 124 controls the attitude of the plurality of second propeller actuation motors 112 by rotating the plurality of second propeller actuation motors 112 relative to support member 111 by controlling actuator 126. Thruster controller 124 controls the angle θ at which the plurality of second propeller actuation motors 112 are rotated relative to support member 111, and the angle θ of rotary shafts 112a of the plurality of second propeller actuation motors 112 relative to virtual surface V1. Note that thruster controller 124 can individually control the angle θ of each of the plurality of second propeller actuation motors 112 relative to virtual surface V1.

Thruster controller 124 also controls the rotation rate of rotary shafts 112a of the plurality of second propeller actuation motors 112. Thruster controller 124 controls the rotation rate of rotary shafts 112a by changing the value of the current supplied to the plurality of second propeller actuation motors 112. Thruster controller 124 also can also individually control the rotation rate of each of rotary shafts 112a of the plurality of second propeller actuation motors 112.

As illustrated in FIG. 3 and FIG. 7, thruster controller 124 includes a first mode and a second mode.

As illustrated in (a) and (b) in FIG. 7, the first mode inclines rotary shafts 112a of the plurality of second propeller actuation motors 112 so that the angle θ of rotary shafts 112a relative to virtual surface V1 is 0 degrees. As illustrated in (c) and (d) in FIG. 7, the second mode inclines one or more rotary shafts 112a relative to virtual surface V1 so that the angle θ is an elevation angle.

As illustrated in FIG. 3 and FIG. 4, thruster controller 124 controls wire control module 125 by obtaining tension information. More specifically, thruster controller 124 adjusts the distance of first thruster device 110 relative to unmanned aerial vehicle 10 by controlling the reeling in or out of wire 51.

Wire control module 125 includes wire actuation motor 118a and reel 118.

Wire actuation motor 118a is an electric motor that rotates reel 118 which reels wire 51 in and out. Each wire actuation motor 118a is actuated and controlled by thruster controller 124.

Reel 118 can reel wire 51 in and out by rotating. The rotation of reel 118 is controlled by wire control module 125.

Wire control module 125 controls the reeling in and out of wire 51 based on instructions from thruster controller 124. To attach first thruster device 110 to unmanned aerial vehicle 10, wire control module 125 rotates reel 118 by actuating wire actuation motor 118a to reel in wire 51 when it obtains a reel-in instruction for wire 51 from thruster controller 124. To separate first thruster device 110 from unmanned aerial vehicle 10, wire control module 125 rotates reel 118 by actuating wire actuation motor 118a to reel out wire 51 when it obtains a reel-out instruction for (obtains an instruction to reel out) wire 51 from thruster controller 124.

The one or more actuators 126 adjust the angle θ formed by rotary shafts 112a of the plurality of second propeller actuation motors 112 relative to virtual surface V1. More specifically, the one or more actuators 126 are actuated by thruster controller 124 to rotate the plurality of second propeller actuation motors 112 to change the attitude of the plurality of second propeller actuation motors 112 relative to support member 111. The one or more actuators 126 are, for example, an actuation mechanism such as a gear, a pulley, a belt, or the like.

### Operations

### <Processes Performed at Sender>

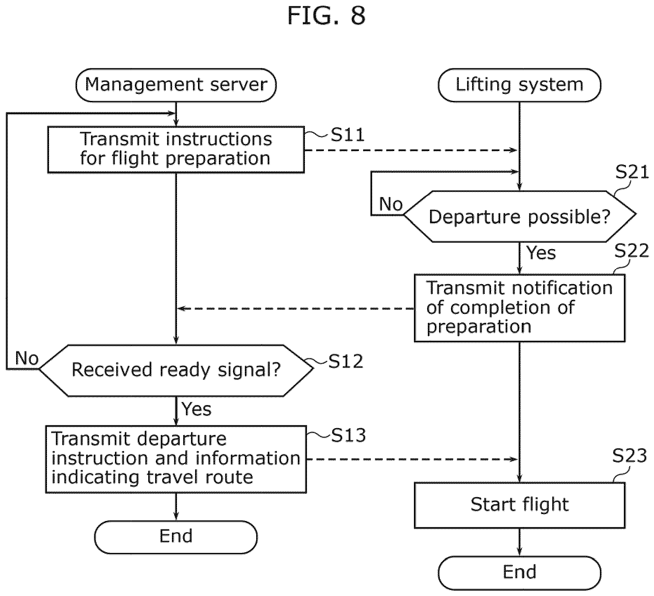

FIG. 8 is a flowchart illustrating an example of processes performed by management server 9 and lifting system 5 according to Embodiment 1.

FIG. 8 describes processes performed by flying system 1 according to the present embodiment. Here, processes up until lifting system 5 departs from the sender will be described.

As illustrated in FIG. 8, management server 9 selects a travel route from the sender to the receiver based on, for example, the relationship between the locations of the sender and the receiver and the local environment. Management server 9 also transmits instructions for flight preparation to lifting system 5 via second communicator 13 (S11). Flight preparation includes preparations for loading a package onto lifting system 5 and preparations for supplying lifting system 5 with sufficient battery 14 for flight.

Next, when lifting system 5 receives the flight preparation instructions, control processor 11 of unmanned aerial vehicle 10 of lifting system 5 determines whether departure is possible (S21). The determination of whether departure is possible or not is based on, for example, whether first thruster device 110 is connected to unmanned aerial vehicle 10 and whether first thruster device 110 is loaded with a package. More specifically, control processor 11 determines whether or not first thruster device 110 is connected to unmanned aerial vehicle 10 by, for example, determining whether or not control processor 11 can communicate with first thruster device 110. Control processor 11 determines whether or not support member 111 of first thruster device 110 is provided with a package using a sensor mounted on first thruster device 110. Here, the sensor may be a proximity sensor that detects a package near support member 111 of first thruster device 110, may be a switch sensor that is pressed down when the package is provided on support member 111 of first thruster device 110, and may be a weight sensor that detects the weight of the lifting system 5 (or first thruster device 110).

If lifting system 5 is not ready for departure (NO in S21), control processor 11 returns the process to step S12. In this case, control processor 11 notifies management server 9 that the flight preparation has not been completed.

If lifting system 5 is ready for departure (YES in S21), control processor 11 transmits a notification of completion of preparation to management server 9 via second communicator 13 (S22).

Management server 9 determines whether or not it has received a ready signal from lifting system 5 (S12). If management server 9 has not received a ready signal from lifting system 5 (NO in S12), management server 9 returns the process to step S11. If the result of step S12 is NO, management server 9 may return to step S12.

If management server 9 has received a ready signal from lifting system 5 (YES in S12), management server 9 transmits a departure instruction and information indicating a travel route to lifting system 5 via first communicator 91 (S13).

Thus, when lifting system 5 receives the departure instruction and the information indicating the travel route from management server 9, it can start its flight and depart from the sender (S23).

### <From Sender to Receiver>

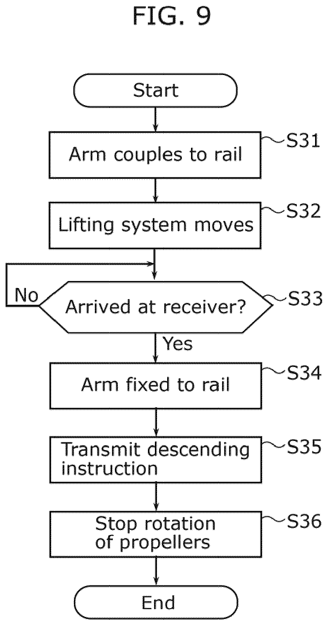

FIG. 9 is a flowchart illustrating an example of processes performed by lifting system 5 according to Embodiment 1.

FIG. 9 describes process from the time arm 30 of unmanned aerial vehicle 10 is connected to rail 7 to the time lifting system 5 moves from the sender to the receiver and completes the storing of the package in delivery box 8.

As illustrated in FIG. 9, lifting system 5 actuates arm 30 so that arm 30 clasps rail 7, thereby connecting and coupling arm 30 to rail 7 (S31).

Lifting system 5 moves from the sender to the receiver according to the travel route included in the received information. When moving, lifting system 5 moves in line with unmanned aerial vehicle 10 and first thruster device 110 (S32). Lifting system 5 continues to transmit position information (which is, for example, geographical spatial information such as the latitude and longitude information described above) indicating the respective current positions detected by GPS sensor 41 to management server 9 at predetermined intervals. Since management server 9 receives the position information of lifting system 5 sequentially, it can obtain the position information of lifting system 5 immediately.

Next, control processor 11 of unmanned aerial vehicle 10 of lifting system 5 determines whether it has arrived at the airspace above the receiver (S33). More specifically, control processor 11 compares the current position obtained from GPS sensor 41 with the position of the receiver obtained from management server 9, and determines whether or not they match.

For example, when unmanned aerial vehicle 10 approaches the vicinity of the receiver, control processor 11 may compare a first position indicated by the image information captured by camera sensor 45 with a second position indicated by the position information obtained from GPS sensor 41. If the first position and the second position do not match, control processor 11 may control the flight of unmanned aerial vehicle 10 (i.e., control the rotation of propellers 113) so that the first position and the second position match. More specifically, when unmanned aerial vehicle 10 approaches the vicinity of the airspace above the receiver, camera sensor 45 may capture an image of coded medium 471 on the upper surface of delivery box 8 or rail 7. Coded medium 471 includes the first position indicating the location of delivery box 8. Control processor 11 may control the flight of unmanned aerial vehicle 10 so that the first position and the second position match by having camera sensor 45 read coded medium 471. Coded medium 471 is, for example, a barcode or a two-dimensional code, but coded medium 471 may be a simple mark that can be recognized by camera sensor 45. Unmanned aerial vehicle 10 thus arrives in the airspace above the receiver.

Note that control processor 11 may use camera sensor 45 instead of GPS sensor 41 to measure the relative position from delivery box 8 to first thruster device 110. Control processor 11 may measure the position of first thruster device 110 from an image of the surrounding area obtained using an image sensor.

If the current position and destination point do not match (NO in S33), control processor 11 returns the process to step S33.

If the current position and destination point match (YES in S33), control processor 11 determines that the vehicle has arrived at the airspace above the receiver and controls actuation controller 12 so as to clasp rail 7 via arm 30. Unmanned aerial vehicle 10 is thus fixed to rail 7 (S34).

Next, control processor 11 transmits a descending instruction to first thruster device 110 (S35) and stops rotation of propellers 113 (S36). In this case, unmanned aerial vehicle 10 is hanging in midair from arm 30 coupled to rail 7. When unmanned aerial vehicle 10 arrives at the airspace above the receiver, unmanned aerial vehicle 10 may be allowed to hover while arm 30 is coupled to rail 7 without arm 30 clasping rail 7.

First thruster device 110 of lifting system 5 thus descends from unmanned aerial vehicle 10.

### <Storage of Package>

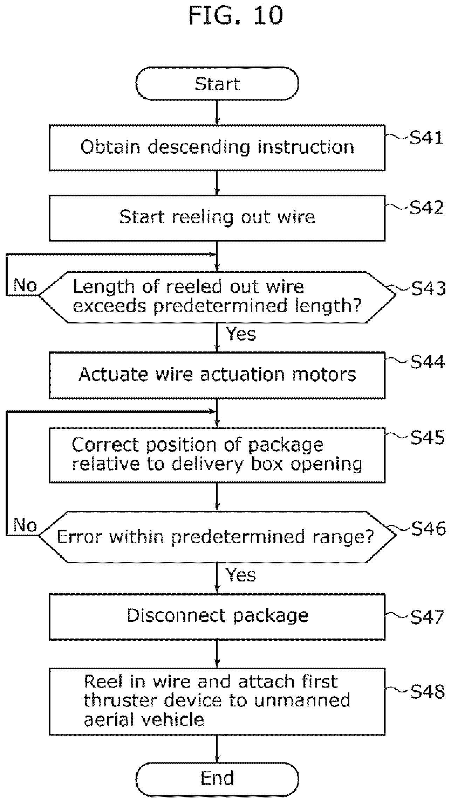

FIG. 10 is a flowchart illustrating an example of operations performed by first thruster device 110 to store a package in delivery box 8 according to Embodiment 1.

FIG. 10 describes a procedure for storing a package in delivery box 8 using first thruster device 110.

As illustrated in FIG. 10, when first thruster device 110 obtains the descending instruction (S41), first thruster device 110 prepares to descend based on the descending instruction. More specifically, thruster controller 124 of first thruster device 110 controls wire control module 125 so as to start reeling wire 51 out (S42). Even more specifically, thruster controller 124 controls wire actuation motor 118a of wire control module 125 so as to rotate reel 118 to start reeling wire 51 out. With this, first thruster device 110 starts descending.

Next, thruster controller 124 reels out wire 51 by controlling wire actuation motor 118a via wire control module 125, and determines whether the length of the portion of wire 51 that has been reeled out exceeds a predetermined length (S43).

If the length of the portion of wire 51 that has been reeled out does not exceed the predetermined length (NO in S43), thruster controller 124 returns the process to step S43.

If the length of the portion of wire 51 that has been reeled out exceeds predetermined length (YES in S43), thruster controller 124 actuates the plurality of wire actuation motors 118a (S44).

Next, thruster controller 124 obtains image information from camera sensor 127 and calculates a distance between and relative positions of the package and delivery box 8. Thruster controller 124 corrects the position of the package relative to opening 8a of delivery box 8 (in other words, the position of first thruster device 110 relative to opening 8a) by respectively controlling the plurality of second propeller actuation motors 112 of first thruster device 110 (S45). Control processor 11 of unmanned aerial vehicle 10 may move unmanned aerial vehicle 10 to correct the position of the package relative to opening 8a of delivery box 8 by controlling the plurality of second propeller actuation motors 112 of unmanned aerial vehicle 10.

As a result, the position of first thruster device 110 above delivery box 8 relative to delivery box 8 is corrected, whereby the position of the package relative to opening 8a of delivery box 8 is corrected. Thruster controller 124 repeatedly corrects the overlap error between first thruster device 110 and opening 8a of delivery box 8 in the vertical direction to position first thruster device 110 relative to opening 8a of delivery box 8 and align opening 8a of delivery box 8 with first thruster device 110, i.e., the package.

Thruster controller 124 determines whether the overlap error (amount of positional misalignment) between first thruster device 110 and opening 8a of delivery box 8 is within a predetermined range (S46).

If the overlap error between first thruster device 110 and opening 8a of delivery box 8 is not within predetermined range (NO in S46), thruster controller 124 returns the process to step S45 and corrects the position of the package relative to opening 8a of delivery box 8.

If the overlap error between first thruster device 110 and opening 8a of delivery box 8 is within predetermined range (YES in S46), thruster controller 124 disconnects the package from first thruster device 110 (S47). With this, first thruster device 110 stores the package in delivery box 8. In this way, first thruster device 110 stores the package in delivery box 8 by descending to cover opening 8a of delivery box 8.

Next, after storing the package in delivery box 8 and after disconnecting the package, first thruster device 110 ascends and is attached to vehicle main body 20 of unmanned aerial vehicle 10. More specifically, thruster controller 124 reels wire 51 in by rotating reel 118 of wire control module 125 so as to raise first thruster device 110 and attach it to unmanned aerial vehicle 10 (S48). First thruster device 110 is then attached to unmanned aerial vehicle 10 and lifting system 5 returns to the sender.

### <Positional Correction>

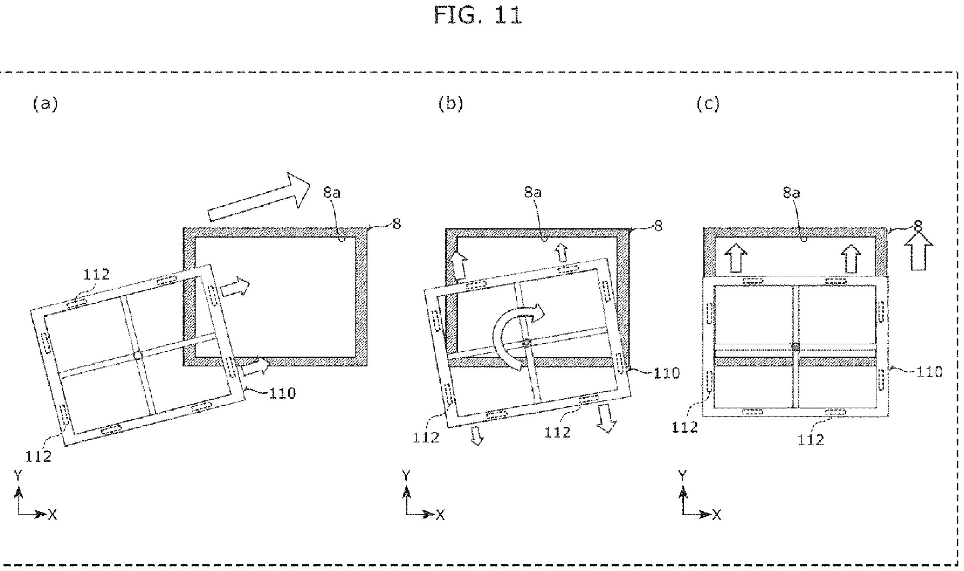

FIG. 11 is a top view of an example of first thruster device 110 of flying system 1 and delivery box 8 according to Embodiment 1.

FIG. 11 illustrates an example of first thruster device 110 and delivery box 8 as viewed from above, and illustrates the correction of the position of the package by first thruster device 110. Since first thruster device 110 is coupled to unmanned aerial vehicle 10 via wire 51, for example, first thruster controller 124 serving as the thruster controller controls the attitudes of the plurality of second propeller actuation motors 112 via one or more actuators 126 so that axes J1 of rotary shafts 112a in FIG. 7 are parallel to the horizontal plane, for example.

For example, when first thruster device 110 moves in a horizontal plane, first thruster controller 124 controls the attitudes of the plurality of second propeller actuation motors 112 so as to make axes J1 of rotary shafts 112a of the plurality of second propeller actuation motors 112 parallel to the horizontal plane, as illustrated in FIG. 3 and in (a) and (b) in FIG. 7 and FIG. 11. First thruster controller 124 actuates one or more second propeller actuation motors 112 arranged on the side in the opposite direction of the desired direction of travel. This allows first thruster device 110 to proceed in the desired direction.

Since first thruster device 110 is coupled unmanned aerial vehicle 10 via wire 51, first thruster controller 124 controls the attitudes of the plurality of second propeller actuation motors 112 via one or more actuators 126 so as to incline axes J1 of rotary shafts 112a relative to the horizontal plane, for example. For example, when it is desired for first thruster device 110 to ascend or hover, first thruster controller 124 controls the attitudes of the plurality of second propeller actuation motors 112 so as into include axes J1 of rotary shafts 112a of the plurality of second propeller actuation motors 112 relative to the horizontal plane, as illustrated in FIG. 3 and (c) and (d) in FIG. 7. First thruster controller 124 actuates one or more of the second propeller actuation motors 112. This allows first thruster device 110 to ascend or hover.

In FIG. 3 and (a) in FIG. 11, opening 8a of delivery box 8 and first thruster device 110 partially overlap, but since it is not possible to store a package in delivery box 8 in this state, first thruster controller 124 respectively controls the plurality of second propeller actuation motors 112 to move first thruster device 110 in the XY direction, which is a composite of the X-axis direction and the Y-axis direction. For example, first thruster controller 124 moves unmanned aerial vehicle 10 in the XY direction by controlling each of the two second propeller actuation motors 112 arranged on the second side portion on the left side (the X-axis negative side in the direction opposite to the arrow) to achieve the state illustrated in (b) in FIG. 11.

In FIG. 3 and (b) in FIG. 11, opening 8a of delivery box 8 and first thruster device 110 partially overlap, but opening 8a of delivery box 8 and the package are misaligned. First thruster controller 124 rotates first thruster device 110 by a predetermined roll angle in the XY plane by respectively controlling the plurality of second propeller actuation motors 112. For example, first thruster controller 124 controls second propeller actuation motor 112 on the right side (X-axis positive side in the direction of the arrow) of the first side portion in the rear (Y-axis negative side in the direction opposite the arrow), and controls second propeller actuation motor 112 on the left side of the first side portion in the front (Y-axis positive side in the direction of the arrow) to cause first thruster device 110 to rotate and move in the XY plane to achieve the state illustrated in (c) in FIG. 11.

In FIG. 3 and (c) in FIG. 11, opening 8a of delivery box 8 and first thruster device 110 partially overlap, but opening 8a of delivery box 8 and the package are still misaligned. First thruster controller 124 moves first thruster device 110 in the Y-axis direction by respectively controlling the plurality of second propeller actuation motors 112. For example, first thruster controller 124 moves unmanned aerial vehicle 10 in the Y-axis direction by respectively controlling the two second propeller actuation motors 112 on the first side portion in the front so as to align opening 8a of delivery box 8 with first thruster device 110 so that the package can fit into opening 8a of delivery box 8.

In this way, when a package is to be stored in delivery box 8, first thruster device 110 can be positioned with respect to opening 8a of delivery box 8 so that the package fits into opening 8a of delivery box 8 when viewed from the vertical direction. With this, first thruster device 110 can store the package in delivery box 8.

### <Delivery to Housing Complex Facility>

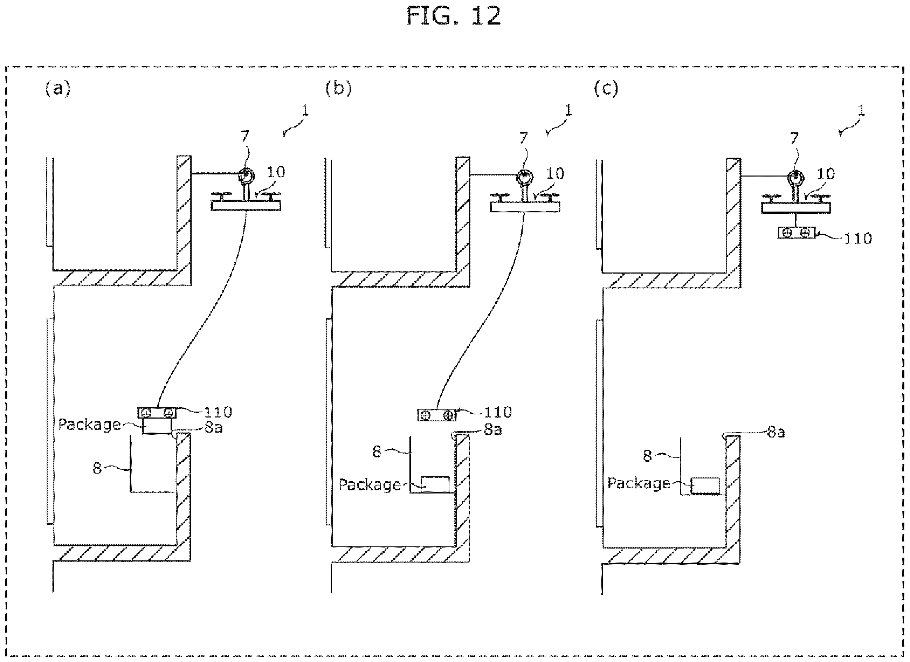

FIG. 12 is a schematic diagram illustrating an example of first thruster device 110 of unmanned aerial vehicle 10 of flying system 1 according to Embodiment 1 delivering a package to a housing complex facility.

As illustrated in FIG. 3 and FIG. 12, when delivery box 8 is not directly vertically below rail 7, first thruster controller 124 recognizes delivery box 8 based on the image information obtained from camera sensor 127, and controls the plurality of second propeller actuation motors 112 of first thruster device 110 to store the package in delivery box 8.

More specifically, in FIG. 3 and (a) in FIG. 12, first thruster controller 124 controls wire control module 125 so as to start reeling out wire 51, calculates delivery box 8 based on the image information, and controls the plurality of second propeller actuation motors 112. With this, first thruster device 110 moves toward delivery box 8. First thruster device 110 then moves to a position vertically above opening 8a of delivery box 8.

In FIG. 3 and (b) in FIG. 12, first thruster controller 124 causes first thruster device 110 to store the package in delivery box 8. More specifically, first thruster device 110 descends toward opening 8a of delivery box 8 and stores the package in delivery box 8.

As illustrated in FIG. 3 and (c) in FIG. 12, first thruster device 110 ascends and is attached to vehicle main body 20 after storing the package in delivery box 8 and disconnecting the package. Unmanned aerial vehicle 10 then returns to the sender.

### Advantageous Effects

Next, the advantageous effects achieved by lifting system 5 according to the present embodiment will be described.

As described above, in lifting system 5 according to the present embodiment, unmanned aerial vehicle 10 further includes first thruster device 110 that is attachable to and detachable from a package, and first thruster device 110 includes a plurality of propellers 113, a plurality of second propeller actuation motors 112 the respectively rotate the plurality of propellers 113, and support member 111 that supports the plurality of second propeller actuation motors 112.

With this, even if unmanned aerial vehicle 10 is misaligned relative to a position directly above delivery box 8, first thruster device 110 can guide the package to delivery box 8. As a result, since unmanned aerial vehicle 10 can reliably descend and store a package in delivery box 8, packages can be more reliably delivered to the receiver. Even in a situation in which opening 8a of delivery box 8 is narrow and it is difficult to insert a package, unmanned aerial vehicle 10 can reliably insert the package into delivery box 8. This eliminates the need for a large area to land unmanned aerial vehicle 10.

In particular, with this lifting system 5, even if unmanned aerial vehicle 10 moves away from a position directly above delivery box 8 due to wind or the like, first thruster device 110 store the package in delivery box 8.

In lifting system 5 according to the present embodiment, the plurality of propellers 113 include first propeller 113a disposed on a first side portion of support member 111 and second propeller 113b disposed on a second side portion different than the first side portion of support member 111.

With this, the position and orientation of first thruster device 110 relative to delivery box 8 can be adjusted. Therefore, with this unmanned aerial vehicle 10, first thruster device 110 can more reliably store the package in delivery box 8.

In lifting system 5 according to the present embodiment, first thruster controller 124 controls first thruster device 110 to actuate at least one of the plurality of second propeller actuation motors 112 during at least part of a period of time during which wire 51 reeled out.

With this, when lowering a package from unmanned aerial vehicle 10, the position and orientation of first thruster device 110 relative to delivery box 8 can be adjusted. Therefore, with this unmanned aerial vehicle 10, the package can be smoothly stored in delivery box 8.

Lifting system 5 according to the present embodiment includes: support member 111 to and from which a package is attachable and detachable; wire 51 capable of hanging support member 111 by one end of wire 51 being connected to support member 111 and the other end of wire 51 being connected to an object positioned spaced apart from the ground surface; a plurality of second propeller actuation motors 112 disposed on a side portion of support member 111; a plurality of propellers 113 actuated by the plurality of second propeller actuation motors 112; and first thruster controller 124 that controls the plurality of second propeller actuation motors 112. An angle θ of each of rotary shafts 112a of the plurality of second propeller actuation motors 112 relative to virtual surface V1 passing through a center of each of the plurality of propellers 113 is at least -45 degrees and at most +45 degrees.

With this, by controlling the angle θ of rotary shafts 112a of the plurality of second propeller actuation motors 112 relative to virtual surface V1, when the package is to be placed at a predetermined position, the package can be positioned relative to the predetermined position. It is possible to finely adjust the position of first thruster device 110 relative to the predetermined position by causing first thruster device 110 to travel in the desired direction.

In lifting system 5 according to the present embodiment, first thruster device 110 includes: support member 111 including at least one first adapter; a plurality of second propeller actuation motors 112 disposed on a plurality of side surfaces of support member 111; and a plurality of propellers 113 actuated by the plurality of second propeller actuation motors 112. The angle of each of rotary shafts 112a of the plurality of second propeller actuation motors 112 relative to a virtual surface passing through a center of each of the plurality of propellers 113 is at least -45 degrees and at most +45 degrees.

With this, by controlling the angle of rotary shafts 112a of the plurality of second propeller actuation motors 112 relative to the virtual surface, when the package is to be placed at a predetermined position, the package can be positioned relative to the predetermined position.

When first thruster device 110 descends while support member 111 is hanging from the object via wire 51, it is possible to finely adjust the position of first thruster device 110 so that the package aligns with the predetermined position when viewed from the vertical direction.

Accordingly, with this first thruster device 110, the package can be placed in the predetermined position. In particular, when first thruster device 110 is used outdoors, even if first thruster device 110 is misaligned with the predetermined position due to wind or the like, first thruster device 110 can move toward the predetermined position to compensate for the misalignment so that package can be placed at the predetermined position.

In lifting system 5 according to the present embodiment, the angle θ is at least -30 degrees and at most +30 degrees.

Since this inhibits an increase in the amount of thrust first thruster device 110 produces for hovering, for example, it is possible to inhibit wire 51 from becoming slack due first thruster device 110 suddenly rising.

Lifting system 5 according to the present embodiment further includes one or more actuators 126 that adjust the angle θ of rotary shafts 112a of the plurality of second propeller actuation motors 112 relative to virtual surface V1.

This makes it possible to adjust the attitudes of the plurality of second propeller actuation motors 112 relative to support member 111. Accordingly, this allows first thruster device 110 to move horizontally and vertically. This allows for more accurate positioning of the package to align with the predetermined position.

In lifting system 5 according to the present embodiment, first thruster controller 124 adjusts the angle θ of the one or more rotary shafts 112a relative to virtual surface V1 by controlling the one or more actuators 126, and includes a first mode that inclines the one or more rotary shafts 112a so that the angle θ is 0 degrees, and a second mode that inclines the one or more rotary shafts 112a so that the angle θ is an elevation angle.

With this, the attitude of one or more of rotary shafts 112a of the plurality of second propeller actuation motors 112 can be individually controlled. The position of first thruster device 110 can be finely adjusted more precisely because the attitude, traveling direction, and the like of first thruster device 110 can be finely controlled so that first thruster device 110 moves to the predetermined position.

In lifting system 5 according to the present embodiment, wire 51 includes main wire 51a and a plurality of sub-wires 51b. One ends of the plurality of sub-wires 51b are directly connected to a plurality of connection points P of support member 111. Other ends of plurality of sub-wires 51b are connected to one end of main wire 51a at a single common connection point P. Main wire 51a hangs and supports support member 111 from an object via the plurality of sub-wires 51b.

This makes it possible to connect the plurality of sub-wires 51b to support member 111 in one-to-one correspondence via the plurality of connection points P. Therefore, the attitude of support member 111 while it is hanging by wire 51 can be stabilized.

In lifting system 5 according to the present embodiment, support member 111 includes a polygonal frame arranged around the package. The plurality of connection points P are arranged at a plurality of portions of the frame corresponding to the plurality of vertices.

With this, the attitude of support member 111 while it is hanging by wire 51 can be more reliably stabilized.

### VARIATION 1 OF EMBODIMENT 1

Hereinafter, since the basic configuration of first thruster device 110a according to the present variation is the same as the basic configuration of the first thruster device according to Embodiment 1 and the like, repeated description of the basic configuration of first thruster device 110a in the present variation will be omitted where appropriate. The present variation differs from Embodiment 1 and the like in that connection point P moves (shifts).

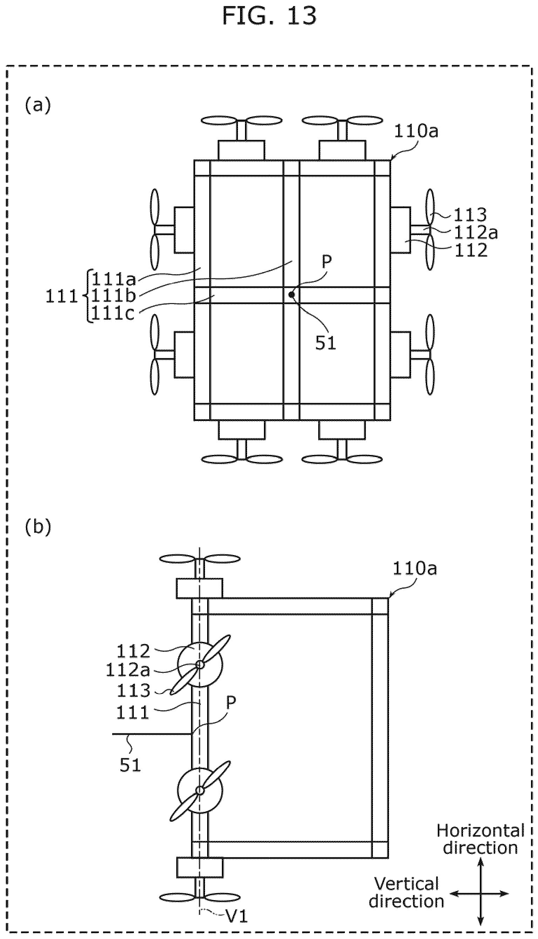

FIG. 13 is a schematic diagram illustrating an example of first thruster device 110a according to Variation 1 of Embodiment 1. In FIG. 13, (a) is a plan view of first thruster device 110a when viewed from vertically above illustrating support member 111 and wire 51 and the like, and (b) is a side view of first thruster device 110a illustrating support member 111 and wire 51 and the like. The arrows indicating the horizontal and vertical directions in FIG. 13 correspond to (b) in FIG. 13.

In the present variation, connection point P is arranged in the center of support member 111. More specifically, when virtual surface V1 is parallel to the horizontal plane, connection point P is located at the center of the vertical upper surface of the support member 111.

Support member 111 includes outer frame 111a, vertical crosspiece 111b, and horizontal crosspiece 111c.

Outer frame 111a forms the outer contour of support member 111 and holds the package at a predetermined attitude. Outer frame 111a has a polygonal shape that is arranged around the package. Vertical crosspiece 111b and horizontal crosspiece 111c are disposed inside outer frame 111a in a lattice pattern and are disposed on the vertical upper side of support member 111 when virtual surface V1 is parallel to the horizontal plane. When outer frame 111a is viewed vertically, vertical crosspiece 111b and horizontal crosspiece 111c intersect at the center of outer frame 111a. This connection point P is located at the intersection of vertical crosspiece 111b and horizontal crosspiece 111c. Outer frame 111a is one example of a first frame.

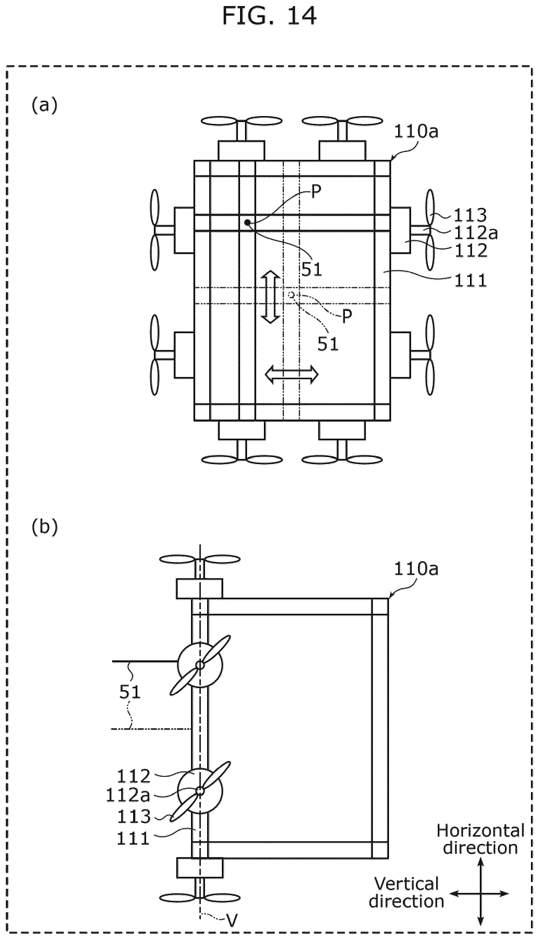

FIG. 14 is a schematic diagram illustrating an example of the sliding of vertical crosspiece 111b and horizontal crosspiece 111c included first thruster device 110a according to Variation 1 of Embodiment 1. The arrows indicating the horizontal and vertical directions in FIG. 14 correspond to (b) in FIG. 14.

Vertical crosspiece 111b and horizontal crosspiece 111c can slide within outer frame 111a. The position of the intersection of vertical crosspiece 111b and horizontal crosspiece 111c shifts inside outer frame 111a. More specifically, vertical crosspiece 111b can slide in a direction orthogonal to the lengthwise direction of horizontal crosspiece 111c. Stated differently, horizontal crosspiece 111c can slide in a direction orthogonal to the lengthwise direction of vertical crosspiece 111b. By vertical crosspiece 111b and horizontal crosspiece 111c sliding within outer frame 111a, the one connection point P is movable in a plane parallel to virtual surface V1. A plane parallel to virtual surface V1 is a region in which vertical crosspiece 111b and horizontal crosspiece 111c can slide inside of outer frame 111a.

In the lifting system according to the present variation, wire 51 is directly connected to at least one connection point P of support member 111.

This makes it possible to hang support member 111 via wire 51 with only one connection point P on support member 111. Accordingly, the configuration of wire 51 can be simplified.

In the lifting system according to the present variation, support member 111 includes a polygonal frame arranged around the package. One connection point P is movable in a plane that is within the frame and parallel to virtual surface V1.

This makes it possible to change the position of the one connection point P relative to support member 111. Accordingly, for example, even if the center of gravity of support member 111 that is holding a package is displaced from the center, the position of connection point P can be changed so as to align the position of connection point P with the center of gravity. Therefore, the attitude of support member 111 hanging from wire 51 can be corrected to a desired attitude.

### VARIATION 2 OF EMBODIMENT 1

Hereinafter, since the basic configuration of first thruster device 110a according to the present variation is the same as the basic configuration according to Variation 1 of Embodiment 1 and the like, repeated description of the basic configuration of first thruster device 110a in the present variation will be omitted where appropriate. The present variation differs from Variation 1 of Embodiment 1 and the like in that some of the plurality of second propeller actuation motors 112 of first thruster device 110a rotate clockwise and others rotate counterclockwise.

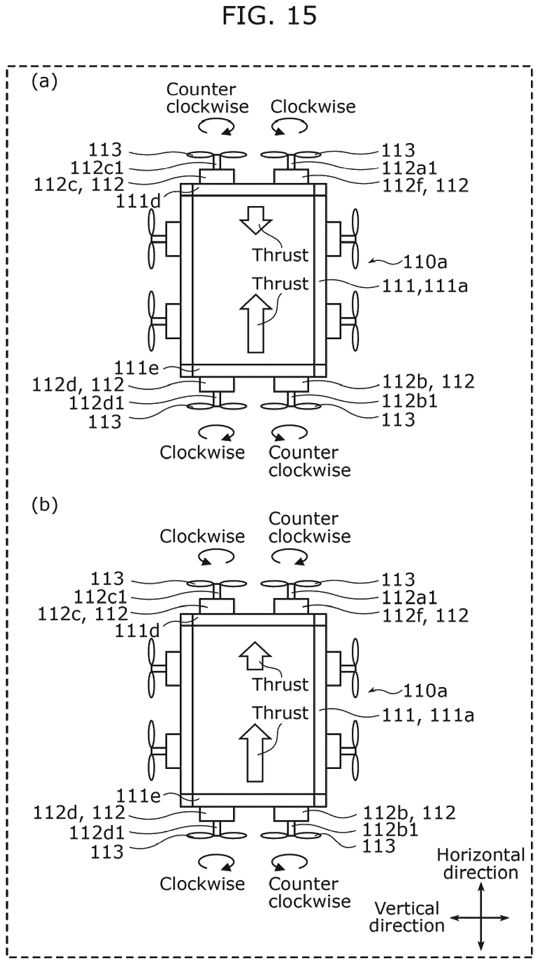

FIG. 15 is a schematic diagram illustrating an example of the directions of rotation of propellers 113 in the plurality of second propeller actuation motors 112 included in first thruster device 110a according to Variation 2 of Embodiment 1.

As illustrated in FIG. 15, the side portions of support member 111 include first side portion 111d and second side portion 111e on opposite sides of support member 111 and/or the package. First side portion 111d and second side portion 111e constitute a part of outer frame 111a. In the present variation, since outer frame 111a of support member 111 is rectangular, first side portion 111d is a piece of outer frame 111a, and second side portion 111e is a piece on the other side relative to first side portion 111d. First side portion 111d includes the first side surface, second side portion 111e includes the second side surface, and the first side surface and the second side surface are arranged opposing one another. One of the two side portions on both of first side portion 111d and second side portion 111e includes a third side surface, and the other includes a fourth side surface, and the third side surface and the fourth side surface are arranged opposing one another.

Second propeller actuation motor 112f, which is one of the plurality of second propeller actuation motors 112, is provided on first side portion 111d and includes first rotary shaft 112a1 (one example of a rotary shaft). Second propeller actuation motor 112f is one example of a first motor. Second propeller actuation motor 112b, which is one of the plurality of second propeller actuation motors 112, is provided on second side portion 111e and includes second rotary shaft 112b1 (one example of a rotary shaft). Second propeller actuation motor 112b is one example of a second motor. Second propeller actuation motor 112c, which is one of the plurality of second propeller actuation motors 112, is provided on first side portion 111d in a position adjacent to second propeller actuation motor 112f in a virtual surface. Second propeller actuation motor 112c is one example of a third motor. Second propeller actuation motor 112c includes third rotary shaft 112c1 (one example of a rotary shaft). Second propeller actuation motor 112d, which is one of the plurality of second propeller actuation motors 112, is provided on second side portion 111e in a position adjacent to second propeller actuation motor 112b in a virtual surface. Second propeller actuation motor 112d is one example of a fourth motor. Second propeller actuation motor 112d includes fourth rotary shaft 112d1 (one example of a rotary shaft).

In the present variation, second propeller actuation motor 112f and second propeller actuation motor 112c are arranged along the lengthwise direction of first side portion 111d, and second propeller actuation motor 112b and second propeller actuation motor 112d are arranged along the lengthwise direction of second side portion 111e.

Thruster controller 124 includes a third mode and a fourth mode.

In the third mode, thruster controller 124 rotates first rotary shaft 112a1 in a first direction of rotation and rotates second rotary shaft 112b1 in a second direction of rotation opposite the first direction of rotation. For example, thruster controller 124 rotates axis J1 of first rotary shaft 112a1 of second propeller actuation motor 112f on first side portion 111d clockwise and rotates axis J1 of first rotary shaft 112a1 of second propeller actuation motor 112f on second side portion 111e counterclockwise. Clockwise direction is relative to when facing the front of the propeller.

In the third mode, thruster controller 124 rotates third rotary shaft 112c1 in the second direction of rotation and rotates fourth rotary shaft 112d1 in the first direction of rotation. For example, thruster controller 124 rotates axis J1 of third rotary shaft 112c1 of second propeller actuation motor 112c on first side portion 111d counterclockwise and rotates axis J1 of fourth rotary shaft 112d1 of second propeller actuation motor 112d on second side portion 111e clockwise.

In the fourth mode, thruster controller 124 rotates first rotary shaft 112a1 and second rotary shaft 112b1 in the second direction of rotation. For example, thruster controller 124 rotates axis J1 of first rotary shaft 112a1 of second propeller actuation motor 112f on first side portion 111d counterclockwise and also rotates axis J1 of first rotary shaft 112a1 of second propeller actuation motor 112f on second side portion 111e counterclockwise.

In the fourth mode, thruster controller 124 rotates third rotary shaft 112c1 and fourth rotary shaft 112d1 in the first direction of rotation. For example, thruster controller 124 rotates axis J1 of third rotary shaft 112c1 of second propeller actuation motor 112c on first side portion 111d clockwise and also rotates axis J1 of fourth rotary shaft 112d1 of second propeller actuation motor 112d on second side portion 111e clockwise.

In the present variation, as illustrated in (a) in FIG. 15, first rotary shaft 112a1 of one second propeller actuation motor 112f on first side portion 111d is rotated clockwise and third rotary shaft 112c1 of the other second propeller actuation motor 112c on first side portion 111d is rotated counterclockwise. Second rotary shaft 112b1 of one second propeller actuation motor 112b on second side portion 111e is rotated counterclockwise, and fourth rotary shaft 112d1 of the other second propeller actuation motor 112d on second side portion 111e is rotated clockwise. In this case, the direction of the thrust would be as shown by the solid arrows in (a) in FIG. 15. In this case, on the first side portion 111d side, a small thrust force is generated in the direction from first side portion 111d toward second side portion 111e, and on the second side portion 111e side, a large thrust force is generated in the direction from second side portion 111e toward first side portion 111d. This causes first thruster device 110a to slowly move in the direction from second side portion 111e toward first side portion 111d.

In the present variation, as illustrated in (b) in FIG. 15, first rotary shaft 112a1 of one second propeller actuation motor 112f on first side portion 111d is rotated counterclockwise and third rotary shaft 112c1 of the other second propeller actuation motor 112c on first side portion 111d is rotated clockwise. Second rotary shaft 112b1 of one second propeller actuation motor 112b on second side portion 111e is rotated counterclockwise, and fourth rotary shaft 112d1 of the other second propeller actuation motor 112d on second side portion 111e is rotated clockwise. In this case, the direction of the thrust would be as shown by the solid arrows in (a) in FIG. 15. In this case, on the first side portion 111d side, a small thrust force is generated in the direction opposite to the second side portion 111e side, and on the second side portion 111e side, a large thrust force is generated in the direction from second side portion 111e toward first side portion 111d. This causes first thruster device 110a to move in the direction from second side portion 111e toward first side portion 111d.

In this way, in the lifting system according to present variation, the side portions of support member 111 include first side portion 111d and second side portion 111e on opposite sides of support member 111 and/or the package. The plurality of second propeller actuation motors 112 include second propeller actuation motor 112f that is provided on first side portion 111d and includes first rotary shaft 112a1, and second propeller actuation motor 112b that is provided on second side portion 111e and includes second rotary shaft 112b1. Thruster controller 124 includes a third mode in which first rotary shaft 112a1 is rotated in a first direction of rotation and second rotary shaft 112b1 is rotated in a second direction of rotation opposite to the first direction of rotation, and a fourth mode in which first rotary shaft 112a1 and second rotary shaft 112b1 are rotated in the second direction of rotation.

With this, by making the direction of rotation of first rotary shaft 112a1 of second propeller actuation motor 112f and the direction of rotation of second rotary shaft 112b1 of second propeller actuation motor 112b opposite directions, first thruster device 110a can produce a thrust that causes it to travel in a desired direction. This allows first thruster device 110a to finely adjust its position relative to a predetermined position accurately.

In the lifting system according to the present variation, the plurality of side surfaces include a first side surface and a second side surface that oppose each other in the first direction in an attached state in which first thruster device 110a is attached to unmanned aerial vehicle 10, and a third side surface and a fourth side surface that oppose each other in the second direction in the attached state. The plurality of second propeller actuation motors 112 include a first motor disposed on the first side surface, a second motor disposed on the second side surface, a third motor disposed on the third side surface, and a fourth motor disposed on the fourth side surface. The plurality of propellers include a first propeller rotated by the first motor, a second propeller rotated by the second motor, a third propeller rotated by the third motor, and a fourth propeller rotated by the fourth motor.

With this, first thruster device 110a can be made to travel in a desired direction by actuating the first motor, the second motor, the third motor, and the fourth motor. This allows first thruster device 110a to finely adjust its position relative to a predetermined position accurately.

In the lifting system according to the present variation, the plurality of second propeller actuation motors 112 further include second propeller actuation motor 112c that is provided on first side portion 111d at a position adjacent to second propeller actuation motor 112f in a virtual surface and includes third rotary shaft 112c1, and second propeller actuation motor 112d that is provided on second side portion 111e at a position adjacent to second propeller actuation motor 112b in the virtual surface and includes fourth rotary shaft 112d1. In the third mode, a plurality of second propeller actuation motors 112 rotate third rotary shaft 112c1 in the second direction of rotation and rotate fourth rotary shaft 112d1 in the first direction of rotation. In the fourth mode, a plurality of second propeller actuation motors 112 rotate third rotary shaft 112c1 and fourth rotary shaft 112d1 in the first direction of rotation.

Accordingly, by making the direction of rotation of third rotary shaft 112c1 of second propeller actuation motor 112c and the direction of rotation of fourth rotary shaft 112d1 of second propeller actuation motor 112d opposite directions, first thruster device 110a can produce a thrust that causes it to travel in a desired direction. Since the directions of rotation of first rotary shaft 112a1 of second propeller actuation motor 112f and second rotary shaft 112b1 of second propeller actuation motor 112b can be controlled, first thruster device 110a can finely adjust its position relative to a predetermined position accurately.

### VARIATION 3 OF EMBODIMENT 1

Hereinafter, since the basic configuration of lifting system 5 according to the present variation is the same as the basic configuration of the lifting system according to Embodiment 1 and the like, repeated description of the basic configuration of lifting system 5 in the present variation will be omitted where appropriate. The present variation differs from Embodiment 1 and the like in that the lid of delivery box 8 automatically rotates.

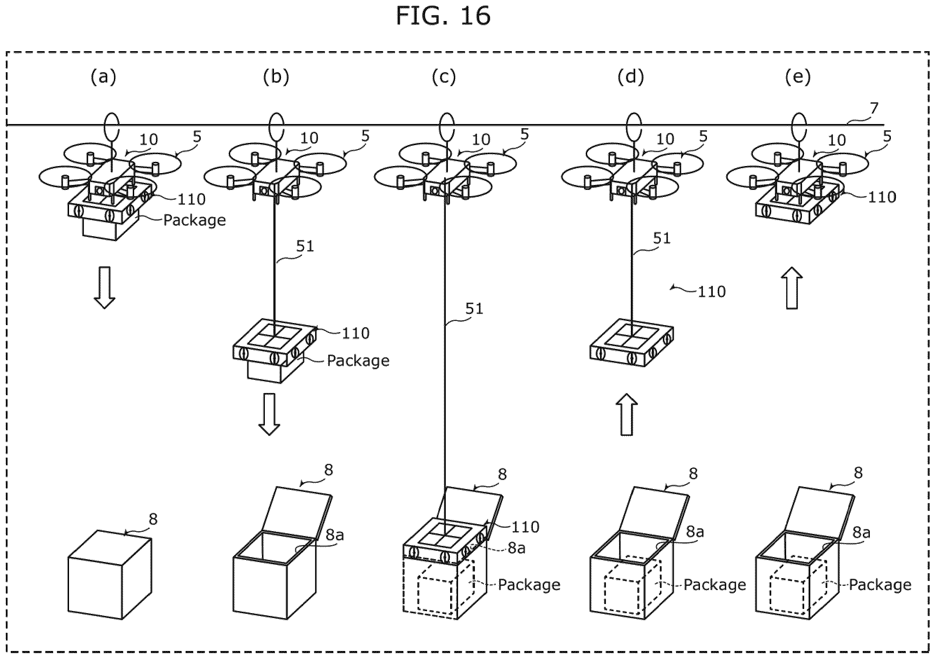

FIG. 16 is a schematic diagram illustrating an example of first thruster device 110 of flying system 1 according to Variation 3 of Embodiment 1 storing a package in delivery box 8.

FIG. 16 describes a procedure for storing a package in delivery box 8 using first thruster device 110.

As illustrated in (a) and (b) in FIG. 16, first, when unmanned aerial vehicle 10 arrives at rail 7 vertically above delivery box 8, which is the receiver, thruster controller 124 controls wire control module 12c to begin reeling wire 51 out. When wire control module 12c reels out wire 51 and the distance between the package and delivery box 8 reaches a predefined distance, delivery box 8 opens its lid to uncover opening 8a.

Next, when thruster controller 124 controls wire control module 12c to reel out wire 51, thruster controller 124 measures the positions of the package and delivery box 8, and calculates an error in the position of the package relative to delivery box 8. If the error is greater than or equal to a predefined value, thruster controller 124 corrects the position of the package relative to opening 8a of delivery box 8 by controlling each of the plurality of propeller actuation motors of first thruster device 110.

As illustrated in (c) in FIG. 16, thruster controller 124 positions first thruster device 110 relative to opening 8a of delivery box 8 by repeatedly correcting the error between first thruster device 110 and opening 8a of delivery box 8 to align opening 8a of delivery box 8 and first thruster device 110. First thruster controller 124 causes first thruster device 110 to store the package in delivery box 8. More specifically, first thruster device 110 descends so as to cover opening 8a of delivery box 8 and stores the package in delivery box 8.

As illustrated in (d) and (e) in FIG. 16, first thruster device 110 ascends and is attached to the main body of unmanned aerial vehicle 10 after storing the package in delivery box 8 and disconnecting the package. Unmanned aerial vehicle 10 then returns to the sender.

### VARIATION 4 OF EMBODIMENT 1

### Configuration

Hereinafter, since the basic configuration of lifting system 5 according to the present variation is the same as the basic configuration of the lifting system according to Embodiment 1 and the like, repeated description of the basic configuration of lifting system 5 in the present variation will be omitted where appropriate. The present variation differs from Embodiment 1 and the like in that first thruster device 110b includes gripping portion 117 that grips the package.

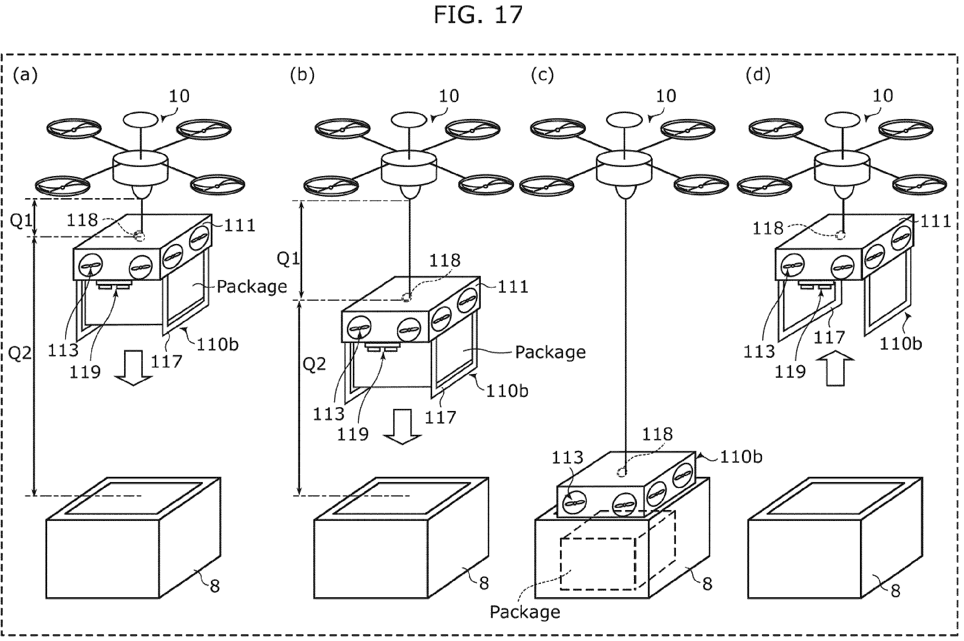

FIG. 17 is a schematic diagram illustrating an example of first thruster device 110b according to Variation 4 of Embodiment 1 storing a package in delivery box 8 in another manner.

As illustrated in FIG. 17, in the present embodiment, first thruster device 110b is coupled via wire 51 to unmanned aerial vehicle 10 (the drone described above) serving as a parent vehicle. Although FIG. 17 depicts unmanned aerial vehicle 10 as one non-limiting example, wire 51 may be connected to, for example, the rail described above instead.

First thruster device 110b further includes sensor 119 in addition to support member 111, wire 51, the plurality of second propeller actuation motors 112, the plurality of propellers 113, reel 118, thruster controller 124, wire control module 125, and the one or more actuators 126.

Support member 111 includes gripping portion 117 that holds a package. Gripping portion 117 extends vertically downwardly from support member 111 and can support the package in a predetermined attitude by holding the package that is below support member 111 on both sides. For example, gripping portion 117 can be actuated by thruster controller 124 so as to grasp a package and to release its grasp on the package. Note that it is sufficient so long as gripping portion 117 can load the package onto support member 111. Gripping portion 117 is one example of a first adapter.

Reel 118 is connected to the other end of wire 51 and can reel wire 51 in and out by rotating. The rotation of reel 118 is controlled by wire control module 125.

Wire control module 125 rotates reel 118 to reel wire 51 in and out. For example, wire control module 125 is actuated and controlled by thruster controller 124 to change the rotational speed at which reel 118 is rotated.

Sensor 119 detects the position of delivery box 8 for storing a package when reel 118 is positioned vertically above delivery box 8. Sensor 119 is provided on support member 111 and is capable of detecting a package and delivery box 8 from above. For example, when sensor 119 is an image capturing device, it captures an image of the package and delivery box 8 and outputs image information, which is the captured image, to thruster controller 124. The image information includes, for example, information indicating the relative position (distance) between the package and delivery box 8, the relative position (distance) between delivery box 8 and reel 118, the distance from delivery box 8 to support member 111, and the distance from the package to delivery box 8. Examples of sensor 119 include a time-of-flight (TOF) camera and a range finding sensor or the like. Sensor 119 may transmit the image information to the control processor.

Based on the image information, thruster controller 124 determines whether or not reel 118 is positioned vertically above delivery box 8 for storing a package. When first thruster device 110b is positioned vertically above delivery box 8 for storing a package, thruster controller 124 starts actuating the plurality of second propeller actuation motors 112 after the length of the portion of wire 51 that has been reeled out exceeds a predetermined length. The predetermined length is equivalent to half the distance from delivery box 8 to reel 118.

Thruster controller 124 reels wire 51 out by rotating reel 118 via wire control module 125 to lower first thruster device 110b from unmanned aerial vehicle 10. This stores the package carried by first thruster device 110b in delivery box 8. When the package is unloaded into delivery box 8, thruster controller 124 reels in wire 51 by rotating reel 118 via wire control module 125 to raise first thruster device 110b and bring it closer to unmanned aerial vehicle 10.

### Operations

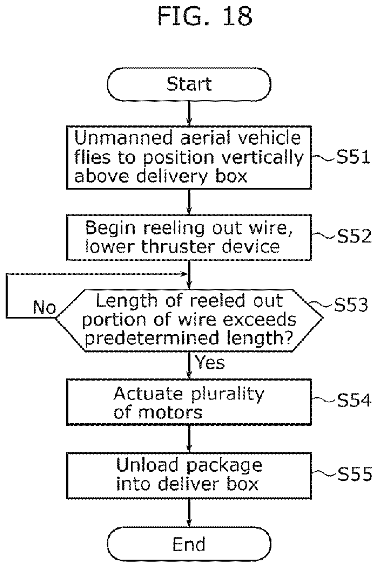

FIG. 18 is a flowchart illustrating an example of operations performed by first thruster device 110b to store a package in delivery box 8 according to Variation 4 of Embodiment 1. FIG. 17 and FIG. 18 assume that unmanned aerial vehicle 10 has arrived at a position vertically above delivery box 8.

As illustrated in (a) in FIG. 17 and in FIG. 18, first, unmanned aerial vehicle 10 flies to and arrives at a position vertically above delivery box 8, which is the receiver of the package (S51).

Next, as illustrated in (a) and (b) in FIG. 17 and in FIG. 18, thruster controller 124 controls wire control module 125 to rotate reel 118 and begin reeling out wire 51. With this, first thruster device 110b starts descending (S52).

Next, thruster controller 124 reels out wire 51 by controlling wire control module 125, and determines whether the length of the portion of wire 51 reeled out exceeds a predetermined length (Q1 > Q2 / 2) (S53).

If the length of the portion of wire 51 that has been reeled out does not exceed the predetermined length (NO in S53), thruster controller 124 returns the process to step S53.

If the length of the portion of wire 51 that has been reeled out exceeds predetermined length (YES in S53), thruster controller 124 actuates the plurality of second propeller actuation motors 112 (S54). As a result, the position of first thruster device 110b above delivery box 8 relative to delivery box 8 is corrected, whereby the position of the package relative to opening 8a of delivery box 8 is corrected. Thruster controller 124 repeatedly corrects the overlap error between first thruster device 110b and opening 8a of delivery box 8 in the vertical direction to position first thruster device 110b relative to opening 8a of delivery box 8 and align opening 8a of delivery box 8 with first thruster device 110b, i.e., the package.

As illustrated in (c) in FIG. 17 and in FIG. 18, first thruster device 110b unloads the package into delivery box 8 (S55). More specifically, first thruster device 110b descends so as to cover opening 8a of delivery box 8 and stores the package in delivery box 8.

As illustrated in (d) in FIG. 17 and in FIG. 18, first thruster device 110b ascends and is attached to the main body of unmanned aerial vehicle 10 after storing the package in delivery box 8 and disconnecting the package. Unmanned aerial vehicle 10 then returns to the sender.

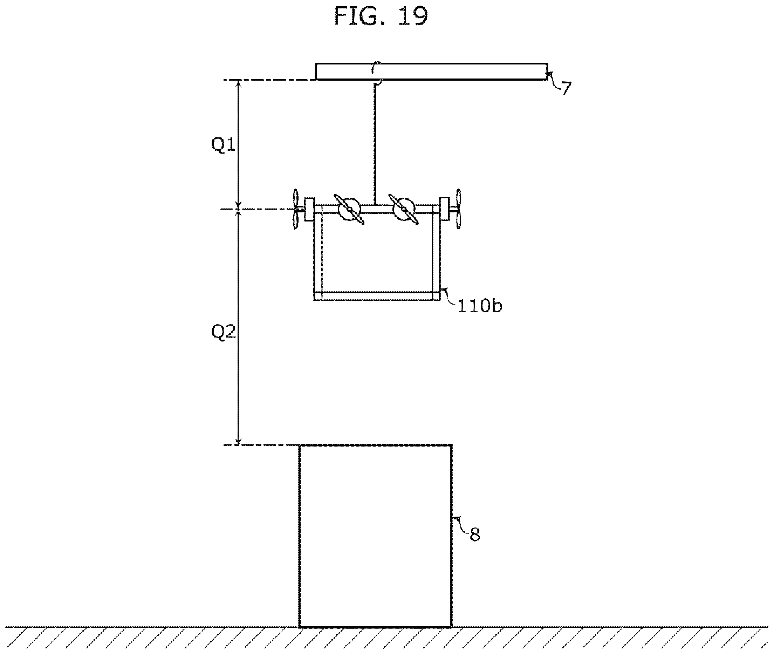

FIG. 19 illustrates an example in which the object to which first thruster device 110b affixes is a rail. FIG. 19 is a schematic diagram illustrating an example of first thruster device 110b according to Variation 4 of Embodiment 1 storing a package in delivery box 8 in another manner. In FIG. 19, the length of the portion of wire 51 that has been reeled out exceeds the predetermined length. FIG. 19 illustrates the relationship Q1 > Q2 / 2. Q1 indicates the distance from unmanned aerial vehicle 10 to delivery box 8, and Q2 indicates the distance from first thruster device 110b to delivery box 8. In this example as well, the processes and operations are the same as in FIG. 17 and FIG. 18.

### Advantageous Effects

Next, the advantageous effects achieved by first thruster device 110b according to the present embodiment will be described.

As described above, first thruster device 110b according to the present embodiment further includes reel 118 to which the other end of wire 51 is connected, and wire control module 125 that rotates reel 118 to reel out wire 51. When reel 118 is positioned vertically above delivery box 8 for storing a package, thruster controller 124 starts actuating the plurality of second propeller actuation motors 112 after the length of the portion of wire 51 that has been reeled out exceeds a predetermined length.

With this, since first thruster device 110b starts adjusting its position relative to the predetermined position when first thruster device 110b approaches delivery box 8, it easier for first thruster device 110b to align itself relative to the predetermined position.

First thruster device 110b according to the present embodiment further includes sensor 119 that detects the position of delivery box 8 for storing a package when reel 118 is positioned vertically above delivery box 8.

This enables the position of first thruster device 110b relative to delivery box 8 to be accurately detected, allowing for more accurate and finer adjustment of the position of first thruster device 110b relative to delivery box 8.

In first thruster device 110b according to the present embodiment, the predetermined length is equivalent to half the distance from delivery box 8 to reel 118.

With this, since first thruster device 110b starts adjusting its position relative to the predetermined position when first thruster device 110b is positioned near delivery box 8, it further easier for first thruster device 110b to align itself relative to the predetermined position.

### VARIATION 5 OF EMBODIMENT 1

### Configuration

Hereinafter, since the basic configuration of first thruster device 110c according to the present variation is the same as the basic configuration of the first thruster device according to Embodiment 1 and the like, repeated description of the basic configuration of first thruster device 110c in the present variation will be omitted where appropriate. The present variation differs from Embodiment 1 and the like in that protective member 129 that surrounds first thruster device 110c is provided.

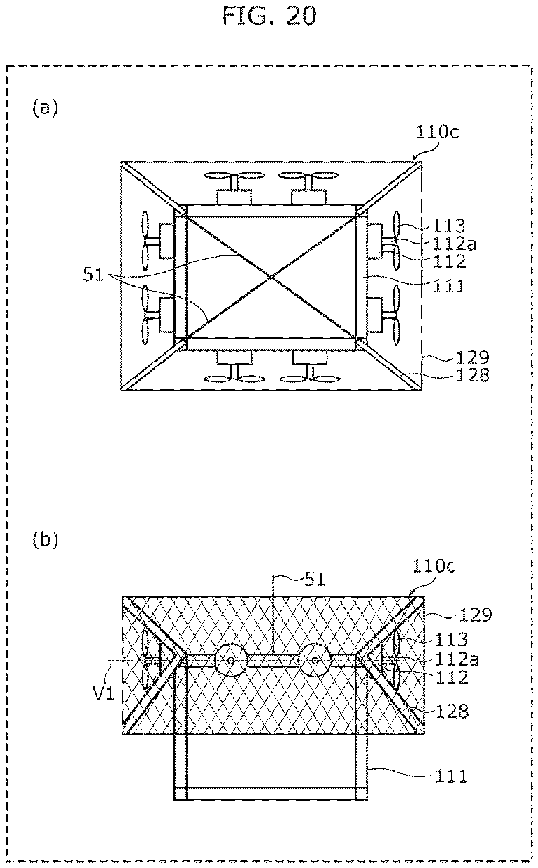

FIG. 20 is a schematic diagram illustrating an example of first thruster device 110c according to Variation 5 of Embodiment 1.

As illustrated in FIG. 20, first thruster device 110c further includes protective member 129 in addition to support member 111, wire 51, the plurality of second propeller actuation motors 112, the plurality of propellers 113, thruster controller 124 illustrated in FIG. 3, and the one or more actuators 126.

Protective member 129 is fixed to support member 111 so that it intersects virtual surface V1 and surrounds first thruster device 110c. More specifically, protective member 129 is arranged to surround at least the plurality of second propeller actuation motors 112, and covers the rotating propellers 113 when first thruster device 110c is viewed from the side. In other words, protective member 129 covers the plane of rotation of the plurality of propellers 113 when first thruster device 110c is viewed from the side.

Protective member 129 is polygonal in shape in plan view that corresponds to the shape of support member 111. Protective member 129 may be any sort of structure, but in consideration of air resistance and weight, etc., protective member 129 is preferably a netted structure. In the present variation, a protective net is used as protective member 129.

Protective member 129 is connected and fixed to support member 111 by coupling 128. More specifically, one end of coupling 128 is connected to a corner of support member 111, and the other end of coupling 128 is coupled to a corner of protective member 129. In the present variation, since both support member 111 and protective member 129 are rectangular in plan view, four couplings 128 connect and fix protective member 129 to support member 111. It is sufficient if support member 111 is capable of supporting protective member 129; the number of couplings 128 is not dependent on the number of corners of support member 111.

### Advantageous Effects

Next, the advantageous effects achieved by first thruster device 110c according to the present variation will be described.

As described above, first thruster device 110c according to the present variation further includes protective member 129 surrounding the plurality of propellers 113.

With this, since protective member 129 can protect the rotating propellers 113, propellers 113 can be prevented from coming into contact with other objects.

### EMBODIMENT 2

### Configuration

Hereinafter, since the basic configuration of lifting system 5b according to the present embodiment is the same as the basic configuration of the lifting system according to Embodiment 1 and the like, repeated description of the basic configuration of lifting system 5b in the present embodiment will be omitted where appropriate. The present embodiment differs from Embodiment 1 and the like in regard to the usage of two thruster devices, namely first thruster device 110 and second thruster device 130.

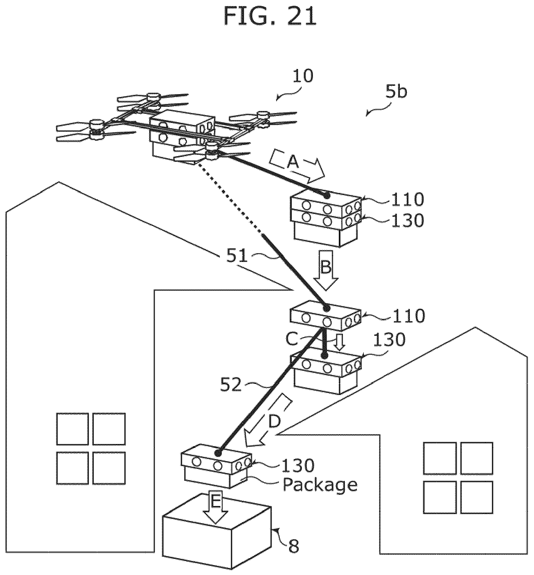

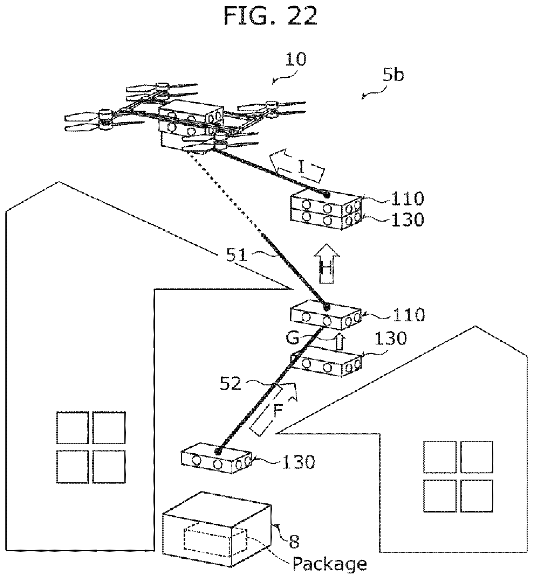

FIG. 21 illustrates an example of first thruster device 110 of lifting system 5b according to Embodiment 2 unloading a package. FIG. 22 illustrates an example of a scene after first thruster device 110 of lifting system 5b according to Embodiment 2 has unloaded the package. Depiction of the arm and the like of unmanned aerial vehicle 10 is omitted in FIG. 21 and FIG. 22.

FIG. 21 illustrates an example pertaining to lifting system 5b of a delivery environment in which delivery box 8 is located between two adjacent buildings and under the eaves of one of the buildings. In the example in FIG. 21, the eaves of the building may obstruct unmanned aerial vehicle 10, making it difficult for unmanned aerial vehicle 10 to move to a position over delivery box 8. In this lifting system 5b, two thruster devices, first thruster device 110 and second thruster device 130, are used to deliver a package to delivery box 8. In FIG. 22, after the package is delivered, first thruster device 110 and second thruster device 130 are retrieved.

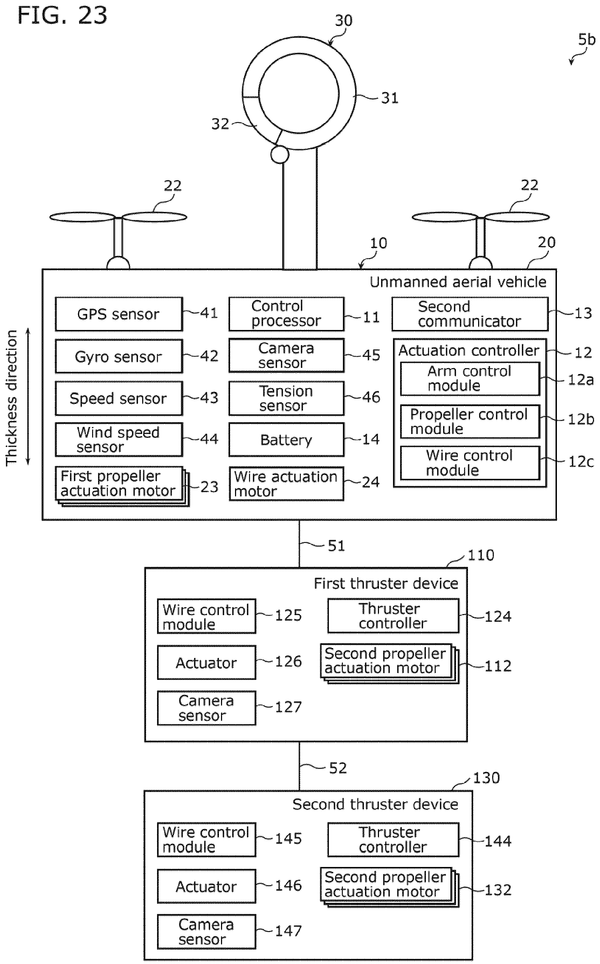

FIG. 23 is a block diagram illustrating an example of lifting system 5b according to Embodiment 2.

As illustrated in FIG. 23, lifting system 5b includes unmanned aerial vehicle 10, first thruster device 110, first wire 51 as the wire according to Embodiment 1, a first reel as the reel according to Embodiment 1, second thruster device 130, second wire 52, a second reel, and thruster controller 124.

Unmanned aerial vehicle 10 is, for example, a drone that serves as a parent vehicle, and is essentially the same as the drone described above.

First thruster device 110 is a first child vehicle of unmanned aerial vehicle 10 and is attachable to and detachable from unmanned aerial vehicle 10. First thruster device 110 includes a first support member, a plurality of second propeller actuation motors 112, and a plurality of first propellers as the plurality of propellers according to Embodiment 1. The first support member is attachable to and detachable from unmanned aerial vehicle 10. The plurality of second propeller actuation motors 112 are arranged on the side portion forming the outer periphery of the first support member. The plurality of first propellers correspond one-to-one with the rotary shafts of the plurality of second propeller actuation motors 112 and are actuated by the plurality of second propeller actuation motors 112. First thruster device 110 is essentially the same as the first thruster device described in Embodiment 1 and the like. The first support member and the first propeller have the same configurations as the support member and the propeller described in Embodiment 1 and the like.

First wire 51 connects first thruster device 110 and unmanned aerial vehicle 10. One end of wire 51 is coupled to unmanned aerial vehicle 10 and the other end is coupled to first thruster device 110.

The first reel can be rotated by a lift motor to reel first wire 51 in and out. The rotation of the first reel is controlled by wire control module 125. In the present embodiment, the first reel is provided on first thruster device 110, but the first reel may be provided on unmanned aerial vehicle 10. The first reel has the same configuration as the reel according to Embodiment 1 and the like.

Second thruster device 130 is a second child vehicle of unmanned aerial vehicle 10. A package is attachable to and detachable from second thruster device 130, and second thruster device 130 is attachable to and detachable from first thruster device 110. Second thruster device 130 is coupled to first thruster device 110 via second wire 52. Second thruster device 130 includes a second support member, second propeller actuation motor 141, and a second propeller. Second thruster device 130 is one example of a second device. First thruster device 110 and second thruster device 130 may be communicably connected by wireless communication. In such cases, second thruster device 130 may include a battery. Second thruster device 130 is one example of a second adapter. Moreover, a combination of first thruster device 110 and second thruster device 130 is one example of a device.

In the present embodiment, second thruster device 130 has the same configuration as first thruster device 110, and detailed description of configurations that are the same will be omitted where appropriate.

Second thruster device 130 also includes a support member, second wire 52, a plurality of second propeller actuation motors 132, a plurality of propellers, thruster controller 144, and wire control module 145. The support member, second wire 52, the plurality of second propeller actuation motors 132, the plurality of propellers, thruster controller 144, wire control module 145, actuator 146, and camera sensor 147 included in second thruster device 130 have the same configuration as the support member, first wire 51, the plurality of second propeller actuation motors 112, the plurality of propellers, thruster controller 124, wire control module 125, actuator 126, and camera sensor 127 included in first thruster device 110.

The second support member is attachable to and detachable from first thruster device 110 or unmanned aerial vehicle 10. The plurality of second propeller actuation motors 141 are arranged on the side portion forming the outer periphery of the second support member. The plurality of second propellers correspond one-to-one with the rotary shafts of the plurality of second propeller actuation motors 141 and are actuated by the plurality of second propeller actuation motors 141. Second thruster device 130 has the same configuration as first thruster device 110. The second support member and the second propeller have the same configurations as the support member and the propeller described above.

Second wire 52 connects first thruster device 110 and second thruster device 130. One end of second wire 52 is coupled to first thruster device 110 and the other end is coupled to second thruster device 130.

The second reel can be rotated by a lift motor to reel second wire 52 in and out. The rotation of the second reel is controlled by wire control module 145. In the present embodiment, the second reel is provided on second thruster device 130, but the second reel may be provided on first thruster device 110. The second reel has the same configuration as the first reel.

In the present embodiment, although the control processor, first thruster device 110 and second thruster device 130 included in unmanned aerial vehicle 10 are each equipped with thruster controller 124 and 144, it is sufficient if at least one of these elements includes control processor 11, thruster controller 124, or thruster controller 144.

### Operations

Next, operations performed by first thruster device 110 and second thruster device 130 will be described with reference to FIG. 21 through FIG. 23.

As shown by arrow A in FIG. 21, when unmanned aerial vehicle 10 positioned separated from the ground, controller 124 controls the first reel via wire control module 125 to reel out first wire 51 and detach first thruster device 110 and second thruster device 130 from unmanned aerial vehicle 10. At this time, thruster controller 124 actuates at least one of the plurality of second propeller actuation motors 112 and the plurality of second propeller actuation motors 141 after first thruster device 110 and second thruster device 130 are detached from unmanned aerial vehicle 10. When first thruster device 110 and second thruster device 130 detach from unmanned aerial vehicle 10, thruster controller 124 controls the movement of at least one of first thruster device 110 and second thruster device 130 in order to align the thruster device(s) with delivery box 8. It goes without saying that thruster controller 124 is aware of the distance and position of delivery box 8 relative to each of unmanned aerial vehicle 10, first thruster device 110, and second thruster device 130.

If first thruster device 110 and second thruster device 130 are detached from unmanned aerial vehicle 10, thruster controller 124 controls the second reel via wire control module 145 to cause second wire 52 to reel out, as shown by arrows B and C in FIG. 21, and detaches second thruster device 130 from first thruster device 110. At this time, thruster controller 124 actuates the plurality of second propeller actuation motors 112 and the plurality of second propeller actuation motors 141 after detaching second thruster device 130 from first thruster device 110. When second thruster device 130 detaches from first thruster device 110, thruster controller 124 controls the movement of first thruster device 110 and second thruster device 130 in order to align second thruster device 130 with delivery box 8.

Thruster controller 124 controls the plurality of second propeller actuation motors 112 and controls the plurality of second propeller actuation motors 141 differently than the plurality of second propeller actuation motors 112 after detaching second thruster device 130 from first thruster device 110. As shown by arrow D in FIG. 21, thruster controller 124 adjusts the first hanging direction in which first wire 51 extends between unmanned aerial vehicle 10 and first thruster device 110, and adjusts the second hanging direction in which second wire 52 extends between first thruster device 110 and second thruster device 130. Thruster controller 124 makes the first hanging direction and the second hanging direction different by adjusting the positions of at least first thruster device 110 and second thruster device 130. Thruster controller 124 may make the first hanging direction different than the second hanging direction by further adjusting the position of unmanned aerial vehicle 10.

Here, by thruster controller 124 controlling the plurality of second propeller actuation motors 112 and controlling the plurality of second propeller actuation motors 141 differently than the plurality of second propeller actuation motors 112 after detaching second thruster device 130 from first thruster device 110, the area of overlap between first thruster device 110 and second thruster device 130 is reduced or the overlap between first thruster device 110 and second thruster device 130 is eliminated when viewed from a direction perpendicular to the ground surface (for example, a vertical direction). When first thruster device 110 detaches from unmanned aerial vehicle 10 and second thruster device 130 detaches from first thruster device 110, thruster controller 124 adjusts the positions of first thruster device 110 and second thruster device 130 so that first thruster device 110 and second thruster device 130 do not overlap vertically. This causes the positions of first thruster device 110 and second thruster device 130 to differ relative to the vertical direction, so that straight line segments connecting unmanned aerial vehicle 10 and first thruster device 110 and second thruster device 130 are not parallel. First thruster device 110 is no longer positioned on a straight line connecting unmanned aerial vehicle 10 and second thruster device 130. Thus, thruster controller 124 arranges first thruster device 110 to bypass the obstacle with respect to the straight line connecting unmanned aerial vehicle 10 and second thruster device 130.

After detaching the package from second thruster device 130 as shown by arrow E in FIG. 21, thruster controller 124 controls wire control module 145 to cause the second reel to reel in second wire 52 as shown by arrows F, G, and H in FIG. 22 to attach second thruster device 130 to first thruster device 110. Thruster controller 124 causes second thruster device 130 to be guided (pulled) to the position of first thruster device 110 by reeling in second wire 52 using the second reel, thereby causing first thruster device 110 to retrieve second thruster device 130.

As shown by arrow I in FIG. 22, thruster controller 124 controls wire control module 125 to reel in first wire 51 using the first reel to attach first thruster device 110 and second thruster device 130 to unmanned aerial vehicle 10. Although thruster controller 124 attaches first thruster device 110 and second thruster device 130 to unmanned aerial vehicle 10 after attaching second thruster device 130 to first thruster device 110, thruster controller 124 may attach second thruster device 130 to first thruster device 110 at the same time as attaching first thruster device 110 and second thruster device 130 to unmanned aerial vehicle 10.

### Advantageous Effects

Next, the advantageous effects achieved by lifting system 5b according to the present embodiment will be described.

As described above, lifting system 5b according to the present embodiment includes: unmanned aerial vehicle 10; first thruster device 110 attachable to and detachable from unmanned aerial vehicle 10; first wire 51 that connects first thruster device 110 and unmanned aerial vehicle 10; a first reel capable of reeling in first wire 51, second thruster device 130 attachable to and detachable from a package and attachable to and detachable from first thruster device 110; second wire 52 that connects first thruster device 110 and second thruster device 130; a second reel capable of reeling in second wire 52; and thruster controller 124. When unmanned aerial vehicle 10 is in a position separated from the ground, thruster controller 124 detaches first thruster device 110 and second thruster device 130 from unmanned aerial vehicle 10, causes the first reel to reel out first wire 51, detaches second thruster device 130 from first thruster device 110, and causes the second reel to reel out second wire 52.

With this, even when it is difficult to carry the package to a predetermined position, such as when there is an obstacle vertically above the predetermined position, it is possible to move first thruster device 110 and second thruster device 130 so as to avoid the obstacle. It is therefore possible to deliver the package to the predetermined position with certainty since second thruster device 130 can be moved to a position vertically above the predetermined position.

Lifting system 5b according to the present embodiment includes: unmanned aerial vehicle 10; first thruster device 110 including at least one first adapter connectable to at least one package to be delivered by unmanned aerial vehicle 10 and at least one second adapter attachable to and detachable from unmanned aerial vehicle 10; and first wire 51 that connects unmanned aerial vehicle 10 and first thruster device 110. Unmanned aerial vehicle 10 includes first reel to which one end of first wire 51 is connected and a lift motor that reels out first wire 51.

With this, even if there is an obstacle in the vicinity of the predetermined position, the first device and the second device can be moved to avoid the obstacle. It is therefore possible to deliver the package to the predetermined position with certainty since the second device can be moved to a position vertically above the predetermined position.

In lifting system 5b according to the present embodiment, first thruster device 110 includes: a first support member attachable to and detachable from unmanned aerial vehicle 10; a plurality of second propeller actuation motors 112 disposed on a plurality of side portions of the first support member; and a plurality of first propellers actuated by the plurality of second propeller actuation motors 112. Second thruster device 130 includes: a second support member attachable to and detachable from first thruster device 110; a plurality of second propeller actuation motors 141 disposed on a plurality of side portions of the second support member; and a plurality of second propellers actuated by the plurality of second propeller actuation motors 141.

With this, the position of first thruster device 110 relative to unmanned aerial vehicle 10 can be adjusted, and the position of second thruster device 130 relative to first thruster device 110 can be adjusted. This makes it possible to move first thruster device 110 and second thruster device 130 so as to avoid an obstacle. As a result, the package can be reliably delivered to the predetermined position.

In lifting system 5b according to the present embodiment, thruster controller 124 actuates the plurality of second propeller actuation motors 112 and/or the plurality of second propeller actuation motors 141 after detaching first thruster device 110 and second thruster device 130 from unmanned aerial vehicle 10. Thruster controller 124 actuates the plurality of second propeller actuation motors 112 and the plurality of second propeller actuation motors 141 after detaching second thruster device 130 from first thruster device 110.

This makes it possible to move first thruster device 110 and second thruster device 130 as a single unit to a target position for avoiding the obstacle. Therefore, thruster controller 124 can inhibit an increase in the processing burden of actuating and controlling the plurality of second propeller actuation motors 112 and the plurality of second propeller actuation motors 141.

In lifting system 5b according to the present embodiment, after detaching second thruster device 130 from first thruster device 110, thruster controller 124 controls the plurality of second propeller actuation motors 112 and controls the plurality of second propeller actuation motors 141 differently than the plurality of second propeller actuation motors 112 to make the first hanging direction and the second hanging direction mutually different, the first hanging direction being the direction in which first wire 51 extends between unmanned aerial vehicle 10 and first thruster device 110, and the second hanging direction being the direction in which second wire 52 extends between first thruster device 110 and second thruster device 130.

With this, even if there is an obstacle vertically above the predetermined position, first thruster device 110 and second thruster device 130 can be positioned so as to reliably bypass the obstacle. As a result, with lifting system 5b, the package can be reliably delivered to the predetermined position.

In lifting system 5b according to the present embodiment, by thruster controller 124 controlling the plurality of second propeller actuation motors 112 and controlling the plurality of second propeller actuation motors 141 differently than the plurality of second propeller actuation motors 112 after detaching second thruster device 130 from first thruster device 110, the area of overlap between first thruster device 110 and second thruster device 130 is reduced or the overlap between first thruster device 110 and second thruster device 130 is eliminated when viewed from a direction perpendicular to the ground surface.

With this, the relative positions of first thruster device 110 and second thruster device 130 can be changed so that first thruster device 110 is not disposed vertically above second thruster device 130. Accordingly, even if there is an obstacle vertically above the predetermined position, first thruster device 110 and second thruster device 130 can be positioned so as to reliably bypass the obstacle. As a result, the package can be reliably delivered to the predetermined position.

In lifting system 5b according to the present embodiment, after releasing the package from second thruster device 130, thruster controller 124: reels in second wire 52 using the second reel; attaches second thruster device 130 to first thruster device 110; reels in first wire 51 using the first reel; and attaches first thruster device 110 and second thruster device 130 to unmanned aerial vehicle 10.

With this, after delivering the package to the predetermined position, second thruster device 130 can be attached to first thruster device 110 while reeling in second wire 52, and first thruster device 110 and second thruster device 130 can be attached to unmanned aerial vehicle 10 while reeling in first wire 51. As a result, it is possible to prevent first wire 51 and second wire 52 from being damaged or entangled due to contact with an obstacle or the like. This makes it possible to inhibit a decrease in the operating efficiency of lifting system 5b.

### VARIATION 1 OF EMBODIMENT 2

Hereinafter, since the basic configuration of lifting system 5c according to the present variation is the same as the basic configuration of the lifting system according to Embodiment 2 and the like, repeated description of the basic configuration of lifting system 5c in the present variation will be omitted where appropriate. The present variation differs from Embodiment 2 and the like in that three thruster devices are used, and that third wire 53, a third reel, fourth wire 54, and a fourth reel are used instead of the second wire and the second reel.

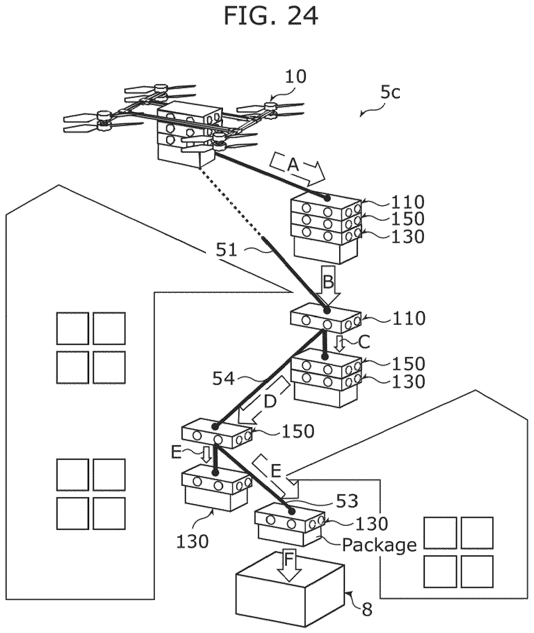

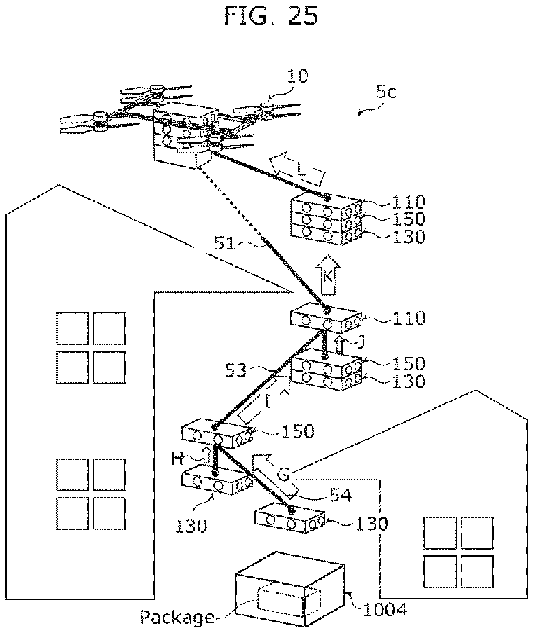

FIG. 24 illustrates an example of first thruster device 110 of lifting system 5c according to Variation 1 of Embodiment 2 unloading a package. FIG. 25 illustrates an example of a scene after first thruster device 110 of lifting system 5c according to Variation 1 of Embodiment 2 has unloaded the package. Depiction of the arm and the like of unmanned aerial vehicle 10 is omitted in FIG. 24 and FIG. 25.

As illustrated in FIG. 24 and FIG. 25, lifting system 5c includes third thruster device 150, third wire 53, a third reel, fourth wire 54, and a fourth reel in addition to unmanned aerial vehicle 10, first thruster device 110, first wire 51, the first reel, second thruster device 130, and thruster controller 124.

Third thruster device 150 is attachable between and detachable from between first thruster device 110 and second thruster device 130. Third thruster device 150 is a third child vehicle of unmanned aerial vehicle 10 and is attachable to and detachable from first thruster device 110. Third thruster device 150 includes a third support member, a plurality of second propeller actuation motors, and a plurality of third propellers. The third support member is attachable to and detachable from first thruster device 110. The plurality of second propeller actuation motors are arranged on the side portion forming the outer periphery of the third support member. The plurality of third propellers correspond one-to-one with the rotary shafts of the plurality of second propeller actuation motors and are actuated by the plurality of second propeller actuation motors. Third thruster device 150 has essentially the same configuration as first thruster device 110 described above.

Third wire 53 connects first thruster device 110 and third thruster device 150. One end of third wire 53 is coupled to first thruster device 110 and the other end is coupled to third thruster device 150.

The third reel can reel third wire 53 in and out by rotating. The rotation of the third reel is controlled by the wire control module included in third thruster device 150. In the present variation, the third reel is provided on third thruster device 150, but the third reel may be provided on first thruster device 110. The third reel, the third propeller and the second propeller actuation motor have the same configuration as the reel, the propeller, and the motor described above.

Fourth wire 54 connects third thruster device 150 and second thruster device 130. One end of fourth wire 54 is coupled to third thruster device 150 and the other end is coupled to second thruster device 130.

The fourth reel can reel fourth wire 54 in and out by rotating. The rotation of the fourth reel is controlled by the wire control module included in second thruster device 130. The fourth reel, the fourth propeller and the fourth motor have the same configuration as the reel, the propeller, and the motor described above.

Such a lifting system 5c according to the present variation further includes: third thruster device 150 attachable between and detachable from between first thruster device 110 and second thruster device 130; third wire 53 that connects first thruster device 110 and third thruster device 150; a third reel capable of reeling in third wire 53; fourth wire 54 that connects third thruster device 150 and second thruster device 130; and a fourth reel capable of reeling in fourth wire 54.

With this, after delivering a package to a predetermined position as shown by arrows A through F in FIG. 24, arrows G through L in FIG. 25 show that second thruster device 130 can be attached to third thruster device 150 while reeling in fourth wire 54, second thruster device 130 and third thruster device 150 can be attached to first thruster device 110 while reeling in third wire 53, and second thruster device 130, third thruster device 150, and first thruster device 110 can be attached to unmanned aerial vehicle 10 while reeling in first wire 51. As a result, it is possible to prevent first wire 51, third wire 53, and fourth wire 54 from being damaged or entangled due to contact with an obstacle or the like. This makes it possible to inhibit a decrease in the operating efficiency of lifting system 5c.

### VARIATION 2 OF EMBODIMENT 2

Hereinafter, since the basic configuration of lifting system 5c according to the present variation is the same as the basic configuration of the lifting system according to Embodiment 2 and the like, repeated description of the basic configuration of lifting system 5c in the present variation will be omitted where appropriate. The present variation differs from Embodiment 2 and the like in that it pertains to an example in which lifting system 5c is delivering a package to a housing complex such as an apartment building.

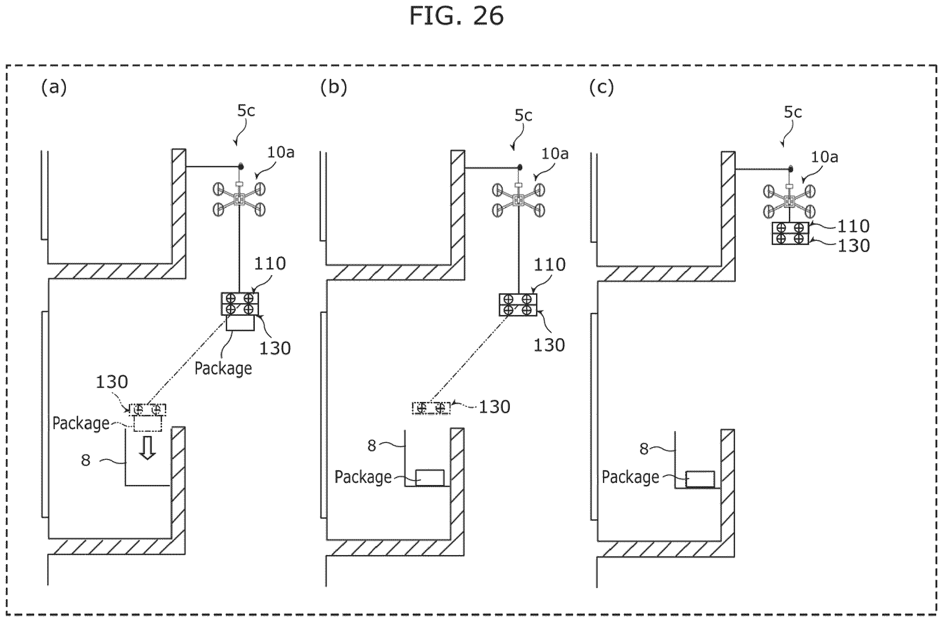

FIG. 26 is a schematic diagram illustrating an example of first thruster device 110 and second thruster device 130 of lifting system 5c according to Variation 2 of Embodiment 2 delivering a package to a housing complex facility.

In (a) in FIG. 26, thruster controller 124 of first thruster device 110 controls wire control module 125 of first thruster device 110 to cause the first reel to begin reeling out first wire 51, and controls the plurality of second propeller actuation motors 112 and/or the plurality of second propeller actuation motors 141. This causes first thruster device 110 and second thruster device 130 to detach from unmanned aerial vehicle 10a and descend to approach delivery box 8.

When any of control processor 11 of unmanned aerial vehicle 10a and thruster controllers 124 and 144 of first thruster device 110 and second thruster device 130 detects that first thruster device 110 and second thruster device 130 have come within a predetermined distance of delivery box 8, second thruster device 130 detaches from first thruster device 110. Thruster controller 144 of second thruster device 130 controls wire control module 145 of second thruster device 130 to cause the second reel to begin reeling out second wire 52, and controls the plurality of second propeller actuation motors 141. Second thruster device 130 then moves to a position vertically above the opening of delivery box 8.

In (a) and (b) in FIG. 26, thruster controller 144 of second thruster device 130 causes second thruster device 130 to execute the disconnection of the package, thereby storing the package in delivery box 8.

As illustrated in (b) and (c) in FIG. 26, thruster controller 144 of second thruster device 130 controls wire control module 145 of second thruster device 130 to cause the second reel to begin reeling in second wire 52, and controls the plurality of second propeller actuation motors 141. As a result, second thruster device 130 moves to a position vertically below first thruster device 110 and is attached to first thruster device 110. In first thruster device 110, thruster controller 124 controls wire control module 125 of first thruster device 110 to cause the first reel to begin reeling in first wire 51, and controls the plurality of second propeller actuation motors. As a result, first thruster device 110 and second thruster device 130 rise as a single unit and move to a position vertically below unmanned aerial vehicle 10a, and first thruster device 110 and second thruster device 130 are attached to unmanned aerial vehicle 10.

### VARIATION 3 OF EMBODIMENT 2

Hereinafter, since the basic configuration of lifting system 5d according to the present variation is the same as the basic configuration of the lifting system according to Embodiment 2 and the like, repeated description of the basic configuration of lifting system 5d in the present variation will be omitted where appropriate. The present variation differs from Embodiment 2 and the like in that second thruster device 130 includes gripping portion 137.

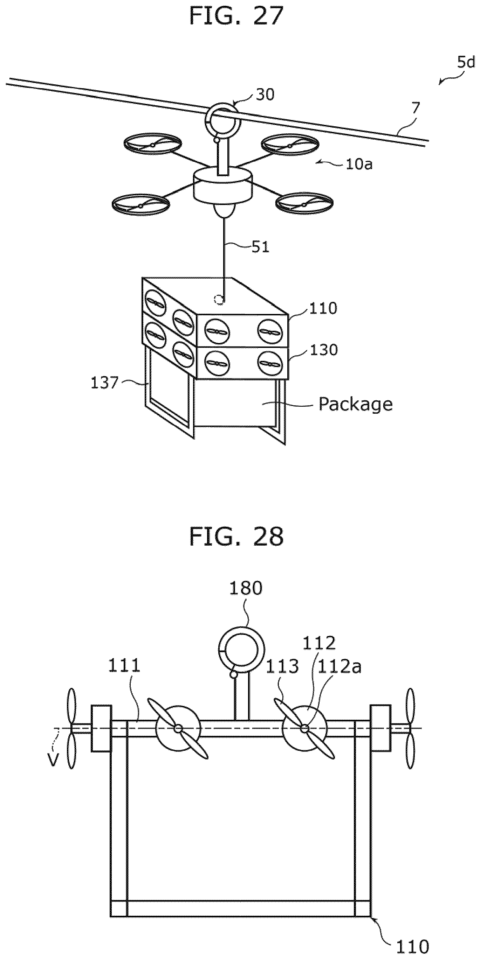

FIG. 27 is a schematic diagram illustrating an example of lifting system 5d according to Variation 3 of Embodiment 2.

Thruster controller 144 causes first thruster device 110 and second thruster device 130 to detach from unmanned aerial vehicle 10a while arm 30 is engaging rail 7. When thruster controller 144 obtains, by means of a sensor or the like, information regarding the engagement of rail 7 by arm 30, based on the obtained information, thruster controller 144 causes first thruster device 110 and second thruster device 130 to detach from unmanned aerial vehicle 10a. Thruster controller 144 controls the wire control module to cause the first reel to begin reeling out first wire 51, and controls the plurality of second propeller actuation motors 112 and/or the plurality of second propeller actuation motors 141. This causes first thruster device 110 and second thruster device 130 to detach from unmanned aerial vehicle 10a.

As described above, in lifting system 5d according to the present variation, unmanned aerial vehicle 10a includes arm 30 capable of engaging rail 7. Thruster controller 144 causes first thruster device 110 and second thruster device 130 to detach from unmanned aerial vehicle 10a while unmanned aerial vehicle 10a is at a position separated from the ground and arm 30 is engaging rail 7.

This makes it possible to hold unmanned aerial vehicle 10a onto rail 7 via arm 30. As a result, even if first thruster device 110 and second thruster device 130 are detached from unmanned aerial vehicle 10a, first thruster device 110 and second thruster device 130 can be held via first wire 51 and second wire 52. This makes it possible to inhibit first thruster device 110 and second thruster device 130 from falling.

Since lifting system 5d can be held onto rail 7 without unmanned aerial vehicle 10a flying, energy consumption by unmanned aerial vehicle 10a can be reduced.

### VARIATION 4 OF EMBODIMENT 2

Hereinafter, since the basic configuration of first thruster device 110 according to the present variation is the same as the basic configuration of first thruster device 110 to Embodiment 2 and the like, repeated description of the basic configuration of lifting system 5d and first thruster device 110 in the present variation will be omitted where appropriate. The present embodiment differs from Embodiment 2 and the like in that first thruster device 110 includes arm 30.

FIG. 28 is a schematic diagram illustrating an example of first thruster device 110 of lifting system 5d according to Variation 4 of Embodiment 2.

As illustrated in FIG. 28, first thruster device 110 further includes arm 180. As described above, arm 180 can move along rail 7 by clasping (gripping) rail 7. The arm can also hang in midair by arm 180 coupled to rail 7 if first thruster device 110 is stopped from moving.

Although the present variation includes arm 180 as an example, a wire may be used instead of arm 180.

### EMBODIMENT 3

Hereinafter, since the basic configuration of lifting system 5e according to the present embodiment is the same as the basic configuration of the lifting system according to Embodiment 1 and the like, repeated description of the basic configuration of lifting system 5e in the present embodiment be omitted where appropriate, and description will focus on the points of difference from Embodiment 1 and the like. The present embodiment differs from Embodiment 1 in that first arm 331 of unmanned aerial vehicle 10b is hook-shaped and pivots.

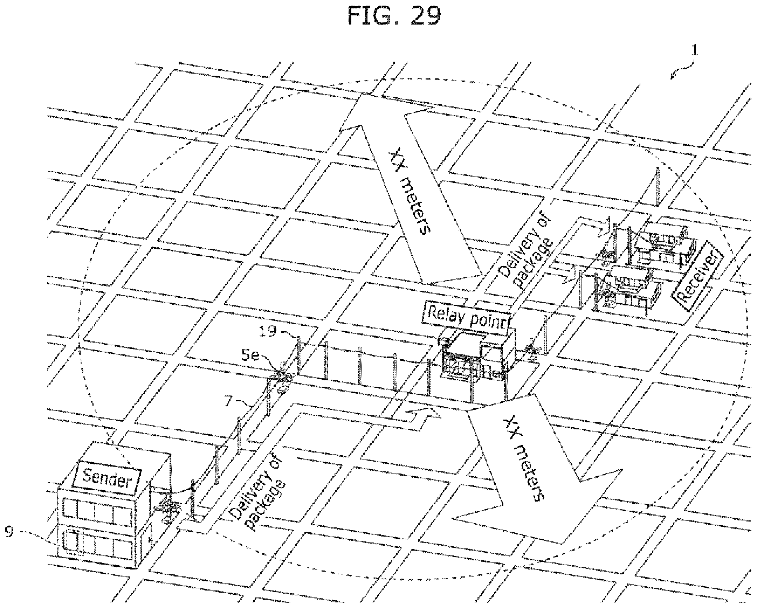

FIG. 29 illustrates an example of how lifting system 5e of flying system 1 delivers a package from a sender to a receiver according to Embodiment 2.

As illustrated in FIG. 29, flying system 1 includes unmanned aerial vehicle 10b, management server 9, a plurality of support pillars 19, and rail 7.

Lifting system 5e moves within a radius of a several hundred meters around the sender. In the present embodiment, the range is within a radius of less than or equal to approximately 500 m or less than or equal to approximately 1000 m. In the present embodiment, the range is assumed to be within a radius of approximately 400 m.

### <Unmanned Aerial Vehicle 10b>

Unmanned aerial vehicle 10b of flying system 1 obtains, from management server 9 of the sender, route information indicating the flying route from the sender to the receiver indicated in map data. Unmanned aerial vehicle 10b moves the loaded package from the sender to the receiver based on the route information obtained from management server 9.

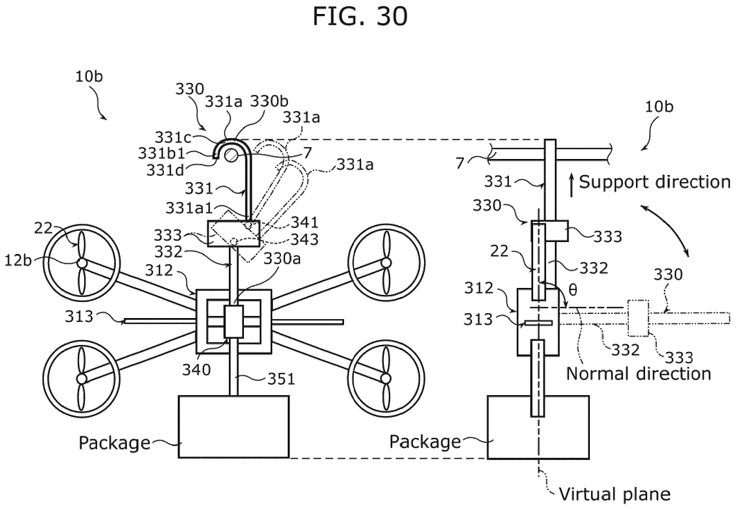

FIG. 30 illustrates a front view and a side view of unmanned aerial vehicle 10b of lifting system 5e according to Embodiment 3. More specifically, FIG. 30 illustrates a front and side view of unmanned aerial vehicle 10b in an attitude in which the direction of extension of connector 330 is approximately orthogonal to the normal direction of the virtual plane.

As illustrated in FIG. 30, unmanned aerial vehicle 10b includes a pair of wings 313, connector 330, and movable block 340 in addition to vehicle main body 312, the plurality of sensors, control processor 11, actuation controller 12, the communicator, and the battery.

The pair of wings 313 are provided on an outer peripheral portion of vehicle main body 312. The pair of wings 313 function as a pair of pitch wings. The outer peripheral portion of vehicle main body 312 may include the pair of yaw wings and the pair of pitch wings described above.

When vehicle main body 312 is in an upright attitude, the pair of wings 313 are arranged symmetrically in the horizontal direction with respect to the center of gravity of vehicle main body 312. Each of the pair of wings 313 includes a shaft portion having an axis extending in the horizontal direction and a vane portion that is pivotably supported by the shaft portion. The vane portion rotates about an axis extending in the horizontal direction. The force of the wind in the vertical directions is controlled by the rotation of the vane portions. When viewed from the traveling direction, rotating the vane portions upward steers upward, and rotating the vane portions downward steers downward.

When vehicle main body 312 is in an upright attitude, the pair of wings 313 may be arranged symmetrically in the vertical direction with respect to the center of gravity of the vehicle main body 312. In this case, each of the pair of yaw wings may include a shaft portion having an axis extending in the vertical direction and a vane portion that is pivotably supported by the shaft portion. The vane portion rotates about an axis extending in the vertical direction. The force of the wind in the horizontal directions is controlled by the rotation of the vane portions. When viewed from the traveling direction, rotating the vane portions left steers left, and rotating the vane portions right steers right.

Connector 330 can be connected to rail 7 located at a position spaced apart from the ground surface with vehicle main body 312 hanging from connector 330. Connector 330 is an elongated supporting and connecting member that extends in a direction (a vertically upward direction) away from vehicle main body 312.

Connector 330 includes first end 330a and second end 330b.

First end 330a is the end of connector 330 that faces vehicle main body 312. First end 330a is swingably supported by vehicle main body 312 and is connected to vehicle main body 312. Second end 330b is the end opposite to first end 330a. Second end 330b can be slidably connected to rail 7.

Connector 330 includes first arm 331, support portion 332, base 333, angle actuator 343, and first actuator 341.

First arm 331 is connected to one end of support portion 332. First arm 331 according to the present embodiment is connected to support portion 332 via base 333. First arm 331 is a hanger for hanging unmanned aerial vehicle 10b from rail 7.

First arm 331 includes first hook 331a.

First hook 331a extends from first connected end 331a1 connected to first actuator 341 to first open end 331b1 on the other end. First hook 331a includes first bent portion 331c that is bent in a first direction and that is located between first connected end 331a1 and first open end 331b1. First hook 331a has a substantially C-like shape, a substantially F-like shape, a substantially J-like shape, or a substantially U-like shape in which a part of the ring-shaped outer shell portion is missing as viewed in the traveling direction of unmanned aerial vehicle 10b. The portion cut out from the outer shell portion constitutes opening 331d of first hook 331a through which rail 7 can enter the space enclosed by first hook 331a. Opening 331d lies between first open end 331b1 and first connected end 331a1. First hook 331a corresponds to second end 330b of connector 330. In this example, first hook 331a may be provided with a wheel that allows it to make contact with and freely rotate on rail 7 as described above.

One end of support portion 332 is swingably connected to vehicle main body 312, and the other end of support portion 332 is connected to first arm 331 via base 333. Thus, support portion 332 supports first arm 331 on vehicle main body 312. In the present embodiment, support portion 332 swings ±90 degrees relative to the attitude that is upright with respect to vehicle main body 312. Support portion 332 is an elongated support pillar that extends in a direction away from vehicle main body 312. The portion where support portion 332 and vehicle main body 312 are connected to each other corresponds to first end 330a.

Base 333 is where support portion 332 and first arm 331 are connected to each other. Base 333 is a support member that is disposed between support portion 332 and first arm 331 and that supports first arm 331. Base 333 is connected to first connected end 331a1 of first arm 331 and the other end of support portion 332. Angle actuator 343 is provided in base 333.

Angle actuator 343 can cause base 333 to swing relative to support portion 332 by changing the angle of base 333 relative to the direction in which support portion 332 extends (or relative to vehicle main body 312). Angle actuator 343 is an example of a third actuator.

First actuator 341 sets the angle of first hook 331a relative to support portion 332. First actuator 341 is disposed between support portion 332 and first hook 331a and swingably supports first connected end 331a1 of first hook 331a. In the present embodiment, first actuator 341 is disposed in base 333.

In this example, connector 330 may be the arm according to Embodiment 1 and the variations thereof described above, and it is needless to say that these arms can be applied to unmanned aerial vehicle 10b according to the present embodiment. For example, first arm 331 may include an opening and closing member that opens or closes opening 331d. With this configuration, after first arm 331 has become connected to rail 7, opening 331d may be closed so that first arm 331 does not become disengaged from rail 7.

Movable block 340 sets the inclination of the virtual plane that contains the plurality of propellers 22 relative to the support direction in which connector 330 is supported on rail 7. Movable block 340 may be an actuator that can actively change the inclination in response to an instruction from control processor 11. Alternatively, movable block 340 may be a rotatable member that can passively change the inclination by utilizing the rotary force exerted on vehicle main body 312 that is produced due to the difference among the rotation rates of the plurality of propeller control modules 12b. Movable block 340 is disposed between vehicle main body 312 and connector 330. Alternatively, movable block 340 may be housed in vehicle main body 312. The support direction is the direction that extends from first end 330a toward second end 330b of connector 330 and is also the direction in which support portion 332 extends.

Movable block 340 can control the attitude of support portion 332 with respect to vehicle main body 312 by causing the one end of support portion 332 supported on vehicle main body 312 to swing about an axis of movable block 340. In this example, the virtual plane is substantially parallel to the horizontal direction when vehicle main body 312 has the horizontal attitude and is substantially parallel to the vertical direction when vehicle main body 312 has the upright attitude.

Control processor 11 also controls movable block 340 and first actuator 341 and the like. When connecting connector 330 to rail 7, control processor 11 connects connector 330 to first arm 331 by recognizing rail 7 in image information obtained from, for example, camera sensor 45.

When connector 330 is to be disengaged from rail 7, control processor 11 actuates first actuator 341 so as to tilt connector 330 relative to the normal direction of the virtual plane. Control processor 11 controls first actuator 341 so as to increase the angle of the direction in which connector 330 extends relative to the normal direction, and this causes connector 330 to become disengaged from rail 7. Control processor 11 can change the angle of base 333 relative to the direction in which support portion 332 extends by controlling angle actuator 343. Thus, control processor 11 can raise first hook 331a, cause first hook 331a to swing, and disengage first hook 331a from rail 7. In this example, control processor 11 may disengage connector 330 from rail 7 by controlling first actuator 341, movable block 340, and so on. Control processor 11 may disengage connector 330 from rail 7 by causing unmanned aerial vehicle 10b to swing or by changing the flying altitude of unmanned aerial vehicle 10b.

When first hook 331a of connector 330 is connected to rail 7, control processor 11 (i) sets the rotation rate of the plurality of propeller control modules 12b to the rotation rate that is lower than the minimum rotation rate necessary for causing unmanned aerial vehicle 10b to hover and that is higher than the minimum rotation rate necessary for propelling unmanned aerial vehicle 10b in the direction in which rail 7 extends and (ii) causes movable block 340 to increase angle θ formed by the normal direction of the virtual plane relative to the support direction of connector 330.

In (i), control processor 11 controls the rotation rate of each propeller control module 12b while maintaining an appropriate speed that allows unmanned aerial vehicle 10b to move along rail 7. For example, control processor 11 controls the movement of unmanned aerial vehicle 10b while keeping connector 330 from making contact with rail 7. Control processor 11 adjusts the speed of unmanned aerial vehicle 10b or adjusts the distance between rail 7 and first hook 331a by adjusting this angle θ. In (ii), the attitude of unmanned aerial vehicle 10b approaches the upright attitude as control processor 11 increases angle θ, which in turn increases the propulsive power of unmanned aerial vehicle 10b. Hence, the speed of unmanned aerial vehicle 10b increases.

For example, in (ii), control processor 11 controls the rotation rate of the plurality of propeller control modules 12b so as to set angle θ to greater than 15 degrees, greater than 45 degrees, greater than 65 degrees, or greater than 80 degrees.

The operation in (i) may be executed before or after the operation in (ii). Alternatively, at least a part of each of the operations may be executed in parallel.

Control processor 11 disengages connector 330 from rail 7 if the speed of unmanned aerial vehicle 10b provided by the propelling force exceeds a predetermined value after angle θ has been increased by first actuator 341. In other words, if control processor 11 is to raise the speed of unmanned aerial vehicle 10b higher than the predetermined value, control processor 11 disengages connector 330 from rail 7, increases the rotation rate of the plurality of propeller control modules 12b, and raises the speed of unmanned aerial vehicle 10b. Control processor 11 determines whether the speed is higher than the predetermined value by acquiring the speed information from speed sensor 335.

If connector 330 is being disengaged from rail 7, control processor 11 causes movable block 340 to reduce angle θ and controls the rotation rate of the plurality of propeller control modules 12b so as to achieve a rotation rate higher than the minimum rotation rate necessary for causing unmanned aerial vehicle 10b to hover. For example, control processor 11 increases the rotation rate of the plurality of propeller control modules 12b and thus raises the speed or the flying altitude of unmanned aerial vehicle 10b.

While control processor 11 is reeling out wire 351, control processor 11 may adjust (correct) the position of unmanned aerial vehicle 10b in accordance with the position of the package relative to delivery box 8. Specifically, upon acquiring the wind speed information from wind speed sensor 735 and the image information, control processor 11 may recognize, for example but not limited to, the relative positions of (the distance between) delivery box 8 and the package indicated in the image information and the orientation of the opening of delivery box 8 relative to the package. When the position of the package is displaced in the direction of the arrow from the position vertically above delivery box 8, control processor 11 may move unmanned aerial vehicle 10b in the upwind direction opposite the direction of the arrow, along the direction in which rail 7 extends. In this way, control processor 11 may correct the position of unmanned aerial vehicle 10b.

### Operations

Next, operations performed by unmanned aerial vehicle 10b and flying system 1 according to the present embodiment will be described. With regard to these operations, operations performed from when wire 351 is reeled out upon unmanned aerial vehicle 10b reaching a destination point of the receiver until a package serving as a load is disconnected will be described.

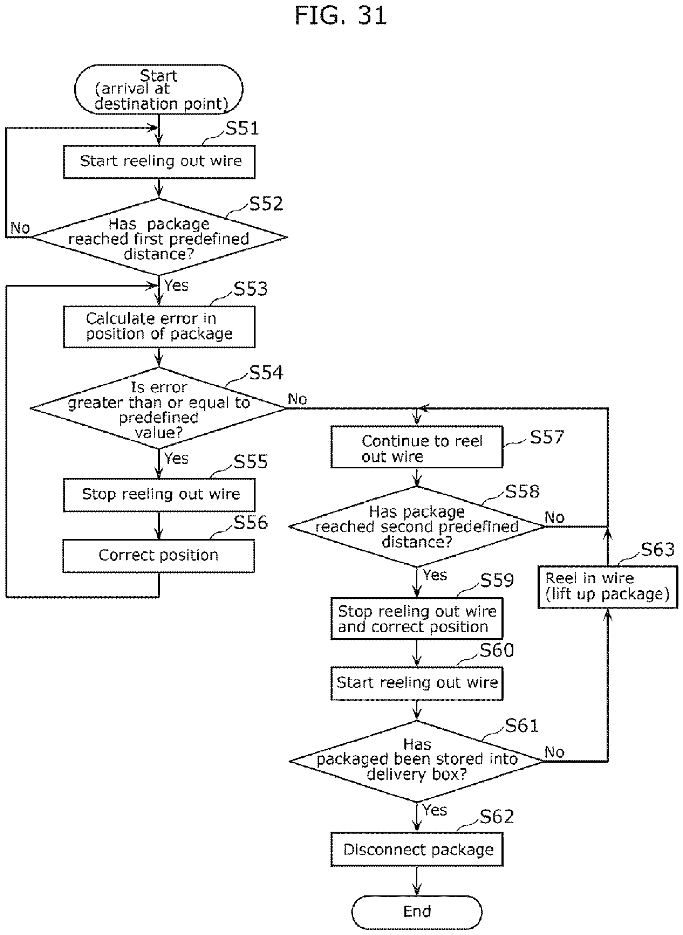

FIG. 31 is a flowchart illustrating an example of an operation of lifting system 5e according to Embodiment 3.

As illustrated in FIG. 29 through FIG. 31, first, with connector 330 being connected to rail 7, unmanned aerial vehicle 10b arrives at (is positioned at) a position vertically above delivery box 8 serving as a receiver. Then, control processor 11 controls wire control module 311 so as to start reeling out wire 351 (S51). This lowers the package. At this point, control processor 11 acquires image information from camera sensor 45 and calculates the distance between the package and delivery box 8.

Next, control processor 11 determines whether the distance between the package and delivery box 8 has reached a first predefined distance (S52). The first predefined distance is, for example but not limited to, one half or one third of the distance from vehicle main body 312 to delivery box 8. The first predefined distance may be such a distance that allows control processor 11 to calculate an error in the position of the package relative to delivery box 8. Therefore, the first predefined distance is not limited to one half, one third, or the like of the distance from vehicle main body 312 to delivery box 8. In this example, control processor 11 may control wire control module 311 so as to lower the package at a first speed at which wire 351 is reeled out at a high speed. Control processor 11 may lower the package at the first speed for a period from when wire 351 starts being reeled out to when the package reaches the first predefined distance.

Whether the distance between the package and delivery box 8 has reached the first predefined distance can be determined by calculating the first predefined distance based on the image information acquired from camera sensor 45 or based on the length of wire 351 that has been reeled out, for example.

If control processor 11 determines that the distance between the package and delivery box 8 has not reached the first predefined distance (NO in S52), the flow returns to the process in step S51.

If control processor 11 determines that the distance between the package and delivery box 8 has reached the first predefined distance (YES in S52), control processor 11 measures the positions of the package and delivery box 8 based on the image information acquired from camera sensor 45 and calculates an error in the position (positional mismatch) of the package relative to delivery box 8. At this point, control processor 11 calculates an error between the opening of delivery box 8 and the package as the package and delivery box 8 are viewed from above. In this example, an error means a positional mismatch of the package along the X-axis, along the Y-axis, and in the roll angle with respect to the XY-plane that is based on the longitudinal direction and the lateral direction of the opening of delivery box 8.

When the result of step S52 is YES, control processor 11 may control wire control module 311 so as to lower the package at a second speed at which wire 351 is reeled out at a low speed. Control processor 11 may lower the package at the first speed when wire 351 first starts being reeled out and may then lower the package at the second speed after the package has reached the first predefined distance. The second speed is lower than the first speed.

Next, control processor 11 determines whether the error is greater than or equal to a predefined value. When the error is large, the package may be spaced apart from delivery box 8 due to their positional mismatch, and the package may not be stored into delivery box 8. The predefined value serves as an index for determining whether the package can be stored into delivery box 8 through its opening.

If control processor 11 determines that the error is greater than or equal to the predefined value (YES in S54), control processor 11 controls wire control module 311 so as to stop reeling out wire 351 (S55).

Control processor 11 corrects the position of the package (corrects the error) so that the package overlaps the opening of delivery box 8, that is, the package is contained within the opening of delivery box 8. Specifically, control processor 11 controls the plurality of propeller control modules 12b based on the image information and moves unmanned aerial vehicle 10b so as to correct the position of the package relative to the opening of delivery box 8 (S56). Then, control processor 11 returns to the process in step S53. In this manner, the position of the package relative to the opening of delivery box 8 is corrected repeatedly.

Now, an example of how the position of a package relative to the opening of delivery box 8 is corrected will be described.

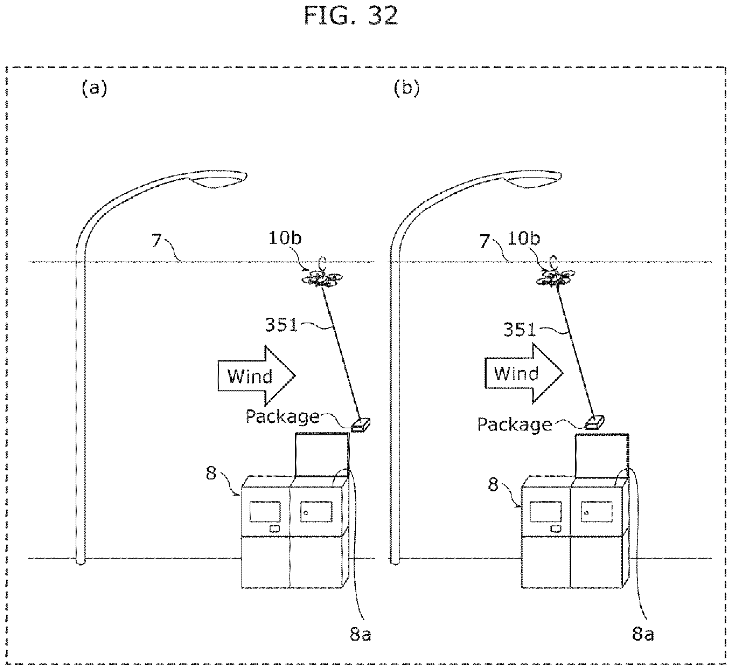

FIG. 32 is a schematic diagram illustrating an example of how the position of a package relative to opening 8a of delivery box 8 is corrected when the package has been pushed in the direction of the arrow by the wind. In FIG. 32, (a) illustrates a state in which unmanned aerial vehicle 10b has moved to the position vertically above delivery box 8, reels out wire 351, and lowers the package. In (a) in FIG. 32, the wind blows in the direction indicated by the arrow, and unmanned aerial vehicle 10b is being displaced downwind from the position vertically above delivery box 8. Therefore, in the state illustrated in (b) in FIG. 32, unmanned aerial vehicle 10b has moved upwind (the direction opposite the direction of the arrow).

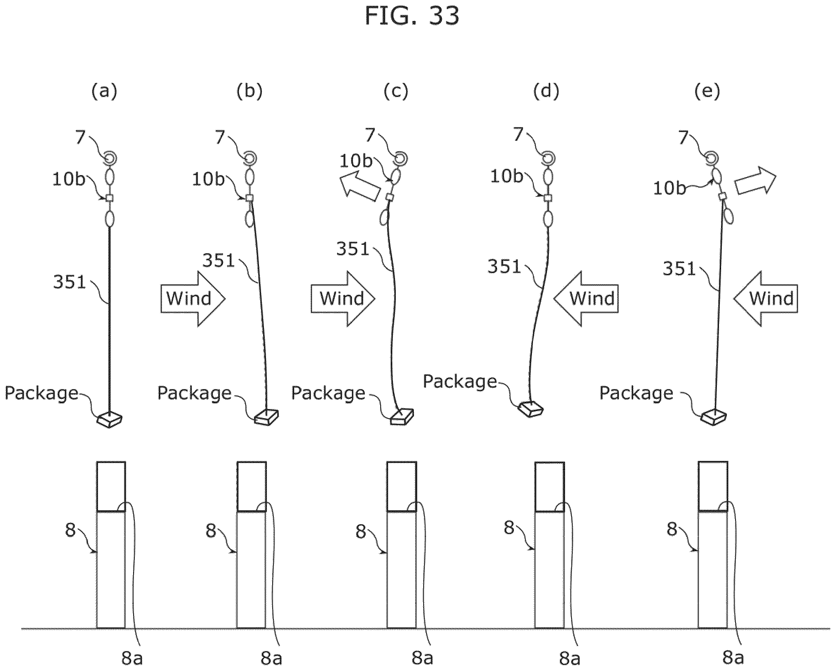

FIG. 33 is a schematic diagram illustrating another example of how the position of a package relative to opening 8a of delivery box 8 is corrected when the package has been pushed in the direction of the arrow by the wind. In FIG. 33, (a) illustrates a state in which no wind is blowing. In this case, the package can be stored into delivery box 8 without making any correction. In FIG. 33, (b) and (d) each illustrate a state in which the wind blows in the direction indicated by the arrow and the position of the package has moved (shifted) downwind (in the direction opposite the direction of the arrow) from the position vertically above opening 8a of delivery box 8. In (c) and (e) in FIG. 33, control processor 11 tilts the attitude of vehicle main body 312, that is, causes vehicle main body 312 to swing in the direction of the arrow by controlling the plurality of propeller control modules 12b and movable block 340, and thus control processor 11 moves the package coupled to wire 351 upwind (one example of the upwind direction). Control processor 11 controls the plurality of propeller control modules 12b and movable block 340 to include the attitude of vehicle main body 312 in the upwind direction so as to displace the package in the upwind direction. When the position of the package is displaced in the direction of the arrow from the position vertically above delivery box 8, control processor 11 swings unmanned aerial vehicle 10b about rail 7 and moves the center of gravity of unmanned aerial vehicle 10b in the upwind direction.

In this manner, control processor 11 causes unmanned aerial vehicle 10b to move or swing by controlling the plurality of propeller control modules 12b and movable block 340 based on the image information and thus corrects the position of the package relative to opening 8a of delivery box 8.

In this example, control processor 11 may correct the position of the package relative to opening 8a of delivery box 8 while control processor 11 continues to reel out wire 351. In this case, step S55 may be omitted. When control processor 11 corrects the position of the package relative to opening 8a of delivery box 8, control processor 11 may control wire control module 311 so as to set the speed at which wire 351 is reeled out to a third speed lower than the second speed.

If control processor 11 determines that the error is smaller than the predefined value (NO in S54), control processor 11 continues to reel out wire 351 (S57).

Next, control processor 11 determines whether the distance between the package and delivery box 8 has reached a second predefined distance shorter than the first predefined distance (S58). The second predefined distance is, for example but not limited to, one fifth, one tenth, or less than one tenth of the distance from vehicle main body 312 to delivery box 8. In this example, control processor 11 may control wire control module 311 so as to lower the package at the second speed or the third speed at which wire 351 is reeled out. Control processor 11 may lower the package at the second speed or the third speed from when wire 351 first starts being reeled out until when the package reaches the second predefined distance from the first predefined distance.

Whether the distance between the package and delivery box 8 has reached the second predefined distance can be determined by calculating the second predefined distance based on the image information acquired from camera sensor 45 or based on the length of wire 351 that has been reeled out, for example.

If control processor 11 determines that the distance between the package and delivery box 8 has not reached the second predefined distance (NO in S58), the flow returns to the process in step S57.

Next, if control processor 11 determines that the distance between the package and delivery box 8 has reached the second predefined distance (YES in S58), control processor 11 controls wire control module 311 so as to stop reeling out wire 351. Then, control processor 11 measures the positions of the package and delivery box 8 based on the image information acquired from camera sensor 45 and calculates the error in the position of the package relative to delivery box 8. At this point, control processor 11 calculates an error (positional mismatch) between opening 8a of delivery box 8 and the package as the package and delivery box 8 are viewed from above.

Control processor 11 corrects the position of unmanned aerial vehicle 10b relative to opening 8a by controlling the plurality of propeller control modules 12b and moving unmanned aerial vehicle 10b so as to correct the position of the package relative to opening 8a of delivery box 8 so that the package can be contained within opening 8a of delivery box 8 (S59). In this example, as in step S54, control processor 11 may determine whether the error is greater than or equal to a predefined value.

Next, control processor 11 controls wire control module 311 so as to start reeling out wire 351 (S60).

Next, control processor 11 determines whether the package has passed through opening 8a of delivery box 8 and has been stored in delivery box 8 based on the image information acquired from camera sensor 45 (S61). For example, control processor 11 calculates an overlap between opening 8a of delivery box 8 and the package based on the image information acquired from camera sensor 45 and detects the looseness in the tension of wire 351 with the use of tension sensor 46. Then, control processor 11 determines that the package has been placed on the bottom of delivery box 8 based on the tension information acquired from tension sensor 46.

If control processor 11 determines that the package have been stored into delivery box 8 (YES in S61), control processor 11 controls a package mounting portion (not illustrated) provided at the leading end of wire 351, and the package mounting portion releases (disconnects) the package. With this, the package is stored in delivery box 8 (S62). The package mounting portion can couple a package thereto or hold a package. Control processor 11 controls wire control module 311 so as to reel in wire 351 and returns to the sender upon having reeled in wire 351. Then, control processor 11 terminates the flow.

If control processor 11 determines that the package has not been stored into delivery box 8 (YES in S61), control processor 11 is neither able to calculate an overlap between opening 8a of delivery box 8 and the package based on the image information acquired from camera sensor 45 nor able to detect the looseness in the tension of wire 351 based on the tension information acquired from tension sensor 46. Therefore, control processor 11 causes wire control module 311 to reel in wire 351 by a predefined amount and thus moves the package away from opening 8a of delivery box 8 (S63). In this example, the predefined amount is, for example, less than or equal to several centimeters or less than or equal to several tens of centimeters. Then, control processor 11 returns to step S57.

### Configuration of Flying System 1

Next, the delivery of a package using unmanned aerial vehicle 10b and flying system 1 according to the present embodiment will be described.

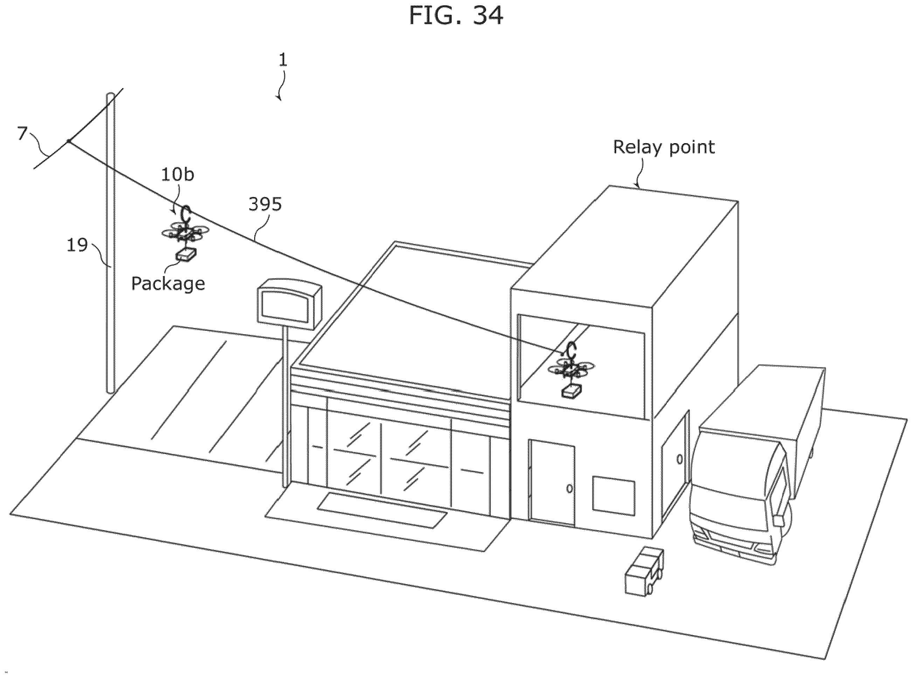

FIG. 34 is an image diagram illustrating an example of how unmanned aerial vehicle 10b of flying system 1 delivers a package from a sender to a relay point of a receiver according to Embodiment 3.

As illustrated in FIG. 29 and FIG. 34, in a case where a receiver is a relay point, upon a package being delivered to the relay point, that relay point starts serving as a sender and sends out that package to a subsequent receiver via a transportation means. A relay point also serves as a sender that sends out packages to individual receivers such as homes and as a receiver where packages are collected from receivers present within a predetermined distance from the relay point. Collected packages are distributed at a relay point, and the packages are delivered to individual receivers with the use of a distribution means such as unmanned aerial vehicle 10b, for example. In this case, management server 9 may be provided at a relay point as well, and unmanned aerial vehicle 10b may acquire route information from this management server 9, or unmanned aerial vehicle 10b may acquire route information from management server 9 of a distribution center. In this example, the transportation means is not limited to unmanned aerial vehicle 10b described above and may also be a delivery robot, a vehicle, a person, or the like.

At a relay point, packages to be delivered to receivers may be classified in accordance with their weights into the packages to be delivered by unmanned aerial vehicle 10b and the packages to be delivered by a delivery robot or the like. A package may be delivered by unmanned aerial vehicle 10b if the weight of that package is less than a predetermined value, or a package may be delivered by a delivery robot if the weight of that package is greater than or equal to the predetermined value. For example, a package may be delivered by unmanned aerial vehicle 10b if the weight of that package is less than 5 Kg, or a package may be delivered by a delivery robot if the weight of that package is greater than or equal to 5 Kg.

Flying system 1 can manage a plurality of unmanned aerial vehicles 10b simultaneously and deliver packages to a plurality of receivers. In this example, one unmanned aerial vehicle 10b returns to the sender upon delivering a package to one receiver, but may deliver packages to two or more receivers.

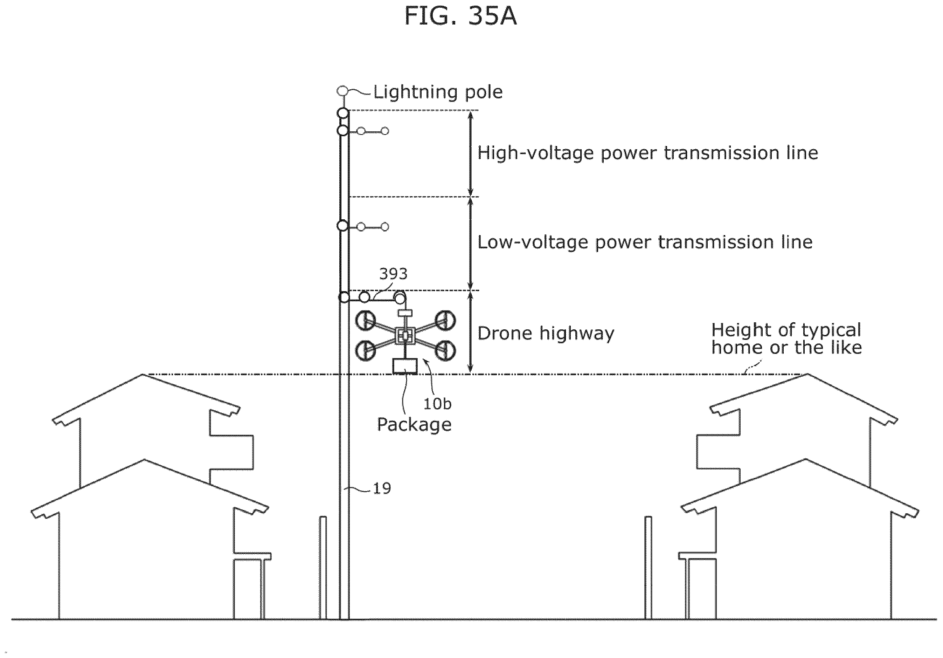

FIG. 35A is a schematic diagram illustrating some examples of heights from the ground surface at which unmanned aerial vehicle 10b of flying system 1 moves according to Embodiment 3.

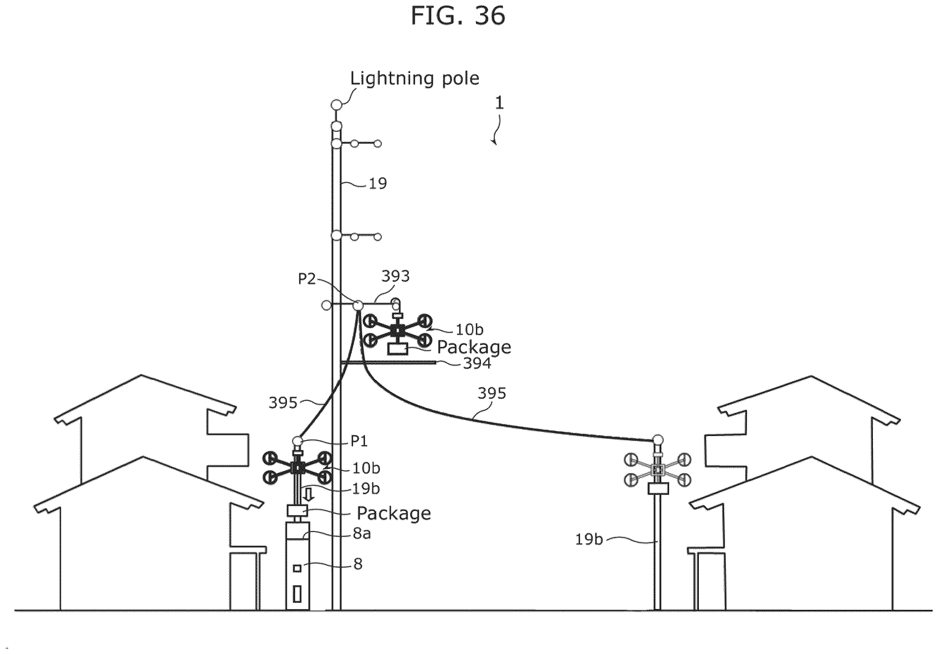

As illustrated in FIG. 29 and FIG. 35A, flying system 1 further includes rail support portion 393, protective net 394 illustrated in FIG. 36 described later, lead-in support pillar 19b, lead-in wire 395, and delivery box 8 illustrated in FIG. 32.

The plurality of support pillars 19 are each a utility pole or a streetlight. Support pillars 19 are each installed on the ground. Rail 7 used by flying system 1 is fixed to each support pillar 19. For example, rail support portion 393 is fixed to each of the plurality of support pillars 19. Specifically, rail support portion 393 is a support member that supports rail 7 of flying system 1. Rail support portion 393 is fixed so as to project from the direction in which support pillar 19 extends and can hold rail 7 with a space provided between rail 7 and support pillar 19.

Rail 7 of flying system 1 is stretched over the plurality of support pillars 19, facilities, and so on and fixed thereon, for example. Rail 7 guides the movement of unmanned aerial vehicle 10b such that unmanned aerial vehicle 10b can move along rail 7 with the connector of unmanned aerial vehicle 10b being connected to rail 7. Rail 7 can support unmanned aerial vehicle 10b and one or more packages loaded in unmanned aerial vehicle 10b even when unmanned aerial vehicle 10b is hanging from rail 7 via the connector. Rail 7 is, for example but not limited to, an elongated stick-like member or a wire.

As illustrated in FIG. 35A, rail 7 is installed at a position spaced apart from the ground surface and between the plurality of support pillars 19. For example, rail 7 is stretched at a height of greater than or equal to about 10 meters and less than or equal to 13 meters from the ground surface so that unmanned aerial vehicle 10b can move along a drone highway that runs at a height of greater than or equal to about 10 meters and less than or equal to 13 meters from the ground surface. Therefore, rail 7 may be stretched at a height of greater than or equal to about 12 meters and less than or equal to about 13 meters from the ground surface.

In a case where support pillar 19 is a utility pole, a lightning rod, a power transmission line, and so on are provided on the utility pole. Normally, a lightning rod is mounted at the leading end of the utility pole, a high-voltage power transmission line is provided below the lightning rod, and a low-voltage power transmission line is provided below the high-voltage power transmission line and at a height of greater than or equal to about 13 meters. Then, if the height of a typical home or the like is about 10 meters, it is conceivable that there is a space extending from a height of greater than or equal to about 10 meters to a height of less than or equal to about 13 meters. As unmanned aerial vehicle 10b flies along a position higher than the height of homes, unmanned aerial vehicle 10b is less likely to make contact with the homes or the power transmission lines, and the privacy of the user serving as a receiver and the privacy of people in the facilities such as the homes can be protected.

The numerical values for these heights are merely examples and vary depending on the surrounding environment, and thus these numerical values for the heights are not limiting. Therefore, there may be a case where the drone highway is installed along a position lower than a height of about 10 meters from the ground surface.

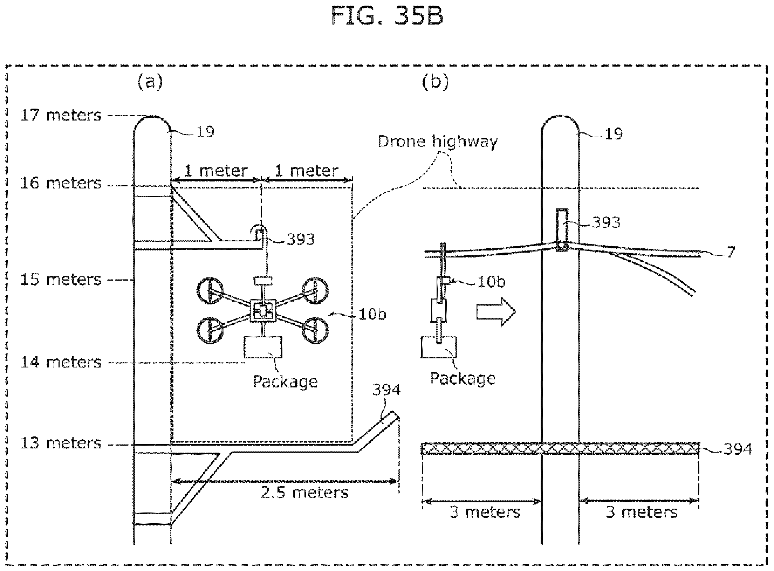

FIG. 35B is a schematic diagram illustrating an example of a position of a drone highway in flying system 1 according to Embodiment 3. In FIG. 35B, (a) illustrates a state as viewed in the moving direction of unmanned aerial vehicle 10b, and (b) illustrates a state as viewed in a direction orthogonal the moving direction of unmanned aerial vehicle 10b.

As illustrated in (a) and (b) in FIG. 35B, for example, in a case where support pillar 19 is a utility pole or the like that is 17 meters high from the ground surface, rail 7 is provided along a position at a height of greater than or equal to about 15 meters and less than or equal to about 16 meters. Unmanned aerial vehicle 10b along with a package therein is located within a range from higher than or equal to about 13 meters to lower than or equal to about 16 meters.

The drone highway has a width of about 2 meters. Therefore, if another rail 7 is to be installed across from rail 7, rail 7 is installed with its width taken into account as well.

Protective net 394 is provided on support pillar 19 at a position that is about 13 meters high from the ground surface. Protective net 394 is stretched along a position vertically below rail support portion 393 and is supported by support pillar 19. Specifically, protective net 394 is supported by support pillar 19 such that protective net 394 is substantially parallel to a plane orthogonal to the lengthwise direction of support pillar 19. Protective net 394 is provided along a position vertically below the drone highway such that protective net 394 stretches out from support pillar 19. In FIG. 35B, protective net 394 stretches out about 2.5 meters from support pillar 19 and measures about 6 meters or more in the moving direction of unmanned aerial vehicle 10b (i.e., the direction in which rail 7 extends). When protective net 394 and unmanned aerial vehicle 10b are viewed in a plan view, protective net 394 is larger than unmanned aerial vehicle 10b. Protective net 394 is a structure made of a net or fabric having cushioning effect, for example. Protective net 394 keeps unmanned aerial vehicle 10b from colliding with the ground even if connector 330 becomes disengaged from rail 7.

FIG. 36 is a schematic diagram illustrating an example of how unmanned aerial vehicle 10b of flying system 1 stores a package into delivery box 8 via lead-in support pillar 19b and lead-in wire 395 according to Embodiment 3. FIG. 37 is a perspective view illustrating an example of how unmanned aerial vehicle 10b of flying system 1 stores a package into delivery box 8 via lead-in support pillar 19b and lead-in wire 395 according to Embodiment 3.

As illustrated in FIG. 36 and FIG. 37, lead-in support pillar 19b is disposed within a predetermined site and installed on the ground or on a facility, for example. FIG. 36 and FIG. 37 illustrate an example in which lead-in support pillar 19b is installed on the ground. Lead-in support pillar 19b is shorter than support pillar 19, and one end of lead-in wire 395 is fixed to lead-in support pillar 19b. The leading end of lead-in support pillar 19b is located at a position lower than rail 7 and the power transmission lines.

Lead-in wire 395 is stretched to rail 7. Specifically, the one end of lead-in wire 395 is connected and fixed to lead-in support pillar 19b, and the other end of lead-in wire 395 is stretched and fixed to rail 7. Since the connector of unmanned aerial vehicle 10b includes a hook, unmanned aerial vehicle 10b can made a direct connection from rail 7 to lead-in wire 395 at a connection point (branching point) of the other end of lead-in wire 395 and rail 7. This connection point is provided between a first support pillar and an adjacent second support pillar among the plurality of support pillars 19. Alternatively, the connection point may be provided on the first support pillar or the second support pillar.

Protective net 394 is disposed along a position vertically below the connection point and supported by support pillar 19. Even if the connector becomes disengaged from the connection point, protective net 394 can keep unmanned aerial vehicle 10b from colliding with the ground surface.

The connector connected to rail 7 makes a switch from rail 7 to lead-in wire 395 at the connection point. Then, lead-in wire 395 becomes connected to the connector and guides the connector to lead-in support pillar 19b. Thus, unmanned aerial vehicle 10b arrives at lead-in support pillar 19b. In this case, lead-in support pillar 19b serves substantially as a receiver.

In the present embodiment, flying system 1 includes protective net 394, lead-in support pillar 19b, and lead-in wire 395. Alternatively, flying system 1 does not need to include lead-in support pillar 19b and lead-in wire 395. Unmanned aerial vehicle 10b may lower a package upon arriving at a receiver, and lead-in support pillar 19b and lead-in wire 395 are not essential constituent elements of flying system 1.

Delivery box 8 is installed at a receiver, such as a home. In FIG. 36 and FIG. 37, delivery box 8 is installed at a root portion of lead-in support pillar 19b. However, so long as unmanned aerial vehicle 10b can store a package into delivery box 8, there is no particular limitation on the installation location of delivery box 8. Delivery box 8 serves as a destination point for storing a package transported by unmanned aerial vehicle 10b.

As illustrated in FIG. 36 and FIG. 37, lead-in support pillar 19b is disposed within a predetermined site and installed on the ground, for example. Lead-in support pillar 19b is shorter than support pillar 19, and one end of lead-in wire 395 is fixed to lead-in support pillar 19b.

Lead-in wire 395 is stretched to rail 7. Specifically, the one end of lead-in wire 395 is connected and fixed to lead-in wire 395, and the other end of lead-in wire 395 is stretched and fixed to rail 7. Since the connector of unmanned aerial vehicle 10b includes a hook, unmanned aerial vehicle 10b can made a direct connection from rail 7 to lead-in wire 395 at a connection point of the other end of lead-in wire 395 and rail 7. This connection point is provided between a first support pillar and an adjacent second support pillar among the plurality of support pillars 19. Alternatively, the connection point may be provided on the first support pillar or the second support pillar. To be more specific, the height from the installation surface to first connection point P1 at which lead-in wire 395 and lead-in support pillar 19b are connected to each other is lower than the height from the installation surface to second connection point P2 at which lead-in wire 395 and support pillar 19 or rail 7 are connected to each other. The installation surface is the ground surface in the present embodiment. In a case where support pillar 19 or lead-in support pillar 19b is grounded, the portion of the building where support pillar 19 or lead-in support pillar 19b is connected serves as the installation surface.

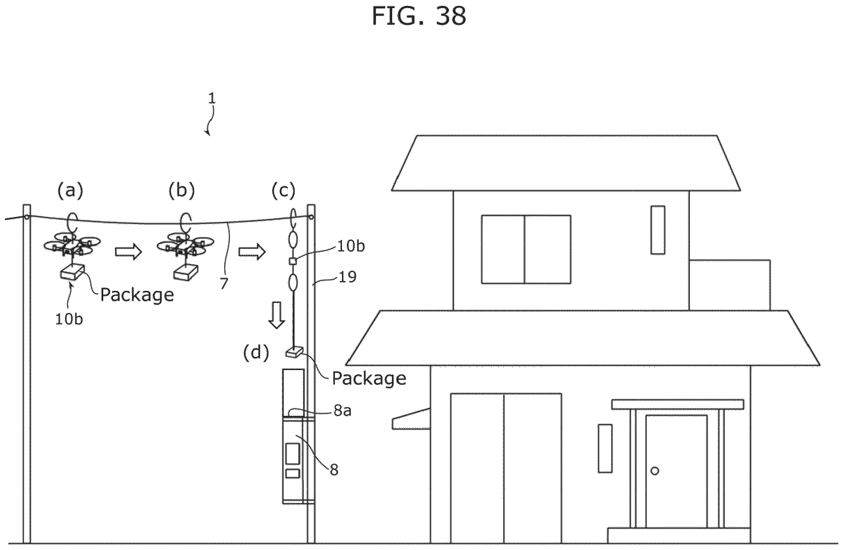

FIG. 38 is a side view illustrating an example of how unmanned aerial vehicle 10b of flying system 1 according to Embodiment 3 stores a package into delivery box 8 via support pillar 19 and rail 7 while vehicle main body 312 of unmanned aerial vehicle 10b has an attitude substantially parallel to the vertical direction.

In a case where opening 8a of delivery box 8 is small, unmanned aerial vehicle 10b may come into contact with support pillar 19 (or a lead-in support pillar), and this may prevent unmanned aerial vehicle 10b from storing a package into delivery box 8. Therefore, as illustrated in FIG. 38, control processor 11 of unmanned aerial vehicle 10b changes the attitude of vehicle main body 312 to an attitude substantially parallel to the vertical direction by controlling an actuator and brings vehicle main body 312 into the upright attitude. Control processor 11 brings vehicle main body 312 into the upright attitude by controlling the actuator so as to increase angle θ formed by the normal direction of the virtual plane containing the plurality of propellers 22 as illustrated in FIG. 30 relative to the support direction of the connector (i.e., the vertical direction).

Whether opening 8a of delivery box 8 is small is determined based on image information or the like acquired from camera sensor 45 or the like provided in unmanned aerial vehicle 10b.

For example, as illustrated in (a) and (b) in FIG. 38, unmanned aerial vehicle 10b moves along rail 7. Control processor 11 of unmanned aerial vehicle 10b captures an image of opening 8a of delivery box 8 with camera sensor 45 or the like and determines, based on the captured image information, whether unmanned aerial vehicle 10b can store a package into delivery box 8 with the virtual plane of vehicle main body 312 being oriented substantially parallel to the horizontal direction. If control processor 11 determines, based on the above determination result, that unmanned aerial vehicle 10b cannot store the package into delivery box 8 with the virtual plane of vehicle main body 312 being oriented substantially parallel to the horizontal direction, control processor 11 changes the attitude of vehicle main body 312 to an attitude substantially parallel to the vertical direction by controlling movable block 340. As illustrated in (c) in FIG. 38, unmanned aerial vehicle 10b arrives at a position vertically above delivery box 8. As illustrated in (d) in FIG. 38, control processor 11 reels out wire 351 and lowers the package by controlling wire control module 311 and stores the package into delivery box 8. Such flying system 1 reliably stores a package into delivery box 8.

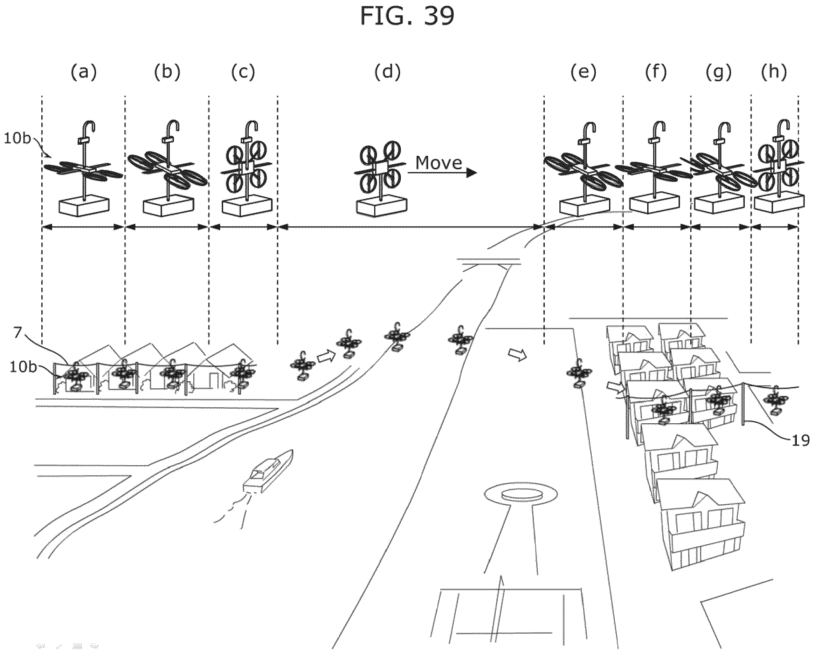

FIG. 39 is a schematic diagram illustrating an example in which unmanned aerial vehicle 10b of flying system 1 flies in a location where no rail 7 is provided according to Embodiment 3. There may be a location, such as a river, where no rail 7 can be installed depending on the widthwise dimension of the location. Thus, FIG. 39 illustrates an example in which unmanned aerial vehicle 10b crosses over a river.

As illustrated in (a) to (c) in FIG. 39, movable block 340 tilts vehicle main body 312 so as to change the attitude of vehicle main body 312 from the attitude where the virtual plane of vehicle main body 312 is substantially horizontal to the upright attitude. Unmanned aerial vehicle 10b accelerates in order to cross over the river.

As illustrated in (c) and (d) in FIG. 39, connector 330 becomes disengaged from rail 7.

As illustrated in (d) and (e) in FIG. 39, unmanned aerial vehicle 10b crosses over the river by utilizing the propelling force caused by the acceleration and with the use of the pair of wings 313. Control processor 11 calculates the position of rail 7 based on image information and so on. Upon unmanned aerial vehicle 10b approaching rail 7, control processor 11 controls movable block 340 so as to tilt vehicle main body 312 such that the attitude of vehicle main body 312 is changed from the upright attitude to the attitude where the virtual plane of vehicle main body 312 is substantially horizontal. This causes unmanned aerial vehicle 10b to decelerate.

As illustrated in (e) and (f) in FIG. 39, control processor 11 calculates the position of rail 7 based on image information and so on, and connector 330 of unmanned aerial vehicle 10b connects itself to rail 7 installed on the other side of the river.

As illustrated in (f), (g), and (h) in FIG. 39, after unmanned aerial vehicle 10b has decelerated and connected connector 330 to rail 7, control processor 11 controls movable block 340 so as to tilt vehicle main body 312 such that the attitude of vehicle main body 312 is changed from the attitude where the virtual plane of vehicle main body 312 is substantially horizontal to the upright attitude. This causes unmanned aerial vehicle 10b to accelerate to the speed that allows unmanned aerial vehicle 10b to safely travel on rail 7. In this manner, unmanned aerial vehicle 10b crosses over a location, such as a river, where rail 7 cannot be installed.

### Advantageous Effects

Next, the advantageous effects achieved by unmanned aerial vehicle 10b and flying system 1 according to the present embodiment will be described.

Unmanned aerial vehicle 10b delivers a package and includes a plurality of rotary wings, a plurality of propeller control modules 12b that each rotate a corresponding one of the plurality of rotary wings, vehicle main body 312 that supports the plurality of propeller control modules 12b, connector 330 that is to be connected to rail 7 located at a position spaced apart from the ground surface with vehicle main body 312 hanging from connector 330, movable block 340 that sets an inclination of an virtual plane containing the plurality of rotary wings relative to a support direction in which connector 330 is supported on rail 7, and control processor 11 that controls the plurality of propeller control modules 12b and movable block 340. Connector 330 includes first end 330a connected to vehicle main body 312 and second end 330b to be slidably connected to rail 7. The support direction is a direction extending from first end 330a toward second end 330b of connector 330. When second end 330b of connector 330 is connected to rail 7, control processor 11 (i) sets the rotation rate of the plurality of propeller control modules 12b to the rotation rate that is lower than the minimum rotation rate necessary for causing unmanned aerial vehicle 10b to hover and that is higher than the minimum rotation rate necessary for propelling unmanned aerial vehicle 10b in the direction in which rail 7 extends and (ii) causes movable block 340 to increase angle θ formed by the normal direction of the virtual plane relative to the support direction of connector 330.

According to this configuration, unmanned aerial vehicle 10b can move along rail 7 while connector 330 is connected to rail 7. In the case of (i), control processor 11 controls the rotation rate of the plurality of propeller control modules 12b so as to achieve the rotation rate that is lower than the minimum rotation rate necessary for causing unmanned aerial vehicle 10b to hover and that is higher than the minimum rotation rate necessary for propelling unmanned aerial vehicle 10b. Thus, unmanned aerial vehicle 10b can move along rail 7 at an appropriate speed. In the case of (ii), control processor 11 controls movable block 340 so as to change the inclination of the virtual plane containing the plurality of rotary wings relative to the support direction of connector 330. This makes it possible to regulate the speed of unmanned aerial vehicle 10b.

Flying system 1 includes unmanned aerial vehicle 10b, a plurality of support pillars 19, and rail 7 stretched between two adjacent support pillars among the plurality of support pillars 19.

Movable block 340 is disposed between vehicle main body 312 and connector 330.

This configuration allows movable block 340 to change angle θ of connector 330 relative to vehicle main body 312 with ease.

For example, in a case where connector 330 is disposed at or around the center of gravity of vehicle main body 312, movable block 340 is also disposed at or around the center of gravity of vehicle main body 312. This configuration makes it possible to balance the center of gravity of unmanned aerial vehicle 10b.

Unmanned aerial vehicle 10b further includes a pair of wings 313.

According to this configuration, for example, unmanned aerial vehicle 10b can be rotated in the horizontal direction if the pair of wings 313 are yaw wings, or unmanned aerial vehicle 10b can be rotated in the vertical direction if the pair of wings 313 are pitch wings. Therefore, the traveling direction of unmanned aerial vehicle 10b can be steered freely, and unmanned aerial vehicle 10b can be moved stably.

After control processor 11 has increased angle θ with movable block 340, control processor 11 disengages connector 330 from rail 7 if the propelling speed of unmanned aerial vehicle 10b has exceeded a predetermined value.

This configuration can keep connector 330 from making contact with rail 7, and thus the safety of unmanned aerial vehicle 10b can be increased.

If connector 330 is being disengaged from rail 7, control processor 11 causes movable block 340 to reduce angle θ and controls the rotation rate of the plurality of propeller control modules 12b so as to achieve a rotation rate higher than the minimum rotation rate necessary for causing unmanned aerial vehicle 10b to hover.

According to this configuration, when connector 330 is disengaged from rail 7, reducing angle θ allows unmanned aerial vehicle 10b to hover to a predetermined height from the ground surface. This can keep unmanned aerial vehicle 10b from making contact with an object, and thus the safety of unmanned aerial vehicle 10b can be increased.

Control processor 11 controls the rotation rate of the plurality of propeller control modules 12b so as to increase angle θ to greater than 15 degrees in (ii).

Control processor 11 controls the rotation rate of the plurality of propeller control modules 12b so as to increase angle θ to greater than 45 degrees in (ii).

Control processor 11 controls the rotation rate of the plurality of propeller control modules 12b so as to increase angle θ to greater than 65 degrees in (ii).

Control processor 11 controls the rotation rate of the plurality of propeller control modules 12b so as to increase angle θ to greater than 80 degrees in (ii).

Setting the angle of movable block 340 appropriately makes it possible to adjust the ratio of the propulsive power and the lifting power that act on unmanned aerial vehicle 10b. As angle θ increases, the rate of contribution of the power caused by the rotation of the plurality of propeller control modules 12b to the propulsive power of unmanned aerial vehicle 10b acting in substantially the horizontal direction increases. Accordingly, even if the rotation rate of the plurality of propeller control modules 12b is reduced, unmanned aerial vehicle 10b can still obtain a sufficient propulsive power.

Connector 330 includes support portion 332 swingably connected to vehicle main body 312 and first arm 331 connected to one end of support portion 332.

This configuration allows first arm 331 to swing along with a swinging movement of support portion 332. Therefore, first arm 331 can connect itself to rail 7 more easily.

First arm 331 is a hanger for hanging unmanned aerial vehicle 10b from rail 7.

According to this configuration, first arm 331 can be hung on rail 7 when unmanned aerial vehicle 10b has stopped. Therefore, a package can be placed at a receiver with unmanned aerial vehicle 10b hanging from rail 7.

Unmanned aerial vehicle 10b further includes wire 351 that is connected to vehicle main body 312 and that hangs a package therefrom and a lift motor that can reel in wire 351. Control processor 11 positions unmanned aerial vehicle 10b at a position vertically above delivery box 8 for storing a package with connector 330 being connected to rail 7. Then, control processor 11 reels out wire 351 by driving the lift motor and lowers the package from vehicle main body 312 so as to store the package into delivery box 8.

According to this configuration, upon unmanned aerial vehicle 10b arriving at the destination point, control processor 11 controls the lift motor so as to reel out wire 351. Thus, unmanned aerial vehicle 10b can lower the package and store the package into delivery box 8. Therefore, unmanned aerial vehicle 10b can deliver the package to the receiver.

While control processor 11 is reeling out wire 351, control processor 11 adjusts at least one of the position and the orientation of vehicle main body 312 in accordance with the position of the package relative to delivery box 8.

According to this configuration, even if the position of unmanned aerial vehicle 10b fails to match the position directly above delivery box 8, control processor 11 can position vehicle main body 312 relative to delivery box 8 by adjusting at least one of the position and the orientation of vehicle main body 312. Therefore, unmanned aerial vehicle 10b can reliably lower the package and store the package into delivery box 8, which in turn makes it possible to reliably deliver the package to the receiver.

In particular, even if unmanned aerial vehicle 10b moves from a position directly above delivery box 8 due to the wind or the like, unmanned aerial vehicle 10b can position vehicle main body 312 relative to delivery box 8.

When the position of the package is displaced in the direction of the arrow from the position vertically above delivery box 8, control processor 11 moves unmanned aerial vehicle 10b in the upwind direction opposite the direction of the arrow, along the direction in which rail 7 extends.

According to this configuration, even if the position of the package has changed (moved) in the direction of the arrow via wire 351 due to the wind or the like, control processor 11 can change the position of unmanned aerial vehicle 10b in the upwind direction, which is the opposite direction of the direction of the arrow. Therefore, unmanned aerial vehicle 10b can reliably lower the package and store the package into delivery box 8, which in turn makes it possible to more reliably deliver the package to the receiver.

When the position of the package is displaced in the direction of the arrow from the position vertically above delivery box 8, control processor 11 swings unmanned aerial vehicle 10b about rail 7 and moves the center of gravity of unmanned aerial vehicle 10b in the upwind direction, which is the opposite direction of the direction of the arrow.

According to this configuration, even if the package displaces (moves) in the direction of the arrow via wire 351 due to the wind or the like, control processor 11 can change the position of unmanned aerial vehicle 10b in the upwind direction, which is the opposite direction of the direction of the arrow, by moving the center of gravity of unmanned aerial vehicle 10b. Therefore, unmanned aerial vehicle 10b can reliably lower the package and store the package into delivery box 8, which in turn makes it possible to more reliably deliver the package to the receiver.

In flying system 1, each of the plurality of support pillars 19 is a utility pole.

According to this configuration, existing utility poles can be used as support pillars 19, and no new support pillar 19 needs to be installed in order to stretch rail 7. Therefore, this system can prevent a surge in the cost of installation.

Flying system 1 further includes lead-in support pillar 19b disposed within a predetermined site and lead-in wire 395 stretched to rail 7. The height from the ground surface to first connection point P1 at which lead-in wire 395 and lead-in support pillar 19b are connected to each other is lower than the height from the ground surface to second connection point P2 at which lead-in wire 395 and rail 7 are connected to each other.

According to this configuration, rail 7 is disposed at a position higher than first connection point P1, and thus unmanned aerial vehicle 10b can move along a high position. Since unmanned aerial vehicle 10b travels along a position where unmanned aerial vehicle 10b is less likely to be recognized by people, the privacy of the user at the receiver and the privacy of people in a facility, such as a home, that is located so as to face rail 7 can be protected.

The utility pole supports a power transmission line, and rail 7 is provided at a position that is lower than the power transmission line and higher than the leading end of lead-in support pillar 19b.

According to this configuration, since rail 7 is disposed under the power transmission line, rail 7 can be disposed at a position where unmanned aerial vehicle 10b will not make contact with the power transmission line, and unmanned aerial vehicle 10b can travel along rail 7. Therefore, the safety of unmanned aerial vehicle 10b delivering packages can be ensured.

Connector 330 may further include a wheel such as the one according to Variation 1 of Embodiment 4 that is connected to first arm 331 and that is to rotatably make contact with rail 7.

According to this configuration, when unmanned aerial vehicle 10b becomes connected to rail 7, unmanned aerial vehicle 10b can move along rail 7 with the wheel making contact with rail 7. The wheel starts rotating upon friction with rail 7. Therefore, unmanned aerial vehicle 10b can travel on rail 7 solely with the propelling force produced by the rotation of the rotary wings in the traveling direction. Thus, this configuration renders it unnecessary for unmanned aerial vehicle 10b to use the rotary force of the rotary wings as a lifting force for lifting itself up. As a result, the energy consumed by unmanned aerial vehicle 10b can be reduced.

### VARIATION 1 OF EMBODIMENT 3

In the following, the basic configuration of flying system 1 according to the present variation is identical to the basic configuration of the flying system according to Embodiment 3 and so on. Therefore, the descriptions of the basic configuration of flying system 1 according to the present variation will be omitted as appropriate.

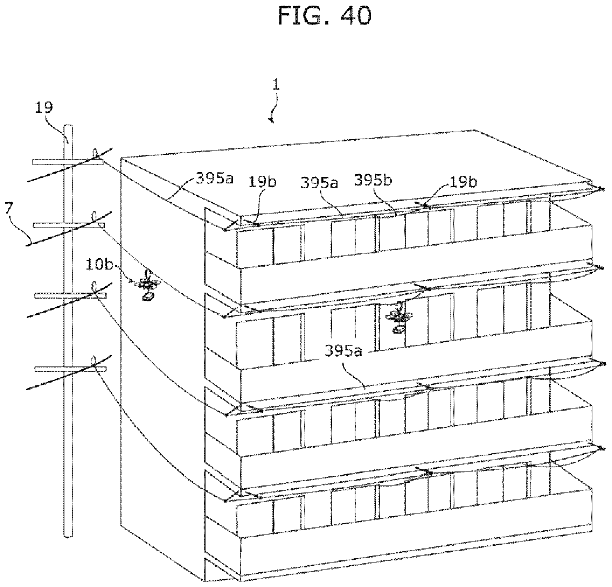

FIG. 40 is a schematic diagram illustrating an example in which lead-in support pillar 19b, first lead-in wire 395a, and second lead-in wire 395b of flying system 1 are installed on an apartment building according to Variation 1 of Embodiment 3.

FIG. 40 illustrates an example in which lead-in support pillar 19b is installed on a side wall of a ceiling portion of a facility (an apartment building in the present variation). In FIG. 40, first lead-in wire 395a and second lead-in wire 395b are used as lead-in wires.

First lead-in wire 395a is stretched over the side wall of the ceiling portion in each floor via lead-in support pillars 19b installed on the side wall of the ceiling portion. One end of second lead-in wire 395b is connected to lead-in support pillar 19b or first lead-in wire 395a, and the other end of first lead-in wire 395a is connected to the outer wall of the facility. In this example, support pillar 19b may also be provided on the outer wall. Second lead-in wire 395b may or may not be connected to every apartment unit in the facility.

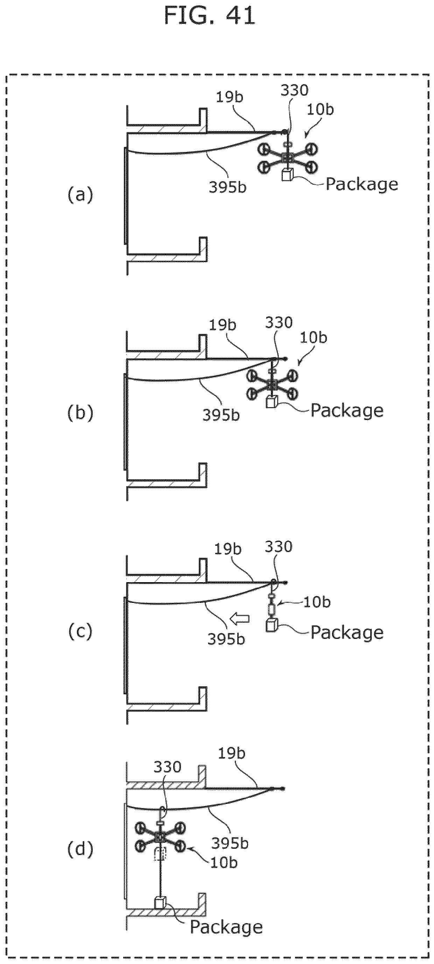

FIG. 41 is a schematic diagram illustrating an example of how unmanned aerial vehicle 10b delivers a package to the apartment building according to Variation 1 of Embodiment 3.

For example, as illustrated in (a) and (b) in FIG. 41, unmanned aerial vehicle 10b moves along first lead-in wire 395a with connector 330 being connected to first lead-in wire 395a. As illustrated in (c) in FIG. 41, unmanned aerial vehicle 10b changes the connection of connector 330 to second lead-in wire 395b at a connection point of second lead-in wire 395b connected to the receiver and first lead-in wire 395a or lead-in support pillar 19b. As illustrated in (d) in FIG. 41, unmanned aerial vehicle 10b arrives at the receiver of the destination as being guided by second lead-in wire 395b and unloads the package.

In FIG. 40, first lead-in wire 395a and second lead-in wire 395b are stretched over the apartment building. Alternatively, rail 7 may be stretched over the apartment building.

### VARIATION 2 OF EMBODIMENT 3

In the following, the basic configuration of flying system 1 according to the present variation is identical to the basic configuration of the flying system according to Embodiment 3 and so on. Therefore, the descriptions of the basic configuration of flying system 1 according to the present variation will be omitted as appropriate.

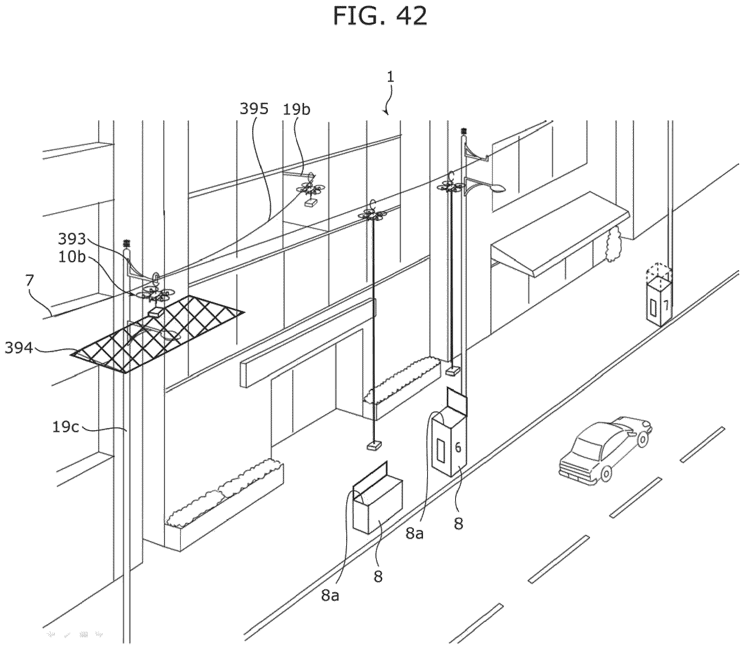

FIG. 42 is a schematic diagram illustrating an example in which support pillar 19c of flying system 1 is a streetlight according to Variation 2 of Embodiment 3.

As illustrated in FIG. 42, delivery box 8 is disposed on a sidewalk and provided for each facility. A package is delivered to each floor of the facility via lead-in support pillar 19b and lead-in wire 395. Lead-in support pillar 19b and lead-in wire 395 may be installed if a receiver can be on the second floor or higher of the facility, for example.

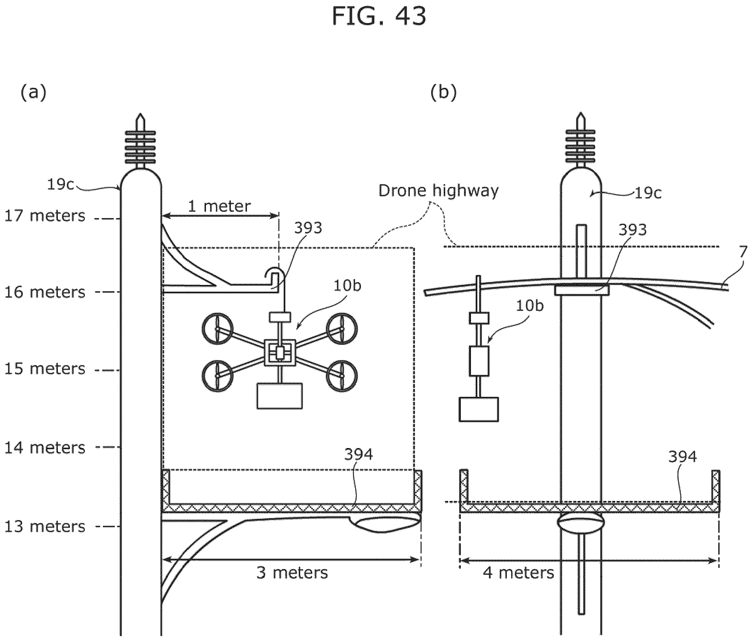

FIG. 43 is a schematic diagram illustrating an example of where a drone highway is located in a case where support pillar 19c of flying system 1 is a streetlight according to Variation 2 of Embodiment 3. In FIG. 43, (a) illustrates a state as viewed in the moving direction of unmanned aerial vehicle 10b, and (b) illustrates a state as viewed in a direction orthogonal the moving direction of unmanned aerial vehicle 10b.

As illustrated in (a) and (b) in FIG. 43, protective net 394 is provided along a position vertically above the illumination device of the streetlight according to the present variation. Protective net 394 is supported by and fixed to a pole that supports the illumination device of support pillar 19c. In FIG. 43, protective net 394 stretches out about three meters from the pole and measures about four meters in the moving direction of unmanned aerial vehicle 10b (i.e., the direction in which rail 7 extends). The size of protective net 394 may vary depending on the environment where the illumination device is installed.

Next, the advantageous effects achieved by unmanned aerial vehicle 10b and flying system 1 according to the present variation will be described.

The plurality of support pillars 19c are streetlights.

According to this configuration, existing streetlights can be used as support pillars 19c, and no new support pillar 19c needs to be installed in order to stretch rail 7. Therefore, this system can prevent a surge in the cost of installation.

### VARIATION 3 OF EMBODIMENT 3

In the following, the basic configurations of unmanned aerial vehicle 10c and flying system 1 according to the present variation are identical to the basic configurations of the flying system according to Embodiment 3 and so on. Therefore, the descriptions of the basic configuration of flying system 1 according to the present variation will be omitted as appropriate. The present variation differs from Embodiment 3 and so on in the configuration of connector 330c.

Connector 330c of unmanned aerial vehicle 10c according to the present variation includes first arm 331, support portion 332, and first actuator 341. Unlike Embodiment 3, in the present variation, connector 330c does not include base 333 and angle actuator 343.

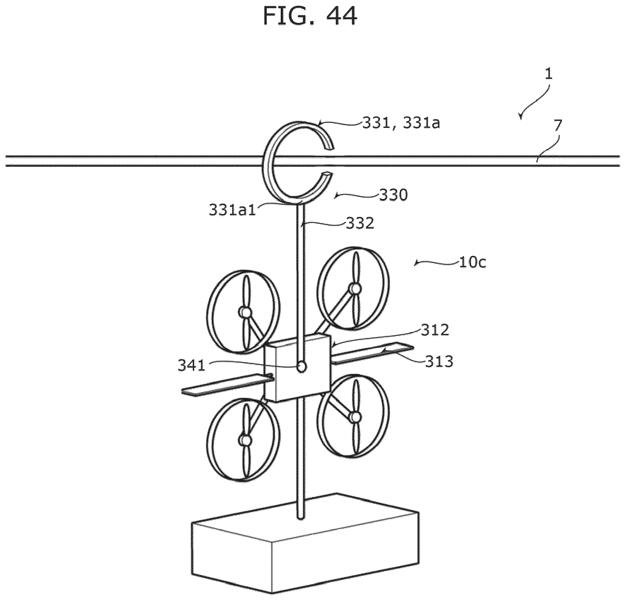

FIG. 44 is a perspective view illustrating an example of unmanned aerial vehicle 10c of flying system 1 according to Variation 3 of Embodiment 3.

As illustrated in FIG. 44, first hook 331a of first arm 331 according to the present variation has a substantially C-like shape in which a part of the ring-shaped outer shell portion is missing as viewed in the traveling direction of unmanned aerial vehicle 10c. First connected end 331a1 of first hook 331a is connected to the other end of support portion 332.

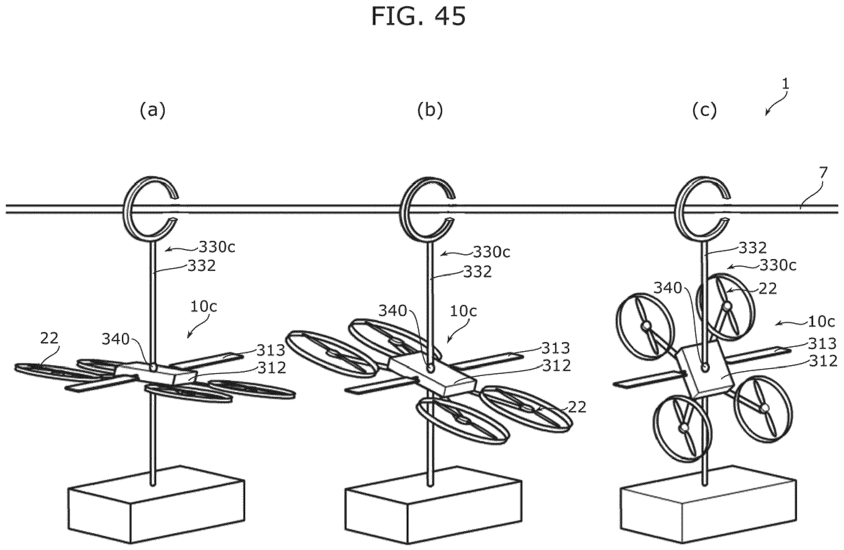

FIG. 45 is a perspective view illustrating an example of changing the attitude of vehicle main body 312 of unmanned aerial vehicle 10c of flying system 1 according to Variation 3 of Embodiment 3.

As illustrated in (a), (b), and (c) in FIG. 45, control processor 11 changes the attitude of vehicle main body 312 while maintaining the attitude of support portion 332 of connector 330c by controlling movable block 340, the plurality of propellers 22, and the pair of wings 313. Specifically, control processor 11 changes the angle of the normal direction of the virtual plane relative to the direction in which support portion 332 extends.

### EMBODIMENT 4

Hereinafter, since the basic configuration of unmanned aerial vehicle 10c according to the present embodiment is the same as the basic configuration of the unmanned aerial vehicle according to Embodiment 3 and the like, repeated description of the basic configuration of unmanned aerial vehicle 10c in the present embodiment will be omitted where appropriate. The present embodiment differs from Embodiment 3 and so on in that unmanned aerial vehicle 10c is further provided with second arm 751.

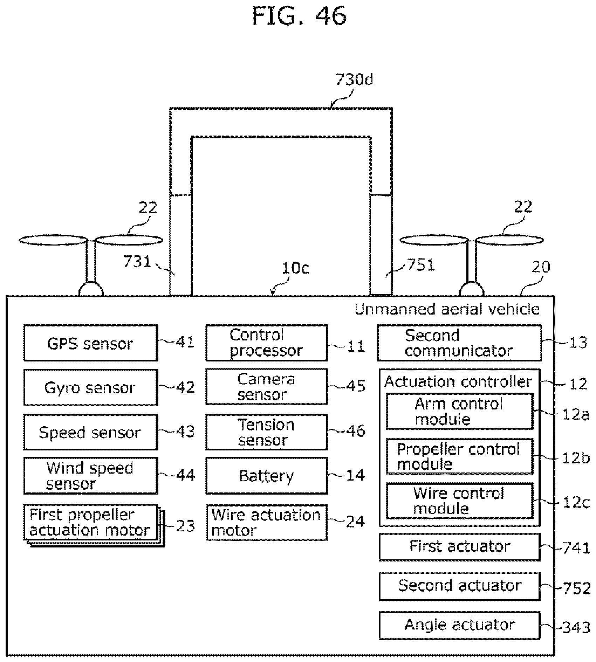

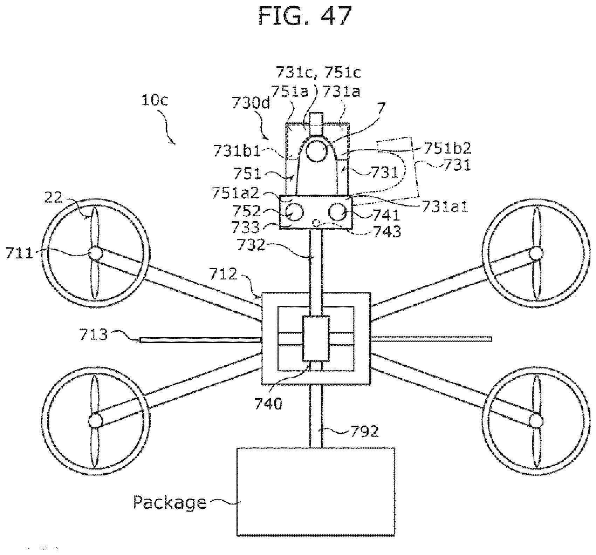

FIG. 46 is a block diagram illustrating an example of a configuration of unmanned aerial vehicle 10c according to Embodiment 4. FIG. 47 is a front view of an example of unmanned aerial vehicle 10c according to Embodiment 4. Specifically, FIG. 47 is a front view unmanned aerial vehicle 10c of flying system 1 according to Embodiment 4.

As illustrated in FIG. 46 and FIG. 47, connector 730d according to the present embodiment further includes, in addition to first actuator 741 functioning as the first actuator according to Variation 3 of Embodiment 3 second arm 751 and second actuator 752.

Second arm 751 is connected to one end of support portion 732. Specifically, second arm 751 is connected to support portion 732 via base 733 so as to oppose first arm 731. First arm 731 and second arm 751 are connected to base 733 and lie in different planes. Second arm 751 is a hanger for hanging unmanned aerial vehicle 10c from rail 7.

Second arm 751 includes second hook 751a.

Second hook 751a extends from second connected end 751a2 connected to second actuator 752 to second open end 751b2 on the other end. Second hook 751a includes second bent portion 751c that is bent in a second direction opposite to the first direction and is located between second connected end 751a2 and second open end 751b2. Second hook 751a has a substantially C-like shape, a substantially F-like shape, a substantially J-like shape, or a substantially U-like shape in which a part of the ring-shaped outer shell portion is missing as viewed in the traveling direction of unmanned aerial vehicle 10c. The portion cut out from the outer shell portion constitutes an opening of second hook 751a through which rail 7 can enter the space enclosed by second arm 751. The opening lies between second open end 751b2 and second connected end 751a2. Second hook 751a is an example of a second end of connector 730d. In this example, second hook 751a may be provided with a wheel that allows it to make contact with and freely rotate on rail 7 as described above.

Second hook 751a and first hook 731a oppose each other. When second hook 751a and first hook 731a are viewed in the traveling direction of unmanned aerial vehicle 10c, second open end 751b2 and second connected end 751a2 of second hook 751a oppose, respectively, first open end 731b1 and first connected end 731a1 of first hook 731a with rail 7 interposed therebetween.

Base 733 is a portion where support portion 732 are connected to first arm 731 and second arm 751 and is disposed between support portion 732 and first and second arms 731 and 751. Base 733 is connected to first connected end 731a1 of first arm 731, second connected end 751a2 of second arm 751, and the other end of support portion 732.

Second actuator 752 sets the angle of second hook 751a relative to support portion 732. Second actuator 752 is disposed between support portion 732 and second hook 751a and swingably supports second connected end 751a2 of second hook 751a. In the present embodiment, second actuator 752 is disposed in base 733.

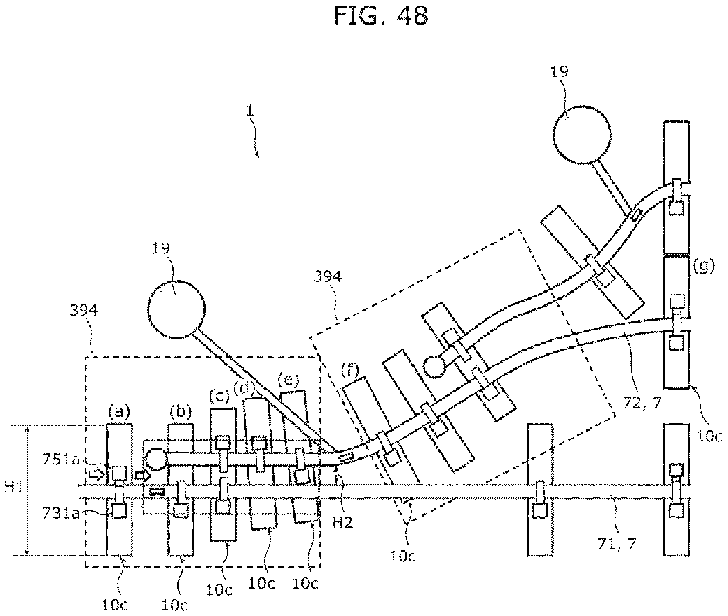

FIG. 48 is a top view illustrating an example of how the connection of connector 730d is switched from first rail 71 to second rail 72, as unmanned aerial vehicle 10c and rail 7 of flying system 1 according to Embodiment 4 are viewed from above. FIG. 48 illustrates first rail 71, second rail 72, and so on supported by support pillar 19.

As illustrated in FIG. 47 and FIG. 48, control processor 11 according to the present embodiment can switch the connection of connector 730d connected to first rail 71 to second rail 72 by controlling first actuator 341 and second actuator 752. This switching between rails 7 will be described later. Rail 7 is a collective term for first rail 71 and second rail 72. In the present embodiment, when the term rail 7 is used, rail 7 may include first rail 71 and second rail 72.

Flying system 1 according to the present embodiment includes protective net 394 as well as first rail 71 and second rail 72 stretched between two adjacent support pillars 19 among the plurality of support pillars 19.

When first rail 71 is regarded as a stock rail, second rail 72 is a rail that branches off from first rail 71. Second rail 72 is disposed in the vicinity of first rail 71 with a space provided therebetween. In other words, second rail 72 extends alongside first rail 71. A section where first rail 71 and second rail 72 are close to each other is an approaching region and is a turnout serving as a branching point where unmanned aerial vehicle 10c can switch between rails 7. Metaphorically speaking, second rail 72 is a tongue rail. The approaching region is a region where the distance (distance H2) between first rail 71 and second rail 72 is smaller than or equal to width H1 of unmanned aerial vehicle 10c. For example, the approaching region is a region where first rail 71 and second rail 72 come closest to each other.

Protective net 394 is stretched along a position vertically below the approaching region of first rail 71 and second rail 72 and is supported by support pillar 19.

### Operations

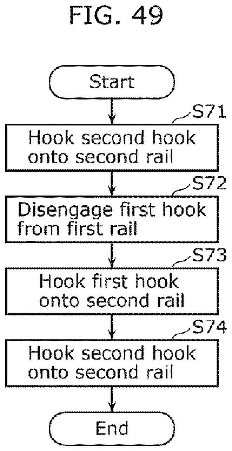

Next, operations performed by flying system 1 according to the present embodiment will be described. Unmanned aerial vehicle 10c of this flying system 1 can switch the connection from first rail 71 to second rail 72 with the use of the two arms including first arm 731 and second arm 751. FIG. 49 is a flowchart illustrating an example of an operation in which the connection of connector 730d of unmanned aerial vehicle 10c of flying system 1 is switched from first rail 71 to second rail 72 according to Embodiment 4. In this example described below, unmanned aerial vehicle 10c that is moving along first rail 71 switches its path from first rail 71 to second rail 72.

First, as illustrated in FIG. 46, in (a) in FIG. 48, and in FIG. 49, when first hook 731a and second hook 751a of connector 730d of unmanned aerial vehicle 10c are connected to first rail 71, unmanned aerial vehicle 10c is slidably hanging from first rail 71 via first hook 731a and second hook 751a. In this case, as illustrated in (b) and (c) in FIG. 48 and in FIG. 49, upon control processor 11 determining that unmanned aerial vehicle 10c has approached the leading end portion of second rail 72 and has passed this leading end portion based on image information and so on, control processor 11 controls second actuator 752 so as to cause second hook 751a to swing, become disengaged from first rail 71, and be hooked onto second rail 72 (S71). Control processor 11 recognizes the approaching region where second rail 72 approaches first rail 71 based on the image information and so on. Then, control processor 11 controls second actuator 752 in the approaching region so as to cause second hook 751a to swing and be hooked onto second rail 72. Thus, second hook 751a becomes connected to second rail 72, which results in the state illustrated in (c) in FIG. 48.

Next, as illustrated in (c) and (d) in FIG. 48 and in FIG. 49, control processor 11 controls first actuator 341 so as to cause first hook 731a to swing and become disengaged from first rail 71 (S72), which results in the state illustrated in (d) in FIG. 48.

Next, as illustrated in (d) and (e) in FIG. 48 and in FIG. 49, control processor 11 controls first actuator 341 so as to cause first hook 731a to swing and be hooked onto second rail 72. Thus, first hook 731a becomes connected to second rail 72 (S73). Thereafter, control processor 11 controls second actuator 752 so as to cause second hook 751a to swing and become disengaged from second rail 72, which results in the state illustrated in (e) in FIG. 48. Then, unmanned aerial vehicle 10c moves along second rail 72 or switches the connection of connector 730d from second rail 72 to a third rail.

In a case where unmanned aerial vehicle 10c moves along second rail 72 thereafter, as illustrated in (g) in FIG. 48 and in FIG. 49, control processor 11 controls second actuator 752 after unmanned aerial vehicle 10c has passed rail support portion 393 so as to cause second hook 751a to swing and be hooked onto second rail 72. Thus, second hook 751a becomes connected to second rail 72 (S74). As first hook 731a and second hook 751a are connected to second rail 72, unmanned aerial vehicle 10c becomes connected to second rail 72 so as not to be disengaged from second rail 72.

Next, how connector 730d moves when the connection of connector 730d is switched from first rail 71 to second rail 72 will be described in detail.

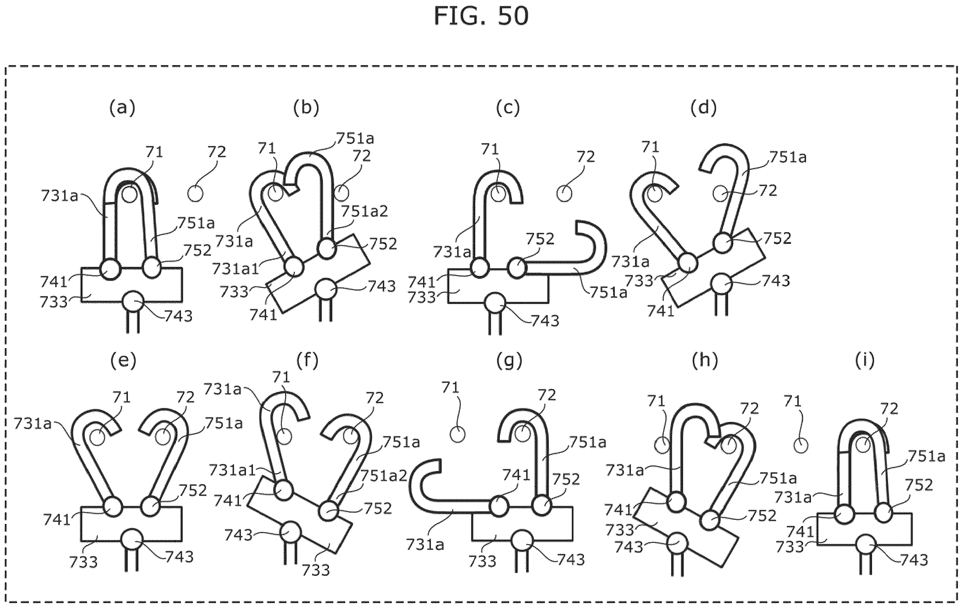

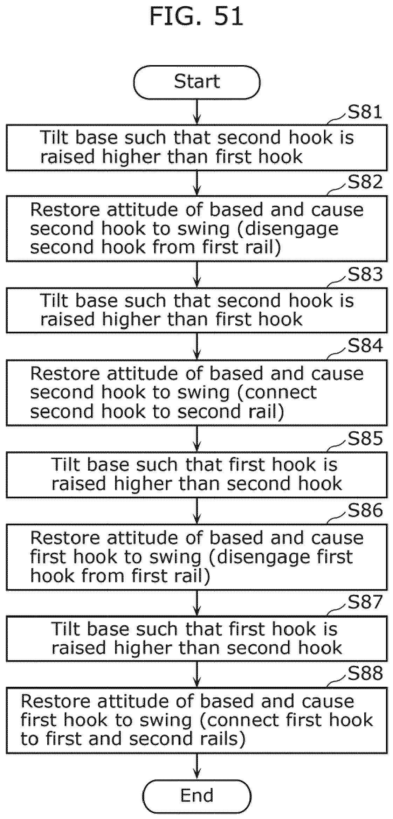

FIG. 50 is a rear view illustrating an example of how the connection of connector 730d is switched from first rail 71 to second rail 72, as unmanned aerial vehicle 10c and rail 7 of flying system 1 according to Embodiment 4 are viewed from the rear. FIG. 51 is a flowchart illustrating in detail an example of an operation in which the connection of connector 730d of unmanned aerial vehicle 10c of flying system 1 is switched from first rail 71 to second rail 72 according to Embodiment 4.

FIG. 50 illustrates first rail 71, second rail 72, and so on supported by support pillar 19. FIG. 50 illustrates an example in which unmanned aerial vehicle 10c, first rail 71, and second rail 72 are viewed in the traveling direction (toward the front side) of unmanned aerial vehicle 10c.

As illustrated in FIG. 46, in (a) and (b) in FIG. 50, and in FIG. 51, when control processor 11 hooks second hook 751a onto second rail 72, control processor 11 controls angle actuator 343 so as to change the angle of base 733 relative to support portion 732 and tilt base 733 such that second hook 751a is raised higher than first hook 731a (S81). At this point, second connected end 751a2 is located higher than first connected end 731a1. In this example, instead of base 733, vehicle main body 712 may be tilted.

As illustrated in FIG. 46, in (b) and (c) in FIG. 50 and in FIG. 51, second hook 751a becomes disengaged from first rail 71. Control processor 11 controls angle actuator 343 so as to restore the attitude of base 733 and controls second actuator 752 so as to cause second hook 751a to pass between first rail 71 and second rail 72. Then, control processor 11 causes second hook 751a to swing and disengages second hook 751a from first rail 71 (S82).

As illustrated in FIG. 46, in (d) in FIG. 50, and in FIG. 51, control processor 11 controls second actuator 752 so as to cause second hook 751a to swing and to bring second hook 751a close to second rail 72 and controls angle actuator 343 so as to change the angle of base 733 relative to support portion 732. Thus, control processor 11 tilts base 733 such that second hook 751a is raised higher than first hook 731a (S83).

As illustrated in FIG. 46, in (e) in FIG. 50, and in FIG. 51, control processor 11 controls angle actuator 343 so as to restore the attitude of base 733 and controls second actuator 752 so as to cause second hook 751a to swing and to hook second hook 751a onto second rail 72. Thus, second hook 751a becomes connected to second rail 72 (S8304).

As illustrated in FIG. 46, in (f) in FIG. 50, and in FIG. 51, when control processor 11 releases first hook 731a from first rail 71, control processor 11 controls angle actuator 343 so as to change the angle of base 733 relative to support portion 732 and tilt base 733 such that first hook 731a is raised higher than second hook 751a (S85). At this point, first connected end 731a1 is located higher than second connected end 751a2. In this example, instead of base 733, vehicle main body 712 may be tilted.

As illustrated in FIG. 46, in (f) and (g) in FIG. 50, and in FIG. 51, first hook 731a becomes disengaged from first rail 71. Control processor 11 controls angle actuator 343 so as to restore the attitude of base 733 and controls first actuator 341 so as to cause first hook 731a to swing and to disengage first hook 731a from first rail 71 (S86).

As illustrated in FIG. 46, in (h) in FIG. 50, and in FIG. 51, control processor 11 controls second actuator 752 so as to cause it to pass between first rail 71 and second rail 72 and approach second rail 72, and controls angle actuator 343 so as to change the angle of base 733 relative to support portion 732. Thus, control processor 11 tilts base 733 such that first hook 731a is raised higher than second hook 751a (S87).

As illustrated in FIG. 46, in (i) in FIG. 50, and in FIG. 51, control processor 11 controls angle actuator 343 so as to restore the attitude of base 733 and controls first actuator 341 so as to cause first hook 731a to swing and to hook first hook 731a onto second rail 72. Thus, first hook 731a becomes connected to second rail 72 (S88). With the above operation, first hook 731a and second hook 751a become connected to second rail 72.

### Advantageous Effects

Next, the advantageous effects achieved by flying system 1 according to the present embodiment will be described.

Connector 730d further includes second arm 751 connected to one end of support portion 732.

According to this configuration, not only first arm 731 but also second arm 751 can be connected to rail 7. Therefore, the possibility that unmanned aerial vehicle 10c falls off from rail 7 can be reduced, and the safety in the system that includes unmanned aerial vehicle 10c can be further increased.

First arm 731 is a first hanger for hanging unmanned aerial vehicle 10c from rail 7. Second arm 751 is a second hanger for hanging unmanned aerial vehicle 10c from rail 7. Connector 730d further includes first actuator 341 that sets the angle of first arm 731 relative to support portion 732 and second actuator 752 that sets the angle of second arm 751 relative to support portion 732.

This configuration makes it possible to hang unmanned aerial vehicle 10c from rail 7 reliably. Therefore, the possibility that unmanned aerial vehicle 10c falls off from rail 7 can be reduced, and the safety in the system that includes unmanned aerial vehicle 10c can be further increased.

Connector 730d further includes base 733 disposed between support portion 732 and first and second arms 731 and 751 and a third actuator that sets the angle of base 733 relative to support portion 732.

According to this configuration, the height of first arm 731 relative to vehicle main body 712 or the height of second arm 751 relative to main body 712 can be changed only by changing the angle of base 733. Therefore, the heights of first arm 731 and second arm 751 can be changed without tilting vehicle main body 712, and thus the stability of unmanned aerial vehicle 10c can be maintained.

First arm 731 includes first hook 731a that extends from first connected end 731a1 connected to first actuator 341 to first open end 731b1. Second arm 751 includes second hook 751a that extends from second connected end 751a2 connected to second actuator 752 to second open end 751b2. First hook 731a includes first bent portion 731c that is bent in a first direction and that is located between first connected end 731a1 and first open end 731b1. Second hook 751a includes second bent portion 751c that is bent in a second direction opposite the first direction and that is located between second connected end 751a2 and second open end 751b2.

According to this configuration, the horizontal attitude of vehicle main body 712 can be maintained when first hook 731a is hung on rail 7, and the horizontal attitude of vehicle main body 712 can be maintained also when second hook 751a is hung on rail 7. Therefore, first hook 731a and second hook 751a can maintain an appropriate attitude of unmanned aerial vehicle 10c.

First hook 731a and second hook 751a make it easier to hook unmanned aerial vehicle 10c from rail 7.

When unmanned aerial vehicle 10c is slidably hung from first rail 71 via first hook 731a, control processor 11 controls second actuator 752 so as to hook second hook 751a onto second rail 72 that extends along and adjacent to first rail 71 and controls first actuator 341 so as to disengage first hook 731a from first rail 71.

According to this configuration, for example, when first hook 731a of unmanned aerial vehicle 10c is connected to first rail 71 and if first hook 731a is disengaged from first rail 71 after second hook 751a has become connected to second rail 72, unmanned aerial vehicle 10c can switch the connection from first rail 71 to second rail 72 serving as another rail 7 and move along second rail 72. Therefore, unmanned aerial vehicle 10c can reliably switch from one rail 7 to another rail 7 at the branching point of these rails 7. Thus, the possibility that unmanned aerial vehicle 10c falls off can be reduced, and the safety in the system that includes unmanned aerial vehicle 10c can be further increased.

Flying system 1 includes unmanned aerial vehicle 10c, a plurality of support pillars 19, and first rail 71 and second rail 72 stretched between two adjacent support pillars 19 among the plurality of support pillars 19.

When unmanned aerial vehicle 10c is slidably hung from first rail 71 via first hook 731a and second hook 751a, control processor 11 controls second actuator 752 so as to disengage second hook 751a from first rail 71 and to hook second hook 751a onto second rail 72 extending along and adjacent to first rail 71 and controls first actuator 341 so as to disengage first hook 731a from first rail 71 and to hook first hook 731a onto second rail 72.

According to this configuration, for example, when first hook 731a and second hook 751a of unmanned aerial vehicle 10c are connected to first rail 71 and if first hook 731a is disengaged from first rail 71 and connected to second rail 72 after second hook 751a has been disengaged from first rail 71 and connected to second rail 72, unmanned aerial vehicle 10c can switch the connection from first rail 71 to second rail 72 serving as another rail 7 and then move along second rail 72. Therefore, unmanned aerial vehicle 10c can reliably switch from one rail 7 to another rail 7 at the branching point of these rails 7. Thus, the possibility that unmanned aerial vehicle 10c falls off can be reduced, and the safety in the system that includes unmanned aerial vehicle 10c can be further increased.

When second hook 751a is to be hooked onto second rail 72, control processor 11 tilts vehicle main body 712 or support portion 732 in a second direction so as to position second connected end 751a2 higher than first connected end 731a1. When first hook 731a is to be disengaged from first rail 71, control processor 11 tilts vehicle main body 712 or support portion 732 in a first direction so as to position first connected end 731a1 higher than second connected end 751a2.

According to this configuration, by tilting vehicle main body 712 or support portion 732, first hook 731a and second hook 751a can be hooked onto rail 7 with ease, or first hook 731a and second hook 751a can be disengaged from rail 7 with ease.

Flying system 1 further includes protective net 394 stretched along a position vertically below the approaching region of first rail 71 and second rail 72. The approaching region is a region where the distance between first rail 71 and second rail 72 is smaller than or equal to the size of unmanned aerial vehicle 10c.

According to this configuration, since distance H2 between first rail 71 and second rail 72 is smaller than width H1 (the size) of vehicle main body 712, unmanned aerial vehicle 10c can make a switch from first rail 71 to second rail 72 with ease and then move along second rail 72.

As protective net 394 is provided along a position vertically below the approaching region of first rail 71 and second rail 72, even if unmanned aerial vehicle 10c becomes disengaged from first rail 71 and second rail 72, the possibility that unmanned aerial vehicle 10c falls to the ground can be reduced. Therefore, the safety in the system that includes unmanned aerial vehicle 10c can be further increased.

### VARIATION OF EMBODIMENT 4

In the following, the basic configuration of flying system 1 according to the present variation is identical to the basic configuration of flying system 1 according to Embodiment 4 and so on. Therefore, the descriptions of the basic configuration of flying system 1 according to the present variation will be omitted as appropriate.

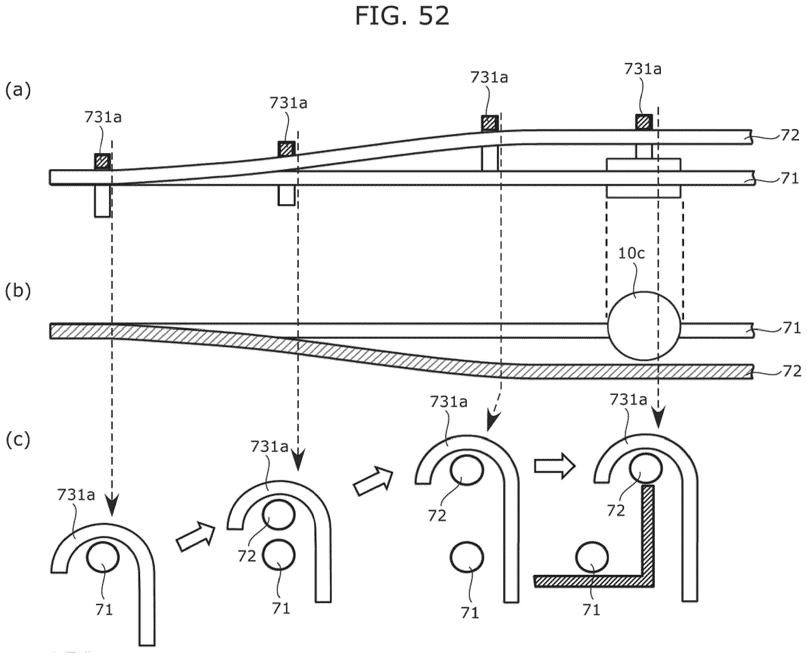

FIG. 52 illustrates a side view, a top view, and a front view of rails and first hook 731a of unmanned aerial vehicle 10c of flying system 1 according to a variation of Embodiment 4. In FIG. 52, (a) is a side view of first hook 731a of unmanned aerial vehicle 10c of flying system 1, first rail 71, and second rail 72. In FIG. 52, (b) is a top view of first hook 731a of unmanned aerial vehicle 10c of flying system 1, first rail 71, and second rail 72. In FIG. 52, (c) is a front view of first hook 731a of unmanned aerial vehicle 10c of flying system 1, first rail 71, and second rail 72, as viewed from the traveling direction of unmanned aerial vehicle 10c of flying system 1.

As illustrated in FIG. 52, in the present variation, the height of at least a portion of second rail 72 is higher than the height of adjacent first rail 71. Second rail 72 is a rail that branches off from first rail 71, and the leading end portion of second rail 72 is disposed along the direction in which first rail 71 extends. A portion of second rail 72 is disposed higher than first rail 71 and serves as a passing siding that extends so as to detour first rail 71. Second rail 72 is a rail for separating one of two unmanned aerial vehicles 10c when these two unmanned aerial vehicles 10c travel toward each other from opposite directions on first rail 71. In this example, first rail 71 and second rail 72 may each be a power transmission line.

In flying system 1 according to the present variation, when a first drone of two unmanned aerial vehicles 10c travels in a first moving direction along first rail 71 and a second drone of two unmanned aerial vehicles 10c travels in a second moving direction opposite the first moving direction along first rail 71, the first drone switches the connection of connector 730d from first rail 71 to second rail 72 upon detecting the approaching second drone with the use of camera sensor 45 or the like. Since second rail 72 is higher than first rail 71, the second drone traveling on first rail 71 and the first drone traveling on second rail 72 can pass each other. Setting the heights of first rail 71 and second rail 72 differently can reduce the possibility that vehicle main body 712 of the first drone or a package therein makes contact with vehicle main body 712 of the second drone or a package therein.

In this example, since it suffices that the first drone and the second drone can pass each other, the distance between the first drone and the second drone may be secured by providing a space between first rail 71 and second rail 72.

Next, the advantageous effects achieved by flying system 1 according to the present variation will be described.

The height of at least a portion of second rail 72 is higher than the height of adjacent first rail 71.

According to this configuration, when two unmanned aerial vehicles 10c are traveling along first rail 71 in opposite directions, one unmanned aerial vehicle 10c of the two unmanned aerial vehicles 10c can take refuge on second rail 72. Second rail 72 can be used as a refuge track. This configuration can keep unmanned aerial vehicles 10c from colliding with each other or suppress the congestion of unmanned aerial vehicles 10c.

### EMBODIMENT 5

### Configuration

Hereinafter, since the basic configuration of first thruster device 110 in the present embodiment is the same as the basic configuration of the first thruster device according to Embodiment 1 and the like, description of the basic configuration of first thruster device 110 according to the present embodiment will be omitted where appropriate. The present embodiment differs from Embodiment 10 and the like in that blades 1013a1 of propeller 1013 of first thruster device 110 include protrusions 1013a2.

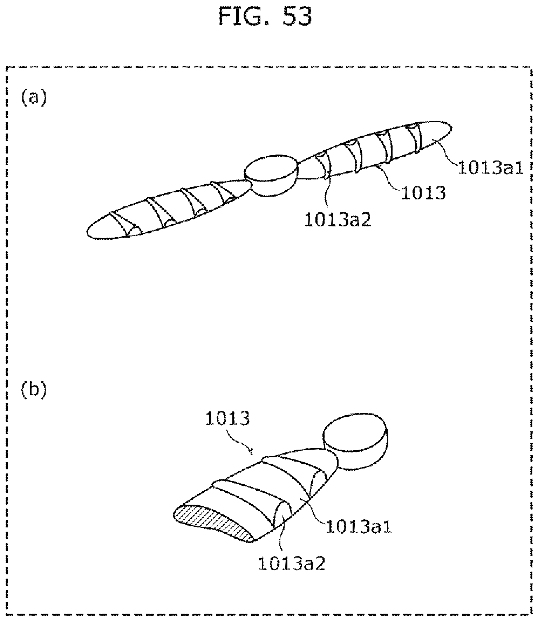

FIG. 53 illustrates an example of propeller 1013 of first thruster device 110 according to Embodiment 5. In FIG. 53, (a) is a perspective view of propeller 1013, and (a) is a partial cross sectional view of blade 1013a1 of propeller 1013.

As illustrated in FIG. 53, each of the plurality of propellers 1013 includes a plurality of blades 1013a1. In the present embodiment, each of the plurality of propellers 1013 is exemplified as including two blades 1013a1, but each of the plurality of propellers 1013 may include three or more blades 1013a1, or one blade 1013a1.

A plurality of protrusions 1013a2 are provided on the surface of each blade 1013a1. The plurality of protrusions 1013a2 form a striped pattern extending in the direction of rotation of the plurality of blades 1013a1. The plurality of protrusions 1013a2 are formed at equal intervals on the surface of each blade 1013a1. Note that the propellers of the unmanned aerial vehicle may have the same configuration as propeller 1013.

### Advantageous Effects

Next, the advantageous effects achieved by first thruster device 110 according to the present embodiment will be described.

As described above, in first thruster device 110 according to the present embodiment, each of the plurality of propellers 1013 includes a plurality of blades 1013a1. A plurality of protrusions 1013a2 are provided on the surface of each blade 1013a1. The plurality of protrusions 1013a2 form a striped pattern extending in the direction of rotation of the plurality of blades 1013a1.

This makes it possible to reduce the influence of wind during flight of first thruster device 110. This makes it even easier to align first thruster device 110 relative to the predetermined position, because the attitude of first thruster device 110 can be stabilized even in windy conditions.

### EMBODIMENT 6

### Configuration

Hereinafter, since the basic configuration of delivery box 1004a according to the present embodiment is the same as the basic configuration of the delivery box according to Embodiment 1 and the like, repeated description of the basic configuration of delivery box 1004a in the present embodiment will be omitted where appropriate. The present embodiment differs from Embodiment 2 and the like in that delivery box 1004a includes top lid 1004a2 and side lid 1004a3.

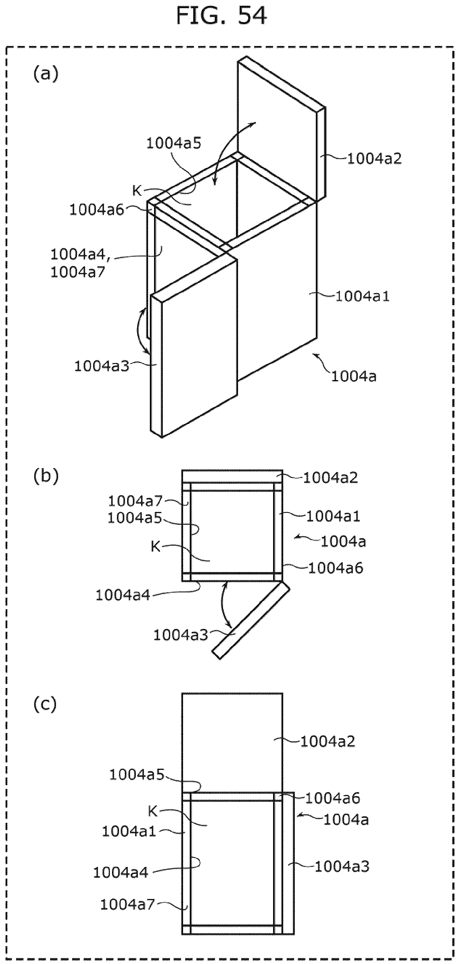

FIG. 54 is a schematic diagram illustrating an example of delivery box 1004a according to Embodiment 6.

As illustrated in FIG. 54, delivery box 1004a includes container 1004a1, top lid 1004a2, and side lid 1004a3.

Container 1004a1 defines space K for storing a package. Container 1004a1 is an enclosure for storing a package. Container 1004a1 is exemplified as rectangular in shape, but may be of any shape as long as it can store a package. Top opening 1004a5 is formed in top portion 1004a6 vertically above container 1004a1. Top opening 1004a5 is covered by the closing of top lid 1004a2. Side opening 1004a4 is formed in side portion 1004a7 of container 1004a1. Side opening 1004a4 is covered by the closing of side lid 1004a3. Top opening 1004a5 and side opening 1004a4 are in communication with space K of container 1004a1.

Top lid 1004a2 is provided on top portion 1004a6 of container 1004a1 and can open and close top opening 1004a5 for inserting a package into space K through top opening 1004a5. Top lid 1004a2 covers top opening 1004a5 when closed and opens top opening 1004a5 when opened. Top lid 1004a2 is held so as to be pivotable around a predetermined axis relative to container 1004a1.

Side lid 1004a3 is provided on side portion 1004a7 of container 1004a1 and can open and close side opening 1004a4 for removing a package in space K through side opening 1004a4. Side lid 1004a3 covers side opening 1004a4 when closed and opens side opening 1004a4 when opened. Side lid 1004a3 is held so as to be pivotable around a predetermined axis relative to container 1004a1.

Although top lid 1004a2 and side lid 1004a3 are configured to open outwardly with respect to container 1004a1, they may be configured to open inwardly into space K. Top lid 1004a2 and side lid 1004a3 are not limited to a single-swing opening mechanism, and may employ a dual-swing opening mechanism.

### Advantageous Effects

Next, the advantageous effects achieved by delivery box 1004a according to the present embodiment will be described.

As described above, delivery box 1004a according to the present embodiment includes: container 1004a1 that defines space K for storing a package; top lid 1004a2 that is provided on top portion 1004a6 of container 1004a1 and can open and close top opening 1004a5 for inserting a package into space K through top opening 1004a5; and side lid 1004a3 that is provided on side portion 1004a7 of container 1004a1 and can open and close side opening 1004a4 for removing a package in space K through side opening 1004a4.

With this, a package can be placed into the space K of delivery box 1004a from above delivery box 1004a, and a package stored in the space K can be removed from the side of delivery box 1004a. Accordingly, a package can be easily removed.

### EMBODIMENT 7

### Configuration

Hereinafter, since the basic configuration of delivery box 1004b included in system 1101 according to the present embodiment is the same as the basic configuration of the delivery box according to Embodiment 6 and the like, repeated description of the basic configuration of delivery box 1004b in the present embodiment will be omitted where appropriate. The present embodiment differs from Embodiment 6 and the like in that delivery box 1004b includes hole 1004a8 and the like.

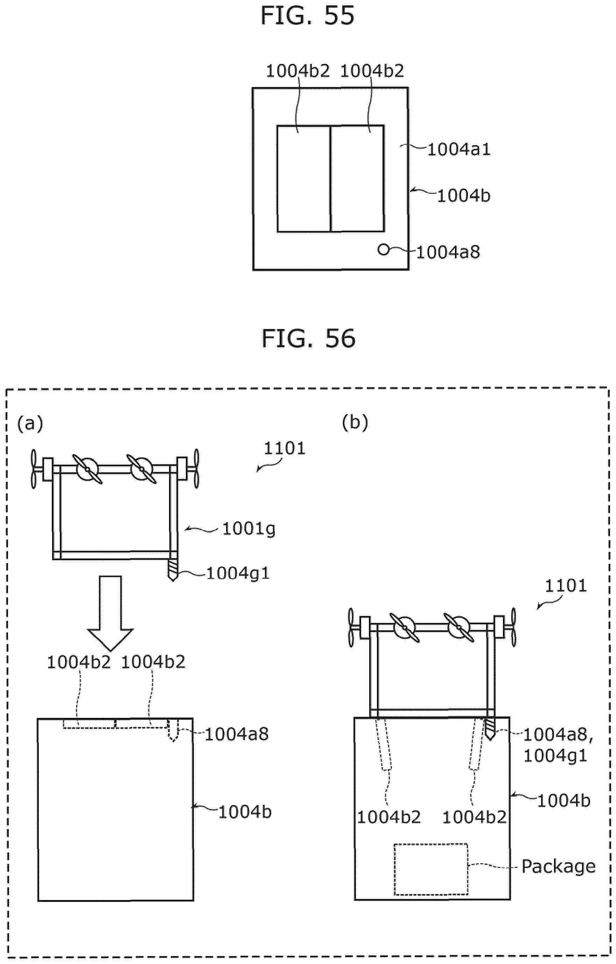

FIG. 55 is a top view of delivery box 1004b included in system 1101 according to Embodiment 7. FIG. 56 is a schematic diagram illustrating an example of lifting device 1001g included in system 1101 according to Embodiment 7 unloading a package. In FIG. 56, (a) illustrates lifting device 1001g descending from vertically above delivery box 1004b, and (b) illustrates protrusion 1004g1 of lifting device 1001g being inserted into hole 1004a8 of delivery box 1004b, and lifting device 1001g being connected to delivery box 1004b. Lifting device 1001g is one example of the thruster device.

As illustrated in FIG. 55 and FIG. 56, system 1101 according to the present embodiment includes delivery box 1004b and lifting device 1001g.

Delivery box 1004b includes hole 1004a8 and an opening and closing member in addition to container 1004a1, top lid 1004b2, and the side lid. Hole 1004a8 is provided on the top portion of container 1004a1 and can accommodate the insertion of protrusion 1004g1. Although hole 1004a8 is exemplified as a recess formed in the top portion, hole 1004a8 may be, for example, a screw hole. Hole 1004a8 is formed in a corner area of container 1004a1 when container 1004a1 is viewed from vertically above.

Top lid 1004b2 is an inward-opening lid that opens inward into the space and employs a dual-swing opening mechanism. However, top lid 1004b2 may be a single-swing opening lid.

The opening and closing member is a mechanism that opens top lid 1004b2 when protrusion 1004g1 is inserted into hole 1004a8. The opening and closing member may be a mechanical mechanism such as an actuator, or a motorized mechanism that opens top lid 1004b2 upon detecting the insertion of protrusion 1004g1 into hole 1004a8.

Lifting device 1001g is attachable to and detachable from a package and can be lowered from vertically above delivery box 1004b. Lifting device 1001g includes protrusion 1004g1 engages by being inserted into hole 1004a8. Lifting device 1001g is, for example, the unmanned aerial vehicle or the thruster device described above. In the present embodiment, lifting device 1001g is exemplified as a thruster device.

Protrusion 1004g1 protrudes downwardly from the lower end surface of lifting device 1001g. Protrusion 1004g1 may be, for example, a screw or a leg or the like, as long as it is insertable into hole 1004a8.

As illustrated in (a) in FIG. 56, lifting device 1001g moves so that protrusion 1004g1 and hole 1004a8 of delivery box 1004b are vertically aligned as lifting device 1001g descends from a position vertically above delivery box 1004b toward delivery box 1004b. The insertion of protrusion 1004g1 into hole 1004a8 aligns lifting device 1001g with the top portion of delivery box 1004b. As a result, lifting device 1001g is connected to the top portion of delivery box 1004b so as to cover the top opening of delivery box 1004b. Lifting device 1001g then disconnects the package to house the package in the space in delivery box 1004b.

### Advantageous Effects

Next, the advantageous effects achieved by system 1101 according to the present embodiment will be described.

As described above, system 1101 according to the present embodiment includes: delivery box 1004b; and lifting device 1001g that is attachable to and detachable from a package and can be lowered from vertically above delivery box 1004b. Lifting device 1001g includes protrusion 1004g1. Delivery box 1004b includes hole 1004a8 that is provided in the top portion and accommodates the insertion of protrusion 1004g1; and a mechanism for opening top lid 1004b2 when protrusion 1004g1 is inserted into hole 1004a8.

With this, when lifting device 1001g stores a package in delivery box 1004b, lifting device 1001g can be aligned with the top opening of delivery box 1004b by inserting protrusion 1004g1 into hole 1004a8. As a result, a package can be stored with certainty in the space in delivery box 1004b.

### EMBODIMENT 8

### Configuration

Hereinafter, since the basic configuration of unmanned aerial vehicle 1105 according to the present embodiment is the same as the basic configuration of the unmanned aerial vehicle according to Embodiment 1 and the like, repeated description of the basic configuration of unmanned aerial vehicle 1105 in the present embodiment will be omitted where appropriate. The present embodiment differs from Embodiment 3 and the like in that unmanned aerial vehicle 1105 includes first arm 1121 and second arm 1122.

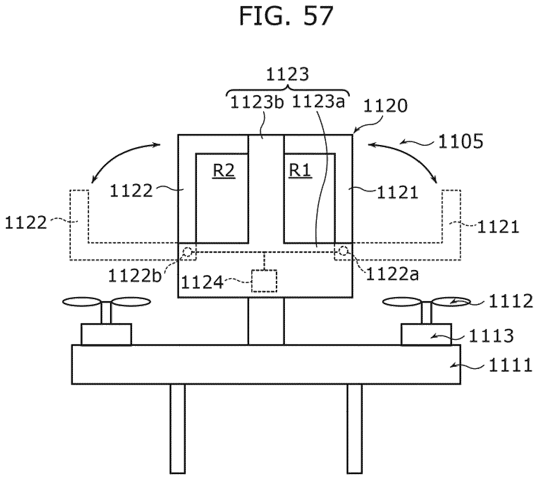

FIG. 57 is a schematic diagram illustrating an example of unmanned aerial vehicle 1105 according to Embodiment 8.

Unmanned aerial vehicle 1105 includes a plurality of rotary wings 1112, a plurality of motors 1113 that respectively rotate the plurality of rotary wings 1112, main body 1111 that supports the plurality of motors 1113, and connector 1120.

Connector 1120 connects to a rail positioned separated from the ground surface while main body 1111 is hanging. Connector 1120 includes fixed portion 1123, first arm 1121, second arm 1122, first actuator 1122a, second actuator 1122b, and controller 1124. Since connector 1120 has the same structure as the above-described connector 1120, repeated description of the same structure will be omitted where appropriate.

Fixed portion 1123 pivotably supports first arm 1121 and second arm 1122, and is fixedly connected to main body 1111 of unmanned aerial vehicle 1105. Fixed portion 1123 has an upside down T-shape in a side view.

Fixed portion 1123 includes first base portion 1123a extending in the direction in which motors 1113 are aligned and second base portion 1123b disposed between first arm 1121 and second arm 1122. Second base portion 1123b extends upwardly from first base portion 1123a and separates first region R1 and second region R2, which will be described below. More specifically, second base portion 1123b extends so as to rise from the center portion of first base portion 1123a to the respective leading ends of first arm 1121 and second arm 1122 (also referred to as the "other end" of first arm 1121 and the "other end" of second arm 1122 as described below). Fixed portion 1123 is one example of a partition portion.

First arm 1121 and second arm 1122 are hangers for hanging unmanned aerial vehicle 1105 from a rail. First arm 1121 and second arm 1122 are staggered on fixed portion 1123.

More specifically, one end of first arm 1121 is connected to fixed portion 1123 and the other end opens and closes with respect to fixed portion 1123. Similarly, one end of second arm 1122 is connected to fixed portion 1123 and the other end opens and closes with respect to fixed portion 1123. The one end of first arm 1121 is pivotably fixed to one end of first base portion 1123a, and the one end of second arm 1122 is pivotably fixed to the other end of first base portion 1123a. The other end of first arm 1121 and the other end of second arm 1122 are capable of abutting and separating from the leading end of second base portion 1123b so as to sandwich the leading end.

In the closed state in which first arm 1121 is abutting the leading end of second base portion 1123b, first region R1 enclosed by first arm 1121 and fixed portion 1123 is formed. In the closed state in which second arm 1122 is abutting the leading end of second base portion 1123b, second region R2 enclosed by second arm 1122 and fixed portion 1123 is formed. First region R1 is separated from second region R2 by second base portion 1123b.

First actuator 1122a opens and closes first arm 1121. Second actuator 1122b opens and closes second arm 1122. First actuator 1122a is connected to the one end of first arm 1121 and pivots first arm 1121. Second actuator 1122b is connected to the one end of second arm 1122 and pivots second arm 1122.

Controller 1124 controls first actuator 1122a and second actuator 1122b. Controller 1124 switches connector 1120 connected to a first rail (one example of a rail) to a second rail (an example of a rail) different than the first rail by controlling first actuator 1122a and second actuator 1122b. Controller 1124 switches connector 1120 connected to a second rail to a first rail by controlling first actuator 1122a and second actuator 1122b.

Controller 1124 controls first actuator 1122a and second actuator 1122b so that at least one of first arm 1121 and second arm 1122 is in a closed state.

More specifically, when controller 1124 receives an instruction to change first arm 1122 from the closed state to the open state, controller 1124 determines whether second arm 1121 is in the closed state or not. When second arm 1122 is in the closed state, controller 1124 changes first arm 1121 to the open state. Since second region R2 is a closed region when second arm 1122 is in the closed state, if a second rail is present in second region R2, unmanned aerial vehicle 1105 is connected to the second rail and is thus prevented from falling from the second rail.

However, when second arm 1121 is in the open state, controller 1124 maintains first arm 1122 in the closed state. Since second region R2 is an open region when second arm 1122 is in the open state, unmanned aerial vehicle 1105 is not connected to the second rail and is connected to and held by the first rail via first arm 1121 in the closed state. Accordingly, controller 1124 does not place first arm 1121 in the open state but rather maintains first arm 1121 in the closed state. As a result, unmanned aerial vehicle 1105 is connected to and held by the first rail, thereby preventing it from falling from the first rail.

More specifically, when controller 1124 receives an instruction to change second arm 1122 from the closed state to the open state, controller 1124 determines whether first arm 1121 is in the closed state or not. When first arm 1121 is in the closed state, controller 1124 changes second arm 1122 to the open state. Since first region R1 is a closed region when first arm 1121 is in the closed state, if a first rail is present in first region R1, unmanned aerial vehicle 1105 is connected to the first rail and is thus prevented from falling from the first rail.

When controller 1124 receives the instruction while first arm 1121 is in the open state, controller 1124 maintains second arm 1122 in the closed state. Since first region R1 is an open region when first arm 1121 is in the open state, unmanned aerial vehicle 1105 is not connected to the first rail and is connected to and held by the second rail via second arm 1122 in the closed state. Accordingly, controller 1124 does not place second arm 1122 in the open state but rather maintains second arm 1122 in the closed state. As a result, unmanned aerial vehicle 1105 is connected to and held by the second rail, thereby preventing it from falling from the second rail.

Controller 1124 can determine whether first arm 1121 is in the closed state and whether second arm 1122 is in the closed state based on, for example, the presence or absence of an instruction or the like output to first actuator 1122a and second actuator 1122b, or the pivot state of first actuator 1122a and second actuator 1122b. Controller 1124 may determine whether first arm 1121 is in the closed state and whether second arm 1122 is in the closed state by providing one or more sensors or the like that detect whether first arm 1121 and second arm 1122 are in the open or closed state.

### Operations

Next, operations performed by unmanned aerial vehicle 1105 according to the present embodiment will be described.

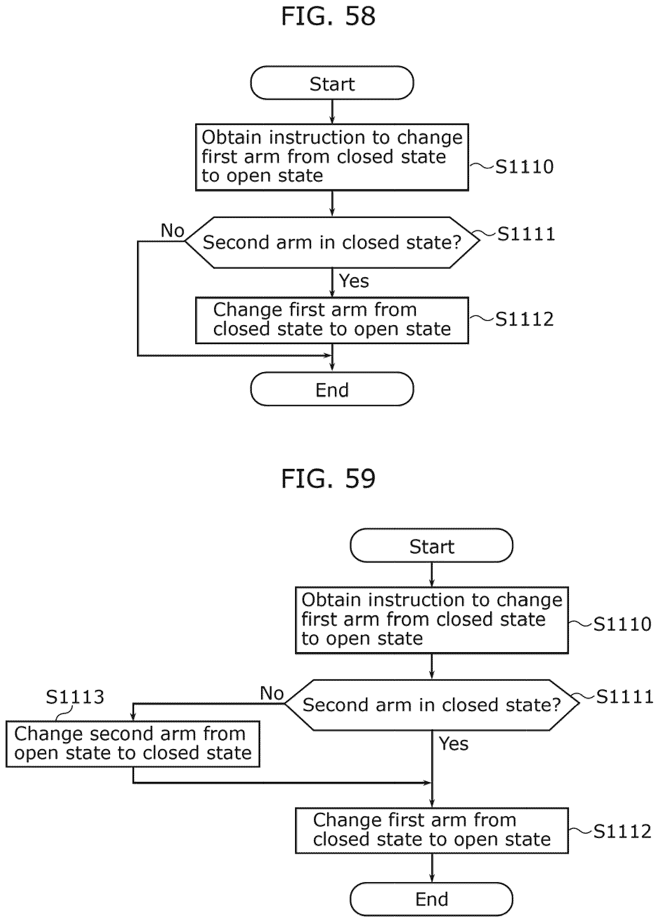

FIG. 58 is a flowchart illustrating an example of operations for changing first arm 1121 of unmanned aerial vehicle 1105 according to Embodiment 8 from the closed state to the open state.

As illustrated in FIG. 58, controller 1124 obtains an instruction to change first arm 1121 from the closed state to the open state (S1110). For example, this instruction is obtained by controller 1124 when connection is switched from the second rail to the first rail while the second rail is connected to second arm 1122.

Next, when controller 1124 receives an instruction to change first arm 1121 from the closed state to the open state, controller 1124 determines whether second arm 1122 is in the closed state or not S1111).

If second arm 1122 is in the closed state (YES in S1111), controller 1124 changes first arm 1121 from the closed state to the open state (S1112). Controller 1124 controls first actuator 1122a to pivot (clockwise) first arm 1121 away from the leading end of second base portion 1123b to place first arm 1121 in the open state. In this case, the first rail can be arranged in the open first region R1. Controller 1124 then ends the processing for the operations to change first arm 1121 from the closed state to the open state.

However, if second arm 1122 is in the open state (NO in S1111), controller 1124 maintains first arm 1121 in the closed state. Controller 1124 then ends the processing for the operations to change first arm 1121 from the closed state to the open state.

Unmanned aerial vehicle 1105 according to the present embodiment may perform the operations illustrated in FIG. 59 and described below. Operations illustrated in FIG. 59 and described below that are the same as those in FIG. 58 are assigned with the same reference signs and repeated description will be omitted where appropriate.

FIG. 59 is a flowchart illustrating another example of operations for changing first arm 1121 of unmanned aerial vehicle 1105 according to Embodiment 8 from the closed state to the open state.

As illustrated in FIG. 58, controller 1124 changes second arm 1122 from the open state to closed state (S1113) if second arm 1122 is in open state (NO in S1111) after performing the processes of steps S1110 and S1111. Controller 1124 controls second actuator 1122b to pivot (clockwise) second arm 1122 toward the leading end of second base portion 1123b to place second arm 1122 in the closed state. In this case, the second rail can be arranged in the closed second region R2. Controller 1124 then proceeds to step S1112, and ends the processing for the operations to change first arm 1121 from the closed state to the open state.

Although FIG. 58 and FIG. 59 illustrate examples in which the instruction is an instruction to change first arm 1121 from the closed state to the open state, since the same processes apply when the instruction is an instruction to change second arm 1122 from the closed state to the open state, description will be omitted.

### Advantageous Effects

Next, advantageous effects achieved by unmanned aerial vehicle 1105 according to the present embodiment will be described.

As described above, unmanned aerial vehicle 1105 according to the present embodiment includes: a plurality of rotary wings 1112; a plurality of motors 1113 that respectively rotate the plurality of rotary wings 1112; main body 1111 that supports the plurality of motors 1113; and connector 1120 for connecting to a rail positioned separated from the ground surface while main body 1111 is hanging. Connector 1120 includes: fixed portion 1123; first arm 1121 including one end connected to fixed portion 1123 and another end that opens and closes with respect to fixed portion 1123; second arm 1122 including one end connected to fixed portion 1123 and another end that opens and closes with respect to fixed portion 1123; first actuator 1122a that opens and closes first arm 1121; second actuator 1122b that opens and closes second arm 1122; and controller 1124 that controls first actuator 1122a and second actuator 1122b. First region R1 enclosed by first arm 1121 in the closed state and fixed portion 1123 is separated from second region R2 enclosed by second arm 1122 in the closed state and fixed portion 1123.

With this, when first arm 1121 of unmanned aerial vehicle 1105 is connected to a first rail, which is one example of a rail, first arm 1121 can be disconnected from the first rail after second arm 1122 is connected to a second rail. This allows unmanned aerial vehicle 1105 to switch connections from the first rail to the second rail, which is one example of another rail, and continue moving.

In unmanned aerial vehicle 1105 according to the present embodiment, each of the at least one connectors includes: fixed portion 1123; first arm 1121 including one end connected to fixed portion 1123 and an other end that opens and closes relative to fixed portion 1123; second arm 1122 including one end connected to fixed portion 1123 and an other end that opens and closes relative to fixed portion 1123; first actuator 1122a that opens and closes first arm 1121; and second actuator 1122b that opens and closes second arm 1122. Controller 1124 controls first actuator 1122a and second actuator 1122b, and first arm 1121 is positioned in front of second arm 1122 in the first direction.

With this configuration, when first arm 1121 of unmanned aerial vehicle 1105 is connected to first rail 7a, after second arm 1122 connects to second rail 7b, which is a different rail than first rail 7a, first arm 1121 can be disconnected from first rail 7a. This allows unmanned aerial vehicle 1105 to switch connections (transfer) from first rail 7a to second rail 7b and continue moving.

In unmanned aerial vehicle 1105 according to the present embodiment, first region R1 enclosed by first arm 1121 in the closed state and fixed portion 1123 is separated from second region R2 enclosed by second arm 1122 in the closed state and fixed portion 1123.

With this, a single connector can be used to simultaneously connect to two rails. This makes it possible to stabilize the attitude of unmanned aerial vehicle 1105.

In unmanned aerial vehicle 1105 according to the present embodiment, fixed portion 1123 includes a partition portion that extends upwardly from main body 1111 and separates first region R1 and second region R2.

With this, a single connector 1120 can be used to connect to two rails. Accordingly, the attitude of connector 1120 can be maintained better than when two connectors 1120 are used.

In unmanned aerial vehicle 1105 according to the present embodiment, controller 1124 controls first actuator 1122a and second actuator 1122b so that at least one of first arm 1121 and second arm 1122 is in a closed state.

With this, if a rail is present in at least one of closed first region R1 and closed second region R2, unmanned aerial vehicle 1105 can securely hang from the rail.

In unmanned aerial vehicle 1105 according to the present embodiment, when controller 1124 receives an instruction to change first arm 1121 from the closed state to the open state, controller 1124 determines whether second arm 1122 is in the closed state or not. When second arm 1122 is in the closed state, controller 1124 changes first arm 1121 to the open state. When second arm 1122 is in the open state, controller 1124 maintains first arm 1121 in the closed state.

With this, when a second rail is connected to second arm 1122 in the closed state, a first rail can be connected to first arm 1121. When second arm 1122 is in the open state, if a first rail is connected to first arm 1121 in the closed state, first arm 1121 can be maintained in the closed state without placing first arm 1121 in the open state. In this way, unmanned aerial vehicle 1105 can reliably hang from a rail, thereby inhibiting unmanned aerial vehicle 1105 from falling.

In unmanned aerial vehicle 1105 according to the present embodiment, when controller 1124 receives an instruction to change second arm 1122 from the closed state to the open state, controller 1124 determines whether first arm 1121 is in the closed state or not. When controller 1124 receives the instruction while first arm 1121 is in the closed state, controller 1124 changes second arm 1122 to the open state. When controller 1124 receives the instruction while first arm 1121 is in the open state, controller 1124 maintains second arm 1122 in the closed state.

With this, when a first rail is connected to first arm 1121 in the closed state, a second rail can be connected to second arm 1122. When first arm 1121 is in the open state, if a second rail is connected to second arm 1122 in the closed state, second arm 1122 can be maintained in the closed state without placing second arm 1122 in the open state. In this way, unmanned aerial vehicle 1105 can reliably hang from a rail, thereby inhibiting unmanned aerial vehicle 1105 from falling.

### VARIATION 1 OF EMBODIMENT 8

Hereinafter, since the basic configuration of unmanned aerial vehicle 1105 according to the present variation is the same as the basic configuration of the unmanned aerial vehicle of Embodiment 8 and the like, repeated description of the basic configuration of unmanned aerial vehicle 1105 in the present variation will be omitted where appropriate. The present variation differs from Embodiment 8 and the like in that connector 1120 of unmanned aerial vehicle 1105 rotates around axis O.

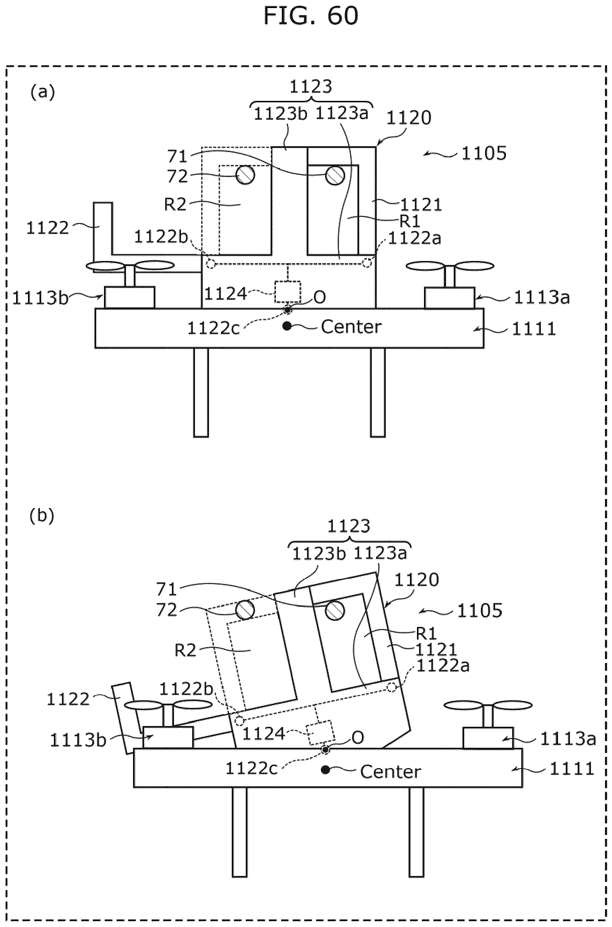

FIG. 60 is a schematic diagram illustrating an example of unmanned aerial vehicle 1105 according to Variation 1 of Embodiment 8. In FIG. 60, (a) illustrates an example of second arm 1122 of unmanned aerial vehicle 1105 in an open state, and (b) illustrates an example in which connector 1120 is pivoted around axis O while second arm 1122 of unmanned aerial vehicle 1105 is in an open state.

Controller 1124 controls the rotational speed of the plurality of motors 1113. More specifically, when first arm 1121 is in the open state, second arm 1122 is in the closed state, and second arm 1122 is hanging from a rail passing through second region R2, controller 1124 increases a first rotational speed of first motor 1113a, which is the motor closest to first arm 1121 among the plurality of motors 1113, to a rotational speed greater than a second rotational speed of second motor 1113b, which is the motor closest to second arm 1122 among the plurality of motors 1113.

When second arm 1122 is in the open state, first arm 1121 is in the closed state, and first arm 1121 is hanging from a rail passing through first region R1, controller 1124 increases the second rotational speed of second motor 1113b, which is the motor closest to second arm 1122 among the plurality of motors 1113, to a rotational speed greater than the first rotational speed of first motor 1113a, which is the motor closest to first arm 1121 among the plurality of motors 1113.

In order to maintain the attitude of unmanned aerial vehicle 1105 substantially horizontal when the center of gravity shifts due to the pivoting of first arm 1121 or second arm 1122, controller 1124 adds buoyancy to the side to which the center of gravity has shifted (the side of first arm 1121 or the side of second arm 1122 in the open state) so as to compensate for the incline of the attitude of unmanned aerial vehicle 1105 caused by the shift.

Connector 1120 further includes third actuator 1122c that changes the angle of fixed portion 1123 relative to main body 1111. An angle of fixed portion 1123 relative to main body 1111 indicates an attitude of fixed portion 1123 relative to main body 1111, and is an angle the direction in which second base portion 1123b of fixed portion 1123 extends (i.e., the lengthwise direction of second base portion 1123b) relative to a surface of main body 1111 (for example, a surface parallel to a horizontal plane).

Controller 1124 further controls third actuator 1122c. More specifically, when first arm 1121 is in the open state, second arm 1122 is in the closed state, and second arm 1122 is hanging on a rail passing through second region R2, controller 1124 changes the angle via third actuator 1122c to position second region R2 directly above the center of main body 1111.

When second arm 1122 is in the open state, first arm 1121 is in the closed state, and first arm 1121 is hanging on a rail passing through first region R1, controller 1124 changes the angle via third actuator 1122c to position first region R1 directly above the center of main body 1111.

Controller 1124 causes the attitude of fixed portion 1123 to be inclined relative to main body 1111 of unmanned aerial vehicle 1105 using third actuator 1122c to, for example, separate first rail 71 from first region R1 if only first arm 1121 is in the open state or separate second rail 72 from second region R2 if only second arm 1122 is in the open state.

In this way, in unmanned aerial vehicle 1105 according to the present variation, controller 1124 further controls the rotational speed of the plurality of motors 1113. When first arm 1121 is in the open state, second arm 1122 is in the closed state, and second arm 1122 is hanging from a rail passing through second region R2, controller 1124 increases a first rotational speed of first motor 1113a, which is the motor closest to first arm 1121 among the plurality of motors 1113, to a rotational speed greater than a second rotational speed of second motor 1113b, which is the motor closest to second arm 1122 among the plurality of motors 1113. Alternatively, when second arm 1122 is in the open state, first arm 1121 is in the closed state, and first arm 1121 is hanging from a rail passing through first region R1, controller 1124 increases the second rotational speed of second motor 1113b, which is the motor closest to second arm 1122 among the plurality of motors 1113, to a rotational speed greater than the first rotational speed of first motor 1113a, which is the motor closest to first arm 1121 among the plurality of motors 1113.

With this, if second arm 1122 is in the closed state and first arm 1121 is in the open state, the weight of first arm 1121 moves the center of gravity to the first arm 1121 side. Therefore, by making the first rotational speed of first motor 1113a on the first arm 1121 side greater than the second rotational speed of second motor 1113b on the second arm 1122 side, an amount of buoyancy equivalent to the weight of the center of gravity displaced to the first arm 1121 side can be imparted to unmanned aerial vehicle 1105.

The same is true when first arm 1121 is in the closed state and second arm 1122 is in the open state; the weight of second arm 1122 shifts the center of gravity to the second arm 1122 side. Therefore, by making the second rotational speed of second motor 1113b on the second arm 1122 side greater than the first rotational speed of first motor 1113a on the first arm 1121 side, an amount of buoyancy equivalent to the weight of the center of gravity displaced to the second arm 1122 side can be imparted to unmanned aerial vehicle 1105.

As a result, unmanned aerial vehicle 1105 can maintain the attitude of main body 1111 of unmanned aerial vehicle 1105 approximately parallel to the horizontal direction, even if the center of gravity is displaced from the center of main body 1111 of unmanned aerial vehicle 1105.

In unmanned aerial vehicle 1105 according to the present variation, connector 1120 further includes third actuator 1122c that changes the angle of fixed portion 1123 relative to main body 1111. Controller 1124 further controls third actuator 1122c. When first arm 1121 is in an open state, second arm 1122 is in a closed state, and second arm 1122 is hanging from a rail passing through second region R2, controller 1124 changes the angle via third actuator 1122c to position second region R2 directly above the center of main body 1111. When second arm 1122 is in an open state, first arm 1121 is in a closed state, and first arm 1121 is hanging from a rail passing through first region R1, controller 1124 changes the angle via third actuator 1122c to position first region R1 directly above the center of main body 1111.

With this, if first arm 1121 is in the open state and second arm 1122 hanging on second rail 72 is in the closed state, first rail 71 present in first region R1 can be let outside of first region R1 by simply changing the attitude (angle) of fixed portion 1123 relative to main body 1111 of unmanned aerial vehicle 1105.

If second arm 1122 is in the open state and first arm 1121 hanging on first rail 71 is in the closed state, second rail 72 present in second region R2 can be let outside second region R2 by simply changing the attitude (angle) of fixed portion 1123 relative to main body 1111 of unmanned aerial vehicle 1105.

Thus, first rail 71 can be easily disconnected from connector 1120 and second rail 72 can be easily disconnected from connector 1120 by simply inclining fixed portion 1123 relative to main body 1111. This also makes it easy to switch connector 1120 connected to first rail 71 to second rail 72 or to switch connector 1120 connected to second rail 72 to first rail 71.

### VARIATION 2 OF EMBODIMENT 8

Hereinafter, since the basic configurations of unmanned aerial vehicle 1105 and the rail of system 1102 according to the present variation are the same as the basic configurations of the unmanned aerial vehicle and the rail of Embodiment 8 and the like, repeated description of the basic configurations of unmanned aerial vehicle 1105 and the rail in the present variation will be omitted where appropriate. The present variation differs from Embodiment 8 and the like in that information is added to the rail.

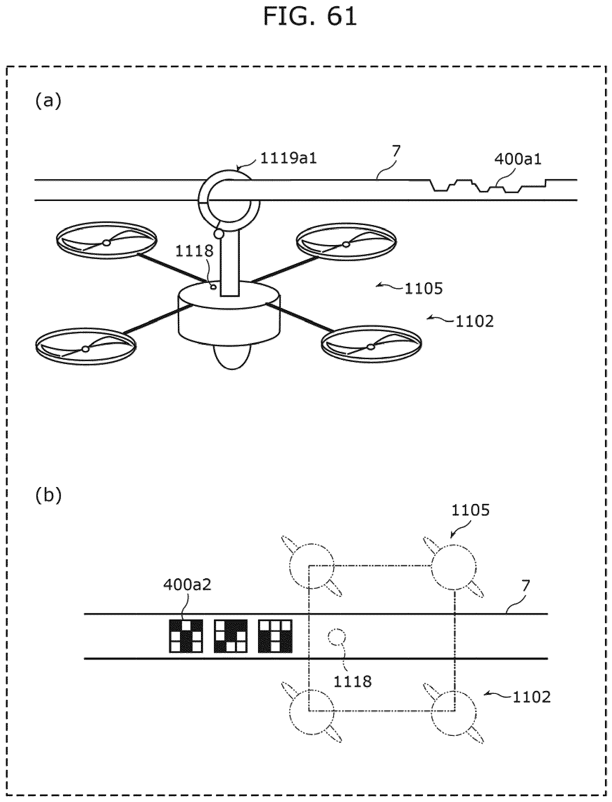

FIG. 61 is a schematic diagram illustrating an example of system 1102 of unmanned aerial vehicle 1105 and rail 7 according to Variation 2 of Embodiment 8. In (a) of FIG. 61, uneven portion 400a1 including predetermined information is provided on rail 7, and in (b) of FIG. 61, marker 400a2 including predetermined information is provided on rail 7. In FIG. 61, (b) illustrates an example of a view of the lower surface side of rail 7 from unmanned aerial vehicle 1105 indicated by the double-dotted line.

As illustrated in FIG. 61, system 1102 includes unmanned aerial vehicle 1105 and rail 7.

Rail 7 includes uneven portion 400a1 including predetermined information, as illustrated in (a) in FIG. 61. Rail 7 includes uneven portion 400a1 on the top portion that contacts connector 1119a1 of unmanned aerial vehicle 1105. Since it is only necessary for connector 1119a1 to be able to read the predetermined information indicated by uneven portion 400a1, the location of uneven portion 400a1 is not limited and may be formed on a surface other than the upper surface of rail 7. Since unmanned aerial vehicle 1105 passes through uneven portion 400a1 when moving on rail 7, unmanned aerial vehicle 1105 reads the predetermined information from the shape of uneven portion 400a1. The predetermined information is read by sensor 1118 provided on connector 1119a1 or main body 1111 of unmanned aerial vehicle 1105. For example, the predetermined information is an address or position information. Note that sensor 1118 may be provided on an arm of connector 1119a1.

As illustrated in (b) in FIG. 61, rail 7 may be provided with marker 400a2 including predetermined information. Rail 7 includes marker 400a2 on the bottom portion that contacts connector 1119a1 of unmanned aerial vehicle 1105. Since it is only necessary for connector 1119a1 to be able to read the predetermined information indicated by marker 400a2, the location of marker 400a2 is not limited and may be formed on a surface other than the lower surface of rail 7. Since unmanned aerial vehicle 1105 passes by marker 400a2 when moving on rail 7, unmanned aerial vehicle 1105 reads the predetermined information from the pattern of marker 400a2. The predetermined information is read by sensor 1118 provided on connector 1119a1 or main body 1111 of unmanned aerial vehicle 1105. For example, the predetermined information is an address or position information.

System 1102 according to the present variation includes unmanned aerial vehicle 1105 and rail 7, and rail 7 is provided with marker 400a2 that includes predetermined information.

This allows unmanned aerial vehicle 1105 to read the predetermined information indicated by marker 400a2 added to rail 7. For example, the package can be more accurately delivered to the predetermined position by the predetermined information including an address or position information or the like.

System 1102 according to the present variation includes unmanned aerial vehicle 1105 and rail 7, and rail 7 is provided with uneven portion 400a1 that includes predetermined information.

This allows unmanned aerial vehicle 1105 to obtain predetermined information from uneven portion 400a1 added to rail 7 as it moves along rail 7. For example, the package can be more accurately delivered to the predetermined position by the predetermined information including an address or position information or the like.

### EMBODIMENT 9

### Configuration

Hereinafter, since the basic configuration of unmanned aerial vehicle 1106 according to the present embodiment is the same as the basic configuration of the unmanned aerial vehicle (drone) according to Embodiment 1 and the like, repeated description of the basic configuration of unmanned aerial vehicle 1106 in the present embodiment will be omitted where appropriate. The present embodiment differs from Embodiment 3 and the like in that main body 1106a of unmanned aerial vehicle 1106 changes its attitude according to the inclination of rail 7.

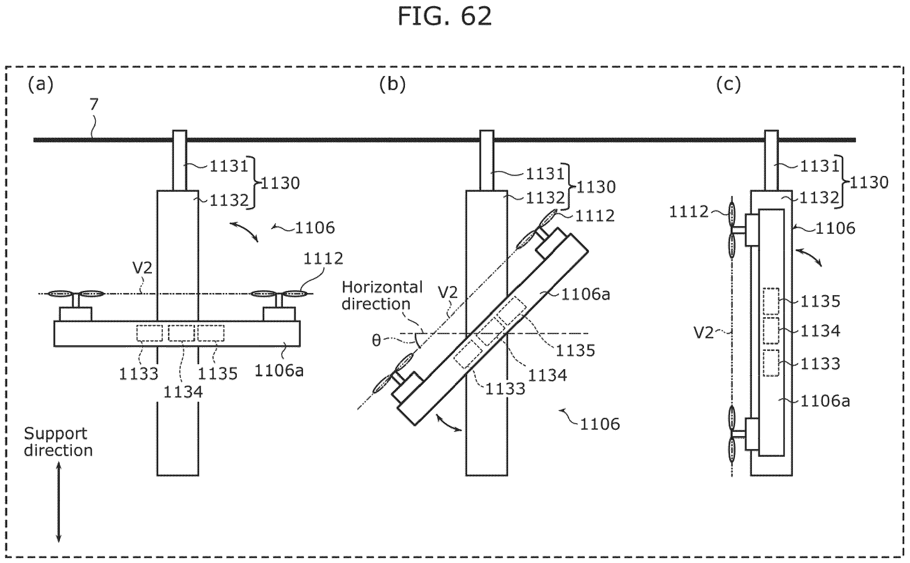

FIG. 62 is a schematic diagram illustrating an example of unmanned aerial vehicle 1106 according to Embodiment 9. In FIG. 62, (a) illustrates an example in which the attitude of main body 1106a of unmanned aerial vehicle 1106 is parallel to the horizontal direction with respect to virtual plane V2, and the angle of the normal direction of virtual plane V2 relative to the support direction is 0°. In FIG. 62, (b) illustrates an example in which the attitude of main body 1106a of unmanned aerial vehicle 1106 is inclined a predetermined angle from the horizontal direction with respect to virtual plane V2, and the angle of the normal direction of virtual plane V2 relative to the support direction is the predetermined angle. In FIG. 62, (c) illustrates an example in which the attitude of main body 1106a of unmanned aerial vehicle 1106 is perpendicular to the horizontal direction with respect to virtual plane V2, and the angle of the normal direction of virtual plane V2 relative to the support direction is 90°.

As illustrated in FIG. 62, unmanned aerial vehicle 1106 includes a plurality of rotary wings 1112, a plurality of motors that respectively rotate the plurality of rotary wings 1112, main body 1106a that supports the plurality of motors, connector 1130, actuator 1133, controller 1134 that controls the plurality of motors and actuator 1133, and sensor 1135.

Connector 1130 connects to rail 7 positioned separated from the ground surface while main body 1106a is hanging. Connector 1130 includes a first end connected to main body 1106a and a second end for slidably connecting to rail 7.

As illustrated in (a) through (c) of FIG. 62, actuator 1133 changes the angle of the normal direction of virtual plane V2 including the plurality of rotary wings 1112 relative to the support direction when connector 1130 is supported on rail 7. The support direction is the direction from the first end to the second end of connector 1130.

Sensor 1135 detects the inclination of rail 7. The inclination of rail 7 is the inclination of rail 7 relative to the horizontal direction, and specifically is the inclination of the upper surface of rail 7 relative to the horizontal direction. Sensor 1135 outputs rail inclination information indicating the detected inclination of rail 7 to controller 1134.

Controller 1134 includes a first mode, a second mode, and a third mode.

As illustrated in (a) in FIG. 62, the first mode aligns the normal direction of virtual plane V2 with the support direction via actuator 1133. As illustrated in (c) in FIG. 62, the second mode makes the normal direction of virtual plane V2 orthogonal to the support direction via actuator 1133. As illustrated in (b) in FIG. 62, the third mode makes angle θ at least 10 degrees and at most 30 degrees via actuator 1133.

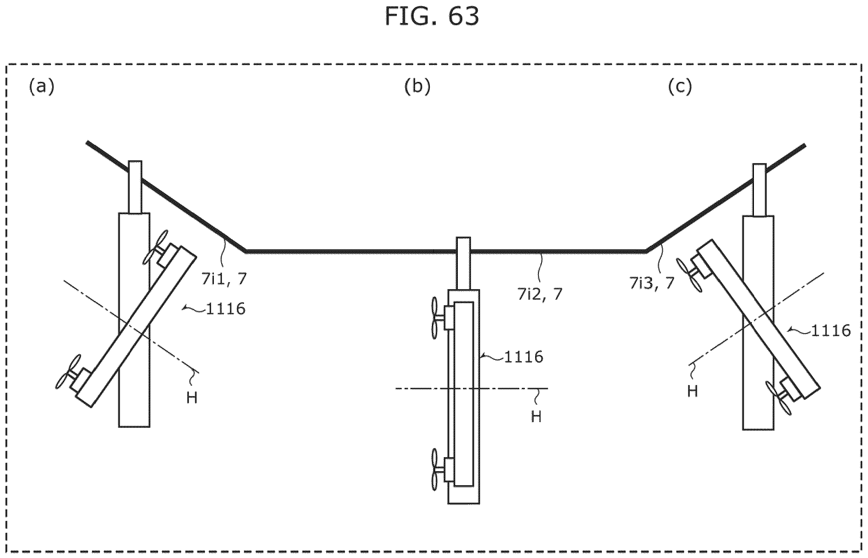

FIG. 63 is a schematic diagram illustrating an example of unmanned aerial vehicle 1106 according to Embodiment 9 moving along rail 7. In (a) through (c), FIG. 63 illustrates that the inclination of rail 7 relative to the horizontal direction (the lengthwise direction of rail 7) and the normal of virtual plane V2 are parallel. In FIG. 63, (a) illustrates unmanned aerial vehicle 1106 traveling on upwardly inclined rail 7i1, (b) illustrates unmanned aerial vehicle 1106 traveling on rail 7i2 that is parallel to the horizontal direction, and (c) illustrates unmanned aerial vehicle 1106 traveling on downwardly inclined rail 7i3.

As illustrated in FIG. 63, controller 1134 changes the angle in accordance with the inclination of rail 7 indicated by the rail inclination information obtained from sensor 1135. More specifically, controller 1134 aligns the normal direction of virtual plane V2 with the inclination of rail 7 via actuator 1133.

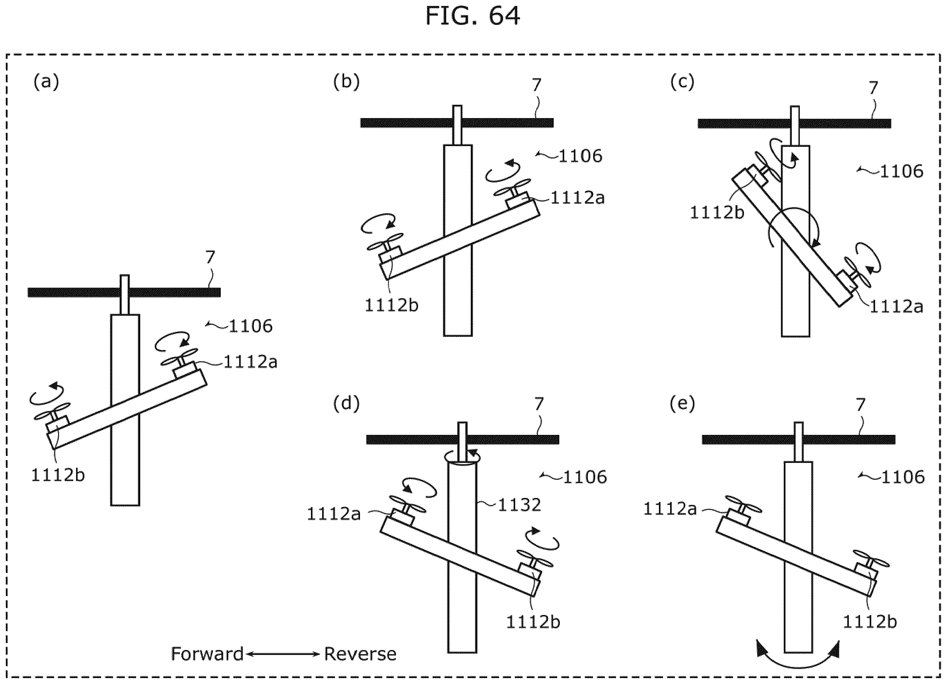

FIG. 64 is a schematic diagram illustrating an example of how unmanned aerial vehicle 1106 according to Embodiment 9 moves forward and in reverse, and how unmanned aerial vehicle 1106 according to Variations 1 and 2 moves in reverse. In FIG. 64, (a) illustrates an example in which unmanned aerial vehicle 1106 is moved forward when main body 1106a of unmanned aerial vehicle 1106 is inclined relative to the support direction. In FIG. 64, (b) illustrates an example in which unmanned aerial vehicle 1106 is caused to travel in reverse relative to the state illustrated in (a) in FIG. 64 by reversing the rotations of first motor 1136a and second motor 1136b. In FIG. 64, (c) illustrates an example in which unmanned aerial vehicle 1106 is caused to travel in reverse relative to the state illustrated in (b) in FIG. 64 by reversing the inclination of main body 1106a of unmanned aerial vehicle 1106 relative to the support direction, and further reversing the rotations of first motor 1136a and second motor 1136b (to restore the directions of rotation of first motor 1136a and second motor 1136b).

As illustrated in (a) in FIG. 64, when controller 1134 obtains a first instruction to propel unmanned aerial vehicle 1106 in a first direction along rail 7, controller 1134 inclines the normal direction of virtual plane V2 from the support direction toward the first direction. Here, the first direction is the direction in which unmanned aerial vehicle 1106 travels when moving unmanned aerial vehicle 1106 forward, and the second direction is the opposite of the first direction. When this instruction is obtained, among the plurality of motors, controller 1134 rotates the propeller of first motor 1136a, which is positioned in the first direction from the center of main body 1106a, in the first direction of rotation. Furthermore, when this instruction is obtained, among the plurality of motors, controller 1134 rotates the propeller of second motor 1136b, which is positioned in the second direction from the center of main body 1106a, in the second direction of rotation. Here, the second direction of rotation is the opposite of the first direction of rotation. This causes unmanned aerial vehicle 1106 to move forward.

As illustrated in (b) FIG. 64, when controller 1134 obtains a second instruction to propel unmanned aerial vehicle 1106 in the second direction along rail 7, controller 1134 rotates the propeller of first motor 1136a in the second direction of rotation and rotates the propeller of second motor 1136b in the first direction of rotation. Controller 1134 causes unmanned aerial vehicle 1106 to move in reverse along rail 7 by reversing the directions of rotation of first motor 1136a and second motor 1136b. The first instruction and the second instruction are obtained, for example, by being transmitted from a manager that manages the flying state, or based on sensor 1135 or the like that detects the current position for heading to the destination point.

As illustrated in (c) FIG. 64, when controller 1134 obtains the second instruction, controller 1134 further inclines the normal direction of virtual plane V2 from the support direction toward the first direction via actuator 1133. Controller 1134 inclines the attitude of main body 1106a of unmanned aerial vehicle 1106, whose normal direction of virtual plane V2 has been inclined toward the second direction relative to the support direction, to the opposite side, i.e., such that the normal direction of virtual plane V2 is inclined toward the first direction relative to the support direction. Controller 1134 further reverses the rotation of first motor 1136a and second motor 1136b, such that first motor 1136a rotates in the first direction of rotation and second motor 1136b rotates in the first direction of rotation. This causes unmanned aerial vehicle 1106 to move in reverse.

### VARIATION 1

In FIG. 64, (d) illustrates an example of unmanned aerial vehicle 1106 moving in reverse relative to the state illustrated in (a) FIG. 64, by rotating fixed portion 1132 along a direction of rotation about an axis extending in the support direction. In FIG. 64, (d) is a variation of (a) through (c) according to the present embodiment.

Connector 1130 includes fixed portion 1132 connected to main body 1106a, arm 1131 connected to rail 7, and a second actuator. Connector 1130 may further include the configurations of the respective embodiments described above.

The second actuator is disposed between fixed portion 1132 and arm 1131, and is rotatable about an axis of rotation that is parallel to the support direction.

As illustrated in (d) in FIG. 64, when controller 1134 obtains the second instruction to propel unmanned aerial vehicle 1106 in the second direction along rail 7, controller 1134 reverses the orientation of main body 1106a by rotating main body 1106a via the second actuator about an axis of rotation that is parallel to the support direction.

In such an unmanned aerial vehicle 1106 according the present variation, the inclination of main body 1106a of unmanned aerial vehicle 1106 can be inverted with respect to the support direction by fixed portion 1132 rotating relative to arm 1131 about an axis of rotation that is parallel to the support direction. This allows unmanned aerial vehicle 1106 to move in reverse. In this case as well, after the package is delivered, unmanned aerial vehicle 1106 can return along the same rail 7 along which it arrived.

### VARIATION 2

In FIG. 64, (e) illustrates an example in which unmanned aerial vehicle 1106 is caused to travel in reverse relative to the state illustrated in (a) in FIG. 64, by disconnecting connector 1130 from rail 7 and causing unmanned aerial vehicle 1106 to determine a horizontal attitude. In FIG. 64, (e) is a variation of (a) through (d) according to the present embodiment.

In the present variation, connector 1130 includes arm 1131 that is connected to rail 7 and can be opened and closed, and a third actuator that opens and closes arm 1131. Connector 1130 may further include the configurations of the respective embodiments described above.

As illustrated in (e) in FIG. 64, when controller 1134 obtains the second instruction to propel unmanned aerial vehicle 1106 in the second direction along rail 7, controller 1134 changes arm 1131 from a closed state to an open state via the third actuator. Controller 1134 further controls the plurality of motors to reverse the orientation of main body 1106a about the support direction. Controller 1134 further causes arm 1131 to change from the open state to the closed state via the third actuator.

With such an unmanned aerial vehicle 1106 according to the present variation, unmanned aerial vehicle 1106 is temporarily disconnected from rail 7, the direction of unmanned aerial vehicle 1106 is reversed, and then connector 1130 of unmanned aerial vehicle 1106 is reconnected to rail 7. This allows unmanned aerial vehicle 1106 to move in reverse. In this case as well, after the package is delivered, unmanned aerial vehicle 1106 can return along the same rail 7 along which it arrived.

### Advantageous Effects

Next, advantageous effects achieved by unmanned aerial vehicle 1106 according to the present embodiment will be described.

As described above, unmanned aerial vehicle 1106 according to the present embodiment includes: a plurality of rotary wings 1112; a plurality of motors that respectively rotate the plurality of rotary wings 1112; main body 1106a that supports the plurality of motors; connector 1130 for connecting to rail 7 positioned separated from the ground surface while main body 1106a is hanging; actuator 1133 that changes the angle of the normal direction of virtual plane V2 including the plurality of rotary wings 1112 relative to a support direction in which connector 1130 is supported by rail 7; and controller 1134 that controls the plurality of motors and actuator 1133. Connector 1130 includes a first end connected to main body 1106a and a second end for slidably connecting to rail 7. The support direction is a direction from the first end of connector 1130 toward the second end of connector 1130. In a first mode, controller 1134 aligns the normal direction of virtual plane V2 with the support direction via actuator 1133, and in a second mode, controller 1134 makes the normal direction of virtual plane V2 orthogonal to the support direction via actuator 1133.

With this, controller 1134 can change the attitude of main body 1106a of unmanned aerial vehicle 1106 relative to the support direction when traveling on rail 7. For example, when unmanned aerial vehicle 1106 is to travel on rail 7, the second mode can be implemented, and when unmanned aerial vehicle 1106 is to leave rail 7, the first mode can be implemented. Accordingly, unmanned aerial vehicle 1106 can change its flight mode as appropriate depending on the situation.

In a third mode, controller 1134 makes the angle at least 10 degrees and at most 30 degrees via actuator 1133.

This allows unmanned aerial vehicle 1106 to move along rail 7 without contact between rail 7 and the support member.

Unmanned aerial vehicle 1106 further includes sensor 1135 that detects the inclination of rail 7. Controller 1134 changes the angle according to the inclination of rail 7.

With this, even when rail 7 is inclined relative to the horizontal direction, unmanned aerial vehicle 1106 can move along the inclined rail 7.

Controller 1134 aligns the normal direction of virtual plane V2 with the inclination of rail 7 via actuator 1133.

This allows connector 1130 to move along rail 7, thereby inhibiting rail 7 from coming into contact with the support member.

When controller 1134 receives a first instruction to propel unmanned aerial vehicle 1106 in a first direction along rail 7, controller 1134 inclines the normal direction of virtual plane V2 from the support direction toward a second direction, rotates rotary wings 1112 of first motor 1136a among the plurality of motors that is positioned in the first direction from the center of main body 1106a in a first direction of rotation, and rotates rotary wings 1112 of second motor 1136b among the plurality of motors that is positioned in the second direction from the center of main body 1106a in a second direction of rotation. The second direction is the opposite of the first direction, and the second direction of rotation is the opposite of the first direction of rotation.

This allows unmanned aerial vehicle 1106 to move forward while maintaining the attitude of unmanned aerial vehicle 1106 with respect to main body 1106a relative to the support direction in a desired state.

When controller 1134 obtains a second instruction to propel unmanned aerial vehicle 1106 in the second direction along rail 7, controller 1134 rotates rotary wings 1112 of first motor 1136a in the second direction of rotation and rotates rotary wings 1112 of second motor 1136b in the first direction of rotation.

With this, by reversing the directions of rotation of first motor 1136a and second motor 1136b, unmanned aerial vehicle 1106 can move in reverse. For example, after the package is delivered, unmanned aerial vehicle 1106 can return along the same rail 7 along which it arrived.

When controller 1134 obtains the second instruction, controller 1134 further inclines the normal direction of virtual plane V2 from the support direction toward the first direction via actuator 1133, rotates rotary wings 1112 of first motor 1136a in the first direction of rotation, and rotates rotary wings 1112 of second motor 1136b in the second direction of rotation.

This allows unmanned aerial vehicle 1106 to reverse the inclination of main body 1106a of unmanned aerial vehicle 1106 relative to the support direction. The inclination of the normal direction of virtual plane V2 changes from inclining toward the second direction to inclining toward the first direction relative to the support direction. This allows unmanned aerial vehicle 1106 to move in reverse. In this case as well, after the package is delivered, unmanned aerial vehicle 1106 can return along the same rail 7 along which it arrived.

Connector 1130 includes fixed portion 1132 connected to main body 1106a, arm 1131 connected to rail 7, and a second actuator that is disposed between fixed portion 1132 and arm 1131 and is rotatable about an axis of rotation parallel to the support direction. When controller 1134 receives a second instruction to propel unmanned aerial vehicle 1106 in the second direction along rail 7, controller 1134 reverses the orientation of main body 1106a by rotating main body 1106a via the second actuator about the axis of rotation that is parallel to the support direction.

This makes it possible to invert the inclination of main body 1106a of unmanned aerial vehicle 1106 symmetrically with respect to the support direction by fixed portion 1132 rotating relative to arm 1131 about the axis of rotation that is parallel to the support direction. This allows unmanned aerial vehicle 1106 to move in reverse. In this case as well, after the package is delivered, unmanned aerial vehicle 1106 can return along the same rail 7 along which it arrived.

Connector 1130 includes arm 1131 that is connected to rail 7 and can be opened and closed, and a third actuator that opens and closes arm 1131. When controller 1134 receives the second instruction to propel unmanned aerial vehicle 1106 in the second direction along rail 7, controller 1134 changes arm 1131 from a closed state to an open state via the third actuator, controls the plurality of motors to reverse the orientation of main body 1106a about the support direction, and changes arm 1131 from the open state to the closed state via the third actuator.

With this, unmanned aerial vehicle 1106 is temporarily disconnected from rail 7, the orientation of unmanned aerial vehicle 1106 is reversed, and then connector 1130 of unmanned aerial vehicle 1106 is reconnected to rail 7. In this case as well, after the package is delivered, unmanned aerial vehicle 1106 can return along the same rail 7 along which it arrived.

### VARIATION 1 OF EMBODIMENT 9

Hereinafter, since the basic configuration of unmanned aerial vehicle 1106 according to the present variation is the same as the basic configuration of the unmanned aerial vehicle of Embodiment 9 and the like, repeated description of the basic configurations of unmanned aerial vehicle 1106 and connector 1150 in the present variation will be omitted where appropriate. The present variation differs from Embodiment 9 and the like in that roller 1154 is provided in connector 1150, and differs from Variation 1 of Embodiment 4 and the like in that recess 1154a is formed in roller 1154.

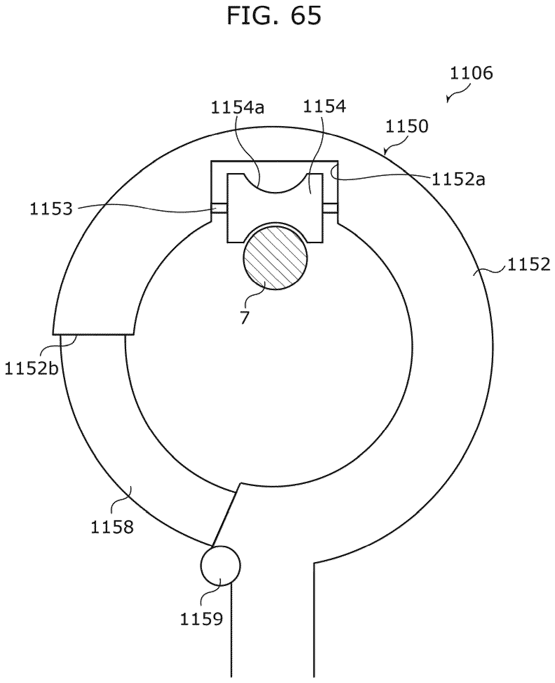

FIG. 65 is a schematic diagram illustrating an example of connector 1150 of unmanned aerial vehicle 1106 according to Variation 1 of Embodiment 9.

Connector 1150 according to the present variation includes arm 1131 connected to rail 7, roller 1154 that is provided on an inner peripheral surface of arm 1131 and rotatably contacts rail 7, and motor 1159. Note that connector 1150 need not include motor 1159; motor 1159 is not an essential component of connector 1150.

Arm 1131 includes first arm 1152 connected to rail 7 and second arm 1158 that opens or closes opening 1152b of first arm 1152. Second arm 1158 is moved so as to slide by motor 1159.

Roller 1154 is a wheel for rotatably contacting rail 7 and is rotatably provided on first arm 1152. More specifically, roller 1154 is axially supported by rotary shaft 1153 provided in notch 1152a in the inner circumference of first arm 1152, and rotates about rotary shaft 1153. Both ends of rotary shaft 1153 are fixed to first arm 1152.

Roller 1154 includes recess 1154a that is recessed along the direction of rotation (circumferential direction) of rotary shaft 1153 so as to guide rail 7. Recess 1154a is formed to correspond to the shape of rail 7. For example, if the cross section of rail 7 is circular when rail 7 is cut in a plane orthogonal to the lengthwise direction of rail 7, roller 1154 is formed in a semicircular shape in plan view, and if the cross section is square, roller 1154 is formed in a square shape in plan view.

The actuation of motor 1159 is controlled by controller 1134. Motor 1159 slides second arm 1158 to store it inside first arm 1152.

In this way, in unmanned aerial vehicle 1106 according to the present variation, connector 1150 includes arm 1131 connected to rail 7, and roller 1154 that is provided on an inner peripheral surface of arm 1131 and rotatably contacts rail 7.

Accordingly, when connector 1150 of unmanned aerial vehicle 1106 is connected to rail 7, roller 1154 contacts rail 7, allowing unmanned aerial vehicle 1106 to move along rail 7. Unmanned aerial vehicle 1106 is able to move along rail 7 using only its own propulsion in the traveling direction. Since unmanned aerial vehicle 1106 does not have to expend energy on lift force to lift itself, unmanned aerial vehicle 1106 can save energy.

In unmanned aerial vehicle 1106 according to the present variation, each of the at least one connector 1150 includes: arm 1131 that is hangable from rail 7; and roller 1154 that is provided on an inner peripheral surface of arm 1131 and rotatably contacts rail 7.

Accordingly, when connector 1150 of unmanned aerial vehicle 1106 is connected to rail 7, roller 1154 contacts and rolls on rail 7, allowing unmanned aerial vehicle 1106 to move along rail 7. In other words, unmanned aerial vehicle 1106 is able to move along rail 7 using only its own propulsion in the traveling direction. Accordingly, since unmanned aerial vehicle 1106 does not have to expend energy on lift force to lift itself, unmanned aerial vehicle 1106 can save energy.

### VARIATION 2 OF EMBODIMENT 9

Hereinafter, since the basic configuration of unmanned aerial vehicle 1106 according to the present variation is the same as the basic configuration of the unmanned aerial vehicle according to Embodiment 9 and the like, and the basic configuration of connector 1160 according to the present variation is the same as the basic configuration of the connector according to Variation 1 of Embodiment 9 and the like, repeated description of the basic configurations of unmanned aerial vehicle 1106 and connector 1160 in the present variation will be omitted where appropriate. The present variation differs from Variation 1 of Embodiment 9 and the like in that connector 1160 is provided with a pair of brake pads 1166.

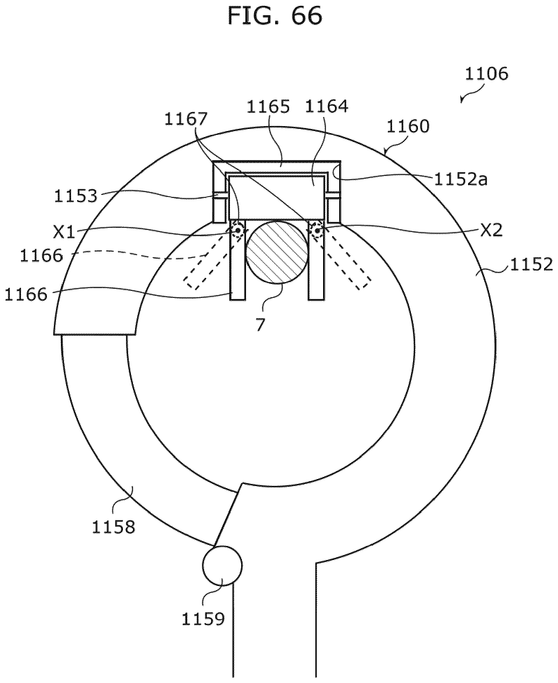

FIG. 66 is a schematic diagram illustrating an example of connector 1160 of unmanned aerial vehicle 1106 according to Variation 2 of Embodiment 9.

In addition to first arm 1152, second arm 1158, roller 1164, motor 1159, and controller 1134, connector 1160 of the present variation includes enclosure 1165, a pair of brake pads 1166, and braking mechanism 1167. Connector 1160 need not include first arm 1152, second arm 1158, roller 1164, motor 1159, controller 1134, and enclosure 1165; and first arm 1152, second arm 1158, roller 1164, motor 1159, controller 1134, and enclosure 1165 are not essential components of connector 1160.

Enclosure 1165 is provided in notch 1152a in the inner circumference of first arm 1152. Enclosure 1165 houses rotary shaft 1153 and roller 1164. Enclosure 1165 fixes both ends of rotary shaft 1153.

The pair of brake pads 1166 are fixed to enclosure 1165 or first arm 1152 so as to be pivotable around axes X1 and X2. The actuation of brake pads 1166 is controlled by braking mechanism 1167 to pivot the pair of brake pads 1166 around axes X1 and X2 so as to sandwich rail 7 or move away from rail 7. The pair of brake pads 1166 operate in conjunction with each other.

Braking mechanism 1167 changes the distance between the pair of brake pads 1166 to sandwich rail 7 between the pair of brake pads 1166. Braking mechanism 1167 includes an actuation unit such as actuator 1133 that controls the pivoting of the pair of brake pads 1166. Braking mechanism 1167 controls the pivoting of the pair of brake pads 1166 by being controlled by controller 1134, for example.

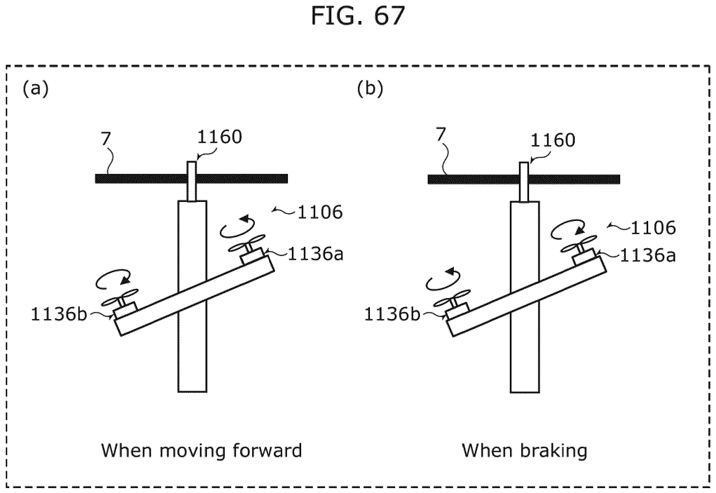

FIG. 67 is a schematic diagram illustrating an example of the directions of rotation of the propellers when unmanned aerial vehicle 1106 according to Variation 2 of Embodiment 9 is moving forward and braking. In FIG. 67, (a) illustrates an example in which first motor 1136a rotates the propeller in the first direction of rotation and second motor 1136b rotates the propeller in the second direction of rotation when unmanned aerial vehicle 1106 is moving forward. In FIG. 67, (b) illustrates an example in which first motor 1136a rotates the propeller in the second direction of rotation and second motor 1136b rotates the propeller in the first direction of rotation when unmanned aerial vehicle 1106 is braking.

When controller 1134 transitions unmanned aerial vehicle 1106 from a state of forward travel as illustrated in (a) in FIG. 67 to a stopped state as illustrated in (b) in FIG. 67, controller 1134 reverses the directions of rotation of the propeller of first motor 1136a and the propeller of second motor 1136b. When controller 1134 obtains a stop instruction to stop unmanned aerial vehicle 1106, controller 1134 rotates the propeller of first motor 1136a in the second direction of rotation and rotates the propeller of second motor 1136b in the first direction of rotation. The stop instruction is obtained, for example, by being transmitted from the manager that manages the flying state when approaching the destination point (receiver), or based on a sensor or the like that detects proximity to the destination point (receiver).

When controller 1134 obtains such a stop instruction, controller 1134 pivots the pair of brake pads 1166 by controlling braking mechanism 1167 to cause the pair of brake pads 1166 to sandwich rail 7.

In such an unmanned aerial vehicle 1106 according the present variation, connector 1160 includes a pair of brake pads 1166 and braking mechanism 1167 that changes the distance between the pair of brake pads 1166 so as to sandwich rail 7 between the pair of brake pads 1166.

Accordingly, when connector 1160 of unmanned aerial vehicle 1106 is connected to rail 7, rail 7 can be sandwiched between the pair of brake pads 1166. This makes it easy to decelerate or stop unmanned aerial vehicle 1106 that is moving.

In unmanned aerial vehicle 1106 according to the present variation, when controller 1134 obtains a stop instruction to stop unmanned aerial vehicle 1106, controller 1134 rotates rotary wings 1112 of first motor 1136a in the second direction of rotation and rotates rotary wings 1112 of second motor 1136b in the first direction of rotation.

This makes it possible to reverse the directions of rotation of rotary wings 1112 of first motor 1136a and rotary wings 1112 of second motor 1136b, in accordance with the stop instruction, relative to the directions of rotation of rotary wings 1112 of first motor 1136a and rotary wings 1112 of second motor 1136b when traveling forward. This makes it possible to stop movement of unmanned aerial vehicle 1106.

### EMBODIMENT 10

### Configuration

Hereinafter, since the basic configuration of delivery box 1004h according to the present embodiment is the same as the basic configuration of the delivery box according to Embodiment 6 and the like, and the basic configuration of unmanned aerial vehicle 1170 according to the present embodiment is the same as the basic configuration of the unmanned aerial vehicle according to Embodiment 1 and the like, repeated description of the basic configurations of delivery box 1004h and unmanned aerial vehicle 1170 in the present embodiment will be omitted where appropriate. The present embodiment differs from Embodiment 6 and the like in that delivery box 1004h includes load support member 1006h and unmanned aerial vehicle 1170 includes a plurality of legs 1170a that connect to load support member 1006h.

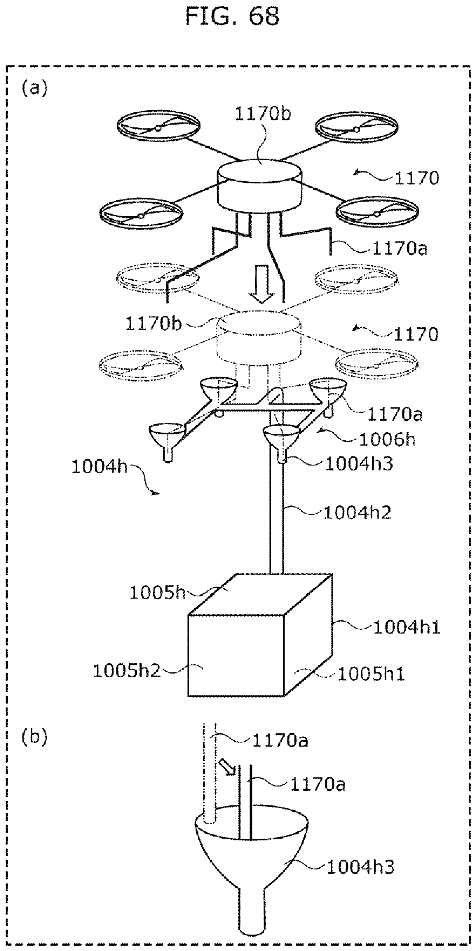

FIG. 68 is a schematic diagram illustrating an example of unmanned aerial vehicle 1170 and delivery box 1004h according to Embodiment 10. In FIG. 68, (a) illustrates an example in which unmanned aerial vehicle 1170 is landing on load support member 1006h of delivery box 1004h. In (a) in FIG. 68, unmanned aerial vehicle 1170 before landing on load support member 1006h is illustrated in solid lines and unmanned aerial vehicle 1170 after landing on load support member 1006h in double-dotted lines. In FIG. 67, (b) illustrates an example of how legs 1170a of unmanned aerial vehicle 1170 are guided into recess 1004h3 as unmanned aerial vehicle 1170 lands on load support member 1006h of delivery box 1004h. In (b) in FIG. 67, the engagement of leg 1170a with recess 1004h3 is illustrated in double-dotted lines, and the movement of leg 1170a guided by recess 1004h3 is illustrated in solid lines.

Delivery box 1004h is capable of storing a package delivered by unmanned aerial vehicle 1170. Delivery box 1004h includes container 1004h1, top lid 1005h, and load support member 1006h.

Container 1004h1 includes bottom portion 1005h1 and a plurality of side portions 1005h2 rising from bottom portion 1005h1. Container 1004h1 defines a space for storing a package. Container 1004h1 is an enclosure for storing a package. A top opening coverable by the closing of top lid 1005h is formed in the top portion of container 1004h1, which is located in the vertically upward part of container 1004h1.

Top lid 1005h is provided on the top portion of container 1004h1, which is the upper portion of container 1004h1, and can open and close the top opening for inserting a package in the space. Top lid 1005h covers the top opening when closed and opens the top opening when opened.

Load support member 1006h is arranged horizontally or along a ground surface and is capable of supporting unmanned aerial vehicle 1170 carrying a package. Load support member 1006h provided on container 1004h1 of delivery box 1004h includes support portion 1004h2 and a plurality of recesses 1004h3.

Support portion 1004h2 is fixed to at least one of a plurality of side portions 1005h2 of container 1004h1. Support portion 1004h2 is elongated in the vertical direction and rises from the top portion of container 1004h1. The lower end of support portion 1004h2 is connected to the top portion of container 1004h1 and the upper end of support portion 1004h2 is connected to the plurality of recesses 1004h3. In the present embodiment, support portion 1004h2 supports four recesses 1004h3.

The plurality of recesses 1004h3 correspond one-to-one with the plurality of legs 1170a of unmanned aerial vehicle 1170 and are capable of supporting the plurality of legs 1170a of unmanned aerial vehicle 1170. Each of the plurality of recesses 1004h3 is a bowl-shaped or cone-shaped recess that opens upwardly. The plurality of recesses 1004h3 are arranged vertically above container 1004h1, that is, vertically above the top opening of container 1004h1. The plurality of recesses 1004h3 are arranged at positions where they do not contact top lid 1005h when top lid 1005h is opened from the top portion of container 1004h1.

In the present embodiment, four recesses 1004h3 are supported by support portion 1004h2. The four recesses 1004h3 are distributed so that each corresponds to a corner of the top portion of container 1004h1. The four recesses 1004h3 are positioned apart so as not to interfere with the package carried by unmanned aerial vehicle 1170. For this reason, it is preferable that recesses 1004h3 and support portion 1004h2 are not located vertically above the top opening of container 1004h1. Although load support member 1006h is exemplified as including four recesses 1004h3 in the present embodiment, the number of recesses 1004h3 is not limited.

Unmanned aerial vehicle 1170 includes a plurality of legs 1170a that can land on load support member 1006h of delivery box 1004h. The plurality of legs 1170a are provided on main body 1170b of unmanned aerial vehicle 1170 and are located on the vertical underside of aerial vehicle 1170 when unmanned aerial vehicle 1170 is flying. When unmanned aerial vehicle 1170 flies vertically above the plurality of recesses 1004h3, it begins to descend and aligns the plurality of legs 1170a with the plurality of recesses 1004h3 one-to-one. With this, the plurality of legs 1170a engage the plurality of recesses 1004h3 and are guided by the plurality of recesses 1004h3 one-to-one. This results in unmanned aerial vehicle 1170 being held in a predetermined position by load support member 1006h. Although unmanned aerial vehicle 1170 is exemplified as including four legs 1170a in the present embodiment, the number of legs 1170a is not limited.

### Advantageous Effects

Next, the advantageous effects achieved by delivery box 1004h according to the present embodiment will be described.

As described above, delivery box 1004h according to the present embodiment is capable of storing a package delivered by unmanned aerial vehicle 1170, and includes: container 1004h1 including bottom portion 1005h1 and side portion 1005h2; top lid 1005h provided above container 1004h1; and load support member 1006h capable of supporting the load of unmanned aerial vehicle 1170 carrying a package. Unmanned aerial vehicle 1170 includes a plurality of legs 1170a that can land on load support member 1006h. Load support member 1006h includes a plurality of recesses 1004h3 that can support the plurality of legs 1170a. Each of the plurality of recesses 1004h3 is a bowl-shaped or cone-shaped recess that opens upwardly.

With this, the plurality of recesses 1004h3 can engage with the plurality of legs 1170a to guide the plurality of legs 1170a when unmanned aerial vehicle 1170 descends. As a result, load support member 1006h can hold unmanned aerial vehicle 1170 at a predetermined attitude. When unmanned aerial vehicle 1170 delivers a package, unmanned aerial vehicle 1170 can thus position itself vertically above container 1004h1. As a result, a package can be stored with certainty in delivery box 1004h.

### EMBODIMENT 11

### Configuration

Hereinafter, since the basic configuration of system 1107 according to the present embodiment are the same as the basic configuration of the flying system according to Embodiment 1 and the like, and the basic configuration of delivery box 1140 is the same as the basic configuration of the delivery box according to Embodiment 6 and the like, repeated description of the basic configurations of system 1107 and delivery box 1140 in the present embodiment will be omitted where appropriate. The present embodiment differs from Embodiment 7 and the like in that system 1107 includes delivery box 1140 and the like.

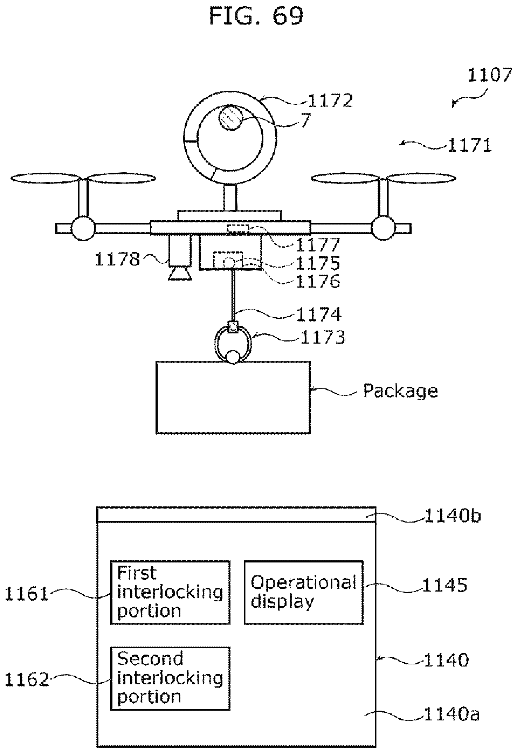

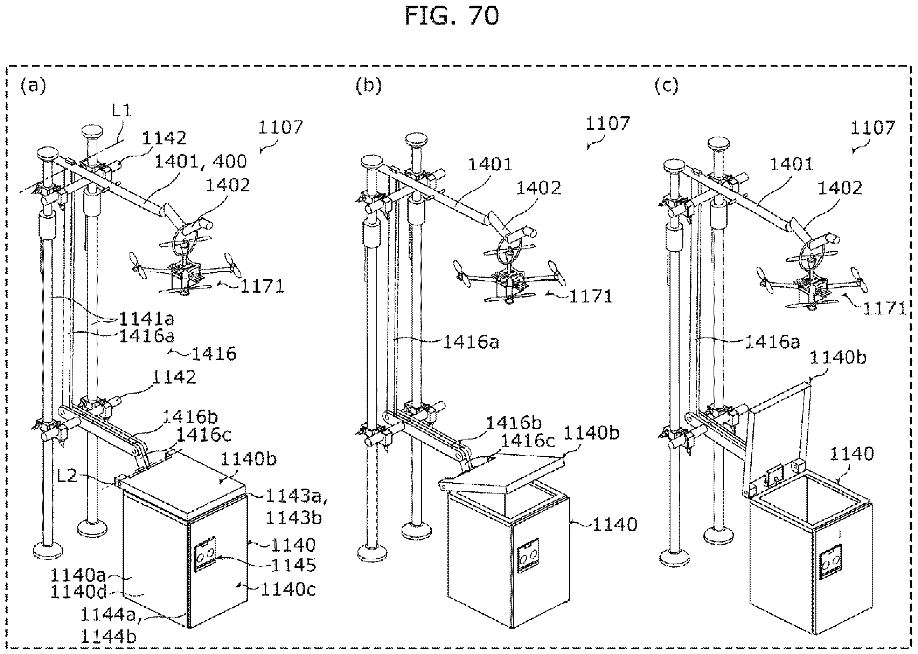

FIG. 69 is a schematic diagram illustrating an example of unmanned aerial vehicle 1171 and delivery box 1140 according to Embodiment 11. FIG. 70 is a perspective view illustrating an example of unmanned aerial vehicle 1171 and delivery box 1140 according to Embodiment 11.

As illustrated in FIG. 69 and (a) in FIG. 70, system 1107 includes delivery box 1140 and unmanned aerial vehicle 1171.

Delivery box 1140 is capable of storing a package delivered by unmanned aerial vehicle 1171. Delivery box 1140 includes container 1140a, lid 1140b, door 1140c, load support member 1401, one or more link rods 1416, a pair of rod support members 1141a, first axle L1, second axle L2, first interlocking portion 1161, second interlocking portion 1162, and operational display 1145.

Container 1140a includes bottom portion 1140d and a plurality of side portions 1144a that rise from bottom portion 1140d. Container 1140a is an enclosure that defines a space for storing a package.

Lid 1140b is a top lid provided on top portion 1143a of container 1140a, and is rotatably coupled to container 1140a. Lid 1140b is capable of opening and closing top opening 1143b of container 1140a for inserting a package into the space through top opening 1143b. Lid 1140b opens in order to open top portion 1143a of container 1140a when the load of unmanned aerial vehicle 1171 is applied to load support member 1401. Lid 1140b closes in order to cover top opening 1143b of container 1140a when the load of unmanned aerial vehicle 1171 applied to load support member 1401 is removed.

Door 1140c is a side lid provided on side opening 1144b of container 1140a, and is rotatably coupled to container 1140a. Door 1140c is capable of opening and closing side opening 1144b of container 1140a in order to remove a package in the space from side opening 1144b.

Load support member 1401 is arranged horizontally or along a ground surface and is capable of supporting the load of unmanned aerial vehicle 1171 carrying a package. Load support member 1401 is disposed vertically above container 1140a. Load support member 1401 is part of rail 7 described above and is a suspension rod capable of hanging unmanned aerial vehicle 1171. Load support member 1401 includes a V-shaped or U-shaped bend 1402 that bends in a vertical direction. Bend 1402 is located directly above container 1140a and bends in a vertical direction. Bend 1402 is connected to first arm 1172 of unmanned aerial vehicle 1171 and is capable of holding first arm 1172.

One or more link rods 1416 are coupled between load support member 1401 and lid 1140b of delivery box 1140, and connect load support member 1401 and lid 1140b of delivery box 1140. More specifically, one or more link rods 1416 are connected at one end to load support member 1401 and at the other end to lid 1140b of delivery box 1140. The one or more link rods 1416 transfer the load to lid 1140b of delivery box 1140 when unmanned aerial vehicle 1171 applies a load to load support member 1401, causing lid 1140b to open.

More specifically, the one or more link rods 1416 include first link rod 1416a, second link rod 1416b, and third link rod 1416c.

First link rod 1416a connects load support member 1401 and second link rod 1416b, and transfers the load of unmanned aerial vehicle 1171 applied to load support member 1401 to second link rod 1416b. A first end of first link rod 1416a is rotatably coupled to load support member 1401. A second end of first link rod 1416a is rotatably coupled to a third end of second link rod 1416b. In the present embodiment, first link rod 1416a is upright, i.e., extends vertically.

Second link rod 1416b connects second link rod 1416b and third link rod 1416c, and transfers the load of unmanned aerial vehicle 1171 transferred from first link rod 1416a to third link rod 1416c. A fourth end of second link rod 1416b is rotatably coupled to a fifth end of third link rod 1416c. In the present embodiment, second link rod 1416b is disposed horizontally so as to be orthogonal to the lengthwise direction of first link rod 1416a.

Third link rod 1416c connects third link rod 1416c and lid 1140b of delivery box 1140, and transfers the load of unmanned aerial vehicle 1171 transferred from first link rod 1416a and second link rod 1416b to lid 1140b of delivery box 1140. A sixth end of third link rod 1416c is rotatably coupled to lid 1140b of delivery box 1140.

The pair of rod support members 1141a are elongated rods for supporting first link rod 1416a, second link rod 1416b and third link rod 1416c in the above-described attitudes. The pair of rod support members 1141a are disposed on the ground surface vertically or in an upright attitude relative to the ground surface. The pair of rod support members 1141a may support first link rod 1416a, second link rod 1416b, and third link rod 1416c by one of rod support members 1141a.

The pair of rod support members 1141a are disposed parallel to one another, and the one or more link rods 1416 are disposed between one rod support member 1141a and the other rod support member 1141a. In the present embodiment, the one or more link rods 1416 include first link rod 1416a and second link rod 1416b.

The pair of rod support members 1141a includes a pair of couplings 1142. In the present embodiment, the pair of couplings 1142 are cylindrical rods extending horizontally.

The pair of couplings 1142 maintain the attitude of the pair of rod support members 1141a by coupling one rod support member 1141a to the other rod support member 1141a. One coupling 1142 is disposed on the upper side of the pair of rod support members 1141a and couples the one rod support member 1141a to the other rod support member 1141a. The other coupling 1142 is disposed on the lower side of the pair of rod support members 1141a and couples the one rod support member 1141a to the other rod support member 1141a. The other coupling 1142 is inserted at the third end of second link rod 1416b so as to be orthogonal to second link rod 1416b. The other coupling 1142 rotatably axially supports second link rod 1416b and serves as a fulcrum when second link rod 1416b rotates from the load of unmanned aerial vehicle 1171. The one coupling 1142 may be a support member that functions as first axle L1, and the other coupling 1142 may be a support member that functions as second axle L2.

The one rod support member 1141a may be inserted so as to be orthogonal to load support member 1401. In this case, the one coupling 1142 may rotatably axially support load support member 1401 and may serve as a fulcrum when load support member 1401 rotates from the load of unmanned aerial vehicle 1171. In such cases, the pair of rod support members 1141a may be an example of a support member that fixes the one coupling 1142 that functions as first axle L1.

First axle L1 supports the rotation of load support member 1401 at a position between the two ends of load support member 1401, which is a suspension rod. First axle L1 rotatably axially supports first link rod 1416a relative to load support member 1401. First axle L1 may be fixed to the pair of rod support members 1141a.

Second axle L2 supports the rotation of third link rod 1416c at a position between the fifth and sixth ends of third link rod 1416c. Second axle L2 rotatably supports lid 1140b of delivery box 1140 relative to third link rod 1416c. Second axle L2 may be fixed to container 1140a or lid 1140b of delivery box 1140. In such cases, container 1140a or lid 1140b is an example of a support member that fixes second axle L2. Second axle L2 may be fixed to a support member other than container 1140a or lid 1140b.

First interlocking portion 1161 locks door 1140c when lid 1140b is opened. When the load of unmanned aerial vehicle 1171 is transferred to lid 1140b of delivery box 1140 via the one or more link rods 1416, first interlocking portion 1161 locks door 1140c, that is, locks door 1140c so that it cannot be opened. First interlocking portion 1161 may lock door 1140c before, at the same time as, or directly after lid 1140b is opened. First interlocking portion 1161 locks door 1140c of container 1140a so that door 1140c of container 1140a does not open when storing a package in container 1140a. First interlocking portion 1161 is a key or an actuation mechanism such as an actuator or the like that locks door 1140c.

Second interlocking portion 1162 locks lid 1140b when lid 1140b is closed. When the removal of the load of unmanned aerial vehicle 1171 is transferred to lid 1140b of delivery box 1140 via the one or more link rods 1416, second interlocking portion 1162 locks lid 1140b immediately after lid 1140b is closed, that is, locks lid 1140b so that it cannot be opened. Second interlocking portion 1162 is a key or an actuation mechanism such as an actuator or the like that locks door 1140c.

Operational display 1145 is an input device for a user of delivery box 1140 to perform an unlocking process using a key if a package is stored in delivery box 1140. Operational display 1145 may display, for example, "in use" if a package is stored in delivery box 1140, and operational display 1145 includes a display.

As illustrated in FIG. 69, unmanned aerial vehicle 1171 includes first arm 1172 for hanging from load support member 1401. As first arm 1172 is the same as the connector described above or the arm included in the connector described above, repeated description will be omitted.

Unmanned aerial vehicle 1171 further includes wire 1174, second arm 1173, reel 1175, lift motor 1176, controller 1177, and camera 1178.

Wire 1174 is capable of hanging second arm 1173 and is connected to one end (e.g., the vertical upper end) of second arm 1173.

Second arm 1173 is connected to one end of wire 1174 and holds the package. Second arm 1173 according to the present embodiment includes a pair of gripping portions and a motor, and holds the package at a predetermined attitude by sandwiching a portion of the package from both sides. By controlling the actuation of the motor by controller 1177, second arm 1173 lifts the package by grasping the package between the pair of gripping portions, and lets go of the grasped package by releasing the pair of gripping portions. Note that second arm 1173 is not limited to the example given in present embodiment; it is sufficient if second arm 1173 is capable of holding and releasing a package by operating a pair of gripping portions by actuating a motor.

Reel 1175 is connected to the other end of wire 1174 and can reel wire 1174 in and out by rotating. The rotation of reel 1175 is controlled by lift motor 1176.

After lid 1140b is opened, controller 1177 controls lift motor 1176 to rotate reel 1175 to reel out wire 1174 to place the package into container 1140a. After the package is placed on bottom portion 1140d of container 1140a, controller 1177 causes second arm 1173 to release its hold on the package and causes reel 1175 to reel in wire 1174. Controller 1177 controls the motor of second arm 1173 to cause second arm 1173 to rotate and disconnect the package from second arm 1173.

When controller 1177 controls the motor of second arm 1173 to execute the disconnection of the package from second arm 1173, controller 1177 outputs an imaging instruction to camera 1178. Controller 1177 obtains an image of the interior (space) of container 1140a of delivery box 1140 via camera 1178. Controller 1177 executes an authenticated process that confirms that unmanned aerial vehicle 1171 has stored the package, based on an image showing the container 1140a and the interior of container 1140a captured by camera 1178.

For example, controller 1177 may determine whether the captured image includes an object corresponding to the package. If the package is stored in container 1140a, controller 1177 may determine the delivery as completed as the authenticated process, and if the package is not stored in container 1140a, controller 1177 may, as an unauthenticated process, rotate reel 1175 by controlling lift motor 1176 to reel in wire 1174, and rotate reel 1175 again to reel out wire 1174 to place the package into container 1140a.

Upon completion of the delivery, controller 1177 controls lift motor 1176 to rotate reel 1175 to reel in wire 1174, and releases unmanned aerial vehicle 1171 from rail 7.

Camera 1178 is capable of capturing images of the inside of container 1140a. Camera 1178 is provided on the lower side of the main body of unmanned aerial vehicle 1171 and captures images vertically below the main body. Although camera 1178 takes images by obtaining an imaging instruction from controller 1177, camera 1178 may constantly capture images.

### Operations

This section describes operations performed by unmanned aerial vehicle 1171 to store packages in delivery box 1140.

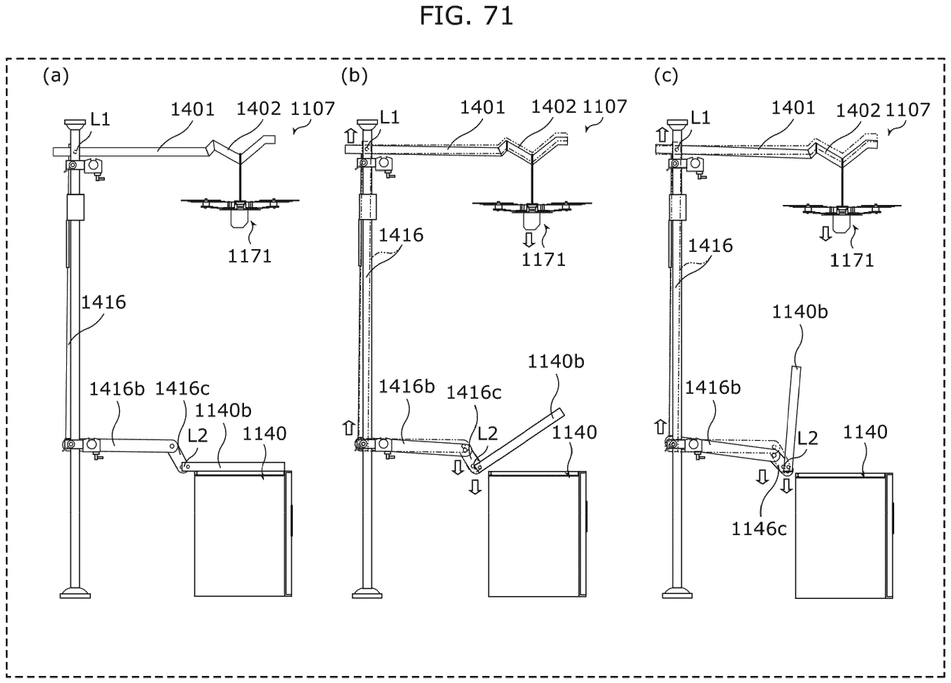

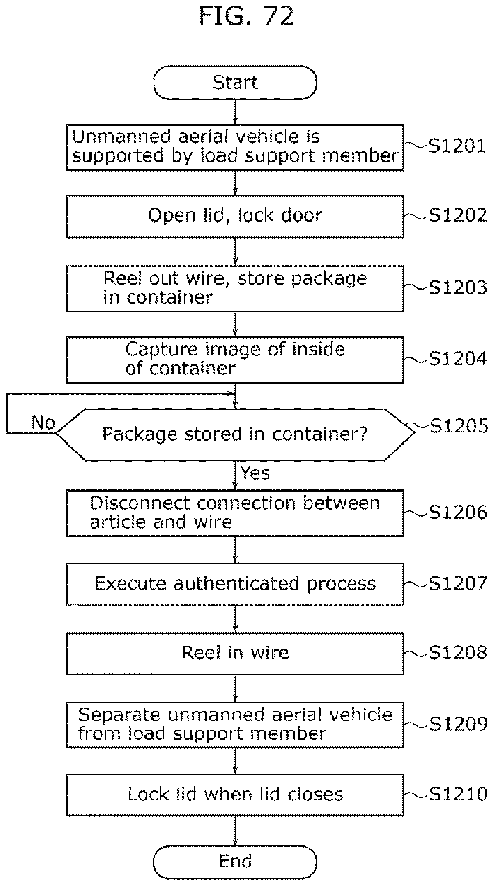

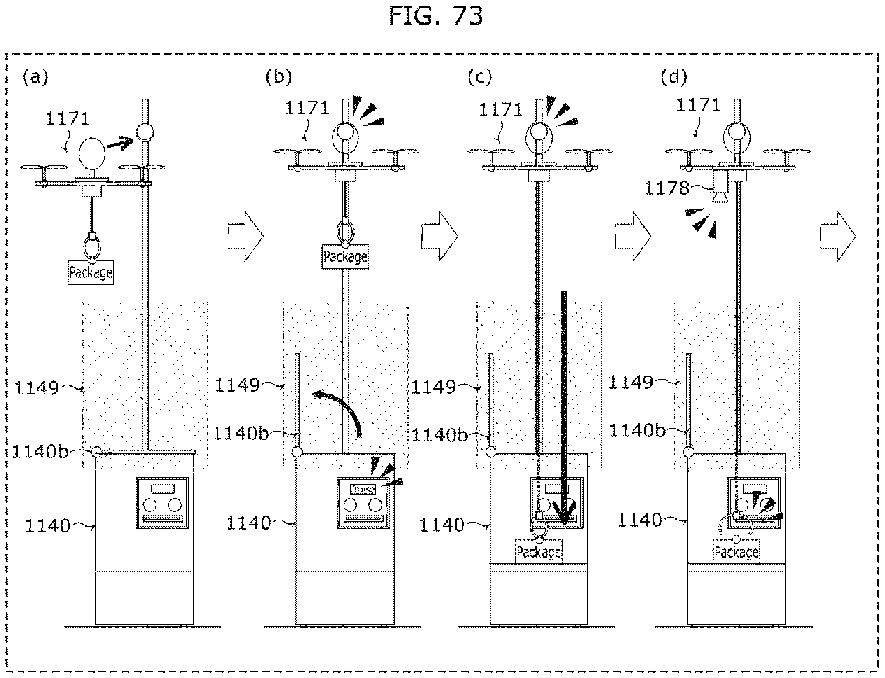

FIG. 72 is a flowchart illustrating an example of processes from start to finish of the delivery of a package to delivery box 1140 by unmanned aerial vehicle 1171 according to Embodiment 11. FIG. 73 is a schematic diagram illustrating an example of processes from the start of storing of a package in delivery box 1140 by unmanned aerial vehicle 1171 according to Embodiment 11 to the disconnecting of the package by second arm 1173. Although FIG. 73 is not entirely consistent with FIG. 70 and FIG. 71, they share at least the point that lid 1140b of delivery box 1140 opens when unmanned aerial vehicle 1171 is hanging from load support member 1401. In FIG. 73, guide portion 1149 surrounds the perimeter of lid 1140b of delivery box 1140 and is located between unmanned aerial vehicle 1171 and delivery box 1140.

First, as illustrated in FIG. 72 and (a) in FIG. 73, when unmanned aerial vehicle 1171 arrives at a location vertically above delivery box 1140, which is the receiver of the package, the controller of unmanned aerial vehicle 1171 stops operation of the plurality of motors. Unmanned aerial vehicle 1171 applies a load by contacting load support member 1401. Unmanned aerial vehicle 1171 is supported by load support member 1401 by hanging on bend 1402 of load support member 1401 (S1201). Step S1201 is an example of a step in which unmanned aerial vehicle 1171 is supported by load support member 1401 of delivery box 1140.

Next, the operation of delivery box 1140 opening lid 1140b will be described with reference to FIG. 70 and FIG. 71.

FIG. 71 is a side view of an example of the movement of delivery box 1140 when unmanned aerial vehicle 1171 according to Embodiment 11 is hanging from rail 7.

In (a) in FIG. 70 and (a) in FIG. 71, unmanned aerial vehicle 1171 is connected to load support member 1401. In (b) in FIG. 70 and (b) in FIG. 71, which show the states after (a) in FIG. 70 and (a) in FIG. 71, unmanned aerial vehicle 1171 is connected to load support member 1401 of rail 7, and the load of unmanned aerial vehicle 1171 is applied to load support member 1401. In (b) in FIG. 70 and (b) in FIG. 71, when the load of unmanned aerial vehicle 1171 is applied to load support member 1401, load support member 1401 flexes due to the load of unmanned aerial vehicle 1171, whereby first link rod 1416a, which pivots relative to load support member 1401 via first axle L1, is raised vertically upward. First link rod 1416a pulls second link rod 1416b vertically upward. Second link rod 1416b pivots with the other coupling 142 as a fulcrum while pivoting relative to first link rod 1416a to push third link rod 1416c vertically downward. Third link rod 1416c pushes down lid 1140b of delivery box 1140 while pivoting relative to second link rod 1416b. Lid 1140b pivots relative to third link rod 1416c to pivot about second axle L2 to open top opening 1143b of container 1140a. With this, as illustrated in (c) in FIG. 70 and (c) in FIG. 71, the load of unmanned aerial vehicle 1171 causes lid 1140b to stand upright relative to container 1140a, completely opening top opening 1143b of container 1140a.

We will now return to the description of FIG. 72 and FIG. 73. As illustrated in FIG. 72 and (b) in FIG. 73, delivery box 1140 opens lid 1140b which opens top opening 1143b. When the load of unmanned aerial vehicle 1171 is transferred to lid 1140b of delivery box 1140 via the one or more link rods 1416, first interlocking portion 1161 locks door 1140c so that it cannot be opened (S1202).

Next, as illustrated in FIG. 72 and (c) in FIG. 73, the controller controls lift motor 1176 to start reeling out wire 1174 in order to store the package in container 1140a (S1203). The controller controls lift motor 1176 to rotate reel 1175 to reel out wire 1174 to lower and place the package into container 1140a. Here, since the package is guided by guide portion 1149, the package can be aligned with delivery box 1140. As a result, guide portion 1149 can store a package in delivery box 1140. Guide portion 1149 is, for example, a netted frame or a plate-like frame. Step S1203 is an example of a step in which a package is stored in container 1140a.

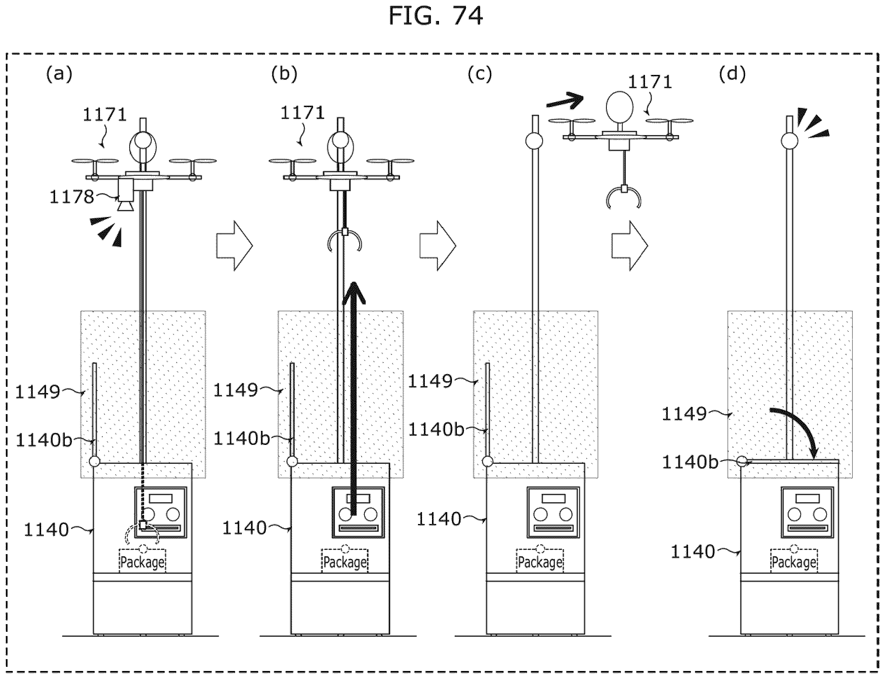

FIG. 74 is a schematic diagram illustrating an example of unmanned aerial vehicle 1171 according to Embodiment 11 from the time camera 1178 captures an image of a package stored in delivery box 1140 to the time unmanned aerial vehicle 1171 leaves rail 7.

Next, as illustrated in FIG. 72, (d) in FIG. 73, and (a) in FIG. 74, the controller outputs an imaging instruction to camera 1178 when step S1203 is executed. The controller checks whether the package has been stored in delivery box 1140. This causes camera 1178 to capture an image of the package and container 1140a (S1204). Camera 1178 outputs the captured image to the controller.

The controller determines, based on the captured image, whether or not a package has been stored in container 1140a (S1205). When a package is stored in container 1140a (YES in S1205), the controller disconnects the connection between the package and wire 1174 (S1206). The controller rotates second arm 1173 by controlling the motor of second arm 1173 to open the pair of gripping portions and disconnect the package from second arm 1173. Step S1206 is an example of a step of disconnecting the connection between the package and wire 1174.

If the package is not stored in container 1140a (NO in S1205), as an unauthenticated process, the controller rotates reel 1175 by controlling lift motor 1176 to reel in wire 1174, and rotates reel 1175 again to reel out wire 1174 to place the package into container 1140a. This processing may be repeated a predetermined number of times.

Next, if the package is stored in container 1140a, the controller determines the delivery as completed as the authenticated process, and executes the authenticated process that confirms that unmanned aerial vehicle 1171 has stored the package (S1207).

Next, as illustrated in FIG. 72 and (b) in FIG. 74, upon completion of delivery, the controller controls lift motor 1176 to rotate reel 1175 to reel in wire 1174 (S1208). Step S1208 is an example of a step of reeling in wire 1174.

Next, as illustrated in FIG. 72 and (c) in FIG. 74, the controller actuates the plurality of motors to cause unmanned aerial vehicle 1171 to hover and separate unmanned aerial vehicle 1171 from load support member 1401 (S1209). Since the load of unmanned aerial vehicle 1171 on load support member 1401 is removed, lid 1140b of delivery box 1140 closes to cover top opening 1143b of container 1140a. Step S1209 is an example of a step in which unmanned aerial vehicle 1171 is separated from load support member 1401.

Next, as illustrated in FIG. 72 and (d) in FIG. 74, second interlocking portion 1162 locks lid 1140b when lid 1140b is closed (S1210). As a result, lid 1140b of delivery box 1140 can be unlocked and opened by a user of delivery box 1140 executing an unlocking process using a key. System 1107 then ends the processing.

### Advantageous Effects

Next, the advantageous effects achieved by delivery box 1140, system 1107, and the method according to the present embodiment will be described.

As described above, delivery box 1140 according to the present embodiment is capable of storing a package delivered by unmanned aerial vehicle 1171, and includes: container 1140a including bottom portion 1140d and side portion 1144a; lid 1140b rotatably coupled to container 1140a; load support member 1401 capable of supporting the load of unmanned aerial vehicle 1171 carrying a package; and one or more link rods 1416 coupled between load support member 1401 and lid 1140b. When unmanned aerial vehicle 1171 applies a load to load support member 1401, the one or more link rods 1416 transfer the load to lid 1140b and open lid 1140b.

With this, lid 1140b of container 1140a can be automatically opened simply by unmanned aerial vehicle 1171 hanging from load support member 1401. Accordingly, the package delivered by unmanned aerial vehicle 1171 can be stored in container 1140a.

The method according to the present embodiment is a method for storing a package delivered by unmanned aerial vehicle 1171 into delivery box 1140, and includes: supporting unmanned aerial vehicle 1171 using load support member 1401 of delivery box 1140; storing the package in container 1140a after lid 1140b of delivery box 1140 opens and the package is lowered from unmanned aerial vehicle 1171 via wire 1174; disconnecting the connection between the package and wire 1174; reeling in wire 1174; and separating unmanned aerial vehicle 1171 from load support member 1401.

In delivery box 1140 according to the present embodiment, lid 1140b closes to cover the top portion of container 1140a when the load applied to load support member 1401 is removed.

With this, lid 1140b of container 1140a can be automatically closed by unmanned aerial vehicle 1171 flying away from load support member 1401.

In delivery box 1140 according to present embodiment, load support member 1401 is disposed above container 1140a.

With this, since lid 1140b of container 1140a is opened so long as unmanned aerial vehicle 1171 is hanging from load support member 1401, the package delivered by unmanned aerial vehicle 1171 can be easily stored in container 1140a.

In delivery box 1140 according to the present embodiment, load support member 1401 is a suspension rod from which unmanned aerial vehicle 1171 can hang.

With this, the load of unmanned aerial vehicle 1171 hanging from load support member 1401 can be reliably supported.

In delivery box 1140 according to the present embodiment, the suspension rod includes a V-shaped or U-shaped bend 1402 directly above container 1140a.

This makes it easier to position unmanned aerial vehicle 1171 because unmanned aerial vehicle 1171 can easily be caught by bend 1402. Accordingly, since lid 1140b of container 1140a is opened so long as unmanned aerial vehicle 1171 is hanging from load support member 1401, the package delivered by unmanned aerial vehicle 1171 can be more easily stored in container 1140a.

In delivery box 1140 according to the present embodiment, the one or more link rods 1416 include first link rod 1416a, second link rod 1416b, and third link rod 1416c. A first end of first link rod 1416a is rotatably coupled to the suspension rod. A second end of first link rod 1416a is rotatably coupled to a third end of second link rod 1416b. A fourth end of second link rod 1416b is rotatably coupled to a fifth end of third link rod 1416c. A sixth end of third link rod 1416c is rotatably coupled to lid 1140b.

With this, when unmanned aerial vehicle 1171 is hanging from the suspension rod, the suspension rod flexes vertically downward due to the load of unmanned aerial vehicle 1171. As a result, the load thereof is transferred, via the suspension rod, to lid 1140b of container 1140a via first link rod 1416a, second link rod 1416b, and third link rod 1416c. Accordingly, lid 1140b of container 1140a can be reliably opened simply by unmanned aerial vehicle 1171 hanging from the suspension rod. Accordingly, with this delivery box 1140, the package delivered by unmanned aerial vehicle 1171 can be stored in container 1140a more easily.

Delivery box 1140 according to the present embodiment further includes first axle L1 that supports rotation of load support member 1401 at a position between the two ends of the suspension rod, and second axle L2 that supports rotation of third link rod 1416c at a position between the fifth end and the sixth end of third link rod 1416c.

With this, the load of unmanned aerial vehicle 1171 can be reliably transferred to first link rod 1416a via first axle L1. The load of unmanned aerial vehicle 1171 transferred to third link rod 1416c can be reliably transferred to lid 1140b of container 1140a via second axle L2. This makes it possible to open lid 1140b of container 1140a.

Delivery box 1140 according to the present embodiment further includes a support member that fixes the positions of first axle L1 and second axle L2.

With this, the weight of unmanned aerial vehicle 1171 hanging from the suspension rod can be reliably transferred to lid 1140b of container 1140a via first link rod 1416a, second link rod 1416b, and third link rod 1416c, so that lid 1140b of container 1140a can be reliably opened.

Delivery box 1140 according to the present embodiment further includes door 1140c provided on side portion 1144a of container 1140a, and first interlocking portion 1161 that locks door 1140c when lid 1140b is opened.

This inhibits a package from going through door 1140c upon storing the package in container 1140a. Locking door 1140c makes it possible to inhibit forgetting to lock door 1140c manually, which is excellent for convenience because it can inhibit theft of a package stored in delivery box 1140.

Delivery box 1140 according to the present embodiment further includes second interlocking portion 1162 that locks lid 1140b when lid 1140b is closed.

With this, lid 1140b can be automatically locked when lid 1140b is closed. This reduces the frequency of having to lock lid 1140b by hand. Locking lid 1140b makes it possible to inhibit forgetting to lock lid 1140b manually, which is excellent for convenience because it can inhibit theft of a package stored in delivery box 1140.

System 1107 according to the present embodiment includes delivery box 1140 and unmanned aerial vehicle 1171.

In system 1107 according to the present embodiment, unmanned aerial vehicle 1171 includes first arm 1172 for hanging from load support member 1401.

With this, since unmanned aerial vehicle 1171 can securely hang from load support member 1401, unmanned aerial vehicle 1171 can maintain its attitude even if the actuation of a motor, for example, is stopped.

In system 1107 according to the present embodiment, unmanned aerial vehicle 1171 includes: wire 1174; second arm 1173 that is connected to one end of wire 1174 and holds a package; reel 1175 that is connected to the other end of wire 1174 and is capable of reeling in wire 1174; and controller 1177. Controller 1177 reels out wire 1174 to place the package into container 1140a after lid 1140b is opened, and after the package is placed on bottom portion 1140d of container 1140a, causes second arm 1173 to let go of the package and causes reel 1175 to reel in wire 1174.

Accordingly, when unmanned aerial vehicle 1171 is hanging from load support member 1401, second arm 1173 and the package can be lowered toward container 1140a by reeling out wire 1174. Once the package is placed on bottom portion 1140d of container 1140a, second arm 1173 can be moved away from the package. Thus, system 1107 can ensure that the package is stored inside container 1140a.

In present system 1107 according to the present embodiment, unmanned aerial vehicle 1171 further includes camera 1178 capable of capturing images of the inside of container 1140a.

This enables unmanned aerial vehicle 1171 to confirm whether or not the package has been stored in container 1140a. This can also prevent second arm 1173 from separating from the package if the package is not correctly stored inside container 1140a. After pulling up the package, the package can be stored in container 1140a once again.

In system 1107 according to the present embodiment, controller 1177 obtains an image of the inside of delivery box 1140 via camera 1178, and based on the image, executes an authenticated process that confirms that unmanned aerial vehicle 1171 has stored the package.

This ensures the certainty that the package was stored in container 1140a since the storing of the package into delivery box 1140 can be verified.

### EMBODIMENT 12

### Configuration

Hereinafter, since the basic configuration of lifting system 6a according to the present embodiment is the same as the basic configuration of the lifting system according to Embodiment 1 and the like, repeated description of the basic configuration of lifting system 6a in the present embodiment will be omitted where appropriate. The present embodiment differs from Embodiment 1 and the like in that lifting system 6a further includes propeller 22 and propeller actuation motor 1211b on the rear side surface of vehicle main body 1220 of the frame of unmanned aerial vehicle 10f.

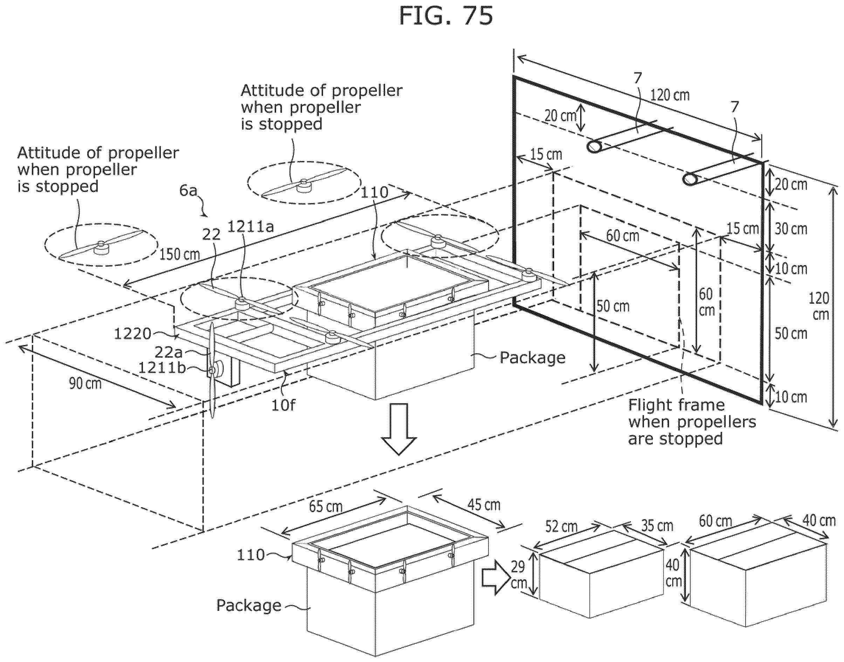

FIG. 75 is a perspective view illustrating an example of lifting system 6a and packages according to Embodiment 12.

As illustrated in FIG. 75, vehicle main body 1220 is elongated in the lengthwise direction of rails 7. Propeller actuation motor 1211b is fixed to the side surface of vehicle main body 1220. Propeller actuation motor 1211b is fixed to the support portion such that the axis of rotation thereof is approximately parallel to the horizontal direction. The plane of rotation of the propeller of propeller actuation motor 1211b disposed on the side surface of vehicle main body 1220 (hereinafter referred to as side propeller 22a) is approximately parallel to a vertical plane.

Propeller actuation motor 1211b is configured to move in a vertical direction relative to vehicle main body 1220. Propeller actuation motor 1211b is controlled by the actuator of actuation controller 12 by control processor 11. Propeller actuation motor 1211b provides thrust to unmanned aerial vehicle 10f in a horizontal direction, that is, in a direction orthogonal to the plane of rotation of side propeller 22a. This causes unmanned aerial vehicle 10f to move in the lengthwise direction of rails 7.

Side propeller 22a is positioned so as not to interfere with any other propeller 22. This means that the plane of rotation of side propeller 22a does not intersect the plane of rotation of any other propeller 22. For example, the vertical upper end of the plane of rotation of side propeller 22a is disposed vertically lower than an extended plane of the plane of rotation of propeller 22 disposed closest to side propeller 22a. Stated differently, side propeller 22a is positioned lower than the virtual plane. The virtual plane may be approximately parallel to or include the upper surface of vehicle main body 1220, and may be approximately parallel to or include the planes of rotation of the plurality of propellers 22. With this, even when propeller 22 disposed on the side surface of vehicle main body 1220 rotates, contact with any other propeller 22 can be inhibited.

Control processor 11 stops actuation of propeller actuation motor 1211b so that the lengthwise direction of propeller 22 is approximately parallel to the lengthwise direction of vehicle main body 1220. This allows unmanned aerial vehicle 10f to have a smaller width and therefore a smaller flight frame. As used herein, a "flight frame" refers to a frame for defining the range in which lifting system 6a coupled to rails 7 moves.

Lifting system 6a is capable of passing through a flight frame of 120 cm in width and 60 cm in height. More specifically, vehicle main body 1220 is 150 cm in length, which is the dimension parallel to the lengthwise direction of rails 7, 90 cm in width, and 60 cm in height. In lifting system 6a, when propellers 22 of unmanned aerial vehicle 10f are rotating, the height is 60 cm and the width is 90 cm, and when propellers 22 of unmanned aerial vehicle 10f are stopped, the height is 60 cm and the width is 60 cm. In lifting system 6a, when propellers 22 are rotating, there is a spacing of 15 cm at both lateral ends of unmanned aerial vehicle 10f, and in the height direction (vertical direction), there is a spacing of 50 cm above unmanned aerial vehicle 10f and a spacing of 10 cm below unmanned aerial vehicle 10f . Rails 7 are spaced 30 cm from the top of unmanned aerial vehicle 10f. Note that these values are non-limiting examples.

The size of first thruster device 110 loaded with a package is 65 cm in length, 45 cm in width, and 50 cm in height. Note that various sizes of packages can be loaded on first thruster device 110.

In lifting system 6a, first thruster device 110 is not limited to carrying a single package and may carry a plurality of packages. Stated differently, first thruster device 110 may hold a plurality of packages and support them in a predetermined attitude. First thruster device 110 can disconnect one or more of the plurality of packages when storing the packages in the delivery box.

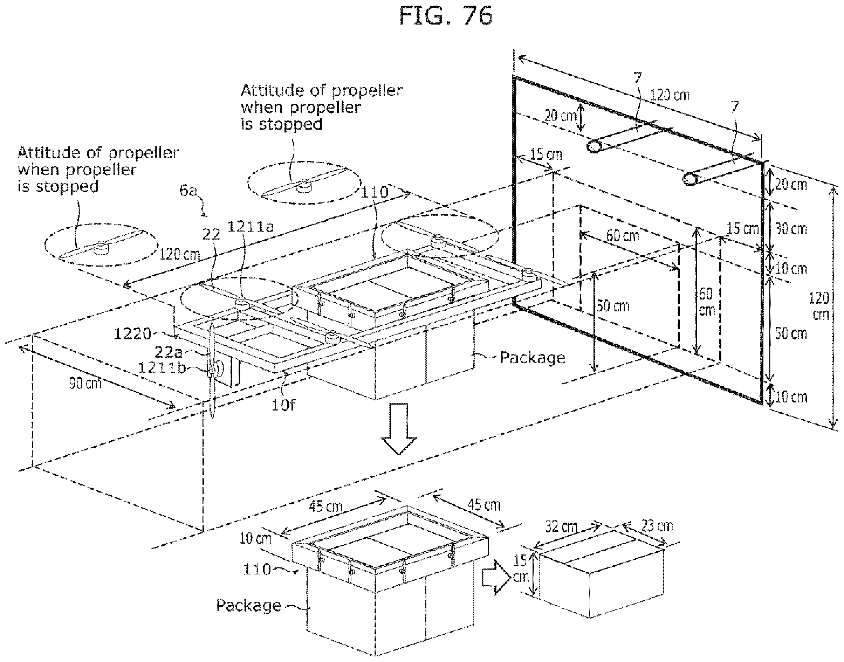

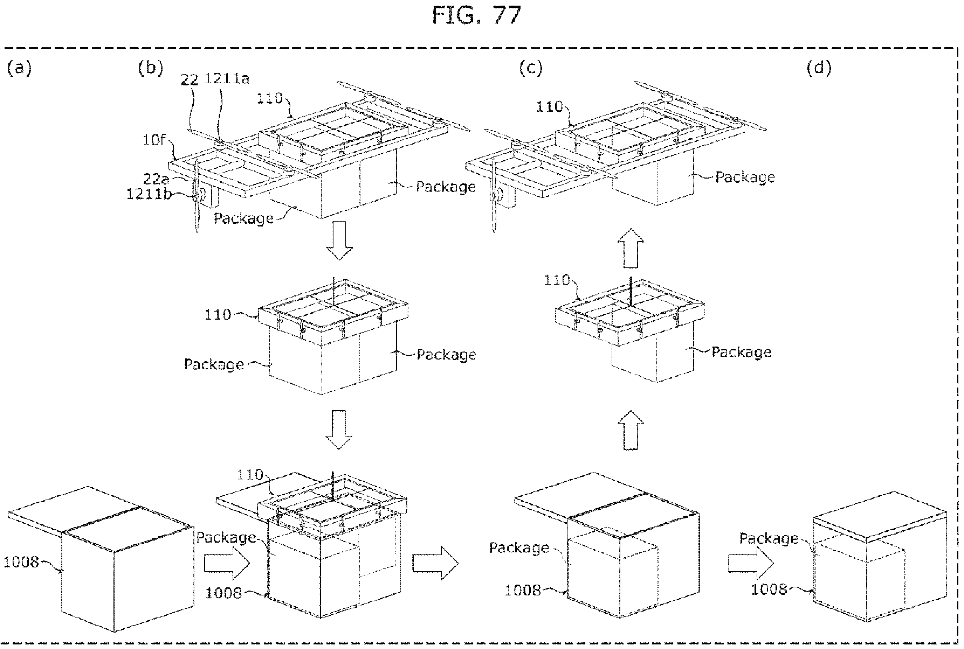

FIG. 76 is a schematic diagram illustrating an example of first thruster device 110 holding two packages. FIG. 77 is a schematic diagram illustrating an example of the storing of two packages into delivery box 1008 by first thruster device 110.

FIG. 77 assumes that unmanned aerial vehicle 10f has arrived at a position vertically above delivery box 1008.

As illustrated in (a) in FIG. 77, first, unmanned aerial vehicle 10f flies to and arrives at a position vertically above delivery box 1008, which is the receiver of the package.

Next, as illustrated in (a) and (b) in FIG. 77, control processor 11 controls wire control module 12c to rotate the reel to start reeling out wire 51. With this, first thruster device 110 starts descending.

First thruster device 110 corrects its position relative to delivery box 1008 while descending. Control processor 11 repeatedly corrects the overlap error between first thruster device 110 and the opening of delivery box 1008 in the vertical direction to align the opening of delivery box 1008 with first thruster device 110, i.e., the package.

As illustrated in (c) in FIG. 77, first thruster device 110 unloads one of the packages into delivery box 1008. More specifically, first thruster device 110 descends to cover the opening of delivery box 1008, and disconnects and stores one of the two packages that is to be stored in the delivery box. Stated differently, control processor 11 extracts each package whose identification code (e.g., address) matches the identification code (e.g., address) of the delivery box to which the package(s) is (are) to be delivered, and stores only the extracted package(s) in the delivery box. In the present embodiment, since one package is a match, first thruster device 110 disconnects and stores one package.

As illustrated in (d) in FIG. 77, first thruster device 110 is raised and attached to vehicle main body 1220 of unmanned aerial vehicle 10f after disconnecting the package and storing the package in delivery box 1008. Lifting system 6a then returns to the sender.

In this way, since a plurality of packages can be loaded on first thruster device 110, lifting system 6a can deliver packages to a plurality of receivers in a single flight. This inhibits a reduction in social energy efficiency resulting from lifting system 6a moving to deliver packages. Moreover, since the overall increase in the amount of movement by lifting system 6a can be inhibited, a reduction in delivery efficiency can be inhibited.

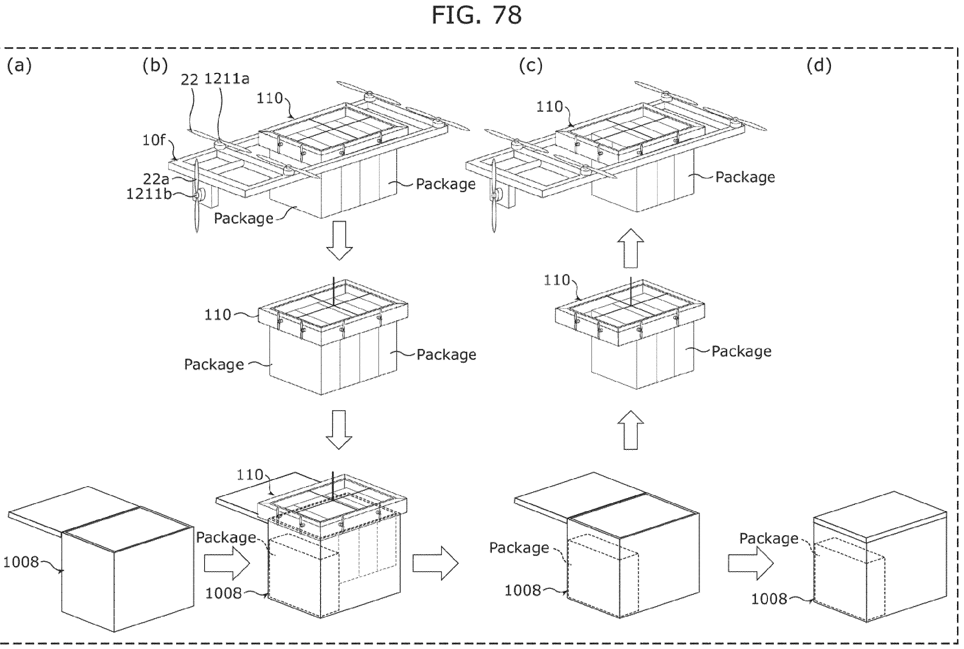

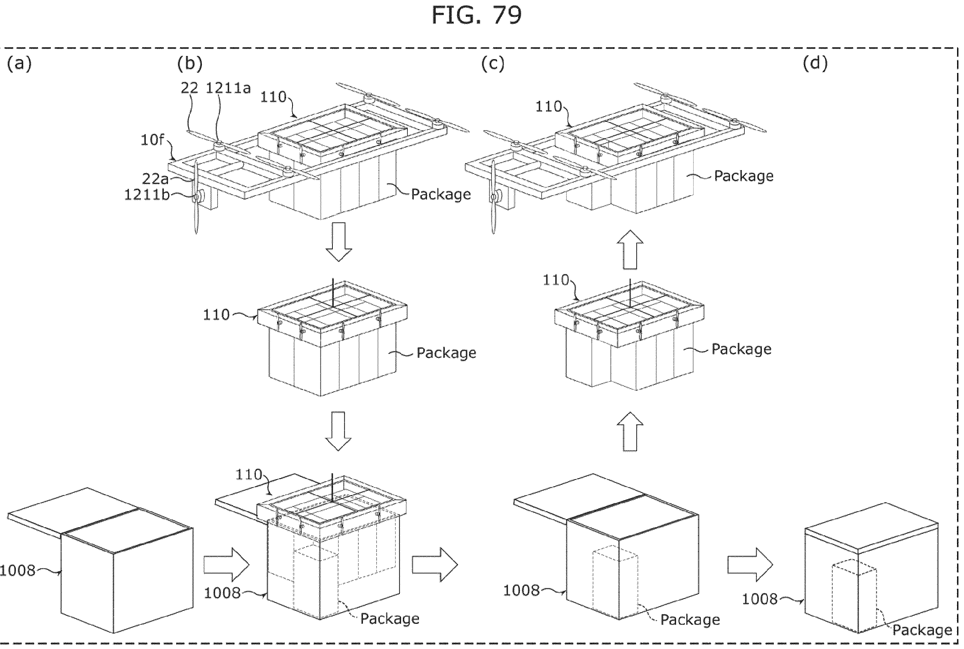

FIG. 78 is a schematic diagram illustrating an example of the storing of four packages into delivery box 1008 by first thruster device 110. FIG. 79 is a schematic diagram illustrating an example of the storing of eight packages into delivery box 1008 by first thruster device 110. The description of FIG. 77 also applies to the examples illustrated in FIG. 78 and FIG. 79 as well.

### VARIATION 1 OF EMBODIMENT 12

Hereinafter, since the basic configuration of lifting system 6b of the flying body according to the present variation is the same as the basic configuration described in Embodiment 12 and the like, repeated description of the basic configuration of lifting system 6b in the present variation will be omitted where appropriate. The present variation differs from the embodiment in that the additionally provided second thruster device 130 carries a package, and that first thruster device 110 and second thruster device 130 are arranged in unmanned aerial vehicle 10f in a line parallel to the lengthwise directions of rails 7.

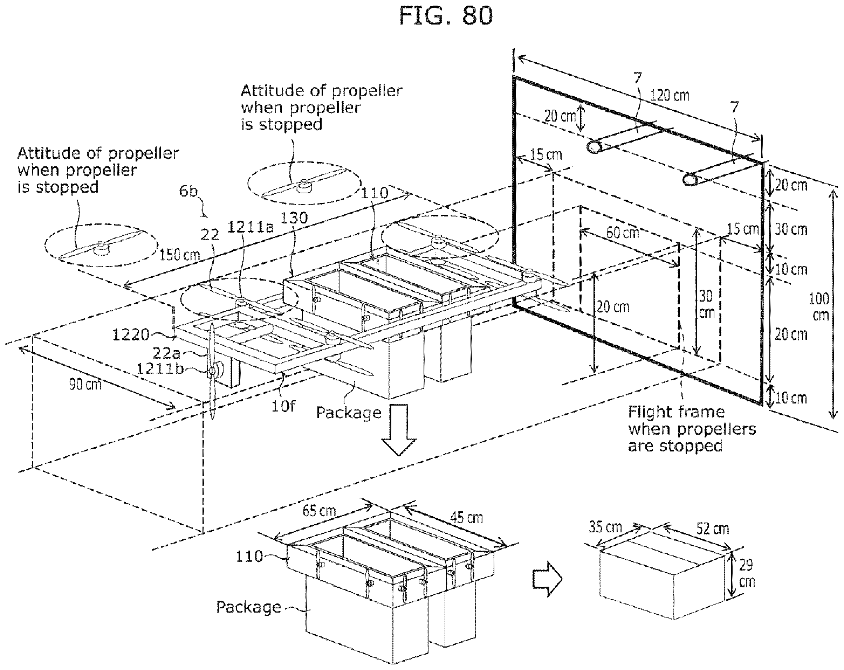

FIG. 80 is a perspective view illustrating an example of lifting system 6b and packages according to Variation 1 of Embodiment 12.

In the present variation, as illustrated in FIG. 80, each of first thruster device 110 and second thruster device 130 holds a package and supports the package in a predetermined attitude. The packages may be destined for the same receiver or destined for different receivers.

When lifting system 6b reaches the receiver, control processor 11 of unmanned aerial vehicle 10f extracts each package whose identification code (e.g., address) matches the identification code (e.g., address) of delivery box 1008 to which the package(s) is (are) to be delivered, and only those thruster device(s) loaded with said package(s) descend to delivery box 1008. If a plurality of packages are to be delivered to the same receiver, for example, first thruster device 110 may store a package in delivery box 1008, and then second thruster device 130 may store another package in delivery box 1008.

### VARIATION 2 OF EMBODIMENT 12

Hereinafter, since the basic configuration of lifting system 6b of the flying body according to the present variation is the same as the basic configuration described in Embodiment 12 and the like, repeated description of the basic configuration of lifting system 6b in the present variation will be omitted where appropriate. The present variation differs from the embodiment in that vehicle main body 1220 includes eight propellers 22 and a single side propeller 22a.

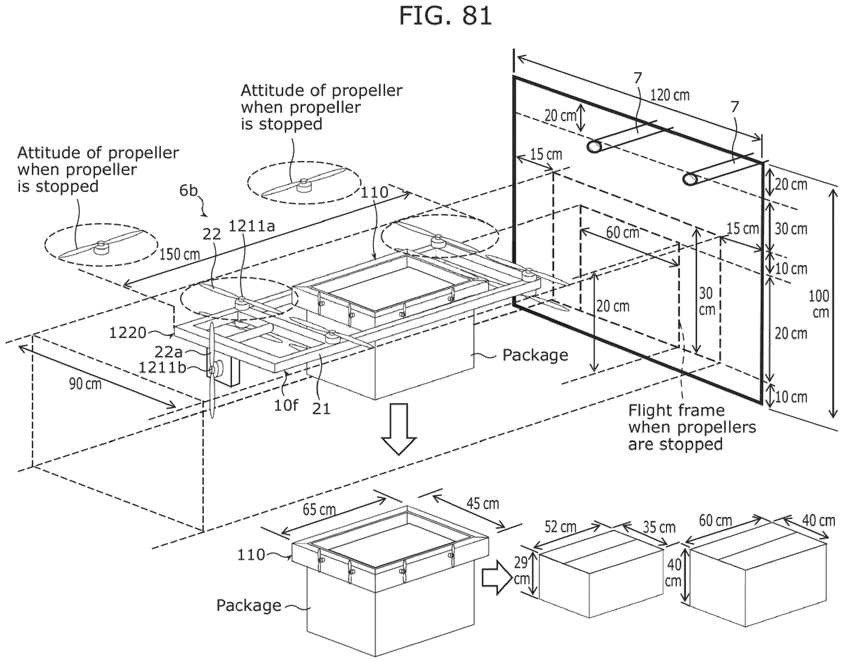

FIG. 81 is a perspective view illustrating an example of lifting system 6b and packages according to Variation 2 of Embodiment 12.

As illustrated in FIG. 81, pairs of propellers 22 are disposed in a plurality of locations on main body 21 of vehicle main body 1220, such that each pair of propellers 22 sandwiches main body 21. One propeller in a pair of propellers 22 is disposed vertically above main body 21 and the other propeller is disposed vertically below main body 21. In the present variation, four pairs of propellers 22 are affixed in four locations on main body 21.

A pair of propellers 22 may rotate in synchronization and, alternatively, may rotate out of synchronization. One propeller in a pair of propellers 22 may rotate clockwise and the other may rotate counterclockwise. The direction of rotation of propellers 22 is controlled by control processor 11 controlling propeller actuation motor 1211b. Stated differently, control processor 11 may cause a pair of propellers 22 to rotate in synchronization or out of synchronization. Control processor 11 may separately control the direction and speed of rotation of each of pair of propellers. In such cases, vehicle main body 1220 may be provided with a number of propeller actuation motors 1211b based on the number of propellers.

### VARIATION 3 OF EMBODIMENT 12

Hereinafter, since the basic configuration of lifting system 6b according to the present variation is the same as the basic configuration described in Embodiment 12 and the like, repeated description of the basic configuration of lifting system 6b in the present variation will be omitted where appropriate. The present variation differs from the embodiment in that a portion of main body 21 of vehicle main body 1220 can pivot.

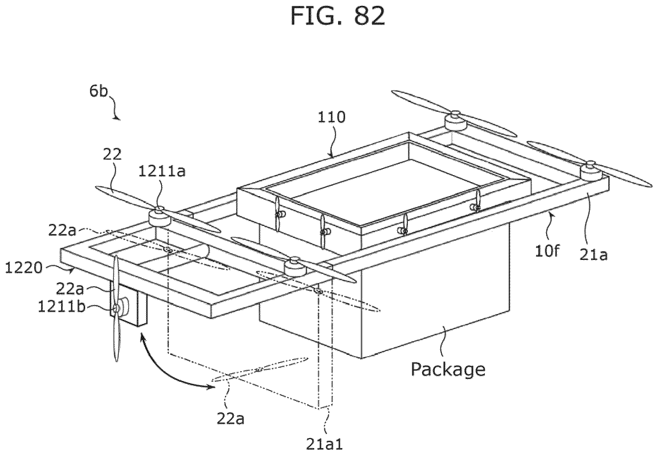

FIG. 82 is a perspective view illustrating an example of lifting system 6b according to Variation 3 of Embodiment 12. In FIG. 82, pivoting frame portion 21a1 in a non-pivoted position is illustrated with solid lines, pivoting frame portion 21a1 in a pivoted position is illustrated by double-dotted lines.

Unmanned aerial vehicle 10f includes pivoting frame portion 21a1, which is a portion of main body 21a that pivots, a hinge that allows pivoting frame portion 21a1 to pivot, and an actuation motor. Pivoting frame portion 21a1 includes two propeller actuation motors 1211b. Pivoting frame portion 21a1 is pivoted so as to fold vehicle main body 1220 about the hinge as an axis, so as to fold into an attitude approximately parallel to the vertical direction. The actuation motor is controlled by control processor 11 to rotate pivoting frame portion 21a1 about the hinge to place pivoting frame portion 21a1 in an attitude approximately parallel to the vertical direction or to place pivoting frame portion 21a1 in an attitude approximately parallel to the horizontal direction. When unmanned aerial vehicle 10f is connected to rails 7, control processor 11 folds vehicle main body 1220 so that the pivoting frame portion is in an attitude approximately parallel to the vertical direction, and actuates the two propeller actuation motors 1211b fixed to the pivoting frame portion.

The two propeller actuation motors 1211b rotate their respective propellers 22 to provide horizontal thrust to unmanned aerial vehicle 10f, that is, thrust in a direction orthogonal to the plane of rotation of side propeller 22a. This causes unmanned aerial vehicle 10f to move in the lengthwise direction of rails 7.

### EMBODIMENT 13

### Configuration

Hereinafter, since the basic configuration of lifting system 6c according to the present embodiment is the same as the basic configuration of the lifting system according to Embodiment 1 and the like, repeated description of the basic configuration of lifting system 6c in the present embodiment will be omitted where appropriate. The present embodiment differs from other embodiments and the like in that first arm 1331 and second arm 1332 are provided with rollers 1351 and that GPS sensor 1352 is arranged on the fixed portion.

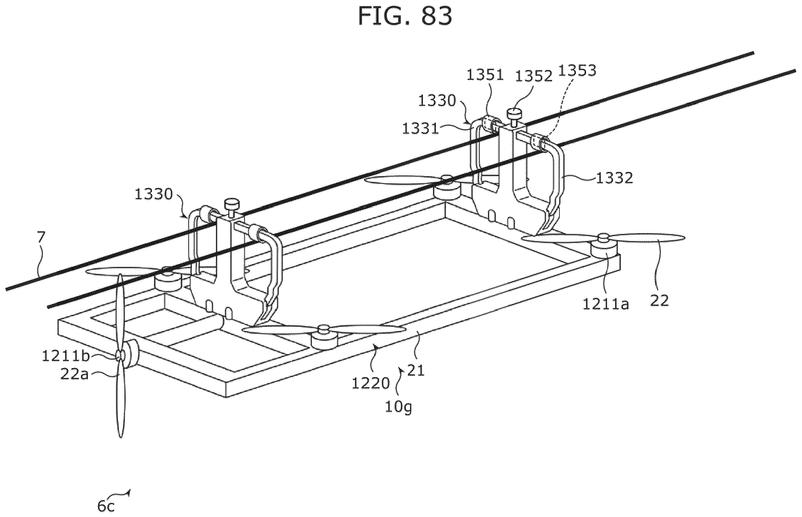

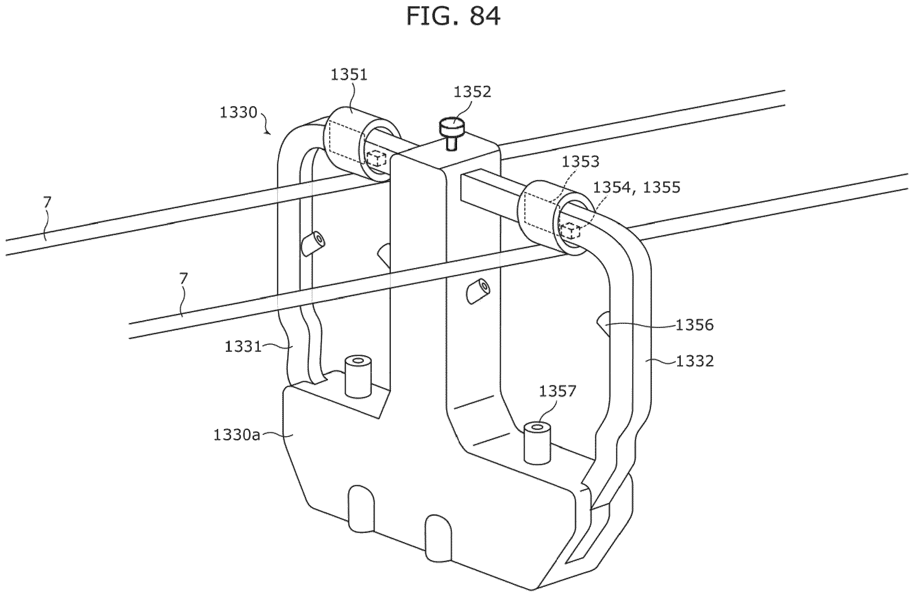

FIG. 83 is a perspective view illustrating an example of lifting system 6c according to Embodiment 13. Illustration of the first thruster device is omitted in FIG. 83. FIG. 84 is an enlarged perspective view illustrating an example of connector 1330 according to Embodiment 13.

The present embodiment is an example of lifting system 6c that travels along two rails 7, as illustrated in FIG. 83 and FIG. 84. In unmanned aerial vehicle 10g of lifting system 6c, two connectors 1330 arranged in the lengthwise direction of vehicle main body 1220 are fixed to main body 21 of vehicle main body 1220. In the present embodiment, rails 7 are power lines.

First arm 1331 and second arm 1332 are fixed to main body 21 of vehicle main body 1220. Each of first arm 1331 and second arm 1332 includes roller 1351, roller actuation motor 1353, weight sensor 1354, electric field sensor 1355, camera sensor 1356, and infrared sensor 1357.

Each of first arm 1331 and second arm 1332 is provided with roller 1351. Roller 1351 is pivotable with respect to first arm 1331 and second arm 1332 at a point where first arm 1331 and second arm 1332 and rail 7 face each other. Roller 1351 is a wheel for rotational contact with rail 7.

Each of first arm 1331 and second arm 1332 is provided with roller actuation motor 1353 in one-to-one correspondence with roller 1351. Roller actuation motor 1353 actuates and rotates a corresponding roller 1351 under control by control processor 11. Stated differently, respective roller actuation motors 1353 actuate and rotate respective rollers 1351 to cause lifting system 6c to travel over rails 7.

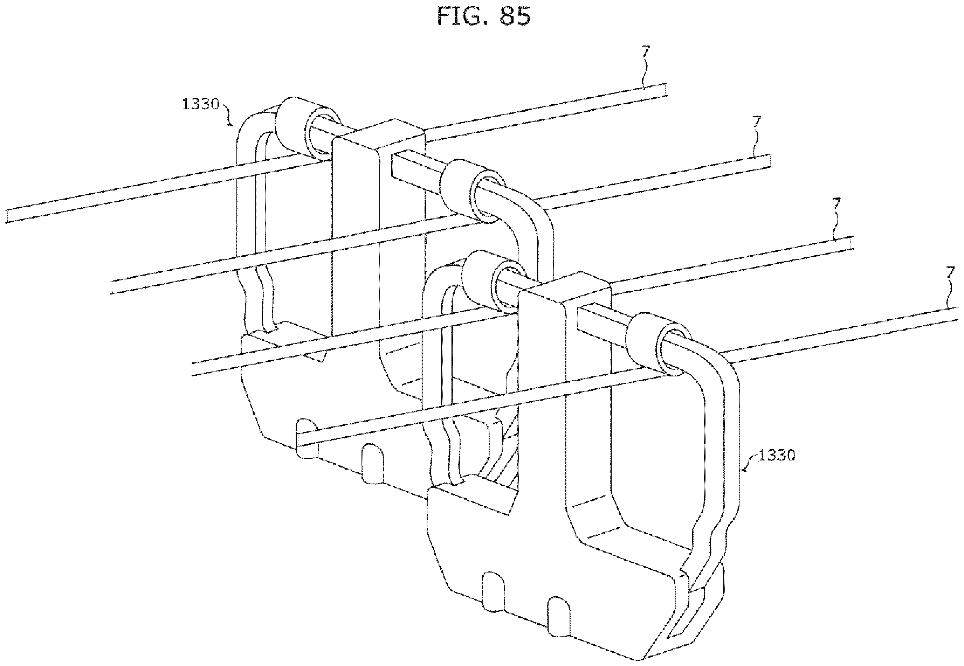

When a plurality of rails 7 are aligned like in FIG. 85, a plurality of connectors 1330 may be arranged on main body 21 illustrated in FIG. 83 so as to be aligned in a direction orthogonal to the lengthwise direction of rails 7. With this configuration, a single lifting system 6c can inspect the condition of a plurality of rails 7. FIG. 85 is an enlarged perspective view illustrating an example of a plurality of connectors 1330 connected to a plurality of rails 7 according to Embodiment 13.

To move lifting system 6c on rails 7, control processor 11 carries out control to stop actuation of propeller actuation motors 1211b and actuate roller actuation motors 1353.

GPS sensor 1352 is disposed at the tip of base portion 1330a. In the present embodiment, GPS sensor 1352 is provided at the tip of base portion 1330a at the two arms to facilitate reception of the position of lifting system 6c. GPS sensor 1352 is one example of a sensor.

As illustrated in FIG. 83 and FIG. 84, lifting system 6c of the present embodiment is held while hanging by two arms from two rails 7. By control processor 11 controlling the respective roller actuation motors 1353 and the respective propeller actuation motors 1211b, unmanned aerial vehicle 10g can move along rails 7 by actuating roller actuation motors 1353.

Each of first arm 1331 and second arm 1332 is provided with weight sensor 1354. Weight sensor 1354 detects the weight of lifting system 6c applied to rails 7 when rollers 1351 first arm 1331 and second arm 1332 contact rails 7. Weight sensors 1354 are provided on the inner portions of rollers 1351 of first arm 1331 and second arm 1332. Weight sensor 1354 outputs weight information indicating the detected weight of lifting system 6c to control processor 11.

Each of first arm 1331 and second arm 1332 is provided with electric field sensor 1355. Electric field sensor 1355 detects the state of the magnetic field of rails 7 on the travel route. Electric field sensor 1355 outputs to control processor 11 magnetic field information that is associated with the position information obtained by GPS sensor 1352 and indicates the state of the detected magnetic field of rails 7.

Each of first arm 1331, second arm 1332, and base portion 1330a is provided camera sensor 1356. Each camera sensor 1356 detects the state and the like of rails 7 by capturing images of rails 7.

Infrared sensor 1357 is provided on base portion 1330a. Infrared sensor 1357 detects the state and the like of rails 7 by capturing images of rails 7 in dark environments such as at night.

Camera sensors 1356 and infrared sensor 1357 capture images of the surface of rails 7 and output image information of the captured state of rails 7 to control processor 11.

Control processor 11 can calculate the tension applied to rails 7 by obtaining the weight information from weight sensor 1354. When a plurality of lifting systems 6c are on the same rails 7, control processor 11 may determine whether the load capacity of rails 7 is exceeded based on the weight information. If the load capacity of rails 7 is exceeded, control processor 11 suspends (or postpones) the traveling of lifting system 6c.

Control processor 11 may detect whether rollers 1351 are disengaged from rails 7 by obtaining contact information from electric field sensors 1355. If rollers 1351 are disengaged from rails 7, control processor 11 may correct the attitude of lifting system 6c so that respective rollers 1351 travel on rails 7, by controlling respective propeller actuation motors 1211b to rotate propellers 22.

Control processor 11 obtains the electric field information from respective electric field sensors 1355 and transmits the information to management server 9 via the communicator. Control processor 11 transmits image information of the captured state of rails 7 from respective camera sensors 1356 to management server 9 via the communicator. This allows management server 9 to easily inspect the condition of rails 7 based on the magnetic field information and image information received from lifting system 6c. Stated differently, management server 9 can inspect whether rails 7 are, for example, damaged or not based on the magnetic field information and the image information.

### VARIATION 1 OF EMBODIMENT 13

Hereinafter, since the basic configuration of the lifting system according to the present embodiment is the same as the basic configuration of the lifting system according to Embodiment 13 and the like, repeated description of the basic configuration of the lifting system in the present embodiment will be omitted where appropriate. The present embodiment differs from the embodiment and the like in that connector 1340 is provided with brushes 1358.

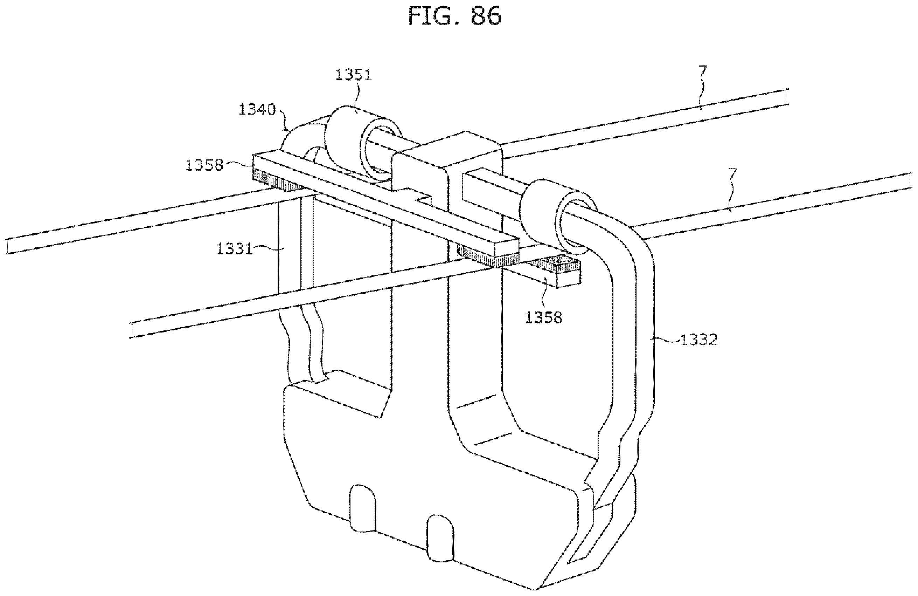

FIG. 86 is an enlarged perspective view illustrating an example of connector 1340 according to Variation 1 of Embodiment 13.

As illustrated in FIG. 86, connector 1340 of unmanned aerial vehicle includes brushes 1358 that contact the surfaces of rails 7. Brushes 1358 are fixed to base portion 1330a and remove deposits from rails 7 by contacting the surfaces of rails 7 as lifting system travels along rails 7. Brushes 1358 are disposed in front of rollers 1351 relative to the direction of travel of the lifting system. This allows brushes 1358 to remove deposits from rails 7 so that rollers 1351 do not run over deposits as the lifting system travels along rails 7. Therefore, in this lifting system, since it is difficult for rollers 1351 to separate from rails 7, it is possible to inhibit a reduction in the operating efficiency of the lifting system. When rails 7 are power lines in particular, deposits on the wire can be properly removed to allow lifting system to safely travel on rails 7.

When a plurality of rails 7 are aligned, a plurality of arms may be arranged on main body 21 so as to be aligned in a direction orthogonal to the lengthwise direction of rails 7. Such a configuration allows a single lifting system to clean a plurality of rails 7.

### VARIATION 2 OF EMBODIMENT 13

Hereinafter, since the basic configuration of the lifting system according to the present variation is the same as the basic configuration of the lifting system according to Embodiment 13 and the like, repeated description of the basic configuration of lifting system in the present variation will be omitted where appropriate. The present variation differs from the embodiment and the like in that, the inner diameter of one of two connectors 1341 and 1342 is large and the inner diameter of the other of the two connectors 1341 and 1342 is small.

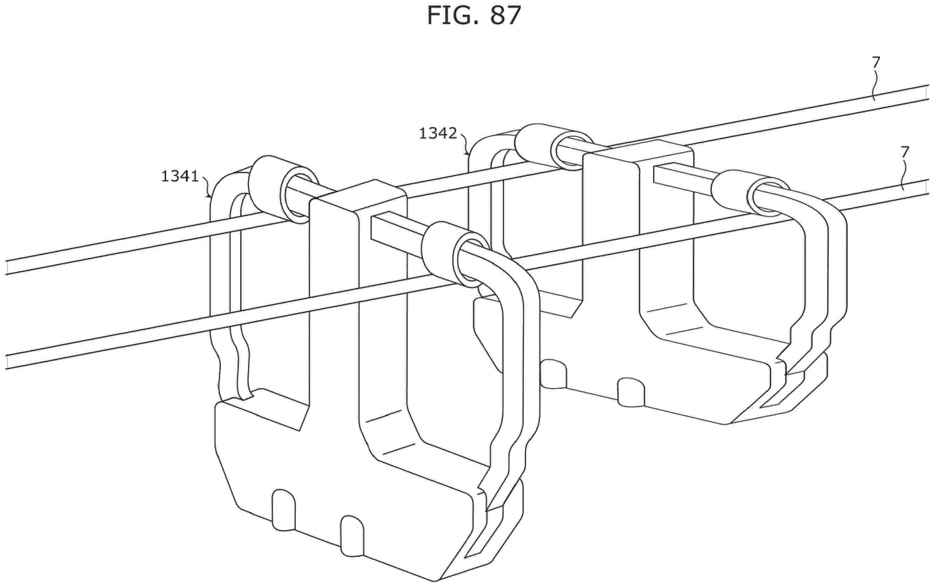

FIG. 87 is an enlarged perspective view illustrating an example of connectors 1341 and 1342 according to Variation 2 of Embodiment 13.

As illustrated in FIG. 87, the unmanned aerial vehicle includes one connector 1341 with a larger inner diameter and another connector 1342 with a smaller inner diameter than connector 1341. Among the two connectors 1341 and 1342 included in the unmanned aerial vehicle, connector 1341 is used when the lifting system is engaging rails 7. In other words, connector 1341 can travel on rails 7.

When connector 1341 moves on rails 7, the swaying of the lifting system is increased by disturbances such as wind. As a result, if distances between the respective camera sensors on connector 1341 and the respective rails 7 are not maintained constant, and the images obtained by the camera sensors may be disturbed. For this reason, control processor 11 controls the actuation of connector 1341 so that, when the lifting system sways significantly (greater than or equal to a predetermined vibration frequency), the lifting system is further connected to rails 7 by connector 1342 after connecting connector 1341 to rails 7. This can reduce swaying in the lifting system.

### EMBODIMENT 14

### Configuration

Hereinafter, since the basic configuration of lifting system 6c according to the present embodiment is the same as the basic configuration of the lifting system according to Embodiment 1 and the like, repeated description of the basic configuration of lifting system 6c in the present embodiment will be omitted where appropriate. The present embodiment differs from other embodiments and the like in that it exemplifies a case where delivery box 1108 collects a user's package.

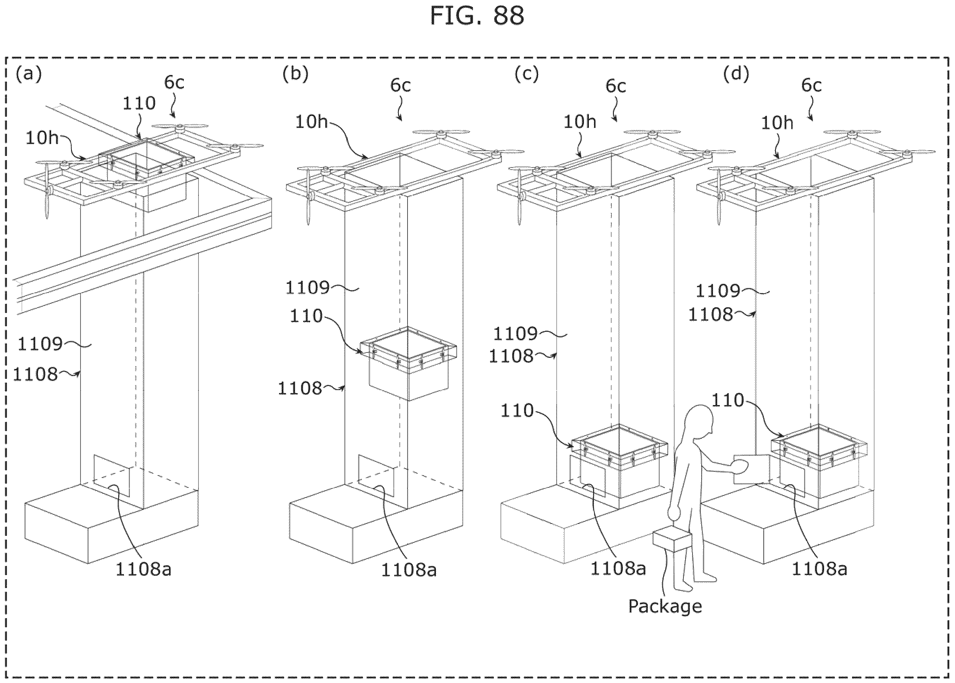

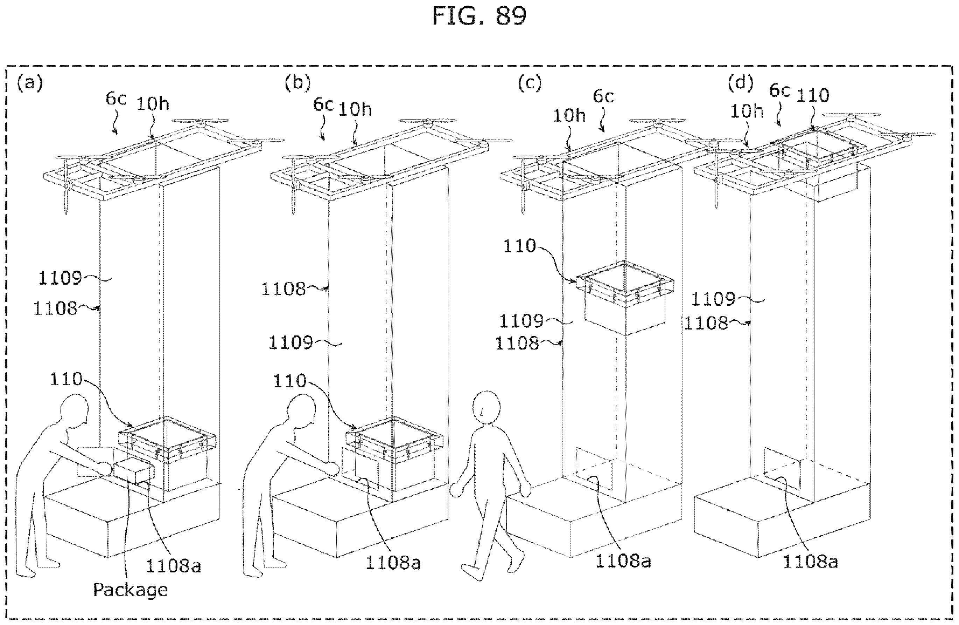

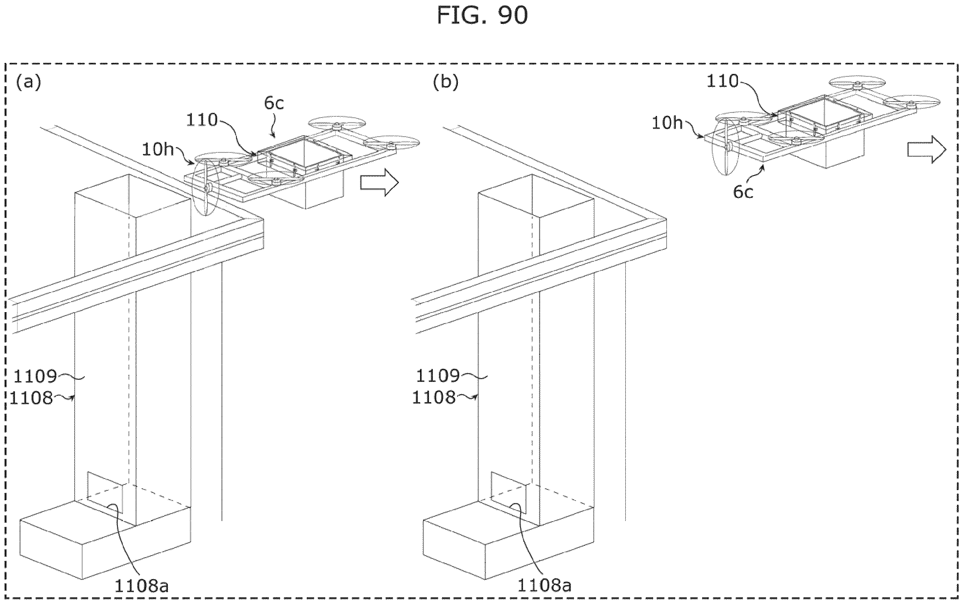

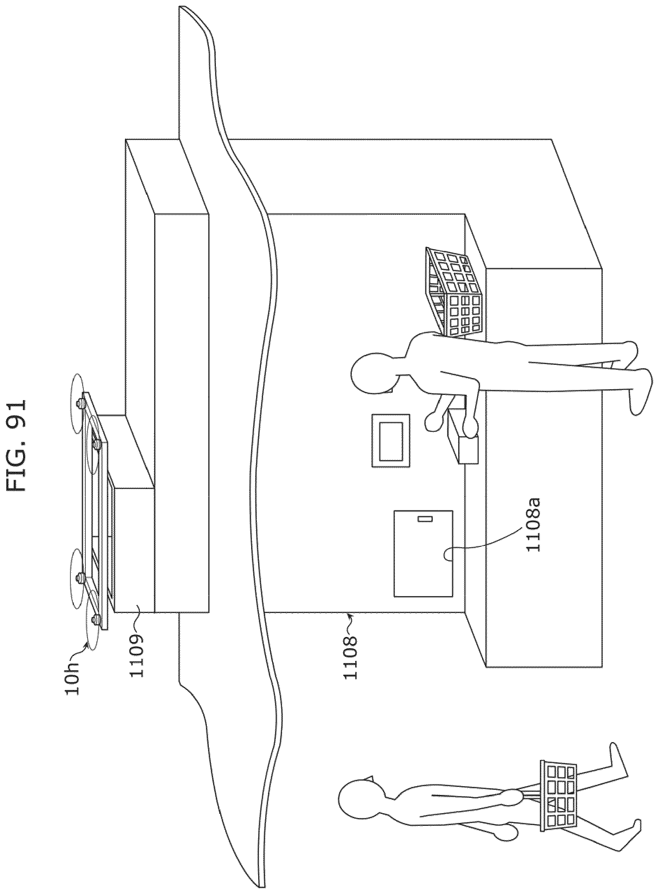

FIG. 88 is a schematic diagram illustrating an example of lifting system 6c retrieving a package for delivery according to Embodiment 14. FIG. 89 is a schematic diagram illustrating an example of a package being loaded onto lifting system 6c according to Embodiment 14. FIG. 90 is a schematic diagram illustrating an example of unmanned aerial vehicle 10h flying away after a package is loaded onto lifting system 6c according to Embodiment 14. FIG. 91 is a schematic diagram illustrating an example of lifting system 6c retrieving a package through delivery box 1108 provided in a public facility according to Embodiment 14. Delivery box 1108 in the present embodiment is a box for collecting and delivering a package that a user wants to be delivered to a destination point.

In the present embodiment, delivery box 1108 is provided in a public facility such as a convenience store, and an opening of delivery box 1108 is provided on the roof of the public facility. Stated differently, delivery box 1108 includes elongated loading entrance portion 1109 that extends vertically.

As illustrated in (a) and (b) in FIG. 88 and in FIG. 91, first, when unmanned aerial vehicle 10h arrives at a position vertically above delivery box 1108, which is the receiver, control processor 11 controls the plurality of propeller actuation motors 1211b so as to align the opening of delivery box 1108 with the package to be loaded on first thruster device 110. Lifting system 6c descends to cover the opening of delivery box 1108 and inserts first thruster device 110 into the opening of delivery box 1108.

As illustrated in (b) in FIG. 88, control processor 11 controls wire control module 12c to start reeling out the wire. First thruster device 110 descends while being guided by loading entrance portion 1109 of delivery box 1108.

As illustrated in (c) and (d) in FIG. 88 and in (a) in FIG. 89, first thruster device 110 is then placed on the bottom of delivery box 1108. The user opens the side lid of delivery box 1108 and attaches a package to first thruster device 110 through loading port 1108a to load the package onto first thruster device 110. At this time, thruster controller 124 of first thruster device 110 detects that a package has been loaded via a sensor, such as a switch sensor or a weight sensor or the like. Note that the user may store the package in delivery box 1108 in advance. In such cases, first thruster device 110 may automatically load the package.

As illustrated in (b) and (c) in FIG. 89, when the user closes the side lid of delivery box 1108 and the sensor detects that a package has been loaded, the controller controls the wire control module to start reeling in the wire based on the sensor's detection result. First thruster device 110 ascends while being guided by loading entrance portion 1109 of delivery box 1108.

As illustrated in (c) and (d) in FIG. 89 and in (a) and (b) in FIG. 90, first thruster device 110 attaches to the main body of unmanned aerial vehicle 10h. Lifting system 6c then moves away from the opening of delivery box 1108 and moves to the receiver from the sender, which is the public facility in this case.

### EMBODIMENT 15

### Configuration

Hereinafter, since the basic configuration of lifting system 6c according to the present embodiment is the same as the basic configuration of the lifting system according to Embodiment 1 and the like, repeated description of the basic configuration of lifting system 6c in the present embodiment will be omitted where appropriate. The present embodiment differs from other embodiments and the like in that it exemplifies a case in which lifting system 6c retrieves and delivers a package stored in a delivery box.

The present embodiment describes processes from the loading of a package onto first thruster device 110 by a user to the delivering of the package to a delivery box at a receiver.

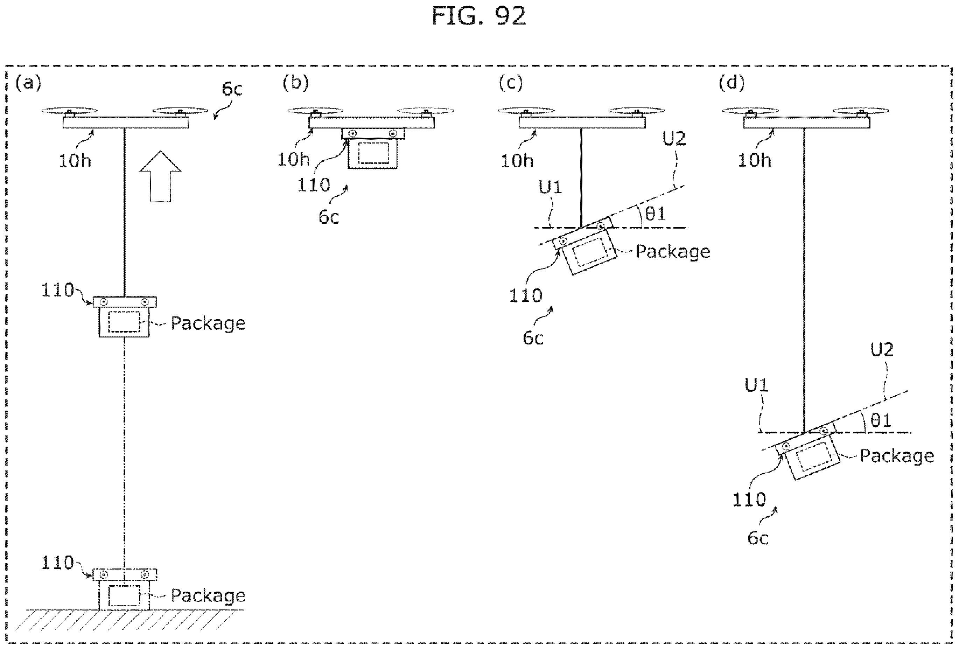

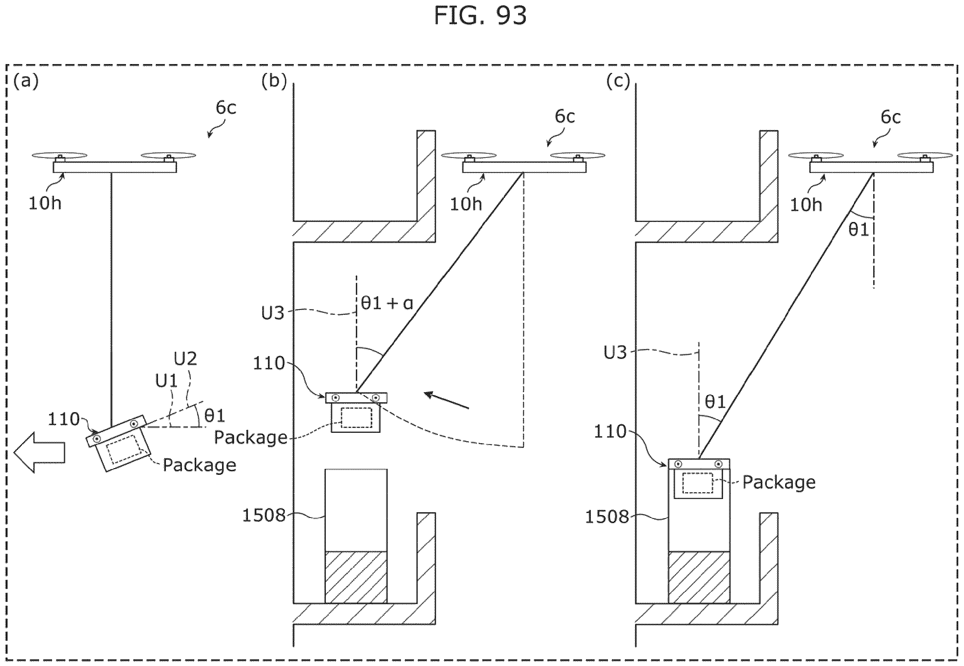

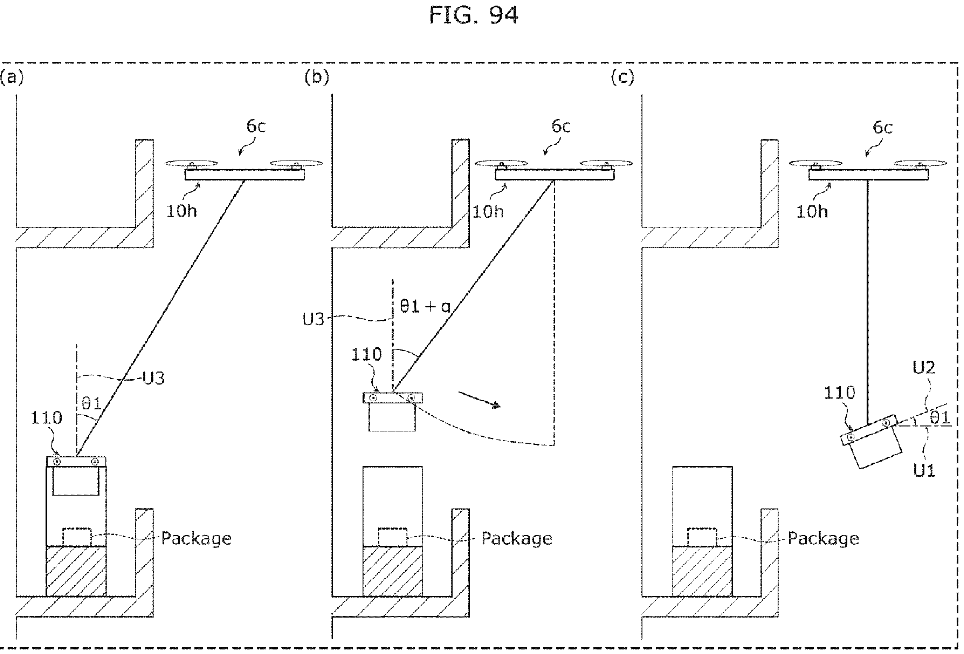

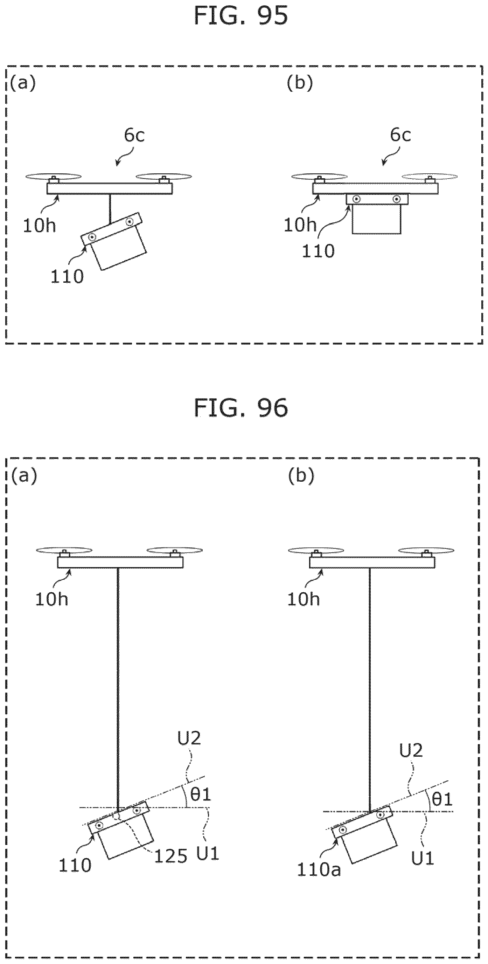

FIG. 92 is a schematic diagram illustrating an example of first thruster device 110 of lifting system 6c retrieving a package according to Embodiment 15. FIG. 93 is a schematic diagram illustrating an example of first thruster device 110 of lifting system 6c storing the retrieved package in delivery box 1508 according to Embodiment 15. FIG. 94 is a schematic diagram illustrating an example of first thruster device 110 of lifting system 6c separating from delivery box 1508 after storing the package in delivery box 1508 according to Embodiment 15. FIG. 95 is a schematic diagram illustrating an example of unmanned aerial vehicle 10h of lifting system 6c being attached to first thruster device 110 according to Embodiment 15.

As illustrated in (a) in FIG. 92, once first thruster device 110 has retrieved the package and first thruster device 110 has loaded the package, control processor 11 controls wire control module 12c to start reeling in the wire. Note that wire control module 125 of first thruster device 110 may start the reeling in of the wire. First thruster device 110 loaded with the package then ascends, and first thruster device 110 is attached to the main body of unmanned aerial vehicle 10h.

Then, as illustrated in (b) in FIG. 92, lifting system 6c moves away from the opening of delivery box 1508 and moves to the receiver from the sender, which is a public facility in this case.

As illustrated in (c) in FIG. 92, when lifting system 6c comes near delivery box 1508, which is the receiver, control processor 11 outputs an incline instruction to first thruster device 110 to cause the attitude of first thruster device 110 to incline at an angle relative to the horizontal plane. When thruster controller 124 obtains the incline instruction, it inclines the support member so that virtual surface U2 (horizontal plane U1 in the present embodiment) of first thruster device 110 intersects a plane orthogonal to the lengthwise direction of the wire. More specifically, when thruster controller 124 obtains the incline instruction from control processor 11, thruster controller 124 moves the connection point from the center of gravity of first thruster device 110 when first thruster device 110 is viewed from above. More specifically, thruster controller 124 slides vertical crosspiece 1015b and horizontal crosspiece 1015c in outer frame 1015a in a direction away from delivery box 1508, thereby moving the connection point away from the center of gravity of first thruster device 110. As a result, in lifting system 6c, first thruster device 110 inclines, that is to say, the support member of first thruster device 110 inclines at an angle θ1 relative to horizontal plane U1.

As illustrated in (d) in FIG. 92, thruster controller 124 controls wire control module 125 to start reeling out the wire. This causes first thruster device 110 to descend while the attitude of first thruster device 110 is maintained inclined relative to horizontal plane U1.

As illustrated in (a) and (b) in FIG. 93, thruster controller 124 controls wire control module 125 to continue reeling out the wire, recognizes delivery box 1508 based on the image information, and controls the plurality of second propeller actuation motors 112 according to the position of the recognized delivery box 1508. With this, first thruster device 110 moves toward delivery box 1508. First thruster device 110 then moves to a position vertically above the opening of delivery box 1508. At this time, first thruster device 110 moves in an arc centered around the axis of unmanned aerial vehicle 10h. When first thruster device 110 reaches a position vertically above the opening of delivery box 1508, virtual surface U2 of first thruster device 110 is approximately parallel to horizontal plane U1. At this time, the angle between vertical line U3 passing through first thruster device 110 and the lengthwise direction of the wire, and the angle between vertical line U3 passing through unmanned aerial vehicle 10h and the lengthwise direction of the wire is θ1 + a, which is greater than the angle θ1.

As illustrated in (a), (b), and (c) in FIG. 93, thruster controller 124 controls wire control module 125 to continue to reel out the wire and controls the plurality of propeller actuation motors based on the image information to lower first thruster device 110 into the opening of delivery box 1508. First thruster device 110 is lowered in an attitude in which virtual surface U2 of first thruster device 110 is approximately parallel to horizontal plane U1.

As illustrated in (c) in FIG. 93, first thruster device 110 lands on delivery box 1508 so as to cover the opening of delivery box 1508, and the package is inserted through the opening of delivery box 1508.

As illustrated in (a) in FIG. 94, first thruster device 110 disconnects the package to store the package in delivery box 1508.

As illustrated in (b) and (c) in FIG. 94, thruster controller 124 controls wire control module 125 to reel in the wire and controls the plurality of second propeller actuation motors 112 based on the image information to raise first thruster device 110. As a result, first thruster device 110 is separated from the opening of delivery box 1508. Thruster controller 124 controls wire control module 125 to stop the reeling in of the wire. At this time, first thruster device 110 moves in an arc because it is pulling on the wire with respect to unmanned aerial vehicle 10h fixed to the rail. Stated differently, first thruster device 110 moves to a position vertically below unmanned aerial vehicle 10h like a pendulum by rotation of the propellers by the plurality of second propeller actuation motors 112 or by its own weight.

As illustrated in (a) and (b) in FIG. 95, first thruster device 110 is raised and attached to unmanned aerial vehicle 10h by controlling wire control module 125 to reel in the wire. In lifting system 6c, unmanned aerial vehicle 10h then returns to the sender.

Next, a configuration in which first thruster device 110 inclines with respect to a horizontal plane will be described.

FIG. 96 is a schematic diagram illustrating an example of first thruster device 110 of lifting system 6c inclined with respect to a horizontal plane according to Embodiment 15. In FIG. 96, (a) illustrates first thruster device 110 according to Example 1 and (b) illustrates first thruster device 110 according to Example 2.

Next, a configuration for inclining first thruster device 110 will be described.

### Example 1

In (a) in FIG. 96, wire control module 125 of first thruster device 110 may include a hinge and a hinge actuation motor. Wire control module 125 may incline the support member so that virtual surface U2 of first thruster device 110 intersects a plane orthogonal to the lengthwise direction of the wire. This allows the support member of first thruster device 110 to be inclined at an angle θ1 with respect to horizontal plane U1.

### Example 2

In (b) in FIG. 96, the thruster device may be first thruster device 110a according to Variation 1 of Embodiment 1 that is illustrated in FIG. 14. First thruster device 110a may incline the support member so that virtual surface U2 of first thruster device 110 intersects a plane orthogonal to the lengthwise direction of the wire by changing the position of the connection point between the wire and the support member relative to the center of gravity of the support member. This allows the support member of first thruster device 110 to be inclined at an angle θ1 with respect to horizontal plane U1.

### EMBODIMENT 16

### Configuration

Hereinafter, since the basic configuration of lifting system 6c according to the present embodiment is the same as the basic configuration of the lifting system according to Embodiment 15 and the like, repeated description of the basic configuration of lifting system 6c in the present embodiment will be omitted where appropriate.

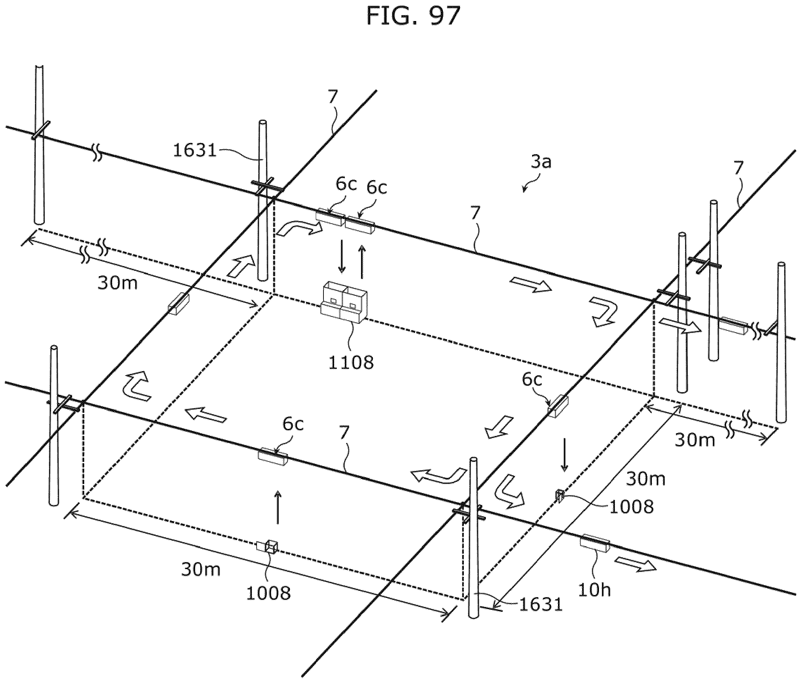

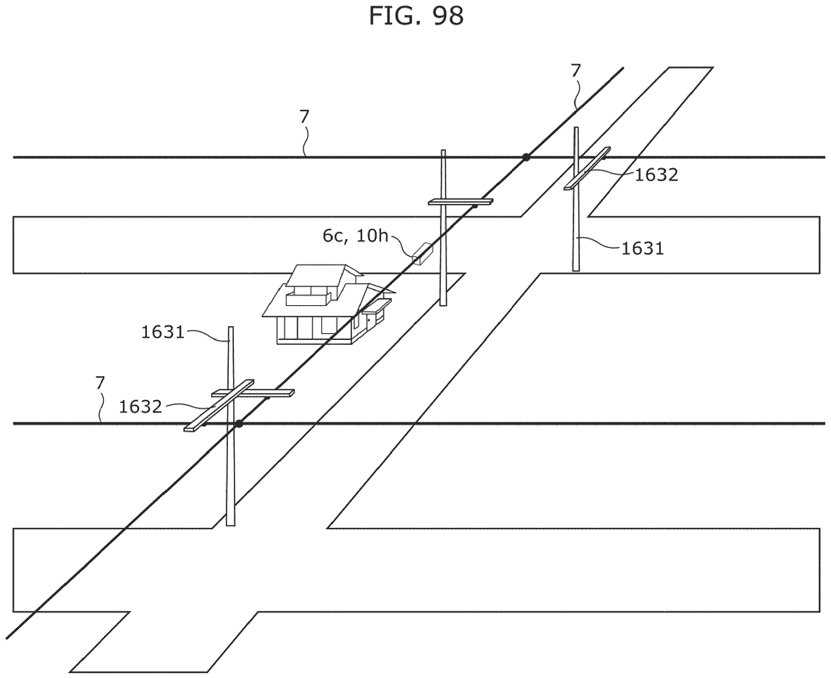

FIG. 97 is a schematic diagram illustrating an example of a comprehensive overview of logistics system 3a according to Embodiment 16. FIG. 98 is another schematic diagram illustrating an example of a comprehensive overview of logistics system 3a according to Embodiment 16.

In logistics system 3a according to the present embodiment, lifting system 6c, support pillars, and rails 7 are used to collect and deliver packages.

As illustrated in FIG. 97 and FIG. 98, in logistics system 3a, rails 7 are stretched out supported by support pillars. In the present embodiment, rails 7 are power lines and support pillars are utility poles. Unmanned aerial vehicle 10i of lifting system 6c can travel along rails 7 to collect packages and deliver packages. Once unmanned aerial vehicle 10i collects a package from delivery box 1108 for collecting packages, it travels along rail 7 to the destination point. When unmanned aerial vehicle 10i arrives at the destination point, first thruster device 110 descends while unmanned aerial vehicle 10i holds onto rails 7 to store the package in delivery box 1008. Unmanned aerial vehicle 10i then returns to delivery box 1108 to collect the next package.

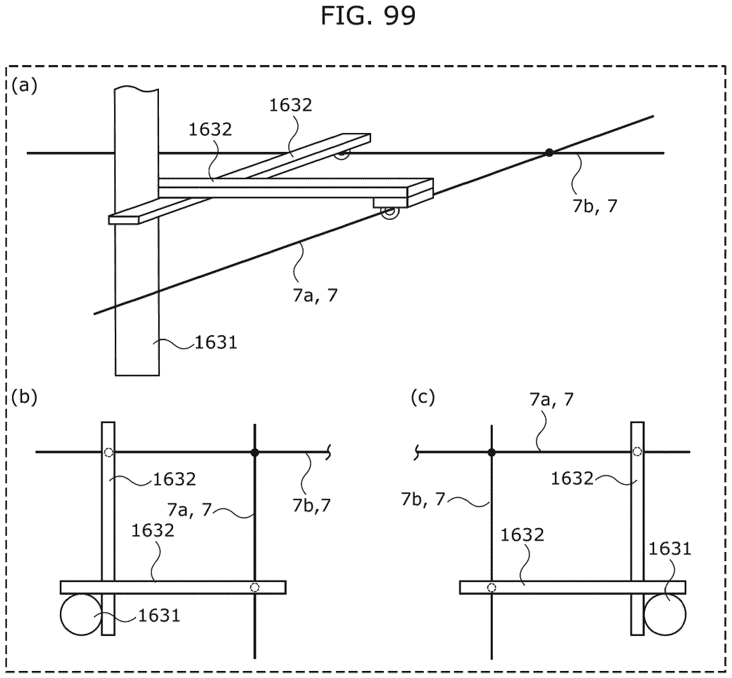

FIG. 99 is a schematic diagram illustrating an example of a support pillar and rails in logistics system 3a according to Embodiment 16. In FIG. 99, (a) is a perspective view of the support pillar and rails, and (a) and (b) are plan views of the support pillar and rails as viewed from above.

Logistics system 3a includes support pillars, rails 7, and lifting system 6c.

As illustrated in FIG. 99, the support pillar includes support pillar main body 1631 for supporting rails 7 and rail supports 1632 for supporting rails 7. Rail support 1632 is an elongated support member extending orthogonally to the lengthwise direction of the support pillar. In the present embodiment, two rail supports 1632 extending in a direction orthogonal to the lengthwise direction of support pillar main body 1631 are fixed to support pillar main body 1631. One of the two rail supports 1632 extends from support pillar main body 1631 in a first predefined direction and the other of the two rail supports 1632 extends from support pillar main body 1631 in a second predefined direction orthogonal to the first predefined direction. The one of the rail supports 1632 supports first rail 7a and the other of the rail supports 1632 supports second rail 7b, which is different rail than first rail 7a. First rail 7a and second rail 7b are provided such that the lengthwise directions thereof are orthogonal. Stated differently, first rail 7a intersects second rail 7b.

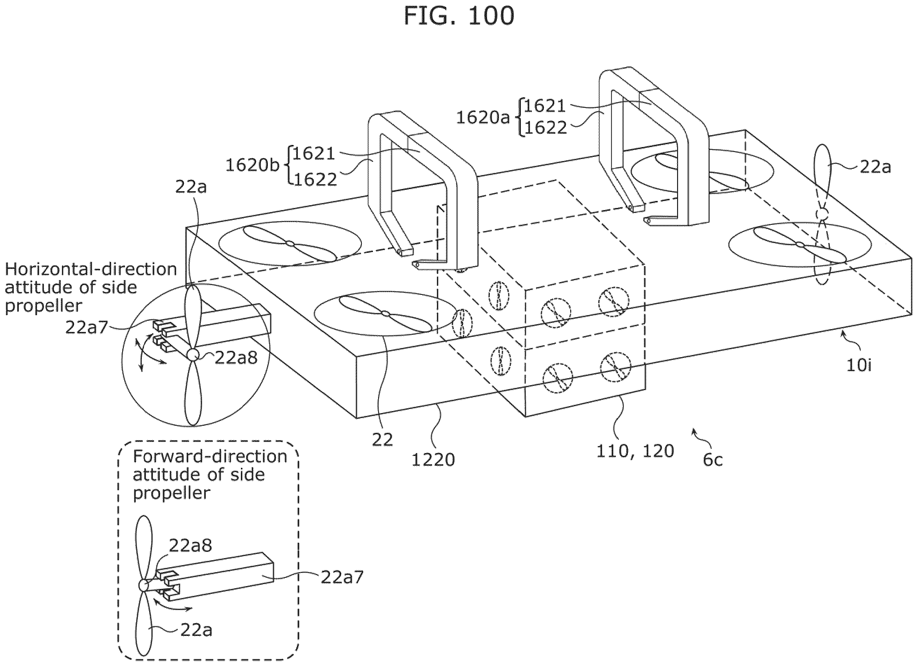

FIG. 100 is a perspective view of an example of unmanned aerial vehicle 10i according to Embodiment 16.

As illustrated in FIG. 100, unmanned aerial vehicle 10i includes two connectors. The two connectors are aligned in the lengthwise direction of vehicle main body 1220 (the lengthwise direction of rail 7). The two connectors are referred to as first connector 1620a and second connector 1620b. Each of first connector 1620a and second connector 1620b includes first hook 1621 and second hook 1622. Accordingly, when the term "connector" is used alone, it collectively refers to first connector 1620a and second connector 1620b. Each of first connector 1620a and second connector 1620b is one example of an arm. The connector is one example of an arm.

Under control by actuation controller 12, first hook 1621 and second hook 1622 are switched between a closed state in which a space through which rail 7 passes defined and an open state in which rail 7 is released by pivoting first hook 1621 and second hook 1622 from the closed state.

In the closed state, the tip of first hook 1621 and the tip of second hook 1622 meet to define a closed area such that rail 7 cannot separate from the connector. In the open state, the tip of first hook 1621 and the tip of second hook 1622 are separated from each other to define an open area such that rail 7 can separate from the connector.

First connector 1620a is arranged in the frontmost position among the two connectors, which is the position furthest in the traveling direction of unmanned aerial vehicle 10i, and second connector 1620b is arranged in the rearmost position among the two connectors, which is the position furthest in the direction opposite the traveling direction of unmanned aerial vehicle 10i. Here, the "front" of unmanned aerial vehicle 10i is the portion of unmanned aerial vehicle 10i in the traveling direction of unmanned aerial vehicle 10i and the "rear" of unmanned aerial vehicle 10i is the portion of unmanned aerial vehicle 10i in the direction opposite the traveling direction of unmanned aerial vehicle 10i.

A side propeller 22a is provided on the front of unmanned aerial vehicle 10i and on the rear of unmanned aerial vehicle. Side propeller 22a is fixed to propeller support portion 22a7, which is fixed to vehicle main body 1220 and extends in the front-to-back direction, and is fixed in a manner that allows its attitude to be adjusted. Propeller support portion 22a7 is equipped with a motor for rotating side propeller 22a. The motor is controlled by control processor 11.

Side propeller 22a is actuated by first propeller actuation motor 23 to provide thrust to vehicle main body 1220 for moving unmanned aerial vehicle 10i forward or backward. The same propeller 22 may be used for side propellers 22a, but the rear side propeller 22a (the side propeller 22a on the rear of unmanned aerial vehicle 10i) may have longer blades than the front side propeller 22a (the side propeller 22a on the front of unmanned aerial vehicle 10i).

The axial directions of rotary shafts 22a8 of the front and rear side propellers 22a are pivotable with respect to the lengthwise direction of rails 7. That is, side propellers 22a can be displaced between an attitude in which the axial direction of rotary shaft 22a8 of side propeller 22a is maintained along the lengthwise direction of rails 7 (a forward-direction attitude of side propeller 22a) and an attitude in which the axial direction of rotary shaft 22a8 of side propeller 22a is maintained parallel to a direction orthogonal to the lengthwise direction of rails 7 (a horizontal-direction attitude of side propeller 22a). Stated differently, the axial direction of rotary shaft 22a8 of side propeller 22a can be displaced from an attitude that is approximately parallel to the lengthwise direction of rails 7 to an attitude that is approximately parallel to a plane normal to the lengthwise direction of rails 7.

When the attitude of side propeller 22a is in a forward direction, unmanned aerial vehicle 10i is capable of moving in the lengthwise direction of vehicle main body 1220, because the thrust is provided in the lengthwise direction of vehicle main body 1220. When the attitude of side propeller 22a is in a horizontal direction, unmanned aerial vehicle 10i is pivoted by a thrust force applied in a direction orthogonal to the lengthwise direction of vehicle main body 1220.

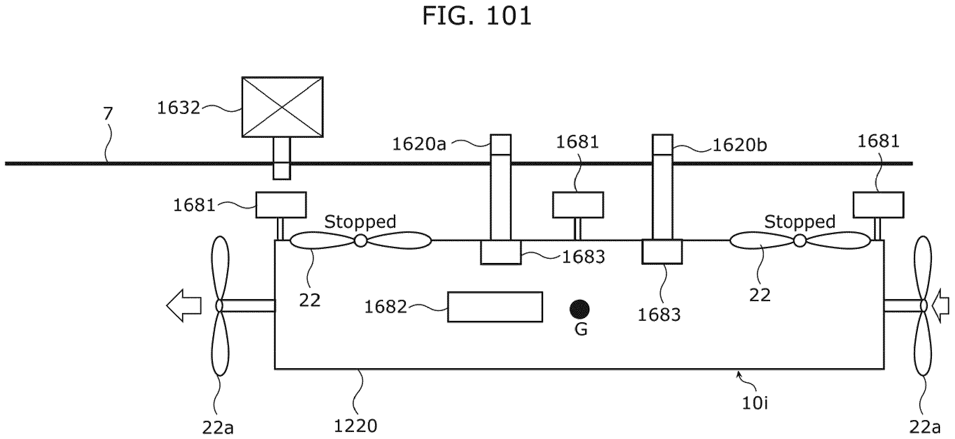

FIG. 101 is a schematic diagram illustrating an example of a side view of unmanned aerial vehicle 10i moving along rails 7 according to Embodiment 16.

As illustrated in FIG. 101, unmanned aerial vehicle 10i includes a plurality of distance sensors 1681, angle sensor 1682, and a plurality of pressure sensors 1683.

The plurality of distance sensors 1681 are fixed on the upper side of vehicle main body 1220 of unmanned aerial vehicle 10i. The plurality of distance sensors 1681 detect the distance between unmanned aerial vehicle 10i and rails 7 and obstacles other than rails 7 (e.g., rail supports 1632). Each distance sensor 1681 outputs distance information indicating the detected distance to control processor 11. This makes it possible to perform control for changing the travel speed of unmanned aerial vehicle 10i based on the distance between unmanned aerial vehicle 10i and rails 7 and obstacles other than rails 7. For example, since rails 7 are flexible in some places, there is a risk of collision with rails 7 if unmanned aerial vehicle 10i moves at high speed, but since the travel speed is controlled based on the distance information, unmanned aerial vehicle 10i can be inhibited from coming into contact with rails 7 or other obstacles.

Angle sensor 1682 detects the incline of vehicle main body 1220. Stated differently, angle sensor 1682 detects an angle of inclination of the virtual plane of vehicle main body 1220 relative to the horizontal plane. Angle sensor 1682 outputs the angle information indicating the angle of inclination to control processor 11. Control processor 11 controls the attitude of vehicle main body 1220 based on the angle information.

The plurality of pressure sensors 1683 detect the pressure (gravity) applied to vehicle main body 1220 via the respective connectors when the respective connectors are connected to rails 7. The plurality of pressure sensors 1683 are provided at the connection portions between vehicle main body 1220 and the connectors. The plurality of pressure sensors 1683 are respectively provided on the connectors. Pressure sensor 1683 outputs pressure information indicating the detected pressure to control processor 11. Control processor 11 respectively controls the actuation of propellers 22 of vehicle main body 1220 based on the pressure information. More specifically, when the pressure indicated in the pressure information for one or more of the plurality of connectors is greater than or equal to a predetermined value, the connection between any one of the plurality of connectors and rails 7 becomes disconnected. Control processor 11 controls propeller control module 12b to actuate propeller 22 corresponding to pressure sensor 1683 from which the pressure information indicating a pressure greater than or equal to the predetermined value was obtained. Propeller 22 corresponding to pressure sensor 1683 means propeller 22 on the side of vehicle main body 1220 where pressure sensor 1683 is located. For example, when pressure sensor 1683 corresponding to first connector 1620a obtains pressure information indicating a pressure greater than or equal to a predetermined value, the front propeller 22 is actuated. Similarly, when pressure sensor 1683 corresponding to second connector 1620b obtains pressure information indicating a pressure greater than or equal to a predetermined value, the rear propeller 22 is actuated.

FIG. 101 is a schematic diagram illustrating an example of a side view of unmanned aerial vehicle 10i moving along rails 7 according to Embodiment 16. As illustrated in FIG. 101, the rotation of propellers 22 of unmanned aerial vehicle 10i are stopped, but side propellers 22a are rotating.

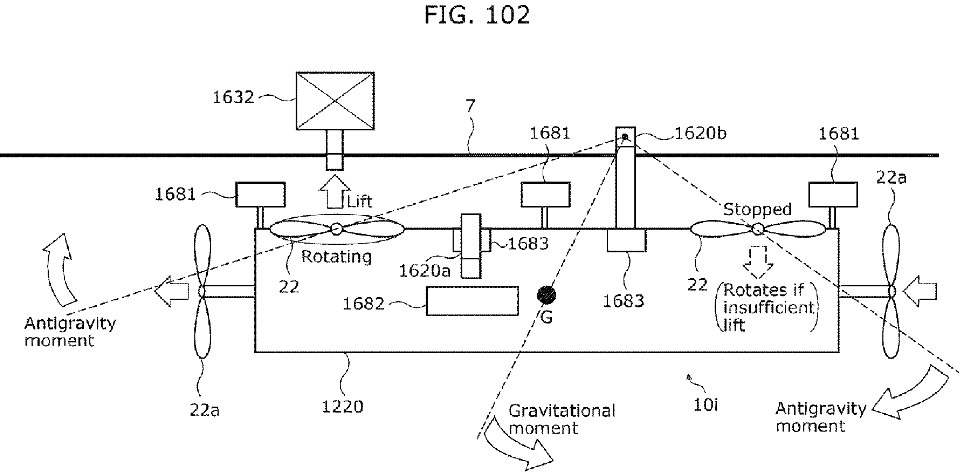

FIG. 102 is a schematic diagram illustrating an example according to Embodiment 16 of a side view of unmanned aerial vehicle 10i in a state in which first connector 1620a is disconnected from rails 7 and second connector 1620b is connected to rails 7. FIG. 102 illustrates a state in which unmanned aerial vehicle 10i has advanced further from the state illustrated in FIG. 101.

Based on the information obtained from the respective distance sensors 1681, control processor 11 actuates first connector 1620a via actuation controller 12 when the distance between rail support 1632 (or, if a plurality of rails 7 intersect, the intersecting rails 7) and first connector 1620a becomes less than a predetermined distance. In other words, actuation controller 12 controls the first actuator to pivot each of first hook 1621 and second hook 1622 around a predetermined axis to open first connector 1620a. To avoid contact with rail support 1632, first connector 1620a is opened by the pivoting of first hook 1621 and second hook 1622 to release the connection with rails 7. First connector 1620a is disposed vertically below rail support 1632 so that first connector 1620a does not contact rail support 1632. This allows unmanned aerial vehicle 10i to pass vertically below rail support 1632 without first connector 1620a coming into contact with rail support 1632.

Unmanned aerial vehicle 10i actuates propellers 22 on the front (on the first connector 1620a side) to maintain its attitude. Stated differently, when first connector 1620a is disconnected from rails 7, unmanned aerial vehicle 10i is subjected to a gravitational moment that pivots in the direction of the arrow using the connection point between second connector 1620b and rails 7, which is horizontally displaced from a position vertically above center of gravity G of vehicle main body 1220, as the fulcrum (axis). However, in unmanned aerial vehicle 10i, the actuation of the front propellers 22 produces an antigravity moment as a lift force that lifts the front portion of vehicle main body 1220 vertically upward (as indicated by the arrows).

More specifically, based on the distance information, control processor 11 rotates the front propellers 22 via propeller control module 12b when the distance between rails 7 and first connector 1620a becomes less than a predetermined distance. Stated differently, propeller control module 12b rotates the front propellers 22 by controlling first propeller actuation motors 23. As first connector 1620a is opened, the lost force for supporting vehicle main body 1220 is compensated by the lift force from the rotation of the front propellers 22.

Unmanned aerial vehicle 10i may further actuate the rear propellers 22 to provide a vertically upward lift. In such cases, since vehicle main body 1220 pivots clockwise about the fulcrum as an axis of rotation, an antigravity moment lifts the front portion of vehicle main body 1220 vertically upward (in the direction of the arrow) in unmanned aerial vehicle 10i.

This allows unmanned aerial vehicle 10i to maintain the attitude of vehicle main body 1220 approximately horizontal.

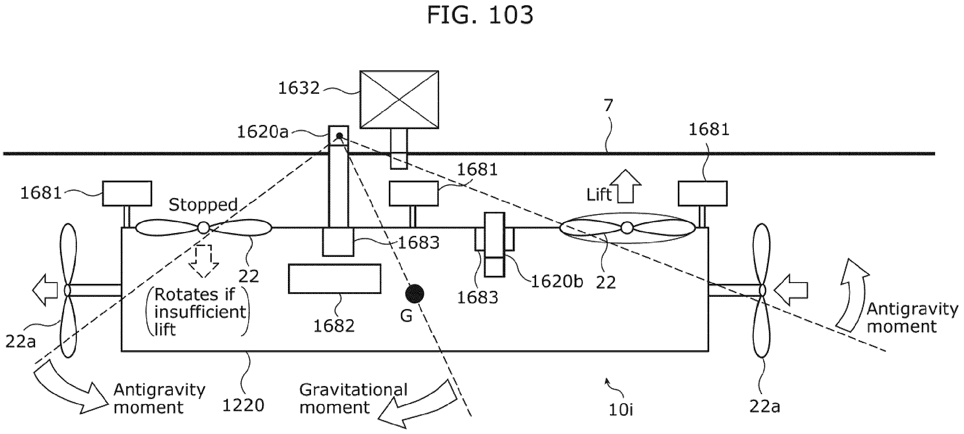

FIG. 103 is a schematic diagram illustrating an example according to Embodiment 16 of a side view of unmanned aerial vehicle 10i in a state in which first connector 1620a is connected to rails 7 and second connector 1620b is disconnected from rails 7. FIG. 103 illustrates a state in which unmanned aerial vehicle 10i has advanced further from the state illustrated in FIG. 102.

Based on the information obtained from the respective distance sensors 1681, control processor 11 actuates second connector 1620b via actuation controller 12 when the distance between rail support 1632 (or, if a plurality of rails 7 intersect, the intersecting rails 7) and second connector 1620b becomes less than a predetermined distance. In other words, actuation controller 12 controls the second actuator to pivot each of first hook 1621 and second hook 1622 around a predetermined axis to open second connector 1620b. To avoid contact with rail support 1632, second connector 1620b is opened by the pivoting of first hook 1621 and second hook 1622 to release the connection with rails 7. Second connector 1620b is disposed vertically below rail support 1632 so that second connector 1620b does not contact rail support 1632. This allows unmanned aerial vehicle 10i to pass vertically below rail support 1632 without second connector 1620b coming into contact with rail support 1632.

Unmanned aerial vehicle 10i actuates propellers 22 on the rear (on the second connector 1620b side) to maintain its attitude. Stated differently, when second connector 1620b is disconnected from rails 7, unmanned aerial vehicle 10i is subjected to a gravitational moment that pivots in the direction of the arrow using the connection point between first connector 1620a and rails 7, which is horizontally displaced from a position vertically above center of gravity G of vehicle main body 1220, as the fulcrum (axis). However, in unmanned aerial vehicle 10i, the actuation of the rear propellers 22 produces an antigravity moment as a lift force that lifts the rear portion of vehicle main body 1220 vertically upward (as indicated by the arrows).

More specifically, based on the distance information, control processor 11 rotates the rear propellers 22 via propeller control module 12b when the distance between rails 7 and second connector 1620b becomes less than a predetermined distance. Stated differently, propeller control module 12b rotates the rear propellers 22 by controlling first propeller actuation motors 23. As second connector 1620b is opened, the lost force for supporting vehicle main body 1220 is compensated by the lift force from the rotation of the rear propellers 22.

Unmanned aerial vehicle 10i may further actuate the front propellers 22 to provide a vertically upward lift. In such cases, since vehicle main body 1220 pivots counterclockwise about the fulcrum as an axis of rotation, an antigravity moment lifts the rear portion of vehicle main body 1220 vertically upward (in the direction of the arrow) in unmanned aerial vehicle 10i.

This allows unmanned aerial vehicle 10i to maintain the attitude of vehicle main body 1220 approximately horizontal.

### VARIATION

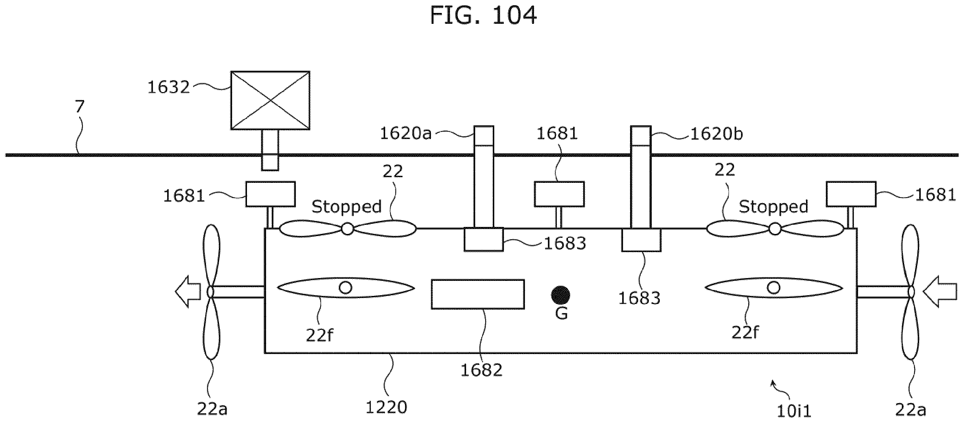

FIG. 104 is a schematic diagram illustrating an example of a side view of unmanned aerial vehicle 10i1 according to a variation of Embodiment 16. FIG. 104 illustrates a variation of FIG. 101 according to the present embodiment.

Unmanned aerial vehicle 10i1 illustrated in FIG. 104 further includes a plurality of variable wings 22f.

The plurality of variable wings 22f are provided on the side surfaces of vehicle main body 1220 and function as pitch wings. More specifically, a pair of variable wings 22f are arranged toward the front of vehicle main body 1220 and a pair of variable wings 22f are arranged toward the rear of vehicle main body 1220. The front pair of variable wings 22f are arranged in correspondence with the front pair of propellers 22 on vehicle main body 1220, and are arranged to the sides of said pair of propellers 22. The rear pair of variable wings 22f are arranged in correspondence with the rear pair of propellers 22 on vehicle main body 1220, and are arranged to the sides of said pair of propellers 22.

Variable wings 22f included in each pair of variable wings 22f are symmetrically arranged with respect to the lengthwise direction of vehicle main body 1220. Each variable wing 22f includes a shaft portion having an axis extending in the horizontal direction and a vane portion that is pivotably supported by the shaft portion. The vane portion rotates about an axis extending in the horizontal direction. The force of the wind in the vertical directions is controlled by the rotation of the vane portions. When the shaft portion rotates the front edge of the vane portion upward, vehicle main body 1220 is imparted with a vertical upward lift.

The actuation of the plurality of variable wings 22f is controlled by control processor 11. More specifically, control processor 11 obtains, from each of the plurality of distance sensors 1681, distance information indicating the distance from distance sensor 1681 to rail support 1632. When control processor 11 determines, based on the distance information, that the distance from rail support 1632 to each of the plurality of distance sensors 1681 is less than a predetermined distance, control processor 11 controls, via actuation controller 12, the rotation of the respective propellers 22, the respective variable wings 22f, and the respective connectors.

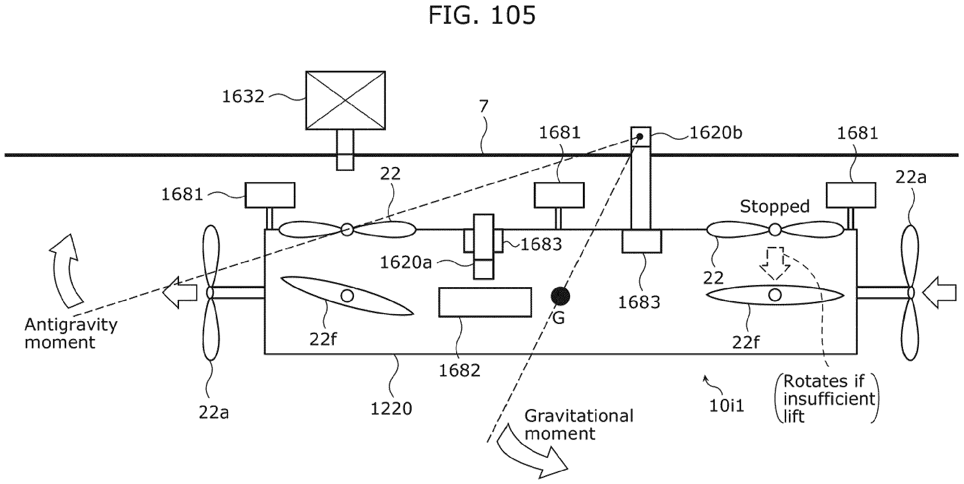

FIG. 105 is a schematic diagram illustrating an example according to a variation of Embodiment 16 of a side view of unmanned aerial vehicle 10i1 in a state in which first connector 1620a is disconnected from rails 7 and second connector 1620b is connected to rails 7. FIG. 105 illustrates a state in which unmanned aerial vehicle 10i1 has advanced further from the state illustrated in FIG. 104.

To avoid contact with rail support 1632, first connector 1620a is opened by the pivoting of first hook 1621 and second hook 1622 to release the connection with rails 7. First connector 1620a is disposed vertically below rail support 1632 so that first connector 1620a does not contact rail support 1632. This allows unmanned aerial vehicle 10i1 to pass vertically below rail support 1632 without first connector 1620a coming into contact with rail support 1632.

Unmanned aerial vehicle 10i1 actuates propellers 22 on the front (on the first connector 1620a side) to maintain its attitude. Stated differently, when first connector 1620a is disconnected from rails 7, unmanned aerial vehicle 10i1 is subjected to a gravitational moment that pivots in the direction of the arrow using the connection point between second connector 1620b and rails 7, which is horizontally displaced from a position vertically above center of gravity G of vehicle main body 1220, as the fulcrum (axis).

Unmanned aerial vehicle 10i1 rotates the vane portions of the front pair of variable wings 22f. Stated differently, the vane portions, which are in an attitude approximately parallel to the horizontal direction, are rotated clockwise so that the front side inclines upward. As a result, when unmanned aerial vehicle 10i1 is moving in the traveling direction, the air exerts a drag force on the vane portions in the direction opposite to the traveling direction, thus exerting a lift force that pushes the vane portions up in the vertical direction. Accordingly, in unmanned aerial vehicle 10i1, the rotation of the front pair of variable wings 22f produces an antigravity moment as a lift force that lifts the front portion of vehicle main body 1220 vertically upward (as indicated by the arrows).

In unmanned aerial vehicle 10i1, the actuation of the front propellers 22 may produce an antigravity moment as a lift force that lifts the front portion of vehicle main body 1220 vertically upward (as indicated by the arrows).

Unmanned aerial vehicle 10i1 may further actuate the rear propellers 22 to provide a vertically upward lift. In such cases, since vehicle main body 1220 pivots clockwise about the fulcrum as an axis of rotation, an antigravity moment lifts the front portion of vehicle main body 1220 vertically upward (in the direction of the arrow) in unmanned aerial vehicle 10i1.

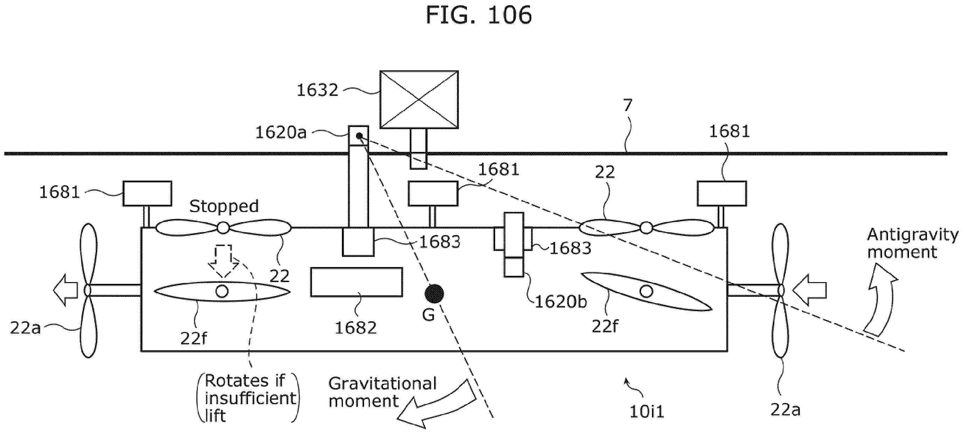

FIG. 106 is a schematic diagram illustrating an example according to a variation of Embodiment 16 of a side view of unmanned aerial vehicle 10i1 in a state in which first connector 1620a is connected to rails 7 and second connector 1620b is disconnected from rails 7. FIG. 106 illustrates a state in which unmanned aerial vehicle 10i1 has advanced further from the state illustrated in FIG. 105.

To avoid contact with rail support 1632, second connector 1620b is opened by the pivoting of first hook 1621 and second hook 1622 to release the connection with rails 7. Second connector 1620b is disposed vertically below rail support 1632 so that second connector 1620b does not contact rail support 1632. This allows unmanned aerial vehicle 10i1 to pass vertically below rail support 1632 without second connector 1620b coming into contact with rail support 1632.

Unmanned aerial vehicle 10i1 actuates propellers 22 on the rear (on the second connector 1620b side) to maintain its attitude. Stated differently, when second connector 1620b is disconnected from rails 7, unmanned aerial vehicle 10i1 is subjected to a gravitational moment that pivots in the direction of the arrow using the connection point between first connector 1620a and rails 7, which is horizontally displaced from a position vertically above center of gravity G of vehicle main body 1220, as the fulcrum (axis).

Furthermore, unmanned aerial vehicle 10i1 rotates the vane portions of the rear pair of variable wings 22f. Stated differently, the vane portions, which are in an attitude approximately parallel to the horizontal direction, are rotated clockwise so that the front side inclines upward. As a result, when unmanned aerial vehicle 10i1 is moving in the traveling direction, the air exerts a drag force on the vane portions in the direction opposite to the traveling direction, thus exerting a lift force that pushes the vane portions up in the vertical direction. Accordingly, in unmanned aerial vehicle 10i1, the rotation of the rear pair of variable wings 22f produces an antigravity moment as a lift force that lifts the rear portion of vehicle main body 1220 vertically upward (as indicated by the arrows).

In unmanned aerial vehicle 10i1, the actuation of the front propellers 22 may produce an antigravity moment as a lift force that lifts the rear portion of vehicle main body 1220 vertically upward (as indicated by the arrows).

Unmanned aerial vehicle 10i1 may further actuate the front propellers 22 to provide a vertically upward lift. In such cases, since vehicle main body 1220 pivots clockwise about the fulcrum as an axis of rotation, an antigravity moment lifts the front portion of vehicle main body 1220 vertically upward (in the direction of the arrow) in unmanned aerial vehicle 10i1.

This allows unmanned aerial vehicle 10i1 to maintain the attitude of vehicle main body 1220 approximately horizontal. In the present variation, the attitude of unmanned aerial vehicle 10i1 can be maintained approximately horizontal by rotating a pair of variable wings 22f without actuating propellers 22, thereby inhibiting an increase in power consumption of unmanned aerial vehicle 10i1.

### Operations

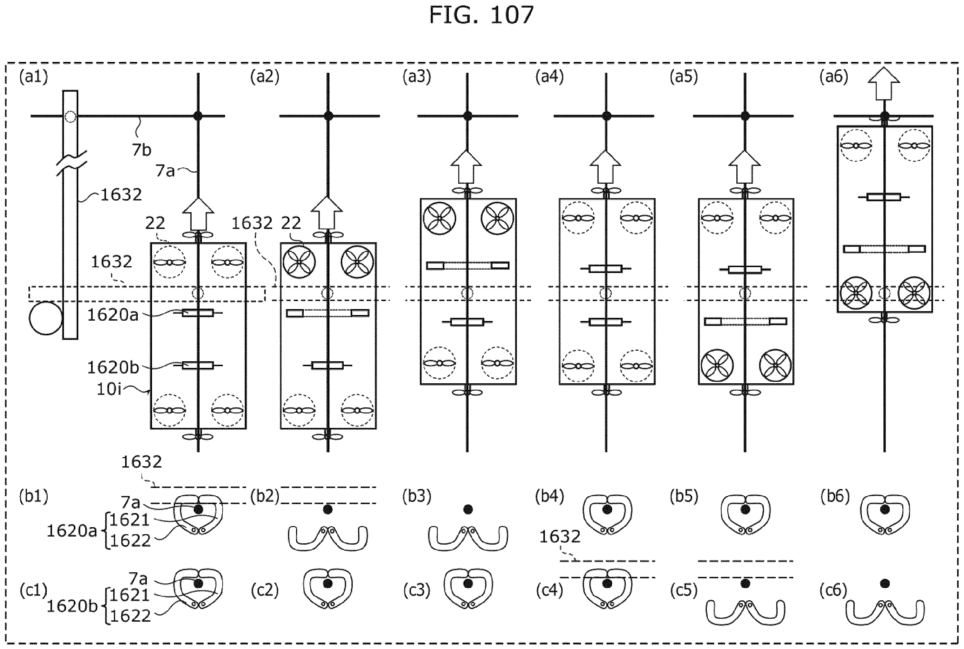

FIG. 107 is a schematic diagram illustrating an example of unmanned aerial vehicle 10i according to Embodiment 16 passing one of rail supports 1632 supporting first rail 7a while traveling along first rail 7a. In FIG. 107, (a^{∗}) illustrates an example of unmanned aerial vehicle 10i as viewed from above, (b^{∗}) illustrates an example of a view of first connector 1620a and first rail 7a in the traveling direction, and (c^{∗}) illustrates an example of a view of second connector 1620b and first rail 7a in the traveling direction. The "^{∗}" is a placeholder for a number indicating the order in which the figures are described in FIG. 107. In FIG. 107, rail support 1632 is illustrated using a dashed line, when propeller 22 is rotating, propeller 22 is illustrated using a solid line, and when propeller 22 is not rotating, propeller 22 is illustrated using a dashed line. Also, in FIG. 107, reference signs are omitted where appropriate.

As illustrated in (a1), (b1), (c1), (a2), (b2), and (c2) in FIG. 107, unmanned aerial vehicle 10i travels along first rail 7a by rotating side propellers 22a. As first connector 1620a approaches one rail support 1632 illustrated using a dashed line, unmanned aerial vehicle 10i pivots first hook 1621 and second hook 1622 of first connector 1620a to open first connector 1620a. First connector 1620a is disconnected from first rail 7a and is disposed vertically below the one rail support 1632 so that first connector 1620a and the one rail support 1632 do not come into contact with each other. At this time, second connector 1620b is connected to first rail 7a. When disconnecting first connector 1620a from first rail 7a, unmanned aerial vehicle 10i provides buoyancy vertically upwardly by rotating the front propellers 22, as shown by the solid lines. This maintains the attitude of unmanned aerial vehicle 10i.

As illustrated in (a3), (b3), (c3), (a4), (b4), and (c4) in FIG. 107, when first connector 1620a passes vertically below the one rail support 1632, unmanned aerial vehicle 10i pivots first hook 1621 and second hook 1622 of first connector 1620a to close first connector 1620a, thereby coupling first connector 1620a to first rail 7a and stopping the rotation of the front propellers 22. At this time, first connector 1620a and second connector 1620b are connected to first rail 7a.

As illustrated in (a5), (b5), (c5), (a6), (b6), and (c6) in FIG. 107, as second connector 1620b approaches the one rail support 1632, unmanned aerial vehicle 10i pivots first hook 1621 and second hook 1622 of second connector 1620b to open second connector 1620b. Second connector 1620b is disconnected from first rail 7a and is disposed vertically below the one rail support 1632 so that second connector 1620b and the one rail support 1632 do not come into contact with each other. At this time, first connector 1620a is connected to first rail 7a. When disconnecting second connector 1620b from first rail 7a, unmanned aerial vehicle 10i provides buoyancy vertically upwardly by rotating the rear propellers 22, as shown by the solid lines. This maintains the attitude of unmanned aerial vehicle 10i.

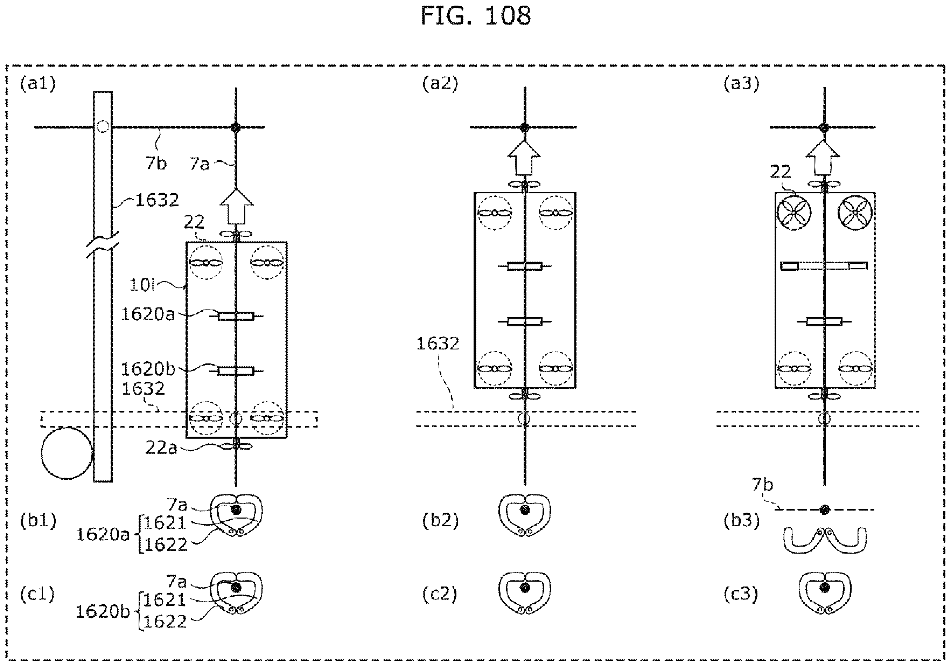

FIG. 108 is a schematic diagram illustrating an example of unmanned aerial vehicle 10i according to Embodiment 16 traveling on first rail 7a toward an intersection of first rail 7a and second rail 7b. In FIG. 108, (a^{∗}) illustrates an example of unmanned aerial vehicle 10i as viewed from above, (b^{∗}) illustrates an example of a view of first connector 1620a and first rail 7a in the traveling direction, and (c^{∗}) illustrates an example of a view of second connector 1620b and rails 7 in the traveling direction. The "^{∗}" is a placeholder for a number indicating the order in which the figures are described in FIG. 108. In FIG. 108, rail support 1632 is illustrated using a dashed line, when propeller 22 is rotating, propeller 22 is illustrated using a solid line, and when propeller 22 is not rotating, propeller 22 is illustrated using a dashed line. Also, in FIG. 108, reference signs are omitted where appropriate.

As illustrated in (a1), (b1), (c1), (a2), (b2), (c2), (a3), (b3), and (c3) in FIG. 108, when first connector 1620a approaches second rail 7b, unmanned aerial vehicle 10i pivots first hook 1621 and second hook 1622 of first connector 1620a to open first connector 1620a. First connector 1620a is disconnected from first rail 7a and is disposed vertically below second rail 7b so that first connector 1620a and second rail 7b do not come into contact with each other. At this time, second connector 1620b is connected to first rail 7a. When disconnecting first connector 1620a from first rail 7a, unmanned aerial vehicle 10i provides buoyancy vertically upwardly by rotating the front propellers 22, as shown by the solid lines. This maintains the attitude of unmanned aerial vehicle 10i.

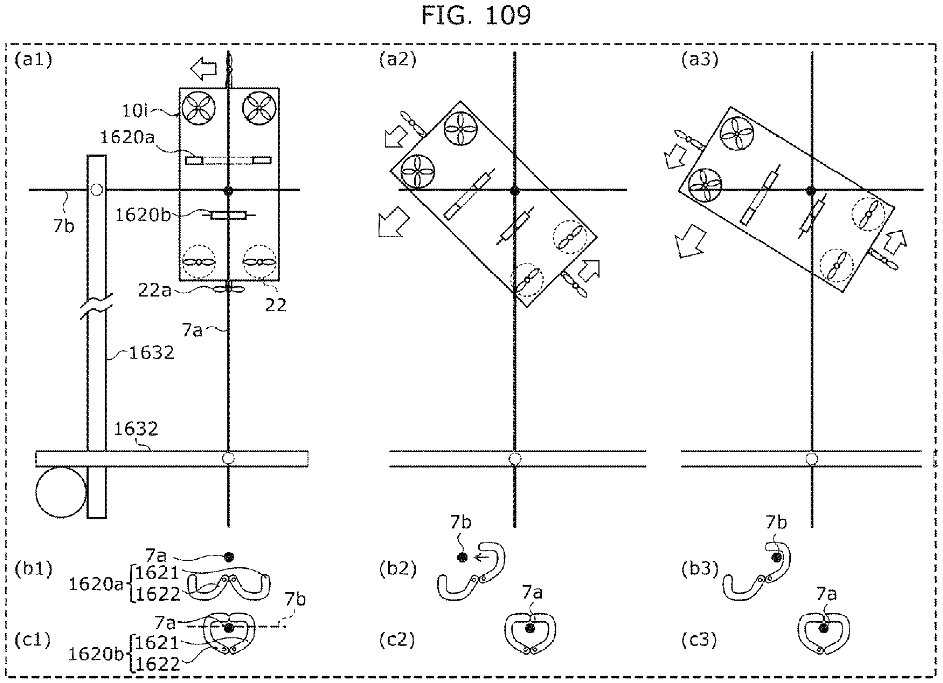

FIG. 109 is a schematic diagram illustrating an example of first connector 1620a of unmanned aerial vehicle 10i disconnecting from first rail 7a according to Embodiment 16. In FIG. 109, (a^{∗}) illustrates an example of unmanned aerial vehicle 10i as viewed from above, (b^{∗}) illustrates an example of a view of first connector 1620a and first rail 7a or second rail 7b in the traveling direction, and (c^{∗}) illustrates an example of a view of second connector 1620b and first rail 7a in the traveling direction. The "^{∗}" is a placeholder for a number indicating the order in which the figures are described in FIG. 109. Also, in FIG. 109, reference signs are omitted where appropriate.

As illustrated in (a1), (b1), (c1), (a2), (b2), (c2), (a3), (b3), and (c3) in FIG. 109, unmanned aerial vehicle 10i comes to a stop once first connector 1620a passes vertically below second rail 7b. When unmanned aerial vehicle 10i is viewed from vertically above, the connection point between first rail 7a and second rail 7b is located between first connector 1620a and second connector 1620b. Unmanned aerial vehicle 10i then rotates counterclockwise. Stated differently, unmanned aerial vehicle 10i rotates counterclockwise by rotating side propellers 22a with side propellers 22a in a horizontal attitude. Unmanned aerial vehicle 10i is then rotated to a position where first connector 1620a and second rail 7b overlap when viewed from vertically above.

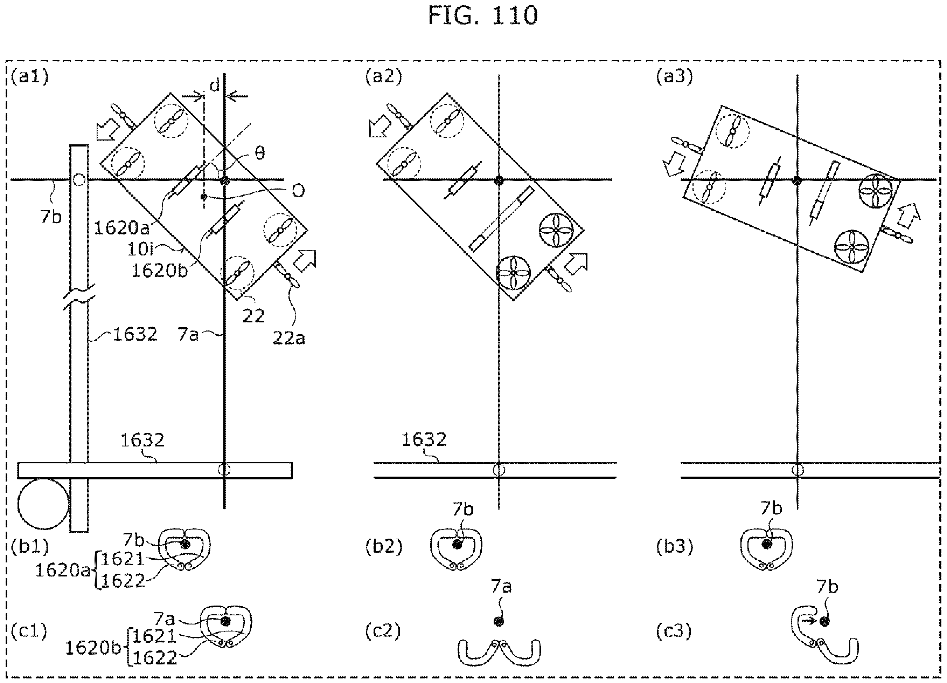

FIG. 110 is a schematic diagram illustrating an example of second connector 1620b of unmanned aerial vehicle 10i disconnecting from first rail 7a according to Embodiment 16. In FIG. 110, (a^{∗}) illustrates an example of unmanned aerial vehicle 10i as viewed from above, (b^{∗}) illustrates an example of a view of first connector 1620a and second rail 7b in the traveling direction, and (c^{∗}) illustrates an example of a view of second connector 1620b and first rail 7a or second rail 7b in the traveling direction. The "^{∗}" is a placeholder for a number indicating the order in which the figures are described in FIG. 110. Also, in FIG. 110, reference signs are omitted where appropriate.

As illustrated in (a1), (b1), and (c1) in FIG. 110, unmanned aerial vehicle 10i rotates to a position where first connector 1620a and second rail 7b overlap, pivots first hook 1621 and second hook 1622 to close first connector 1620a and couple first connector 1620a to second rail 7b, and stops the rotation of the front propellers 22. At this time, second connector 1620b is connected to first rail 7a.

As illustrated in (a2), (b2), (c2), (a3), (b3), and (c3) in FIG. 110, unmanned aerial vehicle 10i pivots first hook 1621 and second hook 1622 of second connector 1620b to open second connector 1620b. Second connector 1620b is disconnected from first rail 7a and is disposed vertically below first rail 7a so that second connector 1620b does not contact first rail 7a. At this time, second connector 1620b is still connected to second rail 7b. When disconnecting second connector 1620b from first rail 7a, unmanned aerial vehicle 10i provides buoyancy vertically upwardly by rotating the rear propellers 22, as shown by the solid lines. This maintains the attitude of unmanned aerial vehicle 10i.

Unmanned aerial vehicle 10i then rotates counterclockwise. Stated differently, unmanned aerial vehicle 10i rotates counterclockwise by rotating side propellers 22a. Unmanned aerial vehicle 10i is then rotated to a position where second connector 1620b and second rail 7b overlap when viewed from vertically above. Here, second hook 1622 of second connector 1620b is pivoted to a position where it can contact second rail 7b. In the present embodiment, unmanned aerial vehicle 10i is illustrated as turning left, but when turning right, first hook 1621 of second connector 1620b is pivoted to a position where it can contact second rail 7b. As illustrated in (a1) in FIG. 110, unmanned aerial vehicle 10i pivots to an attitude at which angle θ between the direction perpendicular to the lengthwise direction of vehicle main body 1220 and the lengthwise direction of second rail 7b is 45°. Here, center point O of vehicle main body 1220 is a distance "d" away from first rail 7a.

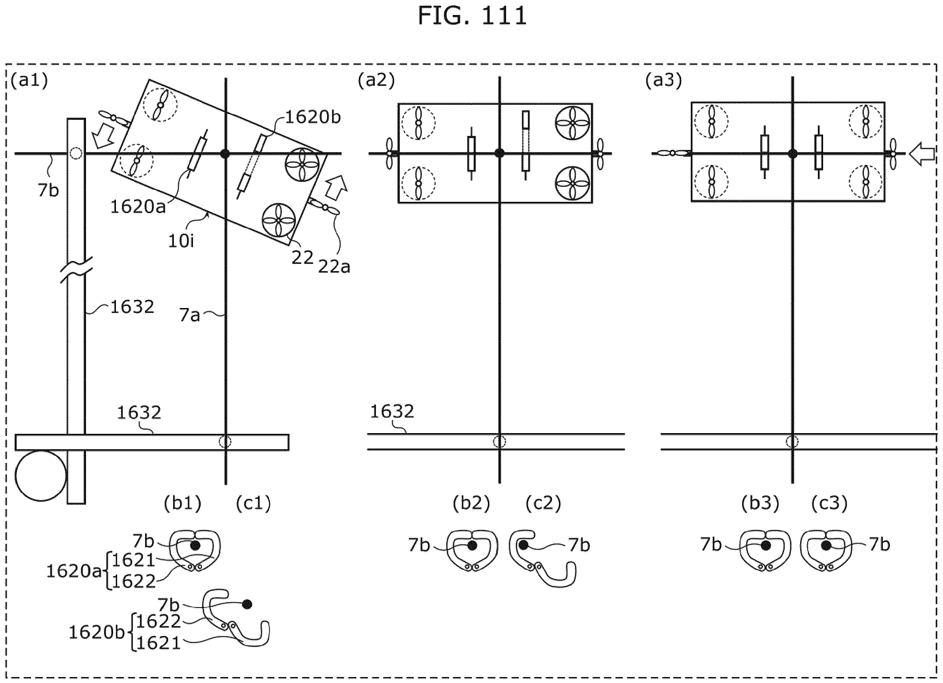

FIG. 111 is a schematic diagram illustrating an example of second connector 1620b of unmanned aerial vehicle 10i connecting to second rail 7b according to Embodiment 16. In FIG. 111, (a^{∗}) illustrates an example of unmanned aerial vehicle 10i as viewed from above, (b^{∗}) illustrates an example of a view of first connector 1620a and second rail 7b in the traveling direction, and (c^{∗}) illustrates an example of a view of second connector 1620b and second rail 7b in the traveling direction. The "^{∗}" is a placeholder for a number indicating the order in which the figures are described in FIG. 111. Also, in FIG. 111, reference signs are omitted where appropriate.

As illustrated in (a1), (b1), (c1), (a2), (b2), (c2), (a3), (b3), and (c3) in FIG. 111, unmanned aerial vehicle 10i rotates to a position where second connector 1620b and second rail 7b overlap. When unmanned aerial vehicle 10i is placed in a position where second hook 1622 and second rail 7b are in contact or near each other (i.e., when rail 7b is on the inner side of second hook 1622), first hook 1621 is also pivoted to close second connector 1620b and couple second connector 1620b to second rail 7b, and the rotation of the front propellers 22 is stopped. At this time, first connector 1620a is connected to second rail 7b. With this, unmanned aerial vehicle 10i can move safely along second rail 7b.

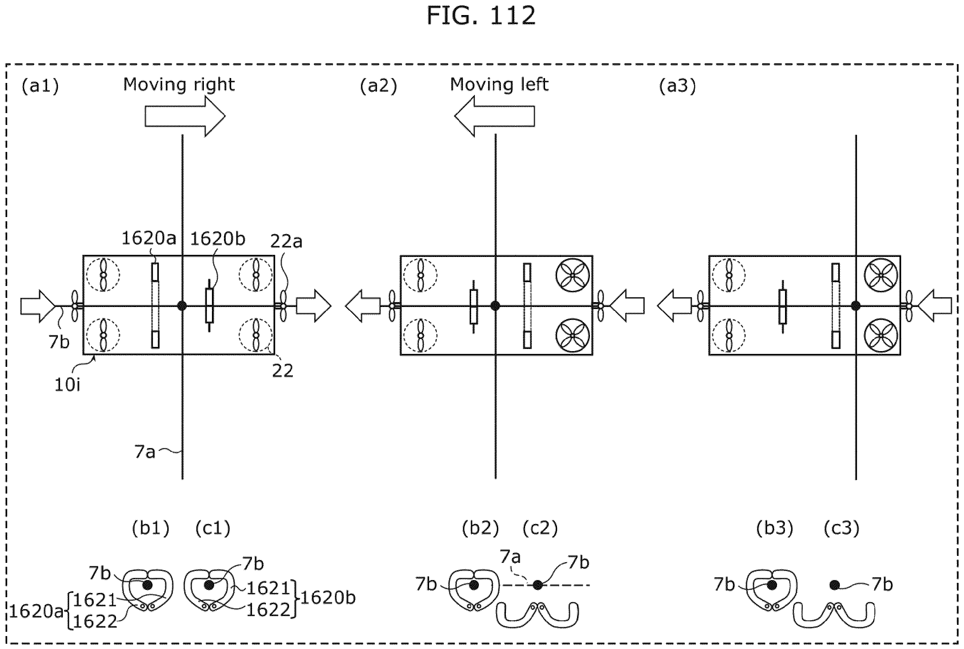

FIG. 112 is a schematic diagram illustrating an example of unmanned aerial vehicle 10i according to Embodiment 16 passing first rail 7a. In FIG. 112, (a^{∗}) illustrates an example of unmanned aerial vehicle 10i as viewed from above, (b^{∗}) illustrates an example of a view of first connector 1620a and second rail 7b in the traveling direction, and (c^{∗}) illustrates an example of a view of second connector 1620b and second rail 7b in the traveling direction. The "^{∗}" is a placeholder for a number indicating the order in which the figures are described in FIG. 112. Also, in FIG. 112, reference signs are omitted where appropriate.

As illustrated in (a1), (b1), and (c1) in FIG. 112, when unmanned aerial vehicle 10i is moving to the right, unmanned aerial vehicle 10i pivots first hook 1621 and second hook 1622 of first connector 1620a to open first connector 1620a. First connector 1620a is disconnected from second rail 7b and is positioned vertically below second rail 7b so that first connector 1620a and second rail 7b do not come into contact. At this time, second connector 1620b is still connected to second rail 7b. When disconnecting first connector 1620a from second rail 7b, unmanned aerial vehicle 10i provides buoyancy vertically upwardly by rotating propellers 22 adjacent to first connector 1620a, as shown by the solid lines. This maintains the attitude of unmanned aerial vehicle 10i. Unmanned aerial vehicle 10i may move to the right by rotating unmanned aerial vehicle 10i clockwise at (a1) in FIG. 109.

As illustrated in (a2), (b2), and (c2) in FIG. 112, when unmanned aerial vehicle 10i is moving to the left, unmanned aerial vehicle 10i pivots first hook 1621 and second hook 1622 of second connector 1620b to open second connector 1620b. Second connector 1620b is disconnected from second rail 7b and is positioned vertically below second rail 7b so that second connector 1620b and second rail 7b do not come into contact. At this time, first connector 1620a is still connected to second rail 7b. When disconnecting second connector 1620b from second rail 7b, unmanned aerial vehicle 10i provides buoyancy vertically upwardly by rotating the rear propellers 22 (i.e., propellers 22 adjacent to second connector 1620b), as shown by the solid lines. This maintains the attitude of unmanned aerial vehicle 10i.

Hereinafter, an example will be given in which unmanned aerial vehicle 10i is traveling to the left.

As illustrated in (a3), (b3), and (c3) in FIG. 112, by rotating side propellers 22a, unmanned aerial vehicle 10i travels leftward along second rail 7b and second connector 1620b passes vertically below first rail 7a.

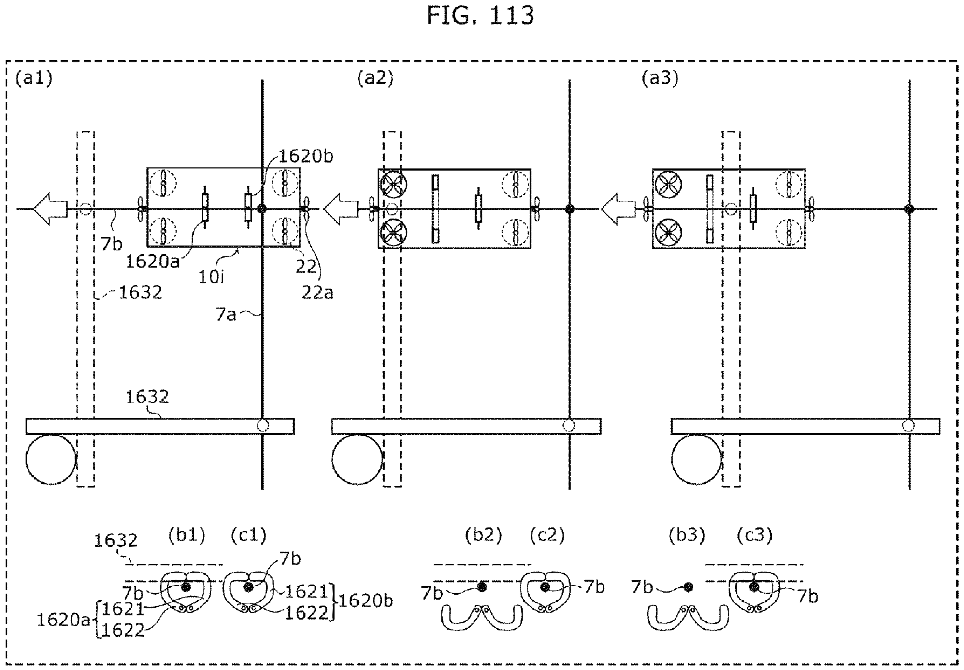

FIG. 113 is a schematic diagram illustrating an example of first connector 1620a passing rail support 1632 that supports second rail 7b when unmanned aerial vehicle 10i according Embodiment 16 is traveling on second rail 7b. In FIG. 113, (a^{∗}) illustrates an example of unmanned aerial vehicle 10i as viewed from above, (b^{∗}) illustrates an example of a view of first connector 1620a and second rail 7b in the traveling direction, and (c^{∗}) illustrates an example of a view of second connector 1620b and second rail 7b in the traveling direction. The "^{∗}" is a placeholder for a number indicating the order in which the figures are described in FIG. 113. In FIG. 113, rail support 1632 is illustrated using a dashed line, when propeller 22 is rotating, propeller 22 is illustrated using a solid line, and when propeller 22 is not rotating, propeller 22 is illustrated using a dashed line. Also, in FIG. 113, reference signs are omitted where appropriate.

As illustrated in (a1), (b1), (c1), (a2), (b2), (c2), (a3), (b3), and (c3) in FIG. 113, unmanned aerial vehicle 10i travels along second rail 7b by rotating side propellers 22a. As unmanned aerial vehicle 10i approaches the other rail support 1632 indicated by the dashed line, it pivots first hook 1621 and second hook 1622 of first connector 1620a to open first connector 1620a. First connector 1620a is disconnected from second rail 7b and is disposed vertically below the other rail support 1632 so that first connector 1620a and the other rail support 1632 do not come into contact with each other. At this time, second connector 1620b is connected to second rail 7b. When disconnecting first connector 1620a from second rail 7b, unmanned aerial vehicle 10i provides buoyancy vertically upwardly by rotating the front propellers 22, as shown by the solid line. As a result, unmanned aerial vehicle 10i moves along second rail 7b while maintaining its attitude, and first connector 1620a passes vertically below the other rail support 1632.

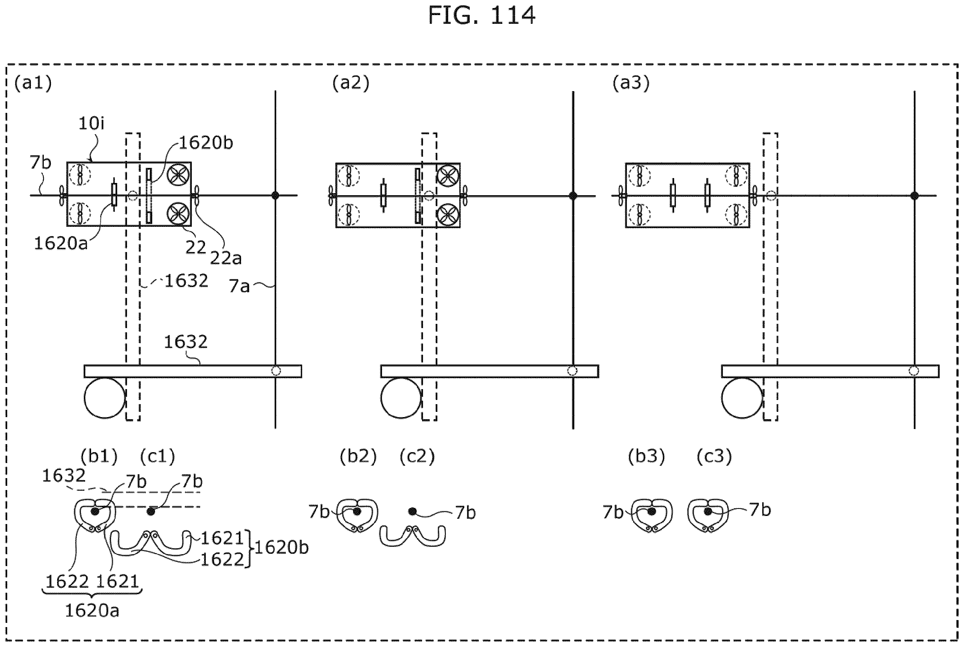

FIG. 114 is a schematic diagram illustrating an example of second connector 1620b passing rail support 1632 that supports second rail 7b when unmanned aerial vehicle 10i according Embodiment 16 is traveling on second rail 7b. In FIG. 114, (a^{∗}) illustrates an example of unmanned aerial vehicle 10i as viewed from above, (b^{∗}) illustrates an example of a view of first connector 1620a and second rail 7b in the traveling direction, and (c^{∗}) illustrates an example of a view of second connector 1620b and second rail 7b in the traveling direction. The "^{∗}" is a placeholder for a number indicating the order in which the figures are described in FIG. 114. In FIG. 114, rail support 1632 is illustrated using a dashed line, when propeller 22 is rotating, propeller 22 is illustrated using a solid line, and when propeller 22 is not rotating, propeller 22 is illustrated using a dashed line. Also, in FIG. 114, reference signs are omitted where appropriate.

As illustrated in (a1), (b1), (c1), (a2), (b2), and (c2) in FIG. 114, unmanned aerial vehicle 10i pivots first hook 1621 and second hook 1622 of first connector 1620a to close first connector 1620a, thereby coupling first connector 1620a to first rail 7a and stopping the rotation of the front propellers 22. At this time, second connector 1620b is connected to second rail 7b.

As second connector 1620b approaches the other rail support 1632, unmanned aerial vehicle 10i pivots first hook 1621 and second hook 1622 of second connector 1620b to open second connector 1620b. Second connector 1620b is disconnected from second rail 7b and is disposed vertically below the other rail support 1632 so that second connector 1620b and the other rail support 1632 do not come into contact with each other. At this time, first connector 1620a is connected to second rail 7b. When disconnecting second connector 1620b from second rail 7b, unmanned aerial vehicle 10i provides buoyancy vertically upwardly by rotating the rear propellers 22, as shown by the solid line. This maintains the attitude of unmanned aerial vehicle 10i. As a result, unmanned aerial vehicle 10i moves along second rail 7b while maintaining its attitude, and second connector 1620b passes vertically below the other rail support 1632.

As illustrated in (a3), (b3), and (c3) in FIG. 114, when second connector 1620b passes vertically below the other rail support 1632, unmanned aerial vehicle 10i pivots first hook 1621 and second hook 1622 of second connector 1620b to close second connector 1620b and thus couple second connector 1620b to second rail 7b, and stops the rotation of the rear propellers 22. At this time, second connector 1620b is connected to second rail 7b.

In this way, unmanned aerial vehicle 10i can pass through the respective rail supports 1632 and the connection point between first rail 7a and second rail 7b.

### VARIATION OF EMBODIMENT 16

Hereinafter, since the basic configuration of unmanned aerial vehicle 10j according to the present variation is the same as the basic configuration of the unmanned aerial vehicle of Embodiment 16 and the like, repeated description of the basic configuration of unmanned aerial vehicle 10j in the present variation will be omitted where appropriate.

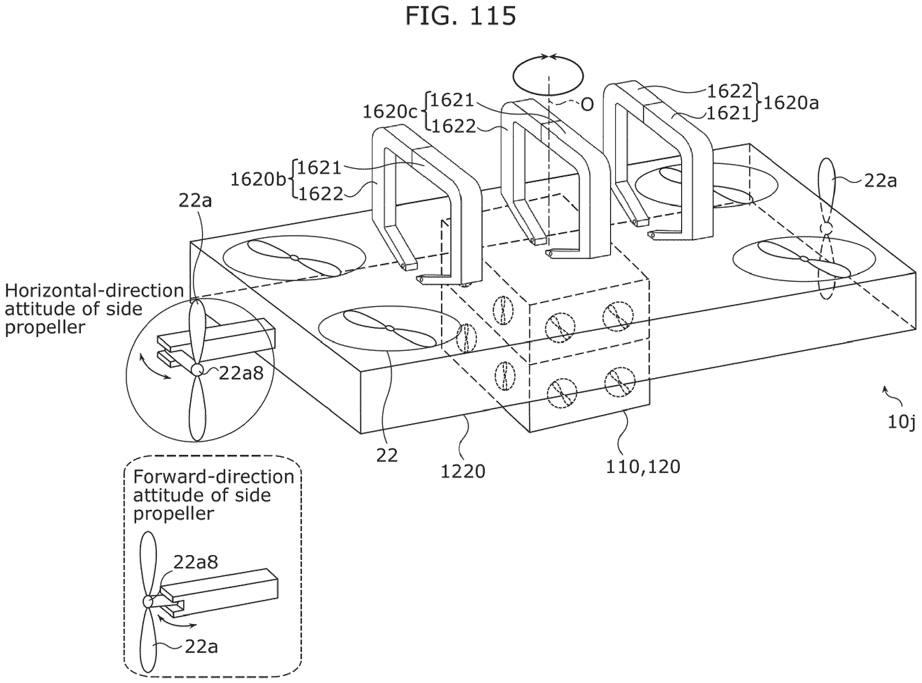

FIG. 115 is a perspective view illustrating an example of unmanned aerial vehicle 10j according to a variation of Embodiment 16.

As illustrated in FIG. 115, unmanned aerial vehicle 10j includes three connectors. The three connectors are aligned in the lengthwise direction of rail 7. The three connectors are referred to as first connector 1620a, second connector 1620b, and third connector 1620c.

First connector 1620a is arranged in the frontmost position of unmanned aerial vehicle 10j among the three connectors, second connector 1620b is arranged in the rearmost position of unmanned aerial vehicle 10j among the three connectors, and third connector 1620c is arranged between first connector 1620a and second connector 1620b. Although each of first connector 1620a, second connector 1620b, and third connector 1620c has the same configuration, each of first connector 1620a, second connector 1620b, and third connector 1620c may have different shaped first and second hooks 1621 and 1622.

Third connector body 1620c is rotatable around axis O parallel to the vertical direction. Third connector body 1620c can rotate 360°. Third connector body 1620c rotates under control by actuation controller 12. More specifically, when switching the connection of third connector 1620c between first rail 7a and second rail 7b, control processor 11 rotates third connector 1620c by a predetermined angle via actuation controller 12. Even more specifically, actuation controller 12 controls the actuator to pivot each of first hook 1621 and second hook 1622 around a predetermined axis to open third connector 1620c and release the connection between first rail 7a and third connector 1620c. Actuation controller 12 rotates third connector 1620c by a predetermined angle around axis O. When third connector 1620c is in a position where it can be connected to second rail 7b, actuation controller 12 pivots each of first hook 1621 and second hook 1622 around a predetermined axis to close third connector 1620c and connect second rail 7b to third connector 1620c. Third connector 1620c is one example of an arm.

### Operations

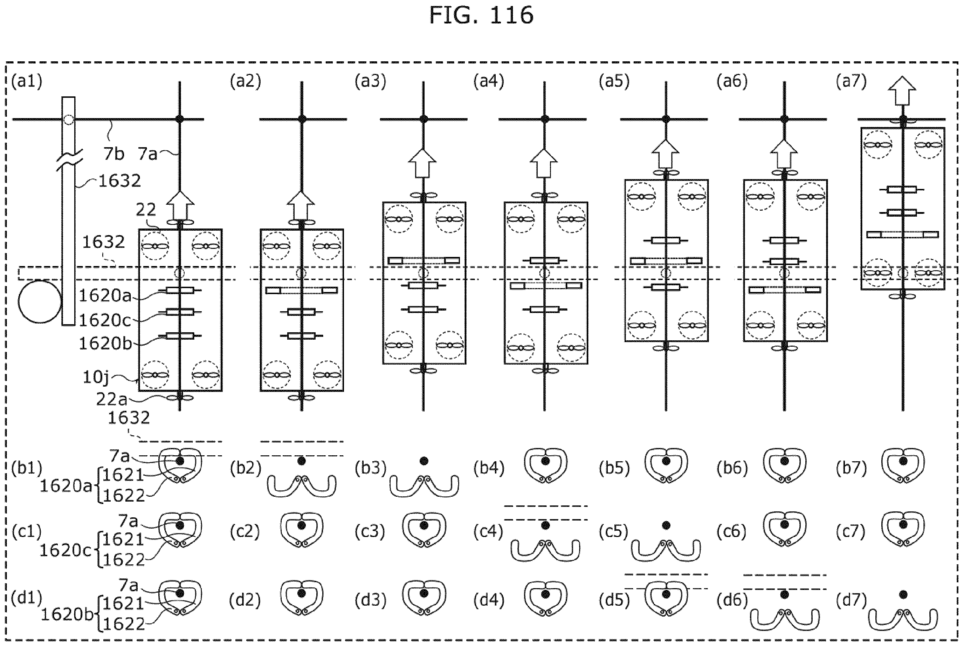

FIG. 116 is a schematic diagram illustrating an example of unmanned aerial vehicle 10j according to a variation of Embodiment 16 passing one of rail supports 1632 supporting first rail 7a while traveling along first rail 7a. In FIG. 116, (a^{∗}) illustrates an example of unmanned aerial vehicle 10j as viewed from above, (b^{∗}) illustrates an example of a view of first connector 1620a and first rail 7a in the traveling direction, (c^{∗}) illustrates an example of a view of third connector 1620c and first rail 7a in the traveling direction, and (d^{∗}) illustrates an example of a view of second connector 1620b and first rail 7a in the traveling direction. The "^{∗}" is a placeholder for a number indicating the order in which the figures are described in FIG. 116. Also, in FIG. 116, reference signs are omitted where appropriate.

As illustrated in (a1), (b1), (c1), (a2), (b2), and (c2) in FIG. 116, unmanned aerial vehicle 10j travels along first rail 7a by rotating side propellers 22a. As first connector 1620a approaches one rail support 1632 illustrated using a dashed line, unmanned aerial vehicle 10j pivots first hook 1621 and second hook 1622 of first connector 1620a to open first connector 1620a. First connector 1620a is disconnected from first rail 7a and is disposed vertically below the one rail support 1632 so that first connector 1620a and the one rail support 1632 do not come into contact with each other. At this time, since third connector 1620c and second connector 1620b are connected to first rail 7a, the attitude of unmanned aerial vehicle 10j is maintained. When disconnecting first connector 1620a from first rail 7a, unmanned aerial vehicle 10j may provide buoyancy vertically upwardly by rotating the front propellers 22, as shown by the solid lines.

As illustrated in (a3), (b3), (c3), (a4), (b4), and (c4) in FIG. 116, when first connector 1620a passes vertically below the one rail support 1632, unmanned aerial vehicle 10j pivots first hook 1621 and second hook 1622 of first connector 1620a to close first connector 1620a, thereby coupling first connector 1620a to first rail 7a. As third connector 1620c approaches one rail support 1632, unmanned aerial vehicle 10j pivots first hook 1621 and second hook 1622 of third connector 1620c to open third connector 1620c. Third connector 1620c is disconnected from first rail 7a and is disposed vertically below the one rail support 1632 so that third connector 1620c and the one rail support 1632 do not come into contact with each other. At this time, first connector 1620a and second connector 1620b are connected to first rail 7a.

As illustrated in (a5), (b5), (c5), (a6), (b6), (c6), (a7), (b7), and (c7) in FIG. 116, when third connector 1620c passes vertically below the one rail support 1632, unmanned aerial vehicle 10j pivots first hook 1621 and second hook 1622 of third connector 1620c to close third connector 1620c, thereby coupling third connector 1620c to first rail 7a. As second connector 1620b approaches the one rail support 1632, unmanned aerial vehicle 10j pivots first hook 1621 and second hook 1622 of second connector 1620b to open second connector 1620b. Second connector 1620b is disconnected from first rail 7a and is disposed vertically below the one rail support 1632 so that second connector 1620b and the one rail support 1632 do not come into contact with each other. At this time, since first connector 1620a and third connector 1620c are connected to first rail 7a, the attitude of unmanned aerial vehicle 10j is maintained. When disconnecting second connector 1620b from first rail 7a, unmanned aerial vehicle 10j may provide buoyancy vertically upwardly by rotating the rear propellers 22, as shown by the solid lines. As a result, unmanned aerial vehicle 10j moves along first rail 7a while maintaining its attitude, and second connector 1620b passes vertically below the one rail support 1632.

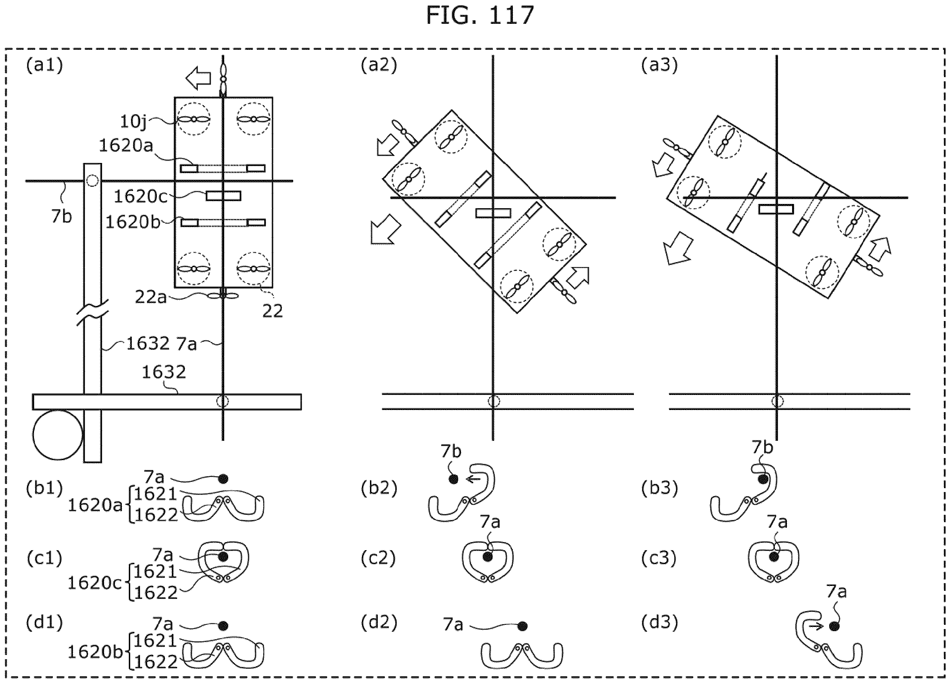

FIG. 117 is a schematic diagram illustrating an example of first connector 1620a and second connector 1620b of unmanned aerial vehicle 10j disconnecting from first rail 7a according to a variation of Embodiment 16. In FIG. 117, (a^{∗}) illustrates an example of unmanned aerial vehicle 10j as viewed from above, (b^{∗}) illustrates an example of a view of first connector 1620a and first rail 7a in the traveling direction, (c^{∗}) illustrates an example of a view of third connector 1620c and first rail 7a in the traveling direction, and (d^{∗}) illustrates an example of a view of second connector 1620b and first rail 7a in the traveling direction. The "^{∗}" is a placeholder for a number indicating the order in which the figures are described in FIG. 117. Also, in FIG. 117, reference signs are omitted where appropriate.

As illustrated in (a1), (b1), (c1), (a2), (b2), (c2), (a3), (b3) and (c3) of FIG. 117, unmanned aerial vehicle 10j passed vertically below second rail 7b with first connector 1620a in the open state so that first connector 1620a did not contact second rail 7b. Unmanned aerial vehicle 10j temporarily comes to a stop when first connector 1620a passes vertically below first rail 7a. When unmanned aerial vehicle 10j is viewed from vertically above, the connection point between first rail 7a and second rail 7b is located between first connector 1620a and third connector 1620c. Unmanned aerial vehicle 10j further pivots first hook 1621 and second hook 1622 of second connector 1620b to open second connector 1620b. Second connector 1620b is disconnected from first rail 7a and is disposed vertically below first rail 7a so that second connector 1620b does not contact first rail 7a. Unmanned aerial vehicle 10j then rotates counterclockwise. Stated differently, unmanned aerial vehicle 10j rotates counterclockwise by rotating side propellers 22a after changing the attitudes of side propellers 22a (when horizontal) so as to cause unmanned aerial vehicle 10j illustrated in (a) in FIG. 117 to rotate in the horizontal direction. Unmanned aerial vehicle 10j is then rotated to a position where first connector 1620a and second connector 1620b overlap second rail 7b when viewed from vertically above. Unmanned aerial vehicle 10j then pivots each of first hook 1621 of first connector 1620a and second hook 1622 of second connector 1620b to a position where they can contact second rail 7b.

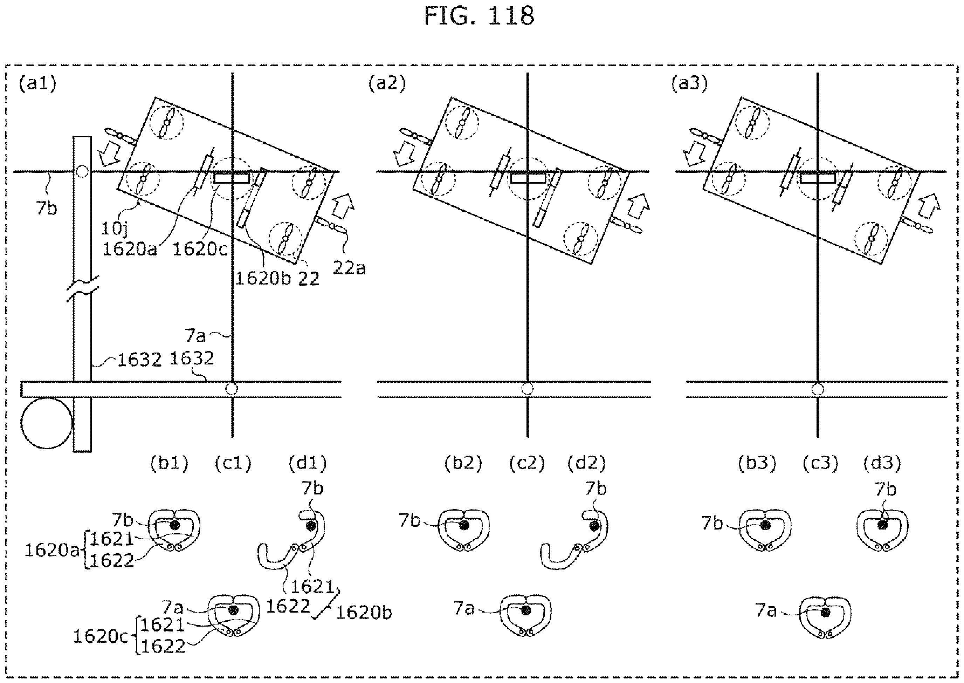

FIG. 118 is a schematic diagram illustrating an example of first connector 1620a and second connector 1620b of unmanned aerial vehicle 10j connected to second rail 7b according to a variation of Embodiment 16. In FIG. 118, (a^{∗}) illustrates an example of unmanned aerial vehicle 10j as viewed from above, (b^{∗}) illustrates an example of a view of first connector 1620a and second rail 7b in the traveling direction, (c^{∗}) illustrates an example of a view of third connector 1620c and first rail 7a in the traveling direction, and (d^{∗}) illustrates an example of a view of second connector 1620b and second rail 7b in the traveling direction. The "^{∗}" is a placeholder for a number indicating the order in which the figures are described in FIG. 118. In the present variation, unmanned aerial vehicle 10j is exemplified as turning left. Also, in FIG. 118, reference signs are omitted where appropriate.

As illustrated in (a1), (b1), (c1), (a2), (b2), (c2), (a3), (b3) and (c3) in FIG. 118, unmanned aerial vehicle 10j pivots second hook 1622 of first connector 1620a to close first connector 1620a, thereby coupling first connector 1620a to second rail 7b. At this time, third connector 1620c is connected to first rail 7a. When unmanned aerial vehicle 10j rotates such that second hook 1622 of second connector 1620b and second rail 7b are in contact or near each other (i.e., when rail 7b is on the inner side of second hook 1622), unmanned aerial vehicle 10j also pivots first hook 1621 of second connector 1620b to close second connector 1620b and couple second connector 1620b to second rail 7b.

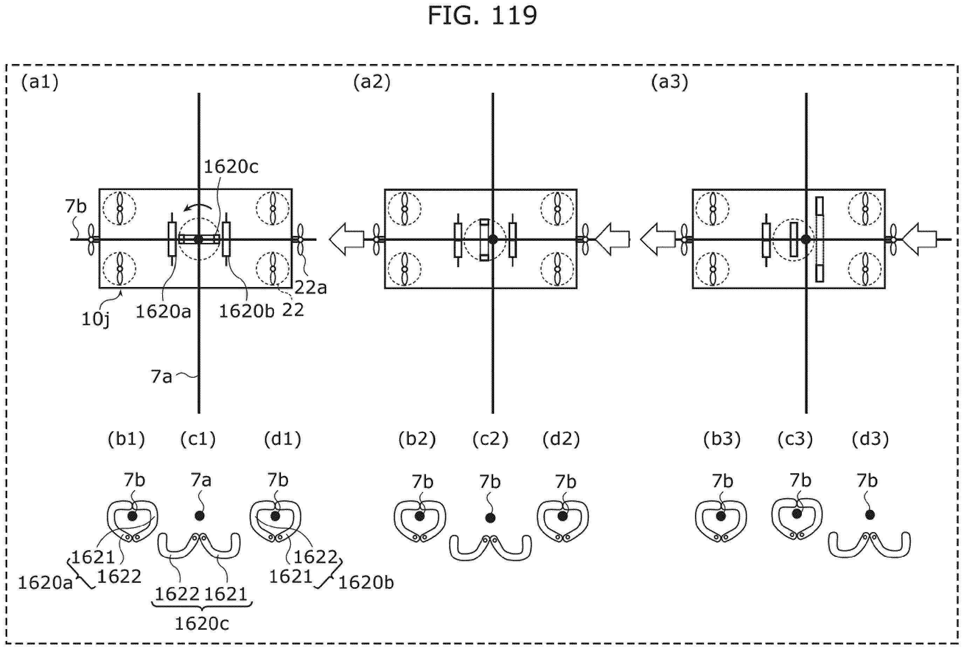

FIG. 119 is a schematic diagram illustrating an example of third connector 1620c of unmanned aerial vehicle 10j connected to second rail 7b according to a variation of Embodiment 16. In FIG. 119, (a^{∗}) illustrates an example of unmanned aerial vehicle 10j as viewed from above, (b^{∗}) illustrates an example of a view of first connector 1620a and second rail 7b in the traveling direction, (c^{∗}) illustrates an example of a view of third connector 1620c and second rail 7b in the traveling direction, and (d^{∗}) illustrates an example of a view of second connector 1620b and second rail 7b in the traveling direction. The "^{∗}" is a placeholder for a number indicating the order in which the figures are described in FIG. 119. Also, in FIG. 119, reference signs are omitted where appropriate.

As illustrated in (a1), (b1), and (c1) in FIG. 119, unmanned aerial vehicle 10j pivots first hook 1621 and second hook 1622 of third connector 1620c to open third connector 1620c. Third connector 1620c is disconnected from first rail 7a and is positioned vertically below first rail 7a and second rail 7b so that it does not contact first rail 7a and second rail 7b. Unmanned aerial vehicle 10j is then rotated to a position where third connector 1620c overlaps the connection point of first rail 7a and second rail 7b when viewed from vertically above. Stated differently, unmanned aerial vehicle 10j rotates so that the lengthwise direction of vehicle main body 1220 is parallel to the lengthwise direction of second rail 7b. The disconnection of third connector 1620c from first rail 7a may be done at the same time as the rotation of unmanned aerial vehicle 10j. At this time, first connector 1620a and second connector 1620b are still connected to second rail 7b.

As illustrated in (a2), (b2), and (c2) in FIG. 119, unmanned aerial vehicle 10j rotates third connector 1620c until it is in the same attitude as first connector 1620a and second connector 1620b. Stated differently, third connector body 1620c rotates 90° about an axis parallel to the vertical direction. By rotating side propellers 22a, unmanned aerial vehicle 10j travels along second rail 7b to a position where it can connect to second rail 7b (a position not in contact with first rail 7a). Unmanned aerial vehicle 10j pivots first hook 1621 and second hook 1622 of third connector 1620c to close third connector 1620c, thereby coupling third connector 1620c to second rail 7b. With this, unmanned aerial vehicle 10j can pass through the connection point between first rail 7a and second rail 7b.

As illustrated in (a3), (b3), and (c3) in FIG. 119, unmanned aerial vehicle 10j pivots first hook 1621 and second hook 1622 of second connector 1620b to open second connector 1620b. Second connector 1620b is disconnected from second rail 7b and is positioned vertically below second rail 7b so that second connector 1620b and second rail 7b do not come into contact. At this time, since first connector 1620a and third connector 1620c are connected to second rail 7b, the attitude of unmanned aerial vehicle 10j is maintained. By rotating side propellers 22a, unmanned aerial vehicle 10j travels leftward along second rail 7b and second connector 1620b passes vertically below first rail 7a.

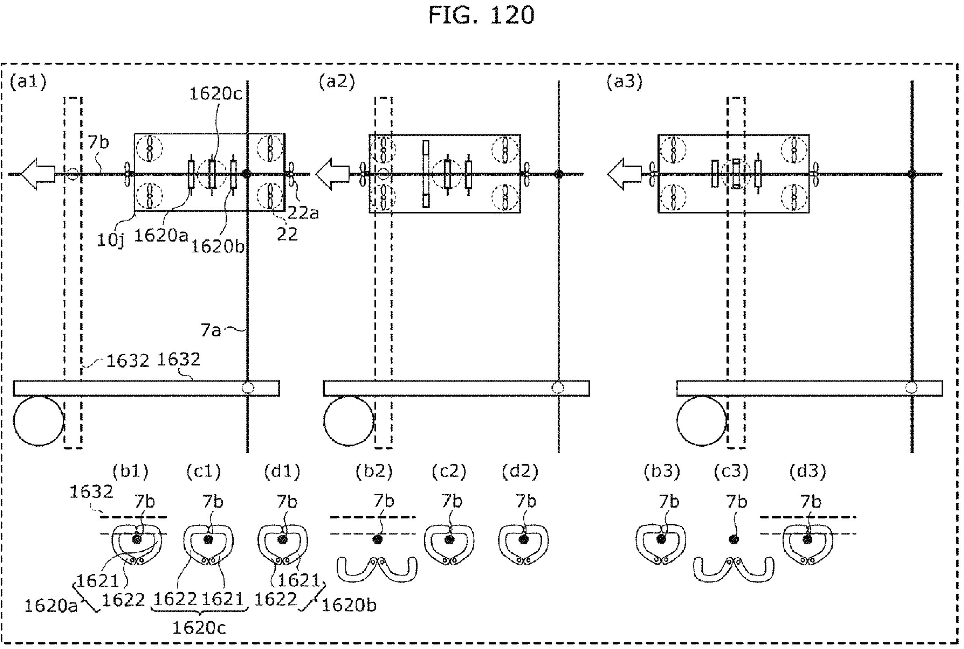

FIG. 120 is a schematic diagram illustrating an example of first connector 1620a and third connector 1620c of unmanned aerial vehicle 10j passing another rail support 1632 according to a variation of Embodiment 16. In FIG. 120, (a^{∗}) illustrates an example of unmanned aerial vehicle 10j as viewed from above, (b^{∗}) illustrates an example of a view of first connector 1620a and second rail 7b in the traveling direction, (c^{∗}) illustrates an example of a view of third connector 1620c and second rail 7b in the traveling direction, and (d^{∗}) illustrates an example of a view of second connector 1620b and second rail 7b in the traveling direction. The "^{∗}" is a placeholder for a number indicating the order in which the figures are described in FIG. 120. Also, in FIG. 120, reference signs are omitted where appropriate.

As illustrated in (a1), (b1), (c1), (a2), (b2), (c2), (a3), (b3), and (c3) in FIG. 120, unmanned aerial vehicle 10j travels along second rail 7b by rotating side propellers 22a. As unmanned aerial vehicle 10j approaches the other rail support 1632 indicated by the dashed line, it pivots first hook 1621 and second hook 1622 of first connector 1620a to open first connector 1620a. First connector 1620a is disconnected from second rail 7b and is disposed vertically below the other rail support 1632 so that first connector 1620a and the other rail support 1632 do not come into contact with each other. At this time, third connector 1620c and second connector 1620b are connected to second rail 7b. As a result, unmanned aerial vehicle 10j moves along second rail 7b while maintaining its attitude, and first connector 1620a passes vertically below the other rail support 1632.

Unmanned aerial vehicle 10j pivots first hook 1621 and second hook 1622 of first connector 1620a to close first connector 1620a, thereby coupling first connector 1620a to second rail 7b. As third connector 1620c approaches the other rail support 1632, unmanned aerial vehicle 10j pivots first hook 1621 and second hook 1622 of third connector 1620c to open third connector 1620c. Third connector 1620c is disconnected from second rail 7b and is disposed vertically below the other rail support 1632 so that third connector 1620c and the other rail support 1632 do not come into contact with each other. At this time, first connector 1620a and second connector 1620b are connected to first rail 7a.

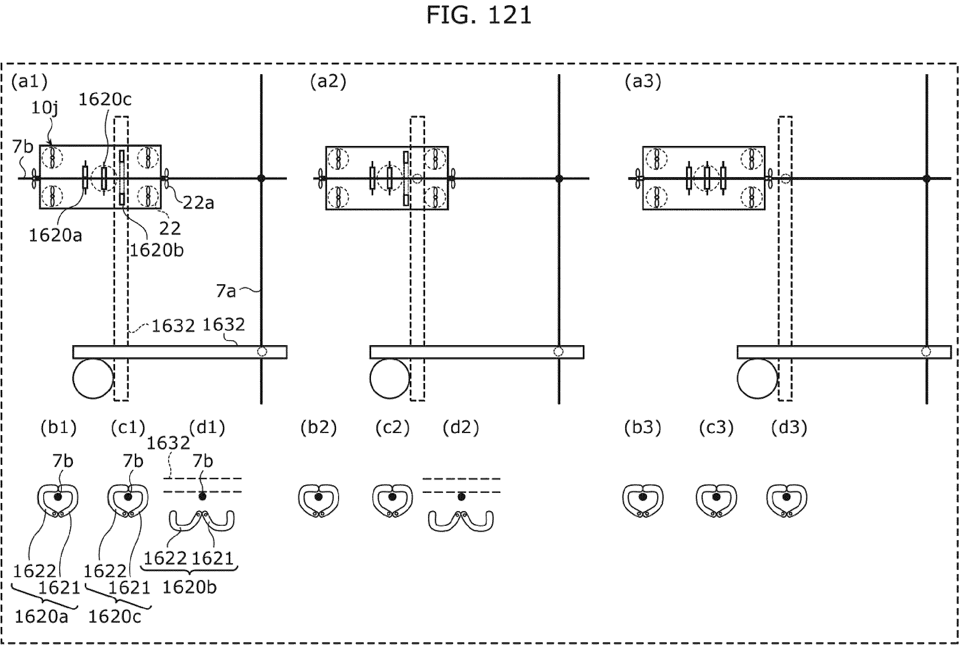

FIG. 121 is a schematic diagram illustrating an example of second connector 1620b of unmanned aerial vehicle 10j passing another rail support 1632 according to a variation of Embodiment 16. In FIG. 121, (a^{∗}) illustrates an example of unmanned aerial vehicle 10j as viewed from above, (b^{∗}) illustrates an example of a view of first connector 1620a and second rail 7b in the traveling direction, (c^{∗}) illustrates an example of a view of third connector 1620c and second rail 7b in the traveling direction, and (d^{∗}) illustrates an example of a view of second connector 1620b and second rail 7b in the traveling direction. The "^{∗}" is a placeholder for a number indicating the order in which the figures are described in FIG. 121. Also, in FIG. 121, reference signs are omitted where appropriate.

As illustrated in (a1), (b1), (c1), (a2), (b2), and (c2) in FIG. 121, unmanned aerial vehicle 10j moves along second rail 7b while maintaining its attitude, and third connector 1620c passes vertically below the other rail support 1632. Unmanned aerial vehicle 10j pivots first hook 1621 and second hook 1622 of second connector 1620b to close third connector 1620c, thereby coupling third connector 1620c to second rail 7b. At this time, first connector 1620a and second connector 1620b are connected to second rail 7b.

As second connector 1620b approaches the other rail support 1632, unmanned aerial vehicle 10j pivots first hook 1621 and second hook 1622 of second connector 1620b to open second connector 1620b. Second connector 1620b is disconnected from second rail 7b and is disposed vertically below the other rail support 1632 so that second connector 1620b and the other rail support 1632 do not come into contact with each other. At this time, first connector 1620a and third connector 1620c are connected to second rail 7b. As a result, unmanned aerial vehicle 10j moves along second rail 7b while maintaining its attitude, and second connector 1620b passes vertically below the other rail support 1632. Unmanned aerial vehicle 10j pivots first hook 1621 and second hook 1622 of second connector 1620b to close second connector 1620b, thereby coupling second connector 1620b to second rail 7b.

In this way, unmanned aerial vehicle 10j can pass through the respective rail supports 1632 and the connection point between first rail 7a and second rail 7b.

### EMBODIMENT 17

### Configuration

Hereinafter, since the basic configuration of unmanned aerial vehicle 10k according to the present embodiment is the same as the basic configuration of the unmanned aerial vehicle according to Embodiment 16 and the like, repeated description of the basic configuration of unmanned aerial vehicle 10k in the present embodiment will be omitted where appropriate. The present embodiment differs from Embodiment 16 and the like in that the arms of the connectors are provided with rollers.

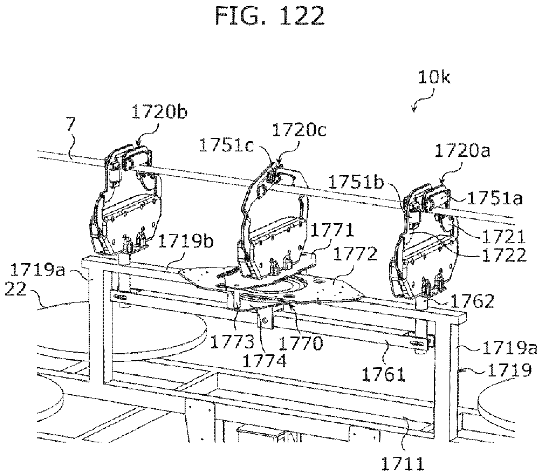

FIG. 122 is a perspective view illustrating an example of first connector 1720a, second connector 1720b, and third connector 1720c and the like of unmanned aerial vehicle 10k according to Embodiment 17.

Vehicle main body 1711 of unmanned aerial vehicle 10k includes first connector support portion 1719 formed along the lengthwise direction of vehicle main body 1711 (the lengthwise direction of rail 7), and second connector support portion 1770.

First connector support portion 1719 includes a pair of standing portions 1719a, main girder 1719b, pivoting portion 1761, and a plurality of support rods 1762. In the present embodiment, the plurality of connectors are first connector 1720a, second connector 1720b, and third connector 1720c.

The pair of standing portions 1719a are provided on the vertically upward side of vehicle main body 1711, and are columnar bodies that rise from vehicle main body 1711. The pair of standing portions 1719a are aligned in the lengthwise direction of vehicle main body 1711. The pair of standing portions 1719a support main girder 1719b.

Main girder 1719b connects the leading ends of the pair of standing portions 1719a together. Main girder 1719b extends in the lengthwise direction of vehicle main body 1711 and supports first connector 1720a, second connector 1720b, and third connector 1720c.

Pivoting portion 1761 is an elongated columnar body that extends in the lengthwise direction of main girder 1719b. Pivoting portion 1761 is located vertically below main girder 1719b, and the central portion in the lengthwise direction is fixed to main girder 1719b so as to be pivotable around a predetermined axis. The pivoting plane in which pivoting portion 1761 can pivot is approximately parallel to the vertical direction. The lower end of one support rod 1762 is fixed to the front side of pivoting portion 1761 so as to be pivotable around a predetermined axis, and the lower end of one support rod 1762 is also fixed to the rear side of pivoting portion 1761 so as to be pivotable around a predetermined axis. Pivoting portion 1761 pushes the respective support rods 1762 up and down by pivoting in the pivoting plane. Stated differently, pivoting portion 1761 displaces the positions of the connectors via support rods 1762 by pivoting like a seesaw.

The plurality of support rods 1762 are pivotably supported by pivoting portion 1761 so that they rise from pivoting portion 1761 and are inserted through main girder 1719b. The plurality of support rods 1762 are displaceable in the vertical direction by pivoting portion 1761 pivoting according to the pivoting plane. In the present embodiment, two support rods 1762 are provided on pivoting portion 1761. Each of support rods 1762 is inserted through main girder 1719b and is pivotably supported by pivoting portion 1761, preventing wobbling or rattling.

The plurality of support rods 1762 affix the plurality of connectors. In the present embodiment, first connector 1720a is fixed to the leading end of one of the plurality of support rods 1762, and second connector 1720b is fixed to the leading end of one of the plurality of support rods 1762. The number of support rods 1762 provided in first connector support portion 1719 depends according to number of connectors.

The heights of first connector 1720a and second connector 1720b are adjusted by pivoting pivoting portion 1761 around a predetermined axis with respect to main girder 1719b. The configuration for displacing the positions of first connector 1720a and second connector 1720b is not limited to pivoting portion 1761 and the plurality of support rods 1762 as exemplified in the present embodiment; any known technique may be used as long as it is capable of raising and lowering first connector 1720a and second connector 1720b.

Control processor 11 controls actuation controller 12 according to the information obtained from the respective distance sensors so that the position of first connector 1720a is higher than the position of second connector 1720b when the distance between a support portion of rail 7 (or, if a plurality of rails 7 intersect, the intersecting rails 7) and first connector 1720a becomes less than a predetermined distance. Stated differently, actuation controller 12 inclines pivoting portion 1761 so that the front is higher than rear by controlling the actuator so as to pivot pivoting portion 1761 around a predetermined axis relative to main girder 1719b. Since this causes support rod 1762 to push first connector 1720a up via pivoting portion 1761 and support rod 1762 to push second connector 1720b down via pivoting portion 1761, the position of first connector 1720a is higher than the position of second connector 1720b. Since first hook 1721 and second hook 1722 of first connector 1720a are separated from rail 7, actuation controller 12 controls the actuator to rotate each of first hook 1721 and second hook 1722 around a predetermined axis to open first connector 1720a. This makes inhibits friction between rail 7 and first and second hooks 1721 and 1722 when opening first connector 1720a. This allows first connector 1720a to be easily disconnected from rail 7. The same applies for second connector 1720b.

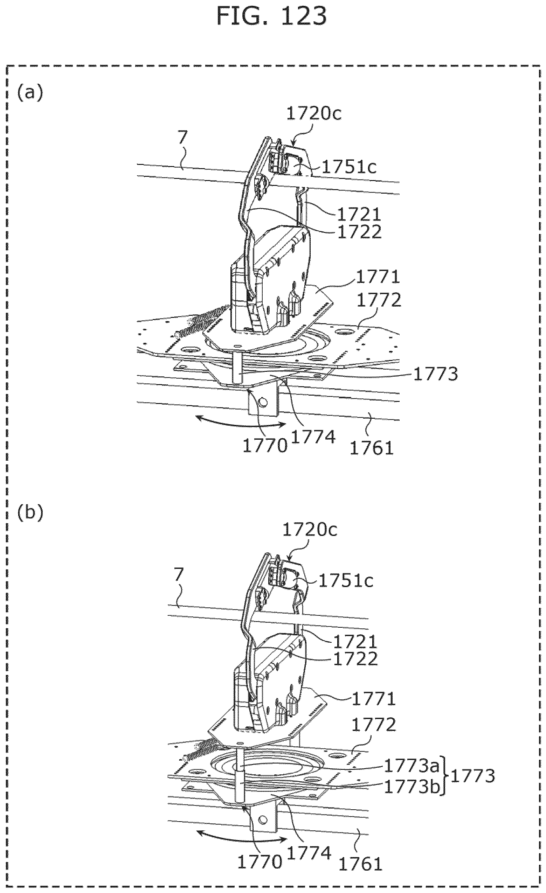

FIG. 123 is a perspective view illustrating an example of second connector 1720b of unmanned aerial vehicle 10k according to Embodiment 17 being moved in the vertical direction. In FIG. 123, (a) illustrates the normal (descended) position of third connector 1720c, and (b) illustrates the displaced (ascended) position of third connector 1720c.

As illustrated in FIG. 122 and FIG. 123, second connector support portion 1770 includes first fixed portion 1771 that fixes third connector 1720c, second fixed portion 1772 that can be pivoted around an axis parallel to the vertical direction with respect to main girder 1719b, position adjustment portion 1773 that couples first fixed portion 1771 and second fixed portion 1772 and displaces the position of first fixed portion 1771 with respect to second fixed portion 1772, third fixed portion 1774 that is fixed to main girder 1719b so as to overlap second fixed portion 1772, and a plurality of rollers disposed between second fixed portion 1772 and third fixed portion 1774. Each of first fixed portion 1771, second fixed portion 1772, and third fixed portion 1774 is an example of the fixed portion.

First fixed portion 1771 is a plate-like component that fixes third connector body 1720c on the upper surface, and is positioned separated from main girder 1719b.

Second fixed portion 1772 is a plate-like component that is fixed to main girder 1719b and supports first fixed portion 1771 via position adjustment portion 1773. Second fixed portion 1772 is positioned to overlap first fixed portion 1771. An annular groove to accommodate the plurality of rollers is formed in the central region of second fixed portion 1772.

Position adjustment portion 1773 connects first fixed portion 1771 and second fixed portion 1772, and adjusts the position of first fixed portion 1771 relative to second fixed portion 1772 under control by actuation controller 12. Stated differently, position adjustment portion 1773 displaces the position of third connector 1720c by raising and lowering first fixed portion 1771. In the present embodiment, position adjustment portion 1773 includes first columnar portion 1773a that is fixed to first fixed portion 1771 and second columnar portion 1773b that is fixed to second fixed portion 1772, as illustrated in (b) in FIG. 123. Second columnar portion 1773b is a tubular component that accommodates first columnar portion 1773a therein, and first columnar portion 1773a slides (raises and lowers) in the vertical direction under control by actuation controller 12. First columnar portion 1773a may be a tubular component that accommodates second columnar portion 1773b therein. Position adjustment portion 1773 is not limited to the example given in the present embodiment; any known technique may be used as long as it is capable of raising and lowering third connector 1720c.

Third fixed portion 1774 is a plate-like component fixed to main girder 1719b. An annular groove to accommodate the plurality of rollers is formed in the central region of third fixed portion 1774, in a position opposing the annular groove of second fixed portion 1772. Since third fixed portion 1774 is fixed to main girder 1719b, when the connector is connected to rail 7, the added weight of unmanned aerial vehicle 10k pushes it against second fixed portion 1772 with the plurality of rollers therebetween. This inhibits third fixed portion 1774 from separating from second fixed portion 1772, and also allows third fixed portion 1774 to support the plurality of rollers disposed between the annular groove of second fixed portion 1772 and the annular groove of third fixed portion 1774.

The plurality of rollers are, for example, balls, conical rollers, etc., and are disposed between and sandwiched by the annular groove of second fixed portion 1772 and the annular groove of third fixed portion 1774. The plurality of rollers rotate in response to the rotation of second fixed portion 1772.

Second fixed portion 1772, third fixed portion 1774, and the plurality of rollers function as a turntable, since second fixed portion 1772 can rotate around an axis parallel to the vertical direction with respect to third fixed portion 1774.

First connector 1720a, second connector 1720b, and third connector 1720c of unmanned aerial vehicle 10k are aligned in the lengthwise direction of rail 7. First connector 1720a, second connector 1720b, and third connector 1720c are fixed to main girder 1719b.

First connector 1720a is arranged in the frontmost position of unmanned aerial vehicle 10k among the three connectors, second connector 1720b is arranged in the rearmost position of unmanned aerial vehicle 10k among the three connectors, and third connector 1720c is arranged between first connector 1720a and second connector 1720b. The configurations of first connector 1720a and second connector 1720b are similar, and the configuration of third connector 1720c is different from the configurations of first connector 1720a and second connector 1720b.

As illustrated in FIG. 122, each of first hook 1721 and second hook 1722 of first connector 1720a includes first roller 1751a and second roller 1751b. Each of first hook 1721 and second hook 1722 of second connector 1720b also includes first roller 1751a and second roller 1751b.

First roller(s) 1751a is/are positioned vertically above rail 7 when first connector 1720a and/or second connector 1720b is/are closed. Second roller 1751b is a wheel for rotational contact with rail 7. The axis of rotation of first roller 1751a is orthogonal to the lengthwise direction of rail 7, and is approximately parallel to the horizontal direction. First roller 1751a is one example of the roller.

Second roller(s) 1751b is/are positioned vertically above rail 7 when first connector 1720a and/or second connector 1720b is/are closed. Second roller 1751b is a wheel for rotational contact with rail 7. The axis of rotation of second roller 1751b is orthogonal to the lengthwise direction of rail 7, and is approximately parallel to the vertical direction. Second roller 1751b is one example of the roller.

When first connector 1720a and/or second connector 1720b are in the closed state, first roller 1751a of first hook 1721 and first roller 1751a of second hook 1722 are positioned vertically above rail 7, and second roller 1751b of first hook 1721 and second roller 1751b of second hook 1722 are disposed on the lateral sides of rail 7 so as to sandwich rail 7.

Third roller 1751c is provided on each of first hook 1721 and second hook 1722 of third connector body 1720c.

Third roller 1751c is positioned vertically above rail 7 when third connector 1720c is closed. Third roller 1751c is a wheel for rotational contact with rail 7. The axis of rotation of first roller 1751a is orthogonal to the lengthwise direction of rail 7, and is approximately parallel to the horizontal direction. Third roller 1751c is one example of the roller.

For example, when first connector 1720a is in the closed state, first roller 1751a of first hook 1721 and first roller 1751a of second hook 1722 are positioned vertically above rail 7, and second roller 1751b of first hook 1721 and second roller 1751b of second hook 1722 are disposed on the lateral sides of rail 7 so as to sandwich rail 7.

### Operation Example 1

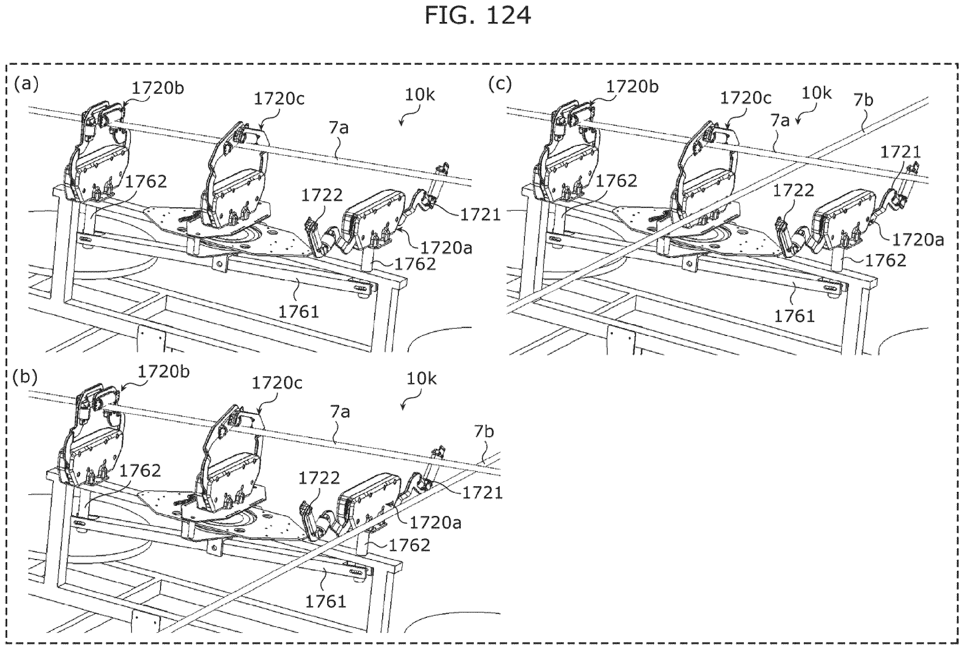

FIG. 124 is a perspective view illustrating an example of how first connector 1720a of unmanned aerial vehicle 10k according to Embodiment 17 passes across second rail 7b.

As illustrated in (a) and (b) in FIG. 124, unmanned aerial vehicle 10k travels along first rail 7a by rotating the side propellers. When first connector 1720a approaches second rail 7b, unmanned aerial vehicle 10k pivots pivoting portion 1761 so as to push first connector 1720a up and push second connector 1720b down. This causes first hook 1721 and second hook 1722 of first connector 1720a to separate from first rail 7a. When unmanned aerial vehicle 10k pushes first connector 1720a up to separate first connector 1720a from first rail 7a, it pivots first hook 1721 and second hook 1722 of first connector 1720a to open first connector 1720a. First connector 1720a is disconnected from first rail 7a and is positioned vertically below second rail 7b so that first connector 1720a and second rail 7b do not come into contact. At this time, since third connector 1720c and second connector 1720b are connected to first rail 7a, the attitude of unmanned aerial vehicle 10k is maintained. When disconnecting first connector 1720a from first rail 7a, unmanned aerial vehicle 10k may provide buoyancy vertically upwardly by rotating the front propellers.

As illustrated in (c) in FIG. 124, unmanned aerial vehicle 10k moves along first rail 7a while maintaining its attitude, and first connector 1720a passes vertically below second rail 7b.

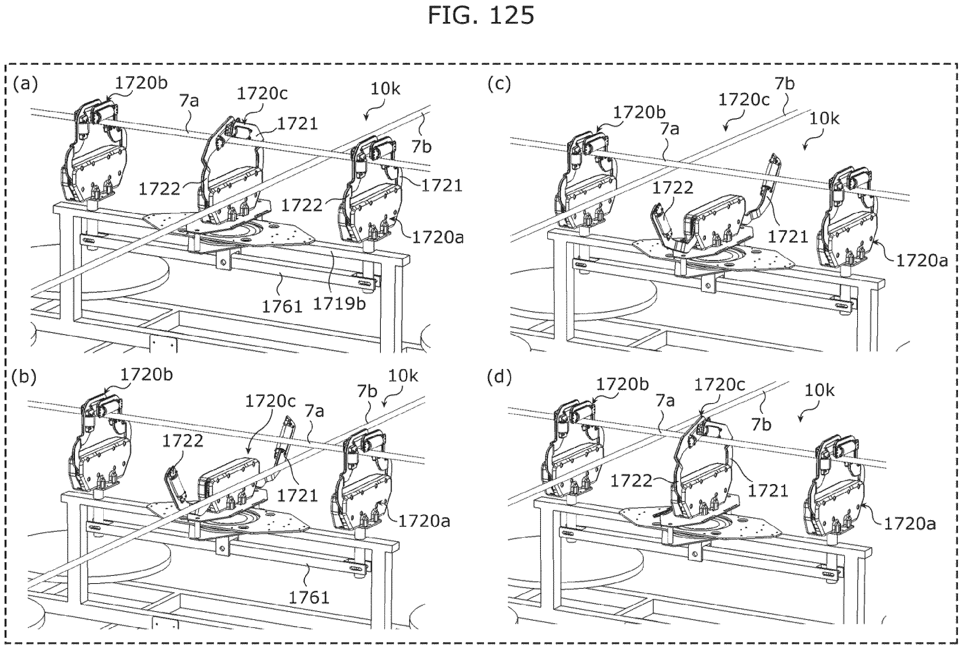

FIG. 125 is a perspective view illustrating an example of how third connector 1720c of unmanned aerial vehicle 10k according to Embodiment 17 passes across second rail 7b.

As illustrated in (a) in FIG. 125, when first connector 1720a passes vertically below second rail 7b, unmanned aerial vehicle 10k pivots first hook 1721 and second hook 1722 of first connector 1720a to close first connector 1720a, thereby coupling first connector 1720a to first rail 7a. Unmanned aerial vehicle 10k then pivots pivoting portion 1761 to push second connector 1720b up and push first connector 1720a down to return pivoting portion 1761 to its original attitude (the attitude where main girder 1719b and pivoting portion 1761 are approximately parallel; the attitude just before pivoting pivoting portion 1761). At this time, third connector 1720c and second connector 1720b are connected to first rail 7a.

As illustrated in (b) in FIG. 125, when third connector 1720c approaches second rail 7b, unmanned aerial vehicle 10k actuates position adjustment portion 1773 to raise third connector 1720c into its ascended stated. This causes first hook 1721 and second hook 1722 of third connector 1720c to separate from first rail 7a. When unmanned aerial vehicle 10k pushes third connector 1720c up to separate third connector 1720c from first rail 7a, it pivots first hook 1721 and second hook 1722 of third connector 1720c to open third connector 1720c. Third connector 1720c is disconnected from first rail 7a and is positioned vertically below second rail 7b so that third connector 1720c and second rail 7b do not come into contact. At this time, since first connector 1720a and second connector 1720b are connected to first rail 7a, the attitude of unmanned aerial vehicle 10k is maintained.

As illustrated in (c) in FIG. 125, unmanned aerial vehicle 10k moves along first rail 7a while maintaining its attitude, and third connector 1720c passes vertically below second rail 7b.

As illustrated in (d) in FIG. 125, when third connector 1720c passes vertically below second rail 7b, unmanned aerial vehicle 10k pivots first hook 1721 and second hook 1722 of third connector 1720c to close third connector 1720c, thereby coupling third connector 1720c to first rail 7a. Unmanned aerial vehicle 10k then actuates position adjustment portion 1773 to lower third connector 1720c into its descended state. At this time, first connector 1720a and third connector 1720c are connected to first rail 7a.

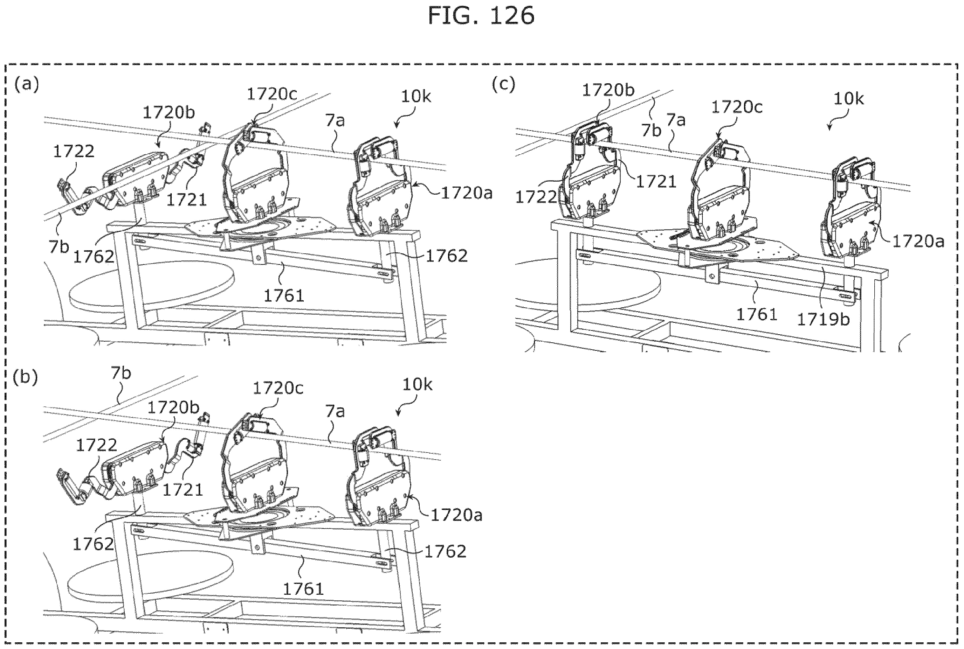

FIG. 126 is a perspective view illustrating an example of how second connector 1720b of unmanned aerial vehicle 10k according to Embodiment 17 passes across second rail 7b.

As illustrated in (a) in FIG. 126, when second connector 1720b approaches second rail 7b, unmanned aerial vehicle 10k pivots pivoting portion 1761 to push second connector 1720b up and push first connector 1720a down. This causes first hook 1721 and second hook 1722 of second connector 1720b to separate from first rail 7a. When unmanned aerial vehicle 10k pushes second connector 1720b up to separate second connector 1720b from first rail 7a, it pivots first hook 1721 and second hook 1722 of second connector 1720b to open second connector 1720b. Second connector 1720b is disconnected from first rail 7a and is positioned vertically below second rail 7b so that second connector 1720b and second rail 7b do not come into contact. At this time, since first connector 1720a and third connector 1720c are connected to first rail 7a, the attitude of unmanned aerial vehicle 10k is maintained. When disconnecting second connector 1720b from first rail 7a, unmanned aerial vehicle 10k may provide buoyancy vertically upwardly by rotating the front propellers.

As illustrated in (b) in FIG. 126, unmanned aerial vehicle 10k moves along first rail 7a while maintaining its attitude, and second connector 1720b passes vertically below second rail 7b.

As illustrated in (c) in FIG. 126, when second connector 1720b passes vertically below second rail 7b, unmanned aerial vehicle 10k pivots first hook 1721 and second hook 1722 of second connector 1720b to close second connector 1720b, thereby coupling second connector 1720b to first rail 7a. Unmanned aerial vehicle 10k then pivots pivoting portion 1761 to push first connector 1720a up and push second connector 1720b down to return pivoting portion 1761 to its original attitude (the attitude where main girder 1719b and pivoting portion 1761 are approximately parallel; the attitude just before pivoting pivoting portion 1761). At this time, first connector 1720a and third connector 1720c are connected to first rail 7a.

Unmanned aerial vehicle 10k can thus pass through the connection point between first rail 7a and second rail 7b.

### Operation Example 2

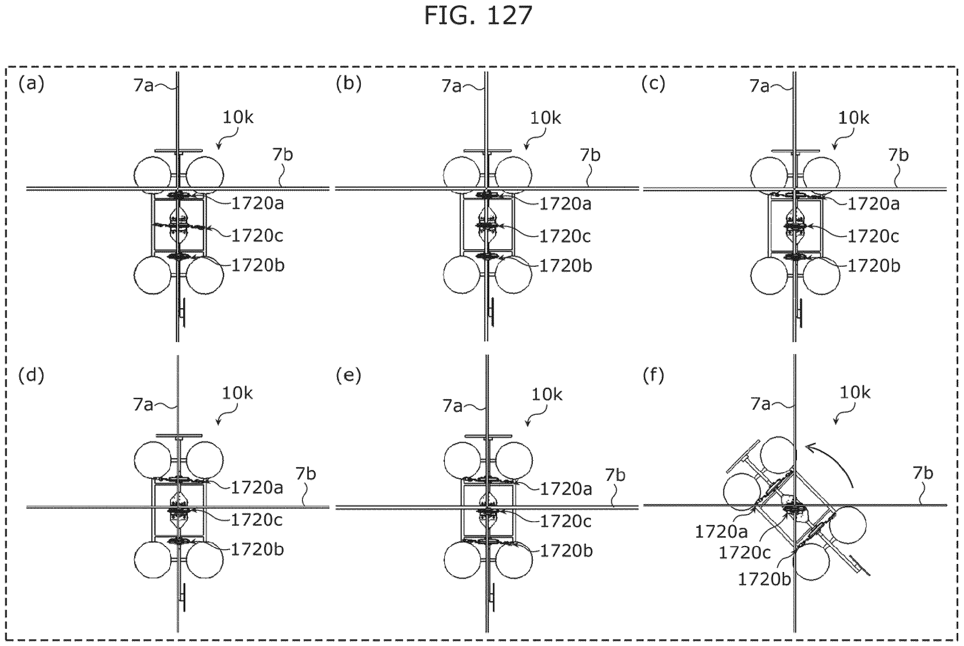

FIG. 127 is a schematic diagram illustrating an example of unmanned aerial vehicle 10k according to Embodiment 17 coupling to second rail 7b from first rail 7a.

Unmanned aerial vehicle 10k travels along first rail 7a by rotating the side propellers. As illustrated in (a) and (b) in FIG. 127, when first connector 1720a approaches second rail 7b, unmanned aerial vehicle 10k pivots first hook 1721 and second hook 1722 of third connector 1720c to close third connector 1720c. As illustrated in (c) in FIG. 127, unmanned aerial vehicle 10k pivots first hook 1721 and second hook 1722 of first connector 1720a to open first connector 1720a. First connector 1720a is disconnected from first rail 7a and is positioned vertically below second rail 7b so that first connector 1720a and second rail 7b do not come into contact.

As illustrated in (d) in FIG. 127, when first connector 1720a passes vertically below second rail 7b and third connector 1720c approaches second rail 7b, unmanned aerial vehicle 10k stops traveling by stopping the rotation of side propellers 22a. As illustrated in (e) in FIG. 127, unmanned aerial vehicle 10k pivots first hook 1721 and second hook 1722 of second connector 1720b to open second connector 1720b. Second connector 1720b is disconnected from first rail 7a and is positioned vertically below second rail 7b so that second connector 1720b and second rail 7b do not come into contact.

As illustrated in (f) in FIG. 127, since only third connector 1720c is coupled to first rail 7a, in order to rotate itself counterclockwise, unmanned aerial vehicle 10k changes the attitude of side propeller 22a so that unmanned aerial vehicle 10k rotates horizontally as illustrated in FIG. 115, and then rotates side propeller 22a.

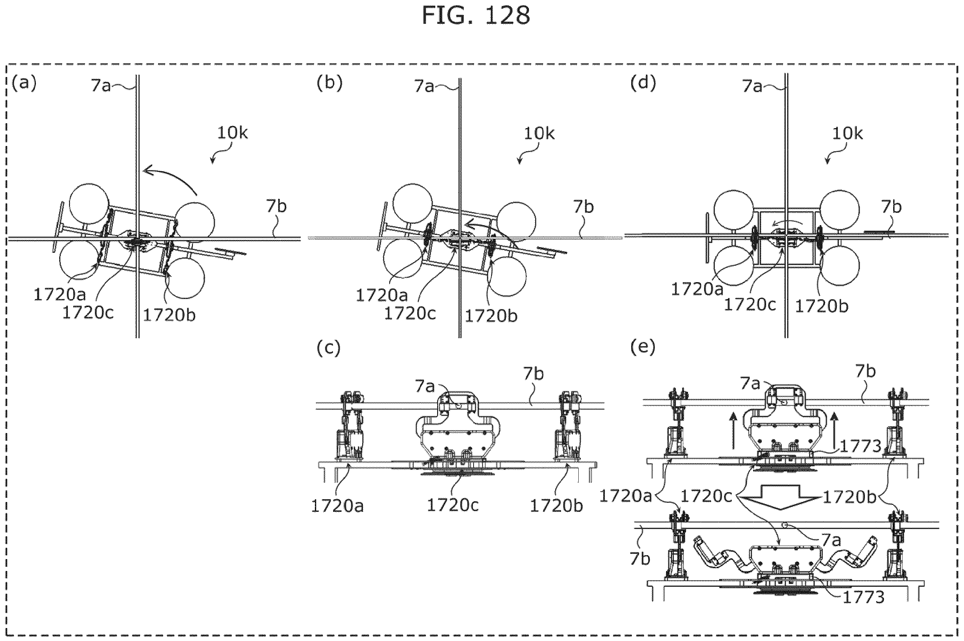

FIG. 128 is a schematic diagram illustrating an example of third connector 1720c of unmanned aerial vehicle 10k disconnecting from first rail 7a according to Embodiment 17. In FIG. 128, (a), (b), and (d) illustrate unmanned aerial vehicle 10k as viewed from above, and (c) and (e) illustrate side views of first connector 1720a, second connector 1720b, and third connector 1720c of unmanned aerial vehicle 10k.

As illustrated in (a), (b), and (c) in FIG. 128, unmanned aerial vehicle 10k rotates to a position where first connector 1720a and second connector 1720b overlap second rail 7b. Unmanned aerial vehicle 10k rotates to a position where first connector 1720a and second connector 1720b overlap second rail 7b, pivots first hooks 1721 and second hooks 1722 of first connector 1720a and second connector 1720b to close first connector 1720a and second connector 1720b, thereby coupling first connector 1720a and second connector 1720b to second rail 7b.

As illustrated in (d) and (e) in FIG. 128, unmanned aerial vehicle 10k actuates position adjustment portion 1773 to raise third connector 1720c into its ascended stated. This causes first hook 1721 and second hook 1722 of third connector 1720c to separate from first rail 7a. When unmanned aerial vehicle 10k separates third connector 1720c from first rail 7a, it pivots first hook 1721 and second hook 1722 of third connector 1720c to open third connector 1720c. Third connector 1720c is disconnected from first rail 7a and is positioned vertically below first rail 7a and second rail 7b so that third connector 1720c does not come into contact with first rail 7a or second rail 7b. Unmanned aerial vehicle 10k is then rotated to a position where third connector 1720c overlaps the connection point of first rail 7a and second rail 7b. Stated differently, unmanned aerial vehicle 10k rotates so that the lengthwise direction of vehicle main body 1711 is approximately parallel to the lengthwise direction of second rail 7b.

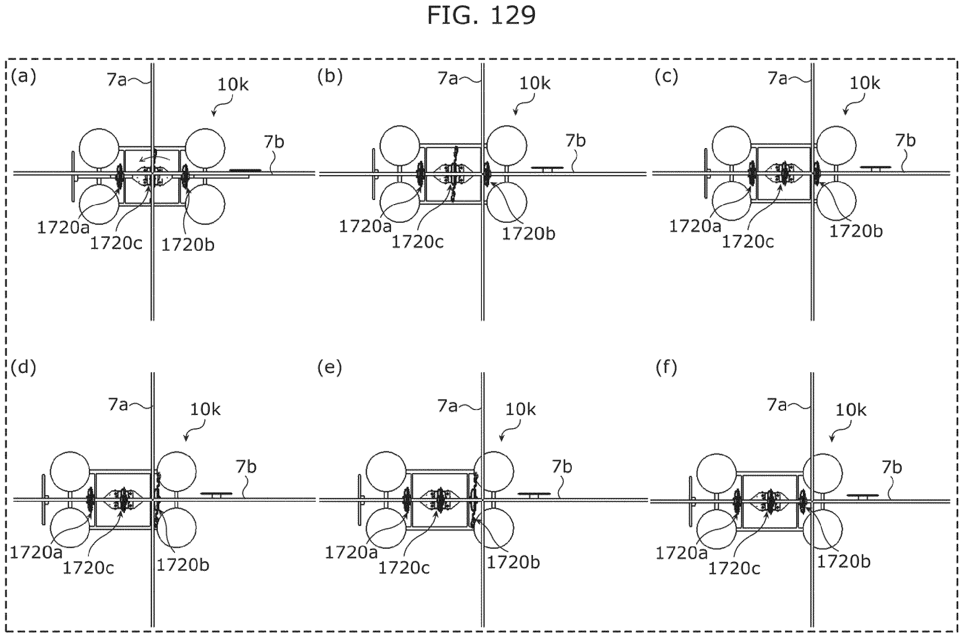

FIG. 129 is a schematic diagram illustrating an example of how unmanned aerial vehicle 10k according to Embodiment 17 passes through the connection point between first rail 7a and second rail 7b after connecting third connector 1720c of unmanned aerial vehicle 10k to second rail 7b.

As illustrated in (a) and (b) in FIG. 129, unmanned aerial vehicle 10k rotates third connector 1720c until it is in the same attitude as first connector 1720a and second connector 1720b. Stated differently, third connector body 1720c rotates 90° about an axis parallel to the vertical direction. By rotating side propellers 22a, unmanned aerial vehicle 10k travels along second rail 7b to a position where it can connect to second rail 7b (a position in which third connector 1720c is not in contact with first rail 7a). As illustrated in (c) in FIG. 129, unmanned aerial vehicle 10k pivots first hook 1721 and second hook 1722 of third connector 1720c to close third connector 1720c, thereby coupling third connector 1720c to second rail 7b.

As illustrated in (d) in FIG. 129, unmanned aerial vehicle 10k pivots first hook 1721 and second hook 1722 of second connector 1720b to open second connector 1720b. Second connector 1720b is disconnected from second rail 7b and is positioned vertically below second rail 7b so that second connector 1720b and second rail 7b do not come into contact. As illustrated in (e) in FIG. 129, by rotating side propellers 22a, unmanned aerial vehicle 10k travels leftward along second rail 7b and second connector 1720b passes vertically below first rail 7a. As illustrated in (f) in FIG. 129, unmanned aerial vehicle 10k pivots first hook 1721 and second hook 1722 of second connector 1720b to close second connector 1720b, thereby coupling second connector 1720b to second rail 7b.

With this, unmanned aerial vehicle 10k can pass through the connection point between first rail 7a and second rail 7b.

### VARIATION OF EMBODIMENT 17

Hereinafter, since the basic configuration according to the present variation is the same as the basic configuration of the unmanned aerial vehicle of Embodiment 17 and the like, repeated description of the basic configuration of unmanned aerial vehicle 10k in the present variation will be omitted where appropriate. The present variation differs from Embodiment 17 and the like in regard to the connection between connector 1720 and rail 7. In the present variation, for simplification, first connector 1720a, second connector 1720b, and third connector 1720c may be collectively referred to as connector 1720. Connector 1720 is one example of an arm.

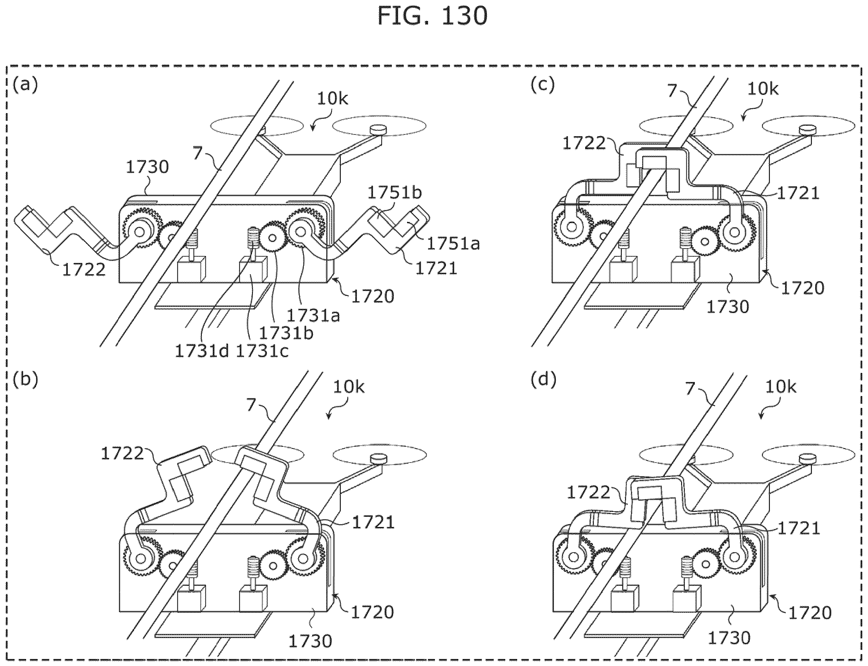

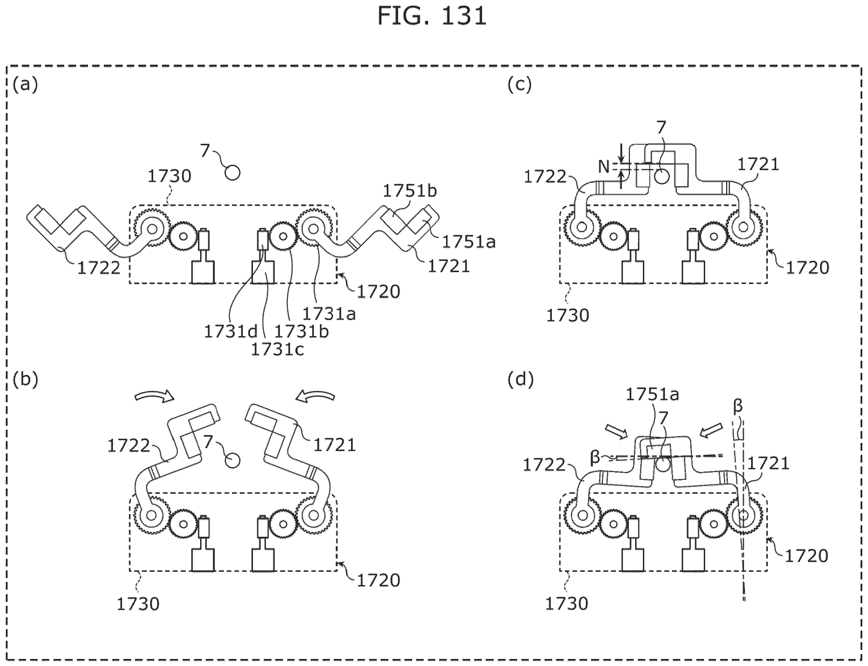

FIG. 130 is a perspective view illustrating an example of connector 1720 of unmanned aerial vehicle 10k according to a variation of Embodiment 17. FIG. 131 is a front view illustrating an example of connector 1720 of unmanned aerial vehicle 10k according to a variation of Embodiment 17 when viewed from the front. Although FIG. 131 illustrates the connecting of connector 1720 to rail 7, since the releasing of connector 1720 from rail 7 is the reverse of (a) through (d) in FIG. 131, description of these operations will be omitted.

As illustrated in FIG. 130, connector 1720 includes first hook 1721 and second hook 1722, two first gears 1731a, two second gears 1731b, two motors 1731c, and two third gears 1731d. The two first gears 1731a, the two second gears 1731b, the two motors 1731c and the two third gears 1731d are the actuators described above and are actuated and controlled by actuation controller 12.

The two first gears 1731a are housed rotatably in enclosure 1730, and rotate around an axis to pivot first hook 1721 and second hook 1722 around that axis.

One of the two first gears 1731a is fixed to the end (base) of first hook 1721 opposite end of first hook 1721 at which the roller is provided. The other of the two first gears 1731a is fixed to the end (base) of second hook 1722 opposite end of second hook 1722 at which the roller is provided. The two first gears 1731a engage one-to-one with the two second gears 1731b, respectively, and rotate with the rotation of the two second gear 1731b, respectively, thereby rotating first hook 1721 and second hook 1722.

The two second gears 1731b are housed rotatably in enclosure 1730, and rotate around an axis different from that of first gear 1731a to rotate first gear 1731a. One of the two second gears 1731b engages with one of first gears 1731a to rotate one of first gears 1731a around its axis. The other of the two second gears 1731b engages with the other first gear 1731a to rotate the other first gear 1731a around its axis.

The two motors 1731c are housed in enclosure 1730 such that the axial directions of their rotary shafts are perpendicular to the axial directions of first gears 1731a and the axial directions of second gears 1731b.

Each rotary shaft of the two motors 1731c is provided with third gear 1731d, and the two third gears 1731d engage one-to-one with the two second gears 1731b, respectively. Stated differently, one of the two motors 1731c rotates first hook 1721 via one of first gears 1731a, by third gear 1731d engaging with one of second gears 1731b. The other of the two motors 1731c rotates second hook 1722 via the other of first gears 1731a, by third gear 1731d engaging with the other of second gears 1731b.

In (a) in FIG. 130 and (a) in FIG. 131, connector 1720 is in the open state, and connector 1720 is not connected to rail 7. As illustrated in (b) in FIG. 130 and (b) in FIG. 131, actuation controller 12 actuates each of the two motors 1731c to rotate third gear 1731d, which in turn rotates the two first gears 1731a one-by-one via the two second gears 1731b. This causes first hook 1721 and second hook 1722 to pivot.

As illustrated in (c) in FIG. 130 and (c) in FIG. 131, the respective actuators position first hook 1721 and second hook 1722 to cover rail 7 from above. In other words, first rollers 1751a of first hook 1721 and second hook 1722 are positioned vertically above rail 7, and first rollers 1751a and rail 7 are separated by a predetermined distance N. Here, the attitudes of first rollers 1751a of first hook 1721 and second hook 1722 are such that the axial directions of the axes of rotation of first rollers 1751a are approximately parallel to the horizontal direction.

As illustrated in (d) in FIG. 130 and (d) in FIG. 131, actuation controller 12 further pivots first hook 1721 and second hook 1722 by controlling the actuators. This causes first hook 1721 and second hook 1722 to push down on rail 7 from vertically above. The axial directions of the axes of rotation of first rollers 1751a of first hook 1721 and second hook 1722 are each inclined at a predetermined angle relative to the horizontal direction. Stated differently, as illustrated in (c) in FIG. 131, the lengthwise direction of first hook 1721 relative to first gear 1731a is approximately parallel to the vertical direction, but as illustrated in (d) in FIG. 131, the lengthwise direction of first hook 1721 relative to first gear 1731a is inclined by an angle β relative to the vertical direction.

Thus, in this unmanned aerial vehicle 10k, when connecting connector 1720 to rail 7, as illustrated in (c) in FIG. 130 and (c) in FIG. 131, the axial directions of the axes of rotation of first rollers 1751a are approximately parallel to the horizontal direction, and connector 1720 and rail 7 are separated from each other. When connecting connector 1720 to rail 7, connector 1720 covers rail 7 from the vertically upper side of rail 7, which makes it difficult for friction to occur between connector 1720 and rail 7. This unmanned aerial vehicle 10k can therefore easily connect connector 1720 to rail 7.

Stated differently, closing first hook 1721 and second hook 1722 closes connector 1720, thereby connecting connector 1720 to rail 7.

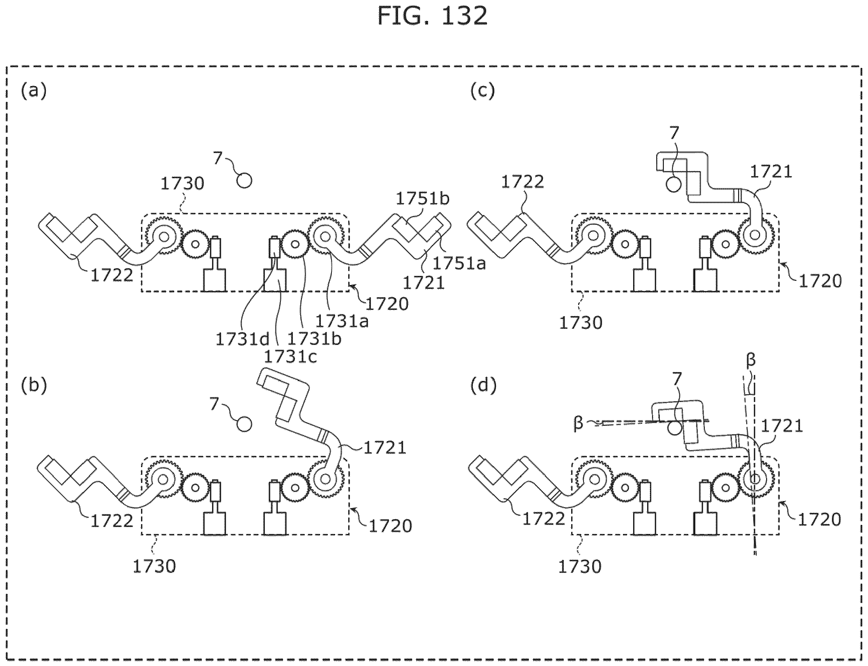

FIG. 132 is a front view illustrating an example of first hook 1721 connecting to rail 7 when connector 1720 of unmanned aerial vehicle 10k according to a variation of Embodiment 17 when viewed from the front. Although FIG. 132 illustrates an example of first hook 1721 connecting to rail 7, the same applies to the connection of second hook 1722 to rail 7.

In (a) in FIG. 132, connector 1720 is in the open state, and connector 1720 is not connected to rail 7. As illustrated in (b) in FIG. 132, actuation controller 12 controls the actuator to actuate one motor 1731c corresponding to first hook 1721 to rotate third gear 1731d, which in turn rotates one first gear 1731a through one second gear 1731b. This causes first hook 1721 to pivot.

As illustrated in (c) in FIG. 132, the actuator positions first hook 1721 to cover rail 7 from above. In other words, first roller 1751a of first hook 1721 is positioned vertically above rail 7, and first roller 1751a and rail 7 are separated by a predetermined distance. Here, the attitude of first roller 1751a of first hook 1721 is such that the axial direction of the axis of rotation of first roller 1751a is approximately parallel to the horizontal direction.

As illustrated in (d) in FIG. 132, actuation controller 12 further pivots first hook 1721 by controlling the actuator. This causes first hook 1721 to push down on rail 7 from vertically above. The axial direction of the axis of rotation of first roller 1751a of first hook 1721 is inclined at a predetermined angle relative to the horizontal direction. Stated differently, as illustrated in (c) in FIG. 132, the lengthwise direction of first hook 1721 relative to first gear 1731a is approximately parallel to the vertical direction, but as illustrated in (d) in FIG. 132, the lengthwise direction of first hook 1721 relative to first gear 1731a is inclined by an angle β relative to the vertical direction. First hook 1721 is thus connected to rail 7 by pivoting first hook 1721.

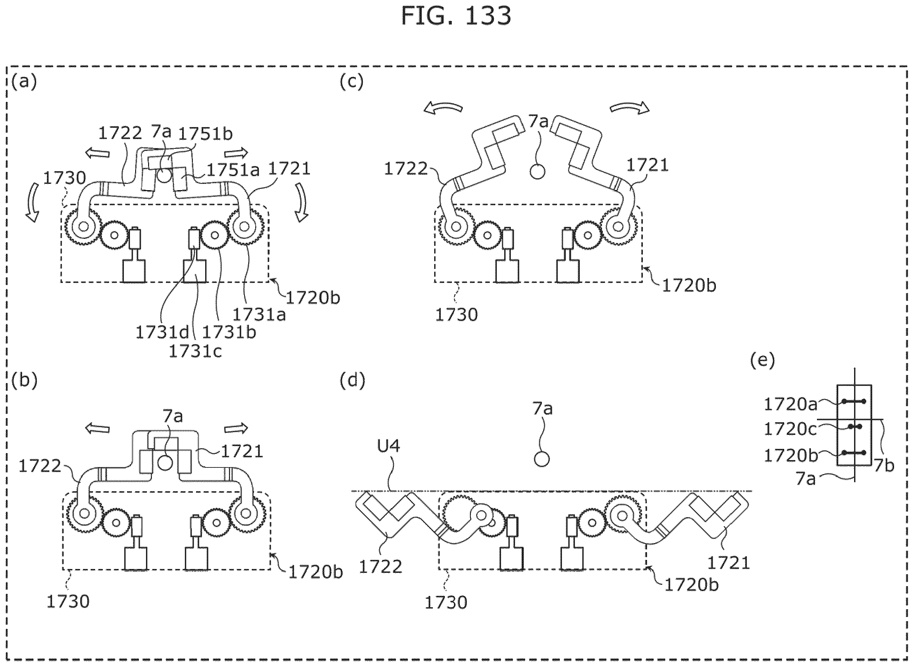

FIG. 133 includes a front view of second connector 1720b of unmanned aerial vehicle 10k according to a variation according to Embodiment 17, illustrating an example of how the connection between second connector 1720b and first rail 7a is released, and a schematic diagram illustrating an example of unmanned aerial vehicle 10k as viewed from above. FIG. 133 illustrates an example in which the connection is switched from one rail 7, exemplified as first rail 7a, to another rail 7, exemplified as second rail 7b, just like in FIG. 127 and the like. In FIG. 133, connector 1720 is exemplified as second connector 1720b.

As illustrated in (a) in FIG. 133, the axial directions of the axes of rotation of first rollers 1751a of first hook 1721 and second hook 1722 are each inclined at a predetermined angle relative to the horizontal direction. Stated differently, as illustrated in (b) in FIG. 133, the lengthwise direction of first hook 1721 relative to first gear 1731a is approximately parallel to the vertical direction, but as illustrated in (a) in FIG. 133, the lengthwise direction of first hook 1721 relative to first gear 1731a is inclined by an angle relative to the vertical direction. As illustrated in (b) in FIG. 133, actuation controller 12 actuates each of the two motors 1731c to rotate third gear 1731d, which in turn rotates the two first gears 1731a one-by-one via the two second gears 1731b. This causes first hook 1721 and second hook 1722 to pivot. First hook 1721 and second hook 1722 are then separated from the vertical top of first rail 7a, so that first rollers 1751a are not in contact with first rail 7a and second connector 1720b is separated from first rail 7a.

As illustrated in (b) in FIG. 133, the respective actuators position first rollers 1751a of first hook 1721 and second hook 1722 vertically above first rail 7a, separating the respective first rollers 1751a from first rail 7a by a predetermined distance. Here, the attitudes of first rollers 1751a of first hook 1721 and second hook 1722 are such that the axial directions of the axes of rotation of first rollers 1751a are approximately parallel to the horizontal direction.

As illustrated in (c) and (d) in FIG. 133, the respective actuators further pivot first hook 1721 and second hook 1722 to open second connector 1720b and disconnect second connector 1720b from first rail 7a. First hook 1721 and second hook 1722 are positioned below a virtual plane that extends approximately parallel along the upper surface of enclosure 1730.

In FIG. 133, (e) illustrates an example second connector 1720b disconnected from first rail 7a when unmanned aerial vehicle 10k in (d) in FIG. 133 is viewed from above. In (e) in FIG. 133, first connector 1720a is in the open state as well, but third connector 1720c is connected to first rail 7a.

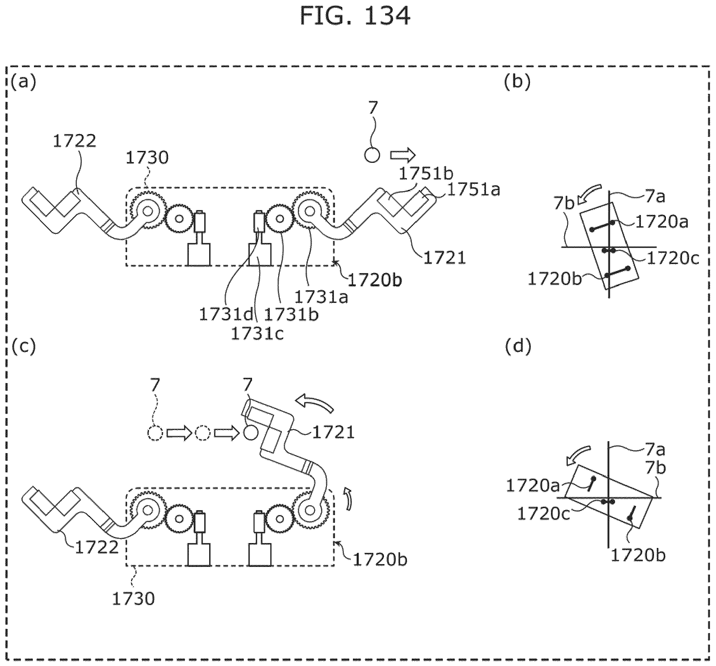

FIG. 134 includes a front view of connector 1720 of unmanned aerial vehicle 10k according to a variation according to Embodiment 17, illustrating an example of the switching of the connection of connector 1720 from first rail 7a to second rail 7b, and a schematic diagram illustrating an example of unmanned aerial vehicle 10k when viewed from above.

In (a) and (c) in FIG. 134, second connector 1720b is used as an example. In FIG. 134, (b) and (d) illustrate an example of unmanned aerial vehicle 10k rotated from the state in (e) in FIG. 133. As illustrated in (a) and (b) in FIG. 134, unmanned aerial vehicle 10k rotates counterclockwise by changing the attitude of a side propeller so that unmanned aerial vehicle 10k rotates horizontally and then rotating the side propeller.

As illustrated in (c) and (d) in FIG. 134, while unmanned aerial vehicle 10k is rotating counterclockwise, actuation controller 12 controls the actuators to actuate the one motor 1731c corresponding to first hook 1721 of first connector 1720a to rotate third gear 1731d, which rotates the one first gear 1731a via the one second gear 1731b. This consequently pivots first hook 1721 of first connector 1720a to position first hook 1721 to cover second rail 7b from above. While unmanned aerial vehicle 10k is rotating counterclockwise, actuation controller 12 controls the actuators to actuate the other motor 1731c corresponding to second hook 1722 of second connector 1720b to rotate third gear 1731d, which rotates the other first gear 1731a via the other second gear 1731b. This consequently pivots second hook 1722 of second connector 1720b to position second hook 1722 to cover second rail 7b from above.

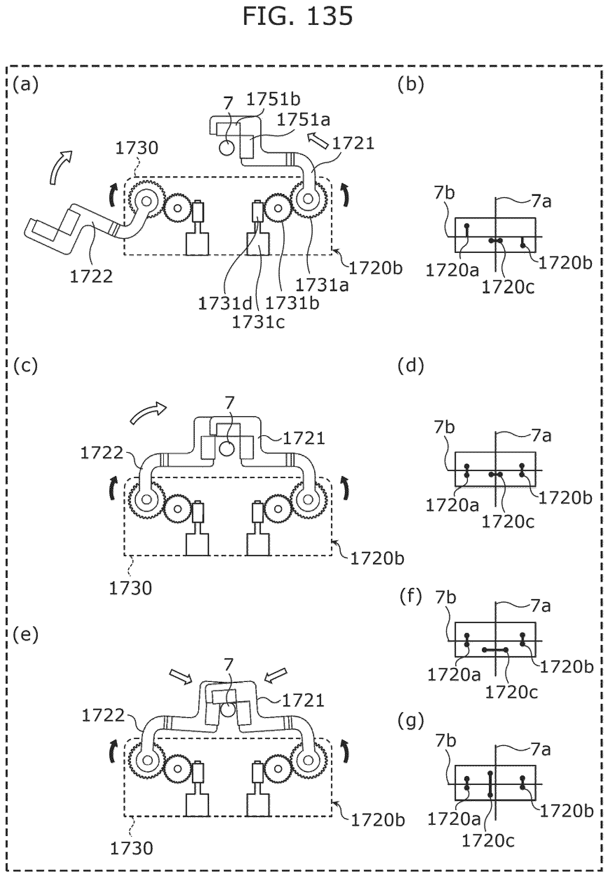

FIG. 135 is a front view of connector 1720 of unmanned aerial vehicle 10k according to a variation of Embodiment 17 when viewed from the front, illustrating an example of connecting connector 1720 to second rail 7b.

As illustrated in (a) and (b) in FIG. 135, unmanned aerial vehicle 10k rotates counterclockwise to an attitude where the lengthwise direction of unmanned aerial vehicle 10k is approximately parallel to the lengthwise direction of second rail 7b. In other words, unmanned aerial vehicle 10k rotates 90° from the state illustrated in (e) in FIG. 133.

In unmanned aerial vehicle 10k, actuation controller 12 controls the actuators to actuate the other motor 1731c corresponding to second hook 1722 of first connector 1720a to rotate third gear 1731d, which rotates the other first gear 1731a via the other second gear 1731b. This consequently pivots second hook 1722 of first connector 1720a to position second hook 1722 to cover second rail 7b from above, as illustrated in (c) and (d) in FIG. 135. In unmanned aerial vehicle 10k, actuation controller 12 controls the actuators to actuate the one motor 1731c corresponding to first hook 1721 of second connector 1720b to rotate third gear 1731d, which rotates the one first gear 1731a via the one second gear 1731b. This consequently pivots first hook 1721 of second connector 1720b to position first hook 1721 to cover second rail 7b from above.

As illustrated in (e) in FIG. 135, actuation controller 12 further pivots first hook 1721 and second hook 1722 by controlling the respective actuators of first connector 1720a and second connector 1720b. This causes first hook 1721 and second hook 1722 to push down on rail 7 so rail 7 it covered from vertically above. The axial directions of the axes of rotation of first rollers 1751a of first hook 1721 and second hook 1722 are each inclined at a predetermined angle relative to the horizontal direction.

As illustrated in (f) and (g) in FIG. 135, unmanned aerial vehicle 10k disconnects third connector 1720c from first rail 7a and rotates third connector 1720c 90° to connect third connector 1720c to second rail 7b.

First hook 1721 and second hook 1722 close, thus closing third connector 1720c and connecting third connector 1720c to second rail 7b.

### EMBODIMENT 18

### Configuration

Hereinafter, since the basic configuration of first thruster device 110a1 in the present embodiment is the same as the basic configuration of first thruster device 110a1 according to Embodiment 1 and the like, description of the first thruster device and the basic configuration thereof according to the present embodiment will be omitted where appropriate. The present embodiment differs from Embodiment 1 and the like in regard to first thruster device 110a1 being provided with first guide portion 1811.

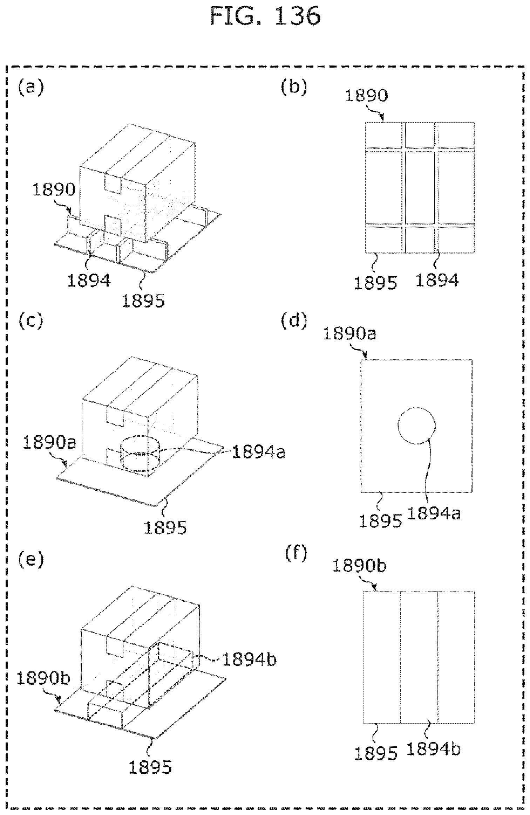

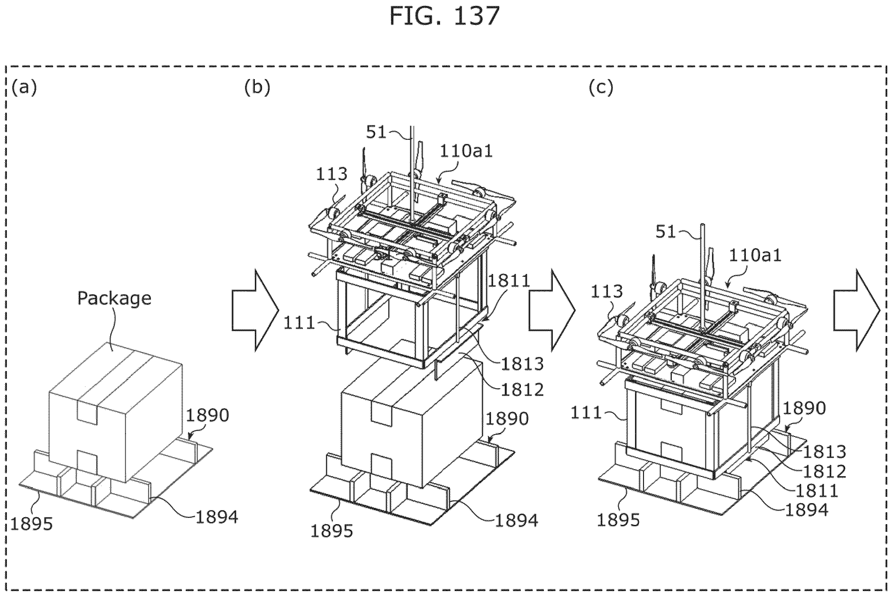

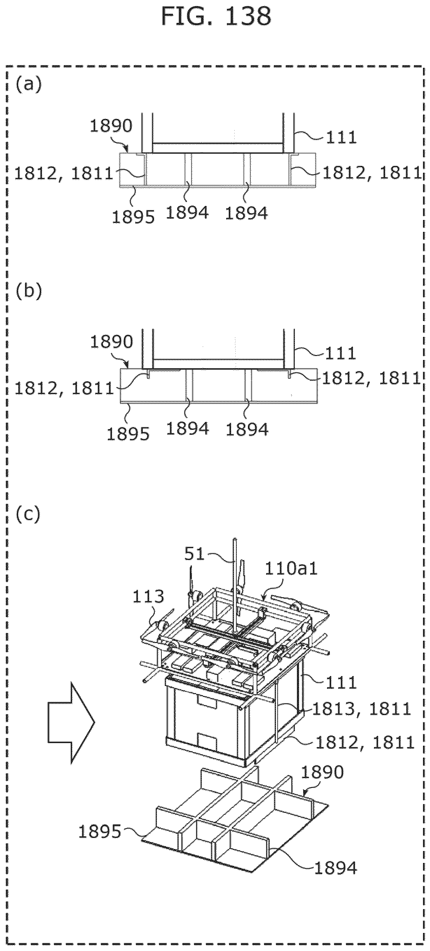

FIG. 136 is a perspective view of an example of platform 1890 included in the system according to Embodiment 18. FIG. 137 is a perspective view illustrating an example of how first thruster device 110a1 of the lifting system according to Embodiment 18 retrieves a package placed on platform 1890. FIG. 138 includes a side view illustrating an example of first thruster device 110a1 of the lifting system according to Embodiment 18 retrieving a package placed on platform 1890.

The system according to the present embodiment includes platform 1890 and a lifting system, as illustrated in FIG. 136 and FIG. 137.

Platform 1890 is a platform on which the lifting system places a package for delivery or transport. Platform 1890 includes bottom plate portion 1895 that is placed on the floor or ground surface etc., and package support portion 1894 that is formed on the upper surface of bottom plate portion 1895.

Package support portion 1894 is a protrusion protruding from bottom plate portion 1895. More specifically, as illustrated in (a) in FIG. 136, package support portion 1894 include of a plurality of plates arranged standing upright from the upper surface of bottom plate portion 1895. When package support portion 1894 is viewed from above, it is formed in a lattice pattern on bottom plate portion 1895. When package support portion 1894 is viewed from above, package support portion 1894 may be slatted. In platform 1890, package can be placed so as to be adjacent to the sides of package support portion 1894, which is made up of boards. Stated differently, the sides of package support portion 1894 correspond to a loading surface.

In platform 1890, since package support portion 1894 is lattice shaped, a space is formed for guiding first guide portion 1811 of first thruster device 110a1, that is, a gap is formed between the package and bottom plate portion 1895. The space is a recess where contact with first guide portion 1811 is avoided when first guide portion 1811 is displaced.

As illustrated in (b) and (c) in FIG. 136, package support portions 1894a and 1894b may be columnar or tubular portions that project from the upper surface of bottom plate portions 1895a and 1895b. In (b) in FIG. 136 b according to the present embodiment, bottom plate portion 1895a is exemplified as a cylinder-shaped columnar portion, and in (c) in FIG. 136, bottom plate portion 1895b is illustrated as a polygonal columnar portion, but the shapes of package support portions 1894a and 1894b are not limited as long as they are capable of supporting a package. The surface area of the bottom surface of the package in (b) and (c) in FIG. 136 is larger than the loading surface of package support portions 1894a and 1894b, which are in contact with that bottom surface.

Package support portion 1894 can be of any shape, as long as a space is formed between the bottom surface of the package and bottom plate portion 1895 where the package can be supported by rotational support portion 1812 of first guide portion 1811 rotating. Accordingly, the shape of package support portion 1894 is not limited to the shape illustrated in FIG. 136.

As illustrated in FIG. 137, first thruster device 110a1 further includes a pair of first guide portions 1811.

Each first guide portion 1811 includes first connecting portion 1813 and rotational support portion 1812.

First connecting portion 1813 is an elongated rod extending in the vertical direction that is provided along the side of first support member 111. The upper end of first connecting portion 1813 is coupled to an actuator provided in first thruster device 110a1, and the lower end of first connecting portion 1813 is coupled to rotational support portion 1812 provided in first thruster device 110a1. First connecting portion 1813 is actuated by the actuator of first thruster device 110a1 to impart a force for rotating rotational support portion 1812. First connecting portion 1813 is actuated by the actuator under control by thruster controller 124 of first thruster device 110a1 to rotate rotational support portion 1812 by applying stress to rotational support portion 1812 vertically upward and vertically downward.

As illustrated in (c) in FIG. 137 and (a) and (b) in FIG. 138, rotational support portion 1812 is located at the lower edge of first support member 111 of first thruster device 110a1 and rotates around a predetermined axis. Rotational support portion 1812 is an elongated component formed in an approximate L-shape when viewed from the side. Rotational support portion 1812 supports the bottom surface of the package by rotating around a predetermined axis to scoop up the package from below when retrieving it. Rotational support portion 1812 is displaced between a support state in which it can support the package and an unsupported state in which it does not support the package by rotating from the support state.

### Operations

As illustrated in (a) and (b) in FIG. 137, first thruster device 110a1 descends from the airspace above the package on platform 1890 and aligns itself with the package. After alignment, first thruster device 110a1 descends and inserts the package inside first support member 111.

As illustrated in (c) in FIG. 137, rotational support portion 1812 of first thruster device 110a1 is positioned between two adjacent package support portions 1894 in platform 1890. When positioning rotational support portion 1812, rotational support portion 1812 is guided by the two adjacent package support portions 1894, which adjusts the attitude of first support member 111 relative to the package.

Thruster controller 124 of first thruster device 110a1 detects that first thruster device 110a1 has been placed in a position where it can retrieve a package. For example, when thruster controller 124 obtains information indicating that first thruster device 110a1 has contacted the loading surface, it actuates the pair of first guide portions 1811 by controlling actuators in first thruster device 110a1. More specifically, as illustrated in (a) and (b) in FIG. 138, the pair of first connecting portions 1813 are actuated by actuators to impart a force for rotating the pair of rotational support portions 1812 in a one-to-one manner. Stated differently, the pair of first connecting portions 1813 apply stress in a vertically downward direction to the pair of rotational support portions 1812, causing the pair of rotational support portions 1812 to rotate around a predetermined axis. The pair of rotational support portions 1812 support the package from both sides of the bottom surface of the package by rotating in the space between the two adjacent package support portions 1894 and the package to scoop up the package. With this, first thruster device 110a1 supports the package.

As illustrated in (c) in FIG. 138, first thruster device 110a1 retrieves the package and ascends toward the unmanned aerial vehicle.

### VARIATION 1 OF EMBODIMENT 18

Hereinafter, since the basic configuration of first thruster device 110a2 according to the present variation is the same as the basic configuration of the first thruster device according to Embodiment 18 and the like, repeated description of the basic configuration of first thruster device 110a2 in the present variation will be omitted where appropriate. The present variation differs from Embodiment 18 and the like in regard to the shape of platform 1880 of the system. The present variation differs from Embodiment 18 and the like in regard to first thruster device 110a2 being further provided with second guide portion 1821.

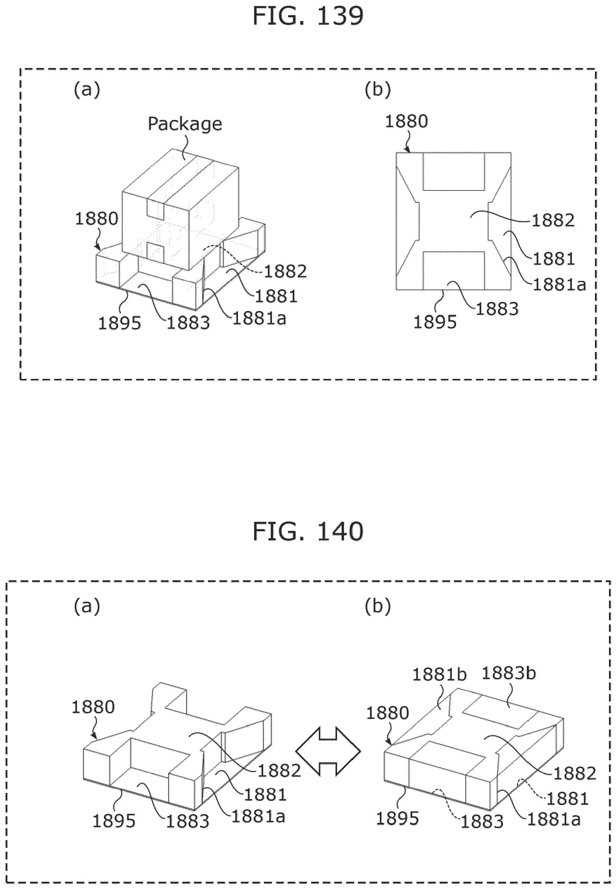

FIG. 139 includes a perspective view of an example of platform 1880 included in the system according to a variation of Embodiment 18, and a plan view of platform 1880. In FIG. 139, (a) illustrates a package placed on platform 1880, and (b) illustrates platform 1880 as viewed from vertically above.

As illustrated in (a) and (b) in FIG. 139, package support portion 1894 is a protrusion protruding from bottom plate portion 1895. The central portion of package support portion 1894 is formed to be large enough to support a package to be placed on it, and the upper surface of package support portion 1894 forms flat loading surface 1882 on which the package can be placed. As illustrated in (b) in FIG. 139, package support portion 1894 has an X-shape in plan view. Package support portion 1894 includes first notch 1883 and second notch 1881 for guiding first guide portion 1811 and second guide portion 1821 of first thruster device 110a2.

First notch 1883 corresponds to first guide portion 1811. First notch 1883 is a space for avoiding contact with first guide portion 1811 when first guide portion 1811 is displaced. The number of first notches 1883 corresponds to the number of first guide portions 1811, more specifically, first notches 1883 are provided to correspond one-to-one with first guide portions 1811. In the present embodiment, two first notches 1883 are formed in package support portion 1894.

Second notch 1881 corresponds to second guide portion 1821. Second notch 1881 is a space for avoiding contact with second guide portion 1821 when second guide portion 1821 is displaced. The number of second notches 1881 corresponds to the number of second guide portions 1821, more specifically, second notches 1881 are provided to correspond one-to-one with second guide portions 1821. In the present embodiment, two second notches 1881 are formed in package support portion 1894. Inner surface 1881a of second notch 1881 has a spindle or pyramidal shape that gradually narrows as it approaches the center portion of package support portion 1894. The smaller base end of inner surface 1881a of second notch 1881 (the center portion of package support portion 1894) is shaped in accordance with the shape of slide guide portion 1821b2 (described below) so that slide guide portion 1821b2 can be placed.

FIG. 140 is a perspective view of an example of platform 1880 included in the system according to a variation of Embodiment 18 changing shape. In FIG. 140, (a) illustrates a first state for when placing a package on platform 1880, and (b) illustrates a second state for when not placing a package on platform 1880 (i.e., when platform 1880 is not in use).

Platform 1880 further includes a plurality of movable floors 1881b for filling in first notch 1883 and second notch 1881. When platform 1880 is changed from the first state to the second state, the plurality of movable floors 1881b rise to fill in first notch 1883 and second notch 1881. The plurality of movable floors 1881b may be housed in bottom plate portion 1895.

If the package is to be collected, platform 1880 may include a gravity sensor or a pressure sensor or the like. Stated differently, when a package is loaded on loading surface 1882 of platform 1880, movable floor 1881b may be lowered to change platform 1880 from the second state to the first state by detecting the weight of the package.

When delivering a package, platform 1880 may be changed from the second state to the first state by lowering movable floor 1881b when it detects an unmanned aerial vehicle or first thruster device 110a2 stopped in the airspace above platform 1880. Platform 1880 may be changed from the second state to the first state by obtaining a signal from an unmanned aerial vehicle or first thruster device 110a2.

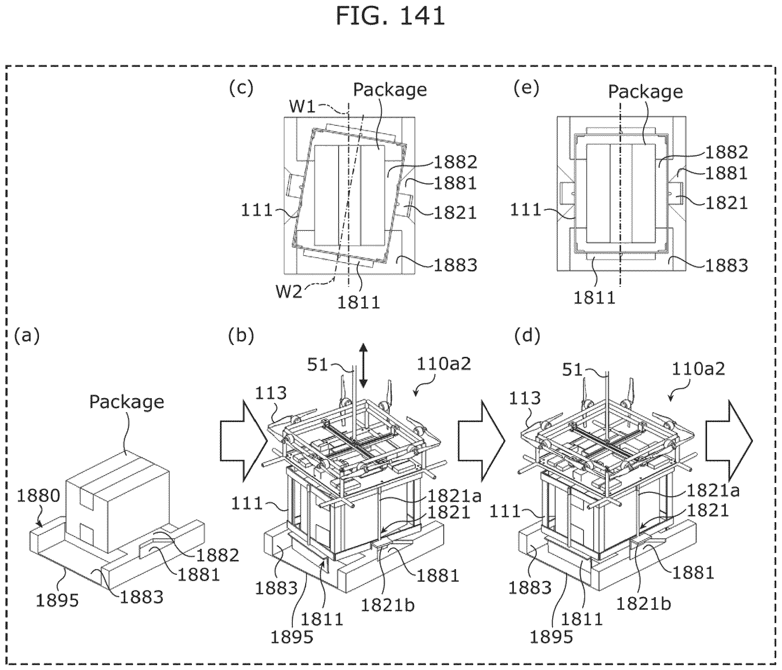

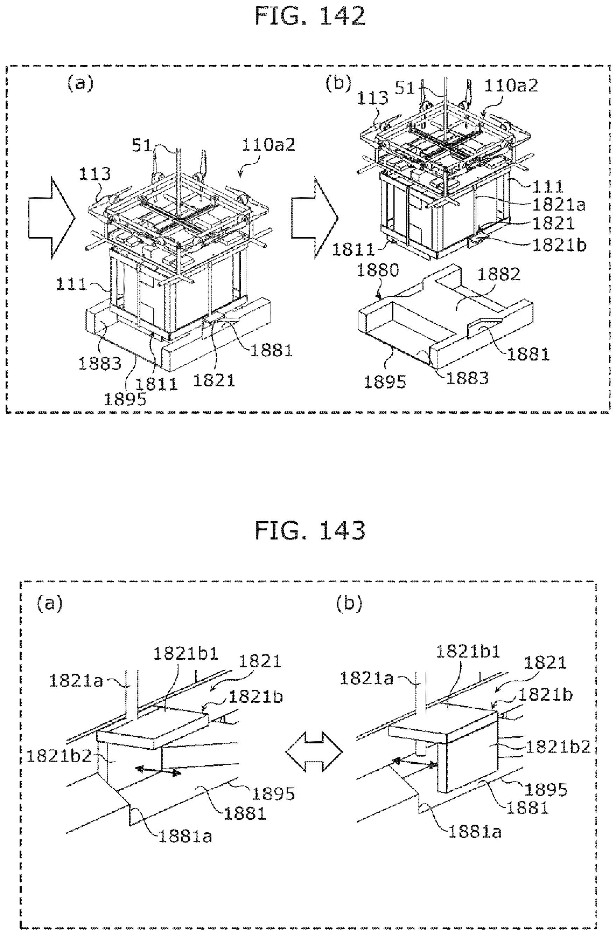

FIG. 141 is a perspective view illustrating an example of how first thruster device 110a2 of the lifting system according to Variation 1 of Embodiment 18 retrieves a package placed on platform 1880. FIG. 142 is a perspective view illustrating an example of how first thruster device 110a2 of the lifting system according to a variation of Embodiment 18 retrieves a package placed on platform 1880. FIG. 143 is a perspective view illustrating the movement of second guide portion 1821 of first thruster device 110a2 of the lifting system according to a variation of Embodiment 18.

As illustrated in FIG. 141 and FIG. 142, first thruster device 110a2 further includes a pair of second guide portions 1821.

Each second guide portion 1821 includes second connecting portion 1821a and slide portion 1821b.

Second connecting portion 1821a is an elongated rode extending in the vertical direction. The upper end of second connecting portion 1821a provided along the side of first support member 111 is coupled to an actuator included in first thruster device 110a2, and the lower end of second connecting portion 1821a is coupled to slide main body portion 1821b1 of slide portion 1821b included in first thruster device 110a2. Second connecting portion 1821a transfers a force for moving slide portion 1821b to slide main body portion 1821b1 when the actuator of first thruster device 110a2 is actuated.

As illustrated in (b) in FIG. 141 and (a) and (b) in FIG. 142, a pair of slide portions 1821b are arranged at the lower edge of first support member 111 of first thruster device 110a2 and move slide guide portion 1821b2 so as to sandwich the package.

More specifically, each slide portion 1821b includes slide main body portion 1821b1 and slide guide portion 1821b2.

Slide main body portion 1821b1 is an actuator that is positioned and fixed to the lower edge of first support member 111 and moves slide guide portion 1821b2 in the horizontal direction.

Slide guide portion 1821b2 is an upright plate-like component and can be moved by slide main body portion 1821b1 along the lower end surface of slide main body portion 1821b1. Slide guide portion 1821b2 is supported by slide main body portion 1821b1 in an upright attitude vertically below slide main body portion 1821b1, which is a plate-like component that is approximately parallel to the horizontal direction. The pair of slide guide portions 1821b2 approach the package so as to sandwich the package from both sides in order to correct the attitude of first support member 111 relative to the package placed on platform 1880 using slide main body portion 1821b1. Slide guide portion 1821b2 may be moved by slide main body portion 1821b1 so as to slide away from the package when disconnecting the package from first support member 111.

### Operations

As illustrated in (a) and (b) in FIG. 141, first thruster device 110a2 descends from the airspace above the package on platform 1880 and aligns itself with the package. After alignment, first thruster device 110a2 descends and inserts the package inside first support member 111.

As illustrated in (b) and (c) in FIG. 141, first thruster device 110a2 further finely adjusts its position relative to the package. In FIG. 141, (c) illustrates first thruster device 110a2 and a package as viewed from above. In FIG. 141, (c) shows that the lengthwise direction of first thruster device 110a2 is misaligned with the lengthwise direction of the package by a predetermined angle.

Thruster controller 124 of first thruster device 110a2 detects that first thruster device 110a2 has been placed in a position where it can retrieve a package. For example, when thruster controller 124 obtains information indicating that first thruster device 110a2 has contacted loading surface 1882, it actuates the slide portions 1821b of the pair of second guide portions 1821 as illustrated in (a) and (b) in FIG. 143 by controlling actuators in first thruster device 110a2. This causes the pair of slide guide portions 1821b2 to approach the package by slide main body portion 1821b1 so that the package is sandwiched from both sides. At this time, the pair of slide guide portions 1821b2 approach the package while sliding on inner surfaces 1881a (the side surfaces) of the pair of second notches 1881 formed in platform 1880. This adjusts the attitude of first support member 111 relative to the package, as illustrated in (d) and (e) in FIG. 141. In FIG. 141, (e) illustrates first thruster device 110a2 and a package as viewed from above. In FIG. 141, (e) shows that the lengthwise direction of first thruster device 110a2 is approximately parallel to the lengthwise direction of the package. Accordingly, with this first thruster device 110a2, the pair of first guide portions 1811 can properly support the package, whereby the package can be delivered safely.

Thruster controller 124 of first thruster device 110a2 detects that first thruster device 110a2 has been placed in a position where it can retrieve a package. For example, when thruster controller 124 obtains information indicating that first thruster device 110a2 has contacted loading surface 1882, it actuates the pair of first guide portions 1811 by controlling actuators in first thruster device 110a2. More specifically, as illustrated in (a) in FIG. 142, the pair of first connecting portions 1813 are actuated by actuators to impart a force for rotating the pair of rotational support portions 1812 in a one-to-one manner. Stated differently, the pair of first connecting portions 1813 apply stress in a vertically downward direction to the pair of rotational support portions 1812, causing the pair of rotational support portions 1812 to rotate around a predetermined axis. The pair of rotational support portions 1812 support the package from both sides of the bottom surface of the package by rotating in the space between the two adjacent package support portions 1894 and the package to scoop up the package. With this, first thruster device 110a2 supports the package.

As illustrated in (b) in FIG. 142, first thruster device 110a2 retrieves the package and ascends toward the unmanned aerial vehicle.

### VARIATION 2 OF EMBODIMENT 18

### Configuration

Hereinafter, since the basic configuration of first thruster device 110a3 according to the present variation is the same as the basic configuration of the first thruster device according to Variation 1 of Embodiment 18 and the like, repeated description of the basic configuration of first thruster device 110a3 in the present variation will be omitted where appropriate. The present variation differs from Variation 1 of Embodiment 18 and the like in regard to the configuration of second guide portion 1823.

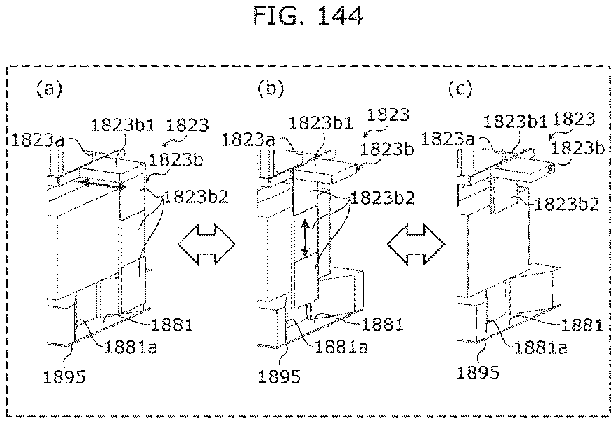

FIG. 144 is a perspective view illustrating the movement of second guide portion 1823 of first thruster device 110a3 of the lifting system according to Variation 2 of Embodiment 18. In FIG. 144, (a) illustrates a plurality of slide guide portions 1823b2 in an extended state and separated from the package, (b) illustrates the plurality of slide guide portions 1823b2 in an extended state and approaching the package, and (c) illustrates the plurality of slide guide portions 1823b2 in a collapsed state.

Each slide portion 1823b includes slide main body portion 1823b1 and a plurality of slide guide portions 1823b2.

As illustrated in (a) and (c) in FIG. 144, when first support member 111 approaches the space directly above the package, slide main body portion 1823b1 arranges the plurality of slide guide portions 1823b2 so that the plurality of slide guide portions 1823b2 are aligned connected end to end in the vertical direction. As illustrated in (b) in FIG. 144, the pair of slide main body portion 1823b1 move the plurality of slide guide portions 1823b2 to bring the plurality of slide guide portions 1823b2 closer to the package to sandwich the package from both sides. Here, slide guide portion 1823b2 located at the lowest end of the plurality of slide guide portions 1823b2 is located in the space defined by second notch section 1881 of platform 1880 to properly support the attitude of first support member 111 relative to the package.

### Operations

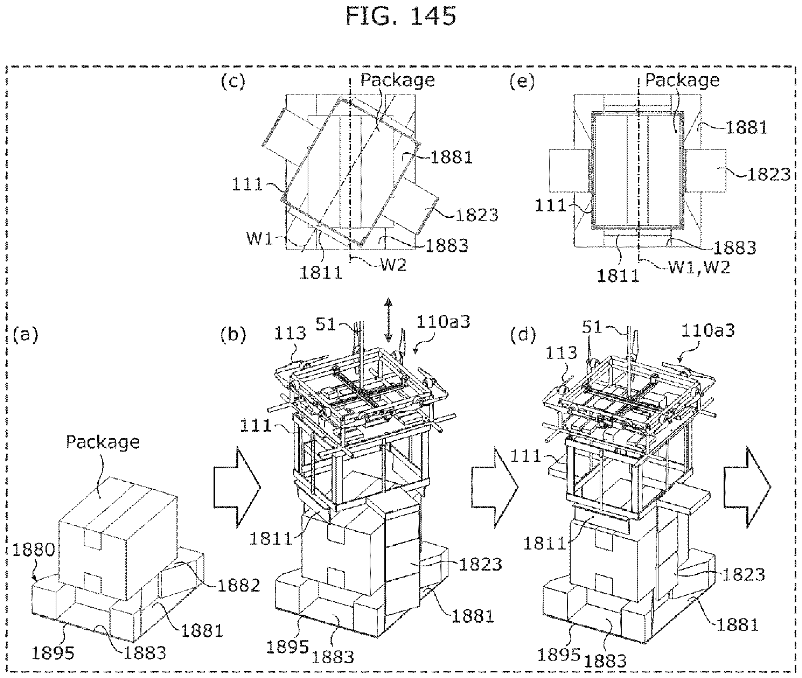

FIG. 145 is a perspective view illustrating an example of how first thruster device 110a3 of the lifting system according to Variation 2 of Embodiment 18 retrieves a package placed on platform 1880.

As illustrated in (a) and (b) in FIG. 145, first thruster device 110a3 descends from the airspace above the package on platform 1880 and aligns itself with the package. After alignment, first thruster device 110a3 descends and inserts the package inside first support member 111.

As illustrated in (b) and (c) in FIG. 145, first thruster device 110a3 further finely adjusts its position relative to the package. In FIG. 145, (c) illustrates first thruster device 110a3 and a package as viewed from above. In FIG. 145, (c) shows that the lengthwise direction of first thruster device 110a3 is misaligned with the lengthwise direction of the package by a predetermined angle.

Thruster controller 124 of first thruster device 110a3 detects that first thruster device 110a3 has been placed in a position where it can retrieve a package. For example, when thruster controller 124 obtains information indicating that first thruster device 110a3 has contacted loading surface 1882, it actuates the slide portions 1823b of the pair of second guide portions 1823 as illustrated in (e) and (d) in FIG. 145 by controlling actuators in first thruster device 110a3. This causes a pair of the plurality of slide guide portions 1823b2 to approach the package by slide main body portion 1823b1 so that the package is sandwiched from both sides. At this time, the pair of the plurality of slide guide portions 1823b2 that are located on the lowest end approach the package while sliding on inner surfaces 1881a (the side surfaces) of the pair of second notches 1881 formed in platform 1880. This adjusts the attitude of first support member 111 relative to the package, as illustrated in (e) in FIG. 145. In FIG. 145, (e) illustrates first thruster device 110a3 and a package as viewed from above. In FIG. 145, (e) shows that the lengthwise direction of first thruster device 110a3 is approximately parallel to the lengthwise direction of the package. Accordingly, with this first thruster device 110a3, the pair of first guide portions 1811 can properly support the package, whereby the package can be delivered safely.

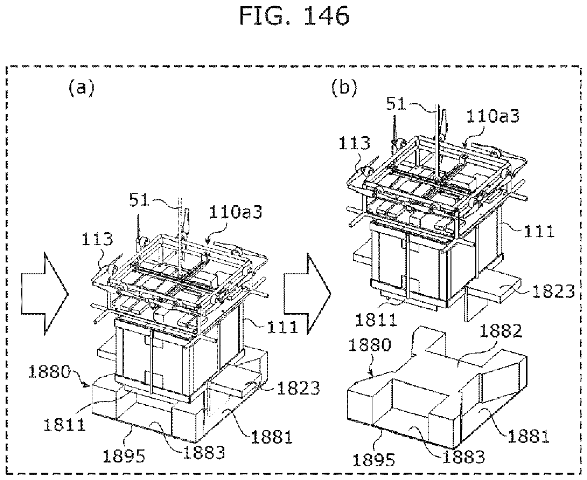

FIG. 146 is a perspective view illustrating an example of how first thruster device 110a3 of the lifting system according to Variation 2 of Embodiment 18 retrieves a package placed on platform 1880.

As illustrated in (a) in FIG. 146, first thruster device 110a3 descends and slide main body portion 1823b1 folds the plurality of slide guide portions 1823b2 to collapse them together as one. Thruster controller 124 of first thruster device 110a3 detects that first thruster device 110a3 has been placed in a position where it can retrieve a package. For example, when thruster controller 124 obtains information indicating that first thruster device 110a3 has contacted loading surface 1882, it actuates the pair of first guide portions 1811 by controlling actuators in first thruster device 110a3. More specifically, the pair of connecting portions are actuated by actuators to impart a force for rotating the pair of rotational support portions 1812 in a one-to-one manner. Stated differently, the pair of connecting portions apply stress in a vertically downward direction to the pair of rotational support portions 1812, causing the pair of rotational support portions 1812 to rotate around a predetermined axis. The pair of rotational support portions 1812 support the package from both sides of the bottom surface of the package by rotating in the space between the two adjacent package support portions 1894 and the package to scoop up the package. With this, first thruster device 110a3 supports the package.

As illustrated in (b) in FIG. 146, first thruster device 110a3 retrieves the package and ascends toward the unmanned aerial vehicle.

### EMBODIMENT 19

### Configuration

Hereinafter, since the basic configuration of unmanned aerial vehicle 10m according to the present embodiment is the same as the basic configuration of the unmanned aerial vehicle according to Embodiment 16 and the like, repeated description of the basic configuration of unmanned aerial vehicle 10m in the present embodiment will be omitted where appropriate.

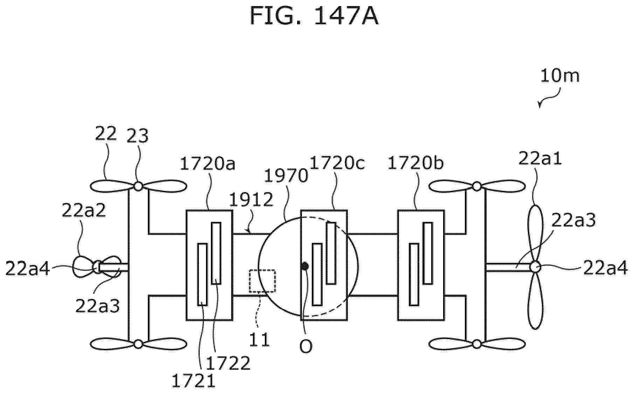

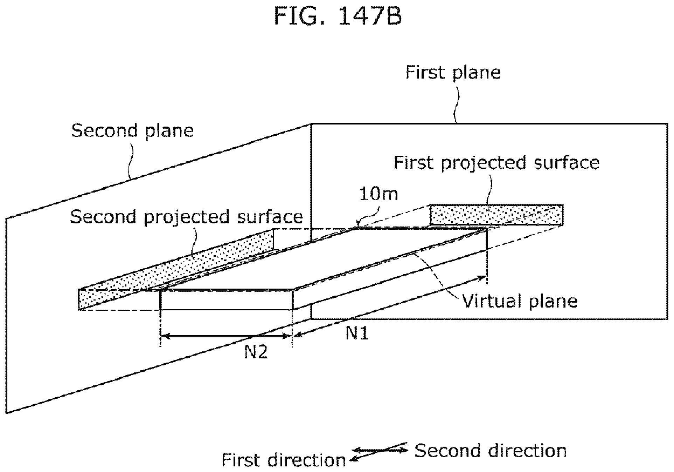

FIG. 147A is a schematic diagram illustrating an example of unmanned aerial vehicle 10m according to Embodiment 19. FIG. 147B is a schematic diagram illustrating an example of a first projected surface and a second projected surface and the like of unmanned aerial vehicle 10m according to Embodiment 19.

As illustrated in FIG. 147A and FIG. 147B, first length N1 of vehicle main body 1912 in a first direction is longer than second length N2 of vehicle main body 1912 in a second direction approximately orthogonal to the first direction. The first direction is parallel to the direction of travel of unmanned aerial vehicle 10m. In the present embodiment, when unmanned aerial vehicle 10m is moving along first rail 7a, the first direction is parallel to the lengthwise direction of first rail 7a. Vehicle main body 1912 is therefore elongated in the lengthwise direction of first rail 7a. Vehicle main body 1912 is one example of the main body.

Since vehicle main body 1912 is elongated in a direction approximately parallel to the first direction, a first surface area of a first minimum rectangle that circumscribes the first projected surface (indicated by dotted shading) formed by projecting unmanned aerial vehicle 10m onto a first plane whose normal vector extends in the first direction is smaller than a second surface area of a second minimum rectangle that circumscribes the second projected surface (indicated by dotted shading) formed by projecting unmanned aerial vehicle 10m onto a second plane whose normal vector extends in the second direction. In other words, since the thickness of vehicle main body 1912 remains the same in both the first plane and the second plane, so long as the widthwise length of unmanned aerial vehicle 10m projected on the first plane is shorter than the traveling direction length of unmanned aerial vehicle 10m projected on the second plane, the first surface area will be smaller than the second surface area.

Unmanned aerial vehicle 10m also includes a plurality of propellers 22, a plurality of first propeller actuation motors 23, at least one side propeller 22a1, at least one third propeller actuation motor 22a3, control processor 11, at least one connector, and connector support portion 1970.

The plurality of propellers 22 are positioned in a virtual plane parallel to the first and second directions. The plurality of propellers 22 include first propeller 22, second propeller 22 adjacent to first propeller 22 in the second direction, third propeller 22 adjacent to first propeller 22 in the first direction, and fourth propeller 22 adjacent to second propeller 22 in the first direction and adjacent to third propeller 22 in the second direction. For example, first propeller 22 and second propeller 22 are the two propellers 22 disposed on the front of vehicle main body 1912. Third propeller 22 and fourth propeller 22 are the two propellers 22 disposed on the rear of vehicle main body 1912. Since vehicle main body 1912 is elongated in a direction approximately parallel to the first direction, a first distance between first propeller 22 and second propeller 22 is shorter than a second distance between first propeller 22 and third propeller 22. Propeller 22 is one example of the main rotary wing.

The plurality of first propeller actuation motors 23 are provided in vehicle main body 1912 and respectively rotate the plurality of propellers 22. First propeller actuation motor 23 is one example of the main motor.

The at least one connector can be hung from at least one rail spaced apart from the ground surface. Unmanned aerial vehicle 10m according to the present embodiment includes three connectors provided on vehicle main body 1912. The three connectors are the same as first connector 1720a, second connector 1720b, and third connector 1720c according to Embodiment 17 and the like, but connectors from another embodiment may be used. The three connectors are aligned in the lengthwise direction of the rail. First connector 1720a is offset in the first direction from the center of vehicle main body 1912. Second connector 1720b is offset in the direction opposite the first direction from the center of vehicle main body 1912. Third connector 1720c is disposed between first connector 1720a and second connector 1720b, and is located near the center of vehicle main body 1912. In the present embodiment, third connector 1720c is offset toward the rear from center point O (the center) of vehicle main body 1912. In other words, in the present embodiment, third connector 1720c is not located on center point O, but may be located on center point O.

The connector is one example of the connecting device. First connector 1720a is one example of the first connecting device, second connector 1720b is one example of the second connecting device, and third connector 1720c is one example of the third connecting device.

First connector 1720a, second connector 1720b, and third connector 1720c each include first hook 1721 and second hook 1722. First hook 1721 is one example of the first arm, and second hook 1722 is one example of the second arm.

The at least one third propeller actuation motor 22a3 is provided on vehicle main body 1912 and rotates the at least one side propeller. In the present embodiment, third propeller actuation motors 22a3 are provided on the front and rear side surfaces of vehicle main body 1912. Accordingly, the front third propeller actuation motor 22a3 propels the front side propeller 22a2. The front side propeller 22a2 is disposed in a position corresponding to the rear side propeller 22a1 in the first direction, and is a propeller for rotating vehicle main body 1912. Side propeller 22a2 uses propulsive force to change traveling direction of unmanned aerial vehicle 10m. In order for the rear third propeller actuation motor 22a3 to propel vehicle main body 1912 in the first direction, rotary shaft 22a4 of third propeller actuation motor 22a3 extends in the first direction and rotates the rear side propeller 22a1. Rotary shaft 22a4 of at least the front third propeller actuation motor 22a3 has an angle of inclination relative to the first direction that is variable in a plane whose normal vector extends in the second direction, as illustrated in FIG. 82 and FIG. 100. The rear third propeller actuation motor 22a3 is one example of the auxiliary motor. Side propeller 22a1 is one example of the auxiliary rotary wing. Note that side propeller 22a2 may be one example of the auxiliary rotary wing, and in such cases, the front third propeller actuation motor 22a3 may be one example of the auxiliary motor.

The at least one side propeller provides propulsion force for propelling vehicle main body 1912 in the first direction. In the present embodiment, the side propeller is the rear side propeller 22a1, which is a propeller disposed on the rear of vehicle main body 1912. Side propeller 22a1 is rotated by the rear third propeller actuation motor 22a3. Note that the front side propeller 22a2 may provide propulsion force for propelling vehicle main body 1912 in the first direction.

Control processor 11 controls elements included in vehicle main body 1912. For example, control processor 11 controls the plurality of first propeller actuation motors 23 and the at least one third propeller actuation motor 22a3. Control processor 11 may also control, for example, first connector 1720a, second connector 1720b, and third connector 1720c. Control processor 11 is one example of the control circuit.

At the intersection of first rail 7a and second rail 7b, control processor 11 determines whether or not first connector 1720a has approached second rail 7b when unmanned aerial vehicle 10m switches (connection) from first rail 7a to second rail 7b. Stated differently, control processor 11 determines whether the distance between second rail 7b and first connector 1720a is less than a predetermined distance.

When control processor 11 determines that first connector 1720a has approached second rail 7b, it detaches first connector 1720a from first rail 7a and propels unmanned aerial vehicle 10m in the first direction by rotating side propeller 22a2. In other words, if the distance between second rail 7b and first connector 1720a is less than a predetermined distance, control processor 11 opens first connector 1720a to disconnect first connector 1720a from first rail 7a, and then controls the rear third propeller actuation motor 22a3 to rotate side propeller 22a1 and propel unmanned aerial vehicle 10m forward.

Control processor 11 determines whether or not first connector 1720a has passed second rail 7b, and if control processor 11 determines that first connector 1720a has passed second rail 7b, control processor 11 detaches second connector 1720b from first rail 7a, rotates unmanned aerial vehicle 10m so that the first direction of unmanned aerial vehicle 10m is parallel to the direction in which second rail 7b extends, and then connects first connector 1720a and second connector 1720b to second rail 7b. Stated differently, control processor 11 determines whether or not first connector 1720a has passed vertically below second rail 7b, and after first connector 1720a has passed vertically below second rail 7b, opens first connector 1720a and second connector 1720b to disconnect them from first rail 7a, rotates vehicle main body 1912, and then connects first connector 1720a and second connector 1720b to second rail 7b.

When control processor 11 determines that first connector 1720a has passed second rail 7b, control processor 11 connects first connector 1720a to first rail 7a, and determines whether the center of gravity of unmanned aerial vehicle 10m is balanced or not. In other words, when first connector 1720a has passed second rail 7b, control processor 11 determines whether there is a problem with the balance of the center of gravity (the attitude) of vehicle main body 1912.

When control processor 11 determines that the center of gravity of unmanned aerial vehicle 10m is balanced, control processor 11 detaches first connector 1720a and second connector 1720b from first rail 7a, rotates unmanned aerial vehicle 10m so that the first direction of unmanned aerial vehicle 10m is parallel to the direction in which second rail 7b extends, and then connects first connector 1720a and second connector 1720b to second rail 7b. In other words, when there is no problem with the balance of the center of gravity (the attitude) of vehicle main body 1912, control processor 11 opens first connector 1720a and second connector 1720b to disconnect them from first rail 7a, rotates vehicle main body 1912, and then connects first connector 1720a and second connector 1720b to second rail 7b.

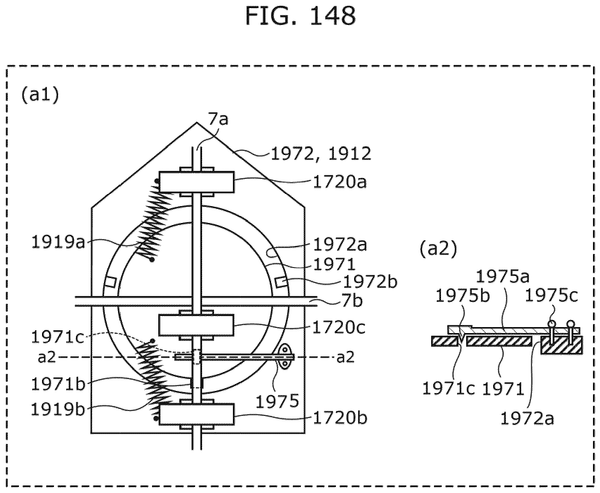

FIG. 148 includes a schematic diagram illustrating an example of connector support portion 1970 and ratchet 1975 of unmanned aerial vehicle 10m according to Embodiment 19, and a cross-sectional view of a cross section of connector support portion 1970 and ratchet 1975.

With unmanned aerial vehicle 10m according to the present embodiment, as illustrated in FIG. 148, the front side propeller 22a2 of vehicle main body 1912 applies stress for rotating second fixed portion 1972 (for rotating vehicle main body 1912) relative to first fixed portion 1971. The rear side propeller 22a1 of vehicle main body 1912 applies stress for moving vehicle main body 1912 forward. Each of the front and rear side propellers 22a1 of vehicle main body 1912 may apply stress that causes vehicle main body 1912 to rotate, and may apply stress that cause vehicle main body 1912 to move forward.

Connector support portion 1970 is disposed between third connector 1720c and vehicle main body 1912. Connector support portion 1970 includes first fixed portion 1971, second fixed portion 1972, a plurality of rollers, ratchet 1975, and tension springs 1919a and 1919b. First fixed portion 1971 and second fixed portion 1972 are arranged so as to overlap in this order.

Third connector body 1720c is fixed to first fixed portion 1971. More specifically, first fixed portion 1971 is a plate-like component that fixes third connector body 1720c on its upper surface and is positioned separated from vehicle main body 1912. First fixed portion 1971 rotates around an axis parallel to the vertical direction (i.e., around center point O) with respect to vehicle main body 1912 and second fixed portion 1972. First fixed portion 1971 is one example of the turntable.

Second fixed portion 1972 fixed to vehicle main body 1912 so as to overlap first fixed portion 1971. Second fixed portion 1972 is a plate-like component fixed to vehicle main body 1912. Second fixed portion 1972 is one example of the turntable.

Engagement hole 1972a is formed in the central portion of second fixed portion 1972. Part or all of first fixed portion 1971 is arranged in engagement hole 1972a of second fixed portion 1972. First fixed portion 1971 and engagement hole 1972a of second fixed portion 1972 are circular in plan view. Since the outer surface of first fixed portion 1971 and the inner surface of engagement hole 1972a of second fixed portion 1972 are separated by a predetermined distance, first fixed portion 1971 can be rotated relative to engagement hole 1972a of second fixed portion 1972. The center axis (center point O) of first fixed portion 1971 and the center axis of engagement hole 1972a of second fixed portion 1972 are approximately aligned.

Note that as engagement hole 1972a, a recess may be formed in the central portion of second fixed portion 1972 instead of a through-hole, and a through-hole or recess may be formed to engage first fixed portion 1971.

An annular groove may be formed in the central portion of each of first fixed portion 1971 and second fixed portion 1972. The annular grooves are formed on the inner circumference or outer circumference of first fixed portion 1971 and engagement hole 1972a of second fixed portion 1972. The plurality of rollers may be arranged along the annular grooves formed in the central portions of first fixed portion 1971 and second fixed portion 1972. The plurality of rollers may be sandwiched between first fixed portion 1971 and second fixed portion 1972, and second fixed portion 1972 may be rotated with respect to first fixed portion 1971, like a bearing.

One convex rotation stopping portion 1971b protruding toward second fixed portion 1972 is formed on the outer peripheral surface of first fixed portion 1971. Two convex rotation stopping portions 1972b protruding toward first fixed portion 1971 are formed on the inner peripheral surface of engagement hole 1972a of second fixed portion 1972. The two rotation stopping portions 1972b of engagement hole 1972a of second fixed portion 1972 are positioned to have point symmetry about the central axis of engagement hole 1972a of second fixed portion 1972.

In any embodiment, not just the present embodiment, two or more rotation stopping portions 1971b may be formed on first fixed portion 1971, and one or three or more rotation stopping portions 1972b may be formed on second fixed portion 1972.

Even if second fixed portion 1972 pivots around the central axis of engagement hole 1972a, the pivoting of second fixed portion 1972 is restricted by the contact of rotation stopping portion 1972b of second fixed portion 1972 with rotation stopping portion 1971b of first fixed portion 1971. Stated differently, second fixed portion 1972 is pivotably adjustable by a specified angle relative to first fixed portion 1971.

Engagement portion 1971c for engaging ratchet 1975 is formed in first fixed portion 1971. Engagement portion 1971c is a recess for engaging the protrusion of ratchet 1975, but it may be a protrusion. Engagement portion 1971c is formed on the upper surface of first fixed portion 1971 where third connector 1720c is located, but may be formed on the outer peripheral surface of first fixed portion 1971. In such cases, ratchet 1975 may be fixed to second fixed portion 1972 so that it presses against the outer peripheral surface of first fixed portion 1971. In such cases, engagement portion 1971c may be formed on the outer peripheral surface of first fixed portion 1971.

Ratchet 1975 is fixed to second fixed portion 1972. More specifically, ratchet 1975 includes plate spring 1975a, engagement receiving portion 1975b, and fastening portion 1975c. Plate spring 1975a has an elongated shape and is positioned so as to extend from second fixed portion 1972 across to first fixed portion 1971. One end of plate spring 1975a is fixed to second fixed portion 1972 by fastening portion 1975c so that the other end is biased against the upper surface of first fixed portion 1971. Engagement receiving portion 1975b engages with engagement portion 1971c formed in first fixed portion 1971 by being biased by first fixed portion 1971. Engagement receiving portion 1975b is a protruding portion fixed to one end of plate spring 1975a that protrudes toward the upper surface of first fixed portion 1971. Note that if engagement portion 1971c of first fixed portion 1971 is a protrusion, engagement receiving portion 1975b is a recess that recedes away from the upper surface of first fixed portion 1971. In the present embodiment, engagement receiving portion 1975b has the shape of an isosceles triangle, but engagement receiving portion 1975b may have the shape of a right-angled triangle, a cylinder, or a prism. In the present embodiment, engagement receiving portion 1975b has a sloping surface. The sloping surface is a surface inclined with respect to a plane perpendicular to the circumferential direction in which second fixed portion 1972 pivots, to enable one end of ratchet 1975 to be pushed upward when second fixed portion 1972 pivots with respect to first fixed portion 1971. In engagement receiving portion 1975b, the surface opposite to the surface on which the sloping surface is formed may be an approximately parallel surface to the direction orthogonal to the lengthwise direction of plate spring 1975a (i.e., the second direction). Fastening portion 1975c is a screw, bolt, etc., that fastens plate spring 1975a to second fixed portion 1972.

When second fixed portion 1972 pivots with respect to first fixed portion 1971 when engagement receiving portion 1975b of ratchet 1975 is engaged with engagement portion 1971c of first fixed portion 1971, the rotational force of second fixed portion 1972 causes engagement portion 1971c of first fixed portion 1971 to slide down the sloping surface of 1engagement receiving portion 1975b of ratchet 1975. When the rotational force of second fixed portion 1972 overcomes the force exerted by plate spring 1975a of ratchet 1975, engagement receiving portion 1975b of ratchet 1975 separates from engagement portion 1971c of first fixed portion 1971, and the engagement between engagement receiving portion 1975b of ratchet 1975 and engagement portion 1971c of first fixed portion 1971 is released. Here, the tip of engagement receiving portion 1975b of ratchet 1975 slides along the upper surface of first fixed portion 1971.

Tension springs 1919a and 1919b are connected to first fixed portion 1971 and vehicle main body 1912 (or second fixed portion 1972). In the present embodiment, each of the two tension springs 1919a and 1919b is connected to first fixed portion 1971 and vehicle main body 1912. More specifically, one end of tension spring 1919a (hereafter referred to as front tension spring 1919a) is coupled to the front of first fixed portion 1971, and the other end of tension spring 1919a is coupled to the front of vehicle main body 1912. One end of tension spring 1919b (hereafter referred to as the rear tension spring) is coupled to the rear of first fixed portion 1971, and the other end of tension spring 1919b is coupled to the rear of vehicle main body 1912.

Looking at unmanned aerial vehicle 10m from above, when second fixed portion 1972 pivots (when vehicle main body 1912 pivots) clockwise relative to first fixed portion 1971, the connection point between one end of front tension spring 1919a and first fixed portion 1971 and the connection point between the other end of front tension spring 1919a and vehicle main body 1912 separate, increasing the distance therebetween. Front tension spring 1919a is thus stretched. The connection point of the one end of rear tension spring 1919b and first fixed portion 1971 and the connection point of the other end of rear tension spring 1919b and vehicle main body 1912 come closer together, reducing the distance therebetween. Front tension spring 1919a therefore contracts.

Looking at unmanned aerial vehicle 10m from above, when second fixed portion 1972 pivots (when vehicle main body 1912 pivots) counterclockwise relative to first fixed portion 1971, the connection point between one end of front tension spring 1919a and first fixed portion 1971 and the connection point between the other end of front tension spring 1919a and vehicle main body 1912 come closer together, reducing the distance therebetween. Front tension spring 1919a therefore contracts. The connection point of the one end of rear tension spring 1919b and first fixed portion 1971 and the connection point of the other end of rear tension spring 1919b and vehicle main body 1912 separate far apart, increasing the distance therebetween. Rear tension spring 1919b is thus stretched.

### Operation Example 1

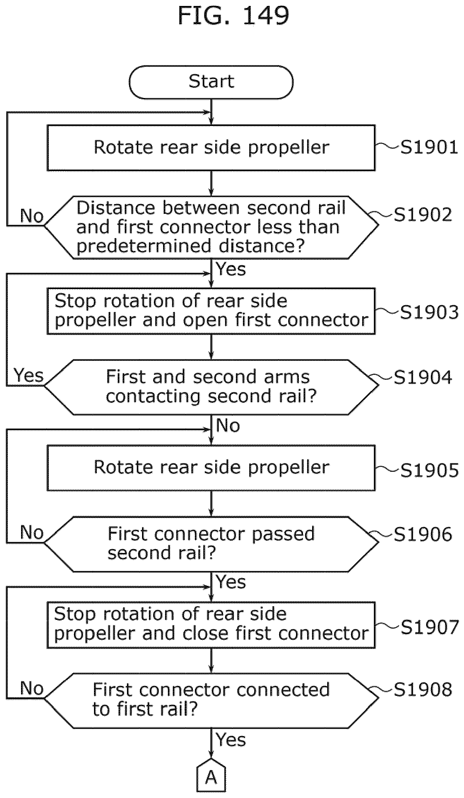

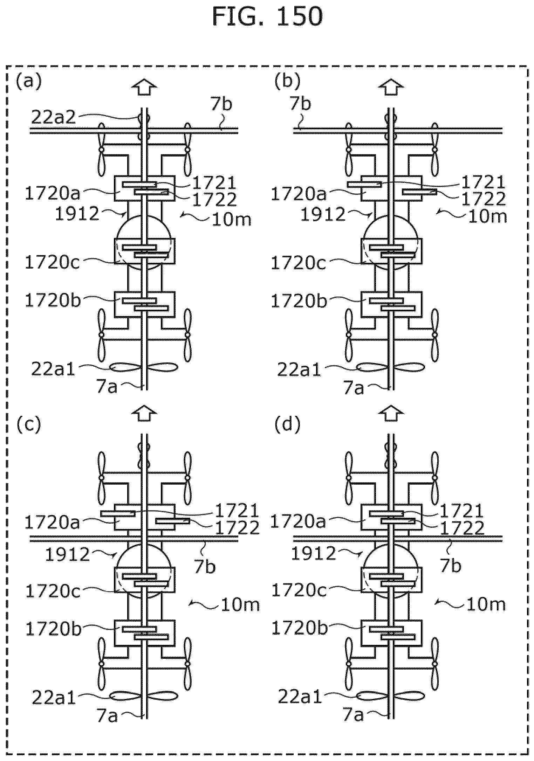

First, an example where unmanned aerial vehicle 10m changes course from first rail 7a to second rail 7b, as illustrated in FIG. 149 and FIG. 150, will be given.

FIG. 149 is a flowchart illustrating an example of operations performed when first connector 1720a of unmanned aerial vehicle 10m according to Embodiment 19 passes second rail 7b. FIG. 150 is a schematic diagram illustrating an example of the operations illustrated in FIG. 149 that are performed by unmanned aerial vehicle 10m. FIG. 150 illustrates an example of unmanned aerial vehicle 10m according to Embodiment 19 coupling to second rail 7b from first rail 7a.

Unmanned aerial vehicle 10m travels along first rail 7a by rotating side propeller 22a1 (S1901). Control processor 11 determines whether the distance between second rail 7b and first connector 1720a is less than a predetermined distance (S1902). If the distance between second rail 7b and first connector 1720a is greater than or equal to the predetermined distance (NO in S1902), control processor 11 returns to step S1901.

If the distance between second rail 7b and first connector 1720a is less than the predetermined distance (YES in S1902), control processor 11 pivots first hook 1721 and second hook 1722 of first connector 1720a to open first connector 1720a since first connector 1720a is located within a close distance to second rail 7b. Here, control processor 11 stops rotation of side propeller 22a1 by controlling the rear third propeller actuation motor 22a3 for rotating side propeller 22a1 (S1903). This stops the traveling of unmanned aerial vehicle 10m.

Control processor 11 determines whether first connector 1720a is positioned vertically lower than second rail 7b, to prevent contact between first connector 1720a and second rail 7b in the open state. Stated differently, control processor 11 determines whether first hook 1721 and second hook 1722 of first connector 1720a contact second rail 7b (S1904).

If first hook 1721 and second hook 1722 of first connector 1720a contact second rail 7b (YES in S1904), control processor 11 returns the process to step S1903. If first hook 1721 and second hook 1722 of first connector 1720a do not contact second rail 7b (NO in S1904), control processor 11 rotates side propeller 22a1 by controlling the rear third propeller actuation motor 22a3 (S1905). This causes unmanned aerial vehicle 10m to move forward.

Control processor 11 determines whether first connector 1720a has passed vertically below second rail 7b (S1906).

If first connector 1720a has not passed vertically below second rail 7b (NO in S1906), control processor 11 returns the process to step S1905. If first connector 1720a has passed vertically below second rail 7b (YES in S1906), control processor 11 stops rotation of side propeller 22a1 by controlling the rear third propeller actuation motor 22a3. This causes unmanned aerial vehicle 10m to stop traveling. Control processor 11 also pivots first hook 1721 and second hook 1722 of first connector 1720a to close first connector 1720a (S1907).

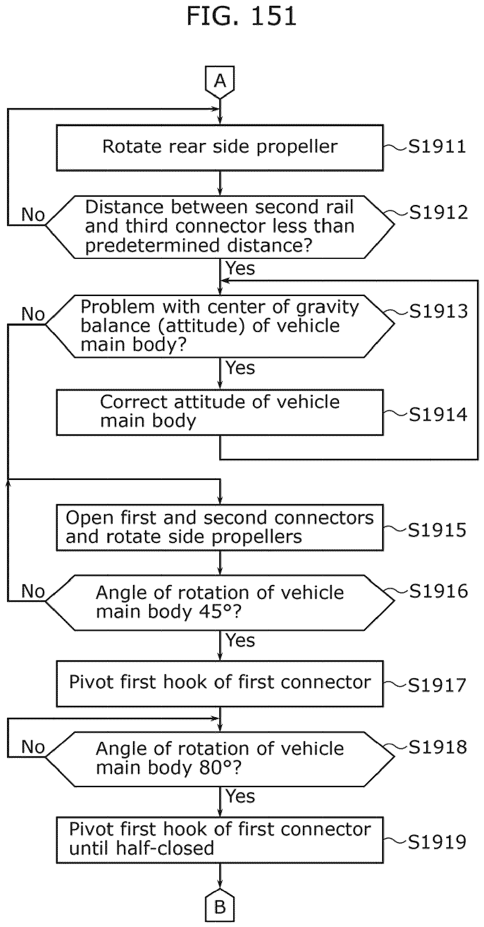

Control processor 11 determines whether the closed first connector 1720a has connected to first rail 7a (S1908). If the closed first connector 1720a is not connected to first rail 7a (NO in S1908), control processor 11 rotates side propellers 22a1 and 22a2 to correct the attitude of vehicle main body 1912 and/or opens first connector 1720a to allow connection of first connector 1720a to first rail 7a, and returns the process to step S1907. If the closed first connector 1720a is connected to first rail 7a (YES in S1908), control processor 11 proceeds to A in FIG. 151.

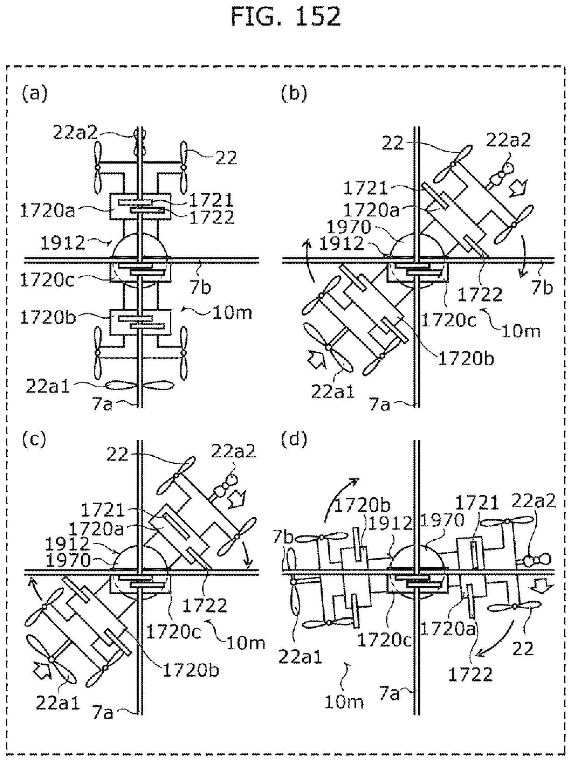

FIG. 151 is a flowchart illustrating an example of operations performed when vehicle main body 1912 of unmanned aerial vehicle 10m according to Embodiment 19 rotates. FIG. 152 is a schematic diagram illustrating an example of the operations illustrated in FIG. 151 that are performed by unmanned aerial vehicle 10m.

As illustrated in FIG. 151 and FIG. 152, control processor 11 rotates side propeller 22a1 by controlling the rear third propeller actuation motor 22a3 (S1911). This causes unmanned aerial vehicle 10m to move forward.

Control processor 11 determines whether the distance between second rail 7b and third connector 1720c is less than a predetermined distance (S1912). If the distance between second rail 7b and third connector 1720c is greater than or equal to the predetermined distance (NO in S1912), control processor 11 returns to step S1911.

If the distance between second rail 7b and third connector 1720c is less than the predetermined distance (YES in S1912), control processor 11 determines whether there is a problem with the balance of the center of gravity (attitude) of vehicle main body 1912, that is, whether vehicle main body 1912 is inclined at a predetermined angle or more with respect to the horizontal plane (S1913). If vehicle main body 1912 is inclined at the predetermined angle or more with respect to the horizontal plane, that is, if there is a problem with the balance of the center of gravity (attitude) of vehicle main body 1912 (YES in S1913), control processor 11 corrects the attitude of vehicle main body 1912. More specifically, control processor 11 corrects the attitude of vehicle main body 1912 by rotating propellers 22 via the respective propeller control modules of vehicle main body 1912 so that vehicle main body 1912 is approximately parallel to the horizontal plane (S1914). Processing then returns to step S1913.

When vehicle main body 1912 is inclined at less than the predetermined angle with respect to the horizontal plane, that is, when there is no problem with the balance of the center of gravity (attitude) of vehicle main body 1912 (NO in S1913), control processor 11 opens first connector 1720a and second connector 1720b. Control processor 11 then rotates side propellers 22a1 and 22a2 by controlling the respective front and rear third propeller actuation motors 22a3 (S1915). This causes unmanned aerial vehicle 10m to rotate approximately about third connector 1720c so that third connector 1720c is held by second rail 7b.

Control processor 11 determines whether the angle of rotation of vehicle main body 1912 has reached 45° (S1916). The angle of rotation is the angle in the lengthwise direction in which vehicle main body 1912 has rotated relative to the lengthwise direction of the state of vehicle main body 1912 at the time vehicle main body 1912 begins to rotate.

Control processor 11 returns to step S1915 if the angle of rotation of vehicle main body 1912 has not reached 45° (NO in S1916). When the angle of rotation of vehicle main body 1912 reaches 45° (YES in S1916), control processor 11 pivots first hook 1721 of first connector 1720a (S1917). At this time, rail 7 and first hook 1721 of first connector 1720a will not contact each other even if vehicle main body 1912 rotates.

Control processor 11 determines whether the angle of rotation of vehicle main body 1912 has reached 80° (S1918).

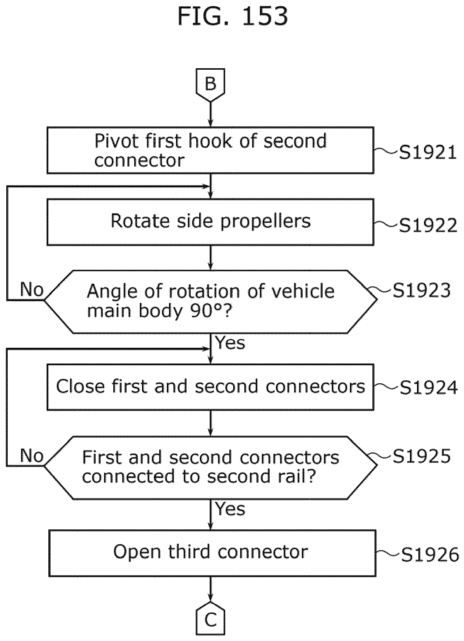

Control processor 11 returns to step S1918 if the angle of rotation of vehicle main body 1912 has not reached 80° (NO in S1918). At this time, control processor 11 rotates vehicle main body 1912 by rotating the side propellers 22a1 and 22a2. When the angle of rotation of vehicle main body 1912 reaches 80° (YES in S1918), control processor 11 pivots first hook 1721 of first connector 1720a until it is in a half-closed state (S1919), and the processing proceeds to B in FIG. 153. The half-closed state is when first hook 1721 can hook onto rail 7 and second hook 1722 is open.

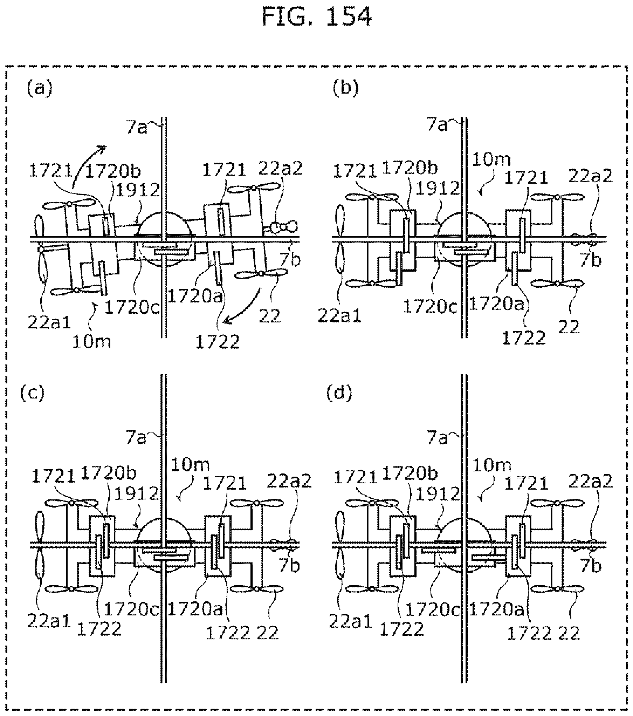

FIG. 153 is a flowchart illustrating an example of the operations performed by unmanned aerial vehicle 10m according to Embodiment 19 when first connector 1720a and second connector 1720b are connected to second rail 7b and subsequently the third connector is disconnected from first rail 7a. FIG. 154 is a schematic diagram illustrating an example of the operations illustrated in FIG. 153 that are performed by unmanned aerial vehicle 10m.

As illustrated in FIG. 153 and FIG. 154, control processor 11 pivots first hook 1721 of second connector 1720b (S1921). At this time, first and second rails 7a and 7b and first hook 1721 of second connector 1720b will not contact each other even if vehicle main body 1912 rotates.

Control processor 11 then rotates side propellers 22a1 and 22a2 by controlling the rear third propeller actuation motors 22a3 (S1922). This causes unmanned aerial vehicle 10m to rotate approximately about third connector 1720c.

Control processor 11 determines whether the angle of rotation of vehicle main body 1912 has reached 90° (S1923).

Control processor 11 returns to step S1923 if the angle of rotation of vehicle main body 1912 has not reached 90° (NO in S1922). At this time, control processor 11 rotates vehicle main body 1912 by rotating the side propellers 22a1 and 22a2 to adjust the angle of rotation. When the angle of rotation of vehicle main body 1912 reaches 90° (YES in S1923), control processor 11 closes first connector 1720a and second connector 1720b (S1924). Stated differently, control processor 11 pivots second hooks 1722 of first connector 1720a and second connector 1720b to close first connector 1720a and second connector 1720b.

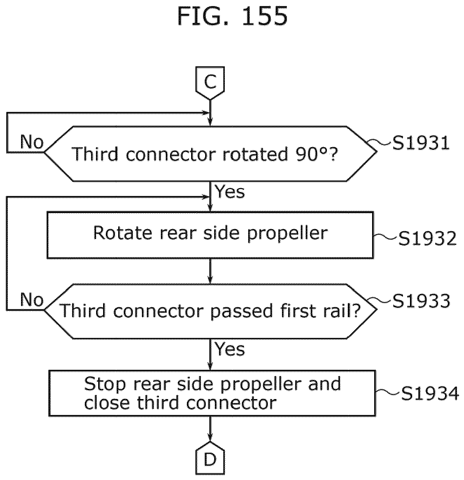

Control processor 11 determines whether the closed first connector 1720a and second connector 1720b have connected to second rail 7b (S1925). If the closed first connector 1720a and second connector 1720b are not connected to second rail 7b (NO in S1925), control processor 11 corrects the attitude of vehicle main body 1912 by rotating side propellers 22a1 and 22a2, and/or corrects the attitude of vehicle main body 1912 to an attitude that allows for first connector 1720a and second connector 1720b to connect to second rail 7b by opening first connector 1720a and second connector 1720b, and then returns the process to step S1924. If the closed first connector 1720a and second connector 1720b have connected to second rail 7b (YES in S1925), control processor 11 opens third connector 1720c (S1926). The processing then proceeds to C in FIG. 155.

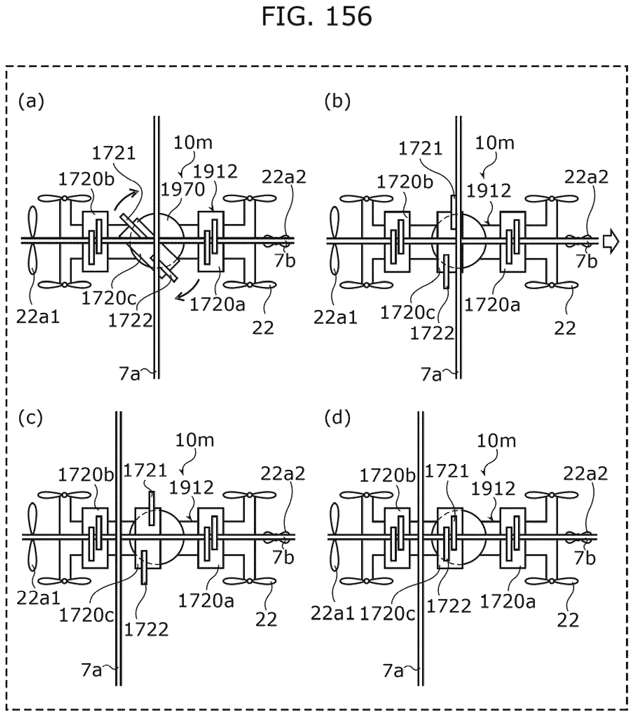

FIG. 155 is a flowchart illustrating an example of operations performed when connecting third connector 1720c of unmanned aerial vehicle 10m according to Embodiment 19 to second rail 7b. FIG. 156 is a schematic diagram illustrating an example of the operations illustrated in FIG. 155 that are performed by unmanned aerial vehicle 10m.

As illustrated in FIG. 155 and FIG. 156, when third connector 1720c is open, in connector support portion 1970, first fixed portion 1971 is pivoted by tension springs 1919a and 1919b relative to vehicle main body 1912, which is fixedly holding second fixed portion 1972. This puts first connector 1720a, second connector 1720b, and third connector 1720c in attitudes that enable connection to second rail 7b. Stated differently, control processor 11 determines whether the open third connector 1720c has rotated or not to determine whether the openings of first hook 1721 and second hook 1722 of the first, second and third connectors 1720a, 1720b and 1720c, respectively, are in an intersecting attitude with second rail 7b. Since first rail 7a and second rail 7b are arranged orthogonally to each other in the present embodiment, control processor 11 determines whether the angle of rotation of the open third connector 1720c has rotated 90° (S1931).

If the open third connector 1720c has not rotated approximately 90° (NO in S1931), control processor 11 performs the same process until third connector 1720c has. Although the angle to which third connector 1720c rotates is exemplified as 90°, the angle is not limited to 90° and may be less than 90°. The angle to be determined in step S1931 may depend on the angle between first rail 7a and second rail 7b. Control processor 11 may also rotate third connector 1720c by controlling a motor or the like.

If the open third connector 1720c has rotated approximately 90° (YES in S1931), control processor 11 rotates side propeller 22a1 by controlling the rear third propeller actuation motor 22a3 (S1932). This causes unmanned aerial vehicle 10m to move forward.

Control processor 11 determines whether third connector 1720c has passed vertically below first rail 7a (S1933).

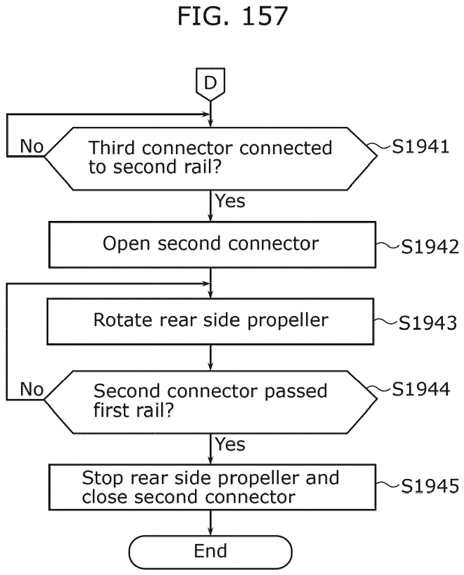

If third connector 1720c has not passed vertically below first rail 7a (NO in S1933), control processor 11 returns the process to step S1932. If third connector 1720c has passed vertically below first rail 7a (YES in S1933), control processor 11 stops rotation of side propeller 22a1 by controlling the rear third propeller actuation motor 22a3. This causes unmanned aerial vehicle 10m to stop traveling. Control processor 11 also pivots first hook 1721 and second hook 1722 of third connector 1720c to close third connector 1720c (S1934). The processing then proceeds to D in FIG. 157.

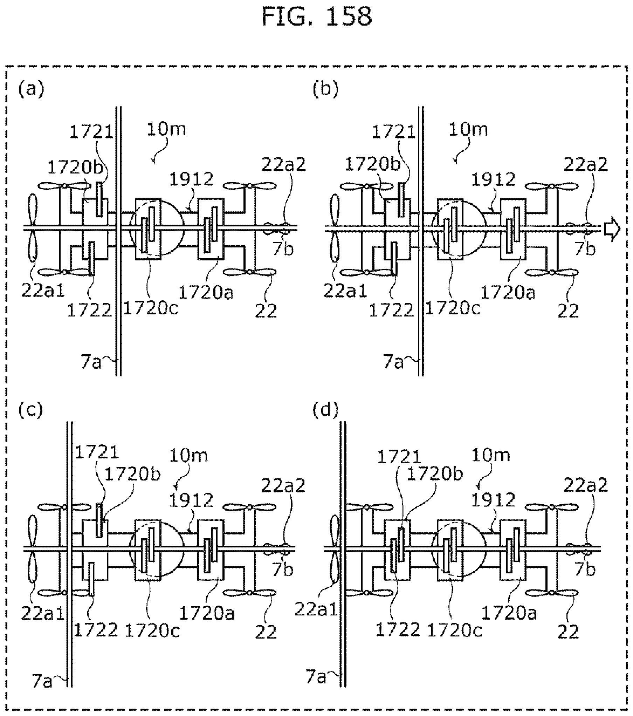

FIG. 157 is a flowchart illustrating an example of operations performed when second connector 1720b of unmanned aerial vehicle 10m according to Embodiment 19 passes first rail 7a. FIG. 158 is a schematic diagram illustrating an example of the operations illustrated in FIG. 157 that are performed by unmanned aerial vehicle 10m.

As illustrated in FIG. 157 and FIG. 158, control processor 11 determines whether the closed third connector 1720c is connected to second rail 7b (S1941). If the closed third connector 1720c is not connected to second rail 7b (NO in S1941), control processor 11 corrects the attitude of vehicle main body 1912 by rotating side propellers 22a1 and 22a2, and/or corrects the attitude of vehicle main body 1912 to an attitude that allows for third connector 1720c to connect to second rail 7b by opening third connector 1720c, and then returns the process to step S1941. If the closed third connector 1720c has connected to second rail 7b (YES in S1941), control processor 11 opens second connector 1720b (S1942).

Control processor 11 then rotates side propeller 22a1 by controlling the rear third propeller actuation motor 22a3 (S1943). This causes unmanned aerial vehicle 10m to move forward.

Control processor 11 determines whether second connector 1720b has passed vertically below first rail 7a (S1944).

If second connector 1720b has not passed vertically below first rail 7a (NO in S1944), control processor 11 returns the process to step S1943. If second connector 1720b has passed vertically below first rail 7a (YES in S1944), control processor 11 stops rotation of side propeller 22a1 by controlling the rear third propeller actuation motor 22a3. This causes unmanned aerial vehicle 10m to stop traveling. Control processor 11 also pivots first hook 1721 and second hook 1722 of second connector 1720b to close second connector 1720b (S1945), whereby second connector 1720b is connected to second rail 7b.

In this way, unmanned aerial vehicle 10m can change course from first rail 7a to second rail 7b.

### Operation Example 2

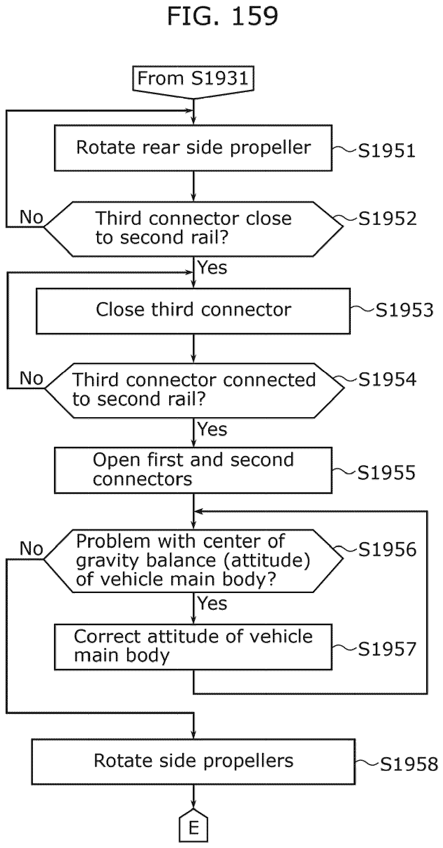

Next, an example will be given in which unmanned aerial vehicle 10m traveling on first rail 7a changes direction at the intersection of first rail 7a and second rail 7b, and turns back along first rail 7a that it has been traveling on. Since the processes from S1901 through S1931 in Operation Example 1 described above are the same, repeated explanation is omitted, and the explanation is given starting from FIG. 159.

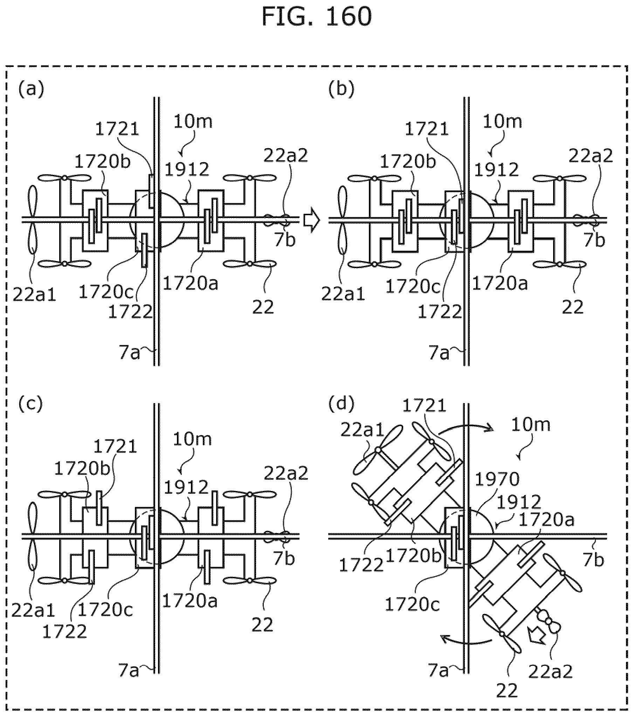

FIG. 159 is a flowchart illustrating an example of operations performed when vehicle main body 1912 of unmanned aerial vehicle 10m further rotates when unmanned aerial vehicle 10m turns back at the intersection of first rail 7a and second rail 7b. FIG. 160 is a schematic diagram illustrating an example of the operations illustrated in FIG. 159 that are performed by unmanned aerial vehicle 10m.

As illustrated in FIG. 159 and FIG. 160, control processor 11 rotates side propeller 22a1 by controlling the rear third propeller actuation motor 22a3 (S1951).

Control processor 11 determines whether second rail 7b and third connector 1720c are close to each other (S1952). Second rail 7b and third connector 1720c being close to each other includes second rail 7b and third connector 1720c contacting one another, and also includes, for example, being within a predetermined distance of each other. If second rail 7b and third connector 1720c are not close to each other (NO in S1952), control processor 11 returns to step S1951.

If second rail 7b and third connector 1720c are close to each other (YES in S1952), control processor 11 closes third connector 1720c (S1953).

Control processor 11 determines whether the closed third connector 1720c has connected to second rail 7b (S1954). If the closed third connector 1720c is not connected to second rail 7b (NO in S1954), control processor 11 corrects the attitude of vehicle main body 1912 by rotating side propellers 22a1 and 22a2, and/or corrects the attitude of vehicle main body 1912 to an attitude that allows for third connector 1720c to connect to second rail 7b by opening third connector 1720c, and then returns the process to step S1953. If the closed third connector 1720c has connected to second rail 7b (YES in S1954), control processor 11 opens first connector 1720a and second connector 1720b (S1955).

Control processor 11 determines whether there is a problem with the balance of the center of gravity (attitude) of vehicle main body 1912, that is, whether vehicle main body 1912 is inclined at a predetermined angle or more with respect to the horizontal plane (S1956). If vehicle main body 1912 is inclined at the predetermined angle or more with respect to the horizontal plane, that is, if there is a problem with the balance of the center of gravity (attitude) of vehicle main body 1912 (YES in S1956), control processor 11 corrects the attitude of vehicle main body 1912. More specifically, control processor 11 corrects the attitude of vehicle main body 1912 by rotating propellers 22 via the respective propeller control modules of vehicle main body 1912 so that vehicle main body 1912 is approximately parallel to the horizontal plane (S1957). Processing then returns to step S1956.

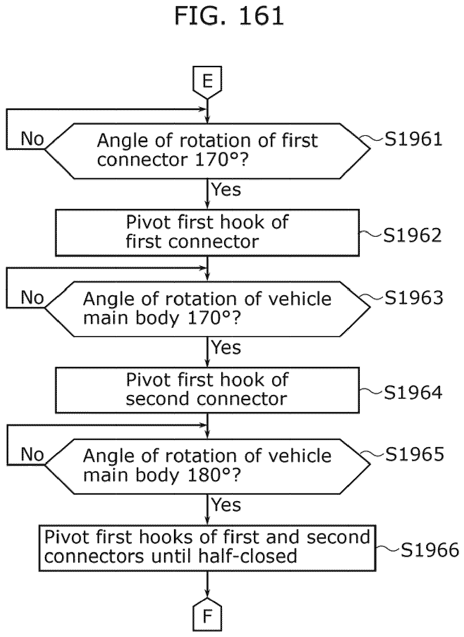

If vehicle main body 1912 is inclined at less than the predetermined angle with respect to the horizontal plane, that is, when there is no problem with the balance of the center of gravity (attitude) of vehicle main body 1912 (NO in S1956), control processor 11 rotates side propellers 22a1 and 22a2 by controlling the front and rear third propeller actuation motors 22a3 (S1958). This causes unmanned aerial vehicle 10m to rotate approximately about third connector 1720c so that third connector 1720c is held by first rail 7a. The processing then proceeds to E in FIG. 161.

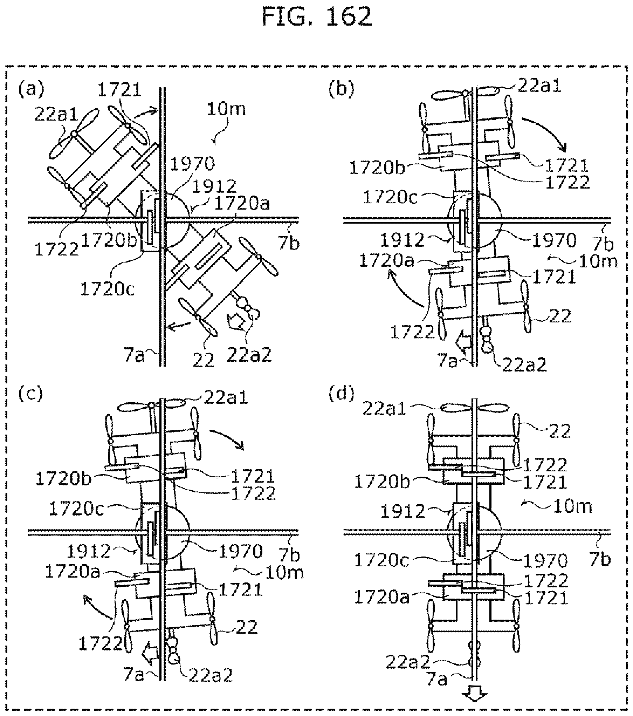

FIG. 161 is a flowchart illustrating an example of operations performed when connecting first connector 1720a and second connector 1720b to first rail 7a after vehicle main body 1912 of unmanned aerial vehicle 10m has rotated when unmanned aerial vehicle 10m turns back at the intersection of first rail 7a and second rail 7b. FIG. 162 is a schematic diagram illustrating an example of the operations illustrated in FIG. 161 that are performed by unmanned aerial vehicle 10m.

As illustrated in FIG. 161 and FIG. 162, control processor 11 determines whether the angle of rotation of vehicle main body 1912 has reached 170° (S1961).

Control processor 11 returns to step S1961 if the angle of rotation of vehicle main body 1912 has not reached 170° (NO in S1961), that is, if the angle of rotation is less than 170°. When the angle of rotation of vehicle main body 1912 reaches 170° (YES in S1961), control processor 11 pivots first hook 1721 of second connector 1720b (S1962). At this time, first rail 7a and first hook 1721 of first connector 1720a will not contact each other even if vehicle main body 1912 rotates.

Control processor 11 determines whether the angle of rotation of vehicle main body 1912 is 170° or greater (S1963).

Control processor 11 returns to step S1963 if the angle of rotation of vehicle main body 1912 is not 170° or greater (NO in S1963). At this time, control processor 11 rotates vehicle main body 1912 by rotating and adjusting the side propellers 22a1 and 22a2. When the angle of rotation of vehicle main body 1912 is 170° or greater (YES in S1963), control processor 11 pivots first hook 1721 of second connector 1720b (S1964). At this time, first rail 7a and first hook 1721 of second connector 1720b will not contact each other even if vehicle main body 1912 rotates.

Control processor 11 determines whether the angle of rotation of vehicle main body 1912 is 180° (S1965).

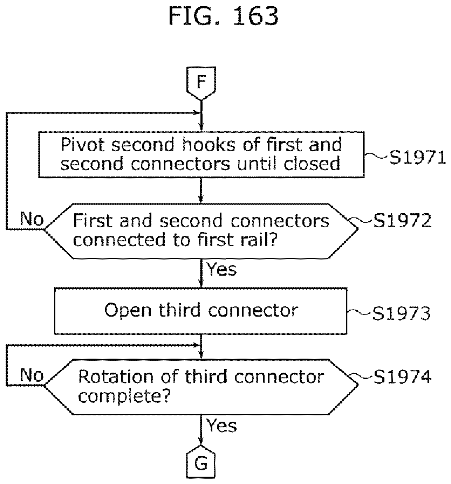

Control processor 11 returns to step S1965 if the angle of rotation of vehicle main body 1912 is not 180° (NO in S1965). At this time, control processor 11 rotates vehicle main body 1912 by rotating the side propellers 22a1 and 22a2. When the angle of rotation of vehicle main body 1912 reaches 180° (YES in S1965), control processor 11 pivots first hooks 1721 of first connector 1720a and second connector 1720b until it is in a half-closed state (S1966). The processing then proceeds to F in FIG. 163.

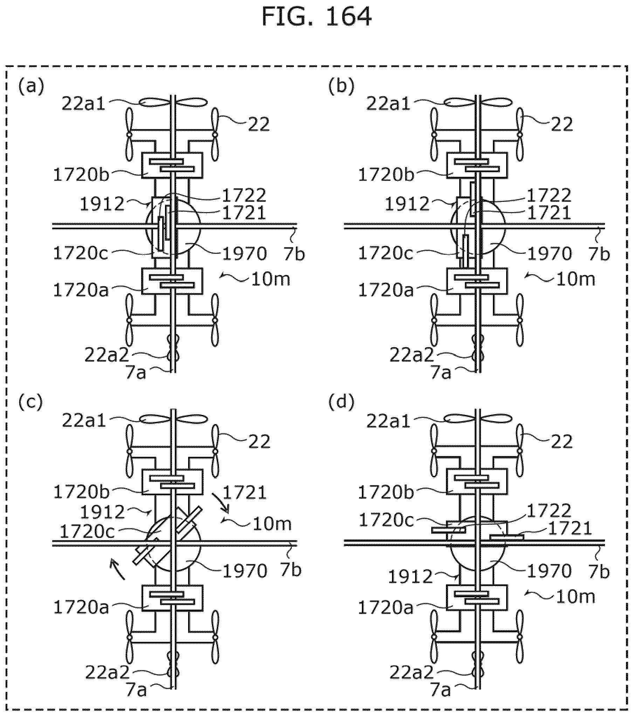

FIG. 163 is a flowchart illustrating an example of operations performed when disconnecting third connector 1720c of unmanned aerial vehicle 10m from second rail 7b and causing third connector 1720c to be eccentric, when unmanned aerial vehicle 10m turns back at the intersection of first rail 7a and second rail 7b. FIG. 164 is a schematic diagram illustrating an example of the operations illustrated in FIG. 163 that are performed by unmanned aerial vehicle 10m.

As illustrated in FIG. 163 and FIG. 164, control processor 11 pivots second hooks 1722 of first connector 1720a and second connector 1720b to close first connector 1720a and second connector 1720b (S1971).

Control processor 11 determines whether the closed first connector 1720a and second connector 1720b have connected to first rail 7a (S1972). If the closed first and second connectors 1720a and 1720b are not connected to first rail 7a (NO in S1972), control processor 11 corrects the attitude of vehicle main body 1912 by rotating side propellers 22a1 and 22a2, and/or corrects the attitude of vehicle main body 1912 to an attitude that allows for first and second connectors 1720a and 1720b to connect to first rail 7a by opening first and second connectors 1720a and 1720b, and then returns the process to step S1971. If the closed first connector 1720a and second connector 1720b have connected to first rail 7a (YES in S1972), control processor 11 opens third connector 1720c (S1973).

When third connector 1720c opens, first fixed portion 1971 is pivoted by tension springs 1919a and 1919b relative to vehicle main body 1912, which is fixedly holding second fixed portion 1972. This puts first connector 1720a, second connector 1720b, and third connector 1720c in attitudes that enable connection to first rail 7a. Stated differently, control processor 11 determines whether the open third connector 1720c has rotated or not to determine whether the openings of first hook 1721 and second hook 1722 of the first, second and third connectors 1720a, 1720b and 1720c, respectively, are in an intersecting attitude with first rail 7a. In the present embodiment, control processor 11 determines whether the open third connector 1720c has rotated (S1974).

If the open third connector 1720c has not rotated approximately 90° (NO in S1974), control processor 11 performs the same process until third connector 1720c has. Although the angle to which third connector 1720c rotates is exemplified as 90°, the angle is not limited to 90° and may be less than 90°. The angle to be determined in step S1974 may depend on the angle between first rail 7a and second rail 7b.

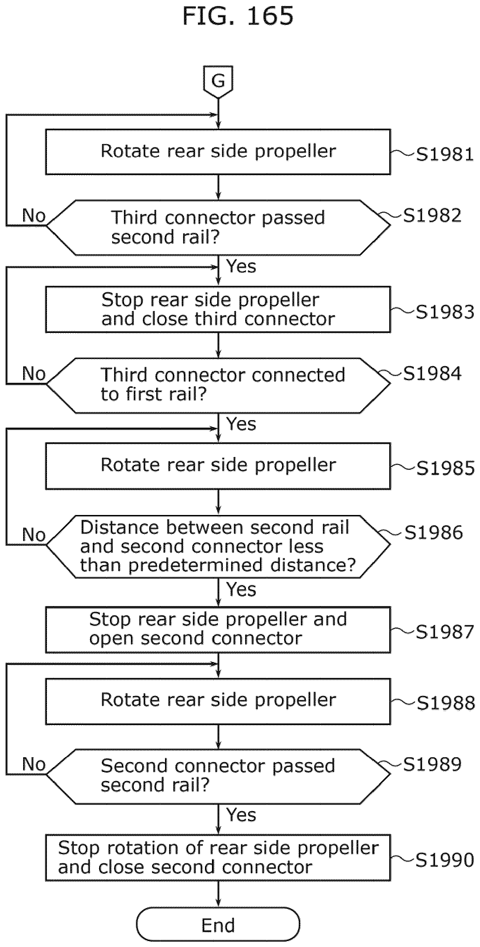

When the opened third connector 1720c has rotated approximately 90° (YES in S1974), control processor 11 proceeds to G in FIG. 165.

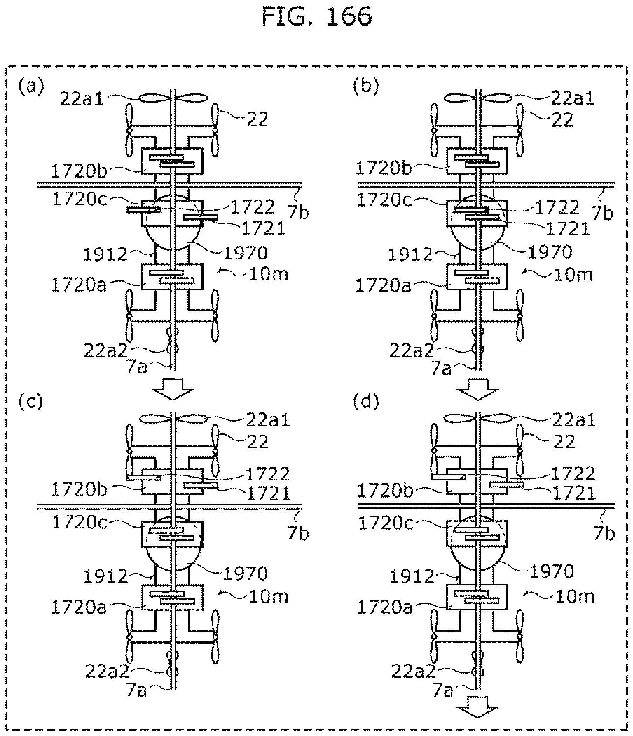

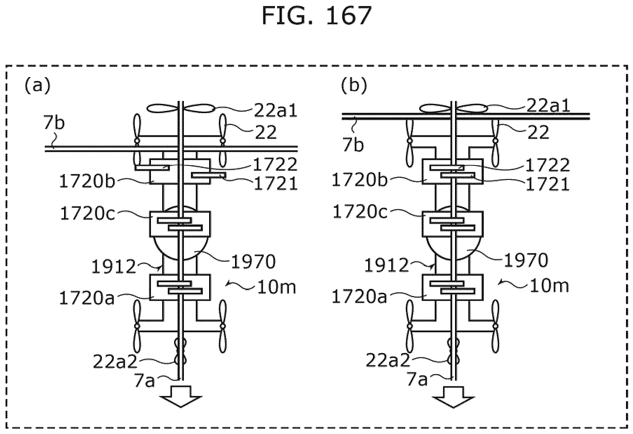

FIG. 165 is a flowchart illustrating an example of operations performed when, after third connector 1720c of unmanned aerial vehicle 10m is connected to first rail 7a, second connector 1720b is disconnected from first rail 7a and second connector 1720b, which has passed first rail 7a, connects to first rail 7a, when unmanned aerial vehicle 10m turns back at the intersection of first rail 7a and second rail 7b. FIG. 166 is a schematic diagram illustrating an example of the operations illustrated in FIG. 165 that are performed by unmanned aerial vehicle 10m. FIG. 167 is a schematic diagram illustrating an example of the operations illustrated in FIG. 165 that are performed by unmanned aerial vehicle 10m.

As illustrated in FIG. 165 through FIG. 167, control processor 11 rotates side propeller 22a1 by controlling the rear third propeller actuation motor 22a3 (S1981). This causes unmanned aerial vehicle 10m to move forward.

Control processor 11 determines whether third connector 1720c has passed vertically below second rail 7b (S1982).

If third connector 1720c has not passed vertically below second rail 7b (NO in S1982), control processor 11 returns the process to step S1981. If third connector 1720c has passed vertically below second rail 7b (YES in S1982), control processor 11 stops rotation of side propeller 22a1 by controlling the rear third propeller actuation motor 22a3. This causes unmanned aerial vehicle 10m to stop traveling. Control processor 11 also pivots first hook 1721 and second hook 1722 of third connector 1720c to close third connector 1720c (S1983).

Control processor 11 determines whether the closed third connector 1720c has connected to first rail 7a (S1984). If the closed third connector 1720c is not connected to first rail 7a (NO in S1984), control processor 11 corrects the attitude of vehicle main body 1912 by rotating side propellers 22a1 and 22a2, and/or corrects the attitude of vehicle main body 1912 to an attitude that allows for third connector 1720c to connect to first rail 7a by opening third connector 1720c, and then returns the process to step S1983. If the closed third connector 1720c has connected to first rail 7a (YES in S1984), control processor 11 rotates side propeller 22a1 by controlling the rear third propeller actuation motor 22a3 (S1985). This causes unmanned aerial vehicle 10m to move forward.

Control processor 11 determines whether the distance between second rail 7b and second connector 1720b is less than a predetermined distance (S1986). If the distance between second rail 7b and second connector 1720b is greater than or equal to the predetermined distance (NO in S1986), control processor 11 returns to step S1985.

If the distance between second rail 7b and second connector 1720b is less than the predetermined distance (YES in S1986), control processor 11 stops rotation of side propeller 22a1 (S1987) by controlling the rear third propeller actuation motor 22a3. This causes unmanned aerial vehicle 10m to stop traveling. Control processor 11 also pivots first hook 1721 and second hook 1722 of second connector 1720b to open second connector 1720b (S1987).

Control processor 11 then rotates side propeller 22a1 by controlling the rear third propeller actuation motor 22a3 (S1988). This causes unmanned aerial vehicle 10m to move forward.

Control processor 11 determines whether second connector 1720b has passed vertically below second rail 7b (S1989).

If second connector 1720b has not passed vertically below second rail 7b (NO in S1989), control processor 11 returns the process to step S1988. If second connector 1720b has passed vertically below second rail 7b (YES in S1989), control processor 11 stops rotation of side propeller 22a1 by controlling the rear third propeller actuation motor 22a3 (S1990). This causes unmanned aerial vehicle 10m to stop traveling. Control processor 11 also pivots first hook 1721 and second hook 1722 of second connector 1720b to close second connector 1720b (S1990).

### Operation Example 3

Next, an example of the movement of connector support portion 1970, first connector 1720a, second connector 1720b, and third connector 1720c when unmanned aerial vehicle 10m connected to first rail 7a changes its connection point from first rail 7a to second rail 7b will be given.

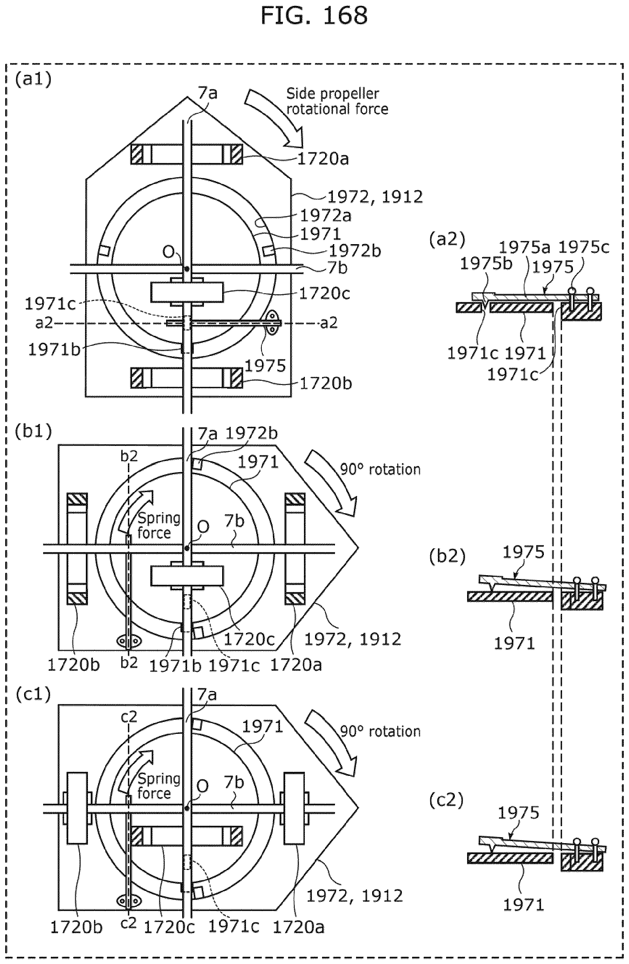

FIG. 168 includes a schematic diagram illustrating an example of connector support portion 1970 and ratchet 1975 when unmanned aerial vehicle 10m has rotated, and a cross-sectional view of a cross section of connector support portion 1970 and ratchet 1975.

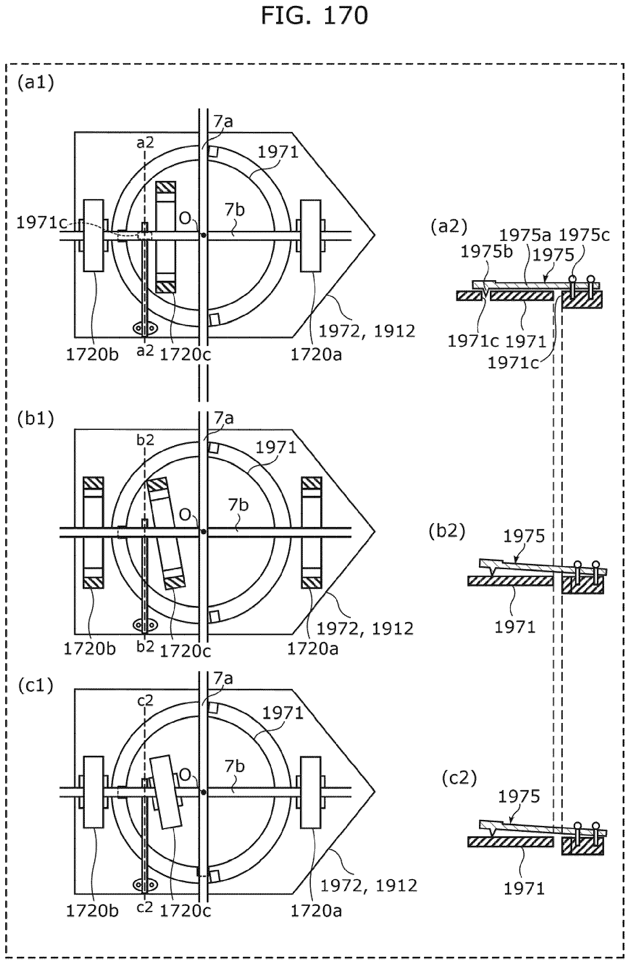

In FIG. 168, (a1), (b1), and (c1) illustrate examples the relationship between vehicle main body 1912 of unmanned aerial vehicle 10m and first and second fixed portions 1971 and 1972 fixed to vehicle main body 1912, and the relationship between first connector 1720a, second connector 1720b, third connector 1720c, first rail 7a, and second rail 7b. In FIG. 168, (a2) is a cross-sectional view of ratchet 1975 and first fixed portion 1971 and the like taken at line a2-a2 in (a1) in FIG. 168, (b2) is a cross-sectional view of ratchet 1975 and first fixed portion 1971 and the like taken at line b2-b2 in (b1) in FIG. 168, and (c2) is a cross-sectional view of ratchet 1975 and first fixed portion 1971 and the like taken at line c2-c2 in (c1) in FIG. 168. The same applies to FIG. 170 and subsequent figures, so these explanations are omitted. Note that (a1), (b1), and (c1) in FIG. 168 correspond to FIG. 152 and FIG. 154.

As illustrated in (a1) in FIG. 168, control processor 11 opens first and second connectors 1720a and 1720b and rotates side propellers 22a1 and 22a2. As illustrated in (a2) in FIG. 168, before vehicle main body 1912 rotates around center point O, i.e., the center point of first fixed portion 1971, engagement receiving portion 1975b of ratchet 1975 is engaged with engagement portion 1971c of first fixed portion 1971.

When vehicle main body 1912 rotates around center point O, as illustrated in (b2) in FIG. 168, the rotational force of second fixed portion 1972 fixed to vehicle main body 1912 pushes up engagement receiving portion 1975b of ratchet 1975 in connector support portion 1970, causing engagement receiving portion 1975b to separate from engagement portion 1971c of first fixed portion 1971. When vehicle main body 1912 rotates, since plate spring 1975a of ratchet 1975 is fixed at its other end by fastening portion 1975c and is biased, engagement receiving portion 1975b of ratchet 1975 is pressed against the upper surface of first fixed portion 1971 and the rotation of vehicle main body 1912 causes first fixed portion 1975b of ratchet 1975 to slide on the upper surface of first fixed portion 1971. As illustrated in (b2) in FIG. 168, when second fixed portion 1972 rotates together with vehicle main body 1912 by approximately 90°, rotation stopping portion 1972b of second fixed portion 1972 contacts rotation stopping portion 1971b of first fixed portion 1971, thereby restricting the rotation of second fixed portion 1972 and thus the rotation of vehicle main body 1912. Vehicle main body 1912 of unmanned aerial vehicle 10m then rotates while third connector 1720c is connected to first rail 7a.

As illustrated in (c1) in FIG. 168, if the closed first connector 1720a and second connector 1720b have connected to second rail 7b, control processor 11 opens third connector 1720c. As illustrated in (c2) in FIG. 168, the state of ratchet 1975 is the same as in (b2) in FIG. 168.

First fixed portion 1971 is pulled so as to rotate clockwise by front and rear tension springs 1919a and 1919b. As illustrated in (c1) in FIG. 168, when third connector 1720c is open, first fixed portion 1971 is rotated by front and rear tension springs 1919a and 1919b relative to vehicle main body 1912, which fixedly holds second fixed portion 1972. As illustrated in (a2) in FIG. 168, when first fixed portion 1971 rotates 90°, after sliding on the upper surface of engagement receiving portion 1975b of ratchet 1975, engagement receiving portion 1975b of ratchet 1975 engages engagement portion 1971c of first fixed portion 1971, thereby inhibiting the rotation of first fixed portion 1971 relative to second fixed portion 1972. Therefore, as illustrated in (a1) in FIG. 170, third connector 1720c is eccentric by 90° about center point O with the rotation of first fixed portion 1971, and is in an attitude that enables connection to second rail 7b.

Even if first fixed portion 1971 is pulled by front and rear tension springs 1919a and 1919b, first fixed portion 1971 may stop without rotating 90° due to a defect in tension springs 1919a and 1919b, as illustrated in (b1) in FIG. 170. In such cases, as illustrated in (c1) in FIG. 170, control processor 11 pivots first hook 1721 and second hook 1722 of third connector 1720c to close third connector 1720c.

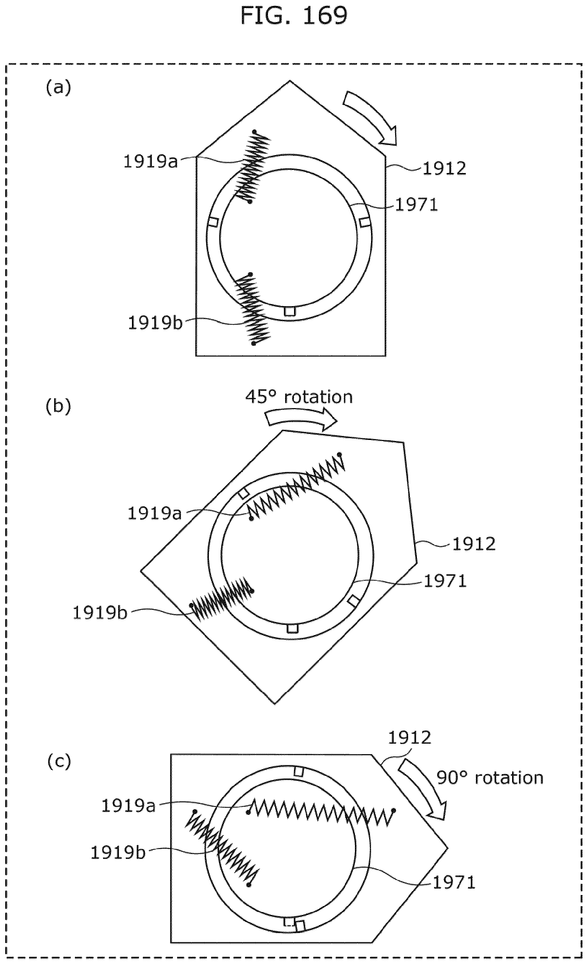

The movement of the respective tension springs 1919a and 1919b in (a1) and (b1) in FIG. 168 will now be explained in greater detail with reference to FIG. 169. FIG. 169 is schematic diagram illustrating an example of tension springs 1919a and 1919b of connector support portion 1970 when unmanned aerial vehicle 10m rotates.

In FIG. 169, (a) illustrates the state of (a1) in FIG. 168. In (a) in FIG. 169, the respective tension springs 1919a and 1919b are of natural length. In FIG. 168, (b) illustrates vehicle main body 1912 rotated at an angle of 45° relative to (a) in FIG. 169. Here, front tension spring 1919a is stretched beyond its natural length (the length of the stretch is medium and the elastic force is normal), and rear tension spring 1919b is slightly stretched beyond its natural length (the length of the stretch is small and the elastic force is low) or contracted beyond its natural length.

In FIG. 169, (c) illustrates vehicle main body 1912 rotated at an angle of 90° relative to (a) in FIG. 169. Here, front tension spring 1919a is stretched significantly beyond its natural length (the length of the stretch is long and the elastic force is high), and rear tension spring 1919b is also stretched beyond its natural length (the length of the stretch is medium and the elastic force is normal).

Thus, as illustrated in (c) in FIG. 169, the elastic forces of front and rear tension springs 1919a and 1919b apply a clockwise turning force to first fixed portion 1971.

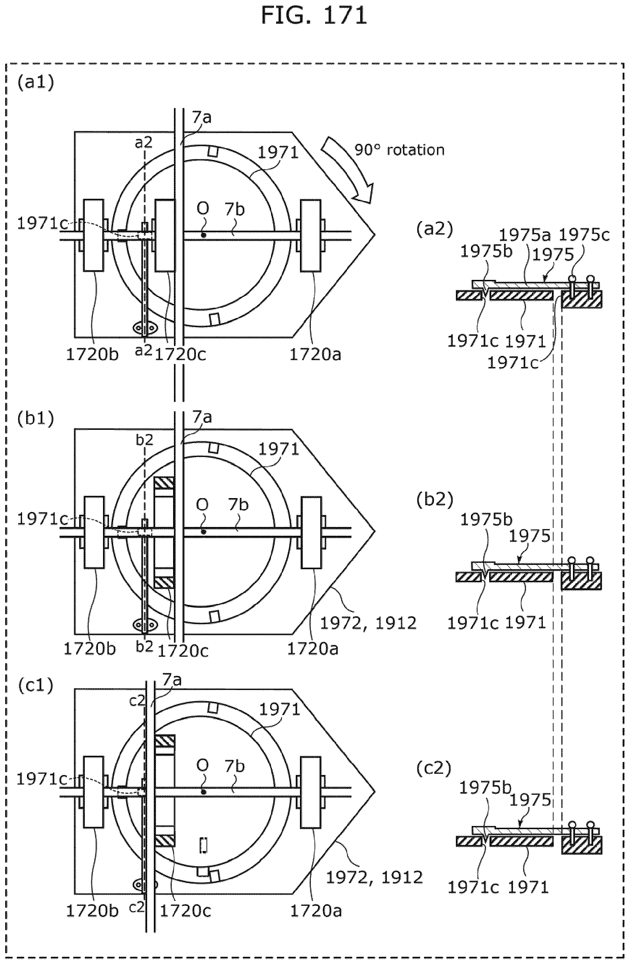

FIG. 170 includes a schematic diagram illustrating an example of third connector 1720c when unmanned aerial vehicle 10m has rotated, and a cross-sectional view illustrating example of a cross section of connector support portion 1970 and ratchet 1975. FIG. 171 is a schematic diagram illustrating an example of third connector 1720c of unmanned aerial vehicle 10m passing first rail 7a, and a cross-sectional view illustrating an example of a cross section of connector support portion 1970 and ratchet 1975.

As illustrated in (a1), (b1), (c1), (a2), (b2), and (c2) in FIG. 170, control processor 11 controls rear third propeller actuation motor 22a3 to rotate side propeller 22a2 and move unmanned aerial vehicle 10m. This causes third connector 1720c to press against first rail 7a, which causes first fixed portion 1971 to rotate via third connector 1720c, correcting the attitude of third connector 1720c. Stated differently, the attitude of third connector 1720c is corrected so that the plane in which first hook 1721 and second hook 1722 of third connector 1720c are open is approximately orthogonal to second rail 7b. Stated differently, the attitude of third connector 1720c is corrected so that the above-described plane of third connector 1720c is approximately parallel to the lengthwise direction of first rail 7a. Thus, by moving unmanned aerial vehicle 10m and pushing third connector 1720c against first rail 7a, as illustrated in (a1) and (a2) in FIG. 171, the attitude of third connector 1720c can be corrected, so the same advantageous effects can be achieved as in the case of rotating side propeller 22a1, by controlling the front third propeller actuation motor 22a3.

As illustrated in (b1) and (b2) in FIG. 171, control processor 11 opens attitude-corrected third connector 1720c. As illustrated in (c1) and (c2) in FIG. 171, control processor 11 controls rear third propeller actuation motor 22a3 to rotate side propeller 22a1. This causes third connector 1720c to pass vertically below first rail 7a since unmanned aerial vehicle 10m moves forward.

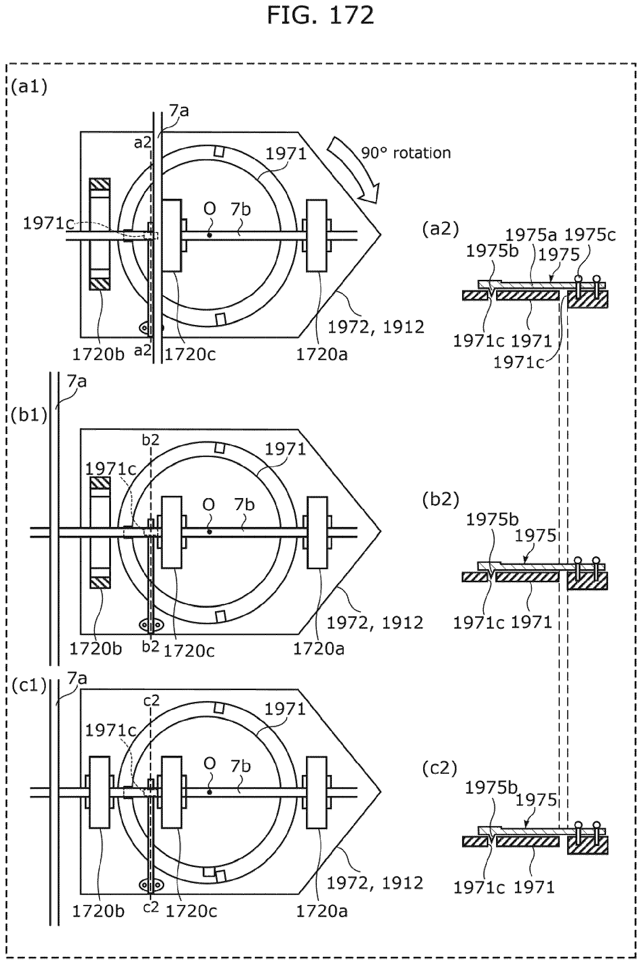

FIG. 172 is a schematic diagram illustrating an example of second connector 1720b of unmanned aerial vehicle 10m passing first rail 7a, and a cross-sectional view illustrating an example of a cross section of connector support portion 1970 and ratchet 1975.

As illustrated in (a1) and (a2) in FIG. 172, control processor 11 pivots first hook 1721 and second hook 1722 of third connector 1720c to close third connector 1720c. Control processor 11 also pivots first hook 1721 and second hook 1722 of second connector 1720b to open second connector 1720b.

As illustrated in (b1) and (b2) in FIG. 172, since control processor 11 rotates side propeller 22a1 by controlling rearward third propeller actuation motor 22a3, second connector 1720b passes vertically below first rail 7a as unmanned aerial vehicle 10m moves forward. As illustrated in (c1) and (c2) in FIG. 172, control processor 11 pivots first hook 1721 and second hook 1722 of second connector 1720b to close second connector 1720b.

### Operation Example 4

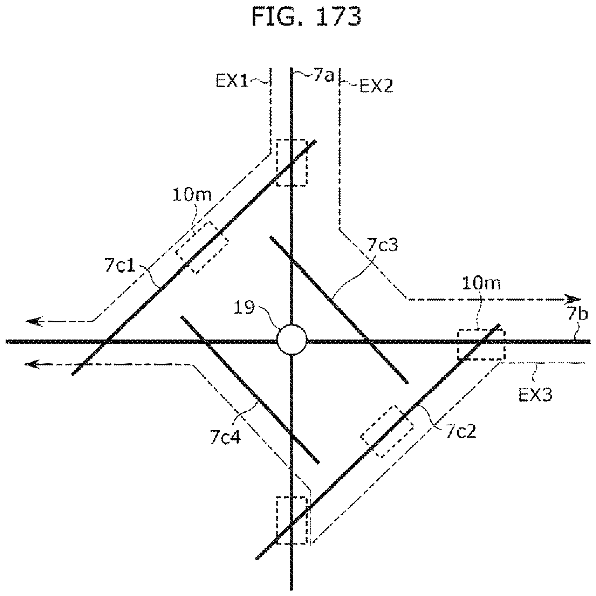

Next, an example will be given with reference to FIG. 173 of unmanned aerial vehicle 10m bypassing support pillar 19 when first rail 7a and second rail 7b are connected and fixed to support pillar 19. In this example, first rail 7a and second rail 7b are directly fixed to support pillar 19, which prevents flexure of first rail 7a and second rail 7b. FIG. 173 is a schematic diagram illustrating an example of how unmanned aerial vehicle 10m bypasses support pillar 19.

This operation example also includes third rails 7c1, 7c2, 7c3, and 7c4 that connect first rail 7a and second rail 7b, as illustrated in FIG. 173.

First rail 7a is positioned so that the lengthwise direction of first rail 7a and the lengthwise direction of second rail 7b are approximately orthogonal to each other. Each of third rails 7c1 and 7c2 is connected to and supported by first and second rails 7a and 7b so as to intersect first and second rails 7a and 7b. Third rail 7c1 and third rail 7c2 are arranged so that the lengthwise direction of third rail 7c1 and the lengthwise direction of third rail 7c2 are approximately parallel and have point symmetry with support pillar 19 as the center point. Each of third rails 7c3 and 7c4 is also connected to and supported by first and second rails 7a and 7b so as to intersect first and second rails 7a and 7b. Third rail 7c3 and third rail 7c4 are arranged between third rail 7c1 and third rail 7c2 so that the lengthwise direction of third rail 7c3 and the lengthwise direction of third rail 7c4 are approximately parallel and have point symmetry with support pillar 19 as the center point. The lengthwise directions of third rail 7c3 and third rail 7c4 are approximately orthogonal to the lengthwise directions of third rail 7c1 and third rail 7c2.

In this operation example, how unmanned aerial vehicle 10m moves is shown by double-dotted line arrows EX1, EX2, and EX3. Arrow EX1 illustrates unmanned aerial vehicle 10m making a right turn.

Regarding arrow EX1, unmanned aerial vehicle 10m can turn right by switching (switching connections) from first rail 7a to third rail 7c1 above support pillar 19 (top side of the figure) and then further switching to second rail 7b to the left of support pillar 19 (left side of the figure).

Arrow EX2 illustrates unmanned aerial vehicle 10m making a left turn. Regarding arrow EX2, unmanned aerial vehicle 10m can turn left by switching from first rail 7a to third rail 7c3 above support pillar 19 and then further switching to second rail 7b to the right of support pillar 19 (right side of the figure).

Arrow EX3 illustrates unmanned aerial vehicle 10m traveling straight. Regarding arrow EX3, unmanned aerial vehicle 10m switches from second rail 7b to the right of support pillar 19 to third rail 7c2, and then further switches to first rail 7a below support pillar 19 (lower side of the figure). Next, unmanned aerial vehicle 10m switches from first rail 7a below support pillar 19 to third rail 7c4, and then further switches to second rail 7b to the left of support pillar 19. This allows unmanned aerial vehicle 10m to consequently travel straight on second rail 7b.

When unmanned aerial vehicle 10m is going backwards, as shown by arrow EX3, unmanned aerial vehicle 10m that moved on second rail 7b to the right of support pillar 19 switches to second rail 7b to the left of support pillar 19, and then switches to third rail 7c1. Next, unmanned aerial vehicle 10m switches from third rail 7c1 to first rail 7a above support pillar 19, and then further switches to third rail 7c3. Unmanned aerial vehicle 10m can change direction by switching from third rail 7c3 to second rail 7b to the right of support pillar 19, allowing unmanned aerial vehicle 10m to reverse direction.

### Advantageous Effects

Next, advantageous effects achieved by unmanned aerial vehicle 10m according to the present embodiment will be described.

As described above, unmanned aerial vehicle 10m according to the present embodiment includes: vehicle main body 1912 having first length N1 in a first direction and second length N2 in a second direction orthogonal to the first direction, first length N1 being longer than second length N2; a plurality of propellers 22 that rotate in a virtual plane parallel to the first direction and the second direction; a plurality of first propeller actuation motors 23 that are provided on vehicle main body 1912 and respectively rotate the plurality of propellers 22; at least one connector that is hangable from at least one rail spaced apart from the ground surface; at least one side propeller 22a1 that provides propulsion force for propelling vehicle main body 1912 in the first direction; at least one third propeller actuation motor 22a3 that is provided on vehicle main body 1912 and rotates the at least one side propeller 22a1; and control processor 11 that controls the plurality of first propeller actuation motors 23 and the at least one third propeller actuation motor 22a3.

With this, the connector allows vehicle main body 1912 to be connected to and hang from the rail, thus preventing unmanned aerial vehicle 10m from falling even if propeller 22 does not rotate.

Moreover, by rotating side propeller 22a1 while the connector is connected to and hanging from the rail, unmanned aerial vehicle 10m can move along the rail, and thus can move to the destination point. In such cases, instead of actuating first propeller actuation motor 23, third propeller actuation motor 22a3 can be used to move unmanned aerial vehicle 10m, thus reducing power consumption in unmanned aerial vehicle 10m.

In unmanned aerial vehicle 10m according to the present embodiment, the connector includes first connector 1720a, second connector 1720b, and third connector 1720c, first connector 1720a is positioned offset in the first direction from the center of vehicle main body 1912, second connector 1720b is positioned offset in a direction opposite the first direction from the center of vehicle main body 1912, and third connector 1720c is positioned between first connector 1720a and second connector 1720b, near the center of vehicle main body 1912.

This enables unmanned aerial vehicle 10m to more safely transfer from one rail on which it is traveling to another by using three connectors.

Using three connectors also enables unmanned aerial vehicle 10m to more stably connect to the rails. Therefore, with unmanned aerial vehicle 10m, safety can be ensured.

Unmanned aerial vehicle 10m according to the present embodiment further includes first fixed portion 1971 disposed between third connector 1720c and vehicle main body 1912, and ratchet 1975 including engagement receiving portion 1975b that engages with engagement portion 1971c of first fixed portion 1971 by being biased by first fixed portion 1971.

With this, the orientation of unmanned aerial vehicle 10m can be rotated by rotating first fixed portion 1971. When rotated by a predetermined angle, engagement portion 1971c of first fixed portion 1971 and engagement receiving portion 1975b of ratchet 1975 engage to control the rotation of first fixed portion 1971 or vehicle main body 1912. Since this allows vehicle main body 1912 to be oriented as desired, unmanned aerial vehicle 10m can safely transfer from one rail on which it is traveling to another.

In the control method according to the present embodiment, unmanned aerial vehicle 10m includes first fixed portion 1971 between third connector 1720c and vehicle main body 1912 of unmanned aerial vehicle 10m, and an orientation of unmanned aerial vehicle 10m is changed by rotating vehicle main body 1912 relative to first fixed portion 1971.

With this configuration, since this allows vehicle main body 1912 to be oriented as desired, unmanned aerial vehicle 10m can safely transfer from one rail on which it is traveling to another.

In unmanned aerial vehicle 10m according to the present embodiment, a first surface area of a first minimum rectangle that circumscribes a first projected surface formed by projecting unmanned aerial vehicle 10m onto a first plane whose normal vector extends in the first direction is smaller than a second surface area of a second minimum rectangle that circumscribes a second projected surface formed by projecting unmanned aerial vehicle 10m onto a second plane whose normal vector extends in the second direction.

With this configuration, vehicle main body 1912 is elongated in the lengthwise direction of the rail, so unmanned aerial vehicle 10m can stably travel along the rail.

In unmanned aerial vehicle 10m according to the present embodiment, the plurality of propellers 22 include: first propeller 22; second propeller 22 adjacent to first propeller 22 in the second direction; third propeller 22 adjacent to first propeller 22 in the first direction; and fourth propeller 22 adjacent to second propeller 22 in the first direction and adjacent to third propeller 22 in the second direction. A first distance between first propeller 22 and second propeller 22 is shorter than a second distance between first propeller 22 and third propeller 22.

This configuration makes it possible to arrange first propeller 22 and second propeller 22 along the lengthwise direction of the rail and arrange third propeller 22 and fourth propeller 22 along the lengthwise direction of the rail. Accordingly, the attitude of vehicle main body 1912 can be further stabilized when unmanned aerial vehicle 10m travels along the rail.

In unmanned aerial vehicle 10m according to the present embodiment, rotary shaft 22a4 of the at least one third propeller actuation motor 22a3 extends in the first direction.

This configuration enables unmanned aerial vehicle 10m to easily provide propulsion force for causing unmanned aerial vehicle 10m to travel along the rail.

In unmanned aerial vehicle 10m according to the present embodiment, the at least one side propeller 22a1 is positioned lower than the virtual plane.

With this configuration, since contact between propeller 22 and side propeller 22a1 can be inhibited, the safety of unmanned aerial vehicle 10m can be increased.

In unmanned aerial vehicle 10m according to the present embodiment, rotary shaft 22a4 of the at least one third propeller actuation motor 22a3 has an angle of inclination relative to the first direction that is variable in a plane whose normal vector extends in the second direction.

With this configuration, since rotary shaft 22a4 of third propeller actuation motor 22a3 is variable, unmanned aerial vehicle 10m can be rotated in the yaw direction (horizontal direction). This makes it possible to change the orientation of unmanned aerial vehicle 10m.

A control method according to the present embodiment is a control method of controlling unmanned aerial vehicle 10m, unmanned aerial vehicle 10m including vehicle main body 1912 having first length N1 in a first direction that is longer than second length N2 in a second direction orthogonal to the first direction; a plurality of propellers 22 that rotate in a virtual plane parallel to the first direction and the second direction; a plurality of first propeller actuation motors 23 that are provided on vehicle main body 1912 and respectively rotate the plurality of propellers 22; at least three connectors that are hangable from at least one rail spaced apart from the ground surface; at least one side propeller 22a1 that provides propulsion force for propelling vehicle main body 1912 in the first direction; at least one third propeller actuation motor 22a3 that is provided on vehicle main body 1912 and rotates the at least one side propeller 22a1; and control processor 11 that controls the plurality of first propeller actuation motors 23 and the at least one third propeller actuation motor 22a3. First connector 1720a is positioned offset in the first direction from a center of vehicle main body 1912, second connector 1720b is positioned offset in a direction opposite the first direction from the center of vehicle main body 1912, and third connector 1720c is positioned between first connector 1720a and second connector 1720b, near the center of vehicle main body 1912. The control method includes, when unmanned aerial vehicle 10m switches connection from first rail 7a to second rail 7b at an intersection of first rail 7a to second rail 7b: determining whether first connector 1720a has approached second rail 7b; when it is determined that first connector 1720a has approached second rail 7b, detaching first connector 1720a from first rail 7a and propelling unmanned aerial vehicle 10m in the first direction by rotating the at least one side propeller 22a1; determining whether first connector 1720a has passed second rail 7b; and when it is determined that first connector 1720a has passed second rail 7b, detaching second connector 1720b from first rail 7a, rotating unmanned aerial vehicle 10m until the first direction of unmanned aerial vehicle 10m is parallel to a direction of extension of second rail 7b, and after rotation of unmanned aerial vehicle 10m, connecting first connector 1720a and second connector 1720b to second rail 7b.

This configuration allows unmanned aerial vehicle 10m to switch connections (transfer) from first rail 7a to second rail 7b.

In the control method according to the present embodiment, when it is determined that first connector 1720a has passed second rail 7b, first connector 1720a is connected to first rail 7a and whether a center of gravity of unmanned aerial vehicle 10m is balanced is determined, and when it is determined that the center of gravity of unmanned aerial vehicle 10m is balanced, first connector 1720a and second connector 1720b are detached from first rail 7a, unmanned aerial vehicle 10m is rotated until the first direction of unmanned aerial vehicle 10m is parallel to the direction of extension of second rail 7b, and after unmanned aerial vehicle 10m rotates, first connector 1720a and second connector 1720b are connected to second rail 7b.

With this configuration, for example, even if second rail 7b is inclined relative to first rail 7a, unmanned aerial vehicle 10m can switch connection from first rail 7a to second rail 7b, by changing the balance of the center of gravity of unmanned aerial vehicle 10m.

In the control method according to the present embodiment, after first connector 1720a and second connector 1720b are connected to second rail 7b after unmanned aerial vehicle 10m has rotated, the attitude of third connector 1720c is matched to an attitude of each of first connector 1720a and second connector 1720b by detaching third connector 1720c from first rail 7a and rotating first fixed portion 1971.

With this configuration, by detaching third connector 1720c from first rail 7a, the attitude of third connector 1720c can be matched to the attitude of each of first connector 1720a and second connector 1720b. Accordingly, third connector 1720c can be connected to second rail 7b along with first connector 1720a and second connector 1720b.

In the control method according to the present embodiment, unmanned aerial vehicle 10m includes side propeller 22a2 for rotation that is disposed in a position corresponding to side propeller 22a1 in the first direction, and an orientation of unmanned aerial vehicle 10m is changed using a propulsion force of side propeller 22a2 for rotation.

With this configuration, the traveling direction of unmanned aerial vehicle 10m can be easily changed by rotating side propeller 22a2.

### VARIATION 1 OF EMBODIMENT 19

Hereinafter, since the basic configuration of unmanned aerial vehicle 10m according to the present variation is the same as the basic configuration of the unmanned aerial vehicle of Embodiment 19 and the like, repeated description of the basic configuration of unmanned aerial vehicle 10m in the present variation will be omitted where appropriate.

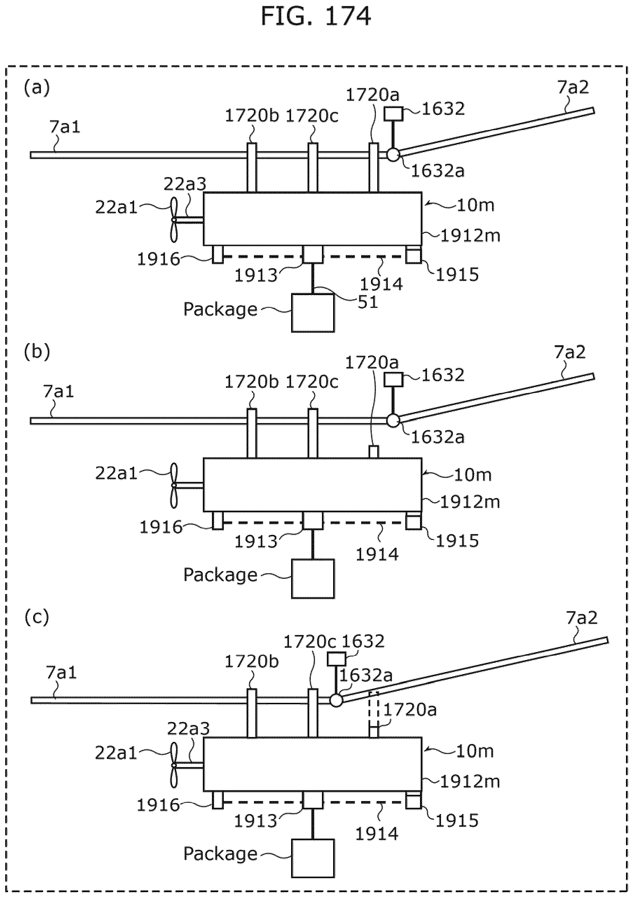

FIG. 174 is a schematic diagram illustrating an example of how unmanned aerial vehicle 10m according to Variation 1 of Embodiment 19 disconnects first connector 1720a from the horizontal rail.

As illustrated in (a) in FIG. 174, vehicle main body 1912m of unmanned aerial vehicle 10m differs from Embodiment 19 and other embodiments in that it further includes shaft 1914, slider 1913, and slider motor 1915.

Shaft 1914 is located on the lower surface on the lower side of vehicle main body 1912m and is supported by shaft support members 1916 located at the front and rear ends of vehicle main body 1912m. Stated differently, shaft 1914 is supported by two shaft support members 1916 so that both ends of shaft 1914 are sandwiched between the two shaft support members 1916. Shaft 1914 extends in the lengthwise direction of vehicle main body 1912m. Stated differently, shaft 1914 is arranged in vehicle main body 1912m so that its lengthwise direction is approximately parallel to the lengthwise direction of the rail.

While coupled to shaft 1914, slider 1913 is arranged below vehicle main body 1912m so that it slides along the lengthwise direction of shaft 1914. Stated differently, slider 1913 can displace its position by sliding along the lengthwise direction of shaft 1914. A package is connected to slider 1913 via wire 51. Stated differently, slider 1913 and the package act as counterbalance for main vehicle main body 1912m. Even if the package is not connected to unmanned aerial vehicle 10m, slider 1913 alone can function as a counterbalance for main vehicle main body 1912m.

Slider motor 1915 is an actuator capable of displacing the position of slider 1913. Stated differently, slider motor 1915 can change the position of the center of gravity of vehicle main body 1912m by moving the position of slider 1913 toward the front or rear of vehicle main body 1912m relative to the center line centered on the center point O of vehicle main body 1912m.

If the rail is inclined at a predetermined angle or more relative to the horizontal plane in the path for unmanned aerial vehicle 10m to travel, control processor 11 controls slider motor 1915 to move the position of slider 1913 forward or backward relative to the center line, thereby changing the position of the center of gravity of vehicle main body 1912m.

### Operations

Next, an example of how unmanned aerial vehicle 10m switches from horizontal rail 7a1 to inclined rail 7a2.

The rail in this operation includes horizontal rail 7a1 that is approximately parallel to the horizontal plane and inclined rail 7a2 that is inclined relative to the horizontal plane. More specifically, one end of horizontal rail 7a1 is connected to the other end of inclined rail 7a2 via coupler 1632a. Coupler 1632a is connected and fixed to rail support portion 1632, which is provided on a utility pole or similar structure provided in the ground surface or the like. In this operation, unmanned aerial vehicle 10m is exemplified as traveling from rail 7a1 toward rail 7a2.

Unmanned aerial vehicle 10m travels along rail 7a1 by rotating side propellers 22a1. As illustrated in (a) in FIG. 174, when the distance between coupler 1632a and first connector 1720a is less than a predetermined distance, control processor 11 stops the rotation of side propeller 22a1 by controlling rear third propeller actuation motor 22a3 for rotating side propeller 22a1. This causes unmanned aerial vehicle 10m to stop traveling.

As illustrated in (b) in FIG. 174, control processor 11 pivots the first and second hooks of first connector 1720a to open first connector 1720a when the distance between coupler 1632a and first connector 1720a is less than the predetermined distance. By opening first connector 1720a, the first and second hooks of first connector 1720a will not come into contact with coupler 1632a when vehicle main body 1912m passes vertically below coupler 1632a.

Control processor 11 then rotates side propeller 22a1 by controlling the rear third propeller actuation motor 22a3. With this, unmanned aerial vehicle 10m moves forward and first connector 1720a passes vertically below coupler 1632a, as illustrated in (c) in FIG. 174. At this time, since rail 7a2 is inclined relative to rail 7a1, even if first connector 1720a is closed, the first and second hooks may come into contact with rail 7a2, as shown by the dashed line, and first connector 1720a may not be able to couple to rail 7a2.

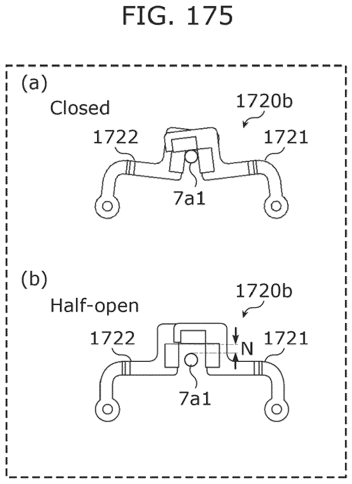

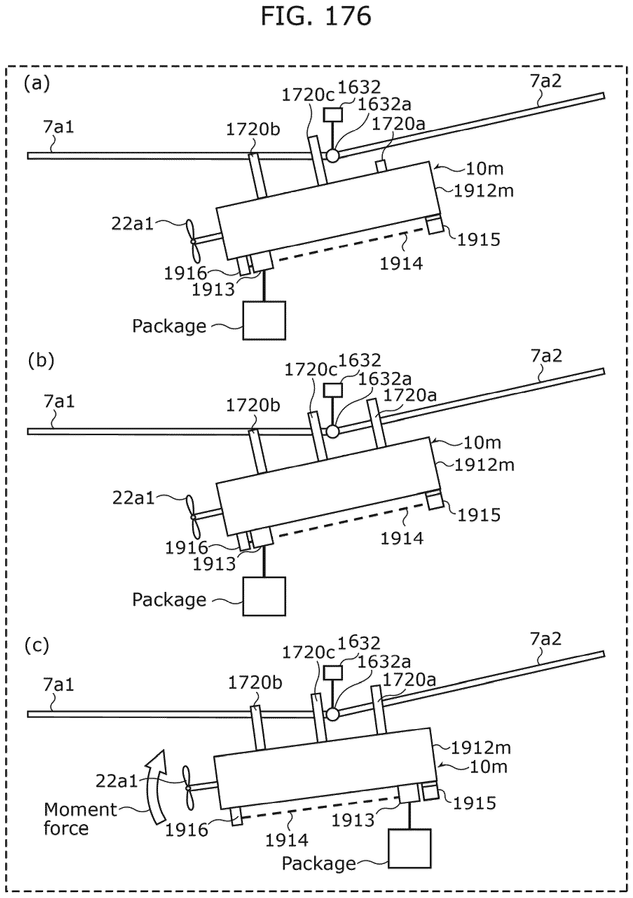

FIG. 175 is a schematic diagram illustrating an example of the relationship between second connector 1720b and horizontal rail 7a1 when second connector 1720b is closed and the relationship between second connector 1720b and horizontal rail 7a1 when second connector 1720b is half open. FIG. 176 is a schematic diagram illustrating an example of the connecting of first connector 1720a to inclined rail 7a2 by moving rearward the center of gravity of vehicle main body 1912m of unmanned aerial vehicle 10m according to Variation 1 of Embodiment 19.

Therefore, from the closed state of second connector 1720b, as illustrated in (a) in FIG. 175 and (a) in FIG. 176, control processor 11 moves the first and second hooks of second connector 1720b slightly to a half open (or one could say a half closed) state, as illustrated in (b) in FIG. 175. This creates a gap of distance N between first and second hooks and rail 7a1.

As illustrated in (a) in FIG. 176, control processor 11 controls slider motor 1915 to move slider 1913 to the rear of vehicle main body 1912m (opposite the direction of the travel). This shifts the position of the center of gravity of vehicle main body 1912m toward the rear of vehicle main body 1912m from the center line. Because the distance in the height direction from the upper surface of vehicle main body 1912m to the first and second hooks of second connector 1720b is greater than the distance in the height direction from the upper surface of vehicle main body 1912m to the first and second hooks of third connector 1720c, the front of vehicle main body 1912m is lifted to tilt vehicle main body 1912m so that the attitude of vehicle main body 1912m is in line with rail 7a2.

As illustrated in (b) in FIG. 176, control processor 11 pivots the first and second hooks of first connector 1720a to close first connector 1720a. This connects first connector 1720a to rail 7a2.

As illustrated in (c) in FIG. 176, control processor 11 controls slider motor 1915 to move slider 1913 to the front of vehicle main body 1912m (the direction of the travel). This shifts the position of the center of gravity of vehicle main body 1912m toward the front of vehicle main body 1912m from the center line. Consequently, a moment force is exerted to lift the rear of vehicle main body 1912m, as indicated by the arrow.

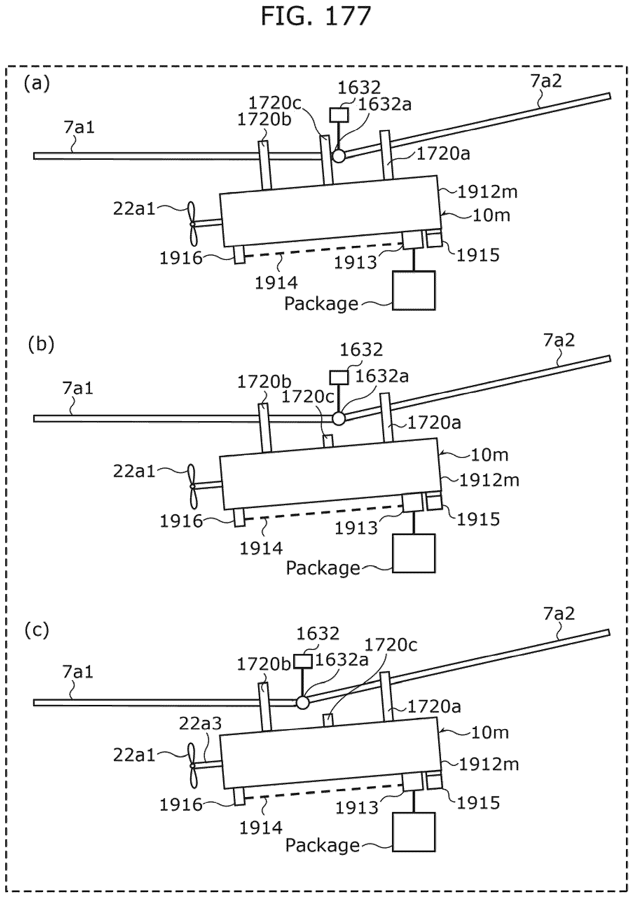

FIG. 177 is a schematic diagram illustrating an example of how unmanned aerial vehicle 10m according to Variation 1 of Embodiment 19 disconnects third connector 1720c from horizontal rail 7a1 and third connector 1720c passes vertically below coupler 1632a.

As illustrated in (a) in FIG. 177, since the shift in the position of the center of gravity lifts the rear of vehicle main body 1912m, control processor 11 closes the half-open second connector 1720b.

As illustrated in (b) FIG. 177, the first and second hooks of third connector 1720c are pivoted to open third connector 1720c.

As illustrated in (c) in FIG. 177, control processor 11 controls rear third propeller actuation motor 22a3 to rotate side propeller 22a1. With this, unmanned aerial vehicle 10m moves forward and third connector 1720c passes vertically below coupler 1632a.

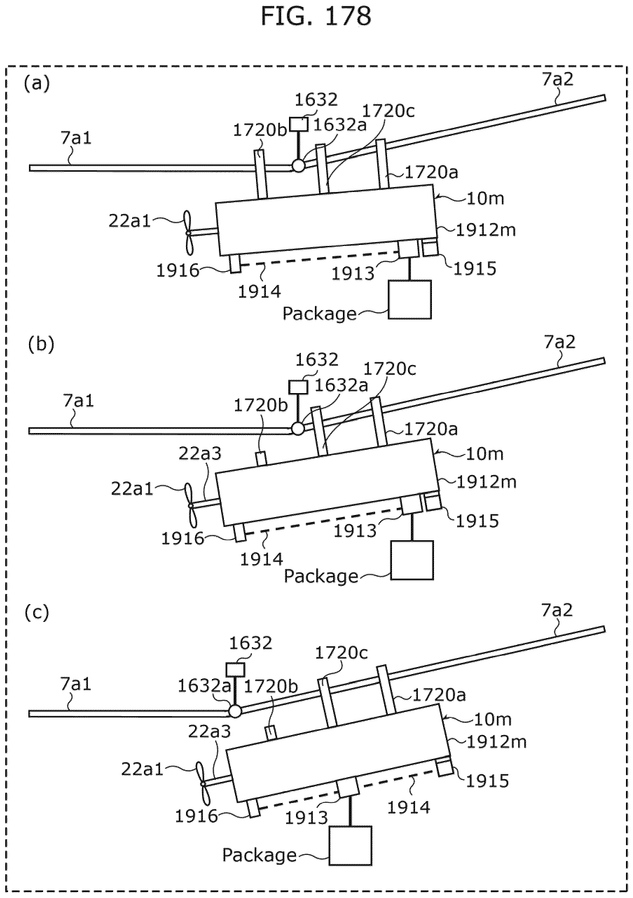

FIG. 178 is a schematic diagram illustrating an example of how unmanned aerial vehicle 10m according to Variation 1 of Embodiment 19 disconnects second connector 1720b from horizontal rail 7a1 and second connector 1720b passes vertically below coupler 1632a.

As illustrated in (a) in FIG. 178, control processor 11 pivots the first and second hooks of third connector 1720c to close third connector 1720c. This connects third connector 1720c to rail 7a2.

As illustrated in (b) FIG. 178, the first and second hooks of second connector 1720b are pivoted to open second connector 1720b. Control processor 11 also controls slider motor 1915 to move slider 1913 on the centerline of vehicle main body 1912m. This shifts the position of the center of gravity of vehicle main body 1912m onto the center line of vehicle main body 1912m.

As illustrated in (c) in FIG. 178, control processor 11 controls rear third propeller actuation motor 22a3 to rotate side propeller 22a1. With this, unmanned aerial vehicle 10m moves forward and second connector 1720b passes vertically below coupler 1632a.

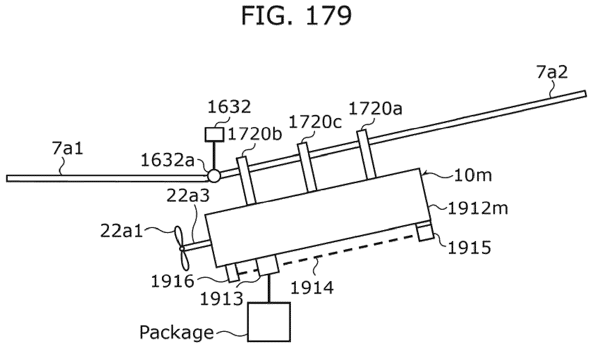

FIG. 179 is a schematic diagram illustrating an example of unmanned aerial vehicle 10m according to Variation 1 of Embodiment 19 connecting second connector 1720b to inclined rail 7a2.

As illustrated in FIG. 179, control processor 11 pivots the first and second hooks of second connector 1720b to close second connector 1720b. This connects second connector 1720b to rail 7a2.

Control processor 11 also controls slider motor 1915 to move slider 1913 toward the rear of vehicle main body 1912m. This shifts the position of the center of gravity of vehicle main body 1912m toward the rear of vehicle main body 1912m from the center line. Control processor 11 then rotates side propeller 22a1 by controlling the rear third propeller actuation motor 22a3. This causes unmanned aerial vehicle 10m to move forward.

### VARIATION 2 OF EMBODIMENT 19

Hereinafter, since the basic configuration of unmanned aerial vehicle 10m1 according to the present variation is the same as the basic configuration of the unmanned aerial vehicle of Embodiment 19 and the like, repeated description of the basic configuration of unmanned aerial vehicle 10m1 in the present variation will be omitted where appropriate.

Vehicle main body 1912m of unmanned aerial vehicle 10m1 differs from, for example, Variation 1 of Embodiment 19 in that it further includes fourth connector 1720d.

Fourth connector 1720d is disposed between first connector 1720a and third connector 1720c. Since the configuration of fourth connector 1720d is the same as that of first connector 1720a, second connector 1720b, and third connector 1720c, repeated description will be omitted.

### Operations

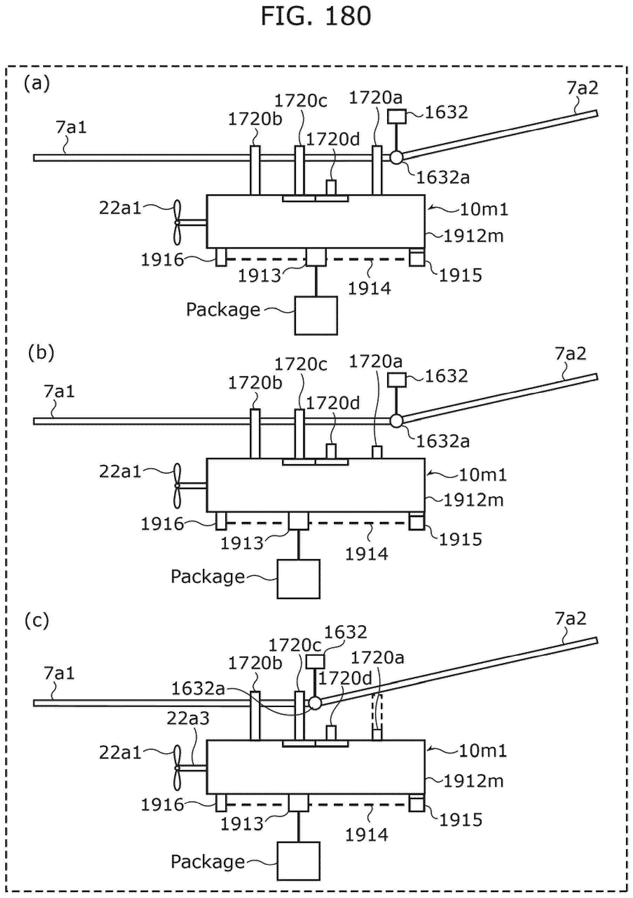

Next, an example of how unmanned aerial vehicle 10m switches from horizontal rail 7a1 to inclined rail 7a2 will be given with reference to FIG. 180 and other figures. FIG. 180 is a schematic diagram illustrating an example of how unmanned aerial vehicle 10m according to Variation 2 of Embodiment 19 disconnects first connector 1720a from horizontal rail 7a1.

The rail in this operation includes horizontal rail 7a1 that is approximately parallel to the horizontal plane and inclined rail 7a2 that is inclined relative to the horizontal plane. More specifically, one end of horizontal rail 7a1 is connected to the other end of inclined rail 7a2 via coupler 1632a. Coupler 1632a is connected and fixed to rail support portion 1632, which is provided on a utility pole or similar structure provided in the ground surface or the like. This operation illustrates an example of unmanned aerial vehicle 10m1 traveling from rail 7a1 to rail 7a2, where fourth connector 1720d is open during normal travel.

Unmanned aerial vehicle 10m1 travels along rail 7a1 by rotating side propeller 22a1. As illustrated in (a) in FIG. 180, when the distance between coupler 1632a and first connector 1720a is less than a predetermined distance, control processor 11 stops the rotation of side propeller 22a1 by controlling rear third propeller actuation motor 22a3 for rotating side propeller 22a1. This causes unmanned aerial vehicle 10m1 to stop traveling.

As illustrated in (b) in FIG. 180, control processor 11 pivots the first and second hooks of first connector 1720a to open first connector 1720a when the distance between coupler 1632a and first connector 1720a is less than the predetermined distance. By opening first connector 1720a, the first and second hooks of first connector 1720a will not come into contact with coupler 1632a when vehicle main body 1912m passes vertically below coupler 1632a. Fourth connector 1720d also does not contact coupler 1632a.

Control processor 11 also controls slider motor 1915 to move slider 1913 toward the rear of vehicle main body 1912m, just slightly beyond the central axis. In this operation example, control processor 11 causes slider 1913 to be positioned vertically below third connector 1720c. This shifts the position of the center of gravity of vehicle main body 1912m to a position vertically below third connector 1720c.

Control processor 11 then rotates side propeller 22a1 by controlling the rear third propeller actuation motor 22a3. With this, unmanned aerial vehicle 10m1 moves forward and first connector 1720a and fourth connector 1720d pass vertically below coupler 1632a, as illustrated in (c) in FIG. 180. At this time, since rail 7a2 is inclined relative to rail 7a1, even if first connector 1720a is closed, the first and second hooks may come into contact with rail 7a2, as shown by the dashed line, and first connector 1720a may not be able to couple to rail 7a2.

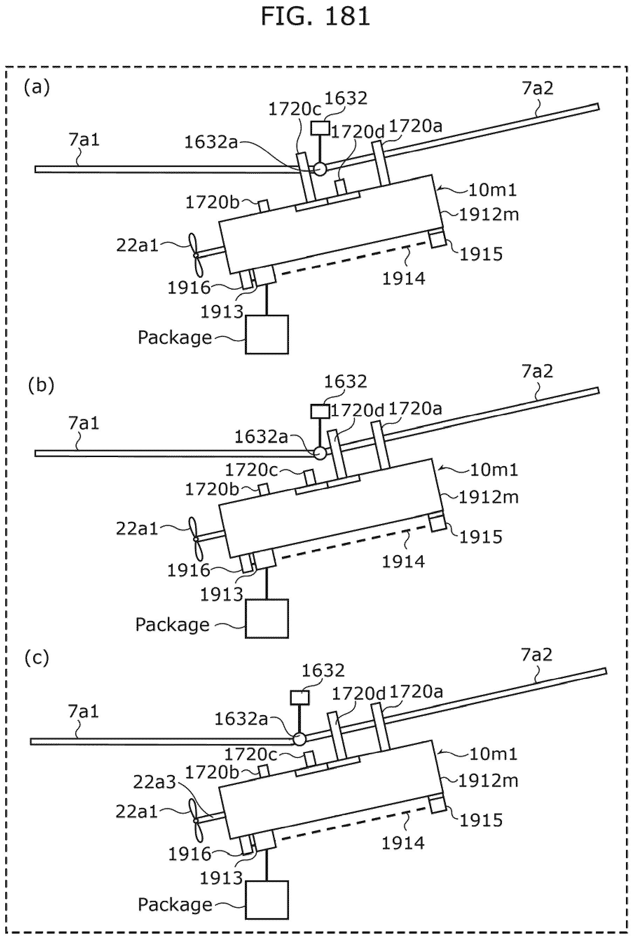

FIG. 181 is a schematic diagram illustrating an example of the connecting of first connector 1720a and fourth connector 1720d to inclined rail 7a2 by moving rearward the center of gravity of vehicle main body 1912m of unmanned aerial vehicle 10m according to Variation 2 of Embodiment 19.

As illustrated in (a) in FIG. 181, control processor 11 pivots the first and second hooks of second connector 1720b to open second connector 1720b. Control processor 11 also controls slider motor 1915 to move slider 1913 further toward the rear of vehicle main body 1912m. This shifts the position of the center of gravity of vehicle main body 1912m toward the rear of vehicle main body 1912m.

Accordingly, the front of vehicle main body 1912m is lifted to tilt vehicle main body 1912m so that the attitude of vehicle main body 1912m is in line with rail 7a2. Control processor 11 pivots the first and second hooks of first connector 1720a to close first connector 1720a. This connects first connector 1720a to rail 7a2.

As illustrated in (b) in FIG. 181, control processor 11 pivots the first and second hooks of fourth connector 1720d to close fourth connector 1720d. This connects fourth connector 1720d to rail 7a2. The first and second hooks of third connector 1720c are pivoted to open third connector 1720c.

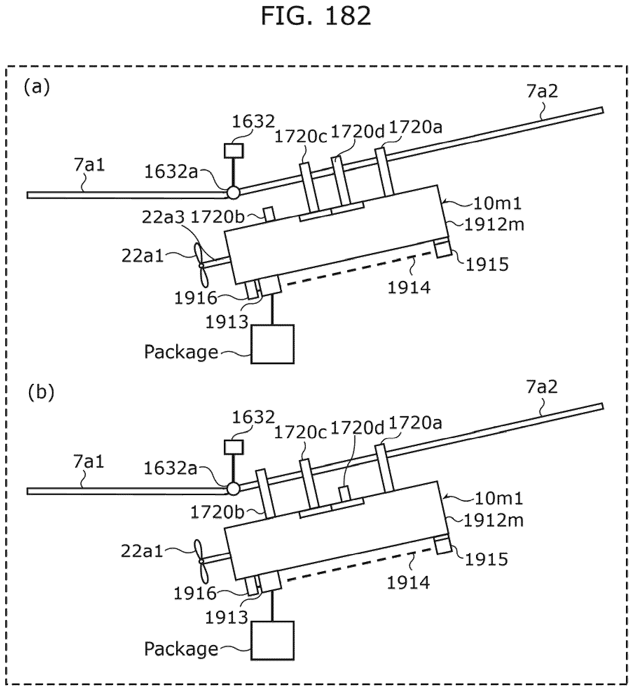

As illustrated in (c) in FIG. 181, control processor 11 controls rear third propeller actuation motor 22a3 to rotate side propeller 22a1. With this, unmanned aerial vehicle 10m1 moves forward, and third connector 1720c and second connector 1720b pass vertically below coupler 1632a in this order, as illustrated in (c) in FIG. 181 and (a) in FIG. 182.

FIG. 182 is a schematic diagram illustrating an example of the connecting of second connector 1720b and third connector 1720c to inclined rail 7a2 and disconnecting fourth connector 1720d from inclined rail 7a2 by moving rearward the center of gravity of vehicle main body 1912m of unmanned aerial vehicle 10m according to Variation 2 of Embodiment 19.

As illustrated in (a) in FIG. 182, control processor 11 pivots the first and second hooks of third connector 1720c to close third connector 1720c. This connects third connector 1720c to rail 7a2.

As illustrated in (b) in FIG. 182, control processor 11 pivots the first and second hooks of second connector 1720b to close second connector 1720b. This connects second connector 1720b to rail 7a2. Control processor 11 also pivots the first and second hooks of fourth connector 1720d to open fourth connector 1720d. This disconnects fourth connector 1720d from rail 7a2. Control processor 11 then rotates side propeller 22a1 by controlling the rear third propeller actuation motor 22a3. This causes unmanned aerial vehicle 10m1 to move forward.

### EMBODIMENT 20

### Configuration

Hereinafter, since the basic configuration of unmanned aerial vehicle 10n according to the present embodiment is the same as the basic configuration of the unmanned aerial vehicle according to Embodiment 16 and the like, repeated description of the basic configuration of unmanned aerial vehicle 10n in the present embodiment will be omitted where appropriate. The present embodiment differs from Embodiment 16, etc., in that first connector 1720a of unmanned aerial vehicle 10n is eccentric about the approximate center of vehicle main body 1912. The present embodiment may also be used with lifting systems and unmanned aerial vehicles according to embodiments and other than Embodiment 16.

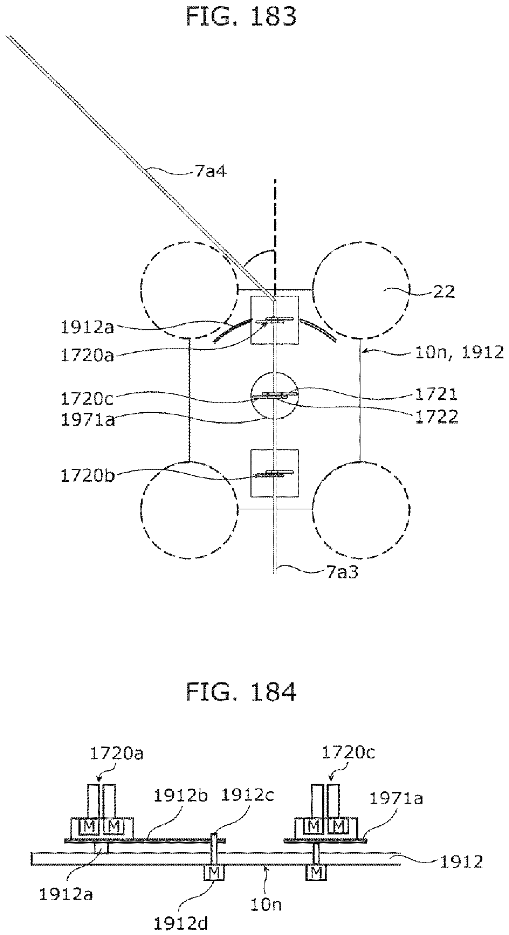

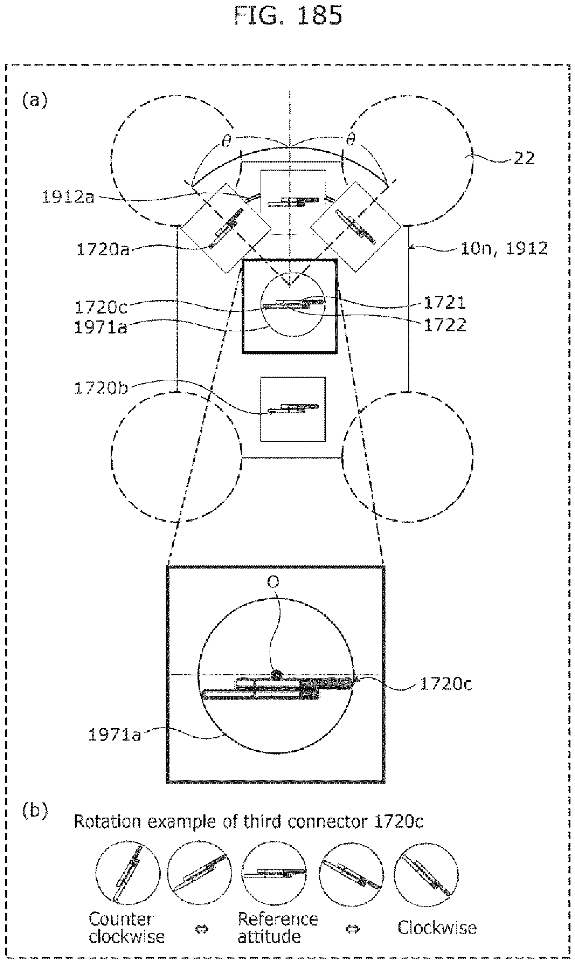

FIG. 183 is a schematic diagram illustrating an example of unmanned aerial vehicle 10n according to Embodiment 20. FIG. 184 is a schematic diagram illustrating an example of first connector 1720a and third connector 1720c of unmanned aerial vehicle 10n according to Embodiment 20 as viewed from the side. In FIG. 185, (a) is a plan view illustrating an example of unmanned aerial vehicle 10n in Embodiment 20 and an enlarged partial view of third connector 1720c and turntable 1971a, and (b) is a schematic diagram illustrating an example of third connector 1720c and turntable 1971a rotating around a central point.

As illustrated in FIG. 183 through FIG. 185, first connector 1720a is provided in vehicle main body 1912 so that it moves predetermined angle θ about the approximate center of vehicle main body 1912. First connector 1720a moves in an arc defined by a predetermined angle θ between the lengthwise direction of vehicle main body 1912 and a line connecting the approximate center of vehicle main body 1912 and first connector 1720a. In the present embodiment, the predetermined angle θ is approximately 90°.

Accordingly, guide rail 1912a is formed on vehicle main body 1912 to allow first connector 1720a to slide. More specifically, unmanned aerial vehicle 10n includes rotating plate 1912b that rotates along the direction in which guide rail 1912a extends, rotary shaft 1912c that permits rotation of rotating plate 1912b, and motor 1912d that rotates rotary shaft 1912c.

As illustrated in FIG. 184, first connector 1720a is coupled and fixed to the upper surface of rotating plate 1912b. Rotating plate 1912b is also coupled to rotary shaft 1912c and rotates around the axis of rotary shaft 1912c. As rotating plate 1912b rotates, it is guided by guide rail 1912a of vehicle main body 1912, which restricts the amount of rotation of rotating plate 1912b. Guide rail 1912a is arc-shaped with an angle of approximately 90° around the center of rotary shaft 1912c. Rotary shaft 1912c is fixed to the center portion of vehicle main body 1912. More specifically, rotary shaft 1912c is fixed to vehicle main body 1912 in an attitude in which the extension line of its axial center is approximately orthogonal to the virtual plane described above. In the present embodiment, rotary shaft 1912c is essentially positioned between first connector 1720a and third connector 1720c.

Third connector 1720c according to the present embodiment is also located further away from the center point O of turntable 1971a (one example of the first fixed portion). Therefore, as illustrated in (a) and (b) in FIG. 185, third connector 1720c is eccentric about center point O with the rotation of turntable 1971a.

### Operation Example

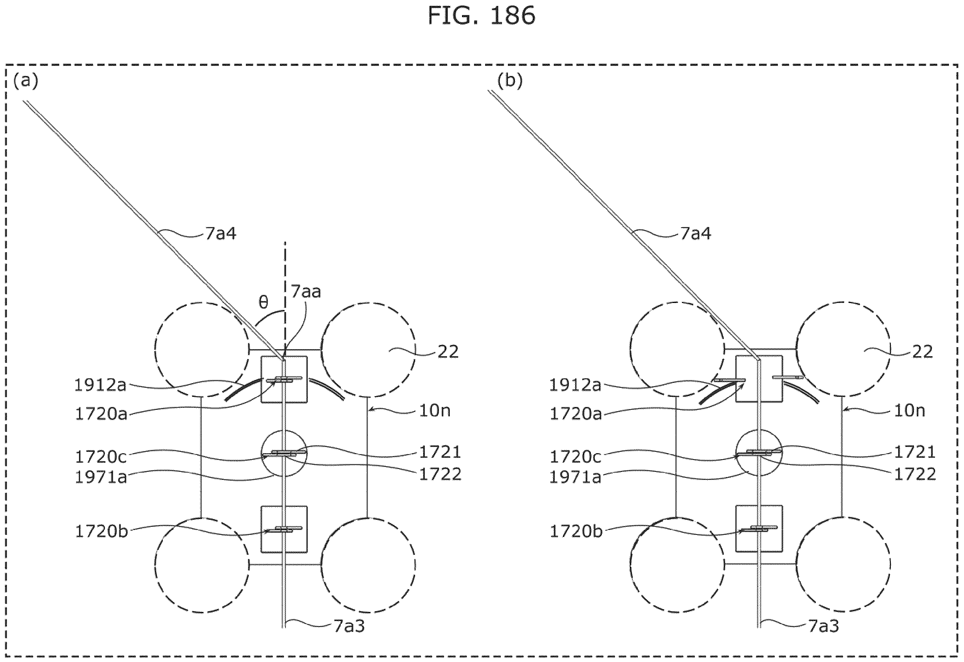

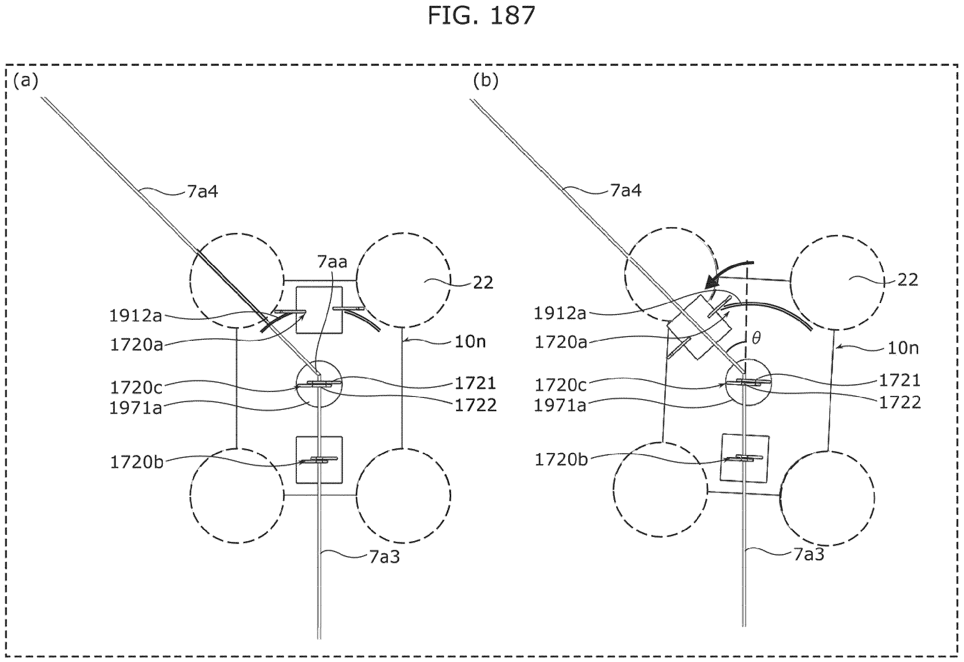

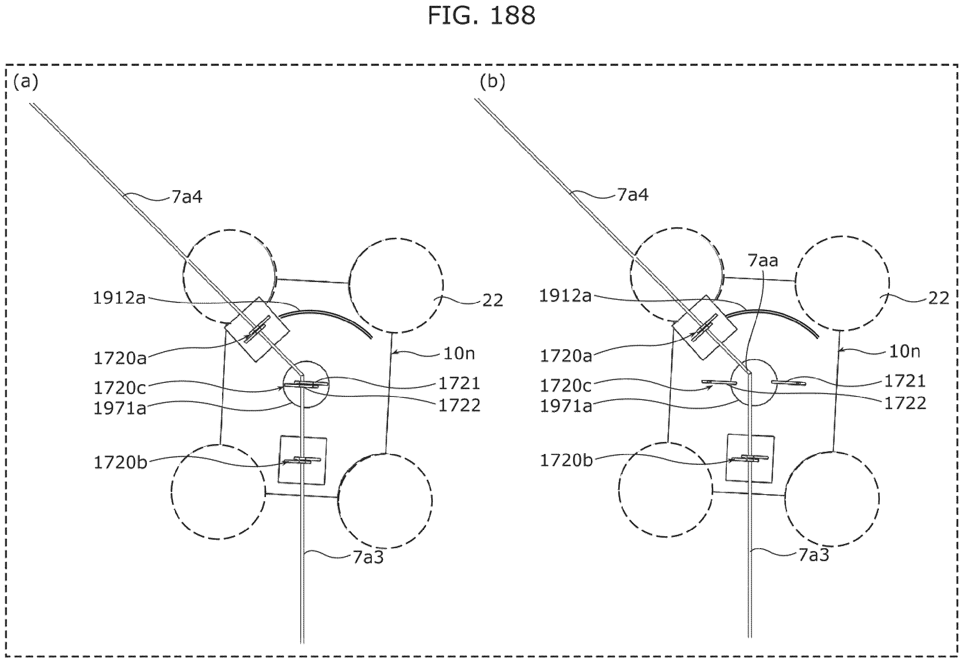

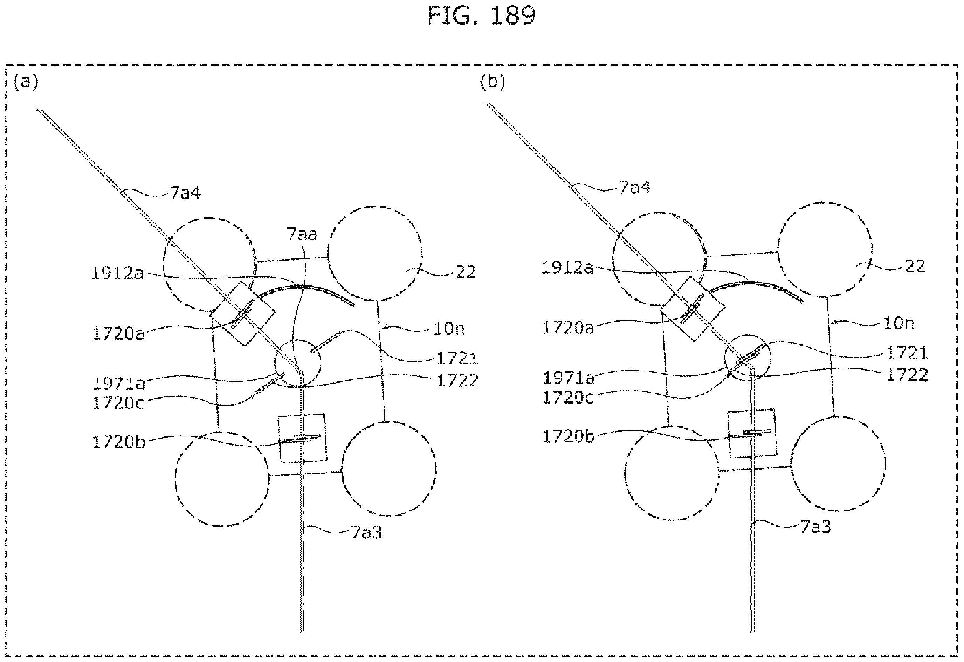

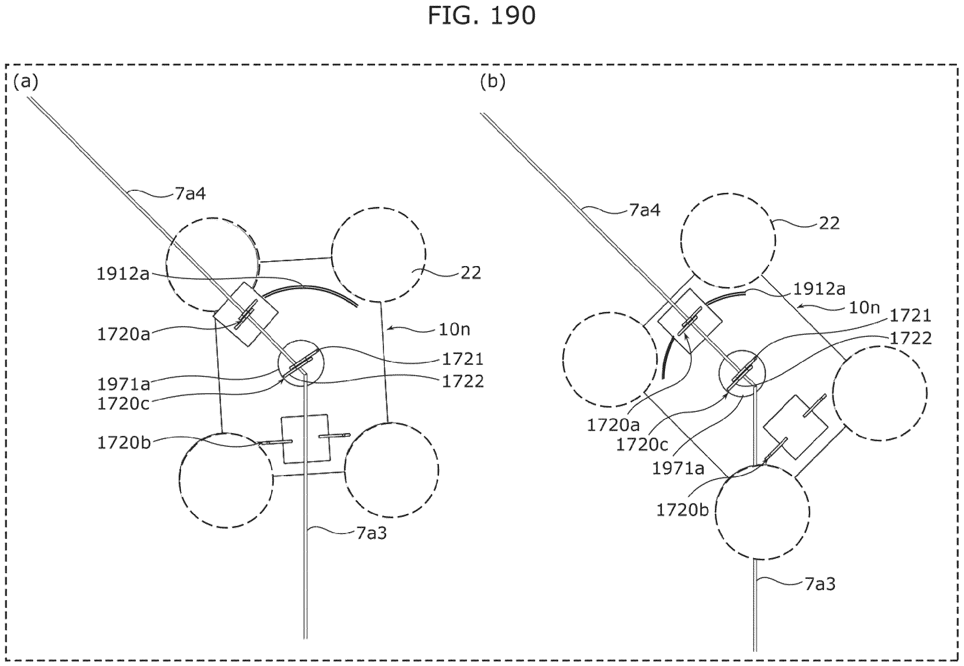

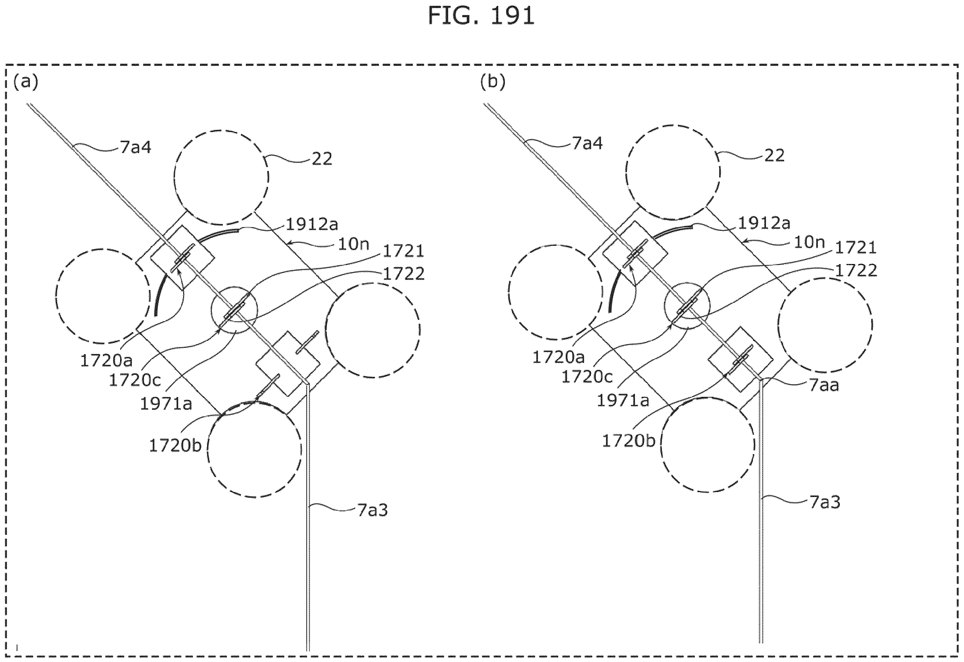

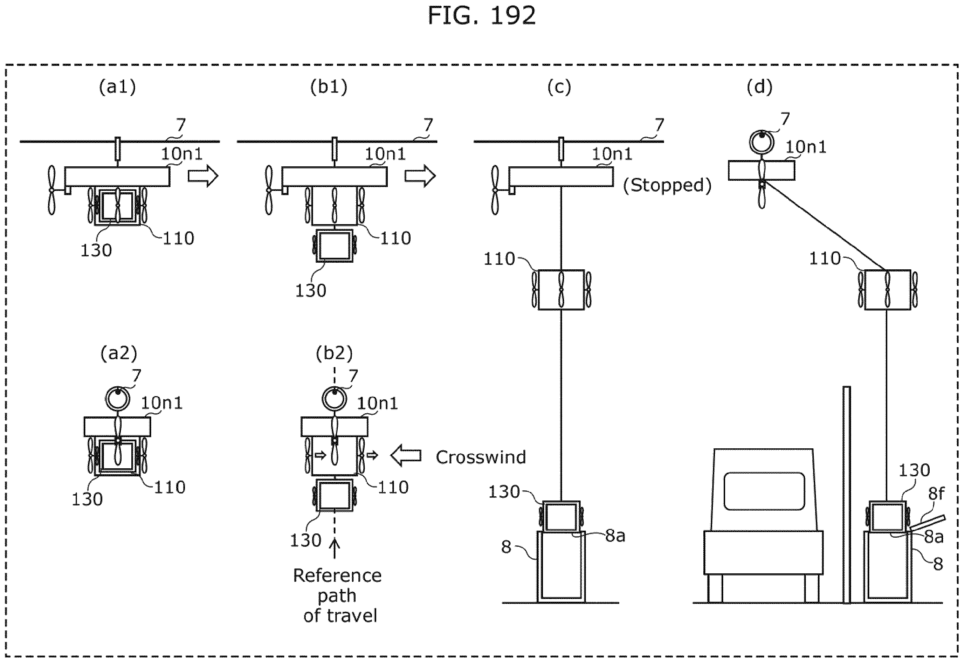

First, an example will be given of unmanned aerial vehicle 10n switching from rail 7a3 to rail 7a4, as illustrated in FIG. 186 through FIG. 191. FIG. 186 is a schematic diagram illustrating an example of first connector 1720a of unmanned aerial vehicle 10n according to Embodiment 20 opening. FIG. 187 is a schematic diagram illustrating an example of first connector 1720a of unmanned aerial vehicle 10n according to Embodiment 20 becoming eccentric relative to the axial center of rotary shaft 1912c. FIG. 188 is a schematic diagram illustrating an example of first connector 1720a of unmanned aerial vehicle 10n according to Embodiment 20 closing and third connector 1720c of unmanned aerial vehicle 10n according to Embodiment 20 opening. FIG. 189 is a schematic diagram illustrating an example of how third connector 1720c of unmanned aerial vehicle 10n according to Embodiment 20 is eccentric with respect to the center point of turntable 1971a and third connector 1720c closing. FIG. 190 is a schematic diagram illustrating an example of second connector 1720b of unmanned aerial vehicle 10n according to Embodiment 20 opening and vehicle main body 1912 rotating. FIG. 191 is a schematic diagram illustrating an example of second connector 1720b of unmanned aerial vehicle 10n according to Embodiment 20 closing.

As illustrated in (a) in FIG. 186, the rails in this operation include rail 7a3, which extends in a direction approximately parallel to the horizontal plane, and rail 7a4, which extends in a direction approximately parallel to the horizontal plane and is angled relative to rail 7a3. More specifically, one end of rail 7a3 is connected to the other end of rail 7a4. The connection portion between rail 7a3 and rail 7a4 may be referred to as bend 7aa. In this operation, unmanned aerial vehicle 10n is exemplified as traveling from rail 7a3 toward rail 7a4.

Unmanned aerial vehicle 10n travels along rail 7a3 by rear third propeller actuation motor 22a3 rotating side propeller 22a1, as shown, for example, in FIG. 147A. Control processor 11 determines whether the distance between rail 7a4 and first connector 1720a is less than a predetermined distance.

If the distance between rail 7a4 and first connector 1720a is less than the predetermined distance, control processor 11 pivots first hook 1721 and second hook 1722 of first connector 1720a as illustrated in (b) in FIG. 186 to open first connector 1720a, because first connector 1720a is close to bend 7aa. At this time, control processor 11, as illustrated in FIG. 3, etc., controls third propeller actuation motor 22a3 to stop the rotation of side propeller 22a1. This causes unmanned aerial vehicle 10n to stop traveling.

When first connector 1720a opens, control processor 11 then rotates side propeller 22a1 by controlling the rear third propeller actuation motor 22a3. This causes unmanned aerial vehicle 10n to move forward until first connector 1720a passes vertically below bend 7aa and third connector 1720c approaches rail 7a4, as illustrated in (a) in FIG. 187. If the distance between rail 7a4 and third connector 1720c is less than the predetermined distance, control processor 11 controls third propeller actuation motor 22a3 to stop the rotation of side propeller 22a1. This causes unmanned aerial vehicle 10n to stop traveling.

Control processor 11 actuates motor 1912d to rotate rotary shaft 1912c of FIG. 184. More specifically, control processor 11 actuates motor 1912d to rotate rotary shaft 1912c of FIG. 184 so that first connector 1720a overlaps rail 7a4 in the top view. As illustrated in FIG. 184 and (b) in FIG. 187, this causes first connector 1720a to move to a position vertically below rail 7a4 by the rotation of rotary shaft 1912c causing rotating plate 1912b to rotate (counterclockwise) about the axis of rotation of rotary shaft 1912c. This places first connector 1720a vertically below rail 7a4. In the present embodiment, first connector 1720a is located on the left side of vehicle main body 1912 in the top view. First connector 1720a may be positioned on the right side of vehicle main body 1912 in the top view, depending on how bend 7aa bends.

As illustrated in FIG. 188, control processor 11 pivots first hook 1721 and second hook 1722 of first connector 1720a to close first connector 1720a. First connector 1720a connects to rail 7a4 by first connector 1720a closing.

Control processor 11 opens third connector 1720c by pivoting first hook 1721 and second hook 1722 of third connector 1720c, as illustrated in (b) in FIG. 188, when first connector 1720a closes because third connector 1720c is close to bend 7aa.

When third connector 1720c opens, control processor 11 then rotates side propeller 22a1 by controlling the rear third propeller actuation motor 22a3. This causes unmanned aerial vehicle 10n to move forward until third connector 1720c passes vertically below bend 7aa, as illustrated in (a) in FIG. 189.

When third connector 1720c of unmanned aerial vehicle 10n passes vertically below bend 7aa, control processor 11 stops the rotation of side propeller 22a1 by controlling the rear third propeller actuation motor 22a3. This causes unmanned aerial vehicle 10n to stop at a point immediately after third connector 1720c passes vertically below bend 7aa.

Control processor 11 causes open third connector 1720c to be eccentric about center point O by rotating turntable 1971a. More specifically, control processor 11 causes third connector 1720c to be eccentric about center point O so that the openings of first hook 1721 and second hook 1722 of third connector 1720c intersect with rail 7a4. Third connector 1720c is then eccentric counterclockwise by rotation of turntable 1971a and moves to a position vertically below rail 7a4. This places third connector 1720c vertically below rail 7a4.

As illustrated in (b) in FIG. 189, control processor 11 pivots first hook 1721 and second hook 1722 of third connector 1720c to close third connector 1720c. Third connector 1720c connects to rail 7a3 by third connector 1720c closing.

When third connector 1720c closes, control processor 11 opens second connector 1720b by pivoting first hook 1721 and second hook 1722 of second connector 1720b as illustrated in (a) in FIG. 190, because second connector 1720b is close to bend 7aa.

As illustrated in FIG. 184 and (b) in FIG. 190, control processor 11 actuates motor 1912d to rotate rotary shaft 1912c to return first connector 1720a to its original position and rotate turntable 1971a to return third connector 1720c to its original position.

More specifically, control processor 11 rotates rotating plate 1912b about its axial center (clockwise) by rotating rotating shaft 1912c so that first connector 1720a is positioned in the center of vehicle main body 1912 in the width direction (so that first connector 1720a, third connector 1720c, and second connector 1720b line up linearly). By the rotation of rotary shaft 1912c rotating plate 1912b to rotate about its axial center (clockwise), first connector 1720a returns to its original position.

Control processor 11 also rotates (clockwise) turntable 1971a so that the plane in which first hook 1721 and second hook 1722 of third connector 1720c are open and the plane in which first hook 1721 and second hook 1722 of second connector 1720b are open are opposite (approximately parallel to) one another. By the rotation of turntable 1971a causing third connector 1720c to be eccentric (clockwise eccentric) about center point O, third connector 1720c returns to its original position.

Vehicle main body 1912 is also rotated (counter clockwise) by the rotational force of first connector 1720a and third connector 1720c. In this way, the planes in which first hook 1721 and second hook 1722 of the first, third, and second connectors 1720a, 1720c, and 1720b, respectively, are aligned so that they are opposite (approximately parallel to) one another, and all attitudes are restored.

Once vehicle main body 1912 rotates and the attitudes of the first, third, and second connectors 1720a, 1720c, and 1720b are all restored, control processor 11 controls the rear third propeller actuation motor 22a3 to rotate side propeller 22a1. This causes unmanned aerial vehicle 10n to move forward until second connector 1720b passes vertically below bend 7aa, as illustrated in (a) in FIG. 191.

When second connector 1720b of unmanned aerial vehicle 10n passes vertically below bend 7aa, control processor 11 stops the rotation of side propeller 22a1 by controlling the rear third propeller actuation motor 22a3. 6This causes unmanned aerial vehicle 10n to stop at a point immediately after second connector 1720b passes vertically below bend 7aa.

As illustrated in (b) in FIG. 191, control processor 11 pivots first hook 1721 and second hook 1722 of second connector 1720b to close second connector 1720b. Second connector 1720b connects to rail 7a4 by second connector 1720b closing.

This allows unmanned aerial vehicle 10n to connect from rail 7a3 to rail 7a4. Control processor 11 then rotates side propeller 22a1 by controlling the rear third propeller actuation motor 22a3. This allows unmanned aerial vehicle 10n to start traveling on rail 7a4.

### EMBODIMENT 21

### Configuration

Hereinafter, since the basic configuration of lifting system 5b and unmanned aerial vehicle 10n1 according to the present embodiment is the same as the basic configuration of the lifting system and the unmanned aerial vehicle according to Embodiment 1 and the like, repeated description of the basic configuration of lifting system 5b and unmanned aerial vehicle 10n1 in the present embodiment will be omitted where appropriate. In the present embodiment, lifting system 5b differs from Embodiment 1 and the like in that first thruster device 110 is housed in second thruster device 130. The present embodiment may also be used with lifting systems and unmanned aerial vehicles according to embodiments and other than Embodiment 1.

FIG. 192 is a schematic diagram illustrating an example of unmanned aerial vehicle 10n1 according to Embodiment 21 and how unmanned aerial vehicle 10n1 stores a package in delivery box 8. In FIG. 192, (a1) is a side view of unmanned aerial vehicle 10n1. In FIG. 192, (a2) is a front view of unmanned aerial vehicle 10n1. In FIG. 192, (b1) is a side view illustrating an example of second thruster device 130 being lowered from unmanned aerial vehicle 10n1. In FIG. 192, (b2) is a front view illustrating an example of second thruster device 130 being lowered from unmanned aerial vehicle 10n1. In FIG. 192, (c) is a side view illustrating an example of first thruster device 110 and second thruster device 130 being lowered from unmanned aerial vehicle 10n1 and a package being stored in delivery box 8. In FIG. 192, (d) is a side view illustrating an example of first thruster device 110 and second thruster device 130 being lowered in the horizontal direction and a package being stored in delivery box 8.

As illustrated in (a1) and (a2) in FIG. 192, a space is formed in first thruster device 110 that can house second thruster device 130. More specifically, support member 111, as shown for example in FIG. 6, of first thruster device 110 is a rectangular frame or enclosure, which can house second thruster device 130 inside. Support member 111 is therefore larger than second thruster device 130. Second thruster device 130 can be loaded with a package.

When unmanned aerial vehicle 10n1 travels, second thruster device 130 is housed in first thruster device 110. However, when unmanned aerial vehicle 10n1 travels, second thruster device 130 may be out of first thruster device 110.

As illustrated in (b1) and (b2) in FIG. 192, if first thruster device 110 and second thruster device 130 are exposed to a crosswind while traveling, first thruster device 110 and second thruster device 130 rotate propellers 113, which are located on the surface opposite the crosswind, to reduce the effects of the crosswind so that unmanned aerial vehicle 10n1 does not deviate from the reference path of travel. Unmanned aerial vehicle 10n1 may be equipped with, for example, an anemometer.

When unmanned aerial vehicle 10n1 arrives to a position vertically above delivery box 8, unmanned aerial vehicle 10n1 lowers both first thruster device 110 and second thruster device 130. If first thruster device 110 and second thruster device 130 are still exposed to a crosswind during their descent, first thruster device 110 and second thruster device 130 may reduce the effects of the crosswind by rotating propellers 113, which are located on the surface opposite the crosswind.

When first thruster device 110 and second thruster device 130 have descended a predetermined distance, only second thruster device 130 is lowered further with respect to first thruster device 110. Accordingly, in the example in (c) in FIG. 192, second thruster device 130 arrives at the plane of opening 8a of delivery box 8. As described above, as illustrated in (d) in FIG. 192, when there is no rail 7 vertically above delivery box 8, first thruster device 110 and second thruster device 130 may be lowered in a horizontally downward direction to a position vertically above delivery box 8 so that second thruster device 130 arrives at the plane of opening 8a of delivery box 8.

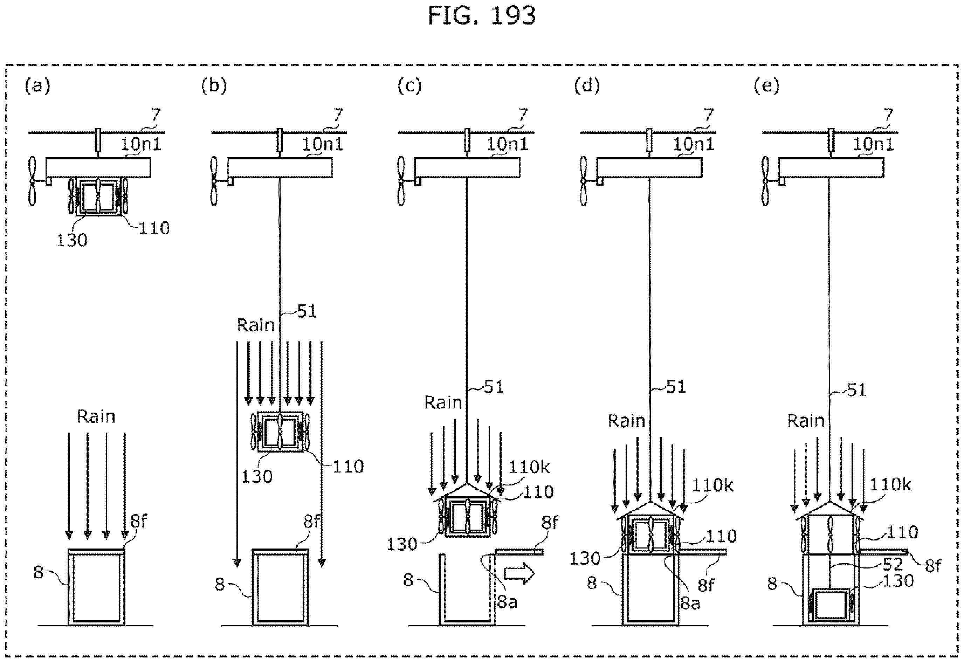

Unmanned aerial vehicle 10n1 may also include umbrella 110k, as illustrated in FIG. 193 to be described below. For example, in the case of rain, snow, or other weather conditions, when second thruster device 130 of unmanned aerial vehicle 10n1 puts a package into delivery box 8, delivery box 8 must have its lid 8f (one example of a door) opened, but if lid 8f is open, rain, snow, or other elements get inside delivery box 8. First thruster device 110 may therefore include umbrella 110k. For example, umbrella 110k is positioned on the vertical upper surface of support member 111 of first thruster device 110. If the weather is not rainy, snowy, etc., umbrella 110k may be folded (closed). Umbrella 110k, when open, is conical, pyramidal, hemispherical, etc. Umbrella 110k may also be opened during rain, snow, or other weather conditions. The opening and closing of umbrella 110k may be performed by control processor 11 of unmanned aerial vehicle 10n1, for example, illustrated in FIG. 3. Control processor 11 controls the actuator that opens and closes umbrella 110k to open and close umbrella 110k.

Control processor 11 may also determine the presence or absence of rain, snow, etc., by obtaining weather information from an external server or other source. Control processor 11 may also determine the presence or absence of rain, snow, etc., by capturing images of the surroundings with camera sensor 45, for example, illustrated in FIG. 3.

### Operation Example

FIG. 193 is a schematic diagram illustrating an example of unmanned aerial vehicle 10n1 according to Embodiment 21 storing a package in delivery box 8 in the rain. This operation example assumes that it is raining in the surrounding area. In this operation example, second thruster device 130 is loaded with a package.

As illustrated in (a) and (b) in FIG. 193, unmanned aerial vehicle 10n1 first arrives at a position vertically above delivery box 8, which is the receiver, while connected to rail 7. When unmanned aerial vehicle 10n1 arrives, thruster controller 124 of first thruster device 110 illustrated in, for example, FIG. 23 controls wire control module 125 to begin reeling out wire 51. This causes first thruster device 110 and second thruster device 130 to descend with the package.

When the distance between the package and delivery box 8 reaches a predetermined distance as wire control module 125 of the first thruster device continues to reel out wire 51, as illustrated in (c) in FIG. 193, control processor 11 controls the actuator of first thruster device 110 to open umbrella 110k included in first thruster device 110. This makes it difficult for delivery box 8, which is positioned vertically below umbrella 110k, to get wet even when it is raining because umbrella 110k blocks the rain.

When umbrella 110k is opened, delivery box 8 opens lid 8f to open opening 8a. Delivery box 8 may open lid 8f to open opening 8a when second thruster device 130 or the package and delivery box 8 come even closer together.

Here, control processor 11 may cause delivery box 8 to open lid 8f by sending an opening instruction to delivery box 8 to open lid 8f via second communicator 13 illustrated in FIG. 23, for example. If delivery box 8 includes a camera sensor, proximity sensor, or other sensor, delivery box 8 may automatically open lid 8f when such a sensor detects that second thruster device 130 and the package have come within a predetermined distance of delivery box 8.

Even when opening 8a is open, umbrellas 110k can block the rain, thus preventing rain from entering the interior of delivery box 8.

As illustrated in (d) in FIG. 193, when lid 8f of delivery box 8 is opened to open opening 8a, first thruster device 110, second thruster device 130 and the package arrive at opening 8a, which covers opening 8a. As illustrated in (e) in FIG. 193, thruster controller 144 illustrated in, for example, FIG. 23 of second thruster device 130 controls wire control module 145 to start reeling out wire 52. This lowers second thruster device 130 and the package. When second thruster device 130 lands on the bottom of delivery box 8, second thruster device 130 disconnects the package and stores the package inside delivery box 8.

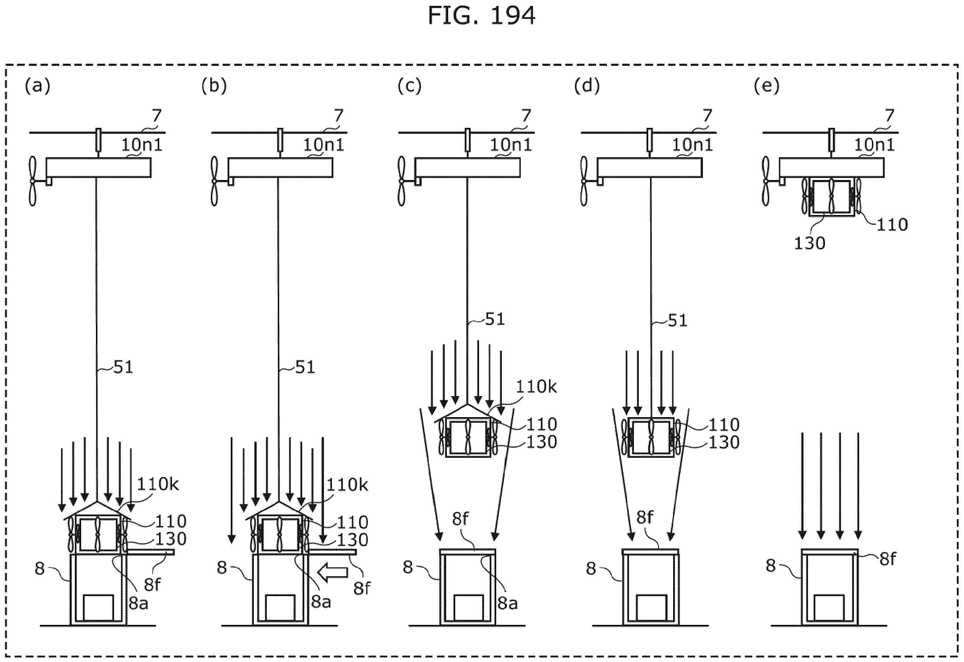

As illustrated in (a) in FIG. 194, once the package is disconnected, thruster controller 144 of second thruster device 130 controls wire control module 145 to begin reeling in wire 52. This lifts and houses second thruster device 130 inside first thruster device 110, so thruster controller 144 of second thruster device 130 controls wire control module 145 to stop reeling in wire 52.

Once second thruster device 130 is housed inside first thruster device 110, thruster controller 124 of first thruster device 110 controls wire control module 125 to start reeling in wire 51. As a result, when first thruster device 110 and second thruster device 130 are lifted and are a predetermined distance away from the plane in which opening 8a of delivery box 8 opens, delivery box 8 promptly closes lid 8f to close opening 8a, as illustrated in (b) and (c) in FIG. 194.

As illustrated in (d) in FIG. 194, when lid 8f of delivery box 8 is closed, control processor 11 controls the actuator of first thruster device 110 to close umbrella 110k included in first thruster device 110.

Thruster controller 124 of first thruster device 110 controls wire control module 125 to continue reeling in wire 51, thereby raising first thruster device 110 and second thruster device 130. As illustrated in (e) in FIG. 194, since first thruster device 110 and second thruster device 130 are attached to unmanned aerial vehicle 10n1, thruster controller 124 of first thruster device 110 controls wire control module 125 to stop reeling in wire 51. Unmanned aerial vehicle 10n1 then returns to the sender.

### EMBODIMENT 22

Hereinafter, since the basic configuration of delivery box 8 according to the present embodiment is the same as the basic configuration of the delivery box according to Embodiment 1 and the like, and the basic configuration of unmanned aerial vehicle 10 according to the present embodiment is the same as the basic configuration of the unmanned aerial vehicle according to Embodiment 1 and the like, repeated description of the basic configuration of delivery box 8 and unmanned aerial vehicle 10 in the present embodiment will be omitted where appropriate. The present embodiment may also be used with lifting systems and unmanned aerial vehicles according to embodiments and other than Embodiment 1.

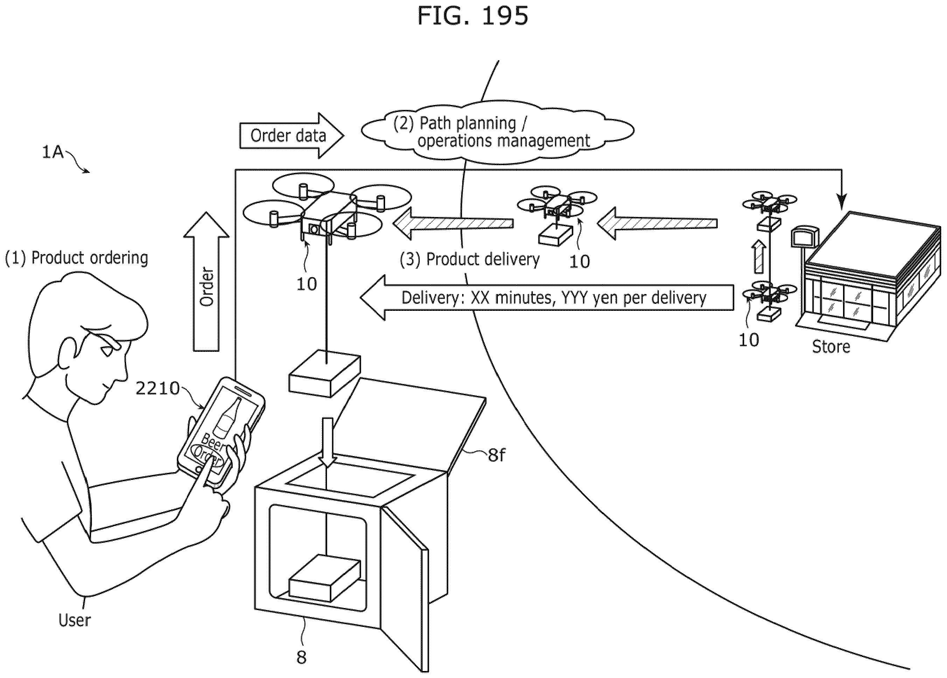

The present embodiment describes delivery system 1A (one example of a system) that uses unmanned aerial vehicle 10 to execute a flight plan for delivering a package to delivery box 8. FIG. 195 is a schematic diagram illustrating an example of how a product ordered by a user is delivered using delivery system 1A according to Embodiment 22. The package is one example of a transported item.

### Outline

As illustrated in FIG. 195, for example, a user orders a product from delivery system 1A via terminal device 2210, such as a smartphone or tablet. Delivery system 1A delivers the package, which is the ordered product, to the user. Stated differently, delivery system 1A can store a package, which is an ordered product, in the user's delivery box 8. Delivery system 1A manages the packing of the package, the point in time when the package is shipped, the expected period of time for delivery, the point in time when package is delivered, etc., depending on, for example, the type and condition of the package, and stores the package in delivery box 8 when predetermined conditions are met.

However, if the user orders a product via terminal device 2210 but the interior of delivery box 8 is full, unmanned aerial vehicle 10 cannot store the package in delivery box 8. In this case, after having the package removed from inside delivery box 8 by the user, the package can be stored in empty delivery box 8. For this reason, delivery system 1A ensures that packages are delivered to delivery box 8.

When the product ordered by the user is clothing, shoes, a watch, or a bag, etc., it is normal for the user to try on the product first to determine whether the product meets their expectations. Accordingly, when the product needs to be tried on, delivery system 1A delivers the product a plurality of times to the user until the user decides to purchase the product. This allows the user to try on the product and decide whether or not to purchase the product.

If the package is frozen food, refrigerated food, ramen noodles, pizza, etc., which require temperature retention (one example of a transported item requiring cold or heat retention), package platform 2220 of unmanned aerial vehicle 10 and delivery box 8 must be able to achieve a certain level of temperature retention. Unmanned aerial vehicle 10 is also required to store the package in delivery box 8 within a predetermined period of time. Strict time management is therefore required for some types of packages. For example, frozen food such as ice cream is a package that needs to be delivered to the user while it is cold, and is a package that has a tendency to melt easily. Hot foods such as ramen noodles and home-delivered pizza are packages that need to be delivered to the user while they are still warm, and are packages that have a tendency to get cold easily. Accordingly, when delivering a product that requires temperature retention, delivery system 1A takes into account the time required for delivery, the temperature at the time of shipment, the weather, the atmospheric temperature, and other factors.

### Delivery System 1A

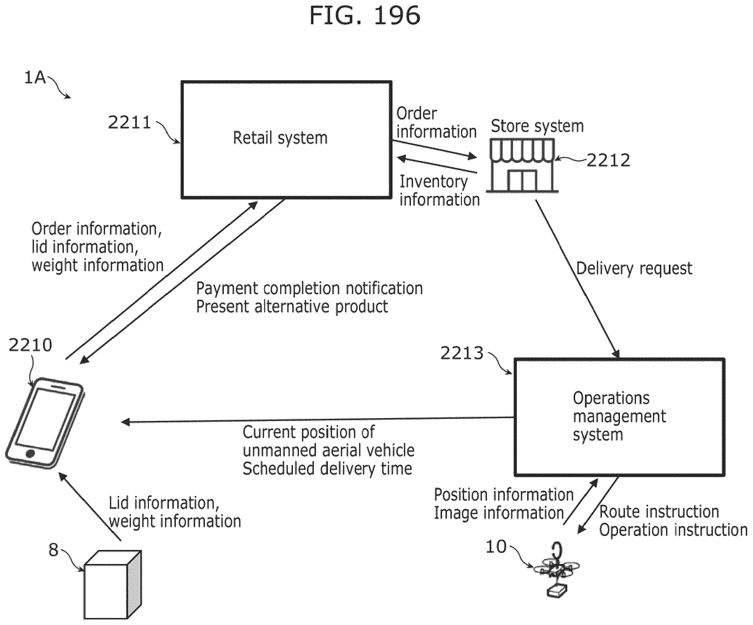

FIG. 196 is a block diagram illustrating an example of delivery system 1A according to Embodiment 22.

As illustrated in FIG. 196, delivery system 1A includes terminal device 2210, retail system 2211, a plurality of store systems 2212, operations management system 2213, unmanned aerial vehicle 10, and delivery box 8.

Terminal device 2210 is a smartphone, tablet terminal, personal computer, etc., equipped with a user application. The user application is used when the user wants to order a product from retail system 2211, and displays a menu screen of services or products on terminal device 2210. Through user operation, terminal device 2210 registers the user via a displayed menu screen.

When a user orders a product via terminal device 2210 after user registration, terminal device 2210 accesses retail system 2211, which manages store systems 2212, through user operation. The user application displays products and the inventory status of products of store systems 2212 on the menu screen. Terminal device 2210, i.e., the user application, accepts order information, which is information about an ordered product or products, through user operation, and transmits the accepted order information to retail system 2211 and to store system 2212 via retail system 2211. Here, the order information is information indicating the product(s) selected by the user, the weight of the product(s), the user's name, the user's address, the desired time of delivery (desired arrival time), etc. The desired time of delivery is the time when the package is handed directly to the user or when the package is stored in delivery box 8.

Retail system 2211 is system that manages store systems 2212. For example, retail system 2211 aggregates products for presentation to users via the user application by obtaining inventory information, which is information indicating the availability of products held by each of store systems 2212, from store systems 2212. Stated differently, retail system 2211 collectively manages the inventory status (inventory information) of all products held by each of multiple store systems 2212. Retail system 2211 also sends inventory information to terminal device 2210. This will display the products and product availability, etc., on the menu screen of the user application.

Retail system 2211 also maintains a customer database of information about registered users. The customer database is an aggregate of the information about the users. Information about the users includes, for example, user addresses, user names, user telephone numbers, user ages, user genders, and product purchase history.

When retail system 2211 receives the order information from terminal device 2210 with the decision to purchase the product, it notifies terminal device 2210 of the completion of the payment. The menu screen of the user application will then display a payment completion notification. The user recognizes that the product purchase has been completed by the display of the payment completion notification. When retail system 2211 receives the order information from terminal device 2210, it sends the order information to store system 2212 that holds the product indicated in the order information.

If the product the user is seeking is not available in store system 2212, retail system 2211 may present an alternative product similar to the product the user is seeking to terminal device 2210.

Store system 2212 is a system used by a store to deliver products ordered by users. Store system 2212 manages the delivery of products ordered by users, manages the products in the store, and manages the inventory status of products handled by the store. Store system 2212 sends inventory information to retail system 2211 at predetermined intervals.

When store system 2212 receives order information from terminal device 2210 via retail system 2211, it makes a delivery request to operations management system 2213. Stated differently, store system 2212 sends a delivery request to operations management system 2213 in response to the order information.

Operations management system 2213 manages each of a plurality of unmanned aerial vehicles 10 for delivering packages of products to users who ordered the products. Operations management system 2213 manages the operation of each of the plurality of unmanned aerial vehicles 10. For example, upon obtaining order information (one example of the first obtainment step), operations management system 2213 selects, from the plurality of unmanned aerial vehicles 10, an unmanned aerial vehicle 10 that can deliver the package by the desired time of delivery indicated in the order information. Once the package, i.e., the product, is loaded onto the selected unmanned aerial vehicle 10, operations management system 2213 moves unmanned aerial vehicle 10 to the user's address indicated in the order information. Operations management system 2213 may also notify user's terminal device 2210 that the package cannot be delivered if there is no unmanned aerial vehicle 10 available to deliver the package by the desired time of delivery indicated in the order information. Such a notice may be displayed on the menu screen of terminal device 2210 when the user orders a product.

Unmanned aerial vehicle 10 is managed by operations management system 2213 to deliver the loaded package to the user. For example, once the package is loaded, unmanned aerial vehicle 10 travels to the user's address indicated in the order information obtained from operations management system 2213 (one example of the first obtainment step). When unmanned aerial vehicle 10 moves with a loaded package, it obtains position information indicating its own current position via the GPS sensor (one example of the second obtainment step) and image information by capturing images of the surroundings of unmanned aerial vehicle 10 via camera sensor 45. Unmanned aerial vehicle 10 transmits the obtained position information and image information to operations management system 2213 at predetermined intervals. The information transmitted by unmanned aerial vehicle 10 may be only the position information.

Unmanned aerial vehicle 10 transmits the position information and the image information to operations management system 2213 and receives control instructions such as route instructions and operation instructions from operations management system 2213. A route instruction is an instruction for unmanned aerial vehicle 10 to travel according to a travel route. The route instructions include instructions to change routes, etc. The operation instructions include instructions to stop traveling, restart traveling, and instructions for reeling in and out the wire, etc.

By having operations management system 2213 obtain image information from unmanned aerial vehicle 10, the operator can monitor the status of unmanned aerial vehicle 10. Stated differently, operations management system 2213 displays this image information to the operator, i.e., the manager.

After obtaining the position information from unmanned aerial vehicle 10, operations management system 2213 calculates the expected time of arrival, which is the time at which unmanned aerial vehicle 10 loaded with the package will arrive at the user's address, based on the position information and other data. Operations management system 2213 may further calculate the expected time of arrival more accurately based on the weight of the product, the specifications of unmanned aerial vehicle 10, the operation statuses of other unmanned aerial vehicles 10, weather conditions, and the user's address. Operations management system 2213 calculates the expected time of arrival each time it obtains position information from unmanned aerial vehicle 10 or at predetermined intervals. Operations management system 2213 transmits the information indicating the calculated expected time of arrival and the position information to terminal device 2210. This causes terminal device 2210 to display, on the menu screen of the user application, the expected time of arrival as indicated by the relevant information received from operations management system 2213, and the current position of unmanned aerial vehicle 10 as indicated by the position information.

If unmanned aerial vehicle 10 is unable to deliver a package due to a malfunction or other reason, delivery system 1A may take action such as refunding, delivering an alternative product, etc., if the package cannot be delivered while maintaining the quality of the package.

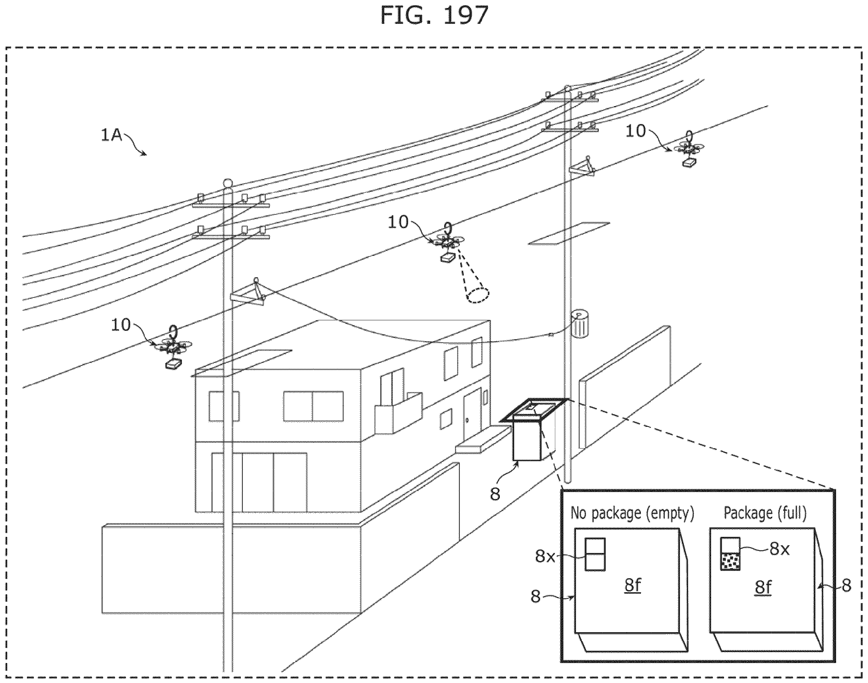

FIG. 197 is a schematic diagram illustrating an example of how unmanned aerial vehicle 10 of delivery system 1A according to Embodiment 22 recognizes delivery box 8 and delivers a package, and a perspective view of delivery box 8.

As illustrated in FIG. 197, delivery box 8 is located, for example, at a location corresponding to the user's address indicated in the order information. When unmanned aerial vehicle 10 arrives at a position vertically above the relevant delivery box 8, unmanned aerial vehicle 10 obtains information indicating that delivery box 8 is full or information indicating that delivery box 8 is empty.

As one example, unmanned aerial vehicle 10 checks whether delivery box 8 is full or empty. More specifically, delivery box 8 displays coded medium 8x on its vertical upper surface that can be recognized by camera sensor 45 of unmanned aerial vehicle 10. Coded medium 8x indicates whether delivery box 8 is full or empty. In addition, coded medium 8x may indicate an ID that identifies delivery box 8, the name of the user using delivery box 8, and the address of the user. For example, when a package is stored inside delivery box 8, delivery box 8 rewrites the information to indicate that it is full, i.e., currently storing a package inside. When a package is removed from inside delivery box 8, delivery box 8 rewrites the information to indicate that it is empty, i.e., currently not storing a package inside. In the present embodiment, coded medium 8x is located in the area of the corner of the vertical upper surface, and is about 10 cm square.

As another example, delivery box 8 may itself check whether it is full or empty, i.e., whether it is storing a package or not. After checking whether it is full or empty, delivery box 8 may transmit to unmanned aerial vehicle 10 information indicating that it is full or information indicating that it is empty, or it may indicate this by rewriting coded medium 8x.

When unmanned aerial vehicle 10 reads information indicating that delivery box 8 is full, it transmits the information indicating that delivery box 8 is full to terminal device 2210 via operations management system 2213. This allows the user to recognize that unmanned aerial vehicle 10 is unable to store the package in delivery box 8 since the menu screen of terminal device 2210 displays that delivery box 8 is full. This allows the user to empty the inside of delivery box 8 by removing the package stored in delivery box 8. When the user removes the package from inside delivery box 8, the user notifies of the completion of the removal via the menu screen of terminal device 2210. This allows unmanned aerial vehicle 10 to store a package inside delivery box 8.

Delivery box 8 includes a box main body, a lid sensor, a weight sensor, and a power detection circuit.

Delivery box 8 opens its 8f to accept packages. When the lid sensor of delivery box 8 detects that lid 8f has opened, delivery box 8 sends information indicating that lid 8f has opened to terminal device 2210 via a communicator. When the package is stored and loaded inside delivery box 8, delivery box 8 closes lid 8f. When the lid sensor of delivery box 8 detects that lid 8f is closed, delivery box 8 presents information indicating that lid 8f is closed by rewriting coded medium 8x. Delivery box 8 may transmit information indicating that lid 8f is closed to terminal device 2210 via the communicator.

Delivery box 8 can also generate power via the energy from lid 8f opening and closing. Thus, delivery box 8 can generate power by opening and closing lid 8f, which is done when packages are stored in or removed from delivery box 8. Solar panels may be used to generate solar power. When the power detection circuit detects that the amount of power stored by power generation is greater than or equal to a predetermined value (one example of the measurement step of measuring the amount of power), the weight sensor detects the internal weight. When the weight sensor detects the internal weight, delivery box 8 presents weight information, which is information indicating the weight of the package, by rewriting coded medium 8x. Delivery box 8 may transmit weight information, which is information indicating the weight of the package, to terminal device 2210 via the communicator. This causes terminal device 2210 to display, on the user application menu screen, that lid 8f of delivery box 8 has been opened or closed (that lid 8f opened or that lid 8f closed) and the weight of the package. Operations management system 2213 can also determine whether or not a package is stored inside delivery box 8 based on the weight of the package.

### [Temperature retention of Package Platform 2220 of Unmanned Aerial Vehicle 10 and Delivery Box 8]

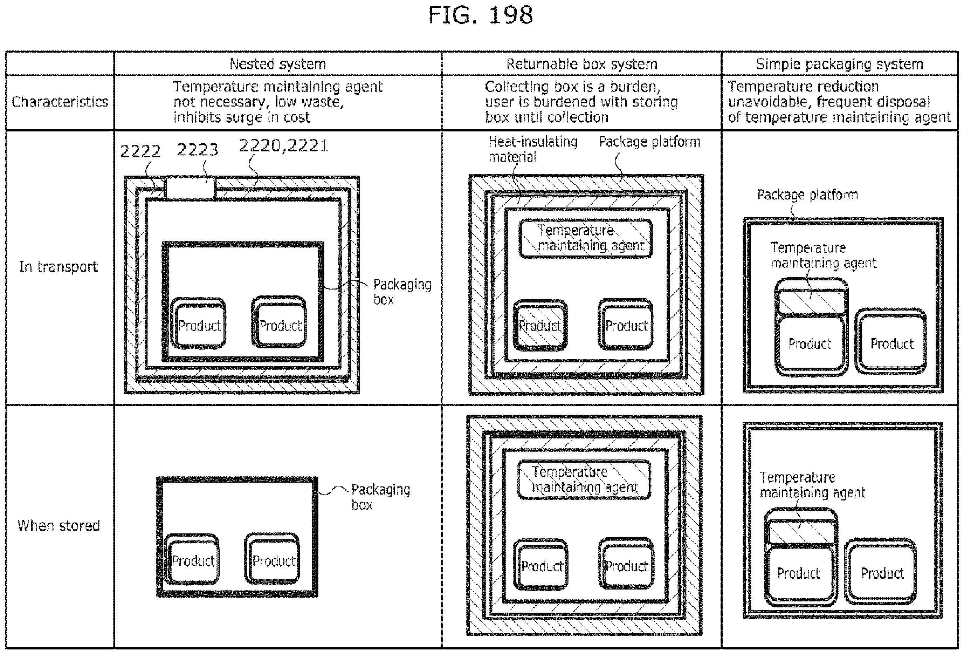

FIG. 198 illustrates an example of the method used to ensure temperature retention of package platform 2220 of unmanned aerial vehicle 10 of delivery system 1A and delivery box 8 of delivery system 1A according to Embodiment 22. In the present embodiment, package platform 2220 of unmanned aerial vehicle 10 employs a nested system.

If the package is frozen food, refrigerated food, or if the package is hot food, etc, package platform 2220 of unmanned aerial vehicle 10 should have the ability to maintain the temperature of the package for a predetermined period of time, as illustrated in FIG. 198. Stated differently, the delivery time of the route traveled by unmanned aerial vehicle 10, the atmospheric temperature, the weather conditions, etc., need to be taken into account when unmanned aerial vehicle 10 carries the package. Package platform 2220 of unmanned aerial vehicle 10 and delivery box 8 according to the present embodiment therefore have the following function. Package platform 2220 of unmanned aerial vehicle 10 may be mounted on the first thruster device or the second thruster device, or directly on the unmanned aerial vehicle.

Package platform 2220 of unmanned aerial vehicle 10 is covered with heat-insulating material 2222 that provides high temperature retention. Package platform 2220 includes package platform main body 2221 that can cover the entire perimeter of the package, heat-insulating material 2222 spread over the entire interior of package platform main body 2221, and Peltier element 2223. Heat-insulating material 2222 is arranged layered on the inner surface of package platform main body 2221 so as to cover the entire space for placing the package that is formed in package platform main body 2221. Peltier element 2223 is placed by hollowing out a portion of heat-insulating material 2222 inside package platform main body 2221. Peltier element 2223 can be provided to automatically cool or warm the interior of package platform 2220. Peltier element 2223 according to the present embodiment includes, for example, a flat rectangular package platform main body 2221. For example, when cooling the interior of package platform 2220, one side of Peltier element 2223 will be cold while the other side will be warm, so it is preferable to place the other side exposed to the exterior of package platform 2220. Although the Peltier element 2223 is used for package platform 2220 in the present embodiment, Peltier element 2223 does not need to be used. For example, the shipper may pre-chill or pre-warm package platform 2220.

When unmanned aerial vehicle 10 carries a package, the package is packaged in a box and placed on package platform 2220. Examples of the box in which the package is packaged include a styrofoam box, a corrugated cardboard box, etc. This further enhances the temperature retention of the package. In the present embodiment, since package platform 2220 of unmanned aerial vehicle 10 is highly effective in retaining temperature, temperature retention can be ensured without using a temperature maintaining agent. In addition, since the use of a temperature maintaining agent is not necessary, a surge in the cost of package delivery can be inhibited. Temperature maintaining agents include cooling agents to maintain the temperature of a product at a cold temperature and warming agents to maintain the temperature of a product at a warm temperature.

If the package platform of unmanned aerial vehicle 10 is a returnable box system, the package platform is used as a delivery box, and the entire package platform is delivered to the user. In such cases, the user must store the package platform, and the unmanned aerial vehicle must travel to the receiver again to retrieve the package platform. This reduces the availability of the unmanned aerial vehicle.

On the other hand, if the package platform of the unmanned aerial vehicle is a simple packaging system, the simple packaging package platform is used as a delivery box, and the entire simple packaging package platform is delivered to the user. In such cases, since the user discards the simple packaging package platform, so there is no need to store the package platform. However, a temperature maintaining agent is used for ensuring temperature retention inside the package platform. This leads to the disposal of cooling materials, which in turn leads to a surge in package delivery costs. In addition, the temperature inside the package platform is likely to change while the unmanned aerial vehicle is delivering package, which may make it impossible to ensure temperature retention. In this case, the unmanned aerial vehicle may not be able to deliver the package with its quality intact.

Therefore, in the present embodiment, when the product requires temperature retention, delivery system 1A, for example, estimates the storage time when the package will be stored in delivery box 8 of the user that is the receiver, calculates the expected delivery period, which indicates the period from the shipment time of the package to the predicted storage time, and, based on the calculated expected delivery period, determines whether or not the permissible delivery time (deliverable time) is met. If predetermined conditions are not met based on the calculated expected delivery period, i.e., if the expected delivery period exceeds the permissible delivery time, delivery system 1A cannot deliver the package with its quality intact. In such cases, delivery system 1A cancels the delivery of the package being delivered, or collects the package being delivered. Stated differently, the permissible delivery time is the amount of time that the package can be delivered to the user in while maintaining the quality of the product, which is the package.

### Operation Example 1

Next, operations performed in delivery system 1A when unmanned aerial vehicle 10 arrives at a position vertically above delivery box 8 and checks whether delivery box 8 is full or empty will be described.

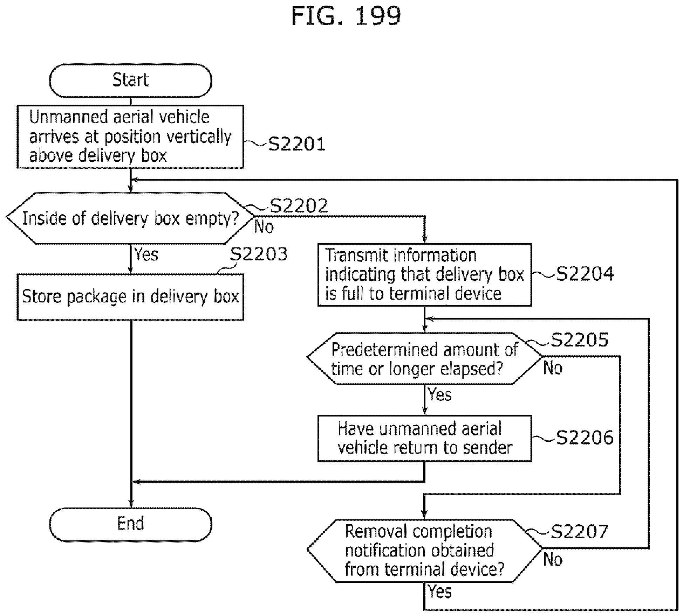

FIG. 199 is a flowchart illustrating an example of operations performed when unmanned aerial vehicle 10 of delivery system 1A according to Operation Example 1 of Embodiment 22 checks whether delivery box 8 is full or empty.

As illustrated in FIG. 199, unmanned aerial vehicle 10 arrives at a position vertically above delivery box 8 of the receiver (S2201).

Unmanned aerial vehicle 10 obtains information indicating that the inside of delivery box 8 is full or information indicating that the inside of delivery box 8 is empty. In this operation example, camera sensor 54 of unmanned aerial vehicle 10 obtains information indicating that unmanned aerial vehicle 10 is full or information indicating that unmanned aerial vehicle 10 is empty by capturing an image of coded medium 8x. Control processor 11 determines whether the inside of delivery box 8 is empty or not (S2202) based on the information indicating that delivery box 8 is full and the information indicating that delivery box 8 is empty.

If control processor 11 determines that the inside of delivery box 8 is empty (YES in S2202), it controls wire control module 125 illustrated in, for example, FIG. 3, to start reeling out wire 51 to lower the package. At this time, lid 8f of delivery box 8 opens, so unmanned aerial vehicle 10 stores the package inside delivery box 8 (S2203).

However, if control processor 11 determines that the inside of delivery box 8 is not empty (i.e., is full) (NO in S2202), it means that another package is stored inside delivery box 8 and the package to be delivered cannot be stored, so information indicating that delivery box 8 is full is transmitted to terminal device 2210 via second communicator 13 illustrated in, for example, FIG. 3 (S2204). The menu screen of the user application on terminal device 2210 displays that delivery box 8 is full. This enables the user to recognize that unmanned aerial vehicle 10 is unable to store the package. Control processor 11 may transmit a message stating "if you remove the package currently in delivery box 8 within X hours, we will deliver the package" to terminal device 2210 via the second communicator, to display this message on the menu screen of the user application on terminal device 2210. If the user removes the package currently in delivery box 8, terminal device 2210 will send a removal completion notification to unmanned aerial vehicle 10. The removal completion notification may be transmitted in response to the user operating the menu screen of the user application on terminal device 2210, or when delivery box 8 detects that the package has been removed and rewrites coded medium 8x to switch from information indicating that delivery box 8 is full to information indicating that delivery box 8 is empty.

Here, control processor 11 measures how much time has elapsed since unmanned aerial vehicle 10 arrived at the position vertically above delivery box 8 of the receiver. Stated differently, control processor 11 includes a timer function (timekeeping unit). Control processor 11 determines whether the measured amount of elapsed time is greater than or equal to a predetermined time (S2205).

If the elapsed time is greater than or equal to the predetermined time (YES in S2205), control processor 11 cancels the delivery of the package and controls the propeller actuation motor to cause unmanned aerial vehicle 10 to go back to the sender (S2206). This is because if the product cannot be stored in delivery box 8 and no action is taken by the user after attempts to notify the user, it is assumed that the package cannot be delivered.

If the elapsed time is less than the predetermined time (NO in S2205), control processor 11 determines whether or not terminal device 2210 of the user has obtained a removal completion notification, which is information indicating that the package that was in delivery box 8 has been removed from delivery box 8 (S2207).

If control processor 11 has not obtained the removal completion notification (NO in S2207), the process returns to step S2205.

However, if control processor 11 has obtained the removal completion notification (YES in S2207), the process returns to step S2202. For example, if the user removes the package currently in delivery box 8 from delivery box 8 and selects the removal completion notification via the menu screen of terminal device 2210, terminal device 2210 transmits the removal completion notification to unmanned aerial vehicle 10 via operations management system 2213, etc. In this way, with delivery system 1A, unmanned aerial vehicle 10 can store packages in delivery box 8.

### Operation Example 2

Next, the specific operations performed when camera sensor 45 of unmanned aerial vehicle 10 checks whether delivery box 8 is full or empty in step S2202 of Operation Example 1 will be described.

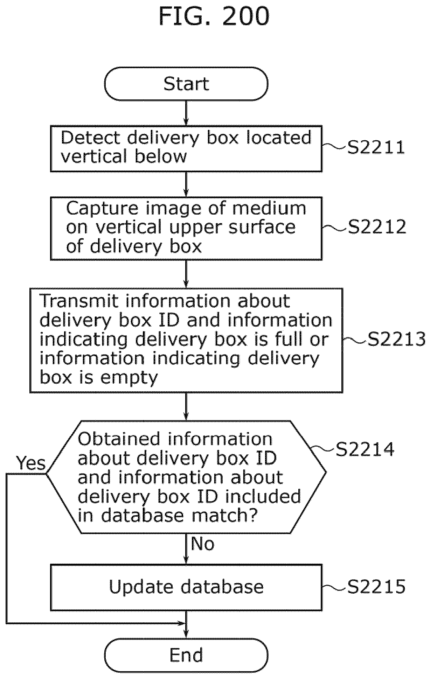

FIG. 200 is a flowchart illustrating an example of other operations performed when unmanned aerial vehicle 10 of delivery system 1A according to Operation Example 2 of Embodiment 22 checks whether delivery box 8 is full or empty.

As illustrated in FIG. 200, camera sensor 45 of unmanned aerial vehicle 10, which is located vertically above delivery box 8 of the receiver, detects delivery box 8 by capturing an image of delivery box 8 (S2211).

Camera sensor 45 obtains information about the ID of delivery box 8 and information indicating that the inside of delivery box 8 is full or information indicating that the inside of delivery box 8 is empty, as indicated by coded medium 8x on the vertical upper surface of delivery box 8, by capturing an image of coded medium 8x (S2212). As mentioned above, coded medium 8x indicates whether the inside of delivery box 8 is full or empty. Camera sensor 45 outputs the obtained information about the ID of delivery box 8 and the information indicating that delivery box 8 is full or the information indicating that delivery box 8 is empty to control processor 11 of unmanned aerial vehicle 10.

Control processor 11 transmits the obtained information about the ID of delivery box 8 and the information indicating that delivery box 8 is full or the information indicating that delivery box 8 is empty to operations management system 2213 via second communicator 13 (S2213).

Operations management system 2213 determines whether the information about the ID of delivery box 8 obtained matches the information about the ID of delivery box 8 included in a database maintained in the storage or the like (in other words, whether the information has changed) (S2214). The information about the ID is, for example, identification information of delivery box 8, the user's address, name, the location of delivery box 8, etc.

If operations management system 2213 determines that the obtained information about the ID of delivery box 8 does not match the information about the ID of delivery box 8 included in the database (NO in S2214), the database is updated by rewriting the information about the ID of delivery box 8 included in the database with the obtained information about the ID of delivery box 8 (S2215).

If operations management system 2213 determines that the obtained information about the ID of delivery box 8 matches the information about the ID of delivery box 8 included in the database (YES in S2214), the process ends.

Although the present operational example is regarding an example in which unmanned aerial vehicle 10 obtains information about the ID of delivery box 8 of the receiver, the present operation example is not limited to this example. For example, while unmanned aerial vehicle 10 is traveling, it may obtain information about the IDs of all delivery boxes 8 present on the travel route. Operations management system 2213 may check the information about the IDs of delivery boxes 8 obtained by unmanned aerial vehicle 10 while it is moving against the information about the IDs of delivery boxes 8 included in the database. If the obtained information about the ID of delivery box 8 does not match the information about the ID of delivery box 8 included in the database, operations management system 2213 may update the database by rewriting the information about the ID of delivery box 8 included in the database with the obtained information about the ID of delivery box 8.

### Operation Example 3

Next, specific operations performed in step S2202 of Operation Example 1 when delivery box 8 itself checks whether it is full or empty will be described.

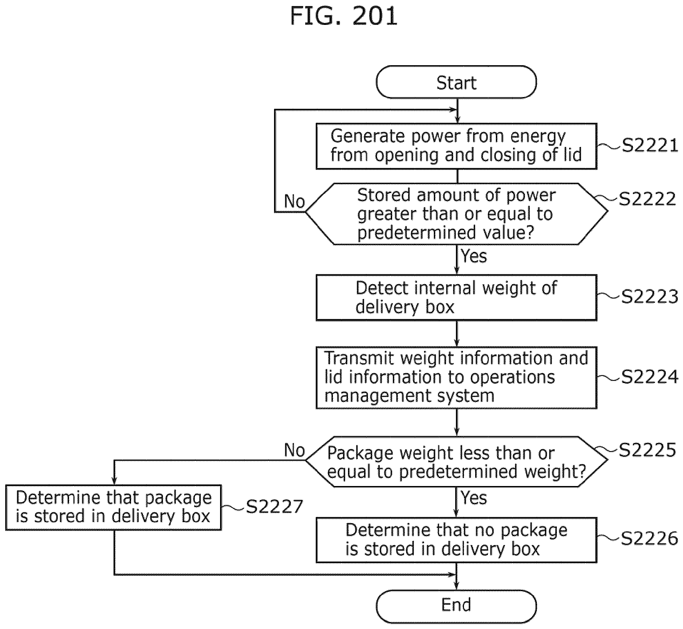

FIG. 201 is a flowchart illustrating an example of operations performed when delivery box 8 of delivery system 1A according to Operation Example 3 of Embodiment 22 checks whether itself is full or empty.

As illustrated in FIG. 201, when lid 8f of delivery box 8 opens and closes, delivery box 8 generates power via the energy from lid 8f opening and closing, and stores the power (S2221: power generation step).

The power detection circuit of delivery box 8 detects whether the amount of power stored by power generation is greater than or equal to a predetermined value (S2222).

If the power detection circuit detects that the amount of power stored by power generation is less than the predetermined value (NO in S2222), delivery box 8 returns the process to step S2221.

If the power detection circuit detects that the amount of power stored by power generation is greater than or equal to the predetermined value (YES in S2222), the weight sensor detects the internal weight when lid 8f opens and closes. Stated differently, the weight sensor detects the internal weight of delivery box 8 when lid 8f of delivery box 8 opens and closes (S2223).

When the weight sensor detects the internal weight, delivery box 8 transmits the internal weight information to operations management system 2213 via terminal device 2210 or directly to operations management system 2213. When the lid sensor detects the opening and closing of lid 8f when a package is taken out, delivery box 8 sends lid information, which is information indicating that lid 8f has been opened and closed (one example of the information pertaining to the opening and closing of the door), to operations management system 2213 via terminal device 2210, or directly to operations management system 2213 (S2224: transmission step). If delivery box 8 transmits the lid information directly to operations management system 2213, it communicates using, for example, a low power wide area (LPWA) network. If delivery box 8 transmits the lid information directly to terminal device 2210, it communicates using, for example, a local area network (LAN).

Upon receiving the internal weight information, operations management system 2213 determines whether the weight of the package indicated by the received internal weight information is less than or equal to a predetermined weight (S2225). In the present operation example, operations management system 2213 is what makes the determination, but if terminal device 2210 obtains the internal weight information, the user application of terminal device 2210 may make the determination.

If operations management system 2213 determines that the weight of the package is less than or equal to the predetermined weight (YES in S2225), it determines that the package is not stored inside delivery box 8 (S2226). Delivery system 1A then ends the processing.

If operations management system 2213 determines that the weight of the package is greater than the predetermined weight (NO in S2225), it determines that the package is stored inside delivery box 8 (S2227). Delivery system 1A then ends the processing.

### Operation Example 4

Next, operations performed when a user orders a product via the user application on terminal device 2210 will be described. In the present operation example, a user orders a product via terminal device 2210, but payment for the purchase of the product is made after the product is delivered and the user is willing to purchase the product. In the present operation example, the user does not purchase the product before the product is delivered to the user. In the present operation example, one package, which is the product, is carried per unmanned aerial vehicle 10. The present operation example assumes that clothing, shoes, a watch, or a bag, etc., is being delivered to the user.

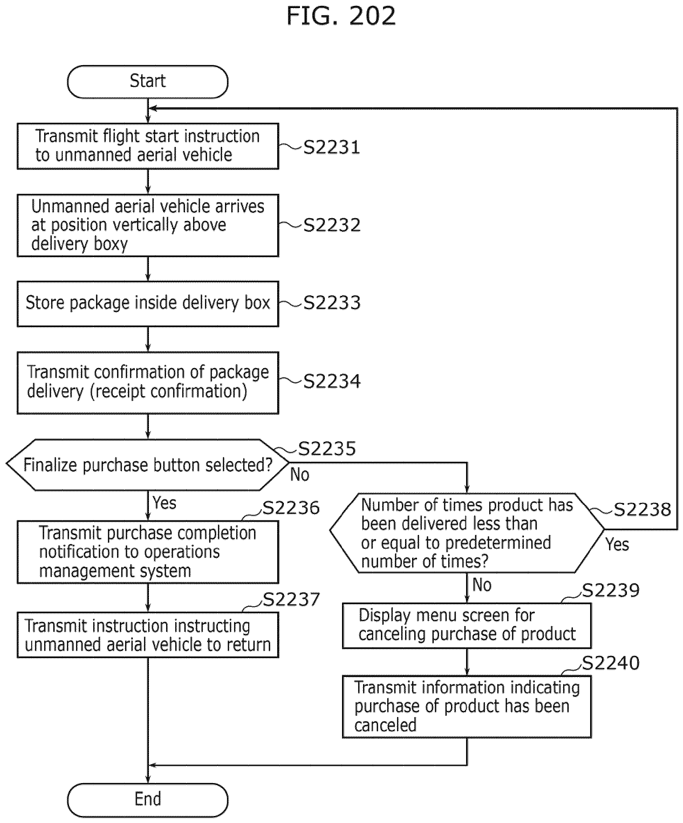

FIG. 202 is a flowchart illustrating an example of operations performed when a product is ordered using delivery system 1A according to Operation Example 4 of Embodiment 22.

As illustrated in FIG. 202, upon obtaining the order information, operations management system 2213 selects, from among a plurality of unmanned aerial vehicles 10, an unmanned aerial vehicle 10 that can deliver the package by the desired time of delivery indicated in the order information. Once the package, which is the product, is loaded onto the selected unmanned aerial vehicle 10, operations management system 2213 sends a flight start instruction to unmanned aerial vehicle 10 to move unmanned aerial vehicle 10 to the user's address indicated in the order information (S2231). Unmanned aerial vehicle 10 will then begin delivering the package in a manner that satisfies the conditions stipulated in the order information, such as the user's address and the desired time of delivery.

Unmanned aerial vehicle 10 moves according to the flying route and arrives at a position vertically above delivery box 8 (S2232).

Unmanned aerial vehicle 10 controls wire control module 125 illustrated in, for example, FIG. 3, to start reeling out wire 51 to lower the package. Lid 8f of delivery box 8 opens, so unmanned aerial vehicle 10 can store the package inside delivery box 8 (S2233). The package is thus stored in delivery box 8.

When the weight sensor detects the internal weight, i.e., the weight of the stored package, delivery box 8 notifies terminal device 2210 of the weight information. More specifically, delivery box 8 notifies terminal device 2210 that a package has been stored inside as the weight information. Here, delivery box 8 notifies terminal device 2210 of the weight information via coded medium 8x or the communicator. This enables the user to recognize that the package has been delivered since the menu screen of the user application on terminal device 2210 displays that the package has been stored in delivery box 8. The user application on terminal device 2210 displays a button on the menu screen indicating confirmation of package delivery. Upon receiving an input by the user, the user application transmits a confirmation of package delivery (receipt confirmation) to operations management system 2213 (S2234).

When the package is delivered, the user determines whether the product in the package meets their expectations or not. For example, when the package is clothing, shoes, a watch, or a bag, etc., the user tries on the product first to determine whether the product meets their expectations. If the user likes the product, he or she will purchase it.

The user application displays a finalize purchase button and a cancel purchase button on the menu screen for selecting whether or not to purchase the delivered product. The user application determines whether the finalize purchase button has been selected (S2235).

If the user selects the finalize purchase button (YES in S2235), the user application sends a purchase completion notification to operations management system 2213 (S2236). Stated differently, if the user selects the finalize purchase button, it means that the user is willing to purchase the delivered product and has made payment for purchasing the product.

Upon receipt of the purchase completion notification, operations management system 2213 transmits an instruction instructing unmanned aerial vehicle 10 to come back (S2237). Unmanned aerial vehicle 10 will then return to the facility of operations management system 2213. Delivery system 1A then ends the processing.

However, if the user selects the cancel purchase button (NO in S2235), the user application determines whether a replacement product can be delivered. More specifically, the user application determines whether the number of times the product of the current purchase has been delivered is less than or equal to a predetermined number of times (S2238). Here, if the user selects the cancel purchase button, it means that the user has no intention of purchasing the product in the delivered package, and wishes to purchase an alternative product, etc.

If the user application determines that the number of times the product of the current purchase has been delivered is less than or equal to the predetermined number of times (YES in S2238), it sends a redelivery request to operations management system 2213. Delivery system 1A then returns to step S2231, and delivers a package of an alternative product to the user. Stated differently, if the user has no intention of purchasing the delivered product, the user can only exchange the product a predetermined number of times or less. The predetermined number of times is, for example approximately three times. In such cases, one product is stored per unmanned aerial vehicle 10, and up to three unmanned aerial vehicles 10 deliver products in sequence. Such a rule is preferably applied to products such as clothing or furniture, etc., but such a rule is not limited to clothing or furniture, etc. The rule may be applied to products such as stationery, food, electronics, tools, groceries, consumables, etc. Moreover, the predetermined number of times may be four or more times, and may be two or fewer times.

However, if the user application determines that the number of times the product of the current purchase has been delivered is greater than the predetermined number of times (NO in S2238), a menu screen for canceling the purchase of the product is displayed (S2239).

The user application then sends information indicating the cancellation of the purchase of the product to operations management system 2213 (S2240). Thus, operations management system 2213 cancels the order of the product indicated in the order information transmitted from terminal device 2210. Delivery system 1A then ends the processing.

As described above, if the user selects the cancel purchase button (NO in S2235), unmanned aerial vehicle 10 retrieves the package, which is the product, delivered to the user. Stated differently, the user loads and returns the package to unmanned aerial vehicle 10. Whether or not the user has returned the package to unmanned aerial vehicle 10 can be determined by camera sensor 45, the weight sensor, etc. Once the package has been returned to unmanned aerial vehicle 10, unmanned aerial vehicle 10 returns to the facility of operations management system 2213.

Unmanned aerial vehicle 10 may wait at a position vertically above the user's delivery box 8 after delivering the package to the user until the finalize purchase button or the cancel purchase button is selected by the user. Unmanned aerial vehicle 10 may go back to the facility of operations management system 2213 if the finalize purchase button or the cancel purchase button has not been selected by the user for a predetermined period of time or longer.

### Operation Example 5

Next, other operations performed when a user orders a product via the user application on terminal device 2210 will be described. Although similar to Operation Example 4, the present operation example differs in that a plurality of packages, which are products, are carried per unmanned aerial vehicle 10.

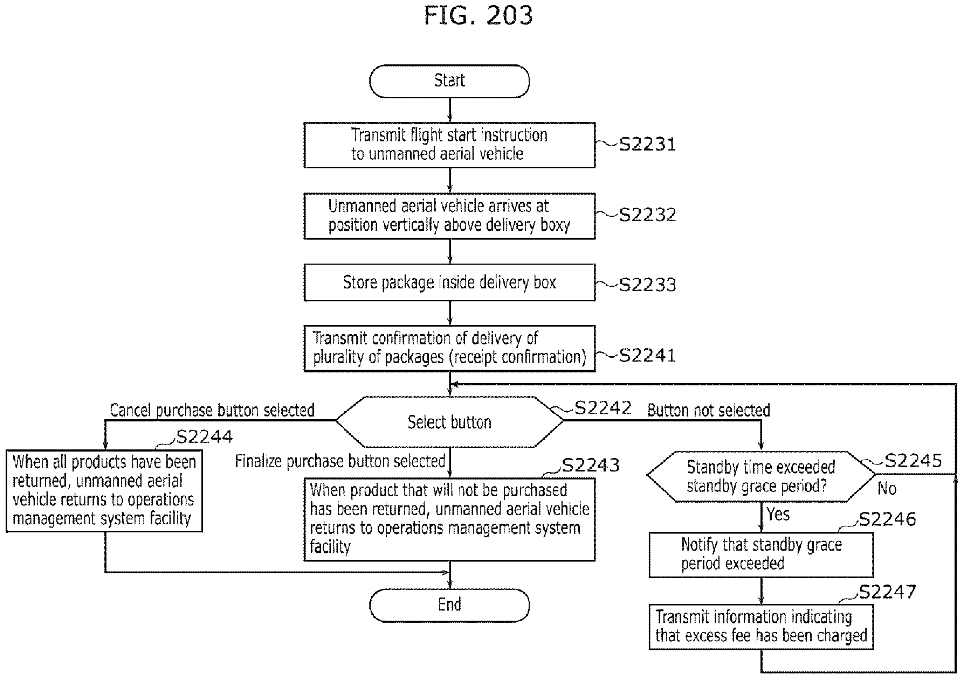

FIG. 203 is a flowchart illustrating an example of other operations performed when a product is ordered using delivery system 1A according to Operation Example 5 of Embodiment 22. Processes that are the same as in FIG. 202 are assigned with the same reference signs as appropriate.

As illustrated in FIG. 203, upon obtaining the order information, operations management system 2213 selects, from among a plurality of unmanned aerial vehicles 10, an unmanned aerial vehicle 10 that can deliver the package by the desired time of delivery indicated in the order information. Once the packages, which are products, are loaded onto the selected unmanned aerial vehicle 10, operations management system 2213 sends a flight start instruction to unmanned aerial vehicle 10 to move unmanned aerial vehicle 10 to the user's address indicated in the order information (S2231). Unmanned aerial vehicle 10 will then begin delivering the packages in a manner that satisfies the conditions stipulated in the order information, such as the user's address and the desired time of delivery. Although a plurality of products are delivered to a single address in the present operation example, this example is non-limiting. For example, unmanned aerial vehicle 10 may be loaded with a plurality of first products to be delivered to a first address and a plurality of second products to be delivered to a second address different than the first address.

Unmanned aerial vehicle 10 moves according to the flying route and arrives at a position vertically above delivery box 8 (S2232).

Unmanned aerial vehicle 10 controls wire control module 125 illustrated in, for example, FIG. 3, to start reeling out wire 51 to lower the packages simultaneously or individually. Lid 8f of delivery box 8 opens, so unmanned aerial vehicle 10 can store the packages inside delivery box 8 (S2233). The packages are thus stored in delivery box 8.

Unmanned aerial vehicle 10 may wait at a position vertically above the user's delivery box 8 after delivering the packages to the user until the finalize purchase button or the cancel purchase button is selected by the user. Unmanned aerial vehicle 10 may also go back to the facility of operations management system 2213, perform another delivery, and return to a position vertically above delivery box 8 where the products that were delivered and are to be returned are stored for pickup after a predetermined time. Thus, unmanned aerial vehicle 10 can bring back the packages of the returned products.

When the weight sensor detects the internal weight, i.e., the weight of the stored packages, delivery box 8 notifies terminal device 2210 of the weight information. More specifically, delivery box 8 notifies terminal device 2210 that packages have been stored inside as the weight information. This enables the user to recognize that the packages have been delivered since the menu screen of the user application on terminal device 2210 displays that the packages have been stored in delivery box 8. The user application on terminal device 2210 displays a button on the menu screen indicating confirmation of the delivery of the packages. Upon receiving an input by the user, the user application sends a confirmation of the delivery of the packages to operations management system 2213 (S2241). The user application is not limited to confirming delivery of the plurality of packages by receiving an input by the user. For example, the user application may determine that the packages have been received based on the weight information detected by the weight sensor of delivery box 8 and the lid information for lid 8f detected by the lid sensor, for example.

The user application displays a finalize purchase button and a cancel purchase button on the menu screen for selecting whether or not to purchase any of the delivered packages of the products. The user application determines whether the finalize purchase button or the cancel purchase button has been selected (S2242). Stated differently, the user decides one or more products to purchase from among the products delivered, or not to purchase any of them.

When the user has decided on the product(s) to be purchased, and the user selects the finalize purchase button (the finalize purchase button is selected in S2242), the user application sends a purchase completion notification to operations management system 2213. If there is a product or products that the user is not going to purchase, operations management system 2213 transmits, to unmanned aerial vehicle 10, a retrieval instruction to retrieve the product(s) that will not be purchased, and instruction that instructs unmanned aerial vehicle 10 to come back. Operations management system 2213 also sends an instruction to terminal device 2210 prompting the return of any product that will not be purchased. This causes the user application to display a message prompting the user to return the product to unmanned aerial vehicle 10. This enables the user to recognize that any product not purchased should be returned. Unmanned aerial vehicle 10 retrieves any product other than those that will be purchased. The user loads and returns the product to unmanned aerial vehicle 10. Once the product has been returned to unmanned aerial vehicle 10, unmanned aerial vehicle 10 returns to the facility of operations management system 2213 (S2243). Delivery system 1A then ends the processing.

If the user will not purchase any product, when the user selects the cancel purchase button (the cancel purchase button is selected in S2242), the user application sends a purchase cancel notification to operations management system 2213. Operations management system 2213 transmits, to unmanned aerial vehicle 10, a retrieval instruction to retrieve all of the products since none of them will be purchased, and instruction that instructs unmanned aerial vehicle 10 to come back. Operations management system 2213 also sends an instruction to terminal device 2210 prompting the return of all of the products. This causes the user application to display a message prompting the user to return all of the products to unmanned aerial vehicle 10. This enables the user to recognize that the products should be returned. Unmanned aerial vehicle 10 then retrieves all of the delivered products. The user loads and returns all of the products to unmanned aerial vehicle 10. Once all of the products have been returned to unmanned aerial vehicle 10, unmanned aerial vehicle 10 returns to the facility of operations management system 2213 (S2244). Delivery system 1A then ends the processing.

However, if neither the finalize purchase button nor the cancel purchase button is selected (if button not selected in S2242), the user application determines whether the standby time of unmanned aerial vehicle 10 exceeds the standby grace period (S2245). The standby grace period is several minutes or several tens of minutes, for example, and can be changed as needed.

If the standby time of unmanned aerial vehicle 10 has not exceeded the standby grace period (NO in S2245), the user application returns to step S2242.

If the standby time of unmanned aerial vehicle 10 has exceeded the standby grace period (YES in S2245), unmanned aerial vehicle 10 notifies operations management system 2213 that the standby grace period has been exceeded (S2246).

When operations management system 2213 obtains the notification from step S2246 that the standby time of unmanned aerial vehicle 10 has exceeded the standby grace period, operations management system 2213 transmits information to terminal device 2210 indicating that an excess fee has been charged (S2247). The user application on terminal device 2210 displays information on the menu screen indicating the excess fee charge. The user application then returns to step S2242.

### Operation Example 6

Next, operation performed when a user orders a plurality of products spread across a plurality of store systems 2212 within retail system 2211 will be described.

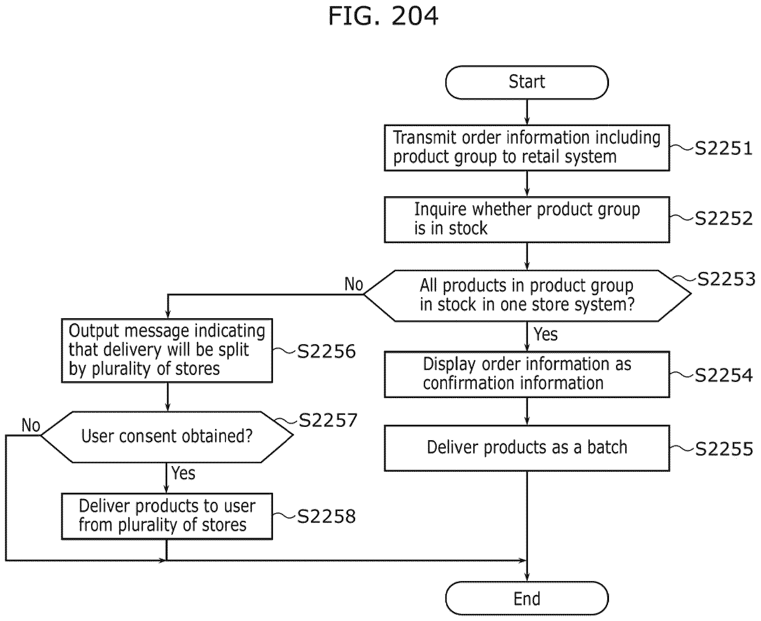

FIG. 204 is a flowchart illustrating an example of operations performed when products spread across a plurality of store system 2212 are ordered using delivery system 1A according to Operation Example 6 of Embodiment 22.

As illustrated in FIG. 204, when products are selected across a plurality of store systems 2212 in retail system 2211 by the user, the user application of terminal device 2210 transmits, via second communicator 13, order information including a product group desired by the user to retail system 2211 (S2251).

When retail system 2211 receives the user's desired product group from terminal device 2210, it inquires each store as to whether the product group desired by the user in stock (S2252).

When the respective store systems 2212 receive the inquiry from retail system 2211 as to whether or not the product group is in stock, they check the availability of the product group desired by the user. If a store system 2212 has one or more products in the product group in stock, it sends information to retail system 2211 indicating the products in stock. If none of the products are in stock, the store system 2212 sends information to retail system 2211 indicating that none of the products are in stock.

When retail system 2211 receives information indicating that the products are in stock from the stores, it determines whether all products in the user's desired product group are in stock in one store system 2212 (S2253).

If retail system 2211 determines that all of the products in the product group desired by the user are in stock in one store system 2212 (YES in S2253), it sends the order information including the product group desired by the user to terminal device 2210 as confirmation information confirming that the products can be shipped. If terminal device 2210 receives the confirmation information, the user application displays the order information on the menu screen as confirmation information (S2254).

Store system 2212 that has all of the products in the product group in stock then delivers the products as a batch in accordance with the user's address and desired time of delivery, etc. (S2255). The product group is thus delivered to the user as a package. Delivery system 1A then ends the processing.

If retail system 2211 determines that all of the products of the user's desired product group are not in stock in one store system 2212 (NO in S2253), it causes terminal device 2210 to output a message indicating that the products are spread across a plurality of stores and the delivery will be split (S2256). Examples of messages indicating that delivery will be split by a plurality of stores include "Delivery will be split by a plurality of stores, is this OK?" or "Since the delivery will be split into multiple shipments, an extra delivery fee applies. Is this OK?", etc. Thus, retail system 2211 causes terminal device 2210 to output a confirmation message to the user if the delivery is to be split by a plurality of stores.

Retail system 2211 determines whether the user's consent has been obtained (S2257).

If the user's consent is obtained (YES in S2257), unmanned aerial vehicle 10 delivers the product from the stores to the user (S2258). The product group is thus delivered to the user as a package. Delivery system 1A then ends the processing.

If the user's consent is not obtained (NO in S2257), retail system 2211 cancels the user's desired product group. Delivery system 1A then ends the processing.

If the result of step S2253 is NO, if some of the products in the product group do not exist, retail system 2211 may output to the user application menu screen, for example, "May I cancel the order for only some of the products?".

### Operation Example 7

Next, operations performed when instructing the user to make the product receivable prior to placing an order will be described. In the present operation example, the main case is that the user application instructs the user to empty delivery box 8.

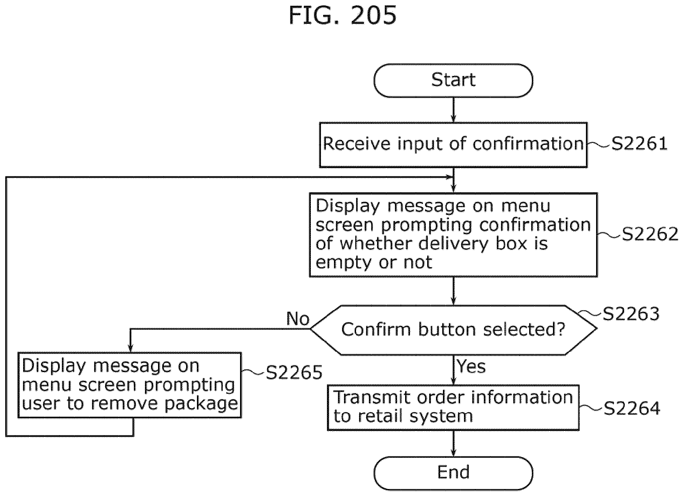

FIG. 205 is a flowchart illustrating an example of operations performed when the user application instructs the user to empty the inside of delivery box 8 when ordering a product using delivery system 1A in Operation Example 7 according to Embodiment 22.

As illustrated in FIG. 205, the user application on terminal device 2210 displays a message on the menu screen in response to operation by the user, prompting the user to confirm the contents of the product to be ordered before sending the order information to retail system 2211. Terminal device 2210 is then operated by the user to confirm the contents of the product to be ordered and to input that confirmation is complete (S2261).

The user application displays a message on the menu screen prompting the user to confirm whether the inside of delivery box 8 is empty (S2262). With this, the user checks whether a package is stored in delivery box 8 or not, and if a package is stored, the user can empty delivery box 8 by removing the package.

The user application displays a confirm button on the menu screen indicating that the user emptied delivery box 8. The user application determines whether the confirm button has been selected (S2263).

If the confirm button has been selected (YES in S2263), the user application transmits the order information to retail system 2211 (S2264). Since this allows unmanned aerial vehicle 10 to store the product in delivery box 8 according to the order information, the user can receive the ordered product.

If the confirm button has not been selected (NO in S2263), the user application displays a message on the menu screen prompting the user to remove the package to empty delivery box 8 (S2265). With this, the user retrieves the package stored inside delivery box 8. The user application then returns to step S2262.

Thus, in the present operation example, the inside of delivery box 8 must be empty to allow the user to complete the product order (i.e., the product order cannot be placed). This allows unmanned aerial vehicle 10 to reliably deliver packages to delivery box 8.

### Operation Example 8

Next, other operations performed when instructing the user to make the product receivable prior to placing an order will be described. The present operation example is similar to Operation Example 7, but differs from Operation Example 7 mainly in that the present operation example illustrates an example of a case in which delivery box 8 instructs the user to empty delivery box 8 via the user application.

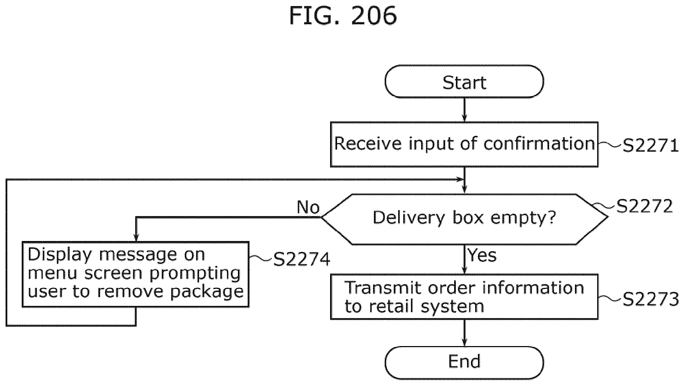

FIG. 206 is a flowchart illustrating an example of operations performed when delivery box 8 instructs the user to empty the inside of delivery box 8 when ordering a product using delivery system 1A in Operation Example 8 according to Embodiment 22.

As illustrated in FIG. 206, the user application on terminal device 2210 displays a message on the menu screen in response to operation by the user, prompting the user to confirm the contents of the product to be ordered before sending the order information to retail system 2211. Terminal device 2210 is then operated by the user to confirm the contents of the product to be ordered and to input that confirmation is complete (S2271). The user application waits until it receives information from delivery box 8 indicating that delivery box 8 is empty. For example, the user application may send a request to delivery box 8 for information indicating whether the inside of delivery box 8 is full or empty. In the present operation example, delivery box 8 may have a communicator, such as a wireless communication module, for transmitting information indicating that the box is full and information indicating that the box is empty, and for displaying the information indicating that the box is full and the information indicating that the box is empty, coded medium 8x for being captured by the camera sensor of terminal device 2210 may be rewritten.

Delivery box 8 checks whether it is empty inside or not by detecting the internal weight using the weight sensor (S2272).

If the weight sensor detects the internal weight of delivery box 8 and the inside is determined to be empty (YES in S2272), delivery box 8 transmits information indicating that the inside is empty to terminal device 2210.

When the user application of terminal device 2210 receives information indicating that delivery box 8 is empty from delivery box 8 via second communicator 13, the order information, which is information about the order of the product that the user confirmed in step S2271, is transmitted to retail system 2211 via second communicator 13 (S2273). This allows unmanned aerial vehicle 10 to deliver the product to the user, who can then receive the product.

If the weight sensor detects the internal weight of delivery box 8 and the inside is determined to be full (NO in S2272), delivery box 8 transmits information indicating that the inside is full to terminal device 2210. When delivery box 8 is capable of storing a plurality of packages, even if the weight sensor detects internal weight, delivery box 8 does not need to determine that the inside is full if there is space available for storage in delivery box 8. Delivery box 8 may transmit information to terminal device 2210 indicating that the inside is full only when it is unable to store another package inside.

When the user application of terminal device 2210 receives information indicating that delivery box 8 is full, it displays a message on the menu screen prompting the user to remove the package to empty the inside of delivery box 8 (S2274). With this, the user retrieves the package stored inside delivery box 8. The user application then returns to step S2272.

Thus, in the present operation example, the inside of delivery box 8 must be empty to allow the user to order products. This allows unmanned aerial vehicle 10 to reliably deliver packages to delivery box 8.

### Operation Example 9

Next, operations performed when the order of delivery is switched based on the desired time of delivery when a user places an order A for a product and another user places an order B for a product will be described.

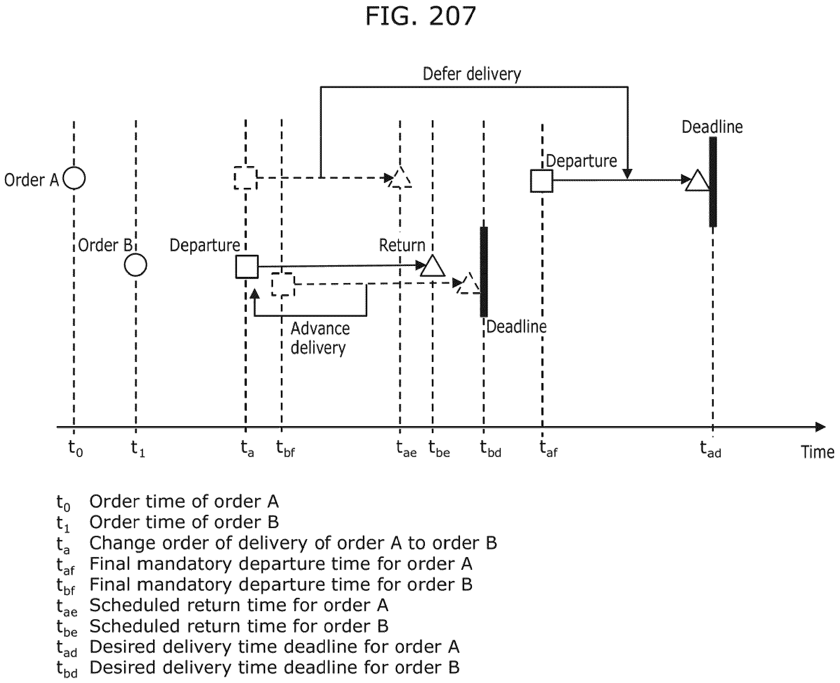

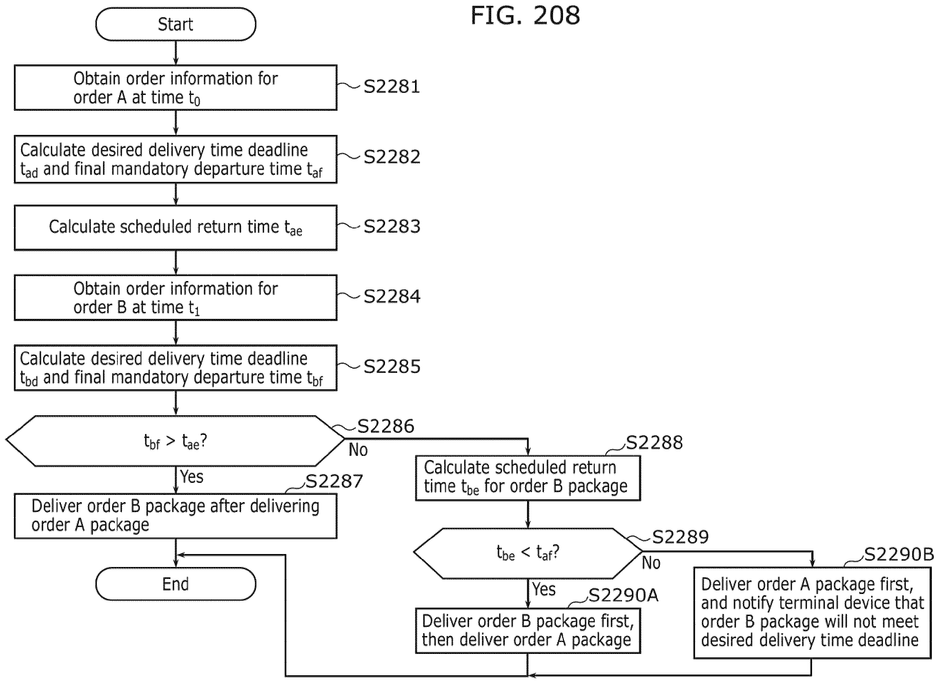

FIG. 207 illustrates an example of when delivery system 1A of Operation Example 9 according to Embodiment 22 swaps the order of delivery of order A and order B when order A and order B are received. In FIG. 207, time is represented on the horizontal axis and order A and order B are represented on the vertical axis. FIG. 208 is a flowchart of an example of operations performed when delivery system 1A of Operation Example 9 according to Embodiment 22 swaps the order of delivery of order A and order B when order A and order B are received.

As illustrated in FIG. 207 and FIG. 208, when operations management system 2213 obtains the order information for order A at time to (S2281), it calculates desired delivery time deadline t_{ad} based on the order time and the desired time of delivery indicated in the order information. Operations management system 2213 calculates final mandatory departure time t_{af} based on the distance to the receiver indicated in the order information (S2282).

Operations management system 2213 schedules the earliest possible departure time tₐ from the present time as the scheduled departure time and calculates scheduled return time tₐₑ (S2283).

When operations management system 2213 obtains the order information for order B at time t₁ (S2284), similarly, it calculates desired delivery time deadline t_{bd} based on the order time and the desired time of delivery indicated in the order information. Operations management system 2213 calculates final mandatory departure time t_{bf} based on the distance to the receiver indicated in the order information. Operations management system 2213 schedules the earliest possible departure time tₐ from the present time as the scheduled departure time and calculates scheduled return time t_{be} (S2285).

In principle, operations management system 2213 sends out unmanned aerial vehicle 10 on a first come, first served basis, that is, in the order in which the orders are received, but it compares scheduled return time tₐₑ when order A departs first with final mandatory departure time t_{bf} of order B, and determines whether t_{bf} > tₐₑ (S2286).

If t_{bf} > tₐₑ (YES in S2286), operations management system 2213 delivers the package of order B after delivering the package of order A as scheduled (S2287), because order B can meet the final mandatory departure time t_{bf} even if order A is delivered first. Operations management system 2213 then ends the process.

If t_{bf} > tₐₑ is not satisfied (NO in S2286), operations management system 2213 derives that desired delivery time deadline t_{bd} for order B will not be met if the package of order B is delivered after the package of order A is delivered.

Therefore, operations management system 2213 recalculates scheduled return time t_{be} for a case in which the package of order B is shipped before the package of order A. Operations management system 2213 calculates scheduled return time t_{be} for when the package of order B is sent out at scheduled departure time tₐ for the package of order A (S2288).

Operations management system 2213 compares scheduled return time t_{be} for when the package of order B is sent out with final mandatory departure time t_{af} for order A, and determines whether t_{be} < t_{af} (S2289).

If t_{be} < t_{af} (YES in S2289), operations management system 2213 determines that there is no problem with delivering the package of order A after delivering the package of order B, and thus delivers the package of order B first and then delivers the package of order A (S2290A). Stated differently, operations management system 2213 changes the delivery order based on the desired delivery time deadline, instead of adopting the first come, first served principle, that is, instead of in the order in which the orders are received. Stated differently, operations management system 2213 changes the delivery priority based on the desired delivery time deadline. For example, delivery defined by the period from time tₐ indicated by the dashed square in FIG. 208 to tₐₑ indicated by the dashed triangle is deferred to the period from time tₐ indicated by the solid square to tₐₑ indicated by the solid triangle. Moreover, for example, delivery defined by the period from time t_{bf} indicated by the dashed square in FIG. 208 to t_{bd} indicated by the dashed triangle is advanced to the period from time tₐ indicated by the solid square to t_{be} indicated by the solid triangle. Thus, operations management system 2213 is able to deliver the packages of order A and order B by the desired delivery time deadline. Operations management system 2213 then ends the process.

If t_{be} < t_{af} is not satisfied (NO in S2289), it means that even if the delivery order is changed, the package of order B will not be delivered by desired delivery time deadline t_{bd}, so operations management system 2213 will follow the original first come, first served principle and deliver the package of order A first, and notify the user's terminal device 2210 that the package of order B will not meet the desired time of delivery (S2290B). Operations management system 2213 then ends the process.

### Operation Example 10

Next, operations performed when a user orders a product that requires temperature retention and unmanned aerial vehicle 10 delivers the product to the user within a predetermined transport temperature range will be described.

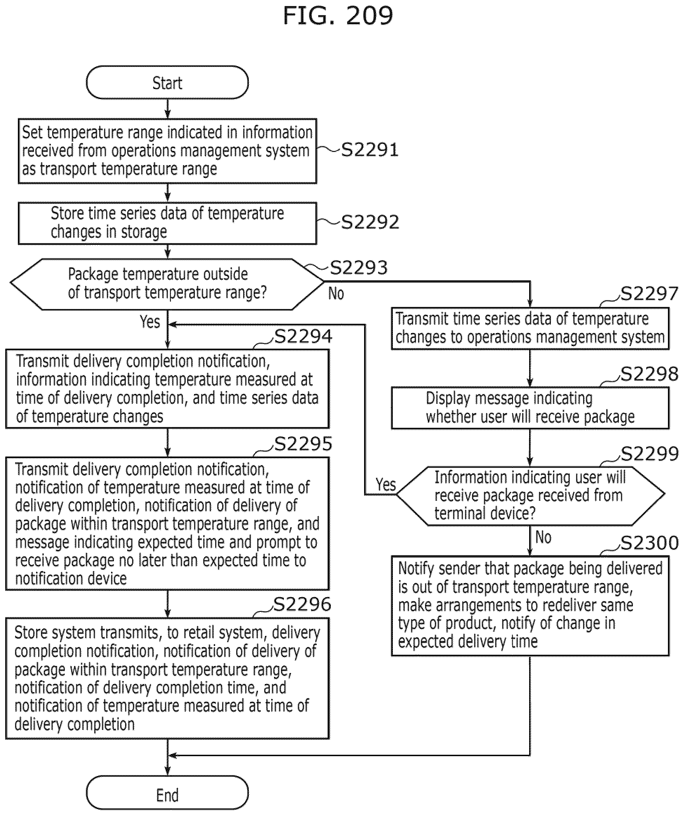

FIG. 209 is a flowchart illustrating an example of operations performed when unmanned aerial vehicle 10 of delivery system 1A of Operation Example 10 according to Embodiment 22 delivers a package to a user within a predetermined transport temperature range.

As illustrated in FIG. 209, when a product is ordered from retail system 2211 by the user, operations management system 2213 transmits information to unmanned aerial vehicle 10 indicating a temperature range determined in advance based on the package to be loaded on unmanned aerial vehicle 10. Unmanned aerial vehicle 10 sets the temperature range indicated by the information received from operations management system 2213 as the transport temperature range (S2291). When a plurality of products are purchased and a plurality of products are bundled into one, unmanned aerial vehicle 10 extrapolates a common range of the temperature ranges for each of the plurality of products and uses the extrapolated common range as the transport temperature range. If the temperature ranges for each of the plurality of products diverge and a common range cannot be extrapolated, unmanned aerial vehicle 10 may send information indicating that a common range cannot be extrapolated to terminal device 2210 via operations management system 2213. In such cases, terminal device 2210 may be notified that the delivery will be divided over a plurality of deliveries.

Unmanned aerial vehicle 10 moves toward the receiver in a way that ensures compliance with the set transport temperature range. More specifically, unmanned aerial vehicle 10 includes a temperature sensor. The temperature sensor successively detects the temperature of the package placed inside package platform 2220 and outputs information indicating the detected temperature of the package to control processor 11.

Control processor 11 generates time series data of temperature changes based on the information indicating the temperature of the package, and stores the generated time series data of temperature changes in the storage (S2292).

After obtaining the information indicating the temperature of the package obtained from the temperature sensor, during the period until the package is stored in delivery box 8 at the receiver (until delivery is completed), control processor 11 determines whether the temperature of the package indicated by the obtained temperature is outside of the transport temperature range (S2293). Stated differently, during delivery, control processor 11 successively monitors the temperature of the package placed inside package platform 2220 detected by the temperature sensor. Control processor 11 executes this determination until the package is stored in delivery box 8 at the receiver.

In step S2293, control processor 11 may determine whether a value obtained by integrating or summing over time the temperature difference in which the temperature of the package was out of the transport temperature range exceeds a predetermined value. This makes it possible to ignore minor deviations from the transport temperature range, instantaneous measurement errors, etc., that have little or no effect on the product. This can reduce excessive discounting, discarding of products, etc.

If control processor 11 determines that the temperature of the package as indicated by the obtained temperature is not outside of the transport temperature range before the delivery is completed (YES in S2293), it notifies operations management system 2213 via second communicator 13 with a delivery completion notification because this means that the delivery was made with the quality of the product maintained. The temperature sensor measures the temperature of the package when the package is stored from package platform 2220 to delivery box 8 of the receiver at the time of delivery completion, and control processor 11 transmits the temperature measured at the time of delivery completion to operations management system 2213 via second communicator 13. Control processor 11 also transmits the time series data of temperature changes generated based on the information indicating the temperature of the package during delivery to operations management system 2213 via the second communicator (S2294).

Operations management system 2213 obtains, from unmanned aerial vehicle 10, a delivery completion notification, information indicating the temperature measured at the time of delivery completion, and time series data of temperature changes in the package. Operations management system 2213 notifies terminal device 2210 of the delivery completion notification, the temperature measured at the time of delivery completion, and that the package was delivered within the transport temperature range. Furthermore, operations management system 2213 calculates the expected time when the package stored in delivery box 8 will fall out of the transport temperature range due to atmospheric conditions, and notifies terminal device 2210 of the calculated expected time and a message prompting the user to receive the package no later than the expected time (S2295). This allows the user to promptly retrieve the package delivered to delivery box 8. The user can thus receive packages whose temperatures are retained. This delivery system can therefore deliver packages to users with the quality of the packages intact.

Operations management system 2213 transmits, to the store system 2212 that is the shipper or retail system 2211, the delivery completion notification, a notification that the package was transported within the transport temperature range, a notification of the time of delivery completion, and a notification of the temperature measured at the time of delivery completion (S2296). Delivery system 1A then ends the processing.

However, if control processor 11 determines that the temperature of the package as indicated by the obtained temperature is outside of the transport temperature range before the delivery is completed (NO in S2293), control processor 11 transmits the time series data of temperature changes generated based on the information indicating the temperature of the package during delivery to operations management system 2213 via second communicator 13 (S2297).

Operations management system 2213 notifies the user via terminal device 2210 that the temperature of the package is out of the transport temperature range, and confirms whether the user is willing to receive the package. The user application on terminal device 2210 displays a message on the menu screen indicating whether or not the user is willing to receive the package even if the package temperature is outside the transport temperature range (S2298). The user application may offer the user a discount on the fee (delivery charge or product price) via the menu screen if the user is willing to receive the package.

Operations management system 2213 determines whether it has received, within a predetermined period of time after the notification of the message in step S2298, information from terminal device 2210 indicating that the user is willing to receive the package (S2299).

If operations management system 2213 determines that it has received information indicating that the user is willing to receive the package from terminal device 2210 within the predetermined period of time after the notification of the message in step S2298 (YES in S2299), that is, if the user is willing to receive the package, it proceeds to step S2294.

However, if operations management system 2213 determines that it has not received any information indicating that the user is willing to receive the package from terminal device 2210 within the predetermined period of time after the notification of the message in step S2298 (NO in S2299), the sender is notified the package has fallen out of the transport temperature range during delivery to the sender. Operations management system 2213 makes arrangements for redelivering the same type of product. Operations management system 2213 notifies terminal device 2210 of the user of the change in expected delivery time (S2300). Delivery system 1A then ends the processing.

### Operation Example 11

Next, operations performed when a user orders a product that requires temperature retention and unmanned aerial vehicle 10 determines whether to go back mid-delivery when unmanned aerial vehicle 10 cannot deliver the product to the user within a predetermined transport temperature range will be described. In the present operation example, the products are mainly frozen.

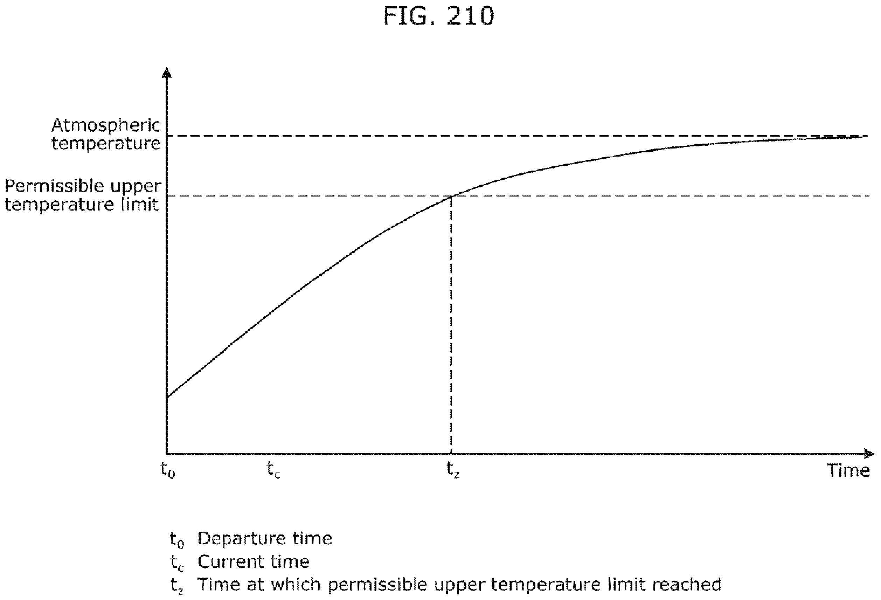

FIG. 210 illustrates an example of the time to reach the permissible upper temperature limit (one example of the expected time to reach the permissible upper temperature limit) based on the relationship between time and the atmospheric temperature, in delivery system 1A of Operation Example 11 according to Embodiment 22. In FIG. 210, time is represented on the horizontal axis and atmospheric temperature is represented on the vertical axis.

As illustrated in FIG. 210, control processor 11 of unmanned aerial vehicle 10 obtains the departure position, which is the position of the sender of unmanned aerial vehicle 10 (one example of the fourth obtainment step), the destination position, which is the position of the receiver of the package carried by unmanned aerial vehicle 10 (one example of the fifth obtainment step), the current position of unmanned aerial vehicle 10 (one example of the sixth obtainment step), and the permissible upper temperature limit of the package (example of the seventh obtainment step). Control processor 11 of unmanned aerial vehicle 10 performs the following processes based on this obtained data. Control processor 11 of unmanned aerial vehicle 10 measures or calculates average travel speed (predetermined speed) V, distance L_{CX} from the current position of unmanned aerial vehicle 10 to the destination point of the receiver, amount of temperature change ΔT of the package, and distance Lx from the sender to the receiver (distance based on the travel route), and determines whether L_{CX} > L_{X}/2. When L_{CX} > Lx/2, control processor 11 cancels the delivery and returns to the departure point if L_{CX} > (t_{Z}-ΔT-t_{C})V. Stated differently, if unmanned aerial vehicle 10 is unable to deliver the product to the user with the quality of the product intact, it will cancel the delivery and return to the sender. These determinations may be made by operations management system 2213. Here, time tz can be determined from, for example, the current temperature and heat capacity of the package (including packaging and insulation mechanisms), the thermal conductivity of the packaging, thermal conductivity of insulation mechanisms, refrigeration performance of package platform 2220, heating performance of package platform 2220, and atmospheric temperature.

Although L_{X}/2 is used in L_{CX} > Lx/2, which indicates the relationship between L_{CX}, the distance from the current position to the destination point of the receiver, and Lx, the distance from the sender to the receiver (distance based on the travel route), and ΔT, the amount of temperature change of the package, this example is non-limiting. Lx/n may be used (n is an integer of 1 or greater). In the present embodiment, n = 2 is given as an example. Lx/n is one example of the predetermined value. The predetermined value is the value at which the temperature of the package reaches the permissible upper temperature limit when unmanned aerial vehicle 10 is moved at the predetermined speed.

This allows the product to be returned to the refrigerator and freezer or warming cabinet again without being greater than or equal to or less than or equal to the permissible upper temperature limit. The amount of temperature change ΔT of the package may decrease with decreasing distance L_{CX} from the sender to the receiver. This allows for a more reliable determination of the scheduled return time, even in situations where the remaining delivery time is short and uncertainty is low.

If L_{CX} = L_{X}, unmanned aerial vehicle 10 will cancel the delivery of the package. In such cases, the user application of terminal device 2210 may disable the ability to select the purchase of a product.

When L_{CX} < L_{X}/2, control processor 11 cancels the delivery if L_{CX} > (t_{Z}-t_{C})V. Stated differently, the temperature of the package will exceed the permissible upper temperature limit regardless of whether it is moved to the receiver or the sender, so the package is discarded. In this way, the delivery by unmanned aerial vehicle 10 can be carried out promptly and the availability of unmanned aerial vehicle 10 can be improved. (tz-tc)V may be calculated as one example of the predetermined value.

### Operation Example 12

Next, another operation example of Operation Example 11 will be described. Operations similar to those in Operation Example 11, etc., are denoted with the same reference signs, and repeated description will be omitted as appropriate.

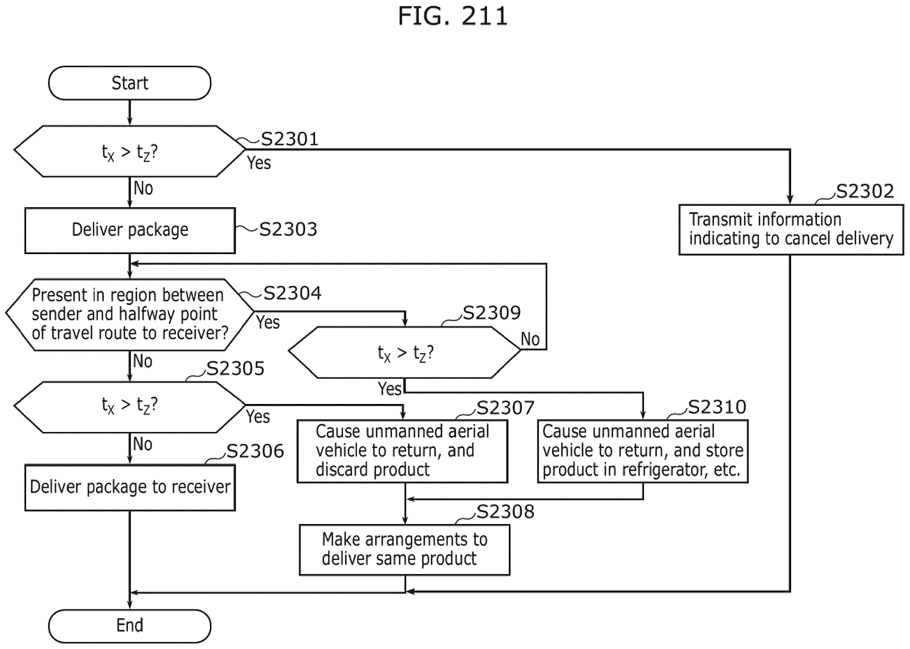

FIG. 211 is a flowchart illustrating another example of operations performed when unmanned aerial vehicle 10 of delivery system 1A of Operation Example 12 according to Embodiment 22 cannot deliver a package to a user within the predetermined transport temperature range. The operation example will be described with reference FIG. 210 of Operation Example 11.

As illustrated in FIG. 210 and FIG. 211, control processor 11 of unmanned aerial vehicle 10 obtains the destination position, which is the position of the receiver of the package carried by unmanned aerial vehicle 10 (one example of the first obtainment step), and the current position of unmanned aerial vehicle 10 (one example of the second obtainment step). Control processor 11 of unmanned aerial vehicle 10 performs the following processes based on this obtained data. Control processor 11 of unmanned aerial vehicle 10 calculates the expected delivery time t_{X} = t_{C} + L_{CX}/V based on average travel speed V, distance L_{CX} from the current position of unmanned aerial vehicle 10 to the destination point of the receiver, and current time tc. Expected delivery time tx is one example of the point in time at which unmanned aerial vehicle 10 will reach the receiver from its current position.

Control processor 11 obtains the permissible upper temperature limit for the package (one example of the third obtainment step) and calculates time tz, which is the expected time at which the package will reach or exceed the permissible upper temperature limit (expected time that the permissible upper temperature limit will be reached) to obtain time tz (one example of the sixth obtainment step). Control processor 11 determines, at the sender, whether tx > tz (S2301).

If tx > tz (YES in S2301), control processor 11 cancels the delivery and sends unmanned aerial vehicle 10 back to the place of departure, and transmits information indicating to cancel the delivery to terminal device 2210 and operations management system 2213 via second communicator 13 (S2302). Stated differently, since unmanned aerial vehicle 10 is unable to deliver the product to the user with the quality of the product intact, it cancels the delivery and returns to the sender. These determinations may be made by operations management system 2213. Delivery system 1A then ends the processing.

If tx > tz, the user application may forgo displaying the product so that the user is unable to order the product. The user application may also be grayed out so that the user cannot select a product.

If tx > tz is not satisfied (NO in S2301), control processor 11 allows unmanned aerial vehicle 10 to continue delivering the package (S2303).

Control processor 11 determines whether unmanned aerial vehicle 10 is present in the region between the sender and the halfway point of the travel route from the sender to the receiver (S2304).

When control processor 11 determines that unmanned aerial vehicle 10 is present in the region between the receiver and the halfway point of the travel route from the sender to the receiver (NO in S2304), control processor 11 determines if tx > tz (S2305).

If control processor 11 determines that tx > tz is not satisfied (NO in S2305), operations management system 2213 allows unmanned aerial vehicle 10 to continue delivering the package to the receiver (S2306). Delivery system 1A then ends the processing.

However, if control processor 11 determines that tx > tz (YES in S2305), operations management system 2213 causes unmanned aerial vehicle 10 to cancel the delivery and return to the sender. The product returned as a result of unmanned aerial vehicle 10 returning to the sender is discarded (S2307). Stated differently, when unmanned aerial vehicle 10 is present in the region between the receiver and the halfway point of the travel route from the sender to the receiver, the package is discarded because the temperature of the package will exceed the permissible upper temperature limit regardless of whether unmanned aerial vehicle 10 moves to the sender or the receiver. If there is a storage location for the product that is closer than the receiver, or the user requests the product be delivered to that location, unmanned aerial vehicle 10 may deliver the package to that location.

Operations management system 2213 arranges for the same product to be delivered by another unmanned aerial vehicle 10 (S2308). Delivery system 1A then ends the processing.

However, when control processor 11 determines that unmanned aerial vehicle 10 is present in the region between the sender and the halfway point of the travel route from the sender to the receiver (YES in S2304), control processor 11 determines if tx > tz (S2309).

If control processor 11 determines that tx > tz is not satisfied (NO in S2309), the process returns to step S2304.

If control processor 11 determines that tx > tz (YES in S2309), operations management system 2213 causes unmanned aerial vehicle 10 to cancel the delivery and return to the sender (S2310). In this case, the package is not discarded. By returning to the sender in this manner, the product can be stored at the appropriate temperature, thus restoring or inhibiting deterioration in the quality of the product. Stated differently, the product can be returned back to the refrigerator or freezer without reaching or exceeding the permissible upper temperature limit. Therefore, even if the product cannot be delivered, the quality of the product will not be compromised, and thus the waste loss of the product can be inhibited. Operations management system 2213 then ends the process through step S2308.

### Operation Example 13

Next, operations performed when setting the order in which products are delivered according to urgency of product delivery and temperature changes during delivery will be described.

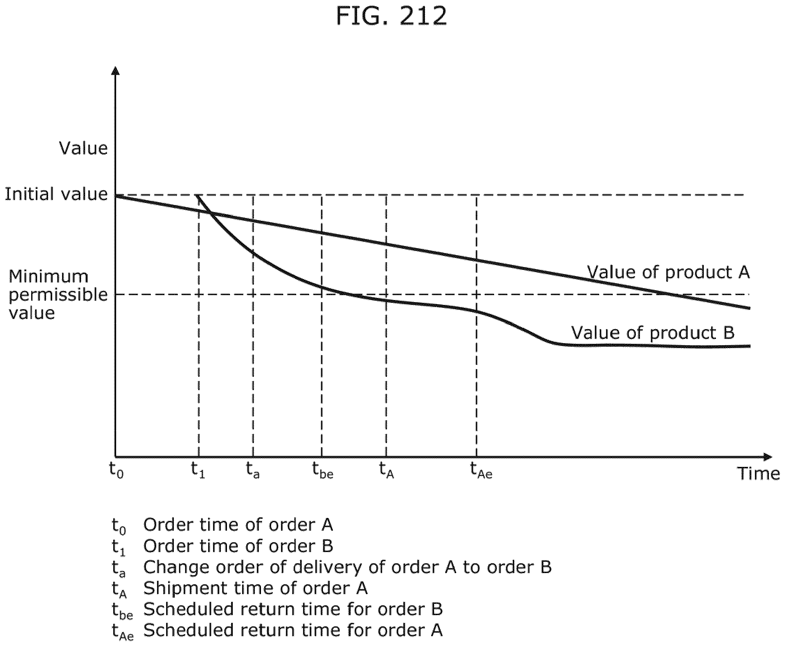

FIG. 212 illustrates an example of the time to reach the minimum permissible value based on the relationship between time and the value of the package in delivery system 1A of Operation Example 13 according to Embodiment 22. In FIG. 212, time is represented on the horizontal axis and the value of the ordered product is represented on the vertical axis.

In FIG. 212, assume that at time to, which when product A is ordered, product A is scheduled to be shipped at time tₐ, but before that, at time ti, product B is ordered that requires urgent delivery. In such cases, operations management system 2213 switches product A scheduled to be shipped at time tₐ to product B so that product B is shipped at time tₐ. Product B that requires urgent delivery is, for example, a product that the user wants immediately, and is often a product that requires temperature retention, such as ramen, pizza, ice cream, etc., and for which the time between the order time and the desired delivery time deadline is short.

User requests include, for example, a user request for a product "within xx hours" and another user's request for a product "right now". To the other user that requested the product "right now", the value of the desired product is high. In the eyes of the user, if the desired product is not delivered immediately, the value of the product is diminished. As illustrated in FIG. 212, the value of product A tends to decline gradually over time, while the value of product B tends to decline more significantly than the value of product A.

Operations management system 2213 pre-determines a value function that is dependent on the user's order, for example, V = a(t) + b, based on the user's urgency preference, the type of product, and the importance of temperature management of the product. Operations management system 2213 determines the order in which to deliver the products (the priority of the delivery of the products) based on the pre-determined value function. Therefore, operations management system 2213 delivers the products to the users in such a way that they do not fall below the permissible marginal value. The permissible marginal value refers to the time-based value that a user can tolerate to receive the product. If the product is ramen, pizza, ice cream, etc., there is a generally acceptable temperature range for the product, so the time before the product falls below the permissible marginal value is short. If the product is non-urgent snack or consumable or the like, the time until the value falls below the permissible marginal value will be longer. Note that a product that falls below the permissible marginal value means that in the eyes of the user, the value of the product has been significantly reduced.

For example, in such cases, operations management system 2213 switches product A scheduled to be shipped at time tₐ to product B, and delivers product B at time t_{be}. Operations management system 2213 then makes changes to ship product A at time t_{A}, and delivers product A to the user at time t_{Ae}. This allows operations management system 2213 to change the order of shipment of products A and B, so that they are delivered to their respective users without falling below the permissible marginal value.

### [Dynamic Setting of Delivery Fee]

Next, a case will be described in which the fee is varied depending on the combination of the desired delivery time and time of day at the time the user places the order.

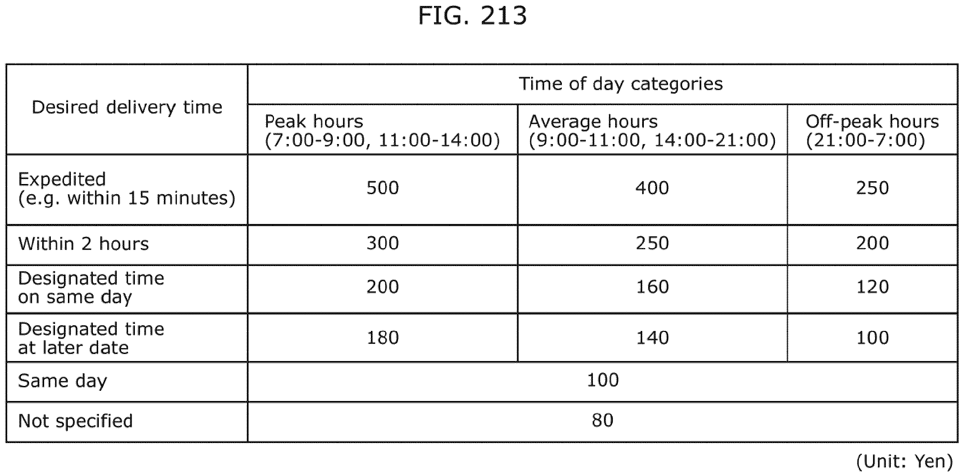

FIG. 213 illustrates an example of the dynamic setting of delivery fees when using delivery system 1A according to Embodiment 22.

At the time the user places an order, the user application displays the desired delivery time and the time of day on the menu screen.

For example, if the user desires delivery within a specified time from the current time, the delivery management system determines the current time and the expected time of arrival relative to the current time. FIG. 213 defines which of the cheapest categories the expected time of arrival determined by the delivery management system belongs to among the categories to which the expected time of arrival belongs.

In FIG. 213, the fee is set higher during peak hours than at other times of day. Since this inhibits a concentration of orders during peak hours, the delivery management system can make deliveries more efficiently (leveling the availability of unmanned aerial vehicles 10).

In FIG. 213, the closer the time from the current time (time of placement of order) is specified, the higher the fee is. This allows the delivery management system to plan deliveries efficiently because it can encourage users to place orders sufficiently ahead of time.

Note that the fees are not limited to the example illustrated in FIG. 213. For example, the fees may vary depending on the combination of delivery distance and desired delivery time. Fees may be categorized, for example, XX yen for "delivery distance of 100 meters or less," XX yen for "delivery distance of 100 to 200 meters," and so on. The fees may be calculated by adding, to the base fee, an amount obtained by multiplying the per-distance fee by the distance delivered. The base fee and the per-distance fee may be determined based on the desired delivery time and time of day category.

### (Other Variations)

Although the present disclose has been described above based on various embodiments, the present disclosure is not limited to these embodiments.

The lifting system described above may be applied to an autonomous aerial vehicle instead of an unmanned aerial vehicle, for example. In this case, the term "unmanned aerial vehicle" or "drone" used in the foregoing descriptions is replaced with "autonomous aerial vehicle" as appropriate. Alternatively, the techniques described above may be applied to any aerial vehicle regardless of whether the aerial vehicle is manned or unmanned or regardless of whether the aerial vehicle is autonomously driven or manually driven.

Each element included in the lifting system according to the above embodiments may be implemented by dedicated hardware or through execution of a software program suitable for the element. Each element may be implemented by a program executing unit, such as a CPU or a processor, reading and executing a software program recorded on a recording medium, such as a hard disk or a semiconductor memory.

The processors functioning as the elements in the lifting system are typically implemented as an LSI circuit, which is an integrated circuit. These processors may be realized as individual chips, or a portion or all of the processors may be realized collectively as a single chip.

Moreover, circuit integration is not limited to LSI; the processors may be realized as dedicated circuits or generic processors. A field programmable gate array (FPGA) that is programmable after the LSI circuit is manufactured, or a reconfigurable processor whose connections and settings regarding circuit cells in the LSI circuit are reconfigurable, may be used.

Each element may be implemented by dedicated hardware or through execution of a software program suitable for the element. Each element may be implemented by a program executing unit, such as a CPU or a processor, reading and executing a software program recorded on a recording medium, such as a hard disk or a semiconductor memory.

All of the values used above are mere examples used for illustrative purposes; the embodiments of the present disclosure are not limited to the exemplary values.

The block diagrams illustrate one example of the division of functional blocks; a plurality of functional blocks may be realized as a single functional block, a single functional block may be broken up into a plurality of functional blocks, and part of one function may be transferred to another functional block. The functions of a plurality of functional blocks having similar functions may be processed by a single piece of hardware or software in parallel or by time-division.

The order in which the steps in the flowcharts are executed are mere examples in order to specifically describe the present disclosure, and may include orders other than those exemplified. Moreover, some of the steps may be executed at the same time as (in parallel with) other steps.

### [Additional Comments]

An unmanned aerial vehicle is an unmanned aerial vehicle that delivers a package, and the unmanned aerial vehicle includes a plurality of rotary wings, a plurality of first motors that respectively rotate the plurality of rotary wings, a main body that supports the plurality of first motors, a connector that is to be connected to a rail provided at a position spaced apart from a ground surface with the main body hanging from the connector, a movable block that sets an inclination of an virtual plane containing the plurality of rotary wings relative to a support direction in which the connector is supported on the rail, and a control circuit that controls the plurality of first motors and the movable block. The connector includes a first end connected to the main body and a second end to be slidably connected to the rail. The support direction extends from the first end toward the second end of the connector. When the second end of the connector is connected to the rail, the control circuit (i) sets a rotation rate of the plurality of first motors to a rotation rate that is lower than a minimum rotation rate necessary for causing the unmanned aerial vehicle to float and that is higher than a minimum rotation rate necessary for propelling the unmanned aerial vehicle in a direction in which the rail extends and (ii) causes the movable block to increase an angle formed by a normal direction of the virtual plane relative to the support direction of the connector.

According to this configuration, the unmanned aerial vehicle can move along the rail with the connector of the unmanned aerial vehicle being connected to the rail. In the case of (i), the control circuit controls the rotation rate of the plurality of first motors to the rotation rate that is lower than the minimum rotation rate necessary for causing the unmanned aerial vehicle to float and that is higher than the minimum rotation rate necessary for propelling the unmanned aerial vehicle. Therefore, the unmanned aerial vehicle can move along the rail at an appropriate speed. In the case of (ii), the control circuit controls the actuator so as to change the inclination of the imaginary plane containing the plurality of rotary wings relative to the support direction of the connector. Therefore, the speed of the unmanned aerial vehicle can be regulated.

A delivery system may include an unmanned aerial vehicle, a plurality of support pillars, and the rail stretched between two adjacent support pillars of the plurality of support pillars.

The movable block may be disposed between the main body and the connector.

This configuration allows the movable block to change the angle of the connector relative to the main body with ease.

For example, in a case where the connector is disposed at or around the center of gravity of the main body, the movable block is also disposed at or around the center of gravity of the main body. This configuration makes it possible to balance the center of gravity of the unmanned aerial vehicle.

The unmanned aerial vehicle may further include a pair of wings.

According to this configuration, for example, the unmanned aerial vehicle can be rotated in the horizontal direction if the pair of wings are yaw wings, or the unmanned aerial vehicle can be rotated in the vertical direction if the pair of wings are pitch wings. As a result, the traveling direction of the unmanned aerial vehicle can be steered freely, and thus the unmanned aerial vehicle can be moved stably.

After the movable block has increased the angle, the control circuit may disengage the connector from the rail when a propulsion speed of the unmanned aerial vehicle exceeds a predetermined value.

This configuration can keep the connector from making contact with the rail, and thus the safety of the unmanned aerial vehicle can be increased.

When the connector is being disengaged from the rail, the control circuit may cause the movable block to reduce the angle and control the rotation rate of the plurality of first motors to a rotation rate higher than the minimum rotation rate necessary for causing the unmanned aerial vehicle to float.

According to this configuration, when the connector is disengaged from the rail, the unmanned aerial vehicle can float to a predetermined height from the ground surface by reducing the angle. This can keep the unmanned aerial vehicle from making contact with an object, and thus the safety of the unmanned aerial vehicle can be increased.

In the above (ii), the control circuit may control the rotation rate of the plurality of first motors so as to increase the angle to greater than 15 degrees.

This configuration makes it possible to appropriately set the speed of the unmanned aerial vehicle.

In the above (ii), the control circuit may control the rotation rate of the plurality of first motors so as to increase the angle to greater than 45 degrees.

In the above (ii), the control circuit may control the rotation rate of the plurality of first motors so as to increase the angle to greater than 65 degrees.

In the above (ii), the control circuit may control the rotation rate of the plurality of first motors so as to increase the angle to greater than 80 degrees.

The connector may include a support portion swingably connected to the main body and a first arm connected to one end of the support portion.

This configuration allows the first arm to swing along with a swinging movement of the support portion. Therefore, the first arm can connect itself to the rail more easily.

The first arm may be a hanger for hanging the unmanned aerial vehicle from the rail.

According to this configuration, the first arm can be hung on the rail when the unmanned aerial vehicle has stopped. Therefore, the unmanned aerial vehicle can place a package at a receiver with the unmanned aerial vehicle hanging from the rail.

The connector may further include a wheel that is connected to the first arm and that allows the connector to rotatably make contact with the rail.

According to this configuration, when the unmanned aerial vehicle becomes connected to the rail, the unmanned aerial vehicle can move along the rail with the wheel making contact with the rail. The wheel starts rotating upon friction with the rail. Therefore, the unmanned aerial vehicle can travel on the rail solely with the propelling force acting in the traveling direction produced by the rotation of the rotary wings. This configuration renders it unnecessary for the unmanned aerial vehicle to use the rotary force of the rotary wings as a lifting force for lifting up the unmanned aerial vehicle. As a result, the energy used by the unmanned aerial vehicle can be reduced.

The connector may further include a second arm connected to the one end of the support portion.

According to this configuration, not only the first arm but also the second arm can be connected to the rail. Therefore, the possibility that the unmanned aerial vehicle falls off from the rail can be reduced, and the safety in the system that includes the unmanned aerial vehicle can be further increased.

The first arm may be a first hanger for hanging the unmanned aerial vehicle from the rail. The second arm may be a second hanger for hanging the unmanned aerial vehicle from the rail. The connector may further include a first actuator that sets an angle of the first arm relative to the support portion and a second actuator that sets an angle of the second arm relative to the support portion.

This configuration makes it possible to hang the unmanned aerial vehicle from the rail reliably. Therefore, the possibility that the unmanned aerial vehicle falls off from the rail can be reduced, and the safety in the system that includes the unmanned aerial vehicle can be further increased.

The connector may further include a base disposed between the support portion and the first and second arms and a third actuator that sets an angle of the base relative to the support portion.

According to this configuration, the height of the first arm relative to the main body or the height of the second arm relative to the main body can be changed only by changing the angle of the base. Therefore, the heights of the first arm and the second arm can be changed without tilting the main body, and thus the stability of the unmanned aerial vehicle can be maintained.

The first arm may include a first hook that extends from a first connected end connected to the first actuator to a first open end. The second arm may include a second hook that extends from a second connected end connected to the second actuator to a second open end. The first hook may include a first bent portion that is bent in a first direction and located between the first connected end and the first open end. The second hook may include a second bent portion that is bent in a second direction opposite the first direction and located between the second connected end and the second open end.

According to this configuration, the horizontal attitude of the main body can be maintained when the first hook is hung on the rail, and the horizontal attitude of the main body can be maintained also when the second hook is hung on the rail. Therefore, the first hook and the second hook can maintain an appropriate attitude of the unmanned aerial vehicle.

The first hook and the second hook make it easier to hook the unmanned aerial vehicle from the rail.

When the unmanned aerial vehicle is slidably hung from a first rail via the first hook, the control circuit may hook the second hook onto a second rail that extends along and adjacent to the first rail by controlling the second actuator and may disengage the first hook from the first rail by controlling the first actuator.

According to this configuration, for example, if the first hook is disengaged from the first rail after the second hook has become connected to the second rail while the first hook of the unmanned aerial vehicle is connected to the first rail, the unmanned aerial vehicle can switch the connection from the first rail to the second rail serving as another rail and then move along the second rail. Therefore, the unmanned aerial vehicle can reliably switch from one rail to another rail at the branching point of these rails. Thus, the possibility that the unmanned aerial vehicle falls off can be reduced, and the safety in the system that includes the unmanned aerial vehicle can be further increased.

The delivery system may include an unmanned aerial vehicle, a plurality of support pillars, and the first rail and the second rail that are stretched between two adjacent support pillars of the plurality of support pillars.

When the unmanned aerial vehicle is slidably hung from the first rail via the first hook and the second hook, the control circuit may disengage the second hook from the first rail and hook the second hook onto the second rail that extends along and adjacent to the first rail by controlling the second actuator and may disengage the first hook from the first rail and hook the first hook onto the second rail by controlling the first actuator.

According to this configuration, for example, if the first hook is disengaged from the first rail and connected to the second rail after the second hook has been disengaged from the first rail and has become connected to the second rail when the first hook and the second hook of the unmanned aerial vehicle are connected to the first rail, the unmanned aerial vehicle can switch the connection from the first rail to the second rail serving as another rail and then move along the second rail. Therefore, the unmanned aerial vehicle can reliably switch from one rail to another rail at the branching point of these rails. Thus, the possibility that the unmanned aerial vehicle falls off can be reduced, and the safety in the system that includes the unmanned aerial vehicle can be further increased.

When the second hook is to be hooked onto the second rail, the control circuit may tilt the main body or the support portion in the second direction so as to position the second connected end higher than the first connected end. When the first hook is to be disengaged from the first rail, the control circuit may tilt the main body or the support portion in the first direction so as to position the first connected end higher than the second connected end.

According to this configuration, by tilting the main body or the support portion, the first hook and the second hook can be hooked onto the rail with ease, or the first hook and the second hook can be disengaged from the rail with ease.

The unmanned aerial vehicle may further include a hanging wire connected to the main body and provided to hang the package and a lift motor that is capable of taking up the hanging wire. The control circuit may position the unmanned aerial vehicle vertically above a storage device for housing the package with the connector being connected to the rail. In addition, the control circuit may let out the hanging wire by actuating the lift motor, lower the package from the main body, and store the package into the storage device.

According to this configuration, upon the unmanned aerial vehicle arriving at the destination point, the control circuit controls the lift motor so as to let out the hanging wire. Thus, the unmanned aerial vehicle can lower the package and store the package into the storage device. Therefore, the unmanned aerial vehicle can deliver the package to the receiver.

While the control circuit lets out the hanging wire, the control circuit may adjust at least one of the position and the orientation of the main body in accordance with the position of the package relative to the storage device.

According to this configuration, even if the position of the unmanned aerial vehicle fails to match the position directly above the storage device, the control circuit can position the main body relative to the storage device by adjusting at least one of the position and the orientation of the main body. Therefore, the unmanned aerial vehicle can reliably lower the package and store the package into the storage device, which in turn makes it possible to deliver the package reliably to the receiver.

In particular, even if the unmanned aerial vehicle moves from the position directly above the storage device due to the wind or the like, the unmanned aerial vehicle can position the main body relative to the storage device.

When the position of the package is moved from the position vertically above the storage device in a third direction, the control circuit may move the unmanned aerial vehicle in a fourth direction opposite the third direction along the direction in which the rail extends.

According to this configuration, even if the position of the package has changed (moved) in the third direction via the hanging wire due to the wind or the like, the control circuit can change the position of the unmanned aerial vehicle in the fourth direction opposite the third direction. Therefore, the unmanned aerial vehicle can reliably lower the package and store the package into the storage device, which in turn makes it possible to deliver the package more reliably to the receiver.

When the position of the package has moved in the fifth direction from the position vertically above the storage device, the control circuit may cause the unmanned aerial vehicle to swing about the rail and may move the center of gravity of the unmanned aerial vehicle in a sixth direction opposite the fifth direction.

According to this configuration, even if the position of the package has changed in the fifth direction via the hanging wire due to the wind or the like, the control circuit can change the position of the package in the sixth direction opposite the fifth direction by moving the center of gravity of the unmanned aerial vehicle. Therefore, the unmanned aerial vehicle can reliably lower the package and store the package into the storage device, which in turn makes it possible to deliver the package more reliably to the receiver.

The unmanned aerial vehicle may further include a thruster device removably attached to the package. The thruster device may include a plurality of propellers, a plurality of second motors that respectively rotate the plurality of propellers, and a support member that supports the plurality of second motors.

According to this configuration, even if the position of the unmanned aerial vehicle fails to match the position directly above the storage device, the thruster device can guide the package to the storage device. Therefore, the unmanned aerial vehicle can reliably lower the package and store the package into the storage device, which in turn makes it possible to deliver the package more reliably to the receiver. Even in a case where the opening of the storage device is small and it is hard to insert the package into the storage device, the unmanned aerial vehicle can reliably insert the package into the storage device. Thus, the unmanned aerial vehicle does not require a large space for landing.

In particular, with this unmanned aerial vehicle, even in a case where the unmanned aerial vehicle moves from the position directly above the storage device due to the wind or the like, the thruster device can store the package into the storage device.

The plurality of propellers include a first propeller disposed on a first side portion of the support member and a second propeller disposed on a second side portion of the support member, and the second side portion may be different from the first side portion.

According to this configuration, the position and the orientation of the thruster device relative to the storage device can be adjusted. Therefore, with this unmanned aerial vehicle, the thruster device can more reliably store the package into the storage device.

The control circuit may cause the thruster device to actuate at least one of the plurality of second motors in at least a portion of a period in which the hanging wire is let out.

According to this configuration, when a package is lowered from the unmanned aerial vehicle, the position and the orientation of the thruster device relative to the storage device can be adjusted. Therefore, with this unmanned aerial vehicle, the package can be stored smoothly into the storage device.

In the delivery system, each of the plurality of support pillars may be a utility pole.

According to this configuration, existing utility poles can be used as the support pillars, and no new support pillar needs to be installed in order to stretch the rail. Therefore, this system can prevent a surge in the cost of installation.

The delivery system may further include a lead-in support pillar disposed within a predetermined site and a lead-in wire stretched to the rail. The height from the ground surface to a first connection point at which the lead-in wire and the lead-in support pillar are connected to each other may be lower than the height from the ground surface to a second connection point at which the lead-in wire and the rail are connected to each other.

According to this configuration, the rail is disposed at a position higher than the first connection point, and thus the unmanned aerial vehicle can move along a high position. Since the unmanned aerial vehicle travels along a position where the unmanned aerial vehicle is less likely to be recognized by people, the privacy of the user at the receiver and the privacy of people in the facilities, such as homes, that are located so as to face the rail can be protected.

The utility pole may support a power transmission line, and the rail may be provided at a position lower than the power transmission line and higher than the leading end of the lead-in support pillar.

According to this configuration, since the rail is disposed under the power transmission line, the rail can be disposed at a position where the unmanned aerial vehicle will not make contact with the power transmission line, and the unmanned aerial vehicle can travel along the rail. Therefore, the safety of the unmanned aerial vehicle delivering packages can be ensured.

The plurality of support pillars may each be a streetlight.

According to this configuration, existing streetlights can be used as the support pillars, and no new support pillar needs to be installed in order to stretch the rail. Therefore, this system can prevent a surge in the cost of installation.

The delivery system may further include a protective net stretched along a position vertically below an approaching region of the first rail and the second rail. The approaching region may be a region where the distance between the first rail and the second rail is smaller than or equal to the width of the unmanned aerial vehicle.

According to this configuration, since the distance between the first rail and the second rail is smaller than the width (the size) of the main body, the unmanned aerial vehicle can make a switch from the first rail to the second rail with ease and then move along the second rail.

As the protective net is provided along a position vertically below the approaching region of the first rail and the second rail, even if the unmanned aerial vehicle becomes disengaged from the first rail and the second rail, the possibility that the unmanned aerial vehicle falls to the ground can be reduced. Therefore, the safety in the system that includes the unmanned aerial vehicle can be further increased.

The height of at least a portion of the second rail may be higher than the height of the adjacent first rail.

According to this configuration, when two unmanned aerial vehicles are traveling along the first rail in opposite directions, one of the two unmanned aerial vehicles can take refuge in the second rail. In other words, the second rail can be used as a refuge track. This can keep the unmanned aerial vehicles from colliding with each other or suppress the congestion of the unmanned aerial vehicles.

The angle may be at least -30 degrees and at most +30 degrees.

Since this inhibits an increase in the amount of thrust the device produces for hovering, for example, it is possible to inhibit the wire from becoming slack due the device suddenly rising.

The device may further include a protective member surrounding the plurality of propellers.

With this, since the protective member can protect the rotating propellers, the propellers can be prevented from coming into contact with other objects.

The device may further include a reel to which the other end of the wire is connected, and a lift motor that rotates the reel to reel out the wire. When the reel is positioned vertically above a storage device for housing the package, the controller starts actuating the plurality of motors after the length of the portion of the wire that has been reeled out exceeds a predetermined length.

With this, since the device starts adjusting its position relative to the predetermined position when the device approaches the storage device, it easier for the device to align itself relative to the predetermined position.

The predetermined length may be equivalent to half the distance from the storage device to the reel.

With this, since the device starts adjusting its position relative to the predetermined position when the device is positioned near the storage device, it even easier for the device to align itself relative to the predetermined position.

Each of the plurality of propellers may include a plurality of blades. A plurality of protrusions may be provided on the surface of each of the plurality of blades. The plurality of protrusions may form a striped pattern extending in the direction of rotation of the plurality of blades.

This makes it possible to reduce the influence of wind during flight of the device. This makes it even easier to align the device relative to the predetermined position, because the attitude of the device can be stabilized even in windy conditions.

A storage device may include: a container that defines a space for storing a package; a top lid that is provided on a top portion of the container and can open and close a top opening for inserting the package into the space through the top opening; and a side lid that is provided on a side portion of the container and can open and close a side opening for removing the package in the space through the side opening.

With this, a package can be placed into the space of the storage device from above the storage device, and a package stored in the space can be removed from the side of the storage device. Accordingly, a package can be easily removed.

A system may include a storage device and a lifting device that is attachable to and detachable from a package and can be lowered from vertically above the storage device. The lifting device may include a protrusion. The storage device may include a hole that is provided in the top portion and accommodates the insertion of the protrusion, and a mechanism for opening the top lid when the protrusion is inserted into the hole.

With this, when the lifting device stores the package in the storage device, the lifting device can be aligned with the top opening of the storage device by inserting the protrusion into the hole. As a result, the package can be stored with certainty in the space in the storage device.

An unmanned aerial vehicle may include: a plurality of rotary wings; a plurality of motors that respectively rotate the plurality of rotary wings; a main body that supports the plurality of motors; and a connector for connecting to a rail positioned separated from the ground surface while the main body is hanging. The connector may include: a fixed portion; a first arm including one end connected to the fixed portion and another end that opens and closes relative to the fixed portion; a second arm including one end connected to the fixed portion and another end that opens and closes relative to the fixed portion; a first actuator that opens and closes the first arm; a second actuator that opens and closes the second arm; and a controller that controls the first actuator and the second actuator. A first region enclosed by the first arm in the closed state and the fixed portion may be separated from a second region enclosed by the second arm in the closed state and the fixed portion.

With this, when the first arm of the unmanned aerial vehicle is connected to a first rail, which is one example of the rail, the first arm can be disconnected from the first rail after the second arm is connected to a second rail. This allows the unmanned aerial vehicle to switch connections from the first rail to the second rail, which is one example of another rail, and continue moving.

The fixed portion may extend upwardly from the main body and include a partition portion separating the first region and the second region.

With this, a single connector can be used to connect to two rails. Accordingly, the attitude of the connector can be maintained better than when two connectors are used.

The controller may control the first actuator and the second actuator so that at least one of the first arm and the second arm is in a closed state.

With this, if a rail is present in at least one of the closed first region and the closed second region, the unmanned aerial vehicle can securely hang from the rail.

When the controller receives an instruction to change the first arm from the closed state to the open state, the controller may determine whether the second arm is in the closed state or not. When the second arm is in the closed state, the controller may change the first arm to the open state. When the second arm is in the open state, the controller may maintain the first arm in the closed state.

With this, when a second rail is connected to the second arm in the closed state, a first rail can be connected to the first arm. When the second arm is in the open state, if a first rail is connected to the first arm in the closed state, the first arm can be maintained in the closed state without placing the first arm in the open state. In this way, the unmanned aerial vehicle can reliably hang from a rail, thereby inhibiting the unmanned aerial vehicle from falling.

When the controller receives an instruction to change the second arm from the closed state to the open state, the controller may determine whether the first arm is in the closed state or not. When the first arm is in the closed state, the controller may change the second arm to the open state. When the first arm is in the open state, the controller may maintain the second arm in the closed state.

With this, when a first rail is connected to the first arm in the closed state, a second rail can be connected to the second arm. When the first arm is in the open state, if a second rail is connected to the second arm in the closed state, the second arm can be maintained in the closed state without placing the second arm in the open state. In this way, the unmanned aerial vehicle can reliably hang from a rail, thereby inhibiting the unmanned aerial vehicle from falling.

The controller may further control the rotational speed of the plurality of motors, and when the first arm is in the open state, the second arm is in the closed state, and the second arm is hanging from the rail passing through the second region, the controller may increase a first rotational speed of a first motor, which is the motor closest to the first arm among the plurality of motors, to a rotational speed greater than a second rotational speed of a second motor, which is the motor closest to the second arm among the plurality of motors. Alternatively, when the second arm is in the open state, the first arm is in the closed state, and the first arm is hanging from the rail passing through the first region, the controller may increase the second rotational speed of the second motor, which is the motor closest to the second arm among the plurality of motors, to a rotational speed greater than the first rotational speed of the first motor, which is the motor closest to the first arm among the plurality of motors.

With this, if the second arm is in the closed state and the first arm is in the open state, the weight of the first arm moves the center of gravity to the first arm side. Therefore, by making the first rotational speed of the first motor on the first arm side greater than the second rotational speed of the second motor on the second arm side, an amount of buoyancy equivalent to the weight of the center of gravity displaced to the first arm side can be imparted to the unmanned aerial vehicle.

If the first arm is in the closed state and the second arm is in the open state, the weight of the second arm moves the center of gravity to the second arm side. Therefore, by making the second rotational speed of the second motor on the second arm side greater than the first rotational speed of the first motor on the first arm side, an amount of buoyancy equivalent to the weight of the center of gravity displaced to the second arm side can be imparted to the unmanned aerial vehicle.

As a result, the unmanned aerial vehicle can maintain the attitude of the main body of the unmanned aerial vehicle approximately parallel to the horizontal direction, even if the center of gravity is displaced from the center of the main body of the unmanned aerial vehicle.

The connector may further include a third actuator that changes the angle of the fixed portion relative to the main body. The controller may further control the third actuator. When the first arm is in the open state, the second arm is in the closed state, and the second arm is hanging from the rail passing through the second region, the controller may change the angle via the third actuator to position the second region directly above the center of the main body. When the second arm is in the open state, the first arm is in the closed state, and the first arm is hanging from the rail passing through the first region, the controller may change the angle via the third actuator to position the first region directly above the center of the main body.

With this, if the first arm is in the open state and the second arm hanging on the second rail is in the closed state, the first rail present in the first region may be let outside of the first region by simply changing the attitude (angle) of the fixed portion relative to the main body of the unmanned aerial vehicle.

If the second arm is in the open state and the first arm hanging on the first rail is in the closed state, the second rail present in the second region can be let outside of the second region by simply changing the attitude (angle) of the fixed portion relative to the main body of the unmanned aerial vehicle.

Thus, the first rail can be easily disconnected from the connector and the second rail can be easily disconnected from the connector by simply inclining the fixed portion relative to the main body. This also makes it easy to switch the connector connected to the first rail to the second rail or to switch the connector connected to the second rail to the first rail.

A system includes the unmanned aerial vehicle and the rail, and the rail may be provided with a marker including predetermined information.

This allows the unmanned aerial vehicle to read the predetermined information indicated by the marker added to the rail. For example, the package can be more accurately delivered to the predetermined position by the predetermined information including an address or position information or the like.

A system includes the unmanned aerial vehicle and the rail, and the rail may be provided with an uneven portion including predetermined information.

This allows the unmanned aerial vehicle to obtain predetermined information from the uneven portion added to the rail as it moves along the rail. For example, the package can be more accurately delivered to the predetermined position by the predetermined information including an address or position information or the like.

An unmanned aerial vehicle may include: a plurality of rotary wings; a plurality of motors that respectively rotate the plurality of rotary wings; a main body that supports the plurality of motors; a connector for connecting to a rail positioned separated from the ground surface while the main body is hanging; an actuator that changes the angle of the normal direction of a virtual plane including the plurality of rotary wings relative to a support direction in which the connector is supported by the rail; and a controller that controls the plurality of motors and the actuator. The connector may include a first end connected to the main body and a second end for slidably connecting to the rail. The support direction may be a direction from the first end of the connector toward the second end of the connector. In a first mode, the controller may align the normal direction of the virtual plane with the support direction via the actuator, and in a second mode, the controller may make the normal direction of the virtual plane orthogonal to the support direction via the actuator.

With this, the controller can change the attitude of the main body of the unmanned aerial vehicle relative to the support direction when traveling on the rail. For example, when the unmanned aerial vehicle is to travel on the rail, the second mode can be implemented, and when the unmanned aerial vehicle is to leave the rail, the first mode can be implemented. Accordingly, the unmanned aerial vehicle can change its flight mode as appropriate depending on the situation.

In a third mode, the controller may make the angle at least 10 degrees and at most 30 degrees via the actuator.

This allows the unmanned aerial vehicle to move along the rail without contact between the rail and the support member.

The unmanned aerial vehicle may further include a sensor that detects the inclination of the rail. The controller may change the angle according to the inclination of the rail.

With this, even when the rail is inclined relative to the horizontal direction, the unmanned aerial vehicle can move along the inclined rail.

The controller may align the normal direction of the virtual plane with the inclination of the rail via the actuator.

This allows the connector to move along the rail, thereby inhibiting the rail from coming into contact with the support member.

When the controller receives a first instruction to propel the unmanned aerial vehicle in a first direction along the rail, the controller may incline the normal direction of the virtual plane from the support direction toward a second direction, rotate the rotary wings of a first motor among the plurality of motors that is positioned in the first direction from the center of the main body in a first direction of rotation, and rotate the rotary wings of a second motor among the plurality of motors that is positioned in the second direction from the center of the main body in a second direction of rotation. The second direction may be the opposite of the first direction, and the second direction of rotation may be the opposite of the first direction of rotation.

This allows the unmanned aerial vehicle to move forward while maintaining the attitude of the unmanned aerial vehicle with respect to the main body relative to the support direction in a desired state.

When the controller obtains a second instruction to propel the unmanned aerial vehicle in the second direction along the rail, the controller may rotate the rotary wings of the first motor in the second direction of rotation and rotate the rotary wings of the second motor in the first direction of rotation.

With this, by reversing the directions of rotation of the first motor and the second motor, the unmanned aerial vehicle can move in reverse. For example, after the package is delivered, the unmanned aerial vehicle can return along the same rail along which it arrived.

When the controller obtains the second instruction, the controller may further incline the normal direction of the virtual plane from the support direction toward the first direction via the actuator, rotate the rotary wings of the first motor in the first direction of rotation, and rotate the rotary wings of the second motor in the second direction of rotation.

This allows the unmanned aerial vehicle to reverse the inclination of the main body of the unmanned aerial vehicle relative to the support direction. The inclination of the normal direction of the virtual plane changes from inclining toward the second direction to inclining toward the first direction relative to the support direction. This allows the unmanned aerial vehicle to move in reverse. For example, in this case as well, after the package is delivered, the unmanned aerial vehicle can return along the same rail along which it arrived.

The connector may include a fixed portion connected to a main body, an arm connected to the rail, and a second actuator that is disposed between the fixed portion and the arm and is rotatable about an axis of rotation parallel to the support direction. When the controller receives a second instruction to propel the unmanned aerial vehicle in the second direction along the rail, the controller may reverse the orientation of the main body by rotating the main body via the second actuator about the axis of rotation that is parallel to the support direction.

This makes it possible to invert the inclination of the main body of the unmanned aerial vehicle symmetrically with respect to the support direction by the fixed portion rotating relative to the arm about the axis of rotation that is parallel to the support direction. This allows the unmanned aerial vehicle to move in reverse. For example, in this case as well, after the package is delivered, the unmanned aerial vehicle can return along the same rail along which it arrived.

The connector may include an arm that is connected to the rail and can be opened and closed, and a third actuator that opens and closes the arm. When the controller receives a second instruction to propel the unmanned aerial vehicle in the second direction along the rail, the controller may change the arm from a closed state to an open state via the third actuator, control the plurality of motors to reverse the orientation of the main body about the support direction, and change the arm from the open state to the closed state via the third actuator.

With this, the unmanned aerial vehicle is temporarily disconnected from the rail, the orientation of the unmanned aerial vehicle is reversed, and then the connector of the unmanned aerial vehicle is reconnected to the rail. For example, in this case as well, after the package is delivered, the unmanned aerial vehicle can return along the same rail along which it arrived.

The connector may include an arm connected to the rail, and a roller that is provided on the inner peripheral surface of the arm and rotatably contacts the rail.

Accordingly, when the connector of the unmanned aerial vehicle is connected to the rail, the roller contacts the rail, allowing the unmanned aerial vehicle to move along the rail. The unmanned aerial vehicle is able to move along the rail using only its own propulsion in the traveling direction. Since the unmanned aerial vehicle does not have to expend energy on lift force to lift itself, the unmanned aerial vehicle can save energy.

The connector may include a pair of brake pads and a braking mechanism that changes the distance between the pair of brake pads so as to sandwich the rail between the pair of brake pads.

Accordingly, when the connector of the unmanned aerial vehicle is connected to the rail, the rail can be sandwiched between the pair of brake pads. This makes it easy to decelerate or stop the unmanned aerial vehicle that is moving.

When the controller obtains a stop instruction to stop the unmanned aerial vehicle, the controller may rotate the rotary wings of the first motor in the second direction of rotation and rotate the rotary wings of the second motor in the first direction of rotation.

This makes it possible to reverse the directions of rotation of the rotary wings of the first motor and the rotary wings of the second motor, in accordance with the stop instruction, relative to the directions of rotation of the rotary wings of the first motor and the rotary wings of the second motor when traveling forward. This makes it possible to stop movement of the unmanned aerial vehicle.

A storage device capable of storing a package delivered by an unmanned aerial vehicle may include: a container including a bottom portion and a side portion; a top lid provided above the container; and a load support member capable of supporting the load of the unmanned aerial vehicle carrying a package. The unmanned aerial vehicle may include a plurality of legs that can land on the load support member. The load support member may include a plurality of recesses that can support the plurality of legs. Each of the plurality of recesses may be a bowl-shaped or cone-shaped recess that opens upwardly.

With this, the plurality of recesses can engage with the plurality of legs to guide the plurality of legs when the unmanned aerial vehicle descends. As a result, the load support member can hold the unmanned aerial vehicle at a predetermined attitude. When the unmanned aerial vehicle delivers a package, the unmanned aerial vehicle can thus position itself vertically above the container. As a result, a package can be stored with certainty in the storage device.

A storage device capable of storing an article delivered by an unmanned aerial vehicle may include: a container including a bottom portion and a side portion; a lid rotatably coupled to the container; a load support member capable of supporting the load of the unmanned aerial vehicle carrying an article; and one or more link rods coupled between the load support member and the lid. When the unmanned aerial vehicle applies a load to the load support member, the one or more link rods may transfer the load to the lid and open the lid.

With this, the lid of the container can be automatically opened simply by the unmanned aerial vehicle hanging from the load support member. Accordingly, the article delivered by the unmanned aerial vehicle can be stored in the container.

A method for storing an article delivered by an unmanned aerial vehicle into a storage device may include: supporting the unmanned aerial vehicle using a load support member of the storage device; storing the article in a container after a lid of the storage device opens and the article is lowered from the unmanned aerial vehicle via a wire; disconnecting the connection between the article and the wire; reeling in the wire; and separating the unmanned aerial vehicle from the load support member.

The lid may close to cover the top portion of the container when the load applied to the load support member is removed.

With this, the lid of the container can be automatically closed by the unmanned aerial vehicle flying away from the load support member.

The load support member may be disposed above the container.

With this, since the lid of the container is opened so long as the unmanned aerial vehicle is hanging from the load support member, the article delivered by the unmanned aerial vehicle can be easily stored in the container.

The load support member may be a suspension rod from which the unmanned aerial vehicle can hang.

With this, the load of the unmanned aerial vehicle hanging from the load support member can be reliably supported.

The suspension rod may include a V-shaped or U-shaped bend directly above the container.

This makes it easier to position the unmanned aerial vehicle because the unmanned aerial vehicle can easily be caught by the bend. Accordingly, since the lid of the container is opened so long as the unmanned aerial vehicle is hanging from the load support member, the article delivered by the unmanned aerial vehicle can be stored in the container even more easily.

The one or more link rods may include a first link rod, a second link rod, and a third link rod. A first end of the first link rod may be rotatably coupled to the suspension rod, a second end of the first link rod may be rotatably coupled to a third end of the second link rod, a fourth end of the second link rod may be rotatably coupled to a fifth end of the third link rod, and a sixth end of the third link rod may be rotatably coupled to the lid.

With this, when the unmanned aerial vehicle is hanging from the suspension rod, the suspension rod flexes vertically downward due to the load of the unmanned aerial vehicle. As a result, the load thereof is transferred, via the suspension rod, to the lid of the container via the first link rod, the second link rod, and the third link rod. Accordingly, the lid of the container can be reliably opened simply by the unmanned aerial vehicle hanging from the suspension rod. Accordingly, with this storage device, the article delivered by the unmanned aerial vehicle can be stored in the container more easily.

The storage device may further include a first axle that supports rotation of the load support member at a position between the two ends of the suspension rod, and a second axle that supports rotation of the third link rod at a position between the fifth end and the sixth end of the third link rod.

With this, the load of the unmanned aerial vehicle can be reliably transferred to the first link rod via the first axle. The load of the unmanned aerial vehicle transferred to the third link rod can be reliably transferred to the lid of the container via the second axle. This makes it possible to open the lid of the container.

The storage device may further include a support member that fixes the positions of the first axle and the second axle.

With this, the weight of the unmanned aerial vehicle hanging from the suspension rod can be reliably transferred to the lid of the container via the first link rod, the second link rod, and the third link rod, so that the lid of the container can be reliably opened.

The storage device may further include a door provided on the side portion of the container, and a first interlocking portion that locks the door when the lid is opened.

This inhibits an article from going through the door upon storing the article in the container. Locking the door makes it possible to inhibit forgetting to lock the door manually, which is excellent for convenience because it can inhibit theft of a package stored in the storage device.

The storage device may further include a second interlocking portion that locks the lid when the lid is closed.

With this, the lid can be automatically locked when the lid is closed. This reduces the frequency of having to lock the lid by hand. Locking the lid makes it possible to inhibit forgetting to lock the lid manually, which is excellent for convenience because it can inhibit theft of a package stored in the storage device.

A system may include the storage device and the unmanned aerial vehicle.

The unmanned aerial vehicle may include a first arm for hanging from the load support member.

With this, since the unmanned aerial vehicle can securely hang from the load support member, the unmanned aerial vehicle can maintain its attitude even if the actuation of a motor, for example, is stopped.

In the system, the unmanned aerial vehicle may include: a wire; a second arm that is connected to one end of the wire and holds an article; a reel that is connected to the other end of the wire and is capable of reeling in the wire; and a controller. The controller may reel out the wire to place the article into the container after the lid is opened, and after the article is placed on the bottom portion of the container, may cause the second arm to let go of the article and cause the reel to reel in the wire.

Accordingly, when the unmanned aerial vehicle is hanging from the load support member, the second arm and the article can be lowered toward the container by reeling out the wire. Once the article is placed on the bottom portion of the container, the second arm can be moved away from the article. Thus, the system can ensure that the article is stored inside the container.

In the system, the unmanned aerial vehicle may further include a camera capable of capturing images of the inside of the container.

This enables the unmanned aerial vehicle to confirm whether or not the package has been stored in the container. This can also prevent the second arm from separating from the article if the article is not correctly stored inside the container. After pulling up the package, the package can be stored in the container once again.

In the system, the controller may obtain an image of the inside of the storage device via the camera, and based on the image, execute an authenticated process that confirms that the unmanned aerial vehicle has stored the article.

This ensures the certainty that the article was stored in the container since the storing of the article into the storage device can be verified.

Although the lifting system has been described based on the above embodiments, the present disclosure is not limited to these exemplary embodiments. Various modifications of the exemplary embodiments as well as embodiments resulting from arbitrary combinations of elements of different exemplary embodiments that may be conceived by those skilled in the art are intended to be included within the scope of one or more aspects of the present disclosure as long as they do not depart from the essence of the present disclosure.

### INDUSTRIAL APPLICABILITY

The present disclosure is applicable to, for example, a package delivery system implemented via unmanned aerial vehicles in an urban environment.

### REFERENCE MARKS IN THE DRAWINGS

5, 5b, 5c, 5d, 5e, 6a, 6b, 6clifting system
7, 7a1, 7a2, 7a3, 7a4, 71, 72, 7i1, 7i2, 7i3 rail
7a first rail (rail)
7b second rail (rail)
10, 10a, 10b, 10c, 10f, 10h, 10i, 10i1, 10j, 10k, 10m, 10m1, 10n, 10n1, 1105, 1106, 1170, 1171 unmanned aerial vehicle
11 control processor (control circuit)
20, 312, 712, 1220, 1711, 1912, 1912m vehicle main body (main body)
22 propeller (main rotary wing, first main rotary wing, second main rotary wing, third main rotary wing, fourth main rotary wing)
22a1, 22a2 side propeller (auxiliary rotary wing)
22a3 third propeller actuation motor (auxiliary motor)
22a4 rotary shaft
23 first propeller actuation motor (main motor)
30, 180, 1131 arm
31, 331, 731, 1121, 1152, 1172, 1331 first arm
32, 751, 1122, 1158, 1173, 1332 second arm
51 wire, first wire
52 second wire
110, 110a, 110a1, 110a2, 110a3, 110b, 110c first thruster device (first adapter)
111 first support member (support member)
112, 132, 141 second propeller actuation motor (motor)
112a rotary shaft
112a1 first rotary shaft (rotary shaft)
112b1 second rotary shaft (rotary shaft)
112c1 third rotary shaft (rotary shaft)
112d1 fourth rotary shaft (rotary shaft)
112b second propeller actuation motor (second motor, motor)
112c second propeller actuation motor (third motor, motor)
112d second propeller actuation motor (fourth motor, motor)
112f second propeller actuation motor (first motor, motor)
113 propeller
118, 1175 reel
130 second thruster device (second adapter)
341, 741, 1122a first actuator
752, 1122b second actuator
1113 motor
1113a, 1136afirst motor (motor)
1113b, 1136bsecond motor (motor)
1123 fixed portion
1154, 1164, 1351 roller
1176 lift motor
1751a first roller
1751b second roller
1751c third roller
1620a, 1720afirst connector (first connecting device, arm)
1620b, 1720bsecond connector (second connecting device, arm)
1620c, 1720c third connector (third connecting device, arm)
1720 connector (connecting device, arm)
1971 first fixed portion (turntable)
1971a turntable
1971c engagement portion
1972 second fixed portion (turntable)
1975 ratchet
1975b engagement receiving portion
R1 first region
R2 second region
V1, U2virtual surface
V2 virtual plane

## Claims

1. An unmanned aerial vehicle comprising:
a main body having a first length in a first direction and a second length in a second direction orthogonal to the first direction, the first length being longer than the second length;
a plurality of main rotary wings that rotate in a virtual plane parallel to the first direction and the second direction;
a plurality of main motors that are provided on the main body and respectively rotate the plurality of main rotary wings;
at least one connecting device that is provided on the main body and is hangable from at least one rail spaced apart from a ground surface;
at least one auxiliary rotary wing that provides propulsion force for propelling the main body in the first direction;
at least one auxiliary motor that is provided on the main body and rotates the at least one auxiliary rotary wing; and
a control circuit that controls the plurality of main motors and the at least one auxiliary motor.

2. The unmanned aerial vehicle according to claim 1, wherein the at least one connecting device includes a first connecting device, a second connecting device, and a third connecting device,
the first connecting device is positioned offset in the first direction from a center of the main body,
the second connecting device is positioned offset in a direction opposite the first direction from the center of the main body, and
the third connecting device is positioned between the first connecting device and the second connecting device, near the center of the main body.

3. The unmanned aerial vehicle according to claim 2, further comprising:
a turntable disposed between the third connecting device and the main body; and
a ratchet including an engagement receiving portion that engages with an engagement portion of the turntable by being biased by the turntable.

4. The unmanned aerial vehicle according to any one of claims 1 to 3, wherein
a first surface area of a first minimum rectangle that circumscribes a first projected surface formed by projecting the unmanned aerial vehicle onto a first plane whose normal vector extends in the first direction is smaller than a second surface area of a second minimum rectangle that circumscribes a second projected surface formed by projecting the unmanned aerial vehicle onto a second plane whose normal vector extends in the second direction.

5. The unmanned aerial vehicle according to any one of claims 1 to 4, wherein
the plurality of main rotary wings include:
a first main rotary wing;
a second main rotary wing adjacent to the first main rotary wing in the second direction;
a third main rotary wing adjacent to the first main rotary wing in the first direction; and
a fourth main rotary wing adjacent to the second main rotary wing in the first direction and adjacent to the third main rotary wing in the second direction, and
a first distance between the first main rotary wing and the second main rotary wing is shorter than a second distance between the first main rotary wing and the third main rotary wing.

6. The unmanned aerial vehicle according to any one of claims 1 to 5, wherein
a rotary shaft of the at least one auxiliary motor extends in the first direction.

7. The unmanned aerial vehicle according to any one of claims 1 to 6, wherein
the at least one auxiliary rotary wing is positioned lower than the virtual plane.

8. The unmanned aerial vehicle according to any one of claims 1 to 7, wherein
a rotary shaft of the at least one auxiliary motor has an angle of inclination relative to the first direction that is variable in a plane whose normal vector extends in the second direction.

9. The unmanned aerial vehicle according to any one of claims 1 to 8, wherein
each of the at least one connecting device includes:
a fixed portion;
a first arm including one end connected to the fixed portion and an other end that opens and closes relative to the fixed portion;
a second arm including one end connected to the fixed portion and an other end that opens and closes relative to the fixed portion;
a first actuator that opens and closes the first arm; and
a second actuator that opens and closes the second arm,
the control circuit controls the first actuator and the second actuator, and
the first arm is positioned in front of the second arm in the first direction.

10. The unmanned aerial vehicle according to claim 9, wherein
a first region enclosed by the first arm in a closed state and the fixed portion is separated from a second region enclosed by the second arm in a closed state and the fixed portion.

11. The unmanned aerial vehicle according to claim 1 or 2, wherein each of the at least one connecting device includes:
an arm that is hangable from the at least one rail; and
a roller that is provided on an inner peripheral surface of the arm and rotatably contacts the at least one rail.

12. A system comprising:
the unmanned aerial vehicle according to any one of claims 1 to 11;
a device including at least one first adapter connectable to at least one package to be delivered by the unmanned aerial vehicle and at least one second adapter attachable to and detachable from the unmanned aerial vehicle; and
a wire that connects the unmanned aerial vehicle and the device, wherein
the unmanned aerial vehicle includes a reel to which one end of the wire is connected and a lift motor that reels out the wire.

13. The system according to claim 12, wherein the device includes:
a support member provided with the at least one first adapter;
a plurality of motors disposed on a plurality of side surfaces of the support member; and
a plurality of propellers actuated by the plurality of motors, and
an angle of each of rotary shafts of the plurality of motors relative to a virtual surface passing through a center of each of the plurality of propellers is at least -45 degrees and at most +45 degrees.

14. The system according to claim 13, wherein
the plurality of side surfaces include a first side surface and a second side surface that oppose each other in the first direction in an attached state in which the device is attached to the unmanned aerial vehicle, and a third side surface and a fourth side surface that oppose each other in the second direction in the attached state,
the plurality of motors include a first motor disposed on the first side surface, a second motor disposed on the second side surface, a third motor disposed on the third side surface, and a fourth motor disposed on the fourth side surface, and
the plurality of propellers include a first propeller rotated by the first motor, a second propeller rotated by the second motor, a third propeller rotated by the third motor, and a fourth propeller rotated by the fourth motor.

15. A control method of controlling an unmanned aerial vehicle, the unmanned aerial vehicle including:
a main body having a first length in a first direction and a second length in a second direction orthogonal to the first direction, the first length being longer than the second length;
a plurality of main rotary wings that rotate in a virtual plane parallel to the first direction and the second direction;
a plurality of main motors that are provided on the main body and respectively rotate the plurality of main rotary wings;
at least three connecting devices that are provided on the main body and are hangable from at least one rail spaced apart from a ground surface;
at least one auxiliary rotary wing that provides propulsion force for propelling the main body in the first direction;
at least one auxiliary motor that is provided on the main body and rotates the at least one auxiliary rotary wing; and
a control circuit that controls the plurality of main motors and the at least one auxiliary motor, wherein
a first connecting device is positioned offset in the first direction from a center of the main body,
a second connecting device is positioned offset in a direction opposite the first direction from the center of the main body, and
a third connecting device is positioned between the first connecting device and the second connecting device, near the center of the main body,
the control method comprising:
when the unmanned aerial vehicle switches connection from a first rail to a second rail at an intersection of the first rail and the second rail:
determining whether the first connecting device has approached the second rail;
when it is determined that the first connecting device has approached the second rail, detaching the first connecting device from the first rail and propelling the unmanned aerial vehicle in the first direction by rotating the at least one auxiliary rotary wing;
determining whether the first connecting device has passed the second rail; and
when it is determined that the first connecting device has passed the second rail, detaching the second connecting device from the first rail, rotating the unmanned aerial vehicle until the first direction of the unmanned aerial vehicle is parallel to a direction of extension of the second rail, and after rotation of the unmanned aerial vehicle, connecting the first connecting device and the second connecting device to the second rail.

16. The control method according to claim 15, comprising:
when it is determined that the first connecting device has passed the second rail, connecting the first connecting device to the first rail and determining whether a center of gravity of the unmanned aerial vehicle is balanced; and
when it is determined that the center of gravity of the unmanned aerial vehicle is balanced, detaching the first connecting device and the second connecting device from the first rail, rotating the unmanned aerial vehicle until the first direction of the unmanned aerial vehicle is parallel to a direction of extension of the second rail, and after rotation of the unmanned aerial vehicle, connecting the first connecting device and the second connecting device to the second rail.

17. The control method according to claim 15 or 16, wherein
the unmanned aerial vehicle includes a turntable between the third connecting device and a main body of the unmanned aerial vehicle, and
the control method further comprises changing an orientation of the unmanned aerial vehicle by rotating the main body relative to the turntable.

18. The control method according to claim 17, comprising:
after the first connecting device and the second connecting device are connected to the second rail after rotation of the unmanned aerial vehicle, matching an attitude of the third connecting device to an attitude of each of the first connecting device and the second connecting device by detaching the third connecting device from the first rail and rotating the turntable.

19. The control method according to claim 15 or 16, wherein
the unmanned aerial vehicle includes a rotary wing for rotation that is disposed in a position corresponding to the at least one auxiliary rotary wing in the first direction, and
the control method further comprises changing an orientation of the unmanned aerial vehicle using a propulsion force of the rotary wing for rotation.
